# EUROPEAN PATENT APPLICATION

(11) **EP 2 667 340 A1**
(43) Date of publication of application: **27.11.2013**
(21) Application number: 13168456.5
(22) Date of filing: 20.05.2013
(51) Int. Cl.: G06Q 10/10, G09B 5/12

(54) **Method and apparatus for operating teacher and student devices for a group activity**

(30) Priority: 21.05.2012 KR 20120053900; 25.02.2013 KR 20130019942; 11.04.2013 KR 20130040142
(71) Applicant: Samsung Electronics Co., Ltd, Gyeonggi-do 443-742 (KR)
(72) Inventor: Park, Dong-Gyu, Gyeonggi-do, (KR); Paek, Chi-Hyeon, Seoul (KR); Eom, Yu-Youl, Gyeonggi-do, (KR); Lee, Jong-Myung, Gyeonggi-do, (KR)
(74) Representative: Gover, Richard Paul

(57) **Abstract**

A method of operating a teacher device for a group activity in an environment in which a plurality of student devices is connected to the teacher device to form a first group unit. The method comprises transmitting, by the teacher device, an instruction event indicating a group activity start to a first student device comprising a group leader device and at least one student device comprising a group member device, the group leader device and the at least one group member device comprising a group. The method further comprises receiving, by the teacher device, a product of a group activity from the group leader device. Methods of operating a group leader device and a group member device are also disclosed, along with an electronic device arranged to implement the methods.

## Description

### BACKGROUND OF THE INVENTION

### 1. Field of the Invention:

The present invention relates to operating teacher and student devices for a group activity. Group activity management forms part of class support and education management. Certain embodiments of the present invention enable mutual feedback using a terminal, a computer, and a server.

### 2. Description of the Related Art:

There has been a recent increase in the number of electronic books, electronic newspapers, electronic magazines and the like being produced and distributed. Partly, this is due to the increasing use of tablet Personal Computers (PCs), etc., that is portable computers having touch screens as a main input device and designed to be directly carried and manipulated by a person. Particularly, digital textbooks are being produced for used for class in schools.

That the electronic book market is revitalized means that people do much reading through digital terminals and this atmosphere is spreading widely. Even in the education field, a movement is rising in which it changes into an e-Learning environment while using an electronic book as a public education tool.

Generally, an electronic class solution and a learning management solution are one-way class solutions or learning data sharing systems. Also, they mainly provide a function focused on a teacher or education manager.

Accordingly, because a conventional system is focused on the teacher or education manager, it is not suitable to a way of free class between a teacher and a student and between students. Also, it is not suitable as a system capable of systematically managing education information over which all members within a school have different access authorities and data used for class.

Therefore, a solution for providing a teacher-student and student-student free interaction method, not being one-way education, is required in the education field.

The above information is presented as background information only to assist with an understanding of the present disclosure. No determination has been made, and no assertion is made, as to whether any of the above might be applicable as prior art with regard to the present invention.

### SUMMARY OF THE INVENTION

It is an aim of certain embodiments of the present invention to at least partly address at least one of the problems associated with the prior art. Accordingly, an aim of certain embodiments of the present invention is to provide a method, apparatus and system for interactive class support and education management, specifically through enabling teacher devices and student devices to take part in a group activity.

According to a first aspect of the present invention there is provided a method of operating a teacher device for a group activity in an environment in which a plurality of student devices is connected to the teacher device to form a first group unit, the method comprising: transmitting, by the teacher device, an instruction event indicating a group activity start to a first student device comprising a group leader device and at least one student device comprising a group member device, the group leader device and the at least one group member device comprising a group; and receiving, by the teacher device, a product of a group activity from the group leader device.

According to a second aspect of the present invention there is provided a method of operating a student device comprising a group leader device for a group activity in an environment in which a plurality of student devices is connected to a teacher device to form a first group unit, the method comprising: receiving, by the group leader device, a first instruction event indicating a group activity start from the teacher device; switching to a group screen displaying information related to the group activity start; transmitting to at least one student device comprising a group member device a second instruction event indicating a collaboration start; receiving a user selection of work items for the group activity; assigning the selected work items based on the number of group member devices; transmitting the assigned work item to each group member device; receiving work content from each group member device; forming a product of the group activity from the received work content; and forwarding the product of the group activity to the teacher device and each group member device.

According to a third aspect of the present invention there is provided a method of operating a student device comprising a group member device for a group activity in an environment in which a plurality of student devices is connected to a teacher device to form a first group unit, the method comprising: receiving, by the group member device, a first instruction event indicating a group activity start from the teacher device; switching to a group screen displaying information related to the group activity start; receiving, by the group member device from a student device comprising a group leader device, a second instruction event indicating a collaboration start; receiving, by the group member device, an assigned work item from the group leader device; transmitting, by the group member device, work content to the group leader device; and receiving, by the group member from the group leader device, a product of the group activity.

According to a fourth aspect of the present invention there is provided an electronic device, comprising: a touch screen display arranged to display a plurality of user interface objects; one or more processors; and memory storing one or more programs, wherein the one or more programs are configured, when executed by the electronic device, to cause: the electronic device to form a teacher device and to perform the above method of operating a teacher device; the electronic device to form a group leader device and to perform the above method of operating a group leader device; or the electronic device to form a group member device and to perform the above method of operating a group member device.

According to one embodiment, a system for interactive class support and education management is provided. The system includes a first device configured to create a course, to upload materials used for the course to a server, to set students to participate in the course, to configure a student group in a class, and to manage information of the students and education of the students, and a second device configured to submit an assignment result and a test by using materials created by the first device. The first device performs correction guidance for the assignment and test submitted by the first device and stores teacher-correction-guided content in the server, and the second device receives the correction guidance from the first device.

According to another embodiment, an operation method of a teacher device for a group activity is provided. The method includes, in an environment in which a plurality of students are connected to the teacher device in a group unit, transmitting, by the teacher device, an instruction event indicating a group activity start to a group leader and group members configuring a group, and receiving a product of a group activity from the group leader of the group.

According to yet another embodiment, an operation method of a group leader device for a group activity is provided. The method includes, in an environment in which a plurality of students are connected to a teacher device in a group unit, receiving, by the group leader device, an instruction event indicating a group activity start from the teacher device, switching to a group screen informing of the group activity start, transmitting to group members an instruction event indicating a collaboration start, after selecting a work for the group activity, assigning the selected work based on the number of the group members, transmitting the assigned work to each group member device, receiving content of the work from the each group member device to collect the work content, and forwarding the collected work content to the teacher device and the each group member device.

According to a yet another embodiment, an operation method of a group member device for group activity is provided. The method includes, in an environment in which a plurality of students are connected to a teacher device in a group unit, receiving, by the group member device, an instruction event indicating a group activity start from the teacher device, switching to a group screen informing of the group activity start, receiving from a group leader device an instruction event indicating a collaboration start in order to share a screen of the group leader device, receiving an assigned work from the group leader device, transmitting work content to the group leader device, and receiving from the group leader device collected work content of the group leader device and other group member devices.

According to yet another embodiment, a method of operating a teacher device for quiz processing is provided. The method includes the teacher device sending a request for a question list to a server, receiving the question list from the server, selecting a question (that is, receiving a user selection of a question) based on the question list, and sending the server a request for adding the selected questions to a corresponding education process (for instance a course, class, lecture or similar). Later, during the corresponding education process, the method further comprises the teacher device sending the server a request for question data, forwarding the question data to student devices associated with students who participate in the corresponding education process, and receiving a result from at least one student device. The method may further comprise the teacher device displaying a current status or situation of quiz submission, for instance the results received from students or scored result data. The method may further comprise the teacher device sending a request to the server for scored results (in the event that the student devices additionally send quiz results to the server), and receiving the scored results. Alternatively, the teacher device may itself perform the scoring, and optionally supply the scored results to the server.

A corresponding method of operating a student device comprises receiving the quiz data (for instance, quiz questions) from a teacher device, receiving user input from a student answering the quiz data, and transmitting quiz results to at least one of the teacher device and the server.

A corresponding method of operating a server comprises receiving and responding to the request from the teacher device for a quiz list, receiving the selected quiz data and storing in association with a selected lecture or other education process, and supplying the quiz data as part of a lecture. The server may optionally receive the quiz result data directly from one or more student devices or from the teacher device (or both). The server may be arranged to score the quiz results, or to receive the scored quiz results from the teacher device.

According to yet another embodiment, an operation method of a teacher device for quiz processing is provided. The method includes sending a request for a question list to a server, receiving the question list from the server, selecting a question based on the question list, sending the server a request for adding the selected questions to a corresponding education process, in the corresponding education process, sending the server a request for question data corresponding to the corresponding education process, forwarding the question data to students who participate in the corresponding education process, and receiving a result from each student.

In an exemplary embodiment, the method further includes, after receiving the result from each student, sending the server a request for automatic scoring.

In an exemplary embodiment, the method further includes, after receiving the result from each student, transmitting a scoring result to the server.

According to yet another embodiment, an operation method of a student device for quiz processing is provided. The method includes receiving quiz data corresponding to a corresponding education process from a corresponding device, creating a result on the received quiz data, and transmitting the result on the received quiz data to at least one of a teacher device and a server.

In an exemplary embodiment, the corresponding device is the server, the teacher device, or one of student devices already having received quiz data.

According to yet another embodiment, an operation method of a server for quiz processing is provided. The method includes, upon reception of a request for a quiz list from a teacher device, forwarding the quiz list to the teacher device, upon reception of a request for adding corresponding quizzes to a corresponding education process from the teacher device, adding the corresponding quizzes to the corresponding education process, in the corresponding education process, upon reception of a request for question data corresponding to the corresponding education process from the teacher device, transmitting the quiz data to the teacher device, and receiving results from students who participate in the corresponding education process.

In an exemplary embodiment, the method further includes, after receiving the results from the students who participate in the corresponding education process, receiving a request for automatic scoring from the teacher device and performing scoring.

In an exemplary embodiment, the method further includes, after receiving the results from the students who participate in the corresponding education process, receiving a scoring result from the teacher device.

According to yet another embodiment, a method of operating a teacher device for assignment processing is provided. The method comprises sending a request for an assignment list to a server, and receiving the assignment list from the server. The teacher device may then request an assignment associated with a specific student (for instance, selected by user input) from the server, and receive the corresponding assignment, or portions or parts of the assignment. The teacher device may receive user input comprising corrections to the assignment, or specific portions or locations within the assignment, and such corrections may be sent to the server. If only portions of the assignment have been requested and corrected, further portions may be requested, for instance based upon the screen resolution of the teacher device, a scrolling distance selected by a user or otherwise. If updated assignment content data is available then this may be provided by the server. The teacher device may finally send a final correction result to the server.

A corresponding method of operating a server is provided, in which the server is further arranged to supply requested portions of an assignment upon demand, and if required to collate received correction results. A corresponding method of operating a student device comprises transmitting an assignment to the server, sending a request for feedback upon the assignment to the server, and receiving feedback in the form of correction content or correction results as received or collated by the server. The student device may process (for instance activate or inactivate) correction content upon user input.

According to yet another embodiment, an operation method of a teacher device for assignment processing is provided. The method includes sending a request for an assignment list to a server and receiving the assignment list from the server, selecting an assignment of a specific student based on the assignment list, sending a request for the assignment of the specific student to the server in consideration of a screen resolution, receiving the assignment of the specific student from the server based on the screen resolution, and displaying the received assignment content of the specific student.

In an exemplary embodiment, the method further includes, adding specific location correction content of the displayed assignment content of the specific student and together with the added correction content, providing location information in which the correction content is to be displayed on the assignment content, to the server.

According to yet another embodiment, an operation method of a server for assignment processing is provided. The method includes, upon reception of a request for an assignment list from a teacher device, providing the assignment list to the teacher device, and, upon reception of a request for an assignment of a specific student from the teacher device, transmitting the assignment of the specific student to the teacher device in consideration of a screen resolution of the teacher device.

In an exemplary embodiment, the method further includes, together with the correction content added to the assignment of the specific student, providing location information in which the correction content is to be displayed on the assignment content, from the teacher device.

In an exemplary embodiment, the method further includes, receiving an assignment from the specific student.

In an exemplary embodiment, the method further includes, upon reception of a feedback request about the assignment from the specific student, providing assignment content, which comprises correction content of a teacher, to the specific student in consideration of the screen resolution of the specific student.

According to yet another embodiment, an operation method of a student device for assignment processing is provided. The method includes submitting an assignment to a server, after the assignment submission, sending an assignment feedback request to the server, in consideration of a screen resolution of the student device, receiving assignment content including correction content of a teacher, from the server, and displaying the assignment content including the correction content.

In an exemplary embodiment, the method further includes, inactivating and displaying the correction content comprised in the assignment content. According to a still another aspect of the present invention, an electronic device includes one or more processors configured to execute computer programs, a memory configured to store data and instructions, and one or more programs stored in the memory and configured to be executed by the one or more processors. The program includes an instruction of in an environment in which a plurality of students are connected to the teacher device in a group unit, transmitting, by the teacher device, an instruction event indicating a group activity start to a group leader and group members configuring a group, and receiving a product of a group activity from the group leader of the group.

In an exemplary embodiment, wherein, when the instruction event indicating the group activity start is transmitted, the environment in which the plurality of students are connected to the teacher device in the group unit transitions to an environment in which the group members are connected to the group leader of the group in the group unit.

In an exemplary embodiment, the program further includes an instruction of monitoring a screen of a member who is under the group activity.

In an exemplary embodiment, the program further includes an instruction of transmitting to a server an estimation result on the product of the group activity received from the group leader of the group.

In an exemplary embodiment, the program further includes an instruction of creating the group. The instruction of creating the group comprises an instruction of determining a group personnel, creating a plurality of groups on a basis of the group personnel and dragging and dropping students from a student list and moving the students to the created plurality of groups.

The instruction of creating the group comprises an instruction of determining a group personnel creating a plurality of groups on a basis of the group personnel and randomly moving students to the created plurality of groups.

According to yet another embodiment, an electronic device includes one or more processors configured to execute computer programs, a memory configured to store data and instructions, and one or more programs stored in the memory and configured to be executed by the one or more processors. The program includes an instruction of in an environment in which a plurality of students are connected to a teacher device in a group unit, receiving, by a group leader device, an instruction event indicating a group activity start from the teacher device, switching to a group screen informing of the group activity start, transmitting to group members an instruction event indicating a collaboration start, after selecting a work for the group activity, assigning the selected work based on the number of the group members, transmitting the assigned work to each group member device, receiving content of the work from the each group member device to collect the work content, and forwarding the collected work content to the teacher device and the each group member device.

In an exemplary embodiment, when the instruction event indicating the collaboration start to the group members is transmitted, a screen of the group leader device is shared by the group members.

In an exemplary embodiment, the program further includes after forwarding the collected work content to each group member device, receiving edited work content from a corresponding group member device; updating the collected work content and creating a final product of the group activity and forwarding the final product of the group activity to the teacher device and each group member device.

In an exemplary embodiment, the program further includes an instruction of displaying only work content of the teacher device or displaying all work content collected from the teacher device and the group member devices.

According to yet another embodiment, an electronic device includes one or more processors configured to execute computer programs, a memory configured to store data and instructions, and one or more programs stored in the memory and configured to be executed by the one or more processors. The program includes an instruction of in an environment in which a plurality of students are connected to a teacher device in a group unit, receiving, by the group member device, an instruction event indicating a group activity start from the teacher device, switching to a group screen informing of the group activity start, receiving from a group leader device an instruction event indicating a collaboration start in order to share a screen of the group leader device, receiving an assigned work from the group leader device, transmitting work content to the group leader device, and receiving from the group leader device collected work content of the group leader device and other group member devices.

In an exemplary embodiment, when the instruction event indicating the collaboration start is received, the screen of the group leader device is shared.

In an exemplary embodiment, the program further includes an instruction of transmitting edited work content to the group leader device; and receiving a final product of the group activity based on the edited work content.

In an exemplary embodiment, the program further includes an instruction of displaying only work content of the group member device or displaying all work content collected from the teacher device and the group member devices.

According to yet another embodiment, an electronic device includes one or more processors configured to executing computer programs, a memory configured to store data and instructions, and one or more programs stored in the memory and configured to be executed by the one or more processors. The program includes an instruction of sending a request for a question list to a server, receiving the question list from the server, selecting a question based on the question list, sending the server a request for adding the selected questions to a corresponding education process, in the corresponding education process, sending the server a request for question data corresponding to the corresponding education process, forwarding the question data to students who participate in the corresponding education process, and receiving a result from each student.

In an exemplary embodiment, the program further includes an instruction of, after receiving the result from each student, sending the server a request for automatic scoring.

In an exemplary embodiment, the program further includes an instruction of, after receiving the result from each student, transmitting a scoring result to the server.

According to yet another embodiment, an electronic device includes one or more processors configured to execute computer programs, a memory configured to store data and instructions, and one or more programs stored in the memory and configured to be executed by the one or more processors. The program includes an instruction of receiving question data corresponding to a corresponding education process from a corresponding device, creating a result on the received question data, and transmitting the result on the received question data to at least one of a teacher device and a server.

In an exemplary embodiment, the corresponding device is the server, the teacher device, or one of student devices already having received question data.

According to yet another embodiment, an electronic device includes one or more processors configured to execute computer programs, a memory configured to store data and instructions, and one or more programs stored in the memory and configured to be executed by the one or more processors. The program includes an instruction of upon reception of a request for a question list from a teacher device, forwarding the question list to the teacher device, upon reception of a request for adding corresponding questions to a corresponding education process from the teacher device, adding the corresponding questions to the corresponding education process, in the corresponding education process, upon reception of a request for question data corresponding to the corresponding education process from the teacher device, transmitting the question data to the teacher device, and receiving results from students who participate in the corresponding education process.

In an exemplary embodiment, the program further includes an instruction of, after receiving the results from the students who participate in the corresponding education process, receiving a request for automatic scoring from the teacher device and performing scoring.

In an exemplary embodiment, the program further includes an instruction of, after receiving the results from the students who participate in the corresponding education process, receiving a scoring result from the teacher device.

According to yet another embodiment, an electronic device includes one or more processors configured to execute computer programs, a memory configured to store data and instructions, and one or more programs stored in the memory and configured to be executed by the one or more processors. The program includes an instruction of sending a request for an assignment list to a server and receiving the assignment list from the server, selecting an assignment of a specific student based on the assignment list, sending a request for the assignment of the specific student to the server in consideration of a screen resolution, receiving the assignment of the specific student from the server based on the screen resolution, and displaying the received assignment content of the specific student.

In an exemplary embodiment, the program further includes an instruction of adding specific location correction content of the displayed assignment content of the specific student and together with the added correction content, providing location information in which the correction content is to be displayed on the assignment content, to the server.

According to yet another embodiment, an electronic device includes one or more processors configured to execute computer programs, a memory configured to store data and instructions, and one or more programs stored in the memory and configured to be executed by the one or more processors. The program includes an instruction of upon reception of a request for an assignment list from a teacher device, providing the assignment list to the teacher device, and upon reception of a request for an assignment of a specific student from the teacher device, transmitting the assignment of the specific student to the teacher device in consideration of a screen resolution of the teacher device.

In an exemplary embodiment, the program further includes an instruction of, together with the correction content added to the assignment of the specific student, providing location information in which the correction content is to be displayed on the assignment content, from the teacher device.

In an exemplary embodiment, the program further includes an instruction of receiving an assignment from the specific student.

In an exemplary embodiment of the present invention, the program further includes an instruction of, upon reception of a feedback request about the assignment from the specific student, providing assignment content, which comprises correction content of a teacher, to the specific student in consideration of the screen resolution of the specific student.

According to yet another embodiment, an electronic device includes one or more processors configured to execute computer programs, a memory configured to store data and instructions, and one or more programs stored in the memory and configured to be executed by the one or more processors. The program includes an instruction of submitting an assignment to a server, after the assignment submission, sending an assignment feedback request to the server, in consideration of a screen resolution of the student device, receiving assignment content including correction content of a teacher, from the server, and displaying the assignment content including the correction content.

In an exemplary embodiment, the program further includes an instruction of inactivating and displaying the correction content comprised in the assignment content.

Another aspect of the invention provides a computer program comprising instructions arranged, when executed, to implement a method in accordance with any one of the above-described aspects. A further aspect provides machine-readable storage storing such a program.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will become more apparent from the following detailed description when taken in conjunction with the accompanying drawings in which:

FIG. 1 is a diagram illustrating a construction of a system according to an exemplary embodiment of the present invention;

FIG. 2A is a diagram illustrating a menu structure of a launcher program for a teacher according to an exemplary embodiment of the present invention;

FIG. 2B is a diagram illustrating a sub menu structure for a teacher according to an exemplary embodiment of the present invention;

FIG. 3A is a diagram illustrating a menu structure of a launcher program for a student according to an exemplary embodiment of the present invention;

FIG. 3B is a diagram illustrating a sub menu structure for a student according to an exemplary embodiment of the present invention;

FIGS. 4A and 4B are flowcharts illustrating an operation for course creation according to an exemplary embodiment of the present invention;

FIGS. 5A to 5O are diagrams illustrating user interfaces for course creation according to an exemplary embodiment of the present invention;

FIGS. 6A and 6B are flowcharts illustrating an operation for student registration of a created course according to an exemplary embodiment of the present invention;

FIGS. 7A to 7N are diagrams illustrating user interfaces for student registration of a created course according to an exemplary embodiment of the present invention;

FIGS. 8A to 8D are flowcharts illustrating an operation for assignment management according to an exemplary embodiment of the present invention;

FIGS. 9A to 9M are diagrams illustrating user interfaces for assignment management according to an exemplary embodiment of the present invention;

FIG. 10 is a flowchart illustrating an operation for managing a lecture related schedule according to an exemplary embodiment of the present invention;

FIGS. 11A to 11N are diagrams illustrating user interfaces for managing a lecture related schedule according to an exemplary embodiment of the present invention;

FIG. 12 is a flowchart illustrating an operation for managing attendance according to an exemplary embodiment of the present invention;

FIG. 13 is a diagram illustrating a user interface for managing attendance according to an exemplary embodiment of the present invention;

FIG. 14 is a flowchart illustrating an operation for assignment submission management according to an exemplary embodiment of the present invention;

FIGS. 15A to 15AA are diagrams illustrating user interfaces for assignment submission management according to an exemplary embodiment of the present invention;

FIG. 16 is a flowchart illustrating an operation for student information management of a teacher according to an exemplary embodiment of the present invention;

FIGS. 17A to 17G are diagrams illustrating user interfaces for student information management of a teacher according to an exemplary embodiment of the present invention;

FIG. 18 is a flowchart illustrating an operation for student attendance management according to an exemplary embodiment of the present invention;

FIGS. 19A to 19E are diagrams illustrating user interfaces for student attendance management according to an exemplary embodiment of the present invention;

FIG. 20 is a flowchart illustrating student grade management according to an exemplary embodiment of the present invention;

FIGS. 21A to 21F are diagrams illustrating user interfaces for student grade management according to an exemplary embodiment of the present invention;

FIG. 22 is a flowchart illustrating an operation for life attitude estimation management of a student according to an exemplary embodiment of the present invention;

FIGS. 23A and 23B are diagrams illustrating user interfaces for life attitude estimation management of a student according to an exemplary embodiment of the present invention;

FIGS. 24A to 24J are diagrams illustrating user interfaces for attendance/absence management of a specific student, grade management, and life attitude management according to an exemplary embodiment of the present invention;

FIGS. 25A to 25Q are diagrams illustrating user interfaces for managing contents library;

FIG. 26 is a flowchart illustrating an operation for managing a basic interaction screen of a student according to an exemplary embodiment of the present invention;

FIGS. 27A and 27B are diagrams illustrating user interfaces for managing a basic interaction screen of a student according to an exemplary embodiment of the present invention;

FIG. 28 is a flowchart illustrating an operation for subject management of a student according to an exemplary embodiment of the present invention;

FIGS. 29A to 29O are diagrams illustrating user interfaces for subject management of a student according to an exemplary embodiment of the present invention;

FIGS. 30A to 30U are diagrams illustrating user interfaces for an Instruction Management System (IMS) supporting interactive class according to an exemplary embodiment of the present invention;

FIG. 31 is a flowchart illustrating an operation for contents execution according to an exemplary embodiment of the present invention;

FIGS. 32A to 32E are diagrams illustrating user interfaces for contents execution according to an exemplary embodiment of the present invention;

FIG. 33 is a flowchart illustrating an operation for course management of a teacher according to an exemplary embodiment of the present invention;

FIGS. 34A to 34V are diagrams illustrating user interfaces for course management of a teacher according to an exemplary embodiment of the present invention;

FIG. 35 is a flowchart illustrating an operation for course progress of a teacher according to an exemplary embodiment of the present invention;

FIGS. 36A to 36F are diagrams illustrating user interfaces for course progress of a teacher according to an exemplary embodiment of the present invention;

FIG. 37 is a flowchart illustrating an operation for group management of a teacher according to an exemplary embodiment of the present invention;

FIGS. 38A to 38M are diagrams illustrating user interfaces for group management according to an exemplary embodiment of the present invention;

FIG. 39 is a flowchart illustrating an operation for course management of a teacher according to an exemplary embodiment of the present invention;

FIGS. 40A to 40F are diagrams illustrating user interfaces for course management according to an exemplary embodiment of the present invention;

FIG. 41 is a flowchart illustrating an operation of student screen control of a teacher according to an exemplary embodiment of the present invention;

FIGS. 42A to 42F are diagrams illustrating user interfaces controlling a student device in a teacher device according to an exemplary embodiment of the present invention;

FIG. 43 is a flowchart illustrating an operation for locking and unlocking according to an exemplary embodiment of the present invention;

FIGS. 44A to 44K are diagrams illustrating detailed user interfaces for locking and unlocking of a student device according to an exemplary embodiment of the present invention;

FIG. 45 is a flowchart illustrating an operation for application list management according to an exemplary embodiment of the present invention;

FIGS. 46A to 46E are diagrams illustrating user interfaces for application list management according to an exemplary embodiment of the present invention;

FIGS. 47A to 47Q is a diagram illustrating a menu structure for a student according to an exemplary embodiment of the present invention;

FIG. 48 is a flowchart illustrating an operation for quiz screen control according to an exemplary embodiment of the present invention;

FIGS. 49A and 49B are diagrams illustrating user interfaces for quiz screen control in a student device according to an exemplary embodiment of the present invention;

FIG. 50 is a flowchart illustrating an operation for performing a group work according to an exemplary embodiment of the present invention;

FIGS. 51A to 51O are diagrams illustrating user interfaces for performing a group work according to an exemplary embodiment of the present invention;

FIG. 52 is a flowchart illustrating an operation for contents sharing according to an exemplary embodiment of the present invention;

FIGS. 53A to 53E are diagrams illustrating user interfaces for screen sharing according to an exemplary embodiment of the present invention;

FIG. 54 is a flowchart illustrating an operation for collaboration according to an exemplary embodiment of the present invention;

FIGS. 55A to 55F are diagrams illustrating user interfaces for collaboration according to an exemplary embodiment of the present invention;

FIG. 56 is a flowchart illustrating a procedure for group activity according to an exemplary embodiment of the present invention;

FIG. 57 is a flowchart illustrating an operation of a teacher device for group activity according to an exemplary embodiment of the present invention;

FIG. 58 is a flowchart illustrating an operation of a group leader device for group activity according to an exemplary embodiment of the present invention;

FIG. 59 is a flowchart illustrating an operation of a group member device for group activity according to an exemplary embodiment of the present invention;

FIG. 60 is a flowchart illustrating a procedure for processing a quiz question according to an exemplary embodiment of the present invention;

FIG. 61 is a flowchart illustrating an operation of a teacher device for processing a quiz question according to an exemplary embodiment of the present invention;

FIG. 62 is a flowchart illustrating an operation of a student device for processing a quiz question according to an exemplary embodiment of the present invention;

FIG. 63 is a flowchart illustrating an operation of a server for processing a quiz question according to an exemplary embodiment of the present invention;

FIG. 64 is a flowchart illustrating a procedure for assignment processing according to an exemplary embodiment of the present invention;

FIG. 65 is a flowchart illustrating an operation of a teacher device for assignment processing according to an exemplary embodiment of the present invention;

FIG. 66 is a flowchart illustrating an operation of a server for assignment processing according to an exemplary embodiment of the present invention;

FIG. 67 is a flowchart illustrating an operation of a student device for assignment processing according to an exemplary embodiment of the present invention; and

FIG. 68 is a block diagram illustrating a construction of an electronic device according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the appended claims. It includes various specific details to assist in that understanding but these are to be regarded as merely exemplary. Accordingly, those of ordinary skill in the art will recognize that various changes and modifications of the embodiments described herein may be made without departing from the scope of the invention as defined by the appended claims. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

It is to be understood that the singular forms "a," "an," and "the" include plural referents unless the context clearly dictates otherwise. Thus, for example, reference to "a component surface" includes reference to one or more of such surfaces.

Below, exemplary embodiments of the present invention are to provide a description of a method, apparatus, and system for interactive class support and education management. Particularly, the exemplary embodiments of the present invention relate to a method, apparatus and system for collectively managing general data for education and class based on a main server within a school, acquiring information required by several devices (e.g., desktop or laptop computers, tablet computers, notebook computers and the like) within each classroom, creating a unique course within each classroom, and providing a class environment in which teacher-student mutual feedback is possible. Also, the exemplary embodiments of the present invention provide free interaction between students besides feedback between a teacher and a student.

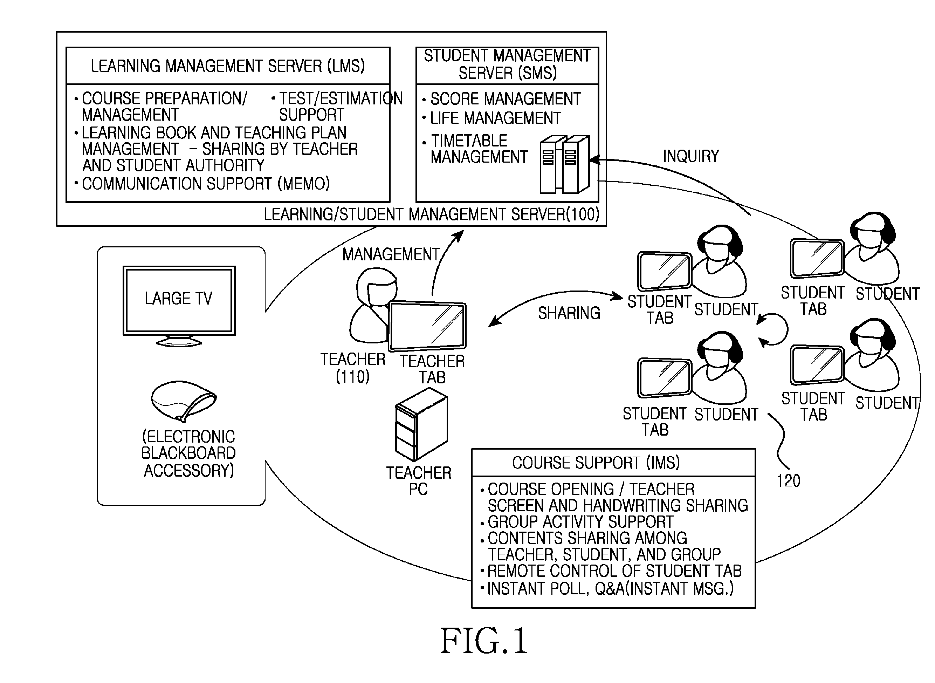

FIG. 1 a diagram illustrating a construction of a system according to an exemplary embodiment of the present invention.

Referring to FIG. 1, the system includes a teacher device 110 for a teacher and arranged to run a teacher application, a plurality of student devices 120 for students and arranged to run a student application, and a server 100 provided in a school and arranged to run a server application. Communication among the devices 110, 120 and the server 100 maybe performed through local area wireless communication such as Wireless Fidelity (Wi-Fi) or mobile communication (e.g., Global System for Mobile Communication (GSM), Enhanced Data GSM Environment (EDGE), Code Division Multiple Access (CDMA), Wideband-CDMA (W-CDMA), Long Term Evolution (LTE), and Orthogonal Frequency Division Multiple Access (OFDMA). In a case of the teacher, a teacher PC application may be configured together with the application running on the teacher device 110 such that the teacher is able to interact with the system via either device. In the present disclosure, inter-device communication is not limited to the Wi-Fi communication and may be connected by a wired Local Area Network (LAN). Meanwhile, based on a Wi-Fi direct and Wi-Fi display technology, Peer to Peer (P2P) communication may be possible between student devices or between a teacher device and student devices.

Exemplary embodiments of the present invention mainly may provide two operations as follows.

The first operation is learning management and student management. A teacher, a student, and a manager may have access to the main server 100 within a school in a log-in way, and may inquire/create/edit/delete information suitable to each authority.

The teacher device 110 may be used by a teacher to create a course before a class begins, and to upload materials (i.e., textbook / teaching plan / test paper, etc.) used for the course to the server 100. The teacher device 110 may be used to set students who will participate in a course, and may also be used to configure a student group during the course. Also, the teacher device 110 may systematically manage not only information of its own students but also test scores / life items / timetables, etc. of students. At a class time, the teacher device 110 may be used to distribute various information.

The student device 120 may update its own information, and may be used to view materials (i.e., textbook / teaching plan / test paper, etc.) created by or transmitted via the teacher device 110, and may submit an assignment result and the like.

Also, the teacher device 110 may be used to provide correction guidance for assignments and tests that students have submitted using student devices. Content correction guidance provided by the teacher device 110 may be stored in the server. The student may be subjected to correction guidance from a teacher. This content is managed in synchronization with other content. For example, even when the student changes or scrolls content, the student device 120 may receive correction content in an accurate location, and may also store handwriting content thereon.

Because learning materials and submitted assignments are stored in the server 100, the student device 120 and the teacher device 110 are able to perform material inquiry and updating. This may lead to the elimination of temporal and physical space limitation in learning carried out in an existing physical space called a school. Materials composed by a teacher using the teacher device 110 can be shared with other teachers, thereby being capable of reducing time in composing a teaching plan and a textbook, and being capable of improving the quality of contents made through communication with other teachers.

The second operation is interactive class support. The teacher device 110 may be used by a teacher to create a course on a network, and each student device 120 may participate in the created course. If the student device 120 participates in the course, the teacher device 110 may share its own screen with the student device 120, and may share real-time handwriting with the student device 120. Also, the teacher device 110 may monitor a screen of each student device 120, and may perform remote control (e.g., input control, screen locking, application execution control, etc.) of the student device 120. A range of the remote control corresponds to all functions that are controllable in the student device 120.

The teacher device 110 provides a tool supporting group activity and supports interaction between students. A student device 120 may be used to perform group activity under the control of the teacher device 110 and may use a function of file sharing, screen sharing, etc. On the basis of this, the student device 120 may perform various group activities, and may share a result or an output or be used to perform a presentation. In detail, group creation may be done by a teacher. A group leader is designated for each group, and together with respective group members, the corresponding student devices (respectively a group leader device and group member devices) form a sub network centering on the group leader device. The sub network interconnects a group formed by the group leader device and the group member devices. The sub network may be referred to as a group unit. A sub network comprising a teacher device and student devices may also be referred to as a group unit. Group activities such as file sharing, screen sharing, collaboration, etc. are carried out within the group. Materials created during the group activity are automatically stored and managed in a Learning Management System (LMS). According to an exemplary embodiment, the group creation may be carried out by the teacher or the group leader designated by the teacher.

A real-time test progress and poll function (or vote function) may be carried out even using previously composed questions and also, may be carried out using questions composed spontaneously.

Messages may be transmitted and received between a student device and a teacher device, between student devices, and within groups or group units.

At message sending, not only text typing data but also data corrected on a textbook screen may be transmitted.

A student device, which still doesn't receive materials for a course from the server, may receive the materials from another student device having already received the materials, instead of the server, in order to reduce a load of the server.

When participating in a class activity, a student may automatically participate in the ongoing course to which the student is registered. In other words, because the learning management system proceeds based on an education schedule, a teacher/student automatically moves to a corresponding course according the students own timetable.

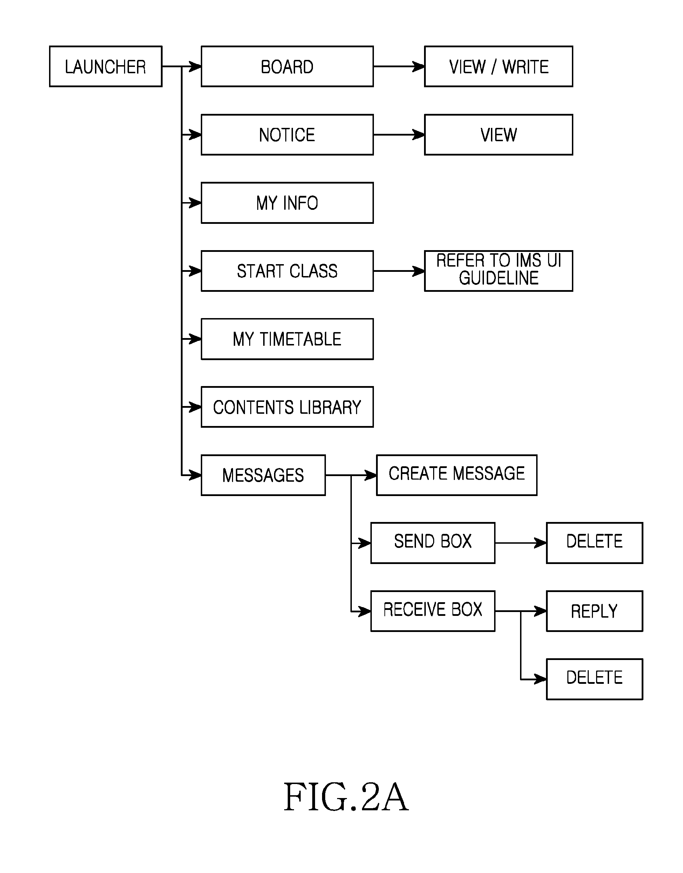

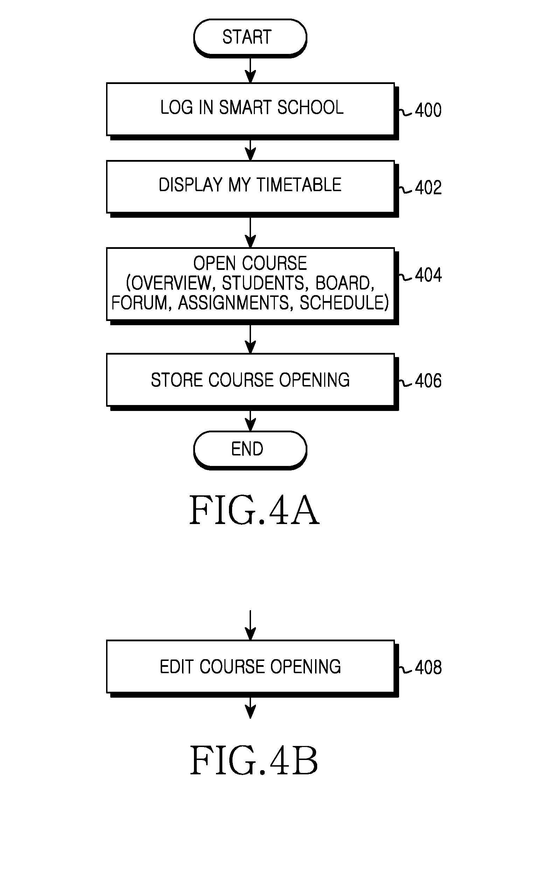

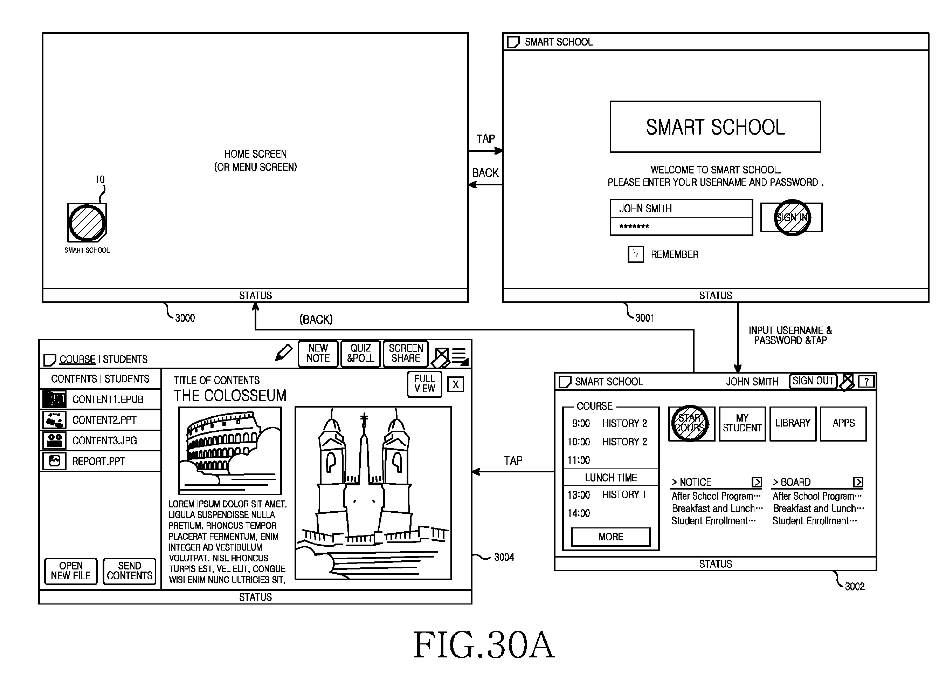

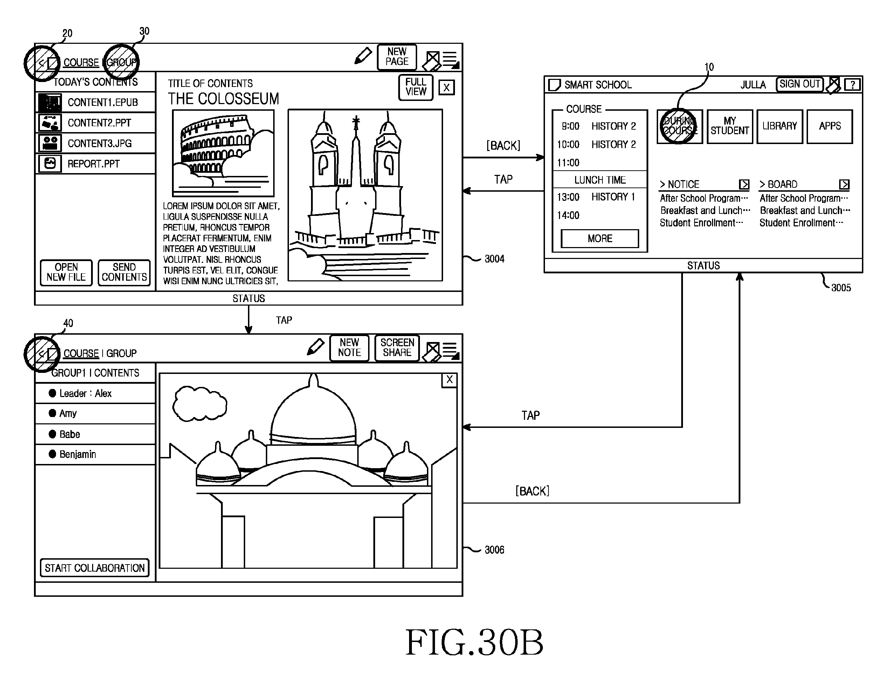

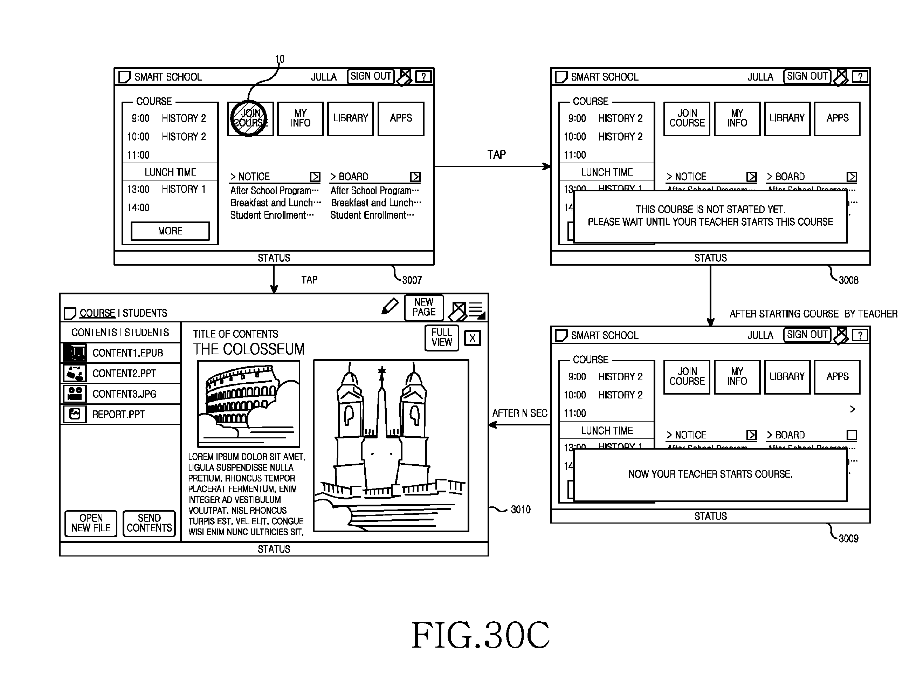

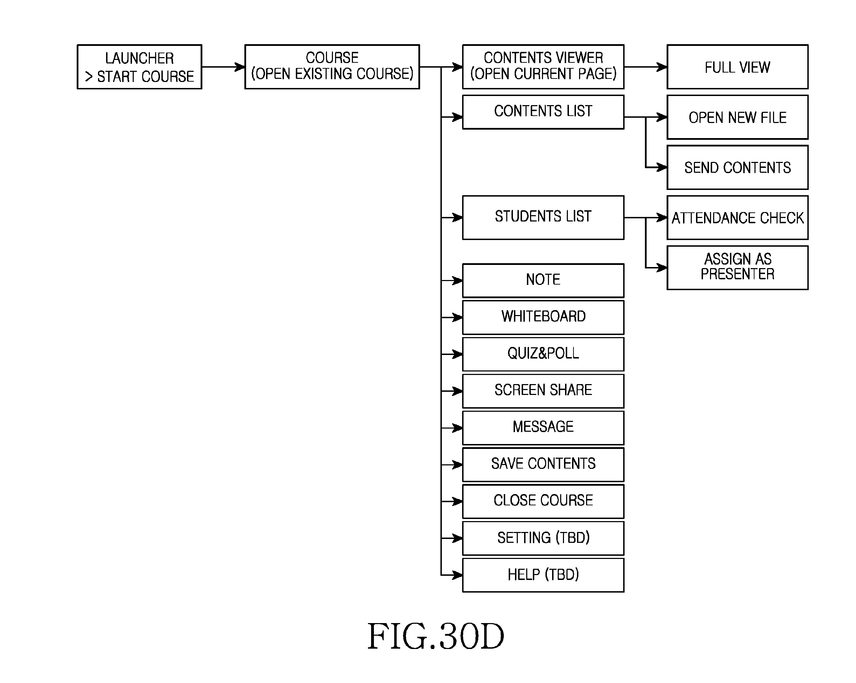

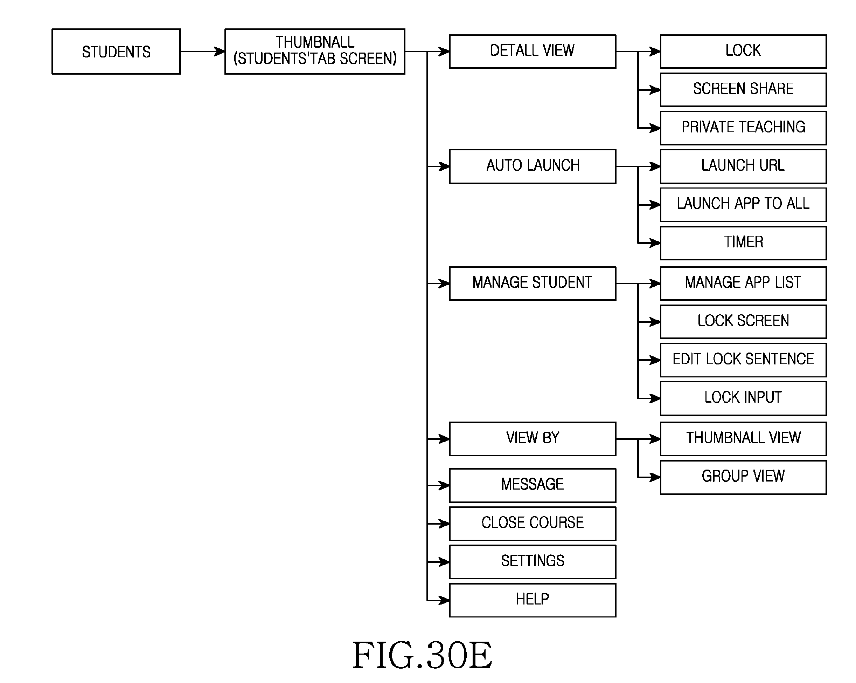

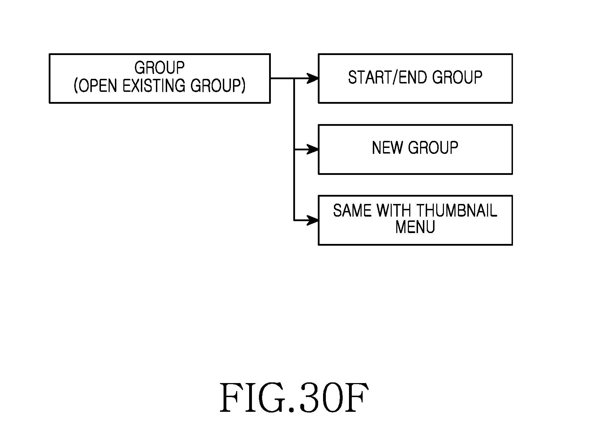

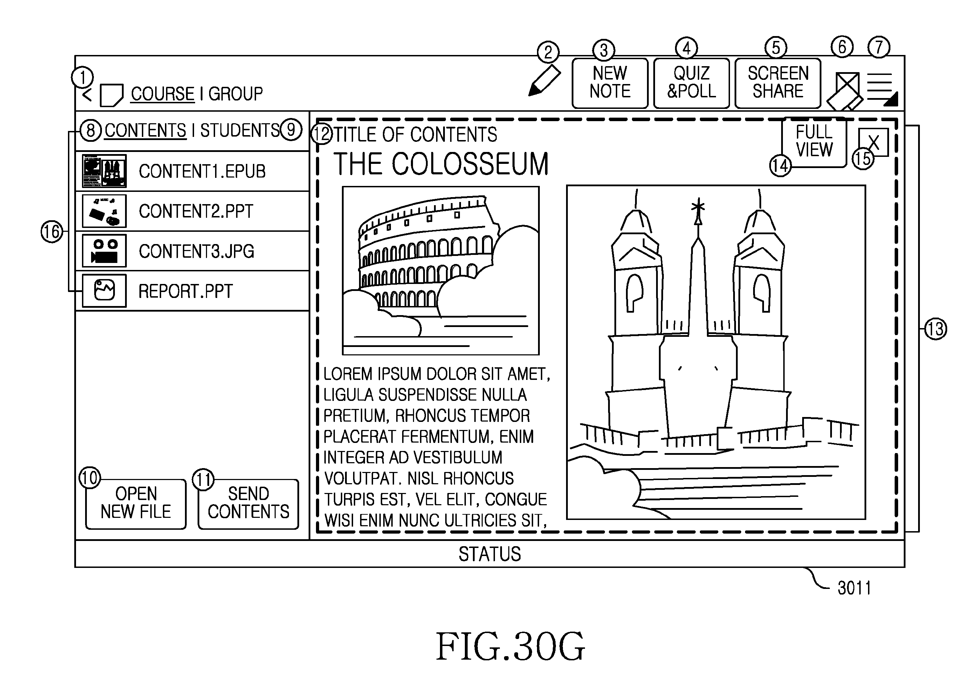

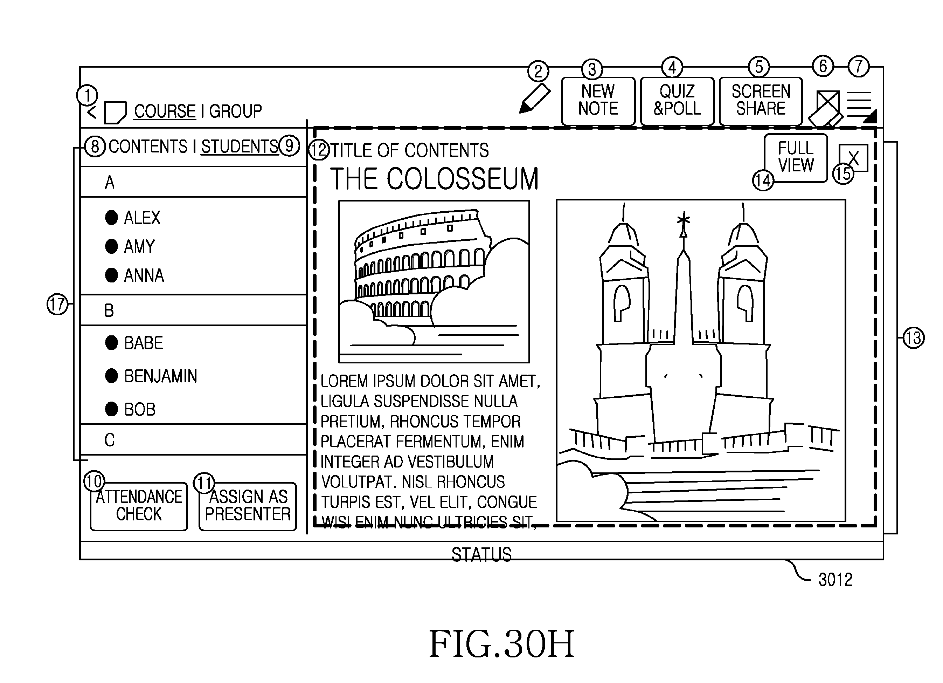

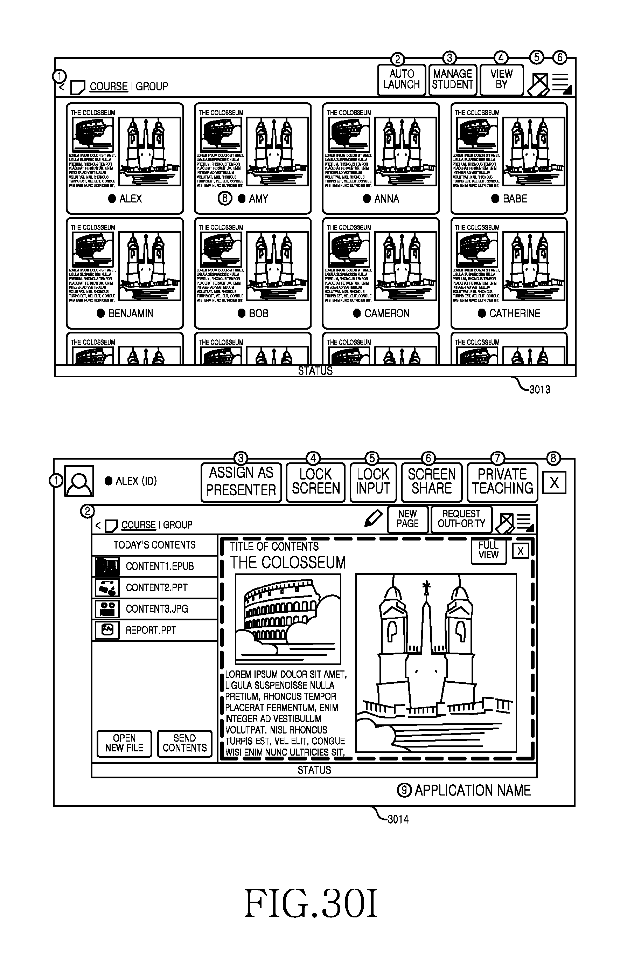

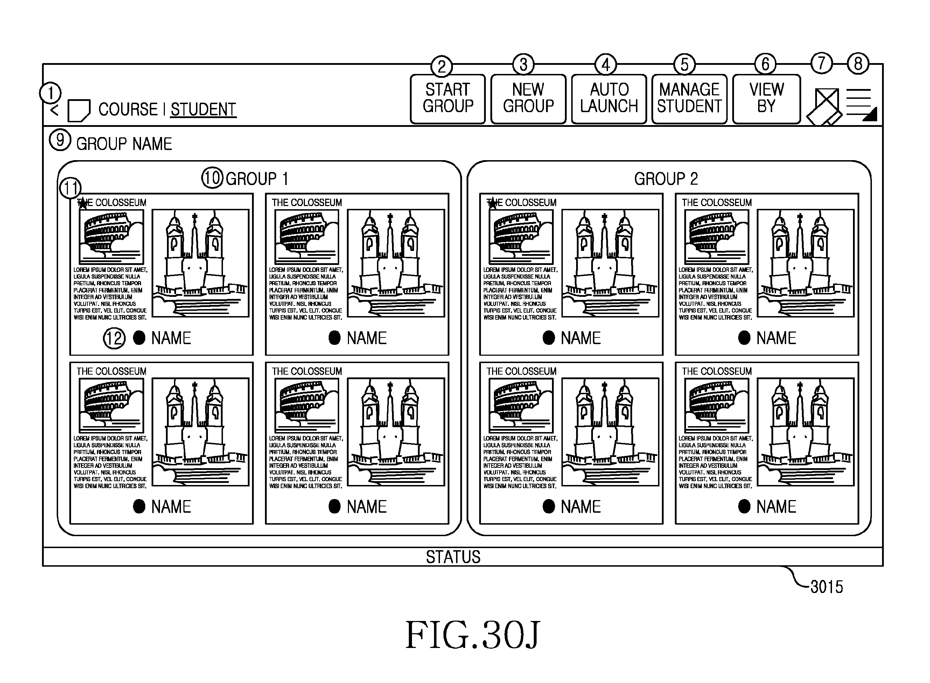

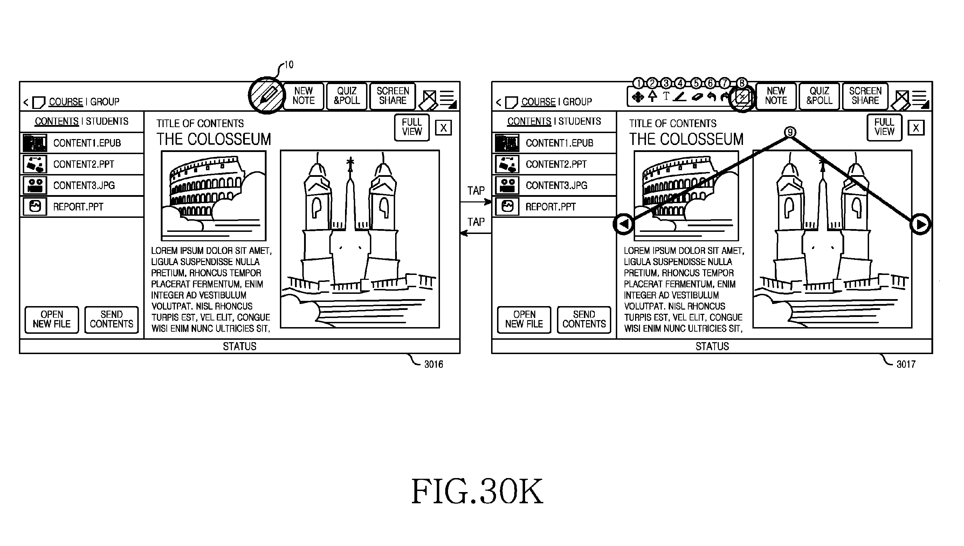

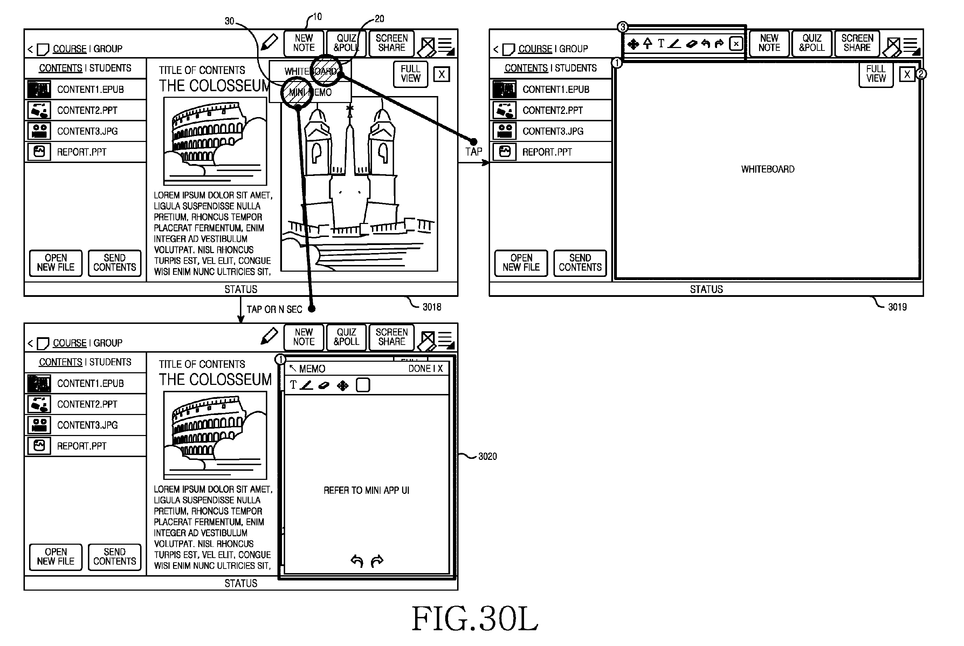

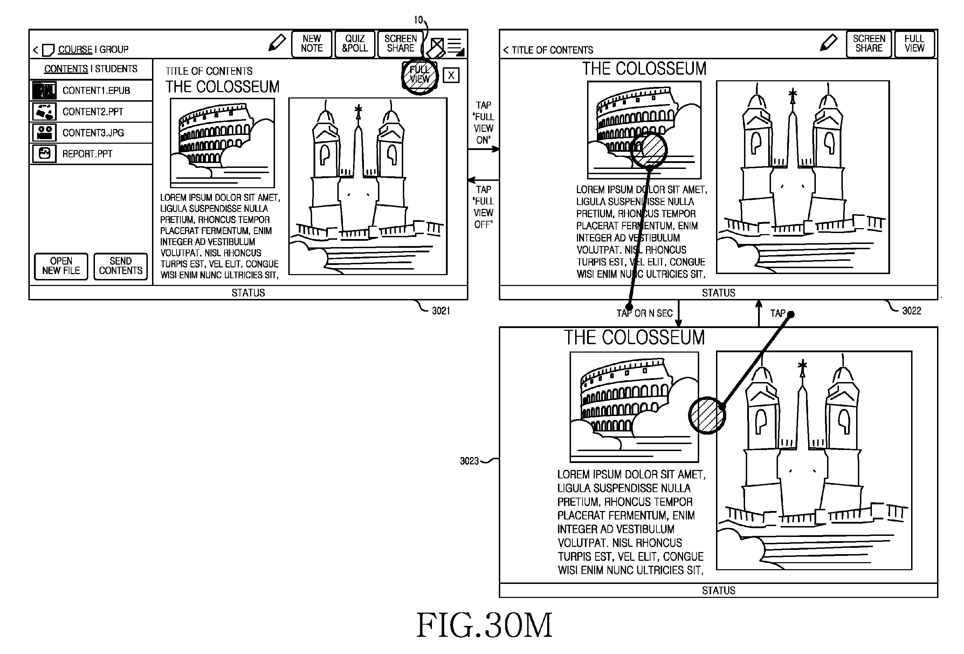

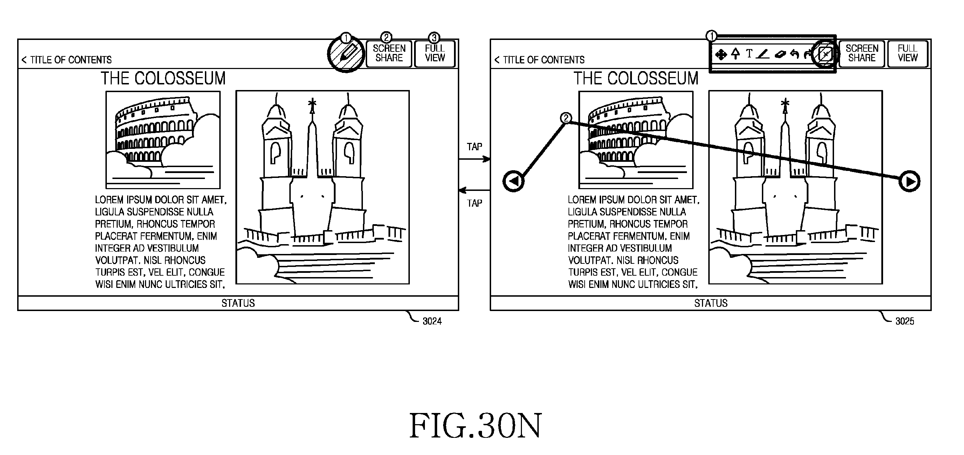

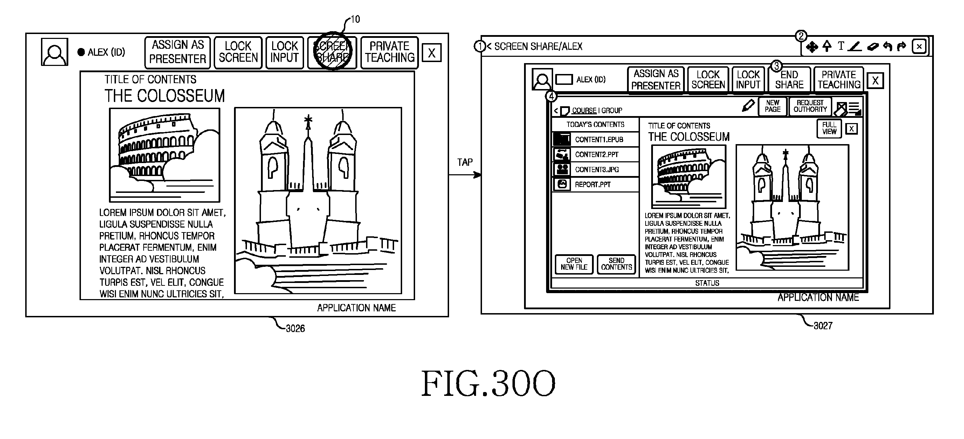

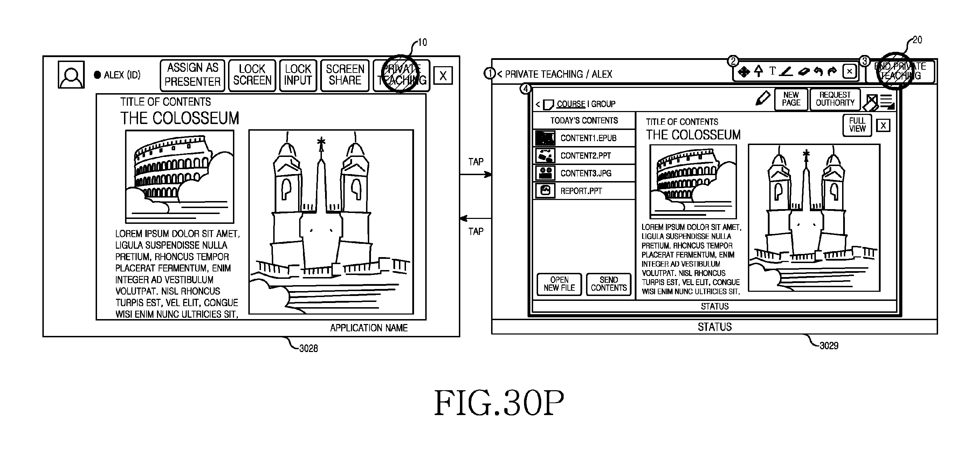

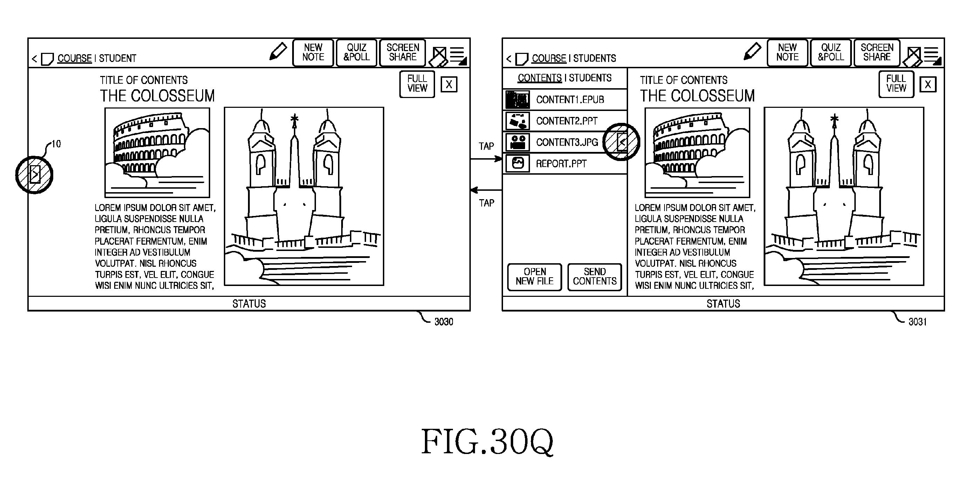

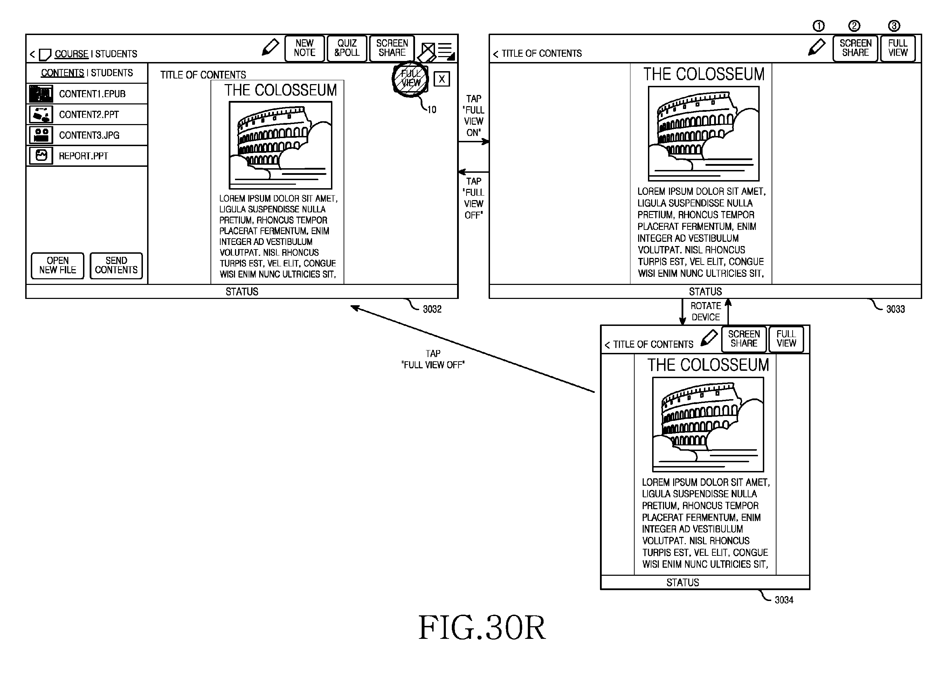

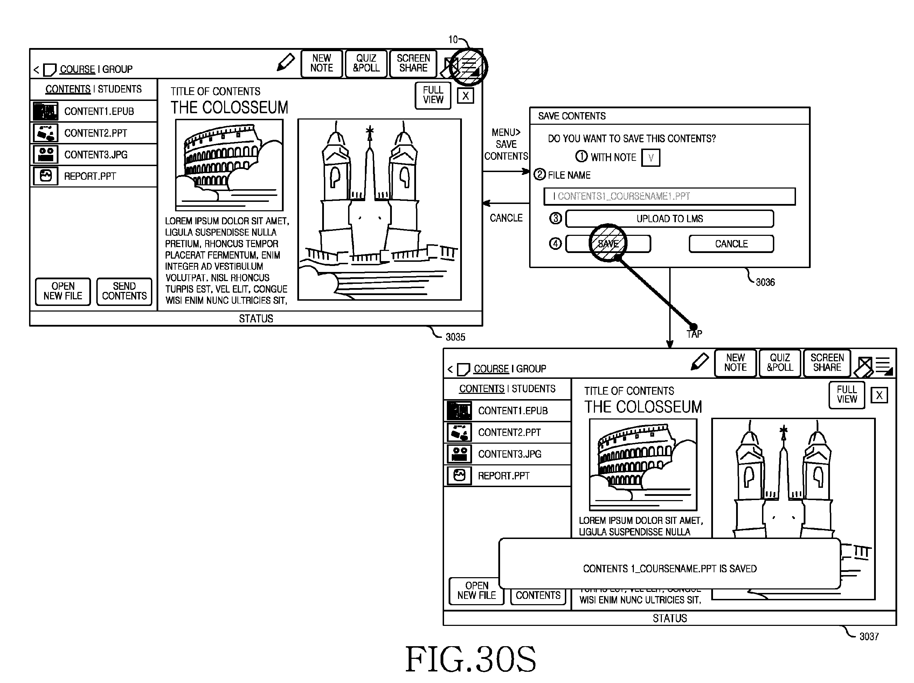

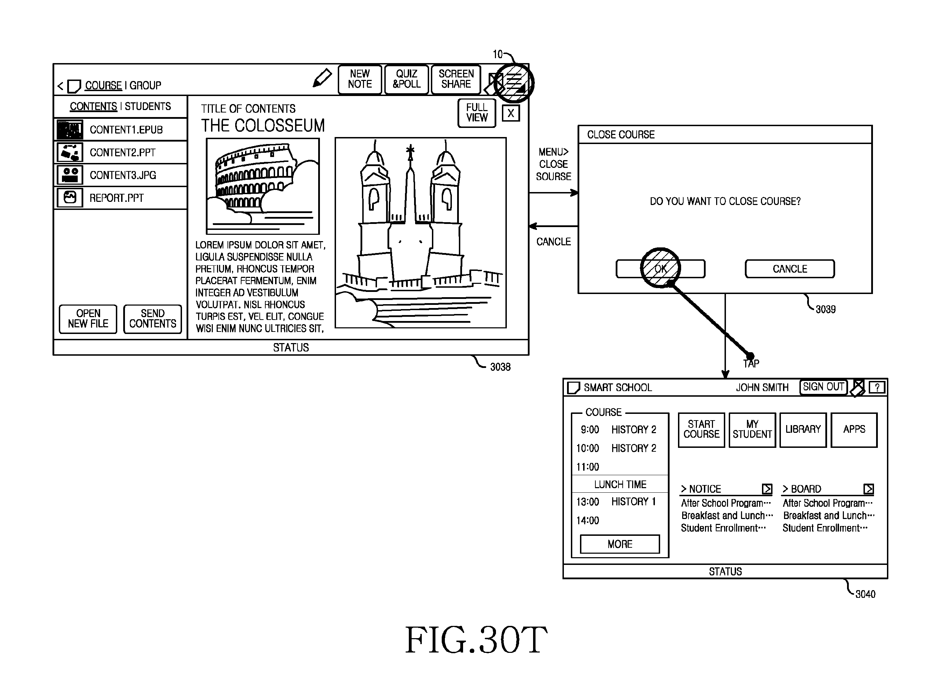

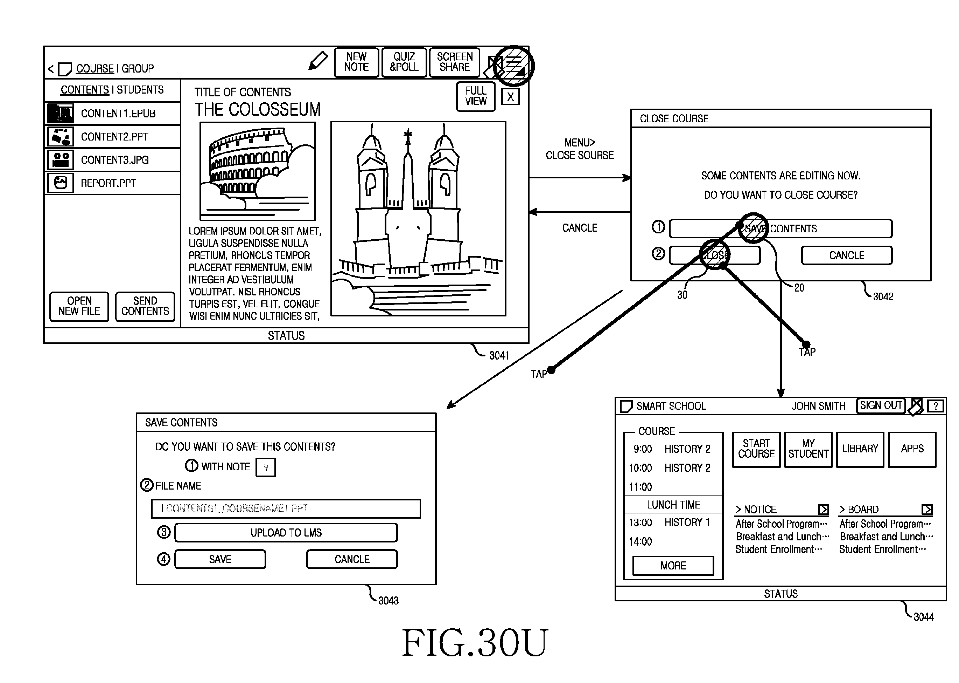

Detailed content about learning management, student management, and interactive class support is described with reference to FIG. 2A to FIG. 29 below. FIG. 4A to FIG. 29 are flowcharts related to a Learning Management System (LMS) for course creation/management, student registration/management, assignment registration/management, attendance/absence management, and grade estimation / life attitude estimation and the like. FIG. 30 to FIG. 68 are flowcharts related to an Instruction Management System (IMS) for supporting interactive class between a teacher and a student and between students.

FIG. 2A is a diagram illustrating a menu structure of a launcher program for a teacher device according to an exemplary embodiment of the present invention.

Referring to FIG. 2A, a teacher launcher for the present invention has main menus of 'Board', 'Notice', 'My info', 'Start Class', 'My timetable', 'Contents library', 'My students', 'Message' and the like. The 'Board' and the 'Notice' have sub menus of 'view/write' functions. The 'Start Class' has a plurality of sub menus providing functions of supporting interactive class between a teacher and a student and interactive class between students. The 'Message' has sub menus of message creation, message sending, and message reception sub menu functions (e.g., create message, send box-delete, receive box-reply, delete).

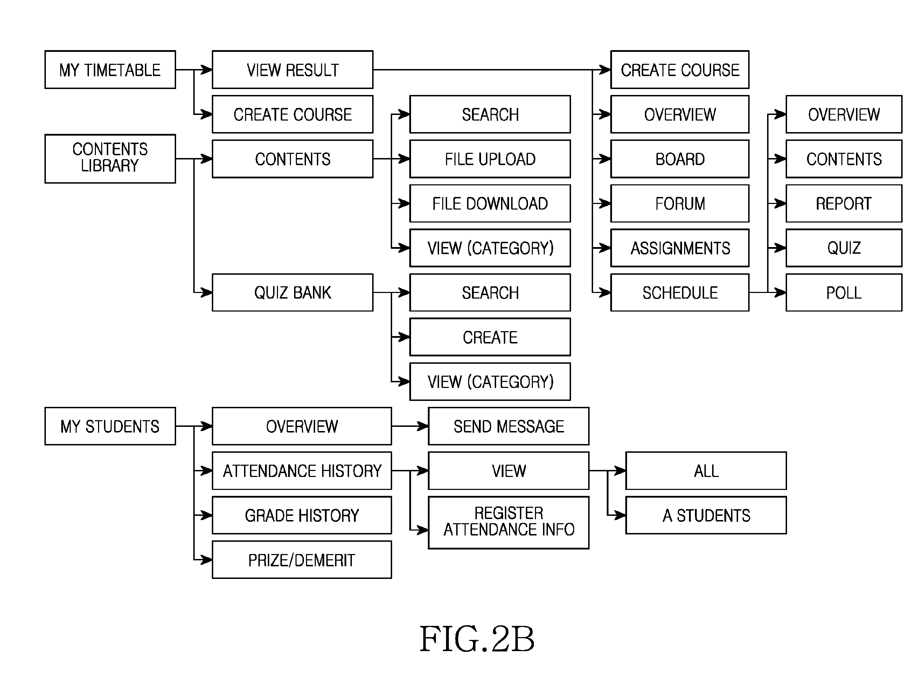

FIG. 2B is a diagram illustrating a sub menu structure for a teacher device according to an exemplary embodiment of the present invention.

Referring to FIG. 2B, it illustrates detailed functions for 'My timetable' for course creation/edition and management of a teacher's schedule, 'Contents library' for course-related contents management, and 'My students' for student management among the main menu of the teacher launcher for the present invention.

The 'My timetable' has sub menus of 'view result' showing teacher schedule related content and 'create course' for creating a course. The 'view result' has sub menus of 'create course, 'overview', 'students', 'board', 'forum', 'assignments', and 'schedule', and the 'schedule' has sub menus of 'overview', 'contents', 'report', 'quiz', and 'poll'.

The 'Contents library' has sub menus of 'Contents' and 'Quiz bank'. Here, the 'Contents' has sub menus of 'search', 'file upload', 'file download', and 'view (category)'. The 'Quiz bank' has sub menus of 'search', 'create', and 'view (category)'.

The 'My students' has sub menus of 'Overview', 'Attendance History', 'Grade History', and 'Prize/Demerit'. The 'Overview' has a sub menu of 'send message', and the 'Attendance history' has sub menus of 'view' and 'register attendance info'. Here, the 'register attendance info' has sub menus of 'All' and 'A student'.

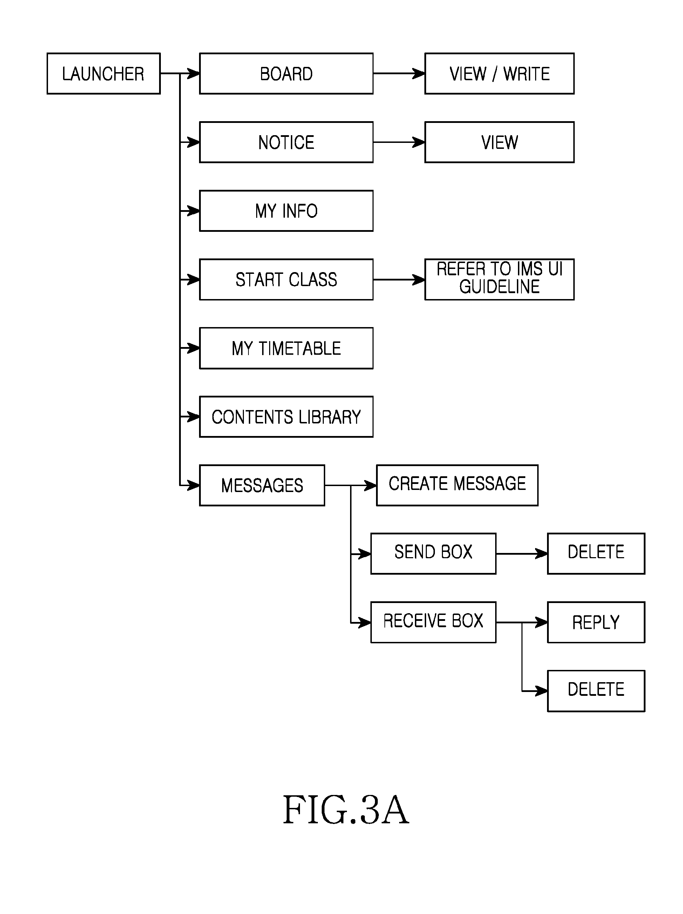

FIG. 3A is a diagram illustrating a menu structure of a launcher program for a student device according to an exemplary embodiment of the present invention.

Referring to FIG. 3A, a student launcher for the present invention has main menus of 'Board', 'Notice', 'My info', 'Start Class', 'My timetable', 'Contents library', 'My students', 'Message' and the like. The 'Board' and the 'Notice' have sub menus of 'view/write' functions. The 'Start Class' has a plurality of sub menus providing functions of supporting interactive class between a teacher and a student and interactive class between students. The 'Message' has sub menus of message creation, message sending, and message reception sub menu functions (e.g., create message, send box-delete, receive box-reply, delete). The student launcher program and the teacher launcher program are similar to each other, but the student launcher program does not need a 'My students' function in the main menu.

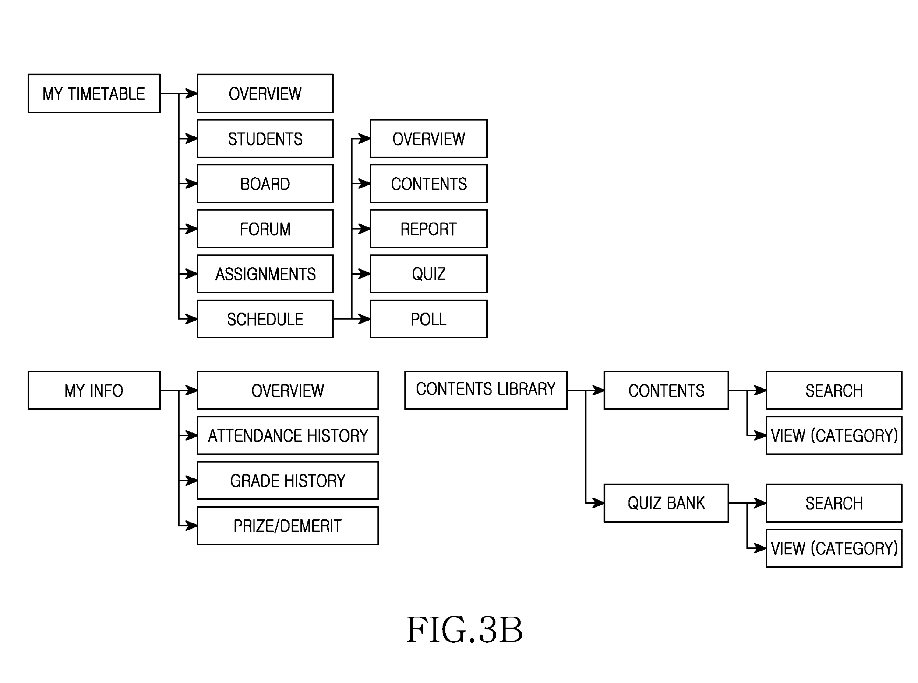

FIG. 3B is a diagram illustrating a sub menu structure for a student device according to an exemplary embodiment of the present invention.

Referring to FIG. 3B, it illustrates detailed functions of 'My timetable' for course and management of a student's schedule, 'Contents library' for course-related contents management, and 'My info' for managing student's own information among the main menu of the student launcher for the present invention.

The 'My timetable' has sub menus of 'overview' showing student schedule related content, and 'students', 'board', 'forum', 'assignments', and 'schedule' for course participation. The 'schedule' has sub menus of 'overview', 'contents', 'report', 'Quiz', and 'Poll'.

The 'Contents library' has sub menus of 'Contents' and 'Quiz bank'. Here, the 'contents' and 'Quiz bank' have sub menus of 'search' and 'view (category)' .

The 'My info' has sub menus of 'Overview', 'Attendance history', 'Grade History', and 'Prize/Demerit'.

FIGS. 4A and 4B are flowcharts illustrating an operation for course creation according to an exemplary embodiment of the present invention.

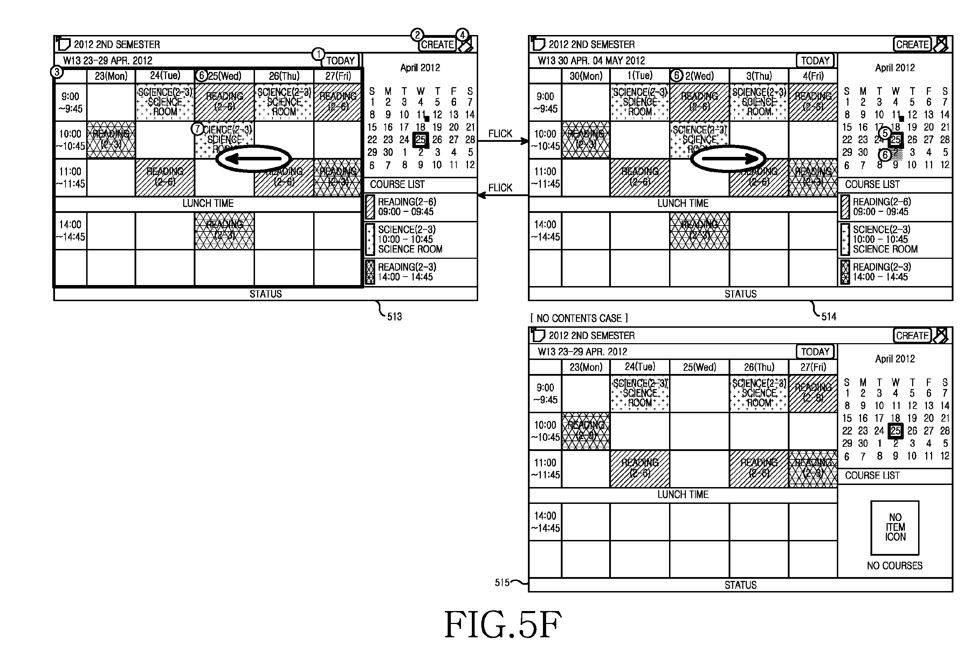

Referring to FIGS. 4A and 4B, in step 400, a teacher device has access to a server through log-in by using a password and an IDentifier (ID). In step 402, after access, the teacher device may display 'My timetable' capable of determining a teacher's timetable and a registered course in an initial screen. A detailed description of 'My timetable' is made with reference to FIGS. 5F to 5H below.

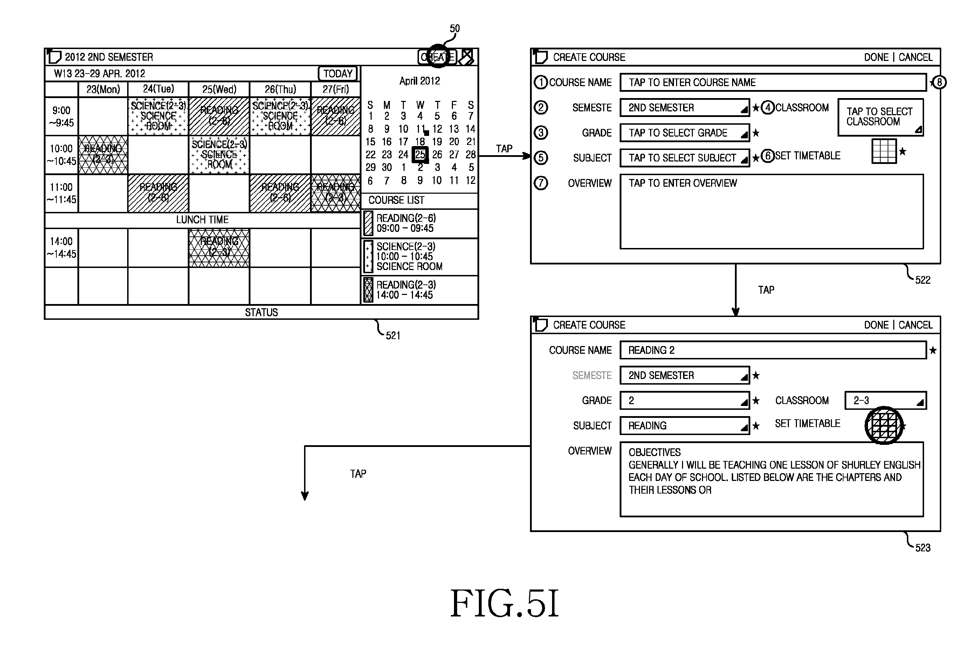

In step 404, the teacher device creates a course and, in step 406, stores course creation. For example, at new course creation, the teacher device may automatically display a spare time in a week schedule of a corresponding teacher on a screen in a system, and the teacher may create a course based on a blank hour, so the teacher may manage its own schedule. A detailed description of the course creation is made with reference to FIGS. 5I to 5J below.

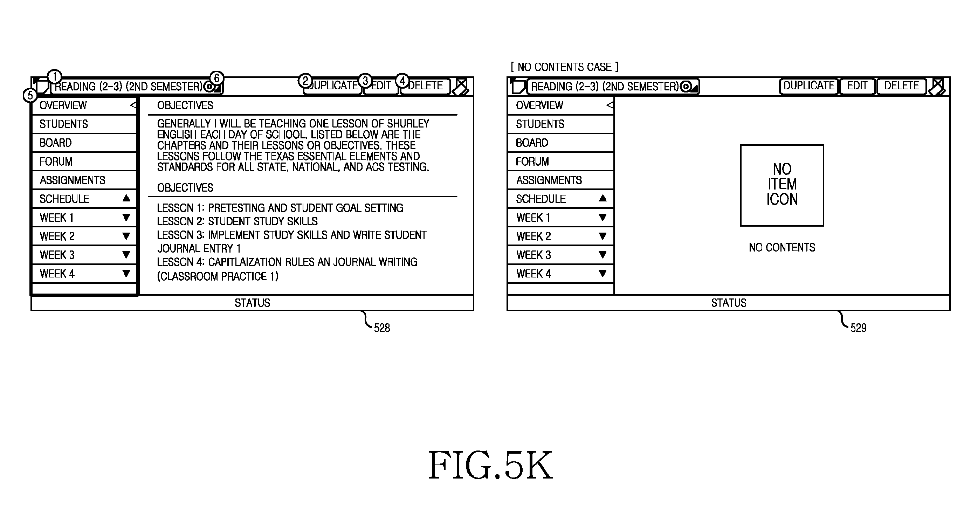

Next, after the course creation, the teacher may edit the created course (step 408). For example, the teacher may copy or delete an education process or may edit the content of the education process. A detailed description of the created course edition is made with reference to FIGS. 5K to 7O below.

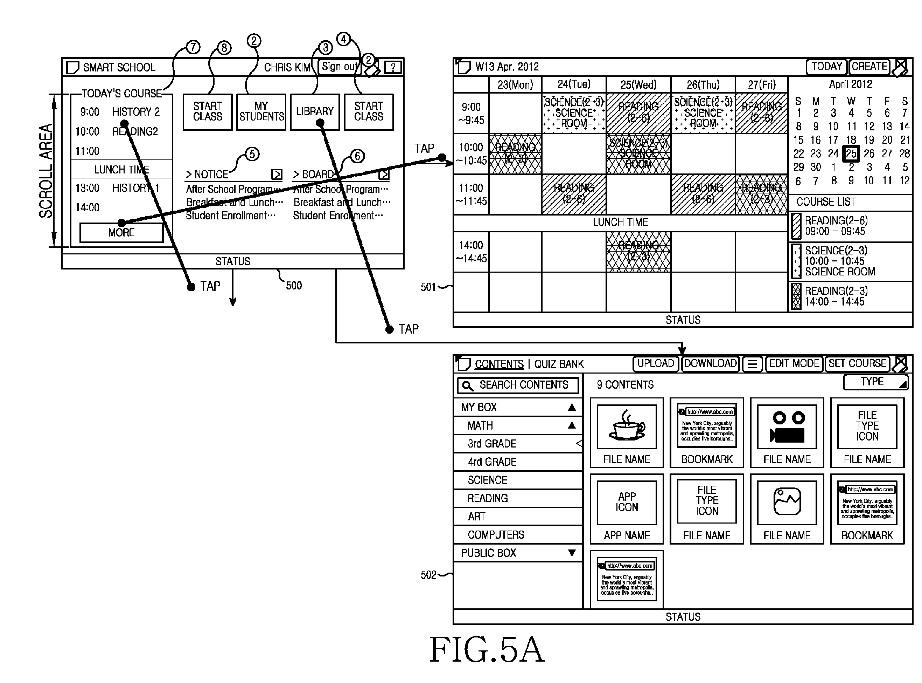

FIGS. 5A to 5O diagrams illustrating user interfaces executing a corresponding menu in a launcher screen.

FIG. 5A illustrates an initial launcher screen 500 after log-in for a teacher device. The initial launcher screen 500 may display a main menu of information 7 about today's course, 'Start class' 1, 'My students' 2, 'Library' 3, 'Apps' 4, etc., and at least one or more notice boards (e.g., 'Notice' 5 and 'Board' 6) according to use purpose. For example, 'Notice' 5 may allow a teacher and a manager to create writings and allow teacher/manager/students to determine the created writings. 'Board' 6 may allow the teacher and the manager to create and determine writings, but may not allow students to create and determine writings. Also, in another exemplary embodiment, 'Notice' 5 may not allow other people to post comments on a corresponding post, but 'Board' 6 may allow other people to post comments on the corresponding post.

'Start class' 1 provides various functions related to class (e.g., opening class related contents, report submission, quiz solving, group activity and the like). 'My students' 2 provides a function of managing students who listen to class (e.g., registering and deleting students who listen to a corresponding course, group designation and group mode edition). 'Library' 3 provides various contents related to class (e.g., class materials). 'Apps' 4 provides an application related to class.

Main menus provided in the initial launcher screen 500 may be limited according to access authority. For example, a teacher may access all of a main menu of information 7 about today's course, 'Start class' 1, 'My students' 2, 'Library' 3, 'Apps' 4, etc., and at least one or more notice boards (e.g., 'Notice' 5 and 'Board' 6) according to use purpose, but a student may have an access authority only for the remnant main menus excepting the main menu of 'My students' 2.

If a 'more' button is selected or the information 7 about today's course is selected to determine more detailed content in the initial launcher screen 500, 'My timetable' 501 may be displayed. In 'My timetable' 501, the teacher device may determine a teacher's timetable and a registered course. According to one exemplary embodiment, the timetable of the teacher and the registered course thereof may be displayed like a teacher's schedule registered to a calendar.

When 'Library' 3 is selected, a screen 320 including contents or quizzes may be given as in a screen 502. 'Library' 3 may manage contents related to corresponding course materials (e.g., an electronic textbook, a quiz question, a test question, and other course related materials) 321 and upload/download new contents to/from the server. That is, a user may receive and store contents from the server by using a device, or may register contents stored in a memory to the server.

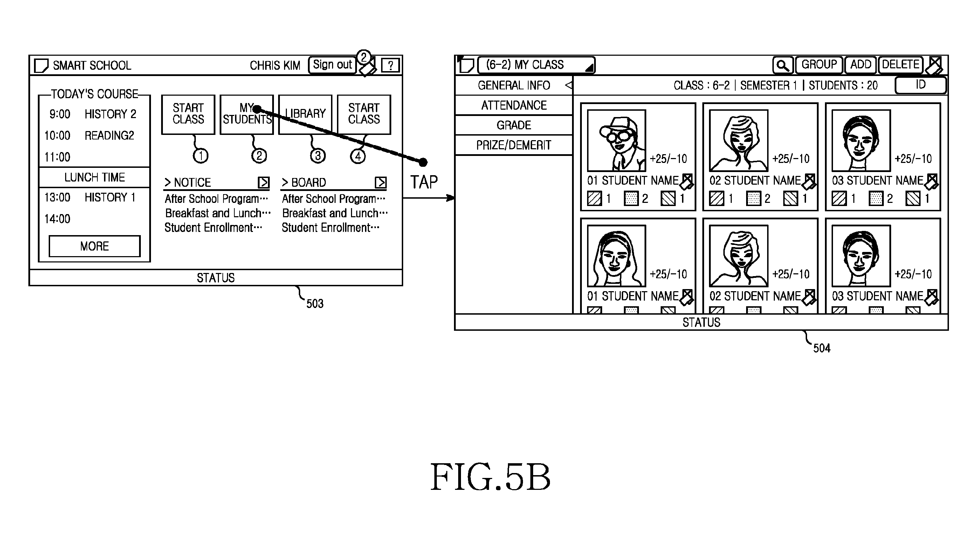

Referring to FIG. 5B, when 'My students' 2 is selected in an initial launcher screen (503), students listening to teacher's class or its own charging students may be displayed (504). In 'My students' 2, student group setting is possible, and students may be added to a course, and a specific student may be deleted from the course, and student attendance status and life attitude estimation and determination are possible.

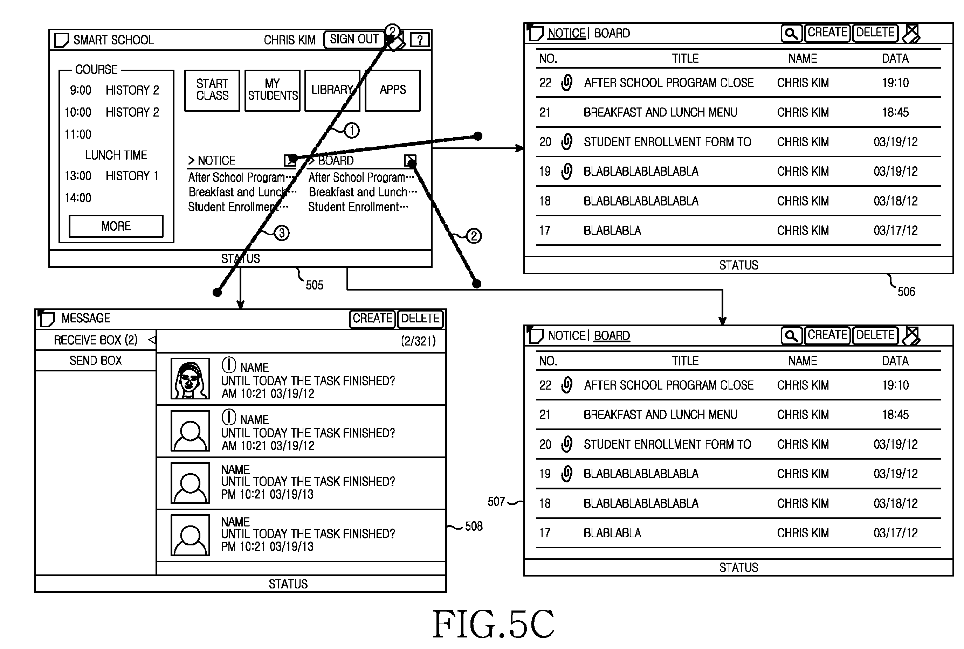

FIG. 5C illustrates screens 506, 507, and 508 displayed when 'Notice' 1, 'Board' 2, and 'Message' 3 are each selected in an initial launcher screen 505. 'Notice' 1 and 'Board' 2 may create or delete writings, and may search writings created in the notice board, and download/upload even an attachment file. Memo forwarded to a corresponding teacher or student is possible through 'Message' 3. When 'Message' 3 is selected in the initial launcher screen 505, read messages and unread messages may be displayed within a reception box and, when a sending box is selected, outgoing messages may be displayed. Meanwhile, information of the number of messages currently received from students or other teachers but yet unread may be displayed. For example, when there are two messages received but yet unread, a digit '2' may be displayed in 'Message' 508 together.

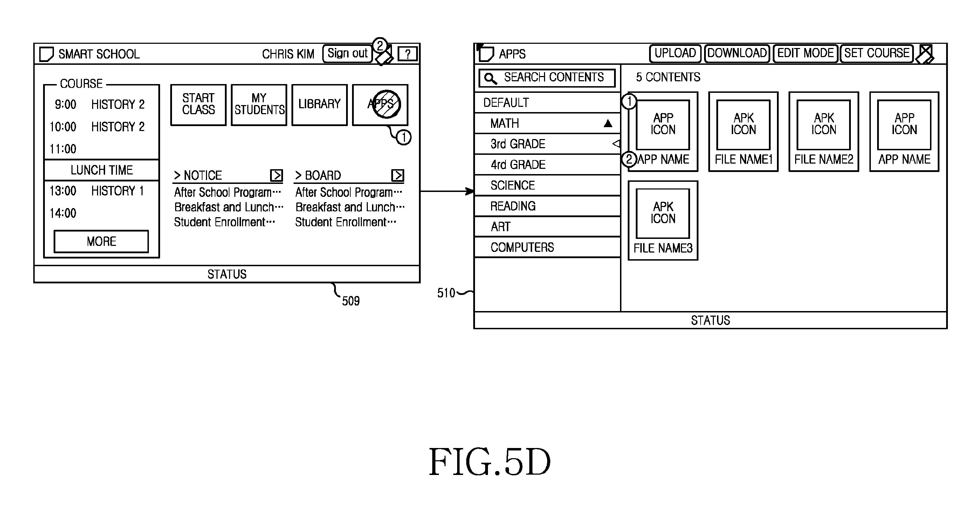

In FIG. 5D, when 'Apps' 1 is selected in an initial launcher screen 509, a list of applications registered by a user may be displayed (510).

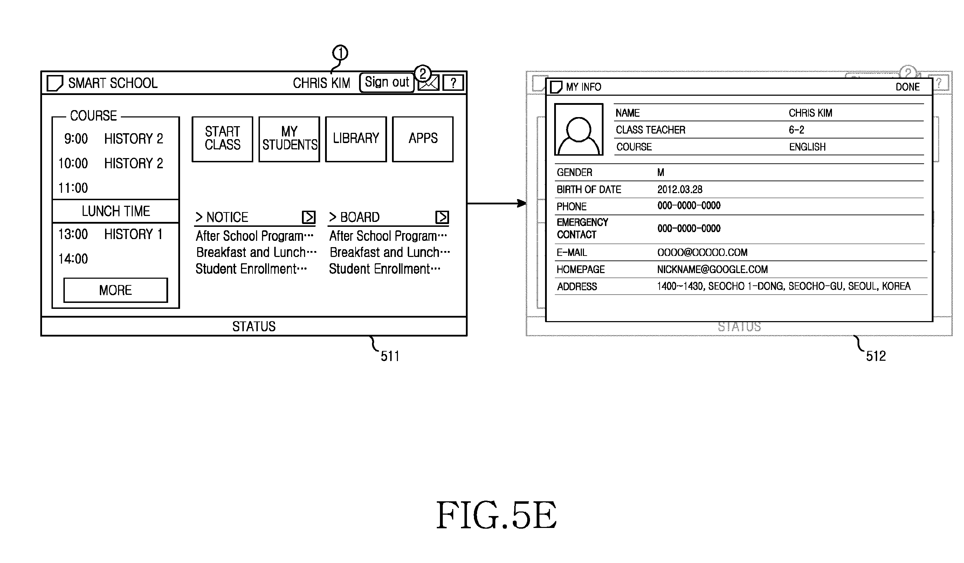

In FIG. 5E, when user information 1 is selected in an initial launcher screen 511, the user information 1 may be provided (512). For example, a user name, a year, a course, a gender, a phone number, an emergency contact, an electronic mail (e-mail) address, a homepage, an address and the like may be displayed.

FIG. 5F illustrates a user interface for 'My timetable' 513. 'My timetable' 513 may determine information about teacher's timetable and registered subject, and provides an interactive calendar. In one exemplary embodiment, it may be displayed together with 'My schedule' registered to a calendar.

In detail, 'Today' 1 moves to current date. 'Create' 2 creates a new course. 'Timetable' 3 shows a teacher's timetable and enables immediate addition and, if a registered subject is selected, enters a detail view of a corresponding subject. 'Message' 4 may enter a memo box and, if there is a new message, may display an indicator informing this (for example, the number of newly received messages may be displayed on an icon corresponding to 'Message' 4). Mark is displayed on today's date ('Today focus' 5), and a mark may be displayed on a selected date ('Select focus' 6). Also, subject information (e.g., a subject name, a grade and the like) may be displayed in 'Timetable'. Here, subject information 7 of a corresponding class hour may include subject name or room information.

When a flick gesture of left direction is input by a user in a screen 513, a timetable of a next week may be displayed (514) and a date that is one week after a current date may be selected and displayed. For example, when the current date is April 25, 2012 in the screen 513 of FIG. 5F and a timetable of one week before and after the current date is displayed, a date of May 02, 2012 is selected according to a flick gesture of left direction, and a timetable of one week before and after May 02, 2012 is displayed. Here, date movement is not limited to the flick gesture and the date movement is possible by various user gestures. Also, the date movement may variously move in a two-week unit or three-day unit, not one-week unit.

Inversely, if a flick gesture of right direction occurs in a screen 514, the screen 513 may be provided.

The screen 515 shows a case where there are not a course and related course materials at a corresponding date (e.g., April 25, 2012). That is, when there are not the course and the related course materials, no information is displayed in 'course list'.

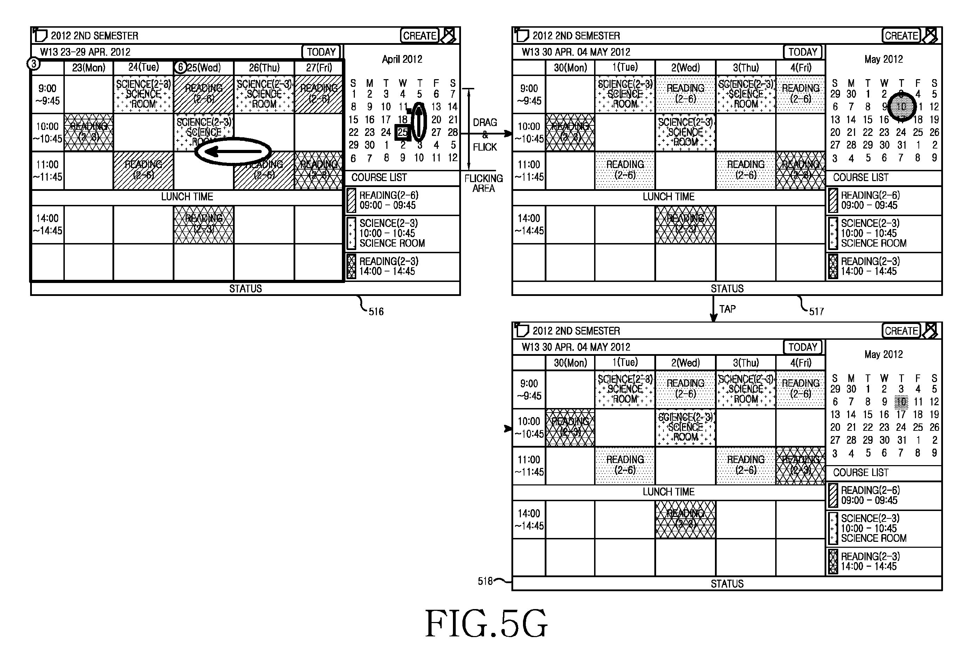

Meanwhile, FIGS. 5G to 5H illustrate user interfaces moving to a corresponding week.

Instead of moving a date through a flick gesture of left direction within a timetable as in a screen 516, a date may be moved through a flick gesture of up direction in a calendar window. For example, a timetable of a next one week and a corresponding date may be selected through a flick gesture of left direction within the timetable, or a date may be moved through a flick gesture of up direction in the calendar window. However, a date unit (e.g., one week) moved according to a flick gesture input of left direction in the timetable and a date unit (e.g., two weeks or one month) moved according to a flick gesture input of up direction in the calendar window may be different from each other.

When a specific date (e.g., May 10, 2012) is selected (517), a focus is moved to a specific date while even a timetable is updated and displayed centering the specific date (518).

When a course corresponding to a class hour of a corresponding date is selected (1) in a screen 519, the teacher device may move to the class hour corresponding to the selected course and display corresponding contents as in a screen 520. Although not illustrated, the teacher device may select and execute corresponding contents among the contents provided as in the screen 520.

FIGS. 5I to 5J illustrate user interfaces for course creation in a menu of 'My timetable' in a launcher screen of a teacher.

First, if 'Create' 50 is selected in 'My timetable' 521 to create a new course, an input window 522 for course creation is displayed. Here, 'course name' 1, 'semester' (not shown), 'year' 3, 'range' (not shown), 'classroom' 4, 'subject' 5, 'set timetable' 6, and 'overview' 7 inputs are possible. At timetable setting, only my timetable may be determined and may be set in a blank hour zone. At classroom and subject selection, a classroom list and a subject list may be provided and a corresponding classroom or a corresponding subject may be selected.

A screen 523 represents a status in which information for course creation is input or set in the input window 522.

When 'Set timetable' 6 is selected in the screen 522, a timetable is displayed as in a screen 524. Here, a subject preset by other teacher device may exist, and a corresponding teacher device may select a blank hour zone and set a class time of a corresponding subject. For example, among blank hour zones, the first class hour 1 of Monday, the third class hour 2 of Wednesday, and the second class hour 3 of Friday may be selected (524) by a corresponding teacher device. In another exemplary embodiment, a blank hour may be randomly selected and set as a corresponding class time.

After that, when setting of corresponding class time is determined and 'Done' is selected (525), information for corresponding course creation may be stored (526). If intending to cancel the setting of the corresponding class time, the teacher device selects 'Cancel'.

Information input for corresponding course creation is completed (526) and then, when 'Done' is selected, a corresponding subject is added (527) to a class hour for the created course. For example, a 'Reading' subject is added (1, 2, 3) to the first class hour of Monday, the third class hour of Wednesday, and the second class hour of Friday.

FIGS. 5K to 5O illustrate user interfaces for editing a course created in a menu of 'My timetable' in a launcher menu of a teacher.

A screen 528 of FIG. 5K is a screen capable of selecting a corresponding subject and related information or contents when one of created subjects is selected in 'My timetable'. For instance, if a 'Reading' subject of the second semester of the third year is selected, detailed information of the selected one lecture may be determined and edited.

For example, the teacher device may select and move a corresponding course to created other course (1), and may duplicate a created course ('Duplicate' 2), and may edit the content of the selected one course ('Edit' 3), and may delete a corresponding course ('Delete' 4). Further, in 'course menu' 5, a course summary and overview ('Overview') may be determined, and information of a student who participates in a course and group creation management ('Students') is possible. A course board ('Board') and a plurality of forum boards ('Forum') are provided. In an 'assignments' menu, a report registered to a corresponding course, a quiz, a poll and the like may be collectively determined and estimated. In 'schedule' menu, the whole schedule of a corresponding course may be determined, edited, or deleted. Detailed information may be determined every week of a corresponding course (Week 1, Week 2, Week 3, ...). Meanwhile, 'Loading icon' 6 may be displayed if a server takes long time for data loading upon drop-down.

A screen 529 of FIG. 5K illustrates a case where there are no contents of a corresponding course.

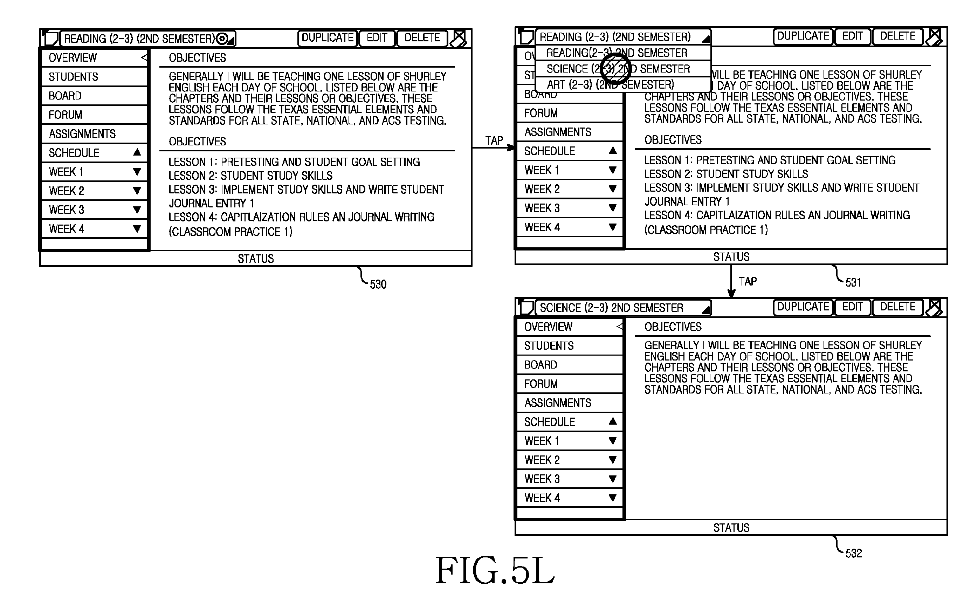

A screen 530 of FIG. 5L displays information about a created 'Reading' subject of the second semester of the third year. A screen 531 of FIG. 5L is a screen of selecting 'science' of the second semester of the third year instead of the 'Reading' subject of the second semester of the third year. A screen 532 of FIG. 5L displays information about the 'science' subject of the second semester of the third year. That is, FIG. 5L illustrates a user interface moving from one subject to another subject.

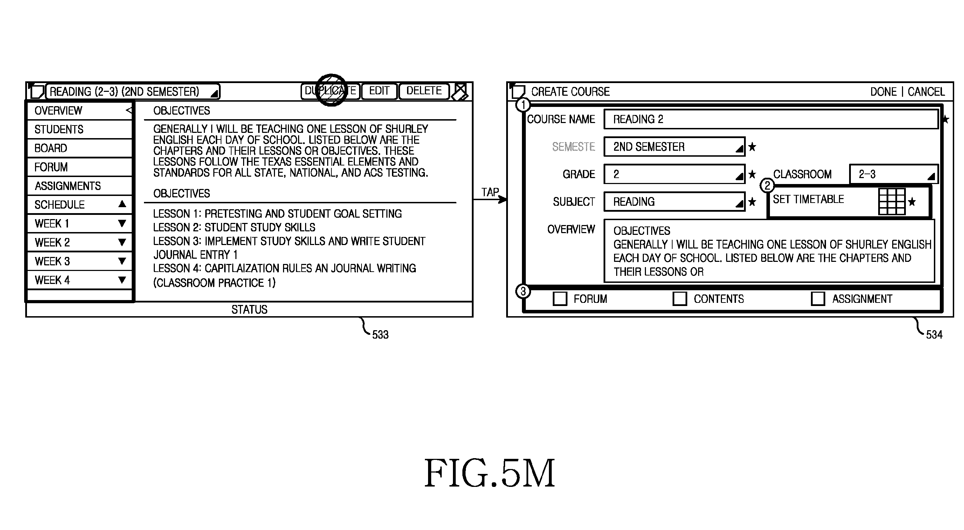

Next, when a teacher selects 'Duplicate' 1 to duplicate information about the 'science' subject of the second semester of the third year as in a screen 533 of FIG. 5M, a screen 534 of FIG. 5M may be displayed. That is, the teacher may duplicate the selected one course and create a new course. At this time, all course information may be duplicated, or only course information excepting some information may be duplicated. For example, 'Course name', 'Overview', 'Semester', and 'Grade' excepting 'students' information and 'board' information may be duplicated 1 and edited by a user. At this time, 'Set Timetable' 2 is provided as a default status and should be newly set. According to implementation, the content of 'Set Timetable' may be duplicated. 'Forum', 'Contents' and 'Assignment' may be duplicated or not duplicated according to duplication or non-duplication setting (3).

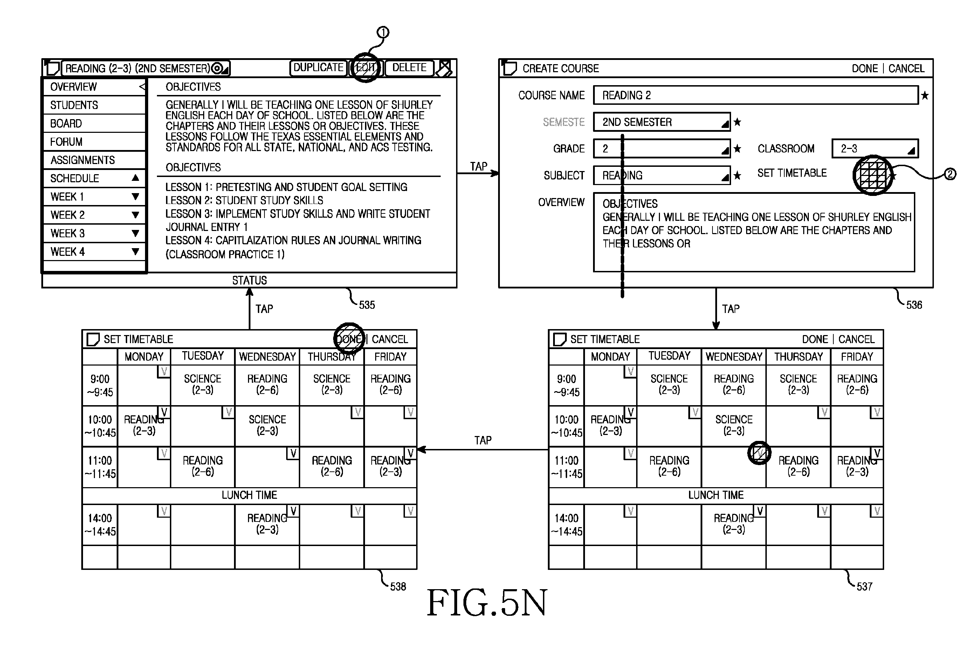

FIG. 5N is a user interface for editing information about a created course. For instance, when 'Edit' 1 is selected to edit information about a 'Reading' subject of the second semester of the third year (535) as in a screen 536 of FIG. 5N, the information about the 'Reading' subject of the second semester of the third year may be displayed. Here, corresponding course related information to be edited may be selected and edited. For example, when a class time of a subject is changed, if 'Set Timetable' 2 is selected, a subject timetable may be displayed as in a screen 537 of FIG. 5N. Here, a blank hour zone, for example, the third class hour 3 of Wednesday is selected and then, when 'Done' 4 is selected as in a screen 538 of FIG. 5N, a 'reading' class time of the second semester of the third year may be added to the third class hour 3 of Wednesday and it may return to the screen 535.

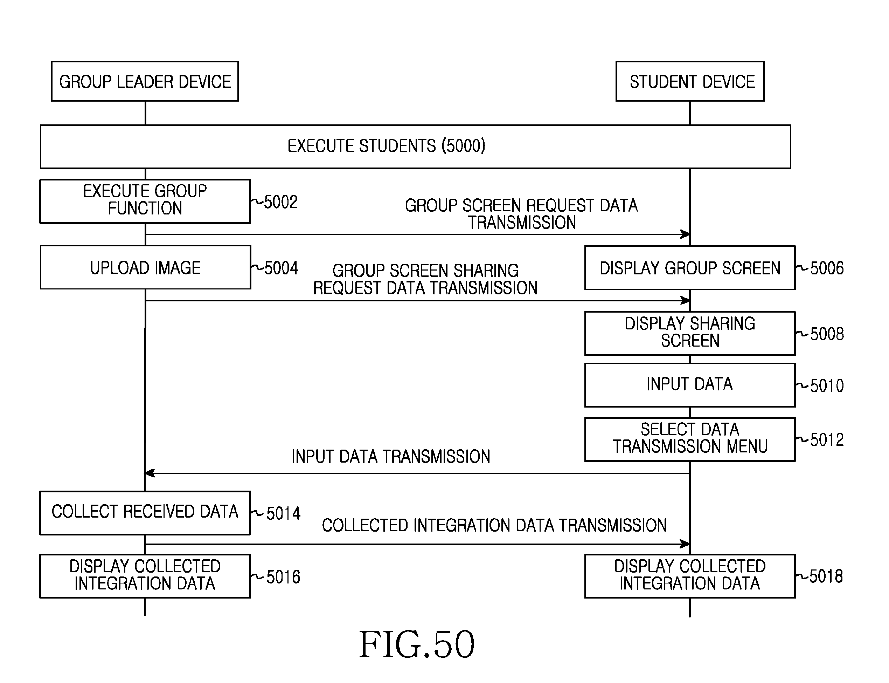

FIG. 50 is a user interface for deleting a created subject or course.

If 'Delete' 1 is selected to delete a created 'reading' subject of the second semester of the third year in a screen 539 of FIG. 50, a popup window inquiring whether to delete a corresponding subject is displayed (540). Here, if 'OK' is selected, the corresponding subject is deleted.

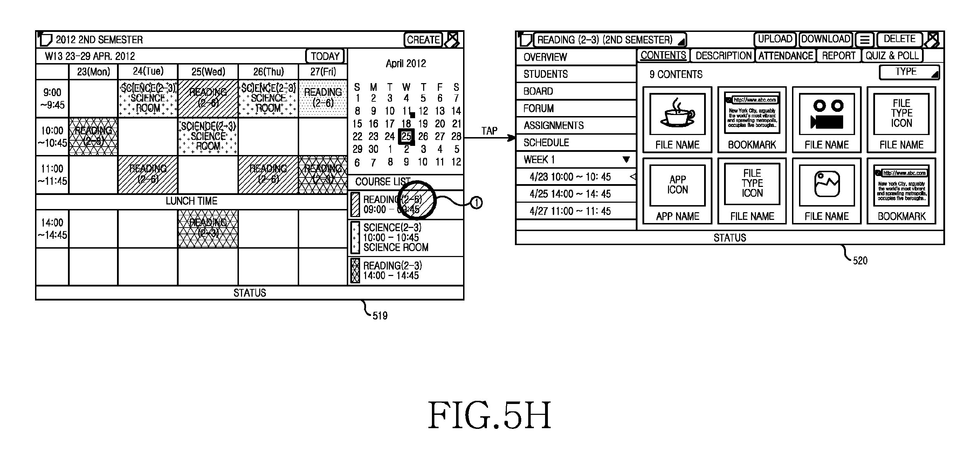

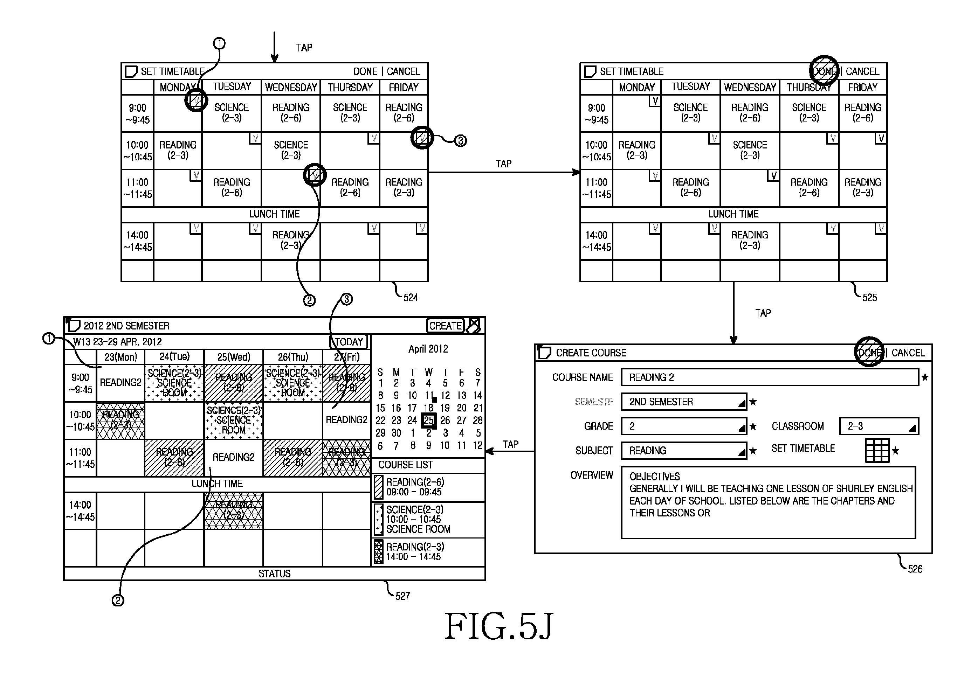

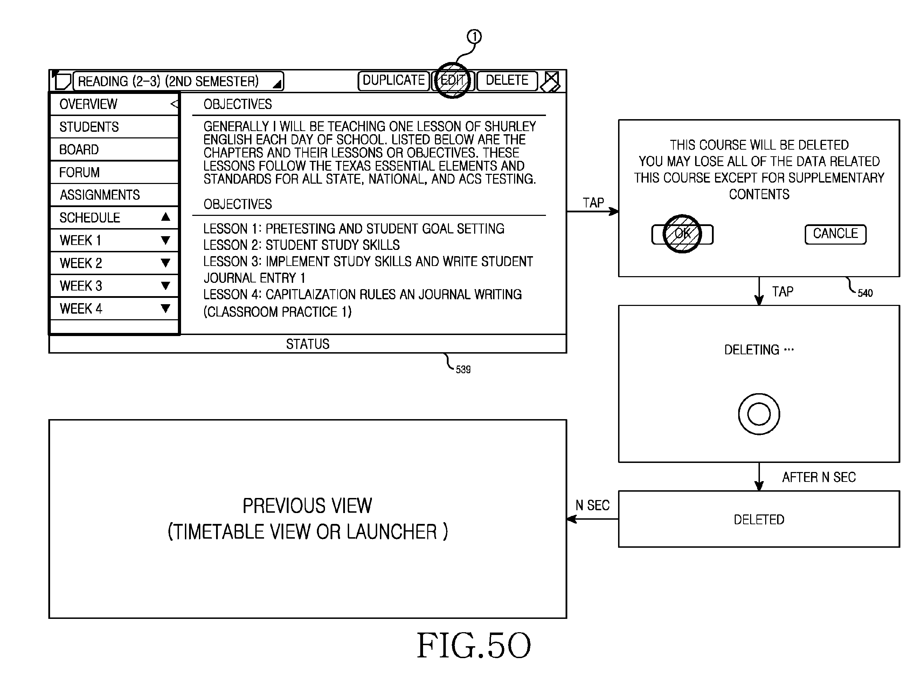

Next, after a corresponding course or subject is deleted, it may move to the 'My timetable' screen (e.g., the screen 513 of FIG. 5F) or the initial launcher execution screen (e.g., the screen 509 of FIG. 5).

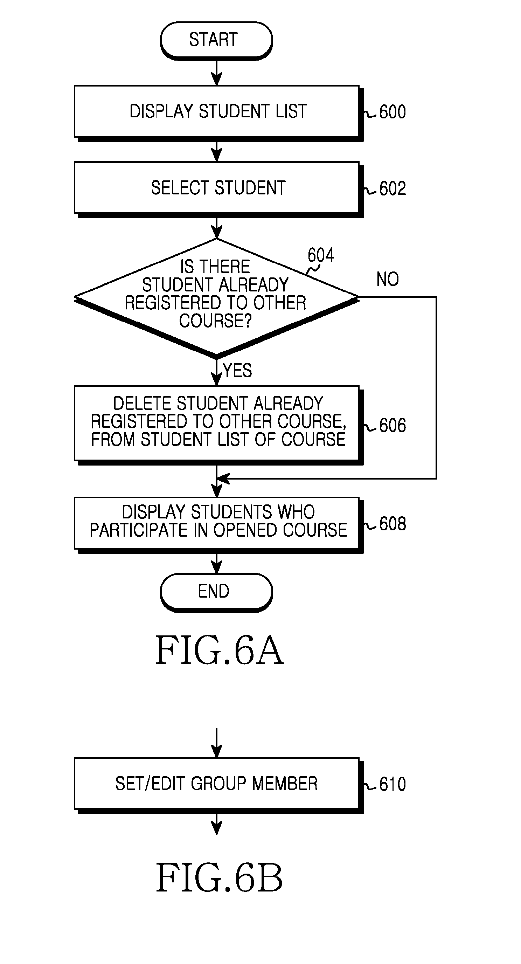

FIGS. 6A and 6B are flowcharts illustrating an operation for student registration of a created course according to an exemplary embodiment of the present invention.

Referring to FIGS. 6A and 6B, in step 600, a teacher device selects a 'students' menu of a corresponding course in FIG. 5A and displays a student list. In step 602, the teacher device selects students who will participate in a created course by using the displayed student list.

In step 604, the teacher device determines if there are students already registered to other course. If so, in step 606, the teacher device deletes the students who have been already registered to the other course, from the student list of the course.

In step 608, the teacher device displays the students who will participate in the created course.

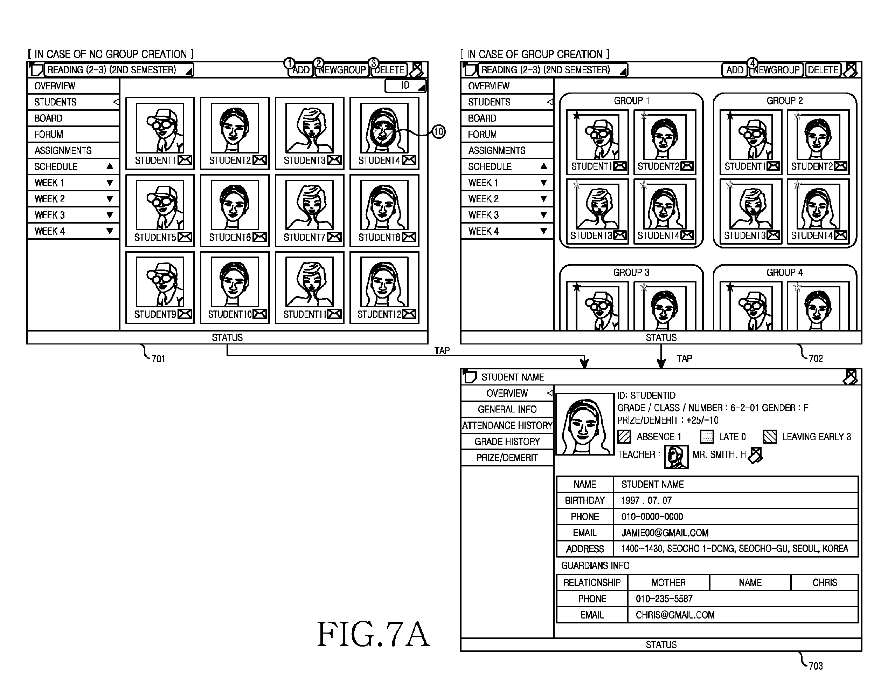

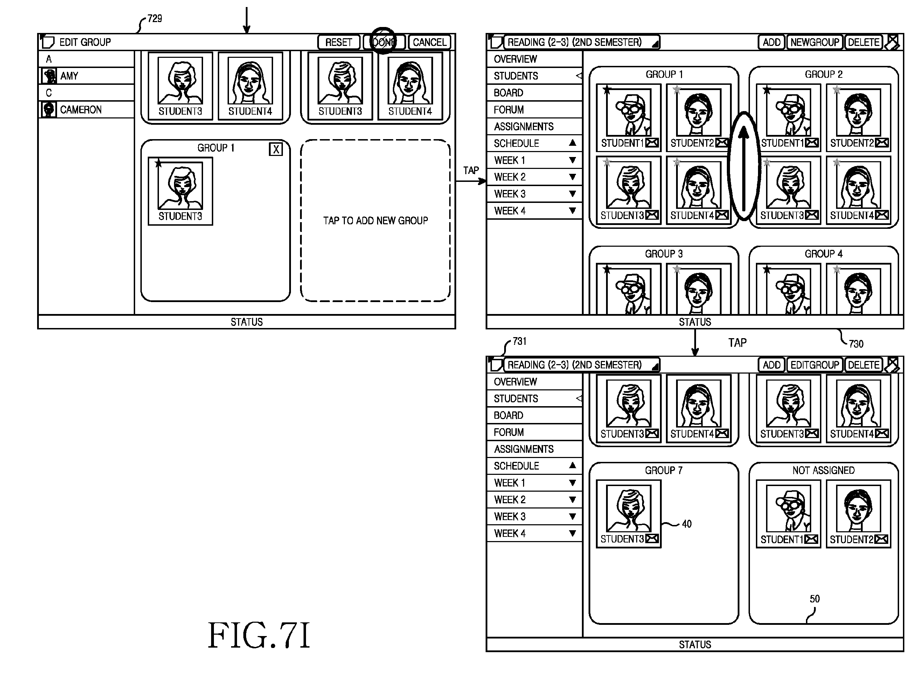

Next, in step 610, the teacher device may set or edit a group member for the students who will participate in the created course. A detailed description of the student registration of the created course is made with reference to FIGS. 7A to 7O below.

FIGS. 7A to 7N are diagrams illustrating user interfaces for student registration to a created course or subject.

FIG. 7A illustrates student lists registered to a subject of a corresponding course in a case of no group creation and in a case of group creation. The student lists may be viewed in a 'students' tab of a created course.

For example, in a case of no group creation, a student list registered to a 'Reading' subject of the second semester of the third year is displayed (701). Here, a student addition function ('Add') 1, a student group creation function ('New group') 2, and a student deletion function ('Delete') 3 are possible in the whole student database.

Meanwhile, in a case of group creation, students registered to a 'Reading' subject of the second semester of the third year are divided into groups and displayed (702). Here, 'Edit group' 4 may add a lower group to a new group or an existing group, and may perform group deletion, and group name and group member change. In addition, by dragging and dropping a first group to a second group, a group member change is possible.

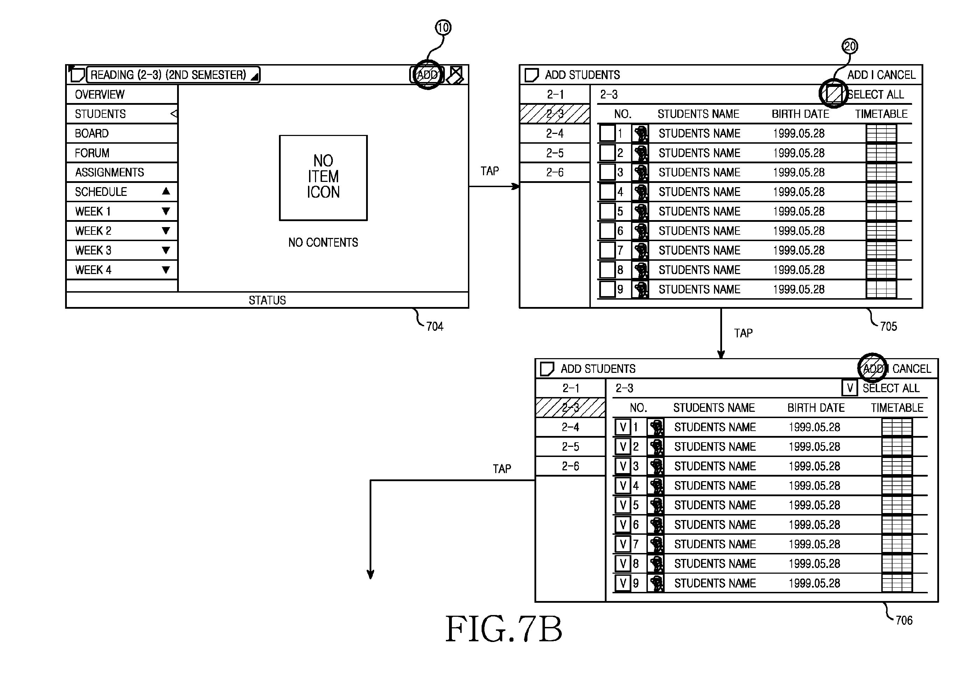

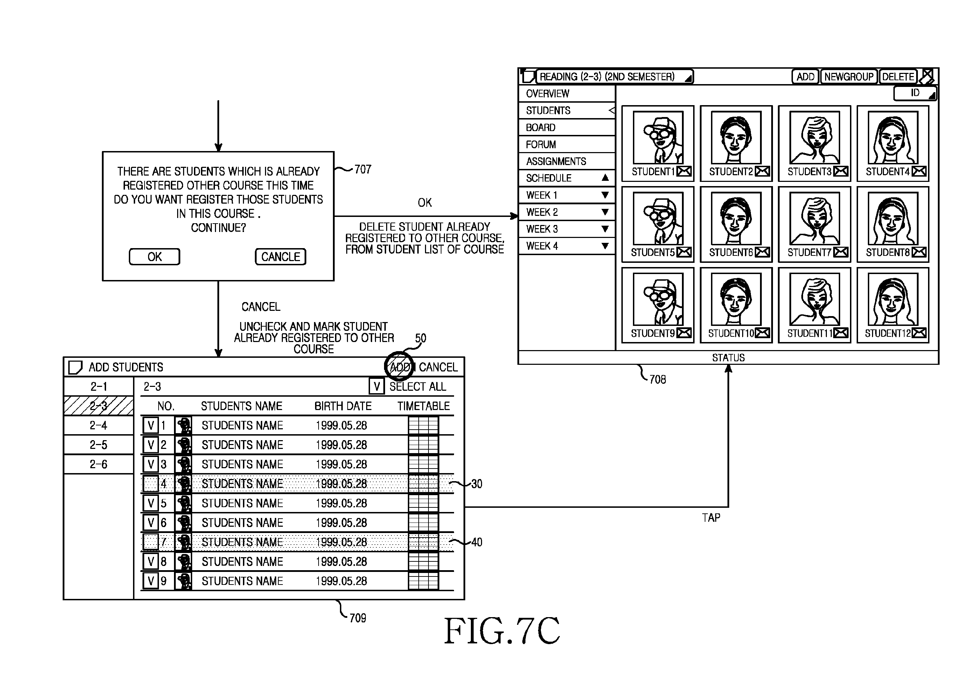

Here, when a specific student is selected (10) in a screen 701 or 702, information about the selected student may be displayed (704). For example, a student name, a student number, a year, a gender, class information of a student, an attendance / late / leaving-early status, a birthday, a phone number, an e-mail address, a residence address, a contact of a student parent and the like may be displayed. Further, a grade history of a student, a prize/demerit history, an attendance history and the like may be inquired. FIGS. 7B and 7C illustrate user interfaces registering students to a created course.

In a case where there is no student registered to an initially created course (704), when 'Add' 10 is selected for student addition, a student list by class may be displayed (705). For example, when a student list of the third class of the second year is selected, students of the third class of the second year may be displayed. Here, when 'select all' 20 is selected, all students of the third class of the second year may be selected. That is, when 'select all' 20 is selected, check boxes of the students of the third class of the second year may be changed into a checked status (706).

If there are students already registered to other course at a corresponding class hour among the selected students, a popup window inquiring whether to register the registered students may be displayed (707).

Here, if 'OK' is selected, the students registered to the other course may be canceled from previous registration and registered to a current course (708).

Here, if 'Cancel' is selected, the students already registered to the other course are canceled from selection for current registration (709). For example, when the fourth student 30 and the seventh student 40 have been already registered to other course, check boxes of the fourth student 30 and the seventh student 40 may be changed into a cancel status. After that, when 'Add' 50 is selected, students of a corresponding class excepting the students (i.e., the fourth student 30 and the seventh student 40) already registered to the other course may be registered to the 'Reading' course of the second semester of the third year.

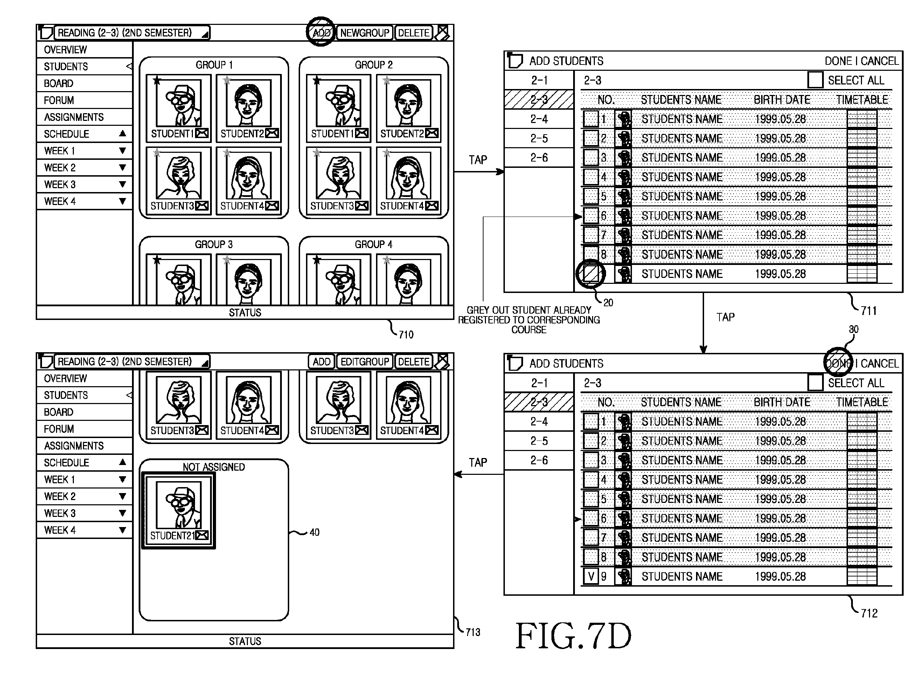

In another exemplary embodiment, an example of adding students when there is a group of students previously registered to a corresponding course is described with reference to FIG. 7D.

In a case where a group is designated, when 'Add' 10 is selected (710), a student list of the third class of the second year may be displayed. At this time, a student list of other class may be selected. Among the selected student list of the class, students previously registered to other course may be dimmed (711). When non-dimmed students excepting the dimmed students, i.e., students not registered to other course at a corresponding class hour are selected (20), check boxes of the selected students are activated and selected (712). After that, if 'Done' 30 is selected, the selected students may be registered to a corresponding course while being displayed in a status 40 of no group designation (713).

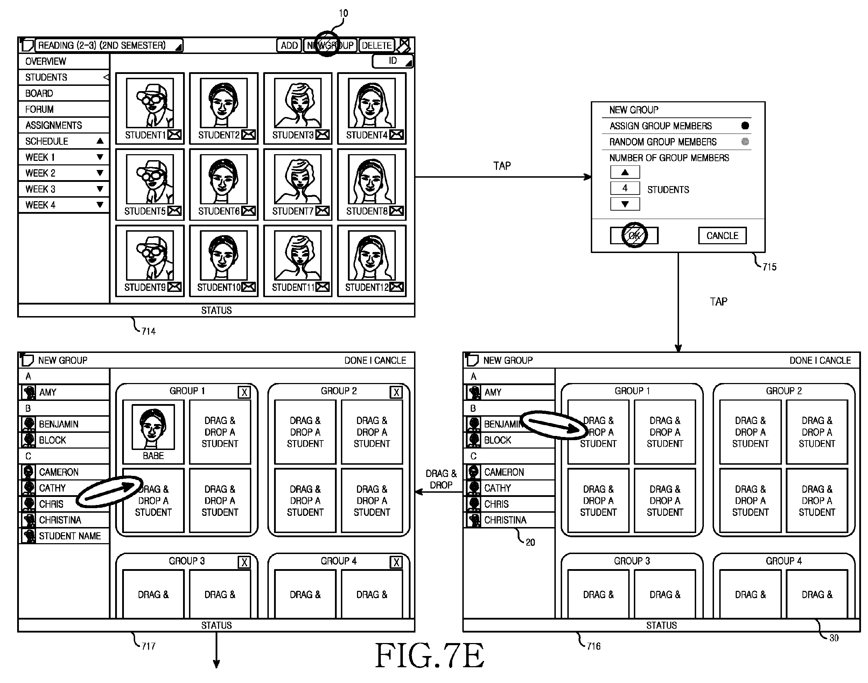

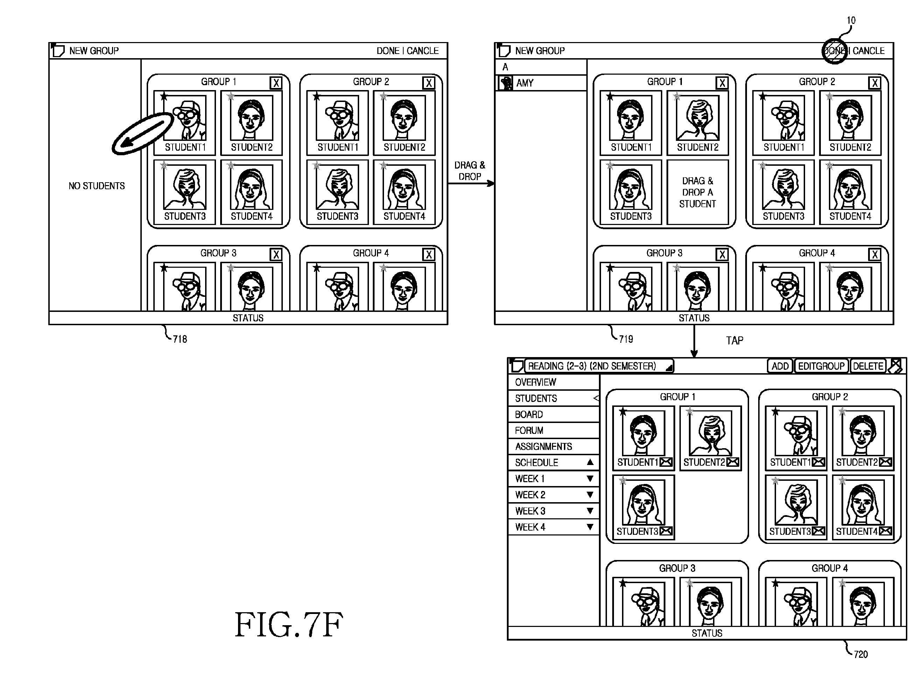

In another exemplary embodiment, an example of designating a group when a student is registered to a corresponding course but has no group designation is described with reference to FIGS. 7E and 7F.

If there is no group designation, upon group designation, 'New group' 10 is selected (714). At this time, a window inquiring how many students are to be included by group is displayed (715). In a case of setting four students by group, '4' is selected and, if 'OK' is selected, a plurality of groups may be divided and displayed (716). At this time, a student list registered to a corresponding course may be displayed in a left region 20 and a plurality of blank group boxes (i.e., 'Group 1' to 'Group N') may be displayed in a right region 30.

Here, students may move to a corresponding group box through a user gesture such as drag-and-drop. For example, if 'Babe' being in a student list is dragged and dropped into a group box of 'Group 1', 'Babe' may be included in 'Group 1'.

Likely, by dragging and dropping each student being in the student list into a corresponding group box, all members may be grouped (717).

If all students being in the student list are dragged and dropped to a corresponding group, all students may not be displayed in the student list of the left region (718). At this time, upon group creation, the first student among group members may be automatically designated as a group leader. According to implementation, a teacher may directly designate a star-shape color indicating that it is the group leader, and designate the group leader.

Inversely, if the teacher device drags and drops students who are in a group to a student list region, the students may be canceled from group registration (719). For example, if the teacher device drags and drops 'student 1' (Amy) of 'Group 1' to the student list region, 'student 1' may be canceled from group registration in 'Group 1'. At this time, 'student 1' (Amy) canceled from registration may be displayed in the student list (719). At this time, when 'Done' 10 is selected, it reflects change matters and may move to a students tab (720). Also, when a group leader is registration canceled from a group, other student of low priority may be automatically changed as the group leader or may be newly designated by the teacher as the group leader.

In the above description, a group is designated by dragging and dropping each student included in a student list but, in another exemplary embodiment, the group may be designated randomly.

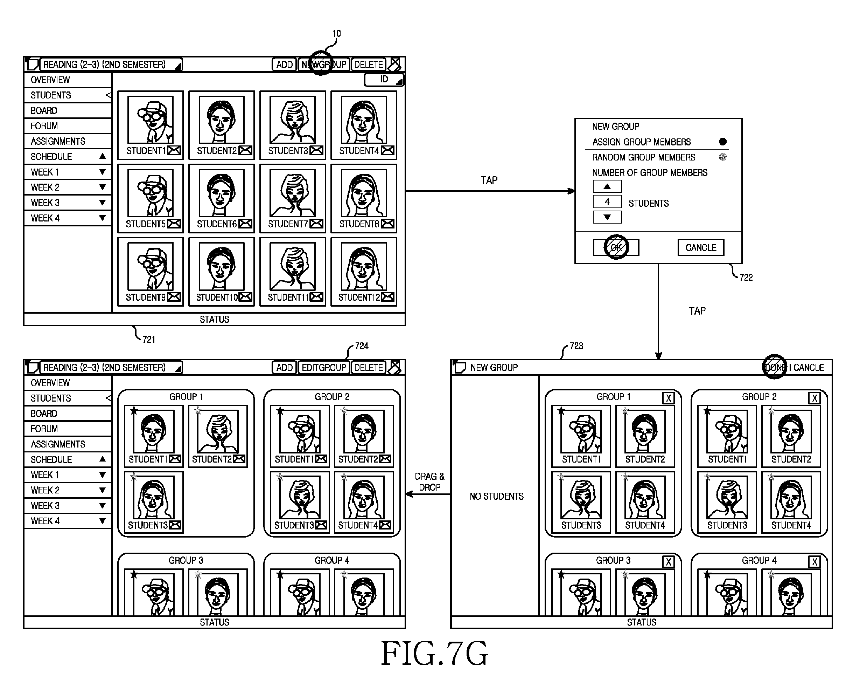

FIG. 7G illustrates a user interface designating a group randomly.

For example, a student list registered to a corresponding course may be displayed (721). When 'New group' 10 is selected for group creation, a window inquiring how many students are to be included by group is displayed (722). Here, after 'Random group members' 20 is selected, four students may be designated by group, and 'OK' may be selected (722). After that, four students being in the student list may be randomly selected by group and a plurality of groups comprised of four students may be created and displayed (723). At this time, upon group creation, the first student among group members may be automatically designated as a group leader. In another exemplary embodiment, a teacher may directly designate a color of a star shape 30 indicating that it is the group leader to designate the group leader. After that, if 'Done' is selected, it may proceed to a students tab of a corresponding course (724).

Next, after the group creation, a user may perform group editing.

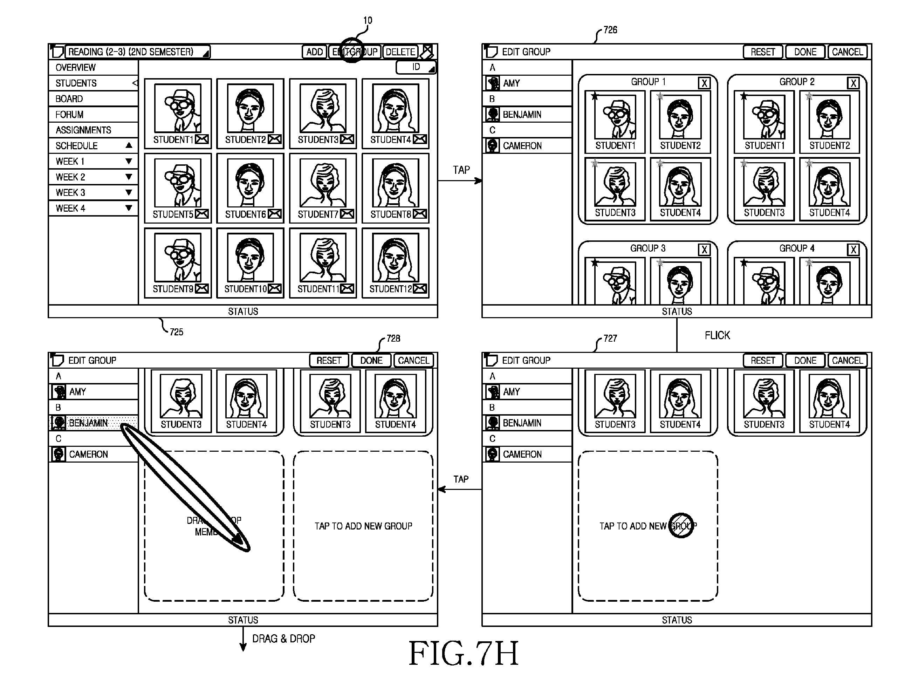

FIGS. 7H to 7L illustrate user interfaces for group editing. For instance, after group creation, students designated as a group are displayed. At this time, when 'Edit group' is selected (725), group editing may start (726). Through a scroll operation or flick gesture 20, it moves to the last group (727).

Following the last group, a 'group box 30 for adding new groups' is displayed. When 'group box 30 for adding new groups' is selected, a new group may be added (727).

For example, when four students are included by group, six groups are designated, and remnant students are three, a user may add a new group 'Group 7' and then, drag and drop and include one student 'Benjamin' among the remnant three students in 'Group 7' (728, 729). After that, if 'Done' is selected, it may proceed to a students tab of a corresponding course (730). At this time, the students not designated as the group may be displayed as 'Not assigned'.

Accordingly, four students are included in each of final 'Group 1' to 'Group 6', and only 'Benjamin' student is included in 'Group 7' 40, and the students not assigned to the group are bundled to 'Not assigned' 50 (731).

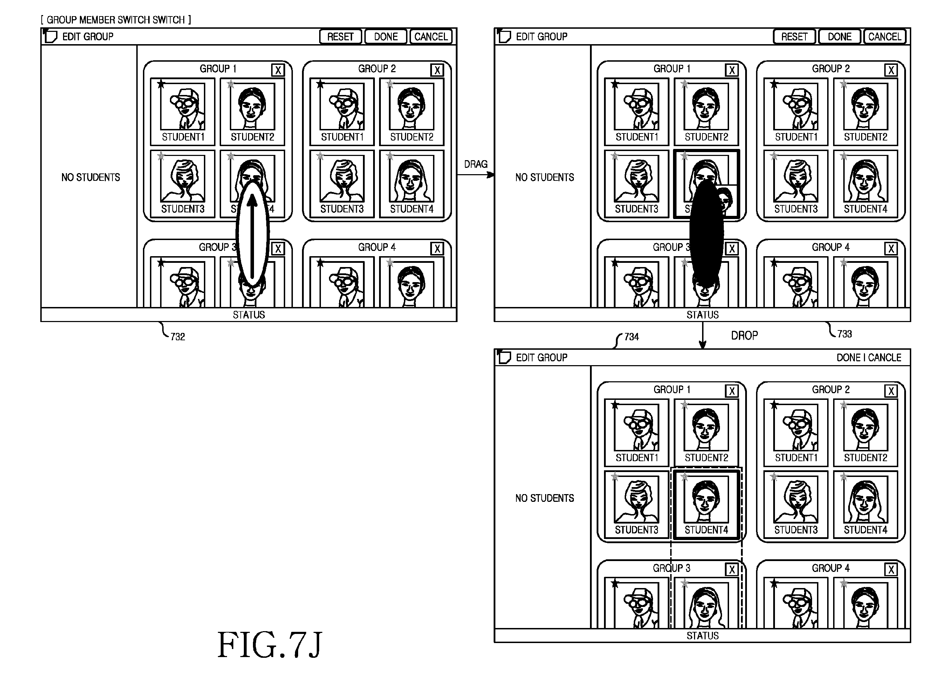

Also, in a group editing mode, a user may switch members between groups. For example, as in a screen 732 of FIG. 7J, when switching 'student 4' of 'Group 1' and 'student 2' of 'Group 3', the user may drag and move 'student 2' of 'Group 3' to a location of 'student 4' of 'Group 1' (733). 'Student 2' of 'Group 3' may be dragged and dropped in an icon shape form (733). When 'student 2' of 'Group 3' is dropped in the location of 'student 4' of 'Group 1', 'student 4' of 'Group 1' may move to a location of 'student 2' of 'Group 3', and 'student 2' of 'Group 3' may move to the location of 'student 4' of 'Group 1' (734).

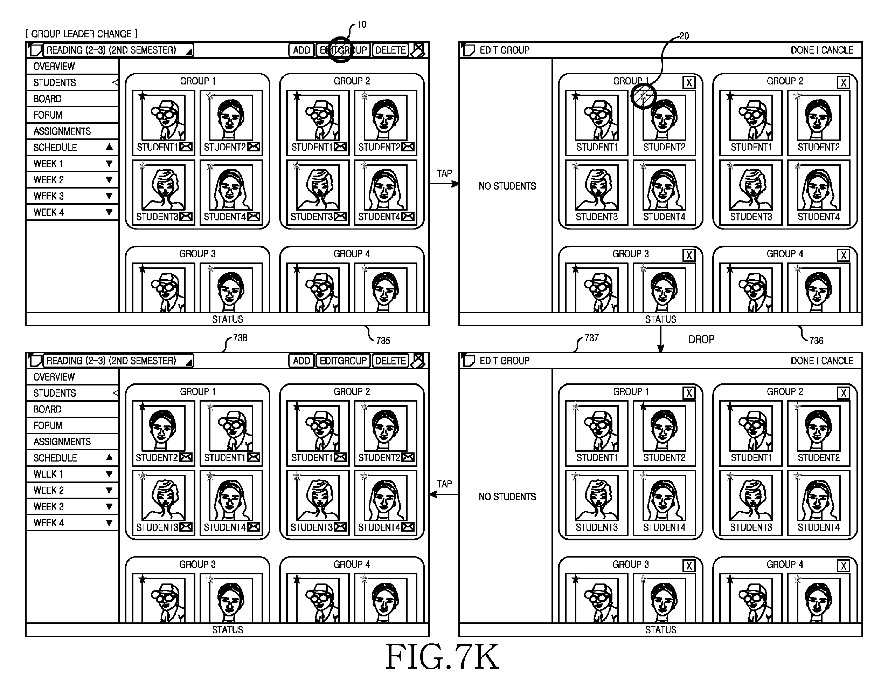

Also, as in a screen 735 of FIG. 7K, in a group editing mode, the user may change a group leader of a group. For example, to change the group leader of the group, the user selects 'Edit group' 10 in a students tab of a corresponding course (735). When the user intends to change the group leader from 'student 1' of 'Group 1' (i.e., a current group leader) to 'student 2' of 'Group 1', the user may activate an indicator 20 of a star-shape form corresponding to 'student 2' of 'Group 1' to change color (736). Through the color of the indicator 20, it may be distinguished whether a student is a group leader or a group member. That is, the indicator color of the remnant group members excepting the group leader is the same as each other.

At this time, a star-shape color of 'student 1' of 'Group 1' changes from yellow to grey, and a star-shape color of 'student 2' of 'Group 1' changes from grey to yellow (737). After that, if 'Done' is selected, it may proceed to a students tab of a corresponding course (738). At this time, 'student 2' of 'Group 1' may be moved to a location of 'student 1' of 'Group 1'. That is, the first member of a group may become a group leader.

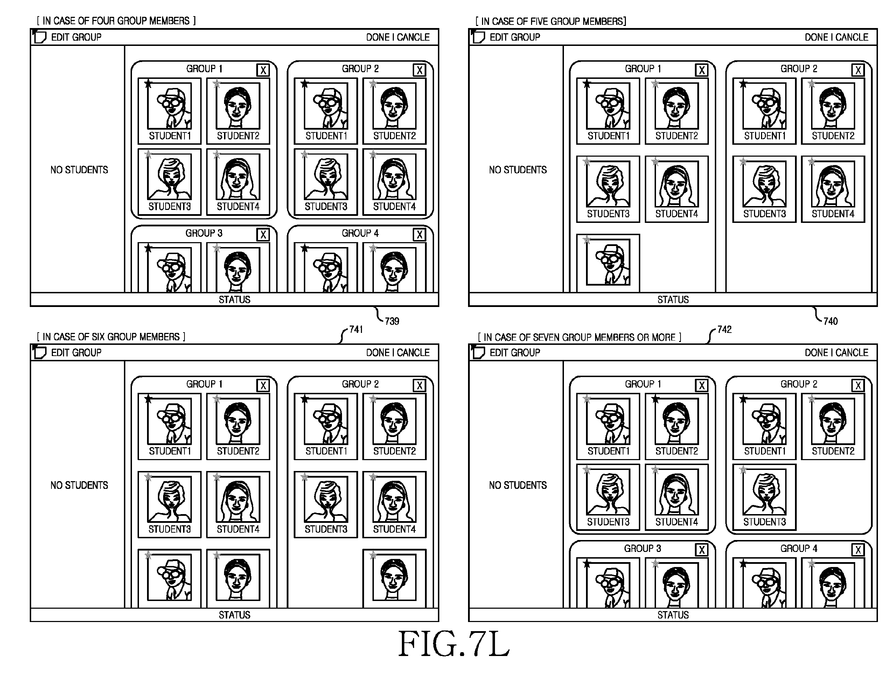

As in FIG. 7L, the number of group members may be determined diversely. For example, four students may be bundled by group (739), or five students may be bundled by group (740), or six students may be bundled by group (741), or seven students may be bundled by group (742).

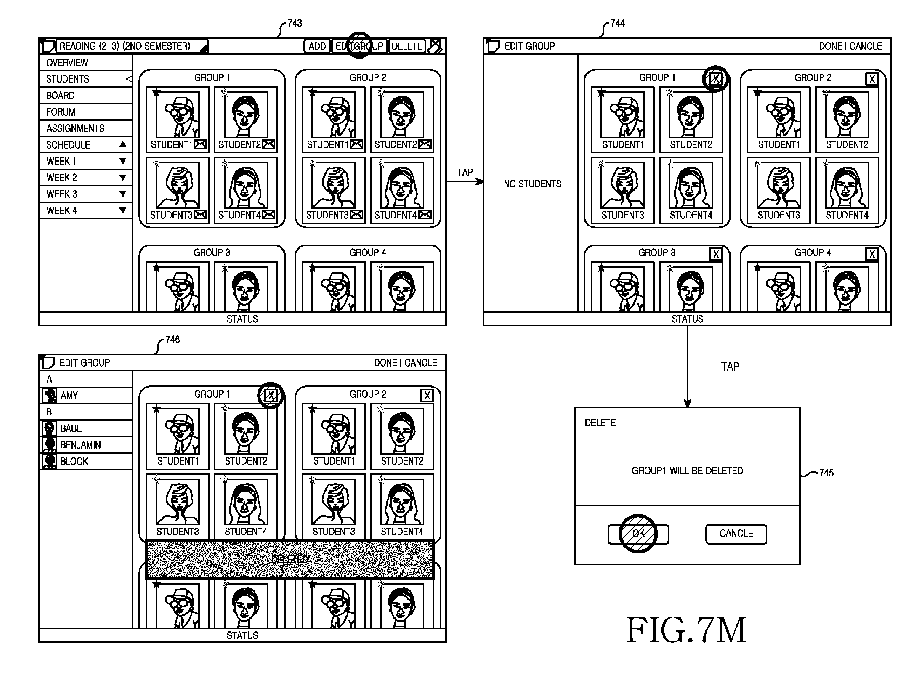

Also, as in FIG. 7M, in a group editing mode, a group may be selectively deleted. For example, if a user selects 'Edit group' 10 in a students tab of a corresponding course (743) and selects an instruction corresponding to deletion (744) to delete a corresponding group, a window inquiring whether to delete the selected group is displayed (745). Here, if 'OK' is selected, 'Group 1' is deleted and students being in 'Group 1' are moved to a student list region (746). For example, 'Amy', 'Babe', 'Benjamin', and 'Block' registered to 'Group 1' may be canceled from registration and displayed in a student list.

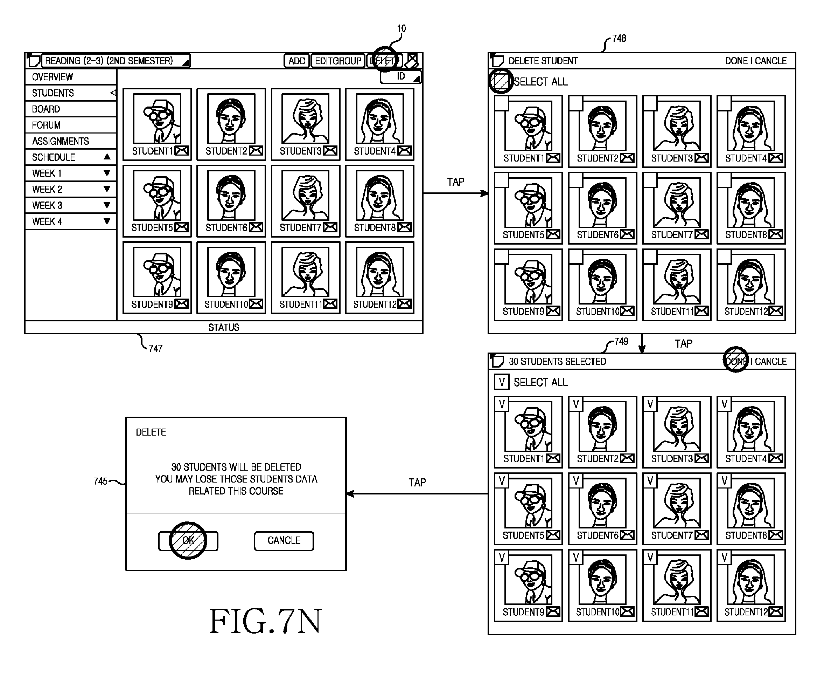

Meanwhile, as in FIG. 7N, a user may select 'Delete' 10 in a students tab of a corresponding course (747) and selectively delete all or some of the students registered to the corresponding course (748). If the user selects the all students registered to the corresponding course and then selects 'Done' (749), a window inquiring whether to delete students who listen to a corresponding course may be displayed (750). Here, if 'OK' is selected, a deletion process is performed and, after a constant time lapses, it returns to the students tab of the corresponding course.

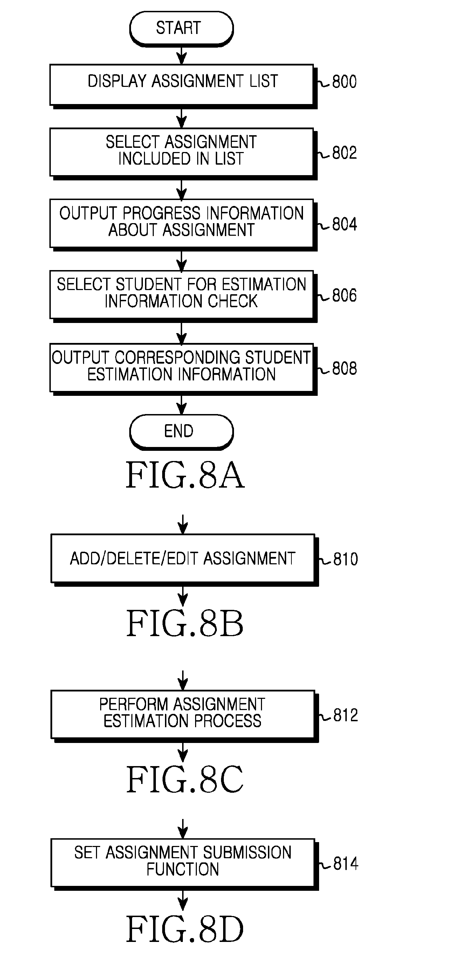

FIGS. 8A to 8D are flowcharts illustrating an operation for assignment management according to an exemplary embodiment of the present invention.

Referring to FIGS. 8A to 8D, in step 800, a teacher device displays an assignments list and, in step 802, the teacher device selects a corresponding assignment from the assignments list.

In step 804, the teacher device outputs progress information about the assignment, in step 806 the teacher device selects a student for estimation information determination and, in step 808, the teacher device outputs corresponding student estimation information.

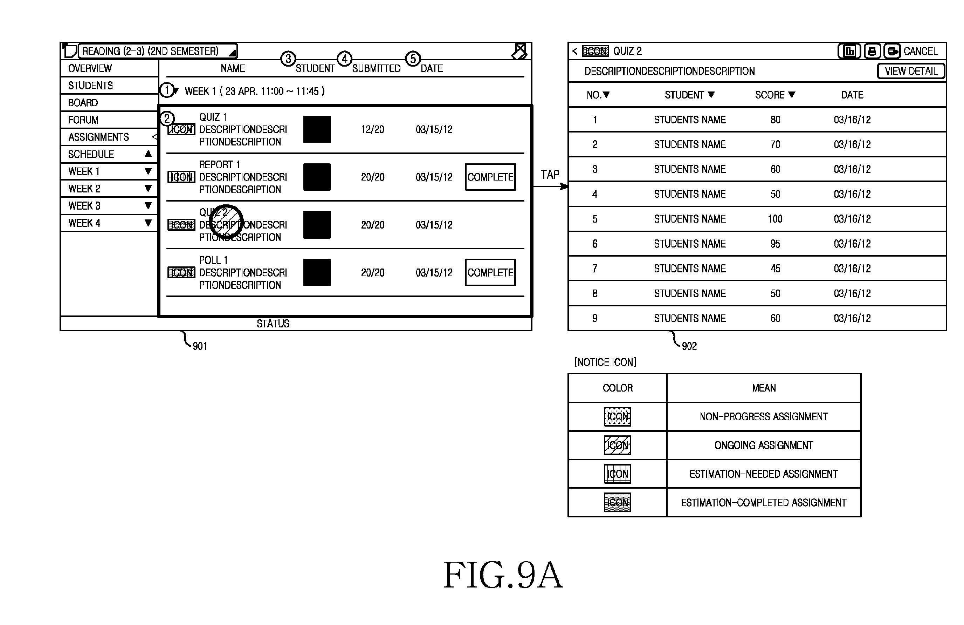

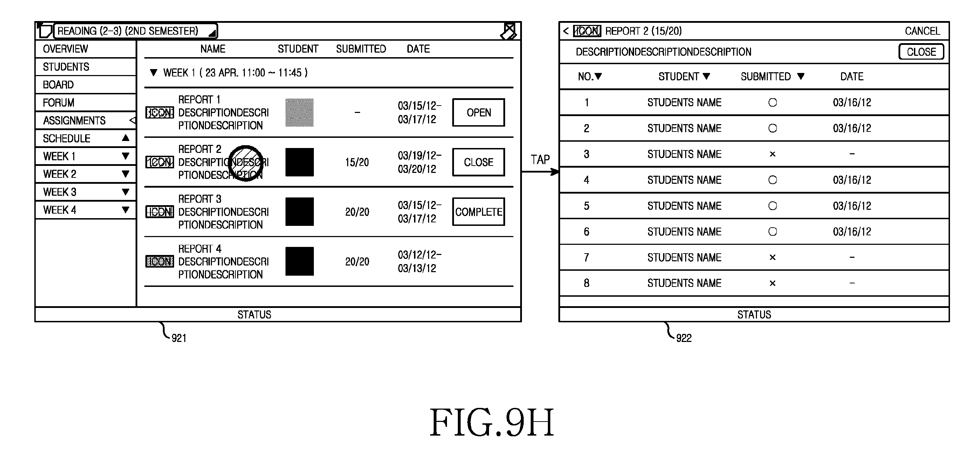

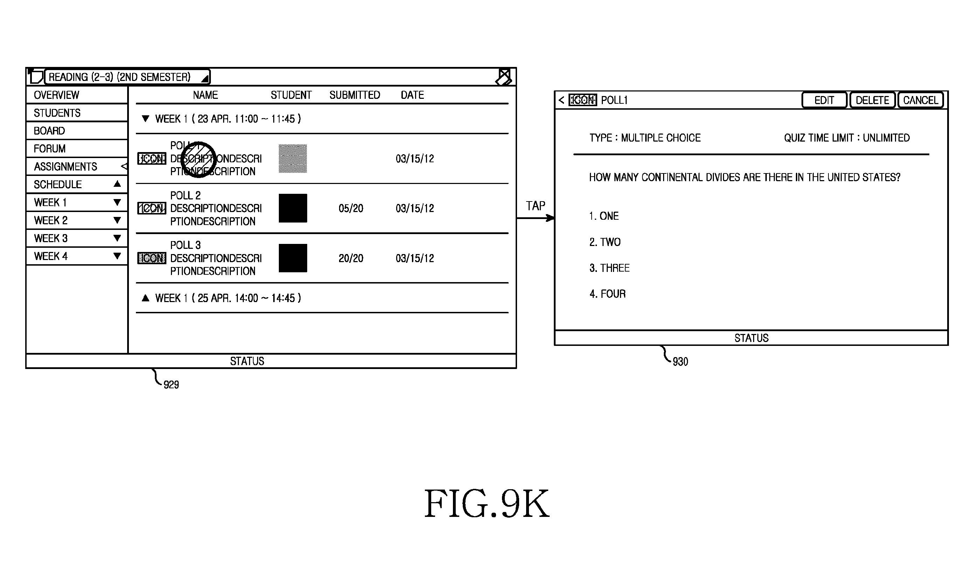

Meanwhile, the teacher device may add/delete/edit the assignment (step 810). Also, the teacher device may perform an estimation process for the ongoing assignment (step 812). The teacher device may set an assignment submission function (step 814). For example, a teacher may correct the assignment submitted by a student through a text, a pen gesture and the like. Corrected data is synchronized with a student assignment and is automatically stored and managed in a learning management system. A detailed description of assignment management in the teacher device is made with reference to FIGS. 9A to 9M below.

FIGS. 9A to 9M are diagrams illustrating user interfaces for assignment management according to an exemplary embodiment of the present invention.

FIG. 9A illustrates an assignments tab screen 901 of a specific created course. Here, 'Assignments' are created in a course unit, and a submitted report, a quiz, a poll and the like may be displayed in a list form. For example, a report, a quiz, a poll and the like for a 'reading' subject of the second semester of the third year are displayed (901). The assignments list may be made in a week unit.

For example, a 'reading' subject is distinguished in Week 1, Week 2,..., Week N and thus, assignments may be assigned to students every week (1). 'assignment type icon' 2 may be provided by assignment progress situation. For example, a progress status may be displayed such as a non-progress assignment, an ongoing assignment, an estimation-needed assignment, an estimation-completed assignment and the like. Here, 'Student view' 3 represents whether a 'view' function of a student is disabled or enabled, and 'Submitted' 4 represents the number of students submitting assignments, and 'Date' 5 represents a date executing assignments.

If any one assignment is selected from the assignments list (e.g., 'Quiz 2'), information about the selected assignment may be displayed (902). For example, students solving quizzes corresponding to 'Quiz 2', quiz scores of the students, and a date solving the quizzes may be displayed. Here, display information may be varied depending on a progress status of the selected assignment.

If any one assignment selected from the assignments list is before test, questions corresponding to the assignment may be displayed. An access authority for an assignment before test (i.e., before students solve questions) may be limited to students. That is, a student device may not view information about the assignment before test.

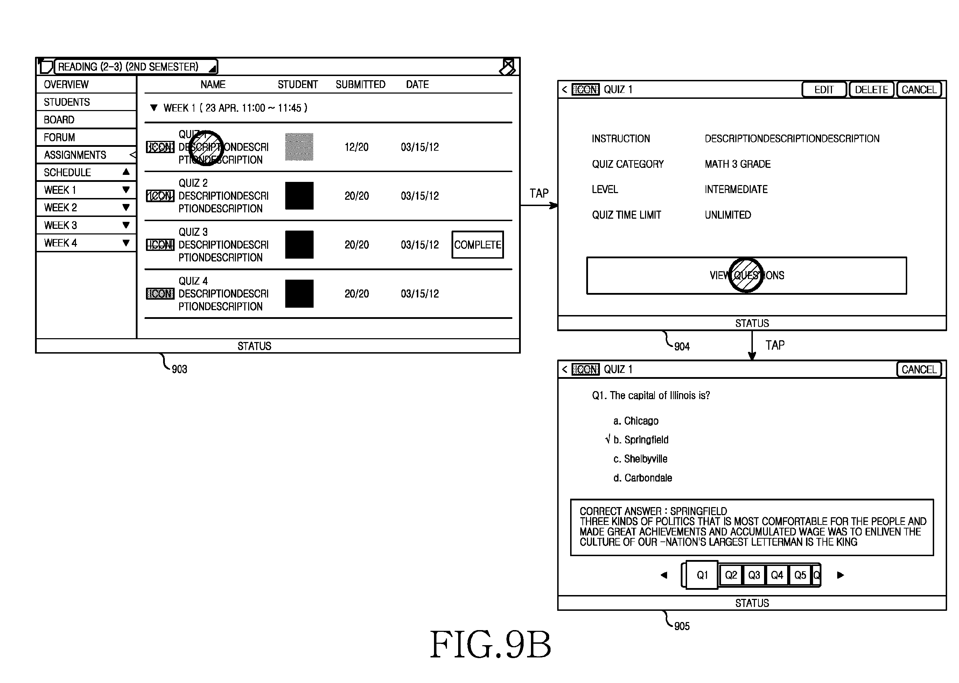

For example, when Quiz 1 before the test is selected from an assignments list (903) as in FIG. 9B, simple information is displayed in Quiz 1 (904) and, questions corresponding to Quiz 1 may be viewed (905). For example, information may include at least one of a description of a corresponding quiz, a quiz category, a difficulty level, quiz time limitation or non-limitation and the like.

If any one assignment selected from the assignments list is being tested (i.e., when students are solving questions), information about students who have submitted assignments and students who do not have submitted may be displayed. An access authority for an assignment that is being tested may not be limited to students. That is, the student device may view information about the assignment that is being tested.

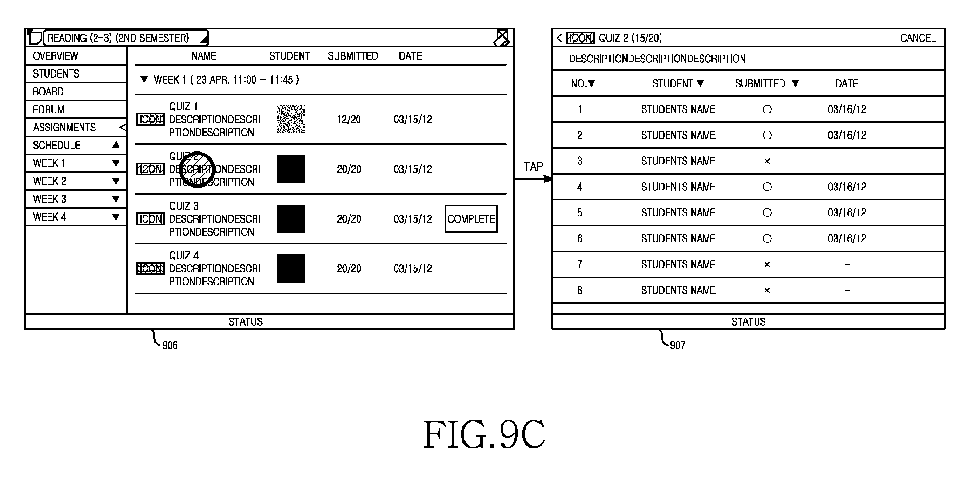

For example, when Quiz 2 that is being tested is selected from an assignments list (906) as in FIG. 9C, students (O) who have submitted Quiz 2 and students (X) not submitting may be marked and displayed (907).

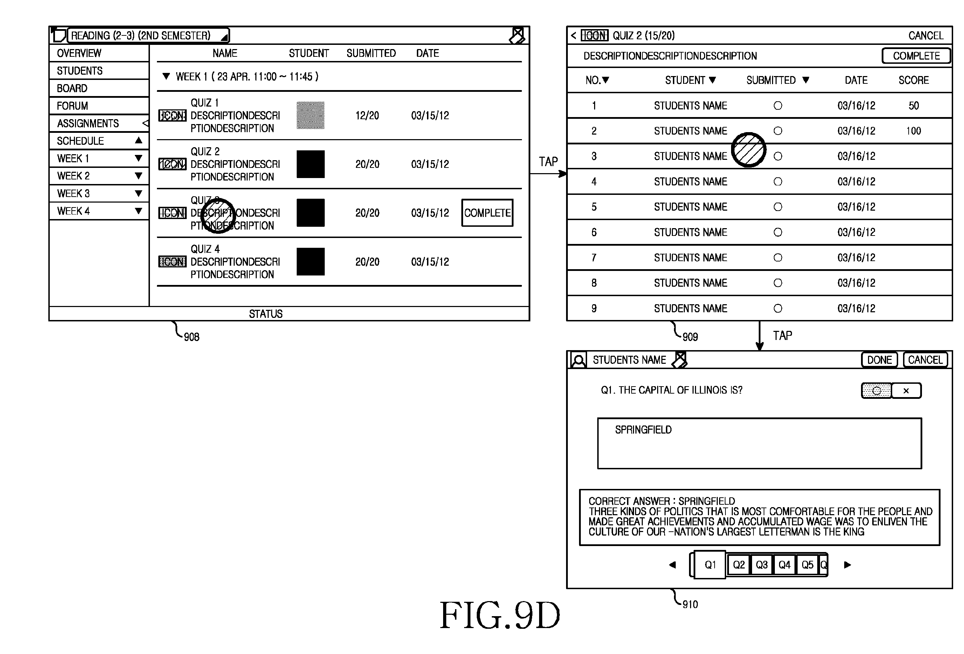

When any one assignment selected from the assignments list is being estimated as in FIG. 9D, an estimation score may be displayed for some students completing estimation on an assignment. An access authority for an assignment that is being estimated may be limited to all or some students. That is, a student device may view an estimation score for its own assignment that is being estimated or estimation scores for assignments of other students.

For example, when Quiz 3 that is being estimated is selected from the assignments list (908), a teacher device may display an estimation score of Quiz 3 for an estimation-completed student (909). The teacher device may select a corresponding student and determine an answer of Quiz 3 submitted by the corresponding student (910).

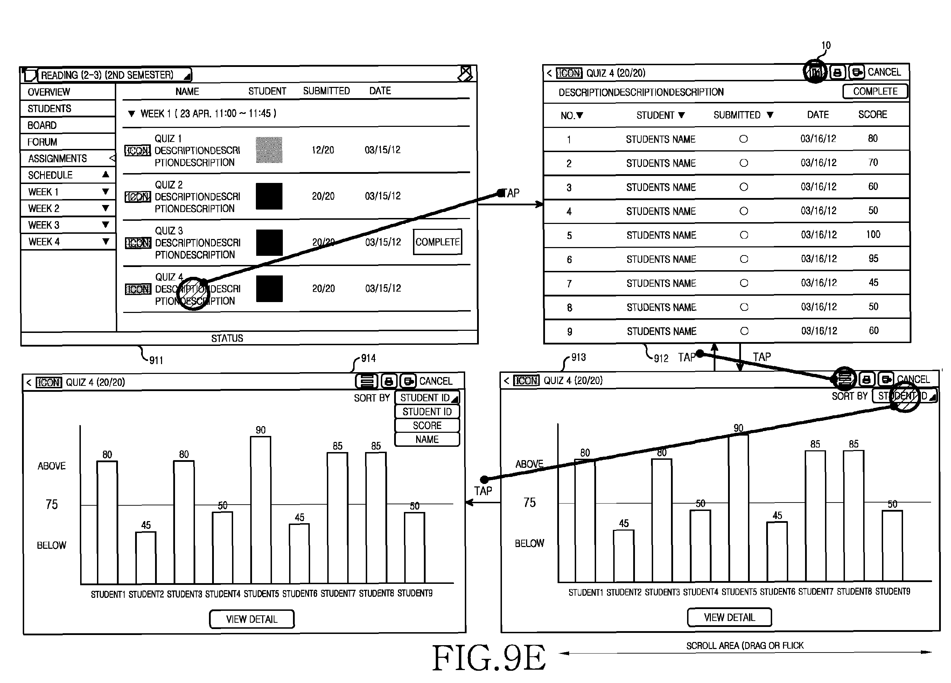

If any one assignment selected from the assignments list is in a completion status as in FIG. 9E, estimation scores for all students completing estimation on the assignments may be displayed. An access authority for the assignment that is being tested may be limited to all or some students. That is, a student device may view an estimation score for its own assignment that is being estimated or estimation scores for assignments of other students.

For example, when Quiz 4 that is in an estimation completion status is selected from the assignments list (911), the teacher device may display an estimation score of Quiz 4 for all students (912). The teacher device may display with a graph the estimation scores for all students by using a graph toggle button 10. Inversely, a screen 913 may return to the screen 912. Meanwhile, the graph may be sorted and marked with a student ID, an estimation score, a student name and the like (914).

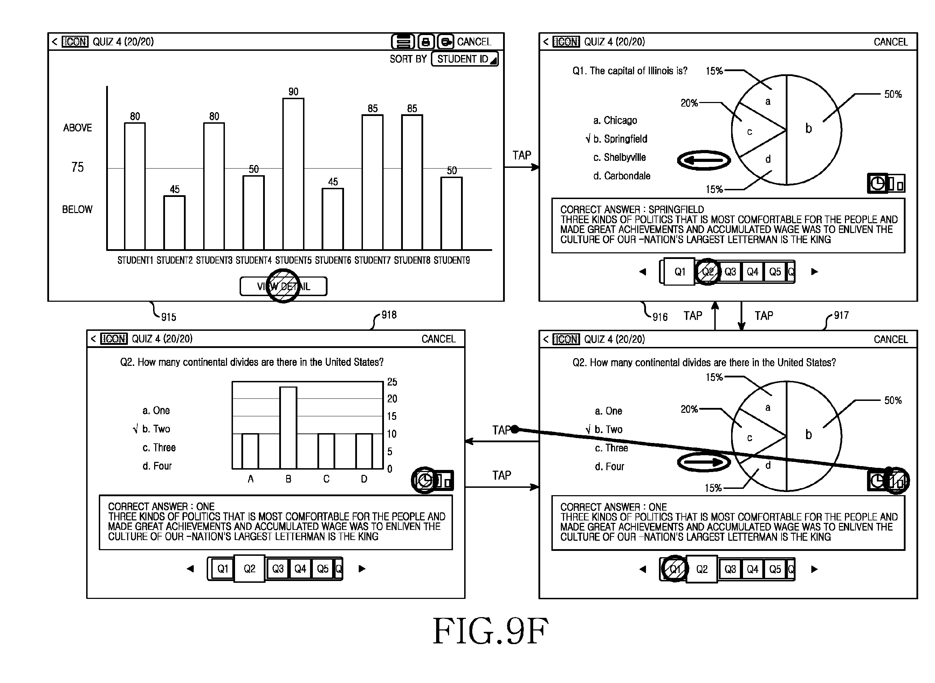

When a detail result 'View detail' is selected for estimation of Quiz 4 (915) as in FIG. 9F, the teacher device may display a correct answer rate and an erroneous answer rate with a circle graph every questions of Quiz 4 (916, 917). That is, the screen 916 represents a correct answer rate and erroneous answer rate for question 1 with a circle graph, and the screen 917 represents a correct answer rate and erroneous answer rate for question 2 with a circle graph. The teacher device may display a correct answer rate and erroneous answer rate for questions by using a first graph toggle button 10 with a bar graph instead of a circle graph (918). Inversely, the bar graph may be changed into the circle graph by using a second graph toggle button 20 and displayed (917).

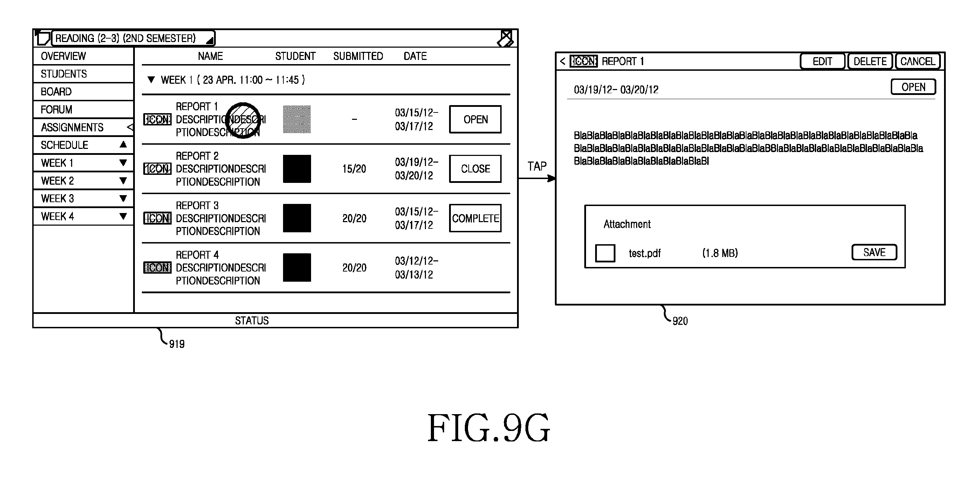

If a report before open is selected from an assignments list as in FIG. 9G, a description of the report may be displayed. Even an attachment file may be provided. An access authority for the report before open (i.e., before the report is open to the students) may be limited to students. That is, a student device may not view information about the report before open.

For example, when 'report 1' before open is selected from an assignments list (919), a description of 'report 1' may be displayed (920). An attachment file corresponding to 'report 1' may be provided.

If a report being opened is selected from the assignments list as in FIG. 9G, information about students submitting reports and students not submitting may be displayed. An access authority for the open report may not be limited to students. That is, a student device may view information about the open report.

For example, when 'report 2' being opened is selected (921), students (O) submitting 'report 2' and students (X) not submitting may be marked and displayed (922).

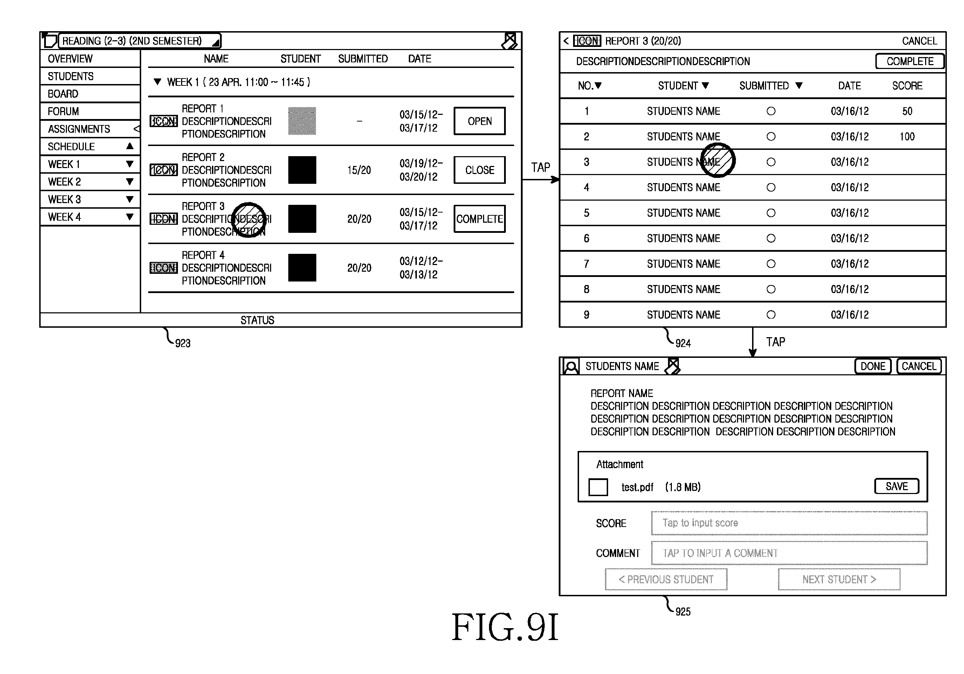

If a report that is being estimated is selected from the assignments list as in FIG. 9I, estimation scores may be displayed for some students having completed estimation. An access authority for a report that is being estimated may be limited to all or some students. That is, a student device may view an estimation score for its own report that is being estimated or estimation scores for reports of other students.

For example, when 'report 3' that is being estimated is selected from the assignments list (923), the teacher device may display an estimation score of 'report 3' for an estimation-completed student (924). The teacher device may select a corresponding student (i.e., an estimation-completed student) and determine a report submitted by a corresponding student, a score, and a comment (925). If the selected student is not estimated, a window inputting a score and a comment is displayed and, after input, 'save' is selected and the input is saved. Further, when it moves to other student, i.e., when a previous student or a next student is selected, a current student may be automatically stored.

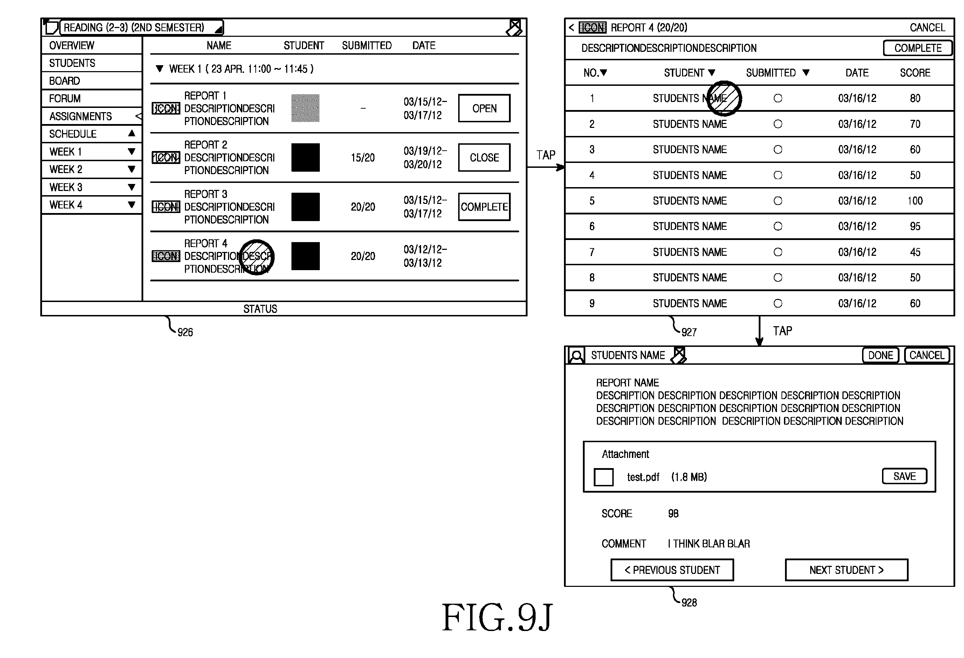

If a report that is in an assignment completion status is selected from the assignments list as in FIG. 9J, a report estimation score may be displayed for all students. An access authority for the report that is in the estimation completion status may be limited to all or some students. That is, a student device may view an estimation score for its own report or estimation scores for reports of other students.

For example, when 'report 4' that is being estimated is selected from the assignments list (926), the teacher device may display an estimation score of 'report 4' for an estimation-completed student (927). The teacher device may select a corresponding student (i.e., an estimation-completed student) and determine a report submitted by a corresponding student, a score, and a comment (928).

If a poll before an assignment among the assignments list is opened is selected as in FIG. 9J, questions corresponding to the poll may be displayed. An access authority for the poll before open may be limited to students. That is, a student device may not view information about the poll before open. For example, when 'Poll 1' before open is selected from the assignments list (929), the student device may view questions corresponding to 'Poll 1' (930).

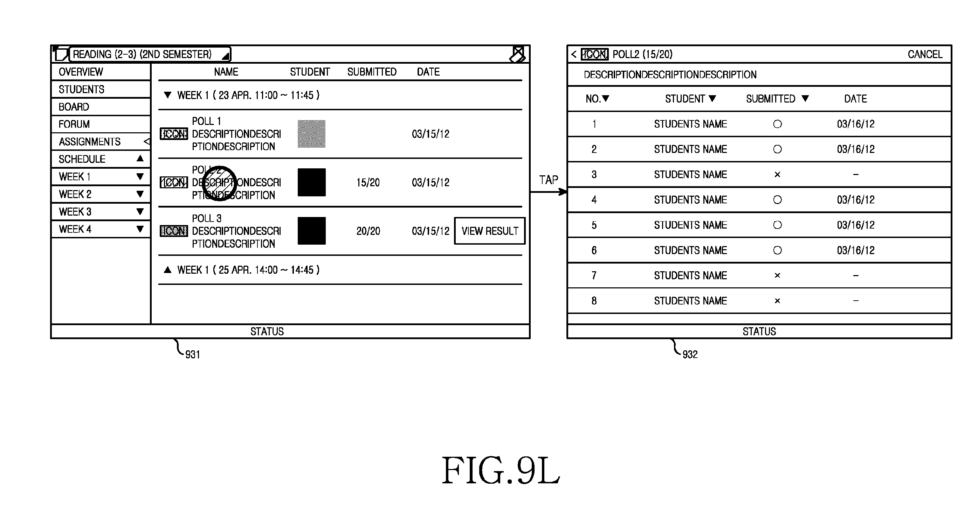

If a poll after an assignment among the assignments list is opened is selected as in FIG. 9L, information about students submitting answers in reply to questions and students not submitting may be displayed. An access authority for the opened poll may not be limited to students. That is, a student device may view information about the opened poll.

For example, when 'Poll 2' that is opened is selected from the assignments list (931), students (O) submitting an answer in reply to the 'Poll 2' and students (X) not submitting may be marked and displayed (932).

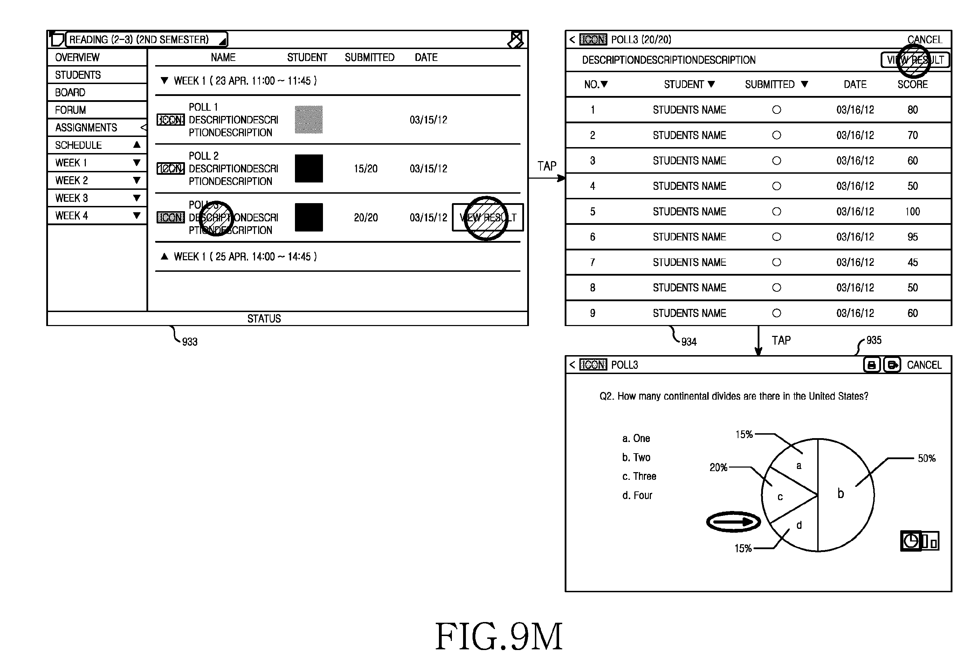

If a poll of a completion status is selected from the assignments list as in FIG. 9M, information about students submitting answers in reply to questions may be displayed. An access authority for the poll of the completion status may be limited to all or some students. That is, a student device may view its own answer submission result that is being estimated or answer submission results of other students.

For example, when 'Poll 3' of a completion status is selected from the assignments list (933), the teacher device may display an answer result to 'Poll 3' of all students or answer submission or non-submission (934). The teacher device may display answer results corresponding to 'Poll 3' submitted by students with a statistic graph (935).

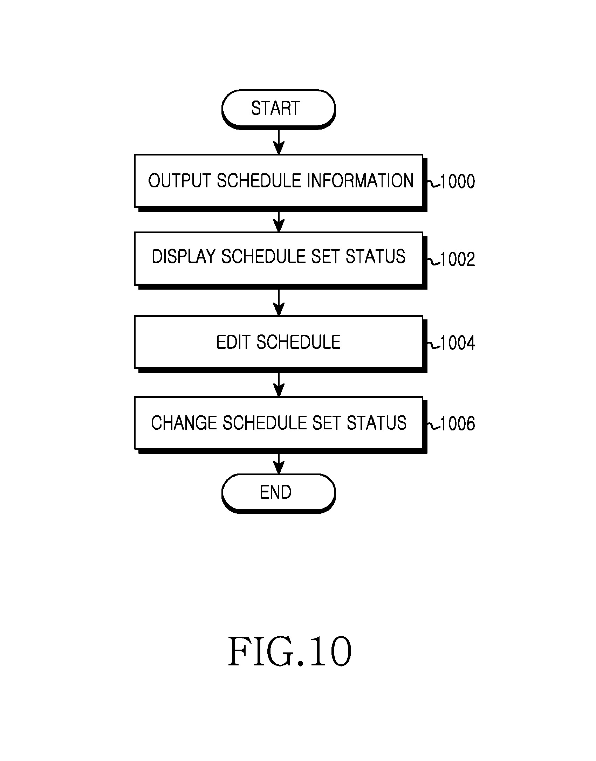

FIG. 10 is a flowchart illustrating an operation for managing a lecture related schedule according to an exemplary embodiment of the present invention.

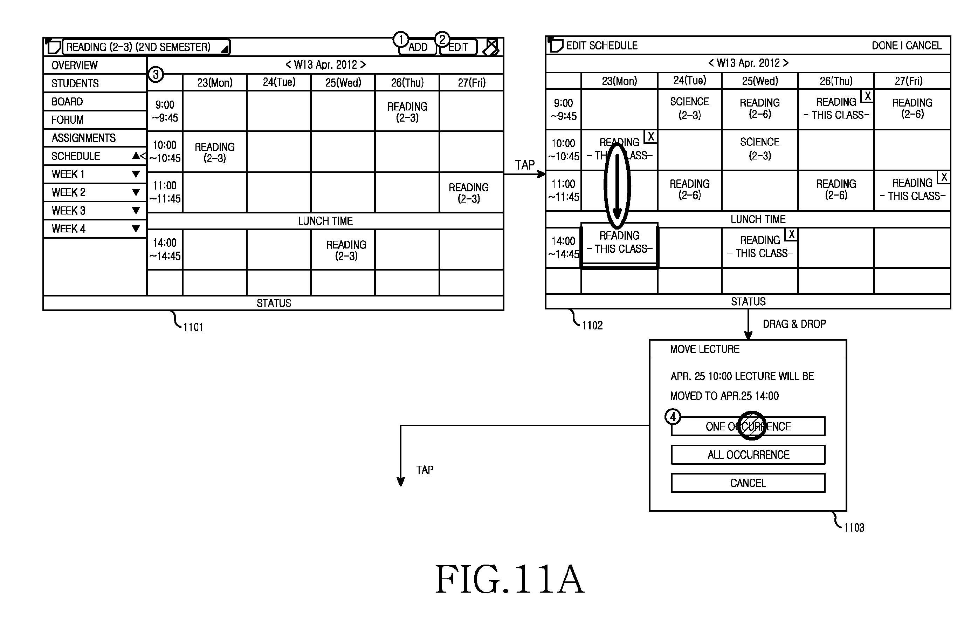

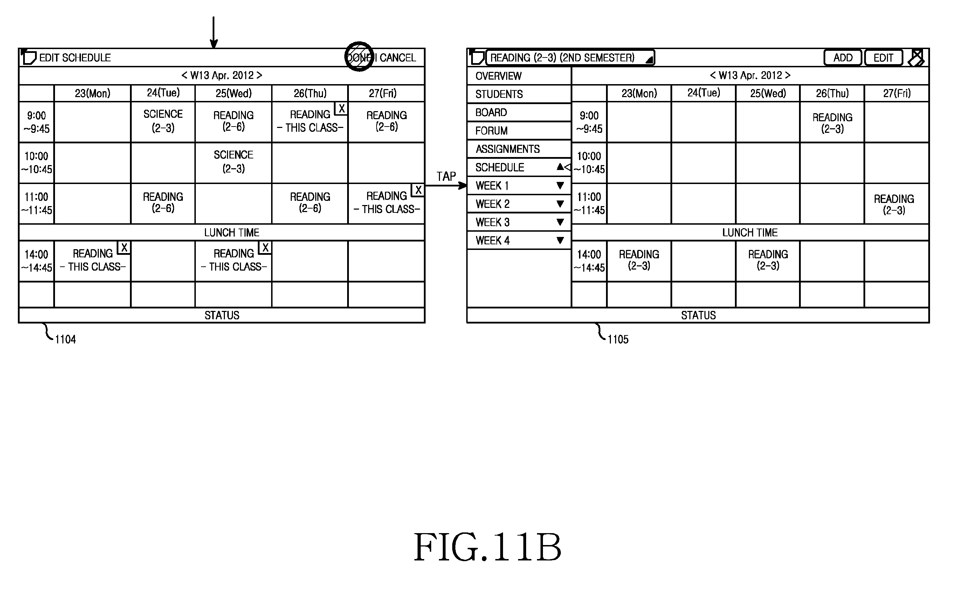

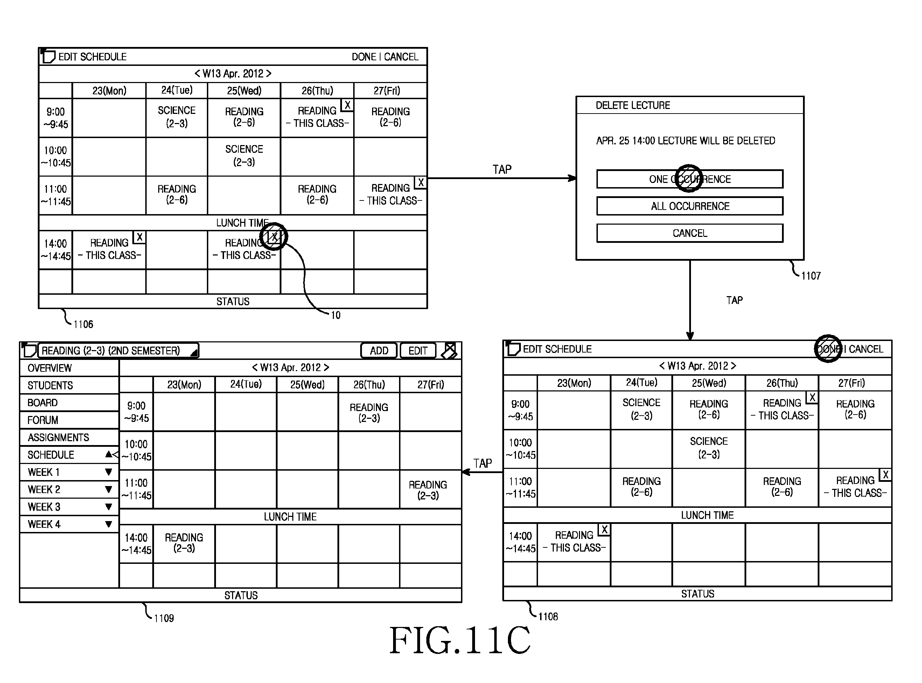

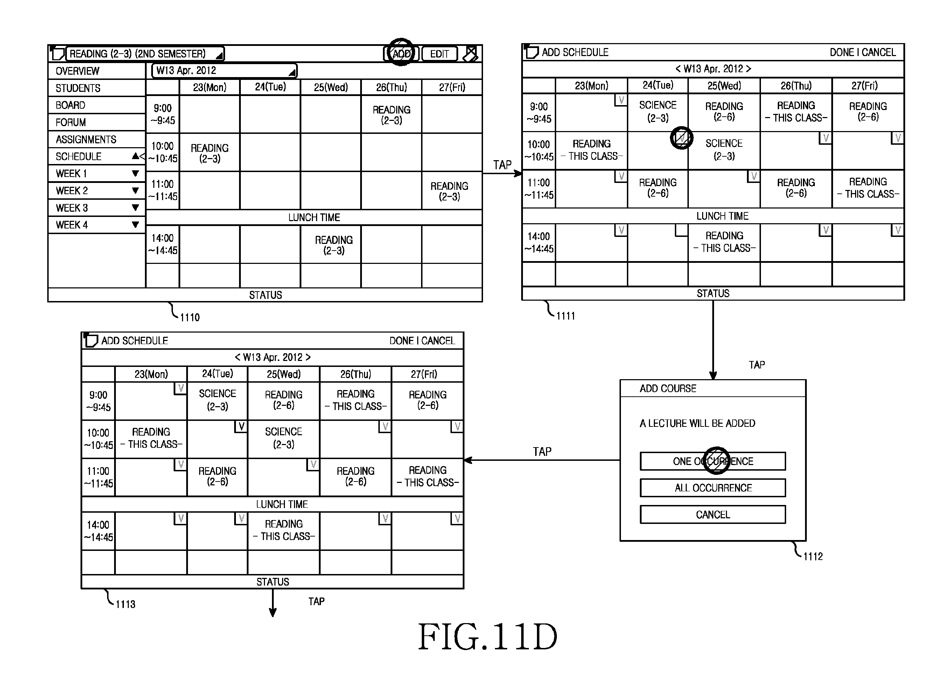

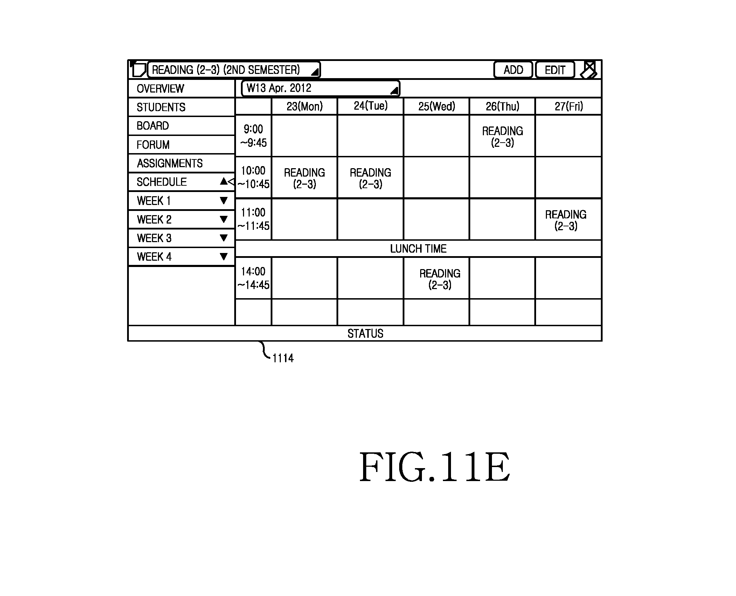

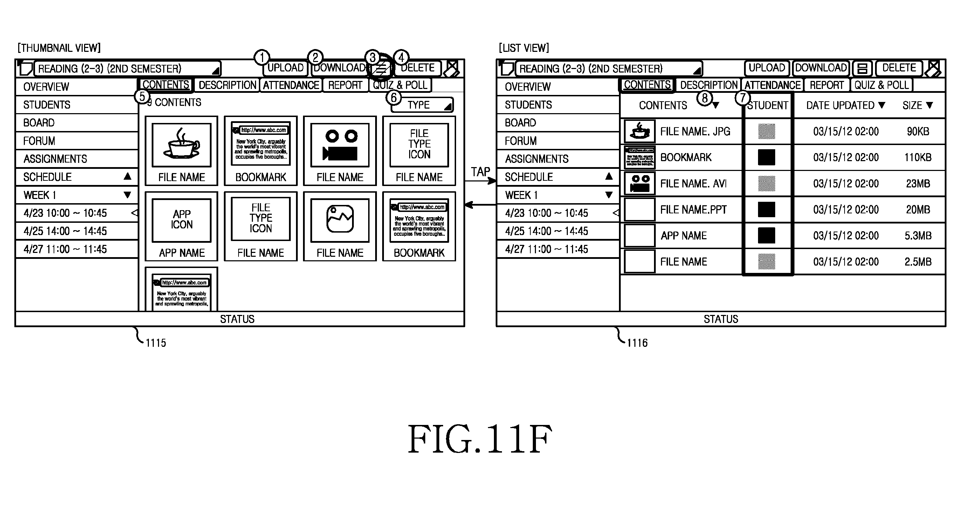

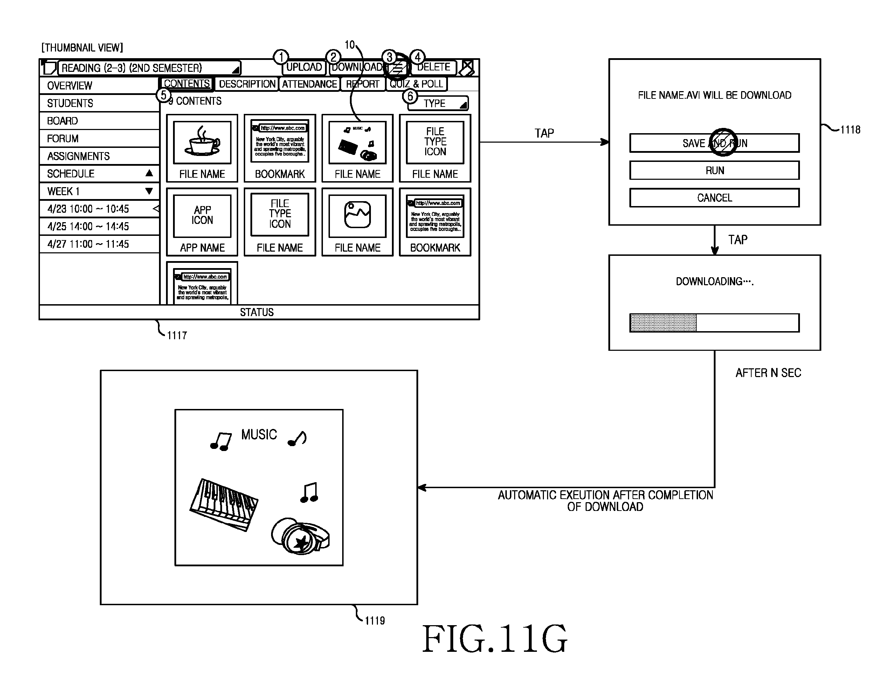

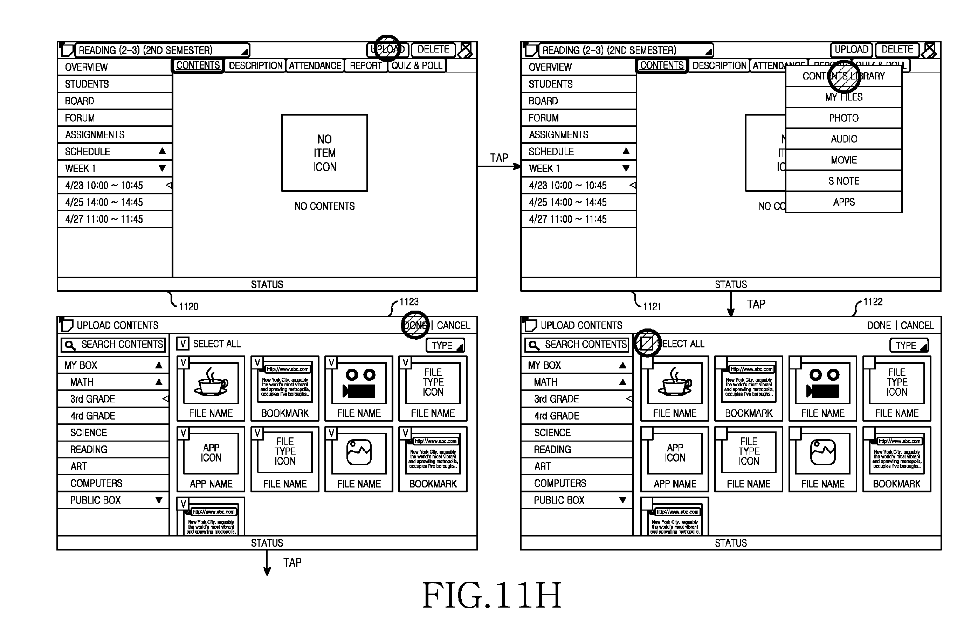

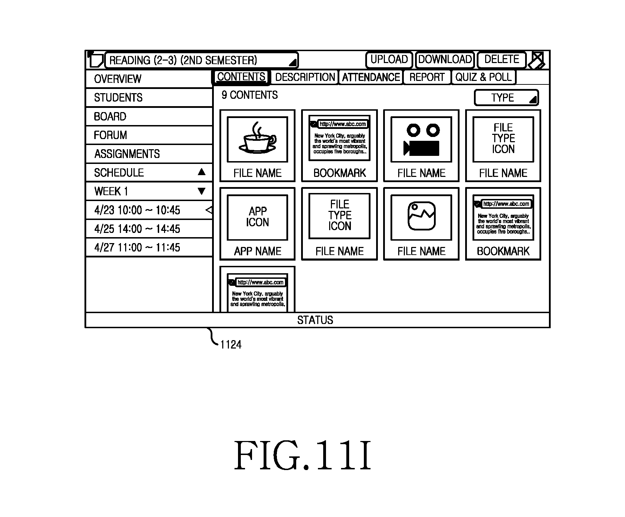

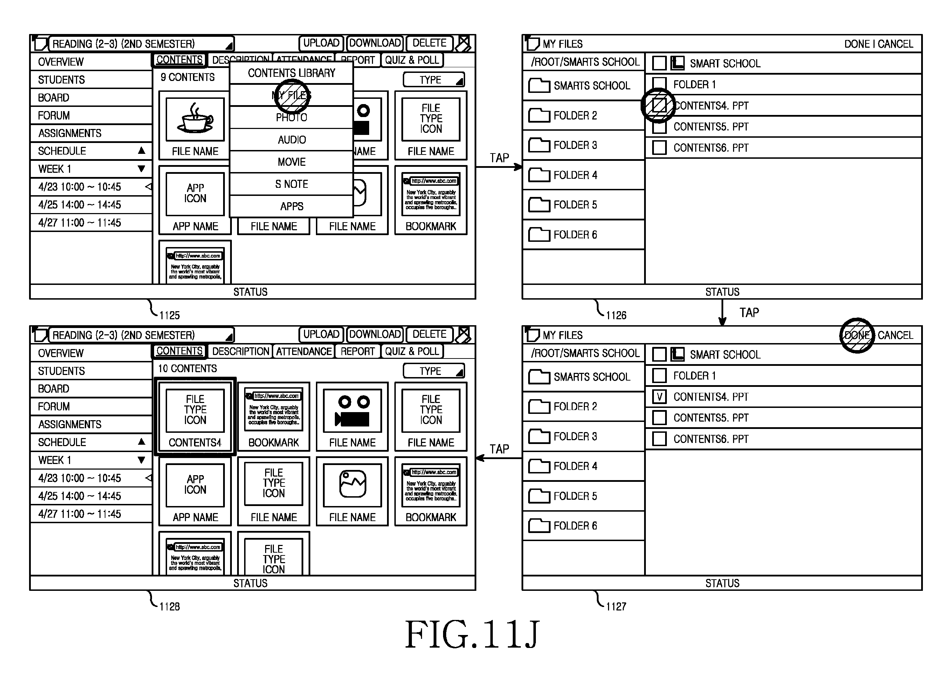

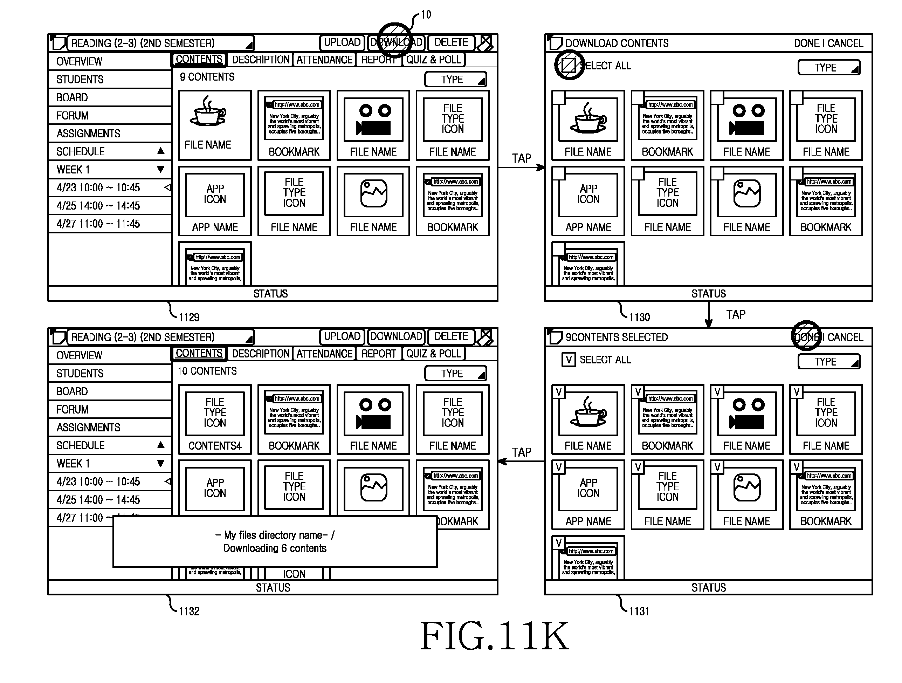

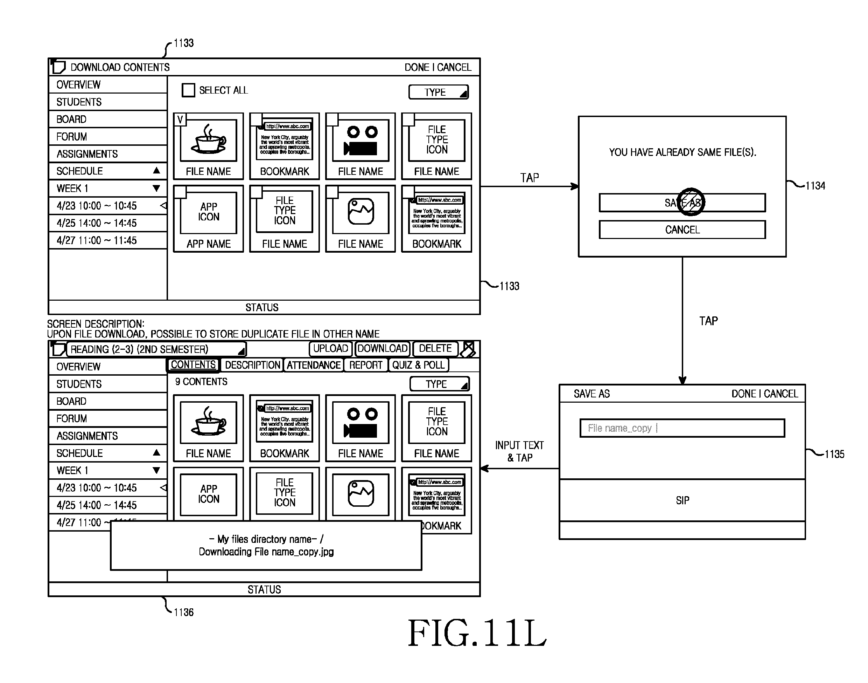

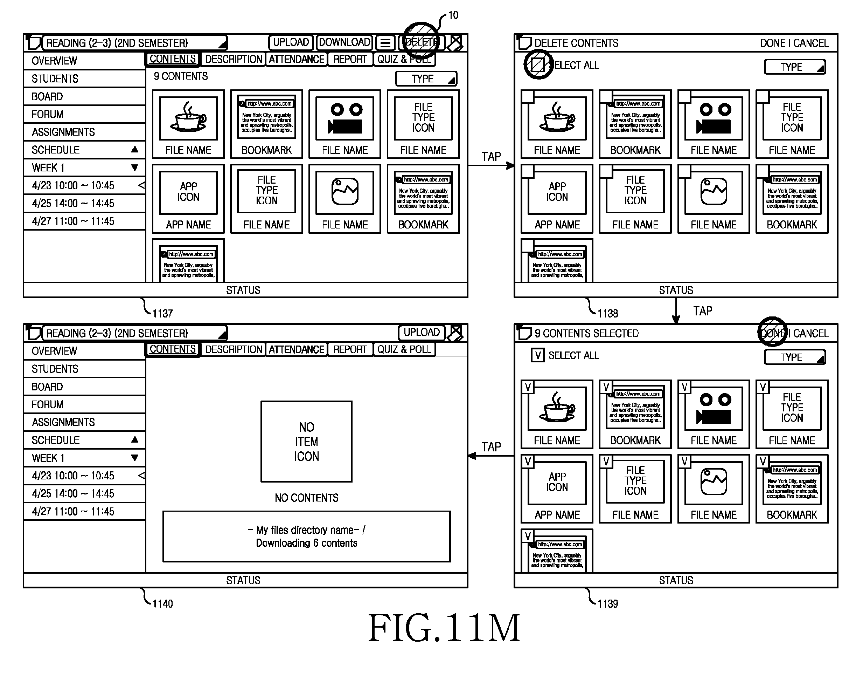

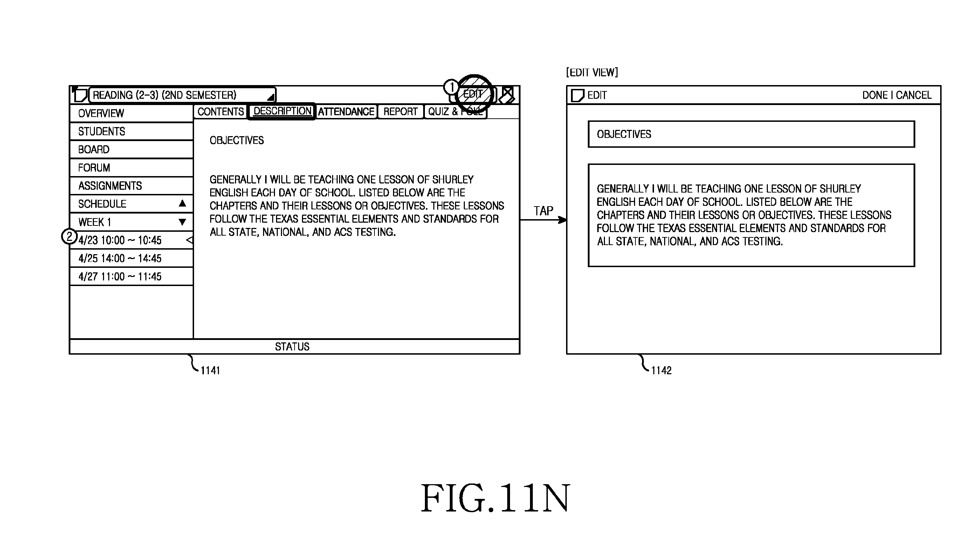

Referring to FIG. 10, in step 1000, a teacher device outputs schedule information capable of determining a corresponding lecture timetable of a teacher. Next, in step 1002, the teacher device displays a schedule setting status. In step 1004, the teacher device edits a lecture schedule (move/delete/add). In step 1006, the teacher device changes the schedule setting status. For example, the teacher device may change a corresponding class time in a schedule step, or download/upload contents related to a corresponding course, or register and use a quiz/report/poll and the like related to the corresponding course. A detailed description of managing the lecture related schedule is made with reference to FIG. 11 below.

FIGS. 11A to 11N are diagrams illustrating user interfaces for managing a timetable edition of a teacher in a Schedule tab of 'My timetable'.

Referring to FIG. 11A, the teacher device may determine a timetable of a corresponding course of a teacher in a schedule within 'My timetable' (1101). A week timetable may be set variously such as Monday to Friday, Monday to Saturday, and the like. The teacher device may add a class hour within the timetable (Add) (1) or may move/delete a class hour (Edit) (2). A timetable region 3 may provide a timetable of a corresponding course. In a timetable edition status (Add, Edit) of a teacher, not only a class hour of a corresponding teacher but also a class hour of other teacher may be displayed.

For example, when changing the second class hour of Monday into the third class hour of the same day Monday, the teacher device may drag and drop the second class hour within the timetable, on the third class hour of Monday (1102). At this time, the teacher device may select whether to change only at a current week or whether to change through all weeks. For example, 'one occurrence 4' is to change only at the current week, and 'All occurrence' may change by applying to the same time zone of each week (1103).

After that, if 'one occurrence' is selected and 'Done' is selected (1104), it applies matters changing the second class hour of Monday into the third class hour and proceeds to an initial Schedule tab of 'My timetable' (1105). At this time, only class hour of a corresponding teacher may be displayed.

Meanwhile, to delete a course of a corresponding class hour (e.g., the third class hour of Wednesday) 10 in a timetable edition status, the corresponding class hour is selected (1106). At this time, the teacher device may select whether to delete only at a current week ('one occurrence') or whether to apply to all weeks and delete ('All occurrence') (1107).

Next, if 'one occurrence' is selected and 'Done' is selected (1108), it applies matters deleting the third class hour of Wednesday and proceeds to an initial Schedule tab of 'My timetable' (1109). At this time, only a class hour of a corresponding teacher may be displayed.

Meanwhile, the teacher device selects 'Add' adding a corresponding course to a class hour (1110), and selects a blank time zone (e.g., the second class hour 10 of Tuesday) (1111). At this time, the teacher device may select whether to add only at a current week ('one occurrence') or whether to apply to all weeks and add ('All occurrence') (1112).

Next, if 'one occurrence' is selected and 'Done' is selected (1113), a course is added to the second class hour of Tuesday and it proceeds to an initial Schedule tab of 'My timetable' (1114). At this time, only a class hour of a corresponding teacher may be displayed.

Also, as in FIG. 11F, there is a menu (Week 1, Week 2,..., Week N) managing class related materials corresponding to a class hour of a corresponding course, as a sub menu of a schedule (1115). That is, contents of lecture materials corresponding to a corresponding class hour of a corresponding day and the like may be registered by a teacher. When contents corresponding to a corresponding class hour of a corresponding day are registered, the contents may be automatically registered to a corresponding category at 'Library' of an initial launcher screen.

'Upload' 1 is a function of adding contents existing in a corresponding device or 'Library', and 'Download' 2 is a function of multi downloading and storing corresponding contents from a server to a device, and 'List view by' 3 is a function of displaying in a list form, and 'Delete' 4 is a function of deleting registered contents, and 'contents' 6 is shown in a thumbnail view form and, upon selection, it may be just executable. 'Sort by' 6 is for selecting a sorting method, and may be sorted on a basis of 'Type', 'size', 'time', 'name' and the like.

When 'List view by' 3 is selected, contents may be displayed in a list form (1116). When the contents are displayed in the list form, access authority setting of a student is possible through 'Students view option' 7. For example, when it is yellow, a student access authority is possible and, when it is grey, a student access authority is impossible. 'Sort by' 8 may sort contents in order of name/size/time. 'Date updated' is a date at which contents are uploaded, and 'size' represents a size of contents.

As in FIG. 11G, when any one 10 among contents corresponding to a specific class hour of a specific day is selected (1117), the teacher device may select whether to execute after storing the selected contents or whether to execute without storing (1118), and execute the selected contents (1119).

As in FIG. 11H, to register contents corresponding to a specific class hour of a specific day, 'upload' may be selected (1120), and a form of contents to be uploaded may be selected (1121). The corresponding contents may be selected from 'Library' storing contents ('contents library'), or may be selected from files within a device ('My files'), or may make materials by executing a related application such as photograph ('photo') / audio ('Audio') / movie / note ('S-note') / application ('Apps') and the like. Here, when 'contents library' is selected, a contents list may be received from 'Library' and displayed as in a screen of 1122. At this time, upon 'Select all' selection, all contents displayed are selected (1123). After that, upon 'Done' selection, contents selected at a specific class hour of a specific course may be connected and stored (1124).

For another example, as in FIG. 11J, when 'My files' is selected to register contents corresponding to a class hour of a specific day (1125), file lists of a specific folder may be displayed (1126) and at least one file may be selected (1127). After that, upon 'Done' selection, a file (e.g., Contents4.ppt) selected at a specific class hour of a specific course may be connected and stored (1128). Meanwhile, as in FIG. 11K, when 'Download' 10 is selected to download contents corresponding to a class hour of a specific day (1129), uploaded contents are displayed (1130) and, when 'select all' is selected, contents corresponding to a class hour of a corresponding course are selected (1131). That is, a check box may be checked and changed. After that, upon 'Done' selection, contents selected at a specific class hour of a specific course may be downloaded (1132). Here, a file uploaded by 'My files' among contents may be automatically stored in a specific folder. Meanwhile, upon file download, a duplicated file may be stored in a different name. For example, as in FIG. 11L, when 'Download' is selected and a specific file is selected, at a time there is a duplicated file, a popup window of informing that the same file has been already downloaded is displayed (1134). Upon 'save as' selection, a popup window for file name change may be displayed (1135). Here, a file name may be provided as a default in a form of an original file name. After that, upon 'Done' selection, it may be downloaded in a changed file name (1136).

Next, as in FIG. 11M, when 'Delete' 10 is selected to delete contents corresponding to a class hour of a specific day (1137), the contents of the class hour are displayed (1138) and, upon 'select all' selection, contents corresponding to a corresponding class hour are selected (1139). That is, a check box may be changed into a check status. After that, upon 'Done' selection, contents selected at a corresponding class hour may be deleted (1140).

Meanwhile, a description tab of a 'schedule' may provide a lecture overview for a specific week of a specific course (1141). When 'Edit' is selected in a Description tab of 'Schedule', an overview for a corresponding course may be corrected (1142).

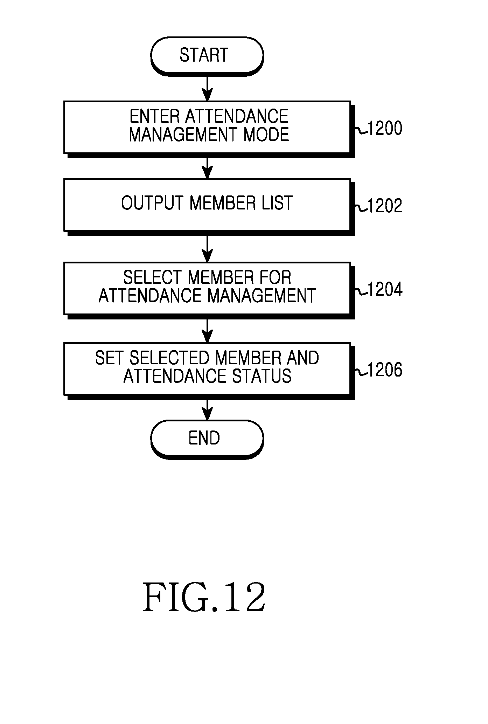

FIG. 12 is a flowchart illustrating an operation for managing attendance in an Attendance tab of a 'Schedule' of a corresponding course according to an exemplary embodiment of the present invention.

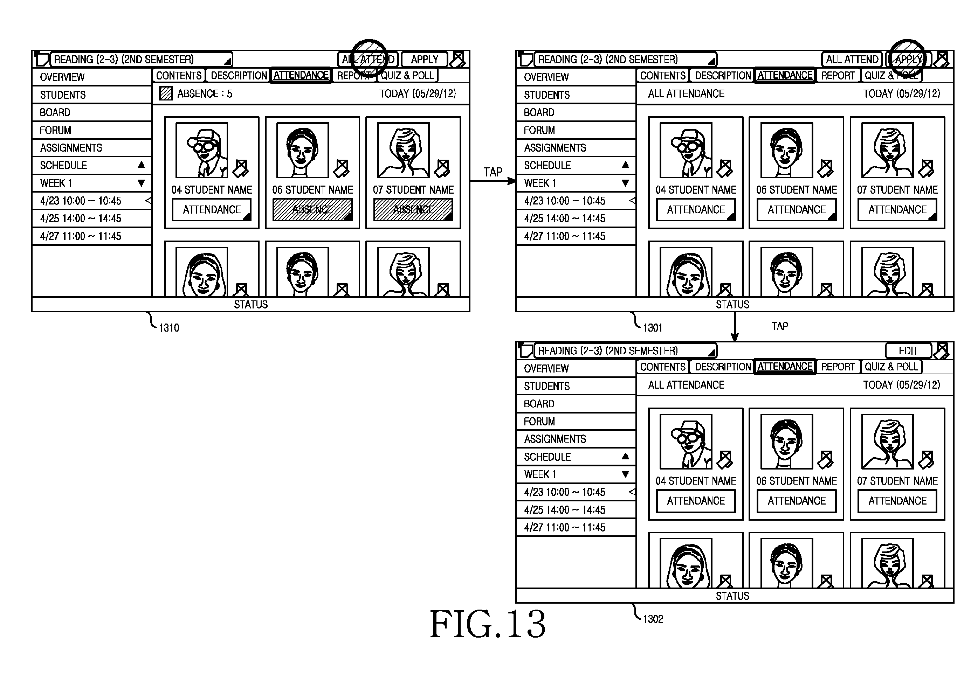

Referring to FIG. 12, in step 1200, a teacher device enters an attendance management mode and, in step 1202, outputs a member list. That is, the teacher device enters 'Attendance' in a Schedule step of a corresponding course. In step 1204, the teacher device selects a member for attendance management. For example, the teacher device may select all students participating in a lecture, or may select one by one in a member list. In step 1206, the teacher device sets the selected member and an attendance status. A detailed description of managing attendance in an Attendance tab of a 'Schedule' of a corresponding course is described with reference to FIG. 13 below.

FIG. 13 illustrates a user interface for managing attendance in an Attendance tab of a 'Schedule' of a specific course according to an exemplary embodiment of the present invention.

Referring to FIG. 13, when it enters an Attendance tab of a 'Schedule' at a corresponding course, students registered to a specific course are displayed (1300). At this time, upon 'All attend' selection, attendance statuses of students registered to a specific course are all changed into 'Attendance' and next, upon 'Apply' selection (1301), students registered to a specific course are applied to an attendance status (1302). According to another exemplary embodiment, a teacher may select 'Attendance' or 'Absence' for each student by using a device.

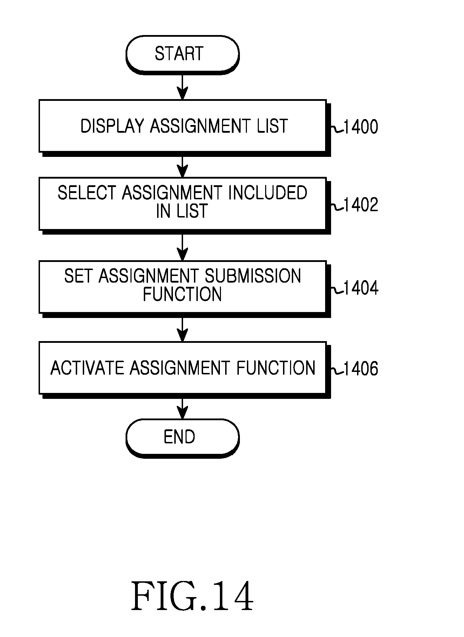

FIG. 14 is a flowchart illustrating an operation for assignment submission management in a Schedule step of a corresponding course according to an exemplary embodiment of the present invention.

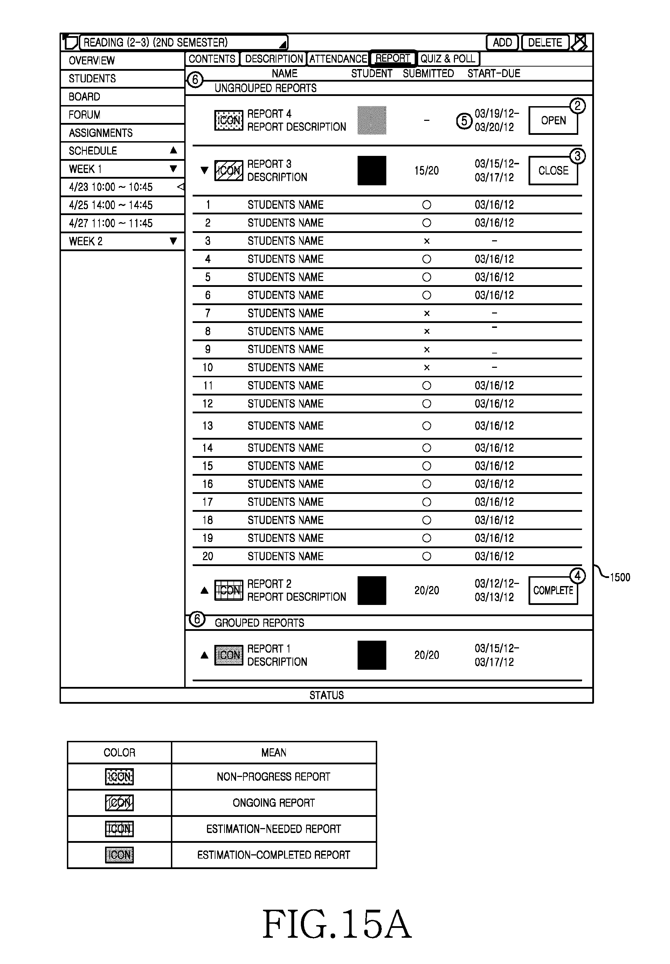

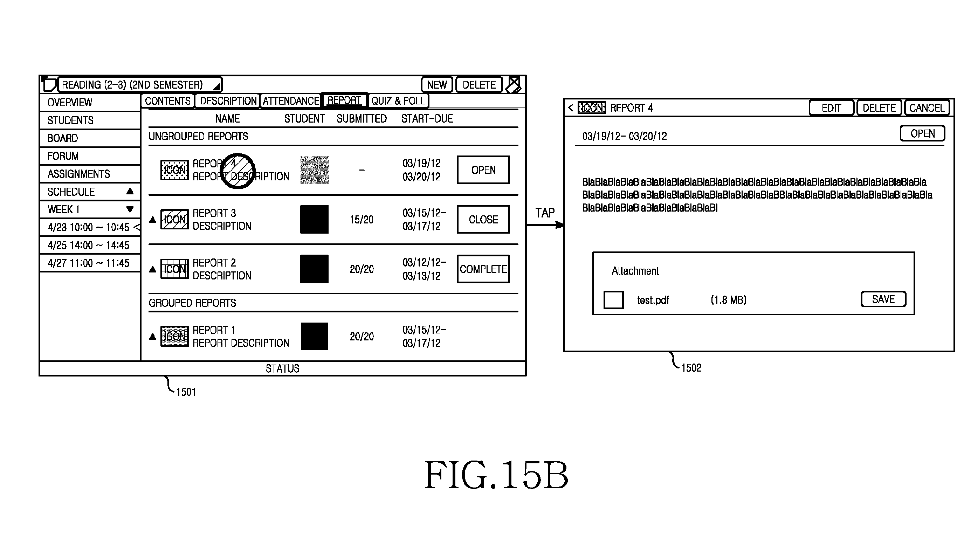

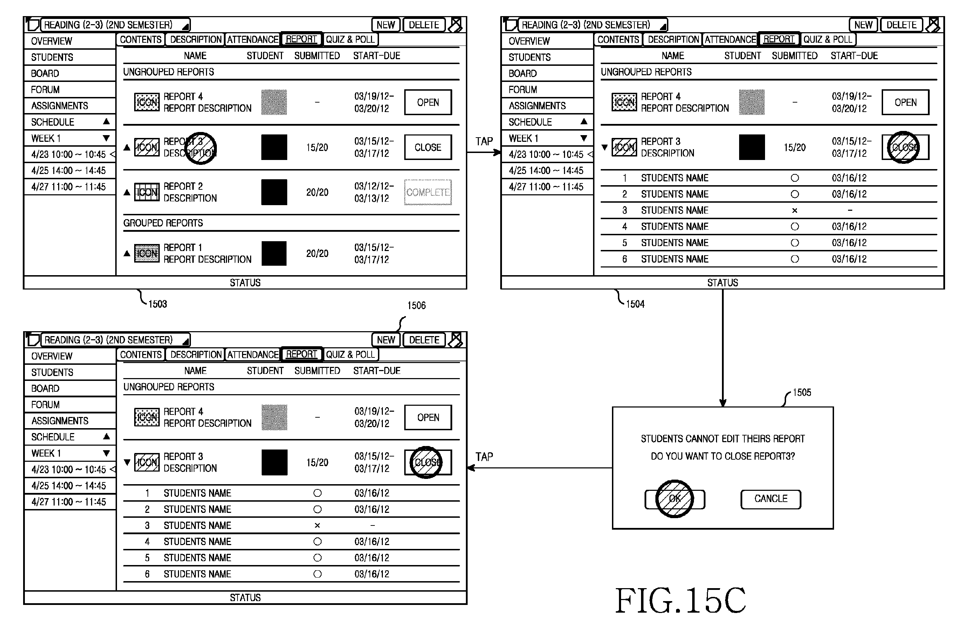

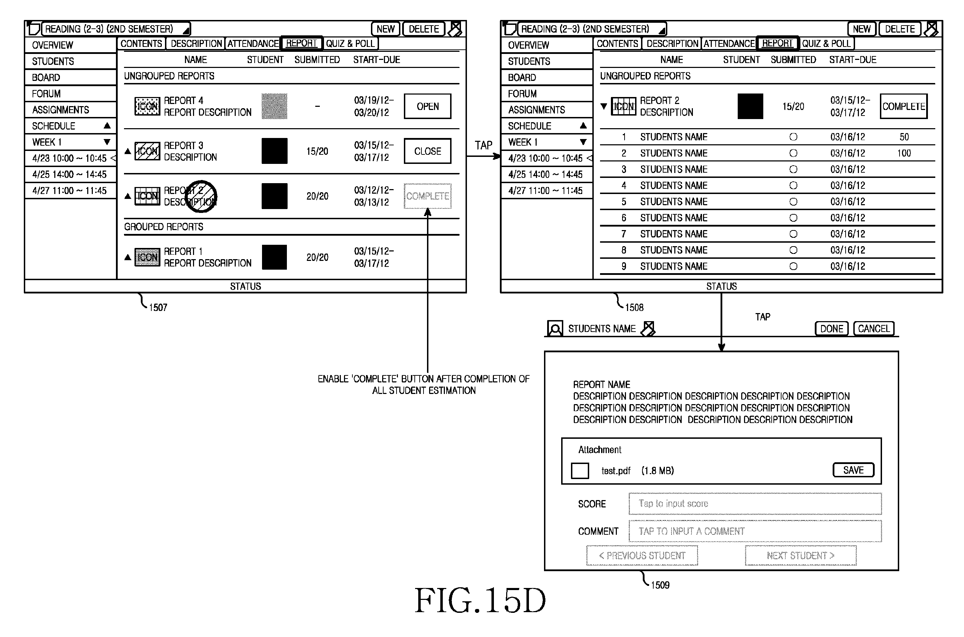

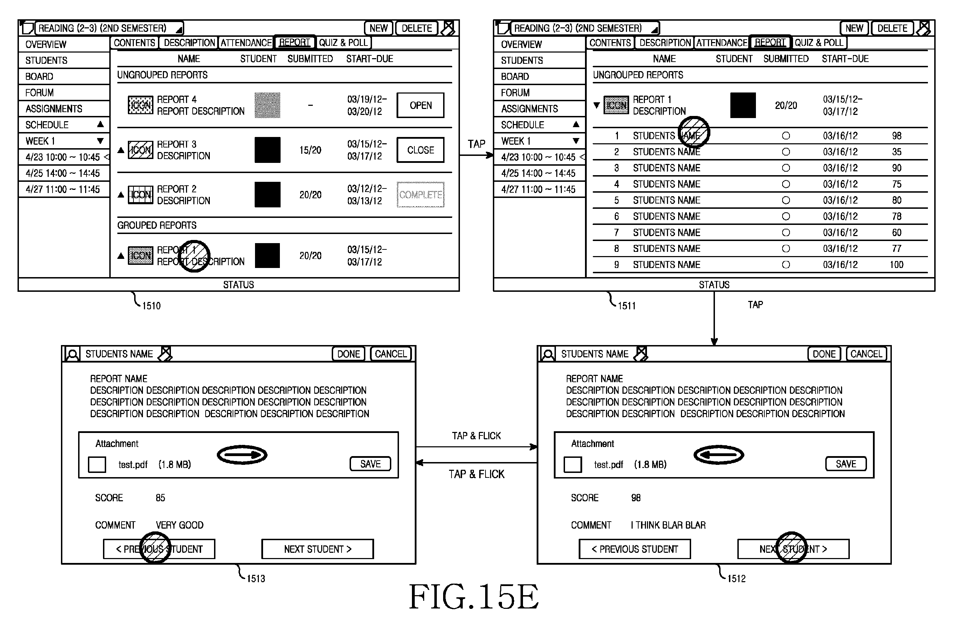

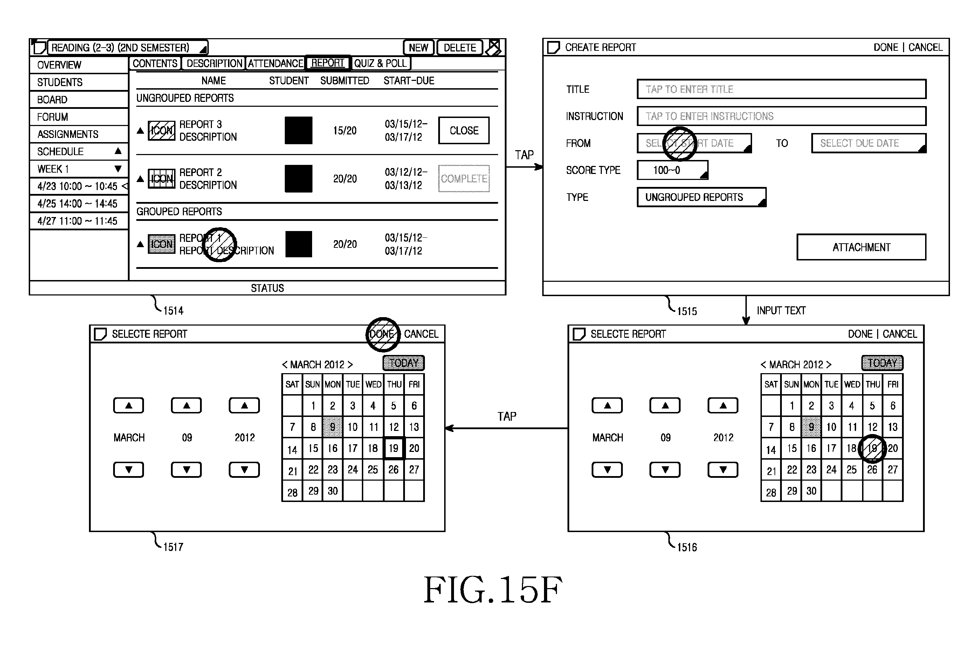

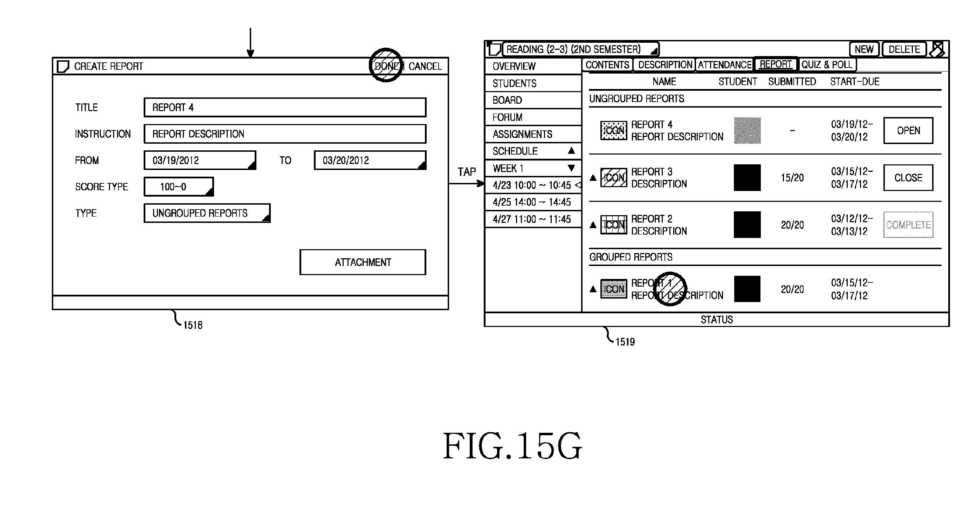

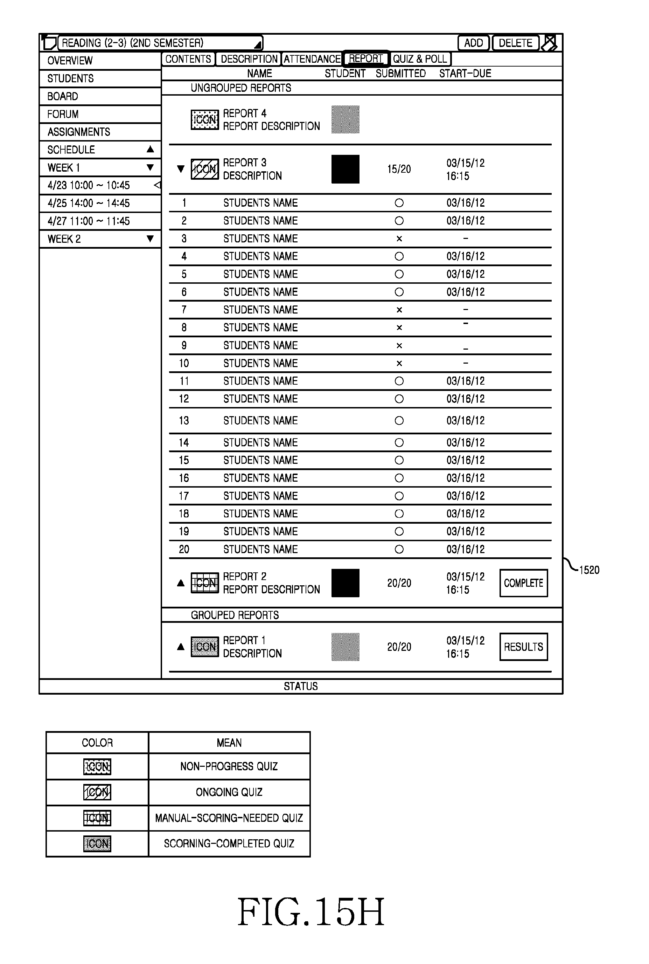

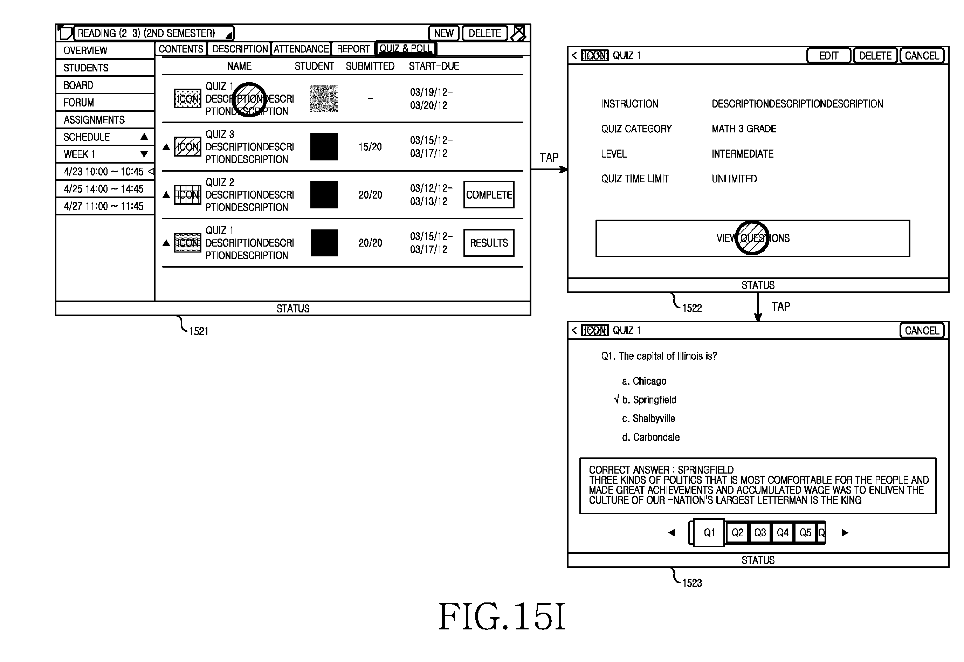

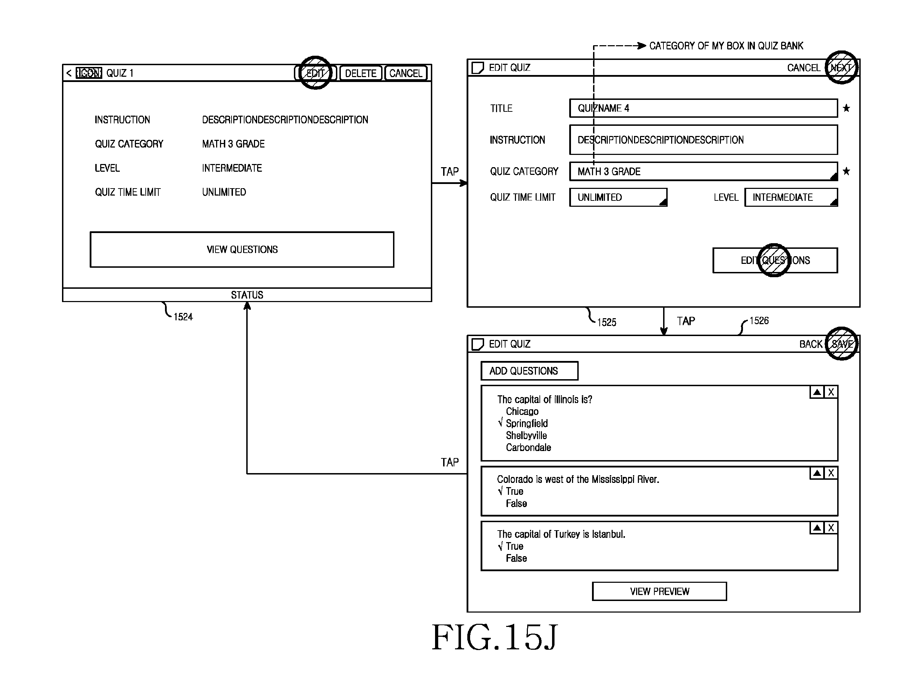

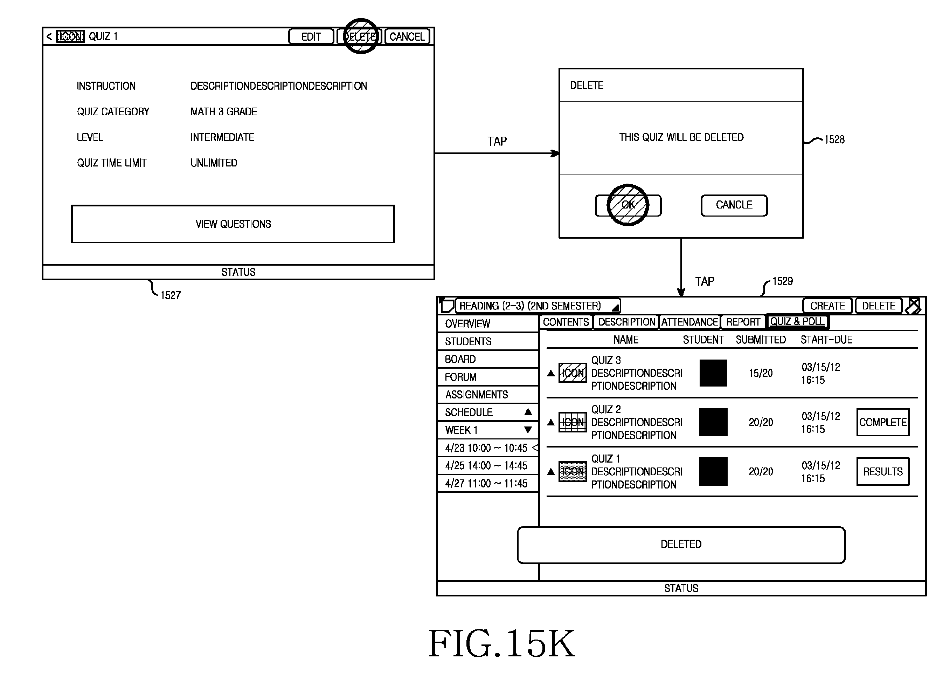

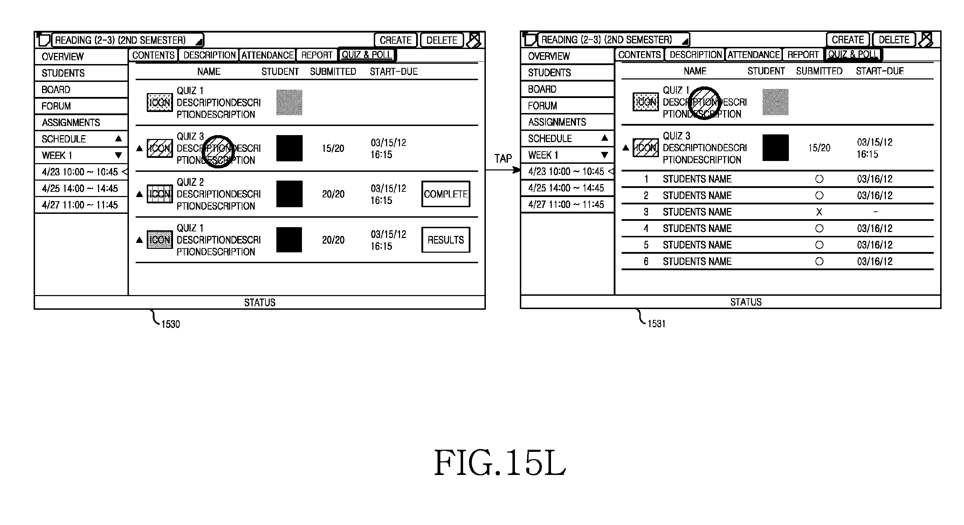

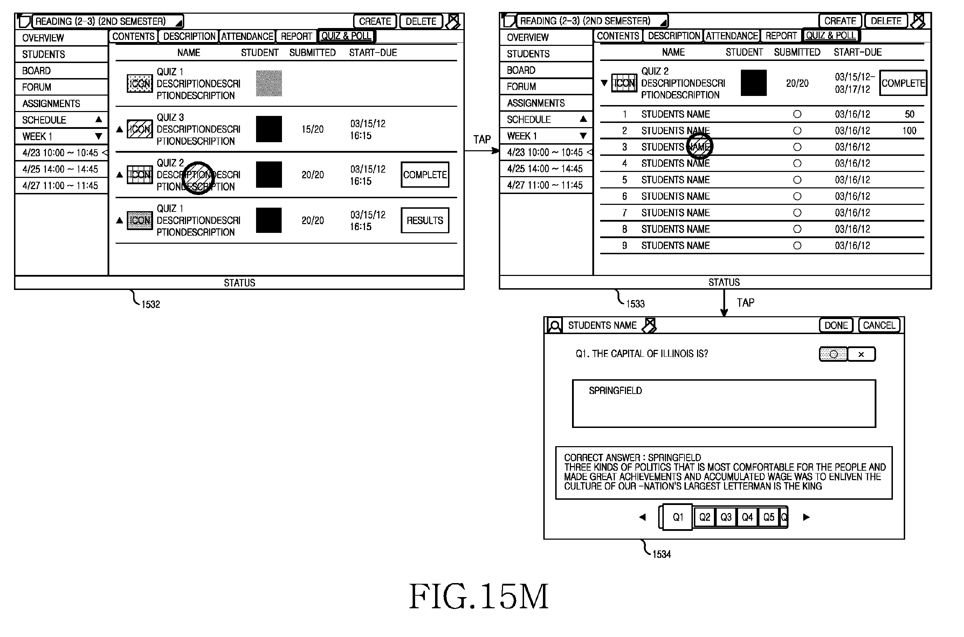

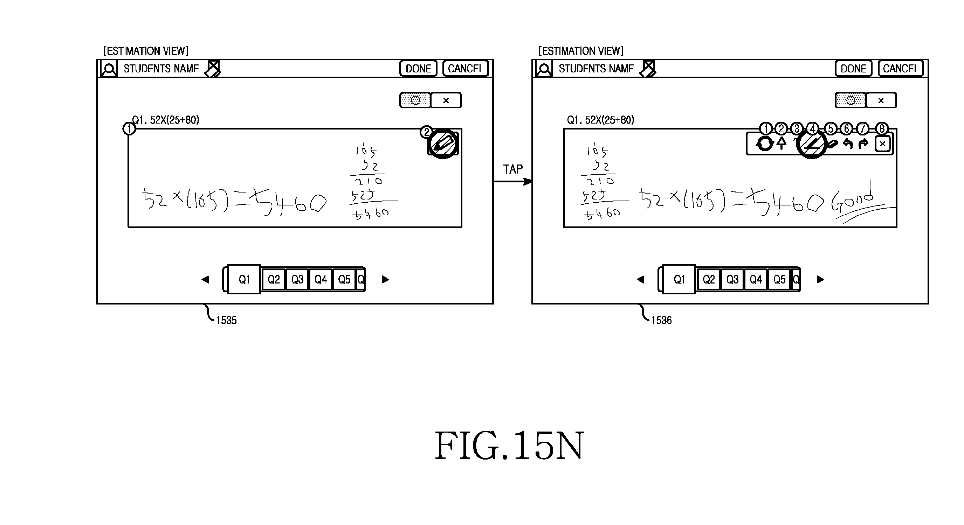

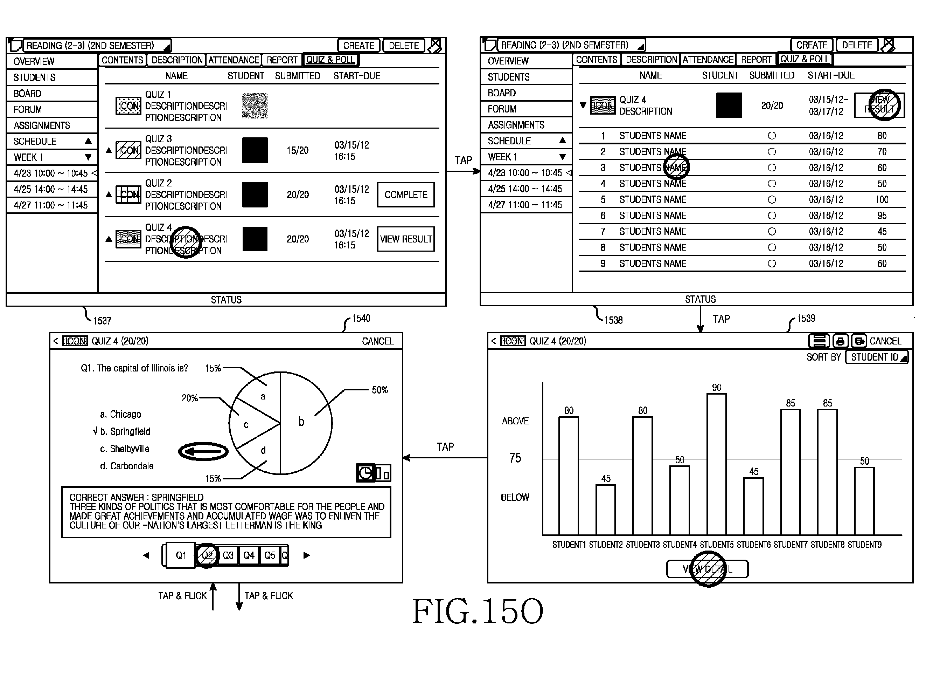

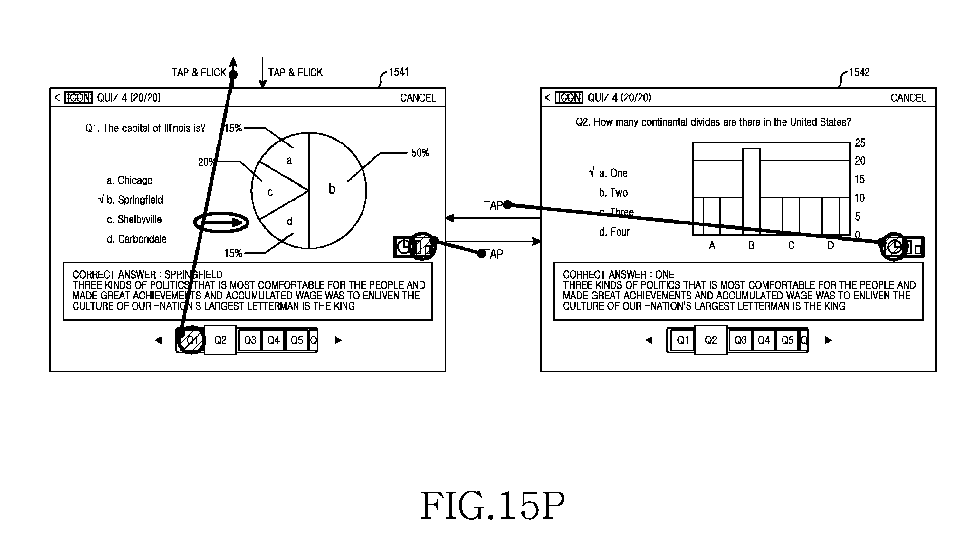

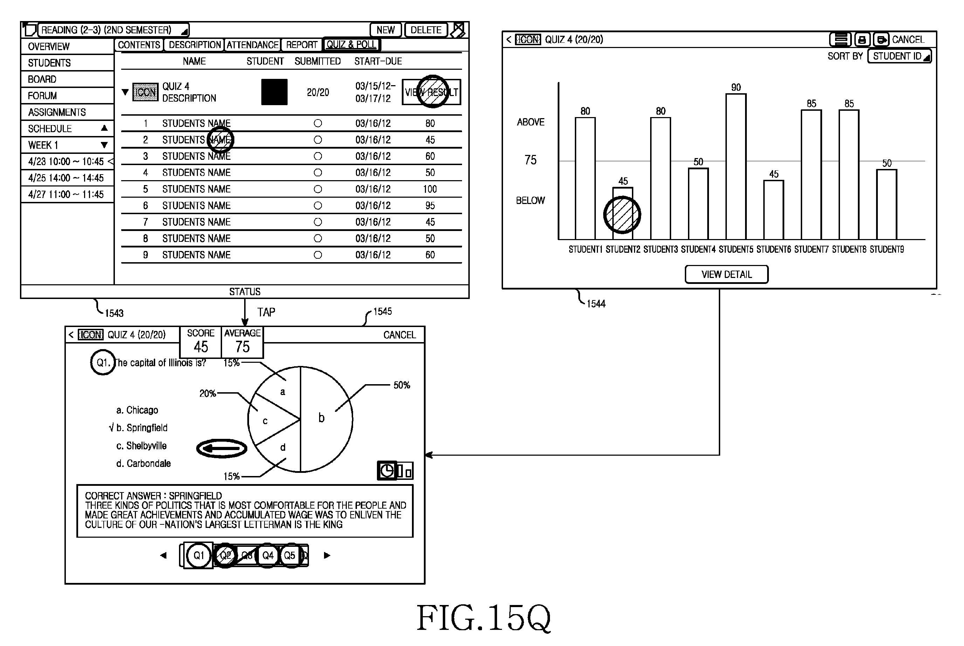

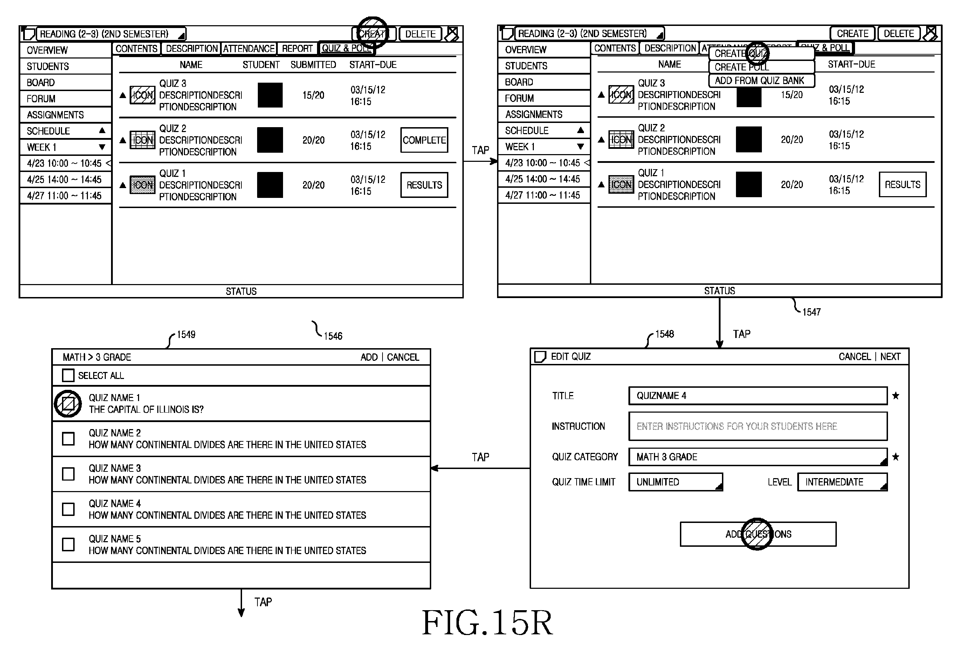

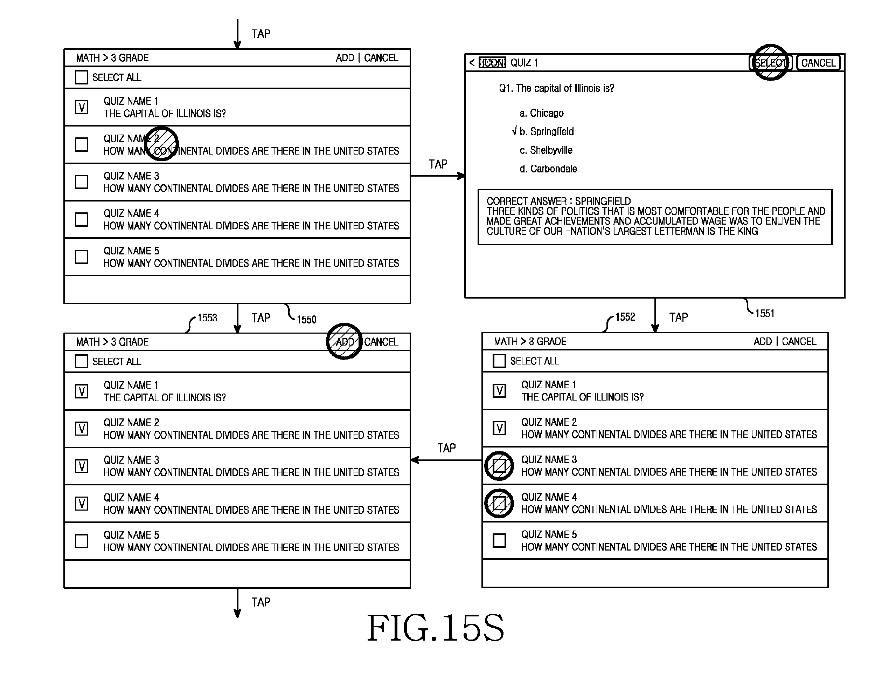

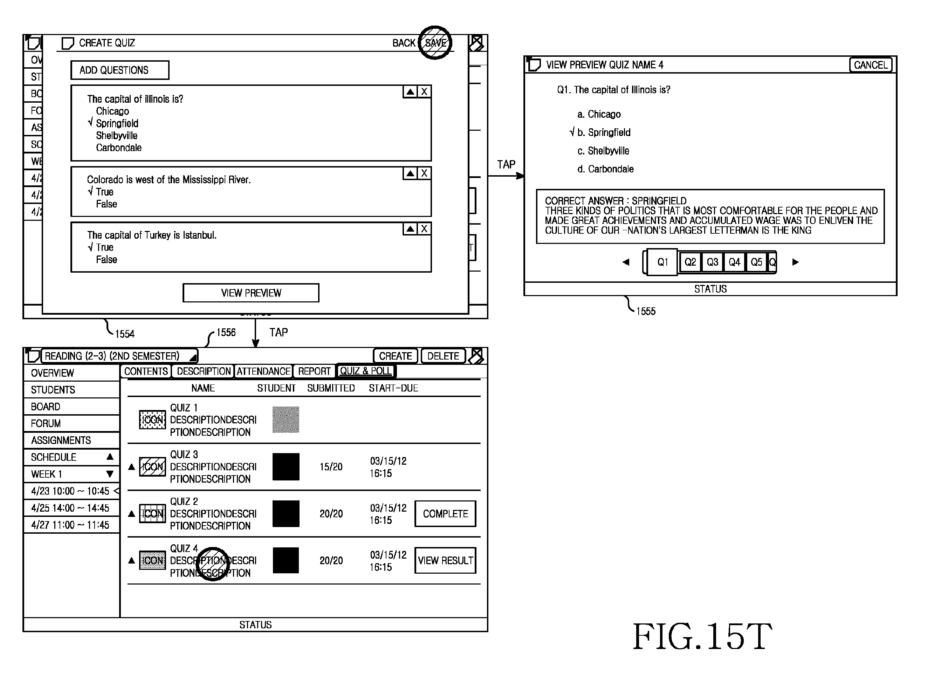

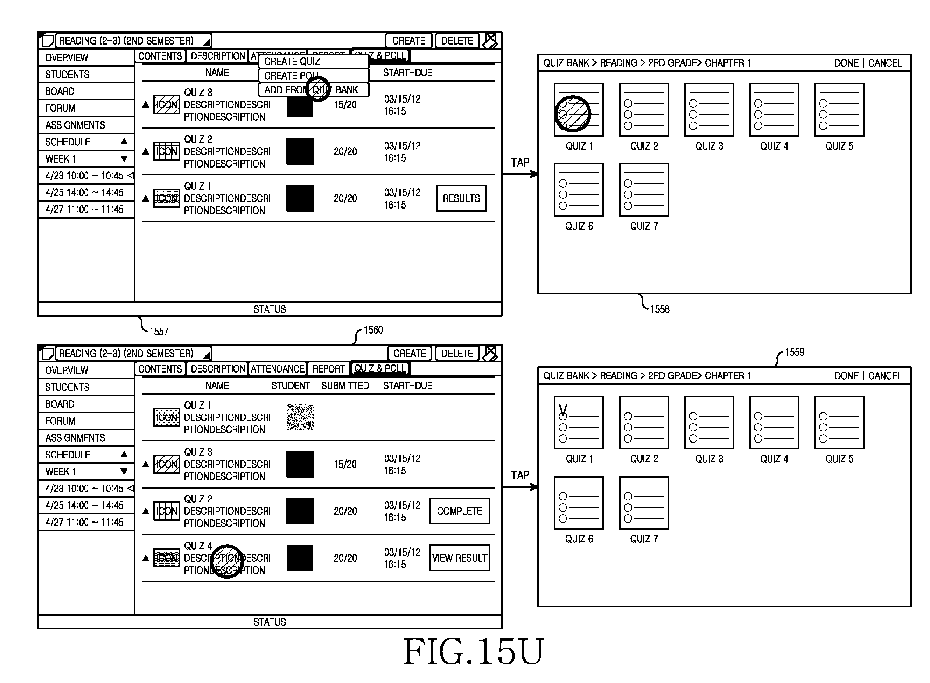

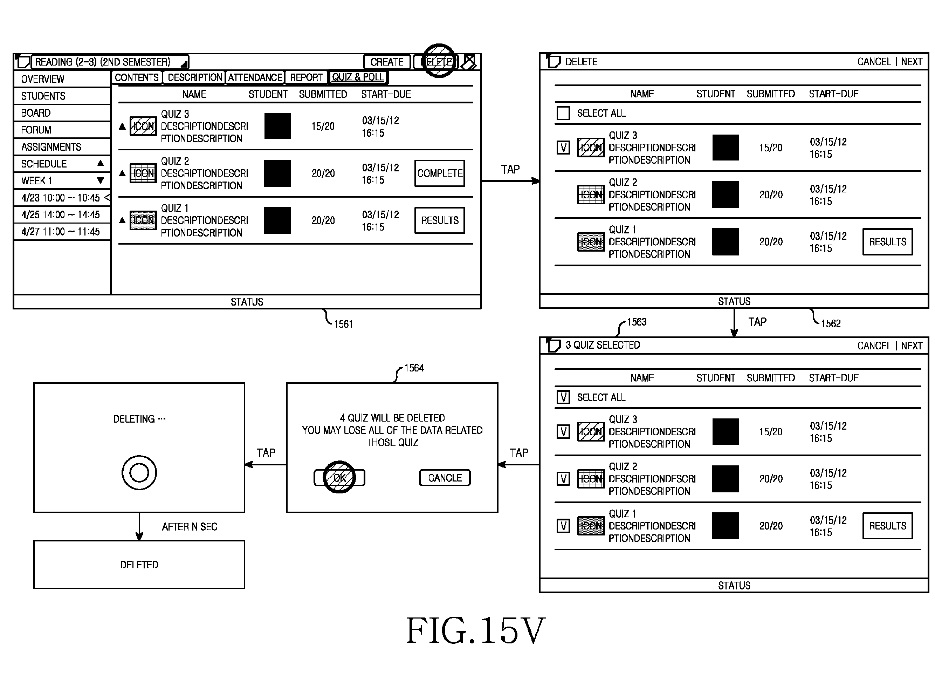

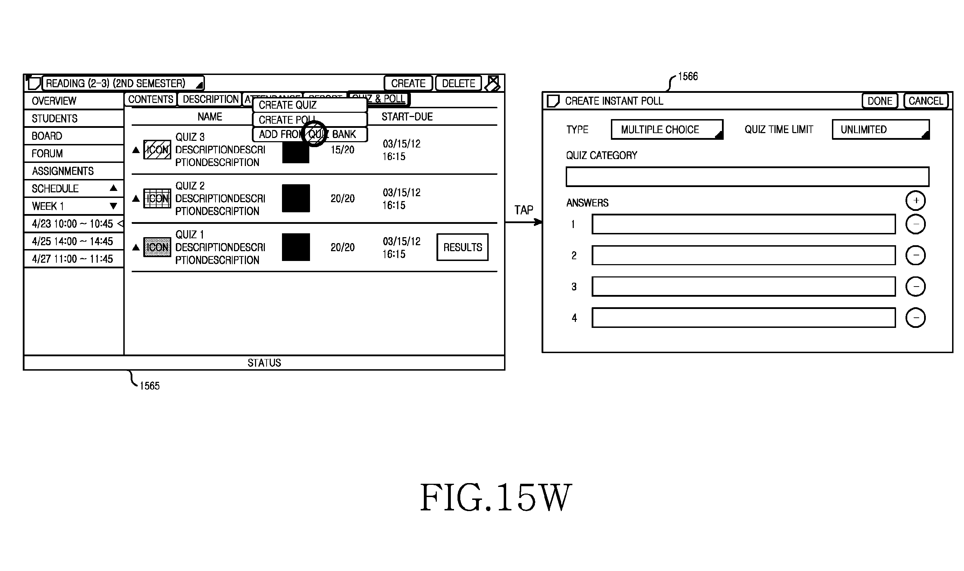

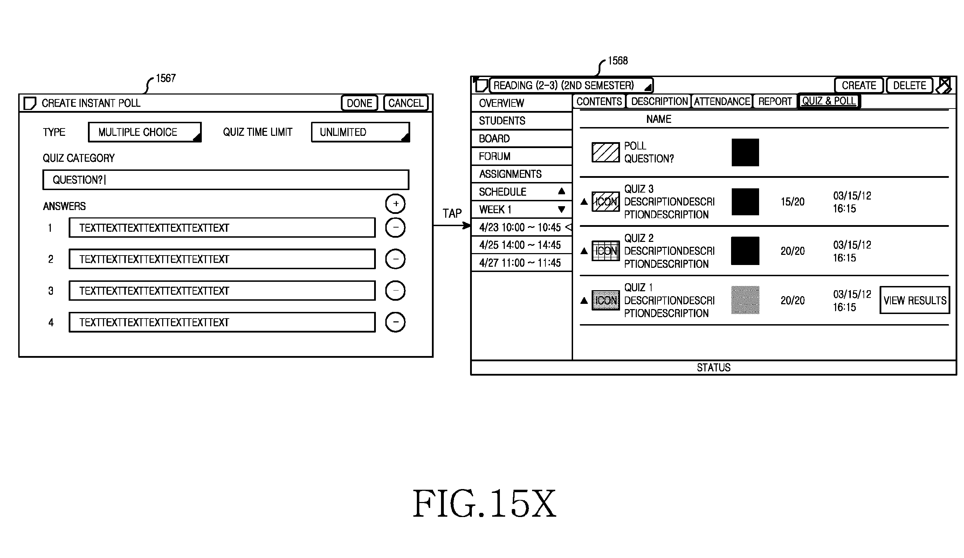

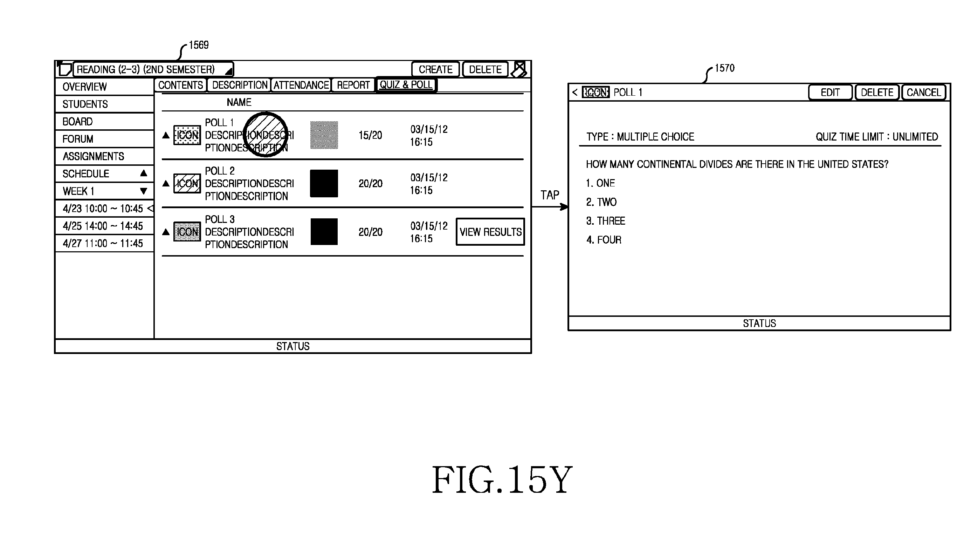

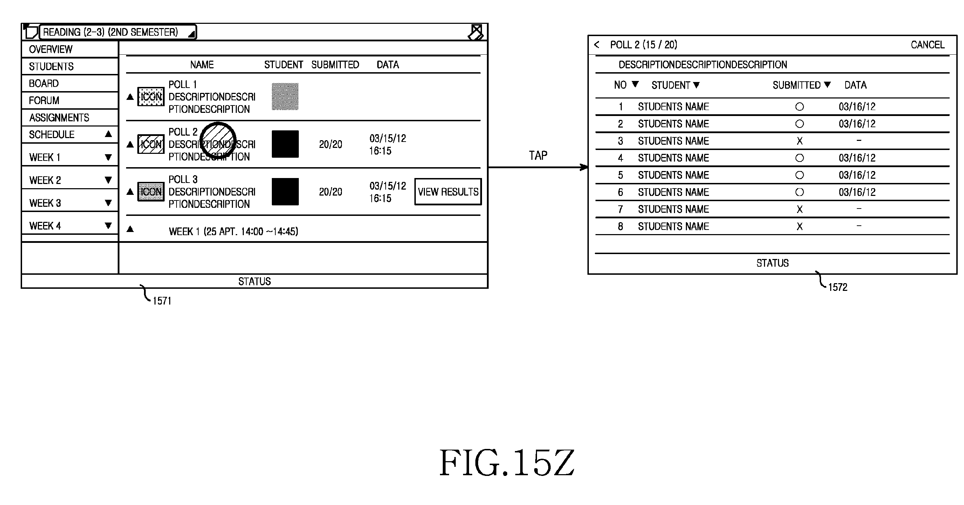

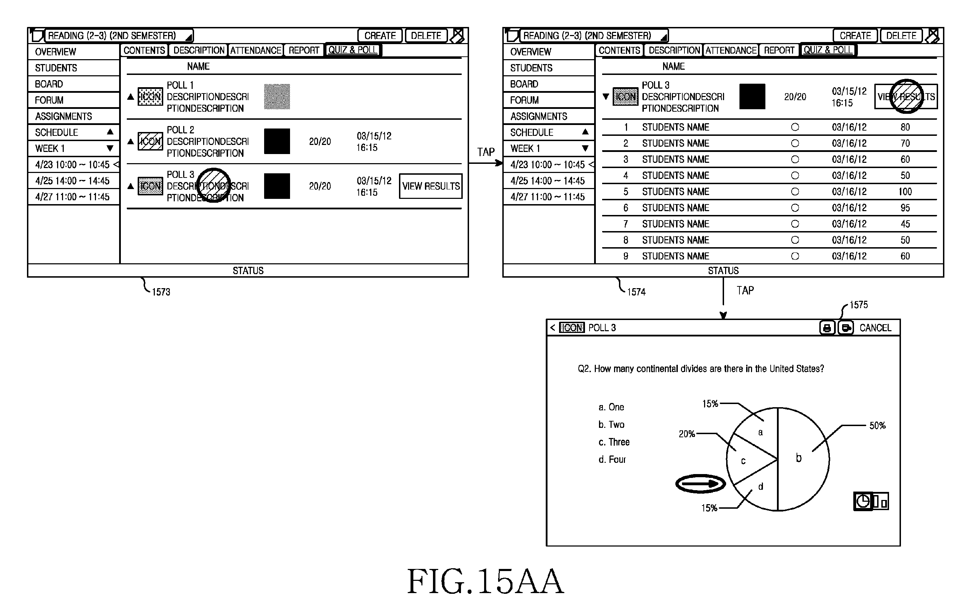

Referring to FIG. 14, in step 1400, a teacher device displays an assignment list and, in step 1402, the teacher device selects an assignment included in the assignment list. In step 1404, the teacher device sets an assignment submission function and, in step 1406, the teacher device activates the assignment submission function. A detailed description of assignment submission management in a 'Schedule' of a specific course is made with reference to FIGS. 15A to 15AA.

FIGS. 15A to 15AA are diagrams illustrating user interfaces for assignment submission management in a 'Schedule' of a specific course according to an exemplary embodiment of the present invention.

In FIG. 15A, a report corresponding to a specific course may be provided every class hour of a specific course in a 'Schedule'. A 'Report' tab entry default screen 1500 may display a report list and, according to implementation, a student list may be displayed only for the latest ongoing report among the report list.

Here, 'Student view' 1 is a function of selecting opening or non-opening to students (a toggle button). When it is grey, a student access is limited and, when it is yellow, the student access is granted.

'Open' 2 is a function of just opening before a date that is set as a start date of a non-progress report. At this time, upon selection, it may be automatically changed into a corresponding start date. For example, when a current date is 15 March, and a set date of a non-progress report is set from 19 March to 20 March, upon 'Open' selection, the set date of the non-progress report may be set from 15 March to 20 March. 'Close' 3 is a function of closing before a completion date that is set as a completion date of an ongoing report. At this time, upon selection, it may be automatically changed into a corresponding closing date. For example, when a current date is 16 March and a set date of an ongoing report is set from 15 March to 17 March, upon 'Close' selection, the set date of the ongoing report may be set from 15 March to 16 March. In 'Complete' 4, estimation is finally completed only when an 'estimation completion' button is pressed after estimation. 'Start-due' 4 may automatically start/end according to a set schedule. If there is not a set schedule, it may not be given. 'Grouped/Ungrouped reports' 6 may distinguish and manage a product of group activities and a personal report.

For example, when a report (e.g., Report 4) before open is selected among a report list of a corresponding class hour (1501), a description of a corresponding report, a set date and a related file may be attached and displayed (1502). At this time, edition/deletion is possible for the selected report (e.g., Report 4).

When the opened report (e.g., Report 3) is selected among a report list of a corresponding class hour (1503), a submission status of a corresponding report may be displayed (1504). That is, students (O) submitting corresponding reports and students (X) not submitting are marked by 'O' and 'X' and displayed. Here, upon 'Close' selection, a window of inquiring whether to close the opened report (e.g., Report 3) is displayed (1505). Upon 'OK' selection, a status of the opened report (e.g., Report 3) is changed into a status being in estimation (1506).

When a report (e.g., Report 2) that is being estimated is selected among a report list of a corresponding class hour (1507), a submission status of a corresponding report and a score of a student that is being estimated may be displayed (1508). That is, a submission status of a corresponding report and estimation scores for some students completing estimation are displayed. Here, a 'Complete' button is activated after estimation for all students is completed. After that, when one student to be estimated is selected among students having submitted reports, a report file submitted by the selected student is attached and, along with this, a screen capable of inputting an estimation score and a comment for the selected student may be displayed (1509).

When an estimation-completed report (e.g., Report 1) is selected among the report list of the corresponding class hour (1510), a submission status of the report and a score of an estimation-completed student may be displayed (1511). That is, a submission status of a corresponding report and estimation scores for all students are displayed. After that, when one student estimated is selected among students submitting reports, a report file submitted by the selected student is attached, and an estimation score and comment may be displayed (1512). After that, when a next student is selected or a flicker gesture of right direction is input, a screen including a report file for the next student, an estimation score, and a comment may be displayed (1513). When a previous student is selected or a flicker gesture of a left direction is input in the screen 1513, a screen including a report file for the previous student, an estimation score, a comment may be displayed (1512).

Meanwhile, when it enters 'Report' in a 'Schedule' step of a corresponding course and 'New' is selected to add a new Report (1514), a window capable of inputting a title of a report to be created, a description, a setting period, a score type, and information indicating whether it is a group designation report or a personal report may be displayed (1515). The setting period may be set by touching a start date and an end date within a monthly timetable of a calendar form as in a screen 1516. As a default value, a start date may be set to a today date. After that, upon 'Done' selection, the setting period is input (1517). According to another implementation, the setting period may be directly input by a user according to a date type. At this time, if the start date is input, the end date may be automatically displayed as any date after the start date.

After the title of the report (e.g., Report 4) to be created, the description, the setting period, the score type, and the information indicating whether it is the group designation report or the personal report are all determined, upon 'Done' selection (1518), 'Report 4' is newly added within a report list. At this time, a status of 'Report 4' is displayed as a status before open, and an 'Open' button is activated (1519).

Meanwhile, in a Quiz & Poll tab of a 'Schedule' step of a corresponding course, a quiz and poll list may be displayed and, according to implementation, a student list may be displayed only for the latest ongoing quiz or poll among the quiz and poll list (1520). In the 'Schedule' step, a quiz or poll may be provided every class hour of a corresponding course.

For example, when a quiz (e.g., Quiz 1) before test is selected among a quiz list of a corresponding class hour (1521), information (i.e., 'Instruction', 'Quiz category', 'Level', and 'Quiz time limit') about corresponding Quiz 1 is displayed (1522). Here, when a view question corresponding to a corresponding quiz is selected, a quiz question and an answer are displayed (1523). Quiz questions may be displayed by one question in a page unit. According to implementation, quiz questions may be displayed in one page. At this time, a corresponding quiz question may be searched through scroll.

Meanwhile, in a screen displaying information about a corresponding Quiz 1, upon 'Edit' selection (1524), it enters an edition mode status (1525). In the edition mode status, 'Instruction', 'Quiz category', 'Level', 'Quiz time limit' and the like may be changed. Further, 'Edit question' is selected to correct even quiz questions (1526).

Meanwhile, in the screen displaying the information about the corresponding Quiz 1, upon 'Delete' selection (1527), a message window inquiring whether to delete a corresponding quiz is displayed (1528). Here, upon 'OK' selection, Quiz 1 of a status before test is deleted from a quiz list (1529).

When a quiz (e.g., Quiz 3) that is being tested is selected among a quiz list of a corresponding class hour (1530), a submission status of the quiz may be displayed (1531). That is, students (O) submitting a corresponding quiz and students (X) not submitting are marked by 'O' and 'X' and displayed.

When a quiz (e.g., Quiz 2) that is being estimated is selected among the quiz list of the corresponding class hour (1532), a submission status of the quiz and a score of a student that is being estimated may be displayed (1533). That is, a submission status of a corresponding quiz and estimation scores for some students completing estimation are displayed. Here, a 'Complete' button is activated after estimation is completed for all students. After that, when one student to be estimated is selected among students submitting quizzes, a quiz question and an answer submitted by the selected student is given, and 'O' or 'X' may be selected for a quiz answer submitted by the student (1534). Quiz questions may be displayed by one question in a page unit. According to implementation, quiz questions may be displayed in one page. At this time, a corresponding quiz question may be searched through scroll.

For another example, when a subjective quiz question is given, scoring may be conducted using a Stylus (S) pen.

For example, as in a screen 1535, students may submit correct answers to a subjective quiz question. The students may write answers within a note region 1 by using an electronic pen and the like. Upon tool 2 selection, as in a screen 1536, a function of allowing a teacher to conduct correction guide may be also provided. For example, functions of 'Share note' (on/off toggle) 1, 'Pointer' 2, 'Input text' 3, 'Pen' 4 for pen input within a corresponding contents region, 'Eraser' 5, 'Undo' 6, 'Redo' 7 and 'note tool function close' 8 may be provided. 'Share note' means a function of sharing a corresponding note region 1 between a student and a teacher. Accordingly, the student may determine content which a teacher corrects for a corresponding quiz question with a pen.

When an estimation-completed quiz (e.g., Quiz 4) is selected among the quiz list of the corresponding class hour (1537), a submission status of the quiz and a score of an estimation-completed student may be displayed (1538). That is, a submission status of a corresponding quiz and estimation scores for all students are displayed. At this time, a 'view result' button is activated. After that, when the 'view result' button is selected, a result on Quiz 4 is displayed with a graph (1539). Upon 'view detail' selection, quiz answers submitted by students for each quiz question may be viewed in statistics (1540). For example, the number of students who select 'a', the number of students who select 'b', the number of students who select 'c', and the number of students who select 'd' for a quiz question number 1 may be given with a circle graph. Here, a graph type is not limited to the circle graph, and graphs of various types may be applied. Meanwhile, when a quiz question number 2 is selected in the screen 1540 or when a flicker gesture of a right direction is input, answers submitted by students for the quiz question 2 may be viewed in statistics (1541). Here, when the quiz question number 1 is selected or when a flicker gesture of a left direction is input, an answer to a previous quiz question (e.g., a quiz question number 1) is viewed in statistics (1540). Also, when the bar graph is selected instead of the circle graph, statistics data is displayed with the bar graph (1542). Inversely, upon the circle graph selection, statistics data may be displayed with the circle graph (1541).

In another exemplary embodiment, after a specific student is selected, answers to corresponding quiz questions may be viewed in statistics on a basis of the specific student.

For example, when a specific student is selected from an estimation-completed student list (1543) or when a specific student is selected from an estimation result graph for estimation-completed students (1544), answers to corresponding quiz questions may be viewed in statistics on a basis of the specific student (1545). That is, an estimation score of a specific student and an average score of a corresponding quiz are given and also, statistics data of quiz answers submitted by students for each quiz question may be viewed in the circle graph.

Meanwhile, when it enters a 'Quiz & Poll' tab in a 'Schedule' step of a corresponding course and 'Create' is selected to add a new quiz (1546), the teacher device selects whether to create a quiz or whether to create a poll or whether to add from a quiz bank (1547) and, upon quiz creation, a window capable of determining at least one or more of a title of a quiz to be created, a description, a quiz category (e.g., Mathematics of the third year), a quiz time limit or non-limit, a quiz difficulty level and the like may be displayed (1548). After that, when 'Add questions' is selected, quiz questions corresponding to a quiz category are given (1549). Here, at least one or more quiz questions may be selected using a check box.

In another exemplary embodiment, when not a check box but a corresponding quiz question is selected, content of the quiz question is given (1550). At this time, upon 'Select' selection, the quiz question may be selected (1551, 1552). For example, 'Quiz name 1' selects a check box without quiz content determination, and 'Quiz name 2' selects a check box after quiz content determination (1552). Further, 'Quiz name 3' and 'Quiz name 4' may additionally select check boxes (1553). Next, when 'Add' is selected, content and answers of questions of the selected quiz may be given in one page (1554). Here, if 'view preview' is selected, quiz questions may be viewed one by one in a page unit (1555). Meanwhile, when 'save' is selected, Quiz 1 may be added and given in a quiz list (1556).

For another example, when it enters a 'Quiz & Poll' tab in a 'Schedule' step of a corresponding course and 'Create-Add from quiz bank' is selected to add a new quiz (1557), quiz questions related to lecture content of a corresponding course may be given by question group (1558). The question group includes a plurality of quiz questions. After that, when any one question group is selected and 'Done' is selected (1559), the question group may be added to a quiz list as Quiz 1 (1560).

For further example, when it enters the 'Quiz & Poll' tab in the 'Schedule' step of the corresponding course and 'Delete' is selected to delete an added quiz (1561), a quiz list is given and, upon 'Select all' selection (1562), quizzes being in the quiz list may be all selected (1563). After that, upon 'Done' selection, a window inquiring whether to delete the selected quizzes is given (1564). After that, quizzes within a quiz list are deleted after a constant time lapses.

For yet another example, when it enters the 'Quiz & Poll' tab in the 'Schedule' step of the corresponding course and 'Create Poll' is selected to add a poll (1565), a window capable of determining at least one or more of a 'Type' (i.e., multiple choice or single choice) of a poll to be created, 'Quiz time limit', 'Question', and 'Answers' may be displayed (1566). After that, when 'Type' (multiple choice or single choice) of the poll to be created, 'Quiz time limit', 'Question', and 'Answers' are all input and 'Done' is selected (1567), a poll may be added within a quiz list (1568). In another exemplary embodiment, a poll may be added to a poll list separately from the quiz list.

Meanwhile, when a poll before open is selected in a poll list or a quiz list (1569), questions and view answers of the selected poll may be displayed (1570).

For another example, when the opened poll is selected in the poll list or quiz list (1571), a student answering the selected poll or students not answering may be given in a list form (1572).

For further example, when a completed poll (e.g., Poll 3) is selected among a quiz list of a corresponding class hour (1573), a submission status of a corresponding poll may be displayed (1574). That is, the submission status of the corresponding poll is displayed. At this time, a 'view result' button is activated. After that, when the 'view result' button is selected, a result on Poll 3 may be displayed with a graph (1575).

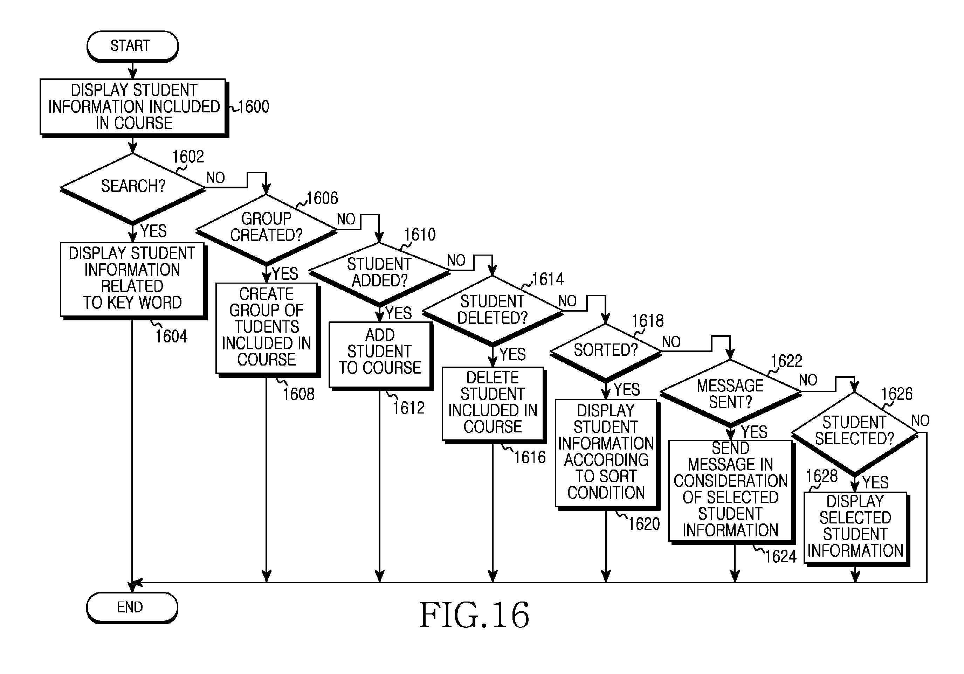

FIG. 16 is a flowchart illustrating an operation for student information management of a teacher according to an exemplary embodiment of the present invention.

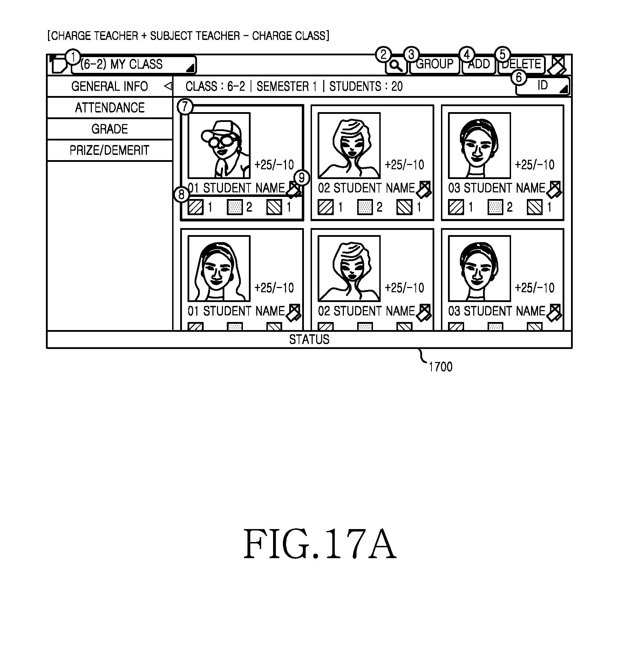

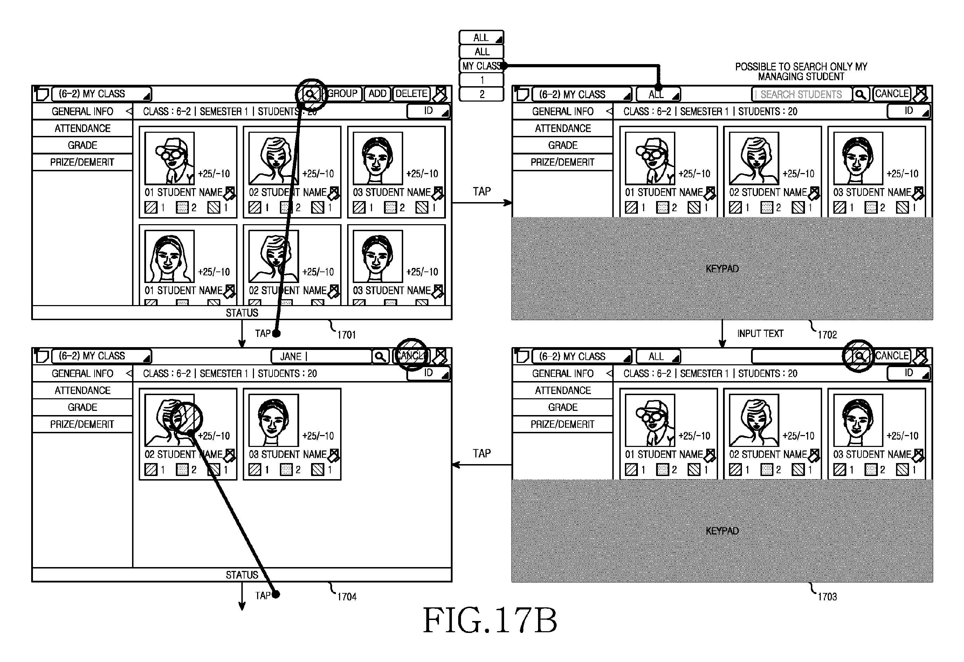

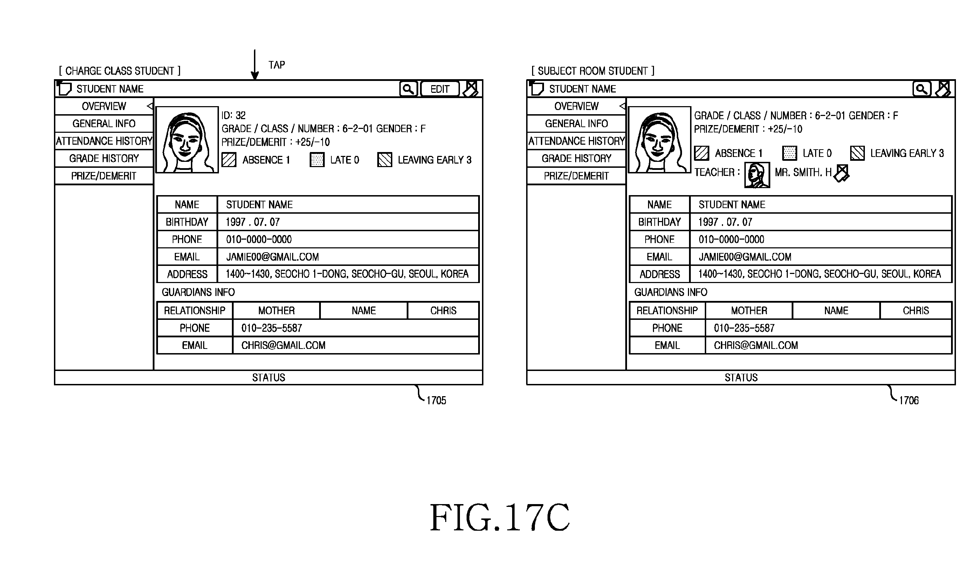

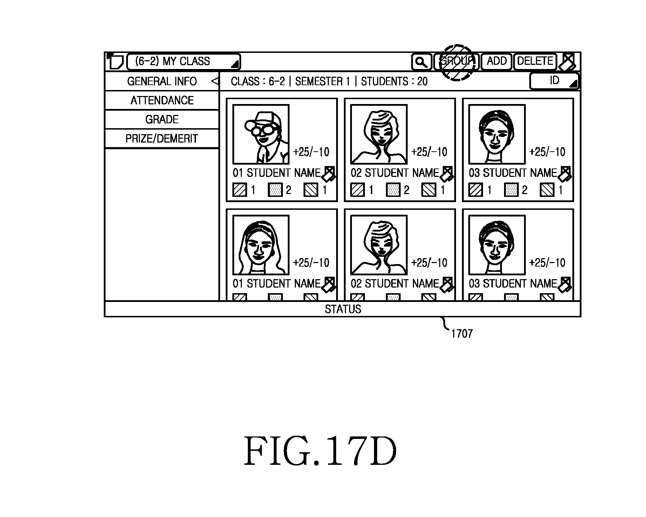

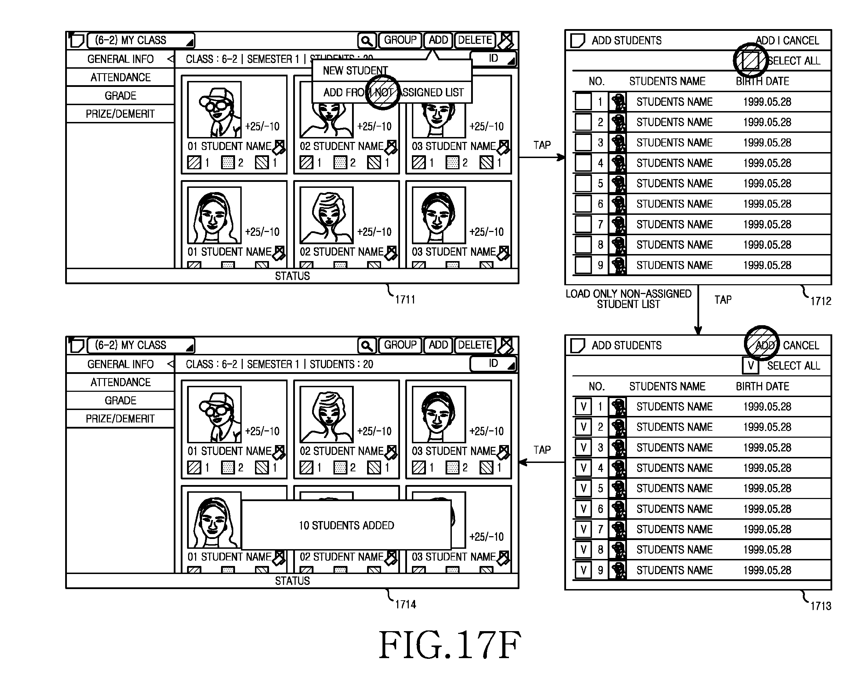

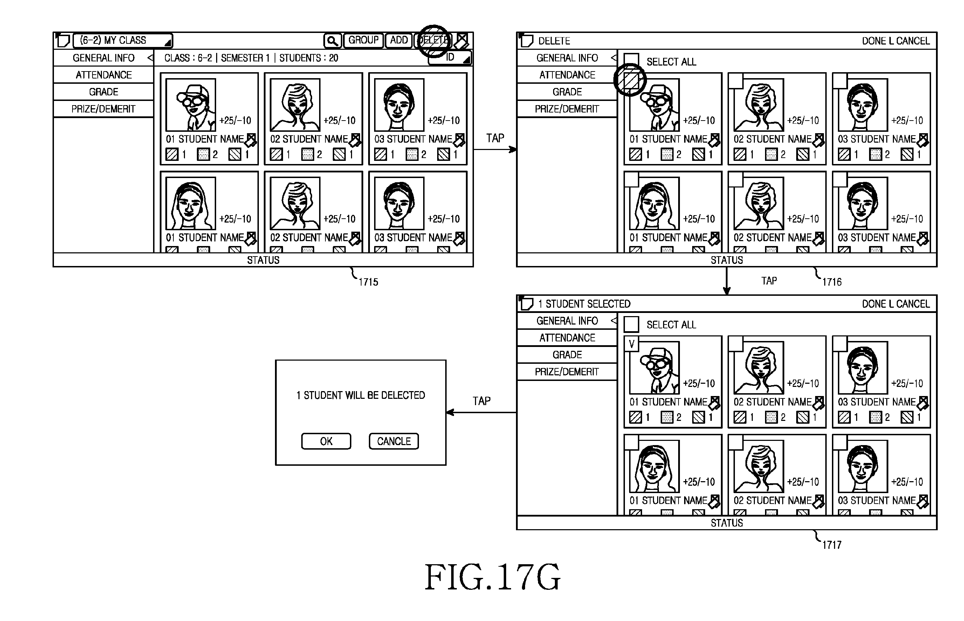

Referring to FIG. 16, in step 1600, a teacher device displays student information included in a course and, upon search function in step 1602, in step 1604, the teacher device displays student information related to a key word. Upon group creation function in step 1606, in step 1608, the teacher device creates a group for students included in the course. Upon student addition function in step 1610, in step 1612, the teacher device adds a student to the course. Upon student deletion function in step 1614, in step 1616, the teacher device deletes a student from the course. Upon sorting function in step 1618, in step 1620, the teacher device displays student information according to a sorting condition. Upon message sending function in step 1622, in step 1624, the teacher device sends a message in consideration of the selected student information. Upon student selection in step 1626, in step 1628, the teacher device displays information on the selected student. A detailed description of student information management of a teacher is made with reference to FIGS. 17A to 17G below.

FIGS. 17A to 17G are diagrams illustrating user interfaces for student information management of a teacher according to an exemplary embodiment of the present invention.

FIG. 17A illustrates a screen at the time of selecting 'My students' on an initial launcher screen of a teacher device (1700). In 'My students', general information determination is possible by charging class. Information displayed in 'My students' may be different depending on a charging teacher or a subject teacher. In a case of the charging teacher, a teacher name, the number of class students, semester information and the like may be displayed. In a case of the subject teacher, a teacher name, class information, the number of class students, semester information and the like may be displayed.

First, in a 'General info' Tab of 'My students', 'Move to other class' (1) may be used to view a student list of a corresponding class in a class charged by himself/herself or classes in which a course is ongoing. That is, opening of student information of other class associated with a corresponding teacher is possible. 'Search' (2) supports a search function in the whole student database, and 'Group' (3) provides a group creation function, and 'Add' (4) provides a student addition function, and 'Delete' (5) provides a student deletion function, and 'Sort by' (6) provides a function of setting a basis of sorting a student list. The sorting basis may be sorted in consideration of at least one of a student ID, a name, a group index, attendance, and prize/demerit. Also, 'Student info' (7) may provide a student ID, a student photograph, a name, an attendance and absence status, and prize/demerit about a life attitude. 'Attendance info' (8) represents attendance/absence information (i.e., absence, late, the number of times of leaving early and the like) accumulated per semester. In 'Message' (9), memo forwarding to a corresponding student is possible.

Here, when 'Search' (2) is selected in 'My students' (1701), the teacher device designates a search range. That is, the teacher device determines whether to search for all students ('All'), or whether to search for a student of a class charged by a charging teacher ('My class'), or whether to search for a student of a class taught by a teacher (1, 2, 3,...) (1702). Further, a keyword may be input through a search window. The keyword may be input through a software keypad, a virtual keypad, or a hardware keypad.

When search is executed after keyword input (1703), students corresponding to the key word may be searched within the designated range and displayed (1704).

Next, when a specific student is selected among the searched plurality of students, information about the specific student (i.e., charging teacher's student) may be displayed (1705). The student information may include at least one or more of a name of a student, an identifier, a birthday, a phone number, an e-mail address, a resident address, a phone number or e-mail address of a parent, an attendance/late/leaving early situation of the student and the like.

According to another exemplary embodiment, when a specific student is not a charging class student but a subject class student, information of a charging teacher of the specific student may be further added (1706).

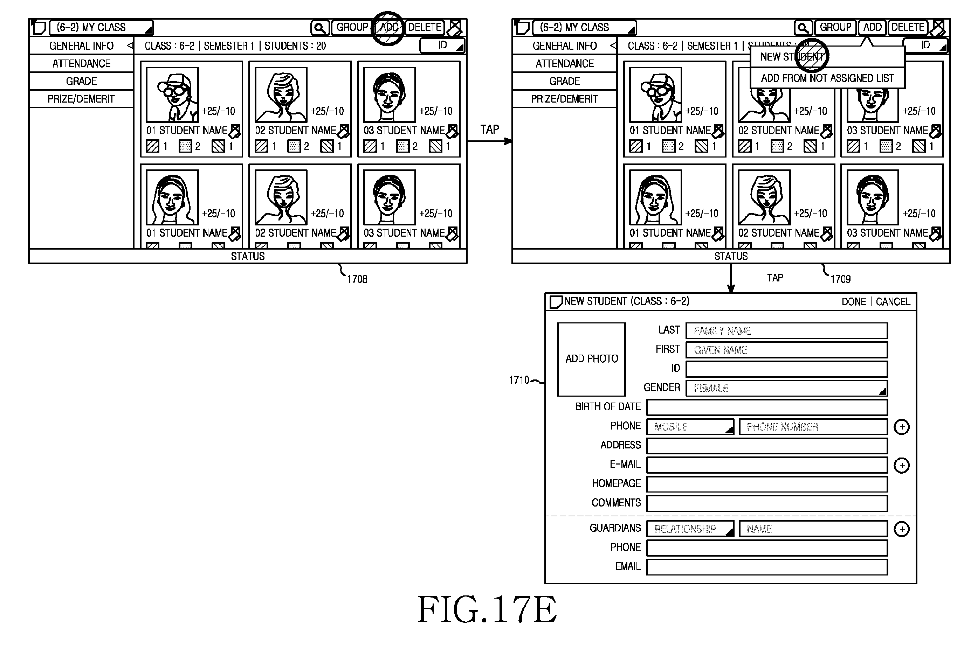

In 'My students', 'Group' (3) is selected to create/edit a group as in FIGS. 17E to 17M (1707). This is the same as a method of creating a corresponding course, registering a student, and designating the registered student as a group.

When 'Add' (4) is selected to add students being in a corresponding class in 'My students' (1708), it may be selected whether to add a new student ('New student') or whether to add from a student list assigned no room ('Add from not assigned list') (1709). After that, when 'New student' is selected, a window for inputting student information may be displayed (1710). The student information may include at least one or more of a name of a student, an identifier, a birthday, a phone number, an e-mail address, a resident address, a phone number or e-mail address of a parent, an attendance/late/leaving early situation of the student and the like.

On contrary, when 'Add from not assigned list' is selected (1711), a student list not assigned rooms may be displayed (1712). Next, by checking a check box one by one from the student list or selecting 'Select all', all students of the student list may be selected (1713). After that, when 'Add' is selected after selecting a plurality of students (1713), the selected students may be added to a corresponding class and displayed (1714).

When 'Delete' 4 is selected to delete students who are in a corresponding class in 'My students' (1715), a student list registered to the corresponding class is displayed and, by checking a check box one by one from the student list or selecting 'Select all', all students of the student list may be selected (1716). Next, when specific students are selected and then 'Done' is selected (1717), the selected specific students may be deleted from a corresponding class and displayed.

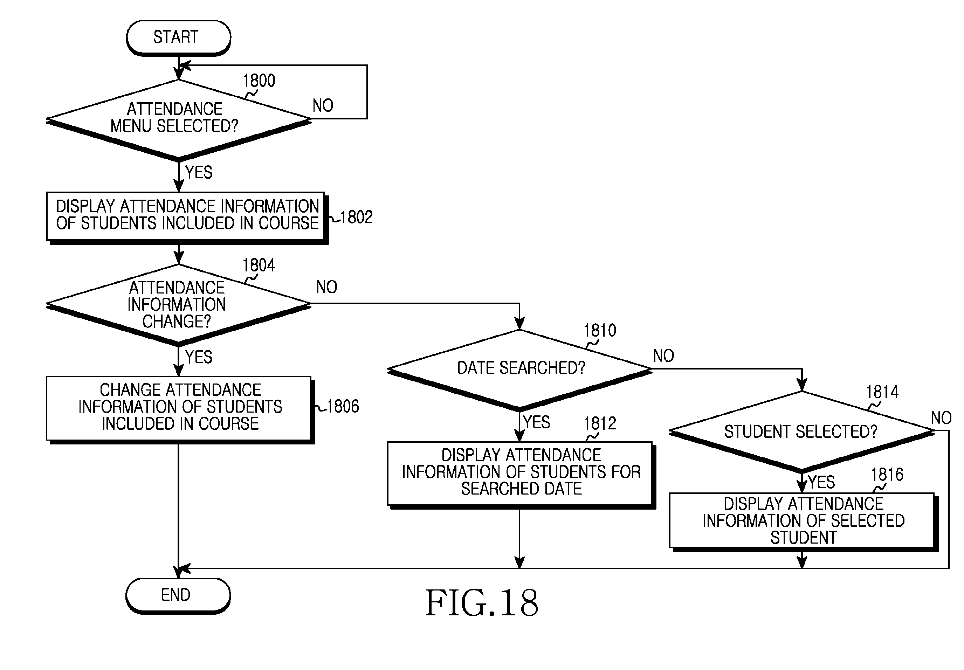

FIG. 18 is a flowchart illustrating an operation for student attendance management according to an exemplary embodiment of the present invention.

Referring to FIG. 18, upon attendance menu selection in step 1800, in step 1802, a teacher device displays attendance information of students who participate in a course. Upon attendance information change in step 1804, in step 1806, the teacher device changes attendance information of students included in the course. That is, the teacher device determines and displays attendance/ absence of all students of a charge class, and only a charging teacher may make an attendance/ absence change. The teacher device may receive an attendance/ absence/ late/ leaving early status on a basis of an initial course participation time, and final reflection is done by the charging teacher.

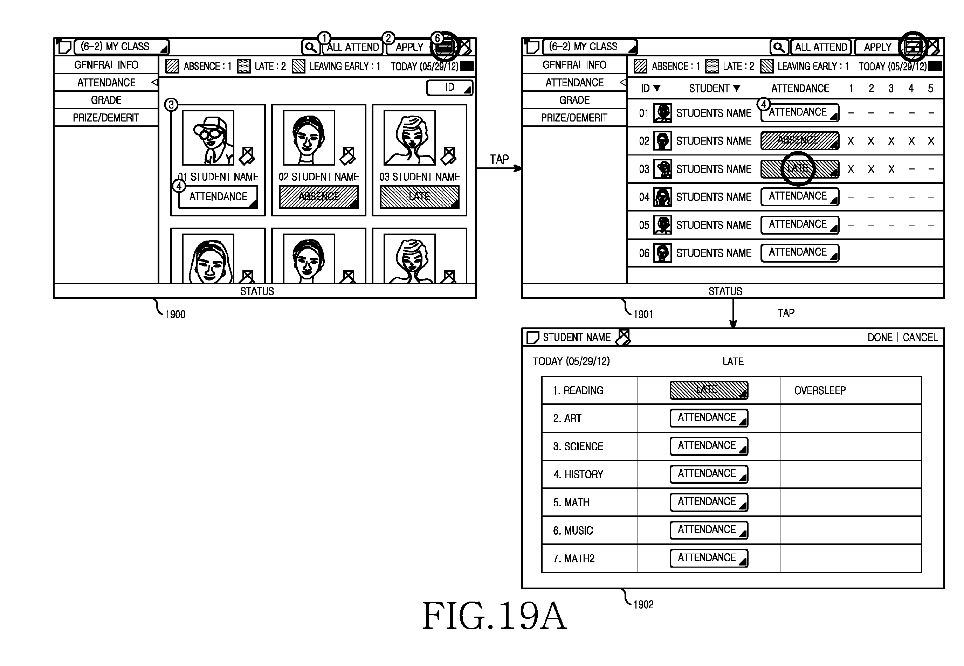

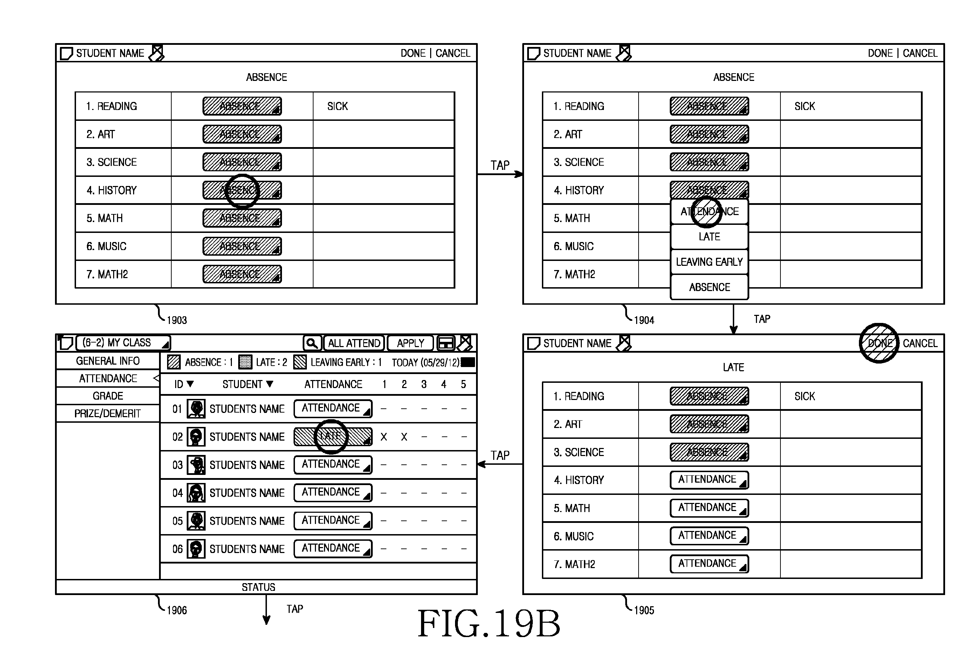

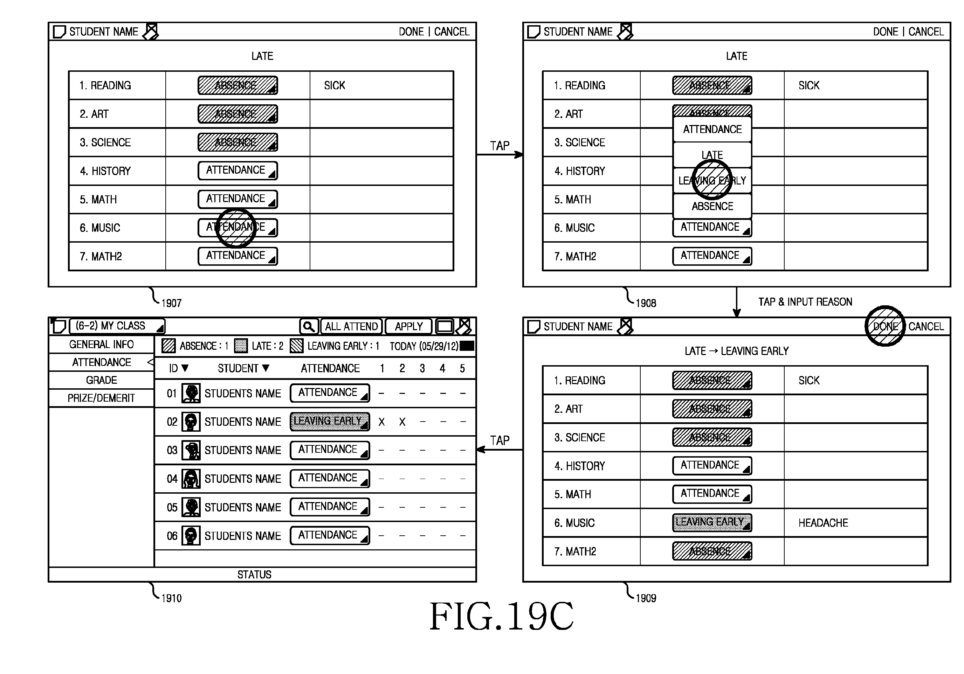

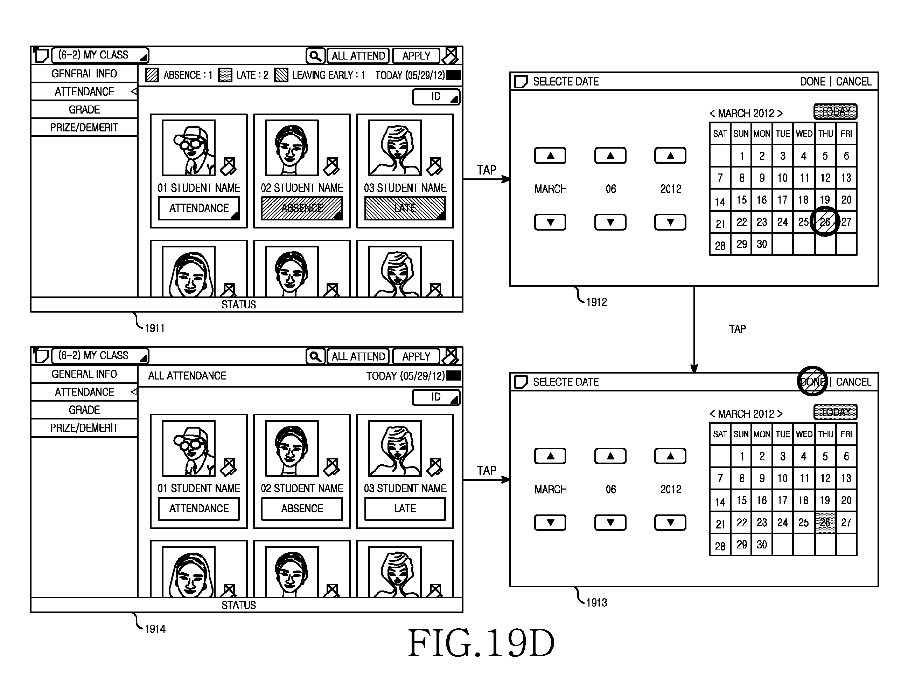

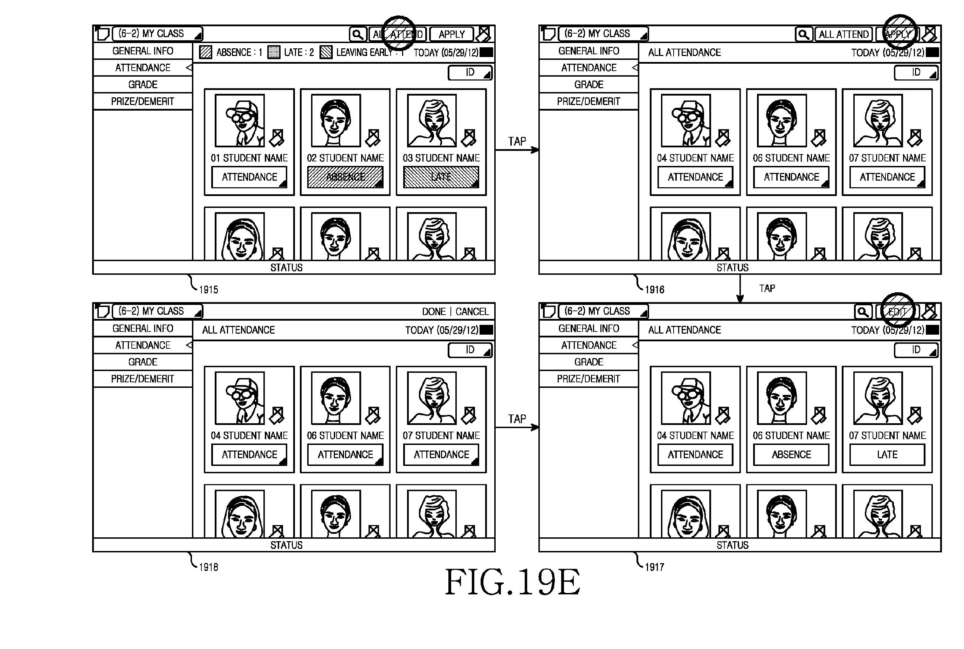

Upon date search in step 1810, in step 1812, the teacher device displays attendance information of students for a corresponding date. Upon student selection in step 1814, in step 1816, the teacher device outputs attendance information of a selected student. A detailed description of student attendance management of a teacher is made with reference to FIGS. 19A to 19E below.

FIGS. 19A to 19E are diagrams illustrating user interfaces for student attendance management according to an exemplary embodiment of the present invention.

In FIG. 19A, attendance/absence of all students of a charge class may be determined in Attendance tab of 'My students' and further, only a charging teacher may make an attendance/ absence change (1900). Attendance/ absence determination may be performed by receiving an attendance, absence, late, and leaving early status input from 'Start class' of an initial launcher screen. 'All attend' (1) is for collectively processing all students into attendance. 'Apply' (2) is for finally reflecting attendance/absence matters. 'Student info' (3) is for displaying at least one or more of a student ID, a student photograph, a name, and an attendance/ absence status. 'Attendance status' (4) is for changing attendance/absence status indication. 'Move to date' (5) is for popping up a calendar. Here, date selection is possible. An attendance status may be divided into 'Attendance' when it is all course attendance till a query time, 'late' when it is absence or late in a preceding course and then is attendance to a following course till a query time, 'leaving early' when it is attendance to a preceding course and it is absence and then leaving early in a following course till a query time, 'Absence' when it is all absence till a query time, and 'Others' in other cases (in a case of late attendance, not attendance and again attendance). In this exemplary embodiment, it is not limited to 'Attendance', 'late', 'leaving early', 'Absence', and 'Others'. The attendance status may be variously classified and defined. Further, there is a toggle button 6 of toggling a list mark.

In the Attendance tab of 'My students', when the toggle button 6 is selected, at least one or more of a student ID, a student photograph, a name, and an attendance/absence status may be displayed in a list form (1901). Here, when the toggle button 6 is again selected, it may return to a previous screen 1900.

After that, when 'Attendance status' (4) of a specific student is selected, an attendance/absence status by subject may be displayed in detail for the selected specific student (1902).

For another example, changing an absence status of a specific student is described. As in a screen 1903, when the first class hour ('Reading') is processed as absence, subsequent courses may be all checked as an absence status. Then, when a specific student attends the fourth class hour ('History'), the absence status may be changed into an attendance status (1904). At this time, after the fourth class hour ('History'), all courses may be changed into the attendance status (1905). At this time, because the student attends from the fourth class hour, a status is changed into 'Late'. After that, when 'Done' is selected, it may move to a screen reflecting matters changing the attendance/absence status into 'Late' and displaying a student list (1906).

Meanwhile, after the status of the specific student is changed into 'Late', when 'Attendance status' (4) of the specific student is selected to again change the attendance/absence status, the attendance/absence status of the specific student by class hour or by course may be displayed (1907). For example, the specific student is in the absence status during the first class hour to the third class hour and is in the attendance status during the fourth class hour to the seventh class hour.

Next, when the specific student leaves early at the sixth class hour, the teacher device may select an attendance/absence status of the sixth class hour and change 'Attendance' into 'Leaving early' (1908). Further, the seventh class hour of the specific student may automatically change from an 'Attendance' status to an 'Absence' status (1909). Next, upon 'Done' selection, it may move to a screen reflecting matters changing the attendance/absence status and displaying a student list (1910). At this time, the final attendance/absence status of the specific student may be set as a 'Leaving early' status.

Also, when 'Move to date' (5) is selected to move to a specific date and determine attendance/absence statuses of class students in an Attendance tab (1911), a calendar popup window may be displayed (1912). Here, as the specific date, a specific date (e.g., March 26, 2012) may be selected in a calendar or a specific date may be set by using a control key (▼▲). After the specific date is selected, upon 'Done' selection (1913), a student list indicating the attendance/absence statuses of the class students of the specific date may be displayed (1914).

Also, to collectively change attendance statuses of all class students into 'Attend' statuses in the Attendance Tab, the teacher device may select 'All select' (1915). Next, upon 'Apply' selection, the attendance statuses of all class students may be changed into 'Attend' (1916). Next, instead of an 'Apply' button, an 'Edit' button may be activated (1917). Next, the teacher device may change an attendance status of a specific student. After the change, upon 'Edit' selection, it may move to a screen reflecting matters changing an attendance status and displaying a student list (1918).

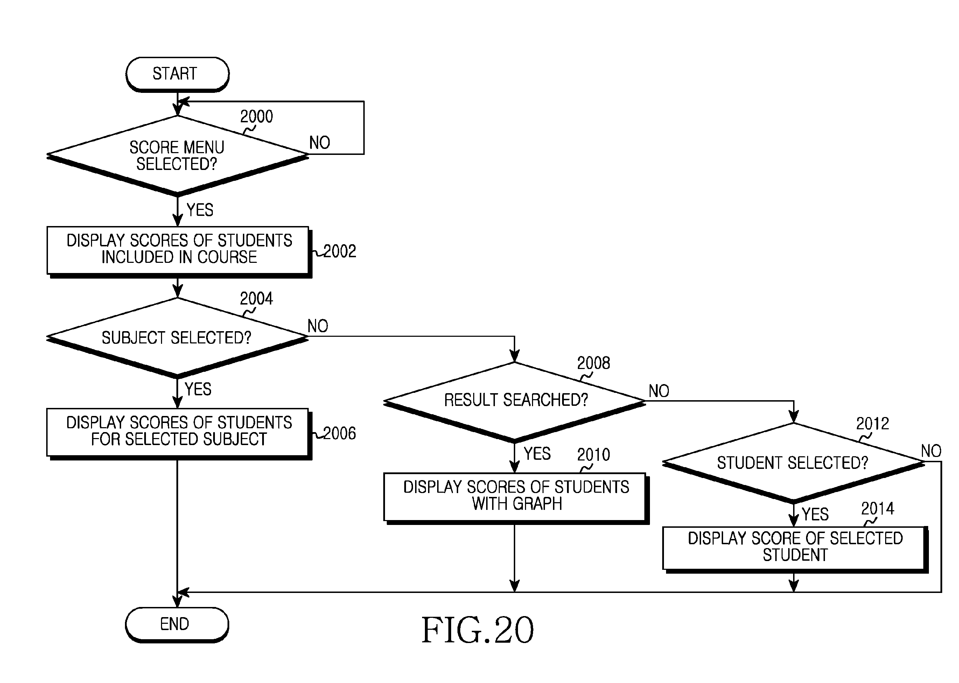

FIG. 20 is a flowchart illustrating student grade management according to an exemplary embodiment of the present invention.

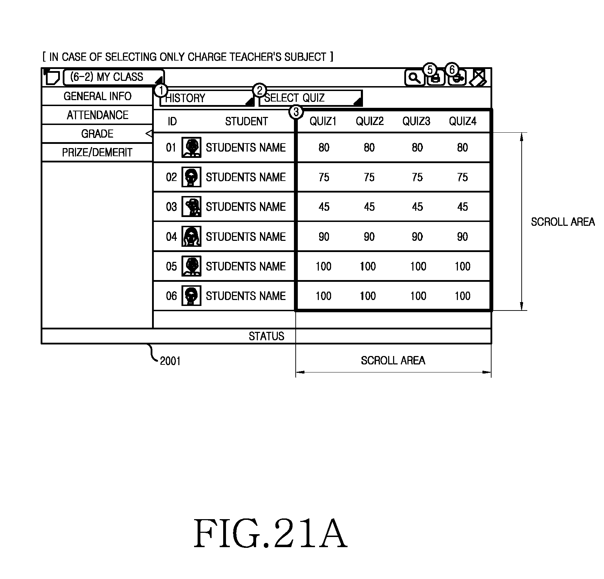

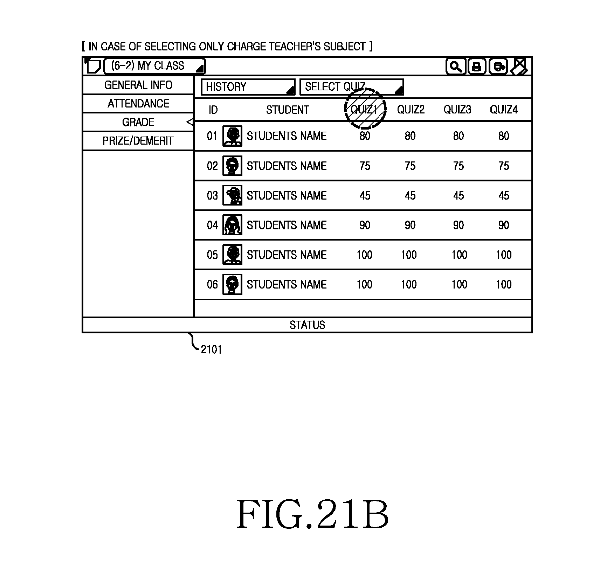

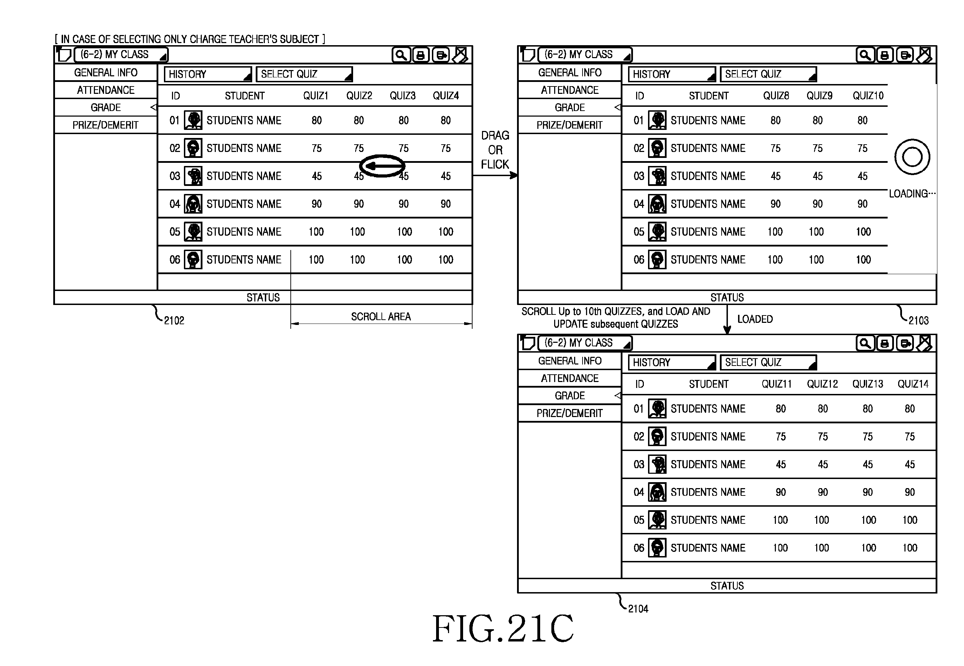

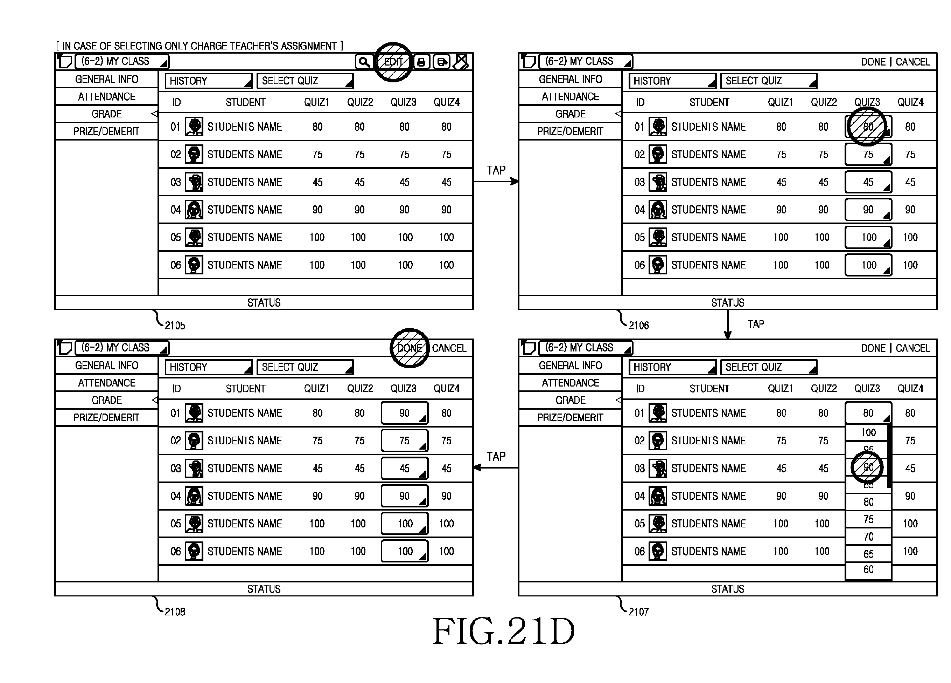

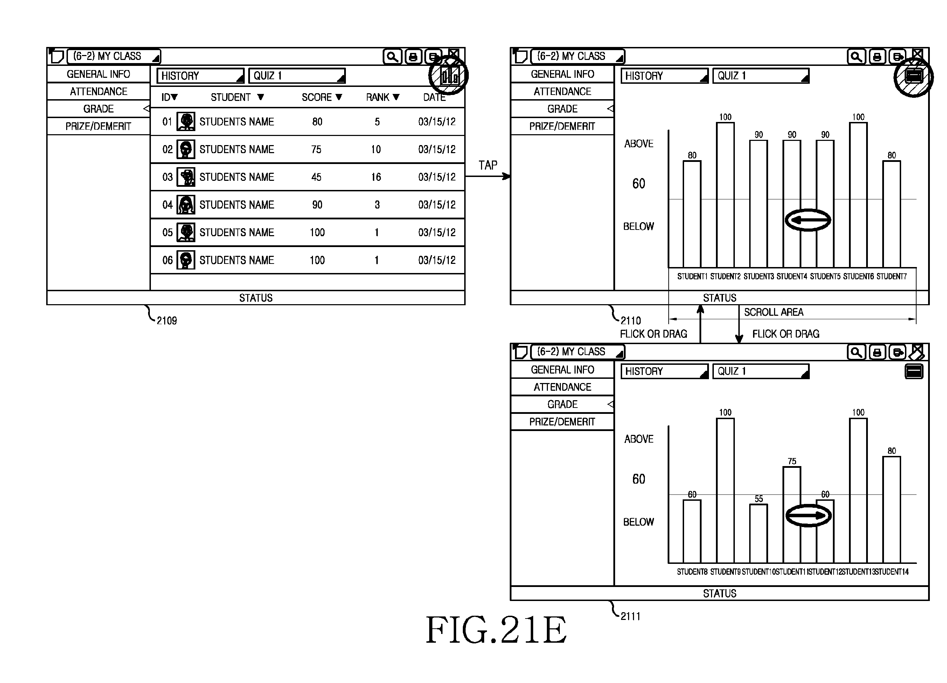

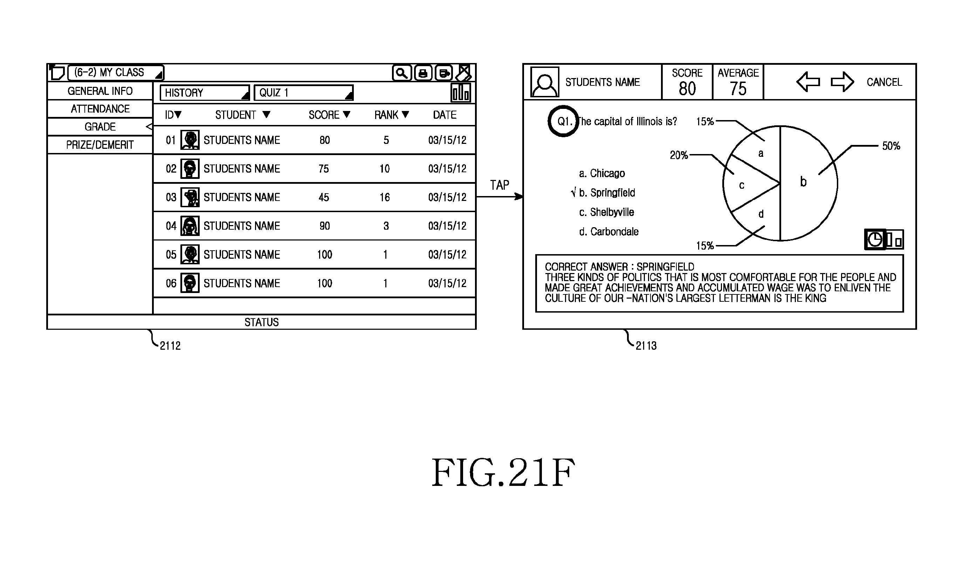

Referring to FIG. 20, upon grade menu selection in step 2000, in step 2002, a teacher device displays grades of students included in a course. Upon subject selection in step 2004, in step 2006, the teacher device displays grades of students for the selected subject. Upon result search in step 2008, in step 2010, the teacher device displays the grades of the students with a graph. Upon student selection in step 2012, in step 2014, the teacher device displays a grade of a selected student. A detailed description of student grade management of a teacher is made with reference to FIGS. 21A to 21F below.

FIGS. 21A to 21F are diagrams illustrating user interfaces for student grade management according to an exemplary embodiment of the present invention.

In FIG. 21A, a grade of each of quizzes of all students of a charge class of a teacher may be inquired in a Grade Tab of 'My students' (2100).

In 'Subject' (1), subjects of all students may be provided and selected by a user. In a case of a charging teacher, the default may be the first subject of ABC order and, in a case of a subject teacher, the default may be a subject indicated by itself. In 'Quiz' (2), a quiz corresponding to the selected subject may be selected. As a quiz result, a plurality of quiz results by student may be viewed in an output region 3. In 'Edit' (4), the charging teacher or the subject teacher may all edit only a score of its own subject. 'Printer' (5) may connect a printer and output the quiz result. 'Export Excel' (6) may store the quiz output result in Excel file.

Here, when a specific quiz (e.g., Quiz 1) is selected (2101), it may be analyzed through a graph result identically with FIGS. 9E to 9F.

Meanwhile, when the whole quiz result is not displayed in one screen due to a limit of a screen size, as in a screen 2102, the teacher device may have the unviewed quiz result viewed on the screen through a drag or flick gesture of left direction (2103 and 2104). For example, when only results of Quiz 1 to Quiz 4 are previously viewed, the next quiz results are loaded through a user gesture (2103) and then, Quiz 11 to Quiz 14 may be displayed (2104).

In one exemplary embodiment, upon 'Edit' selection in a Grade Tab of 'My students', it may enter an edition mode (2105). In the edition mode, a charging teacher or a subject teacher may edit a score of his/her own subject. For example, a quiz score of a specific student is selected (2106) and then, a score to be changed is selected (2107) and then, upon 'Done' selection, the changed score may be applied and provided (2108).

In one exemplary embodiment, when a quiz graph output toggle button is selected in the Grade Tab of 'My students' (2109), each of quiz scores of all students of a charge class of a teacher may be output and given in a bar graph form (2110). Inversely, when the quiz graph output toggle button is selected, it may return to a previous screen (2109).

Here, a graph form is not limited to a bar graph, and various graph forms may be given. Also, scores of next students may be more viewed through a left drag or flick gesture (2111), and scores of previous students may be more viewed through a right drag or flick gesture (2112).

Meanwhile, when a specific quiz is selected and a specific student is selected (2113), a circle graph corresponding to statistics data of specific student's score, average score, quiz question and answer, and answers submitted by other students may be provided. For example, statistics submitting answers of 'a', 'b', 'c', and 'd' for a corresponding quiz question may be given.

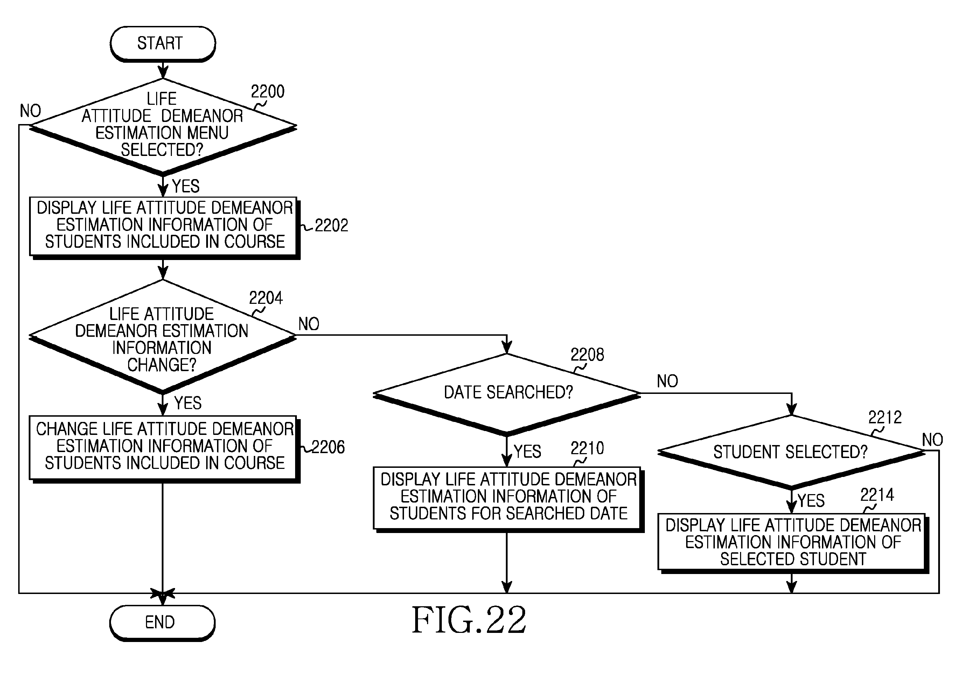

FIG. 22 illustrates an operation for life attitude estimation management of a student according to an exemplary embodiment of the present invention.

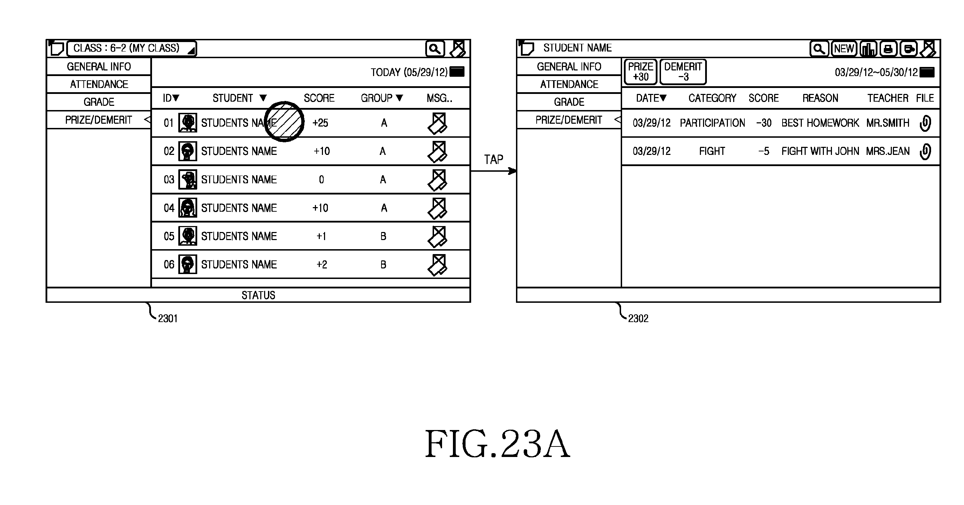

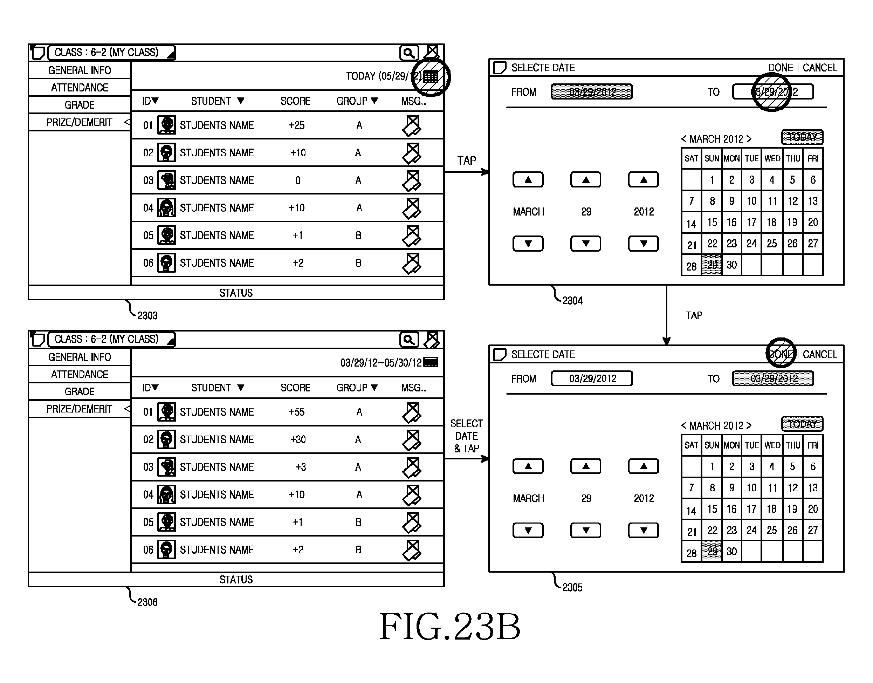

Referring to FIG. 22, when a life attitude estimation menu is selected in step 2200, in step 2202, a teacher device displays life attitude estimation information of students included in a course. Upon life attitude estimation information change in step 2204, in step 2206, the teacher device changes the life attitude estimation information of the students included in the course. Upon date search in step 2208, in step 2210, the teacher device displays life attitude estimation information of students for a corresponding date. Upon student selection in step 2212, in step 2214, the teacher device outputs life attitude estimation information of the selected student. A detailed description of life attitude estimation management of a teacher is made with reference to FIGS. 23A and 23B below.

FIGS. 23A and 23B are diagrams illustrating user interfaces for life attitude estimation management of a student according to an exemplary embodiment of the present invention.

As in FIG. 23A, each life attitude estimation of all students of a charge class of a teacher may be inquired in a Prize/Demerit Tab of 'My students' (2301). A score for life attitude may be given by accumulation (+/-) of scores estimated by other teachers including a charge teacher. Here, when a specific student is selected, a life attitude score of the specific student of a specific date may be output in a list form (2302). At this time, a score estimated by a corresponding teacher may be marked by separated color to be distinguished from a score estimated by other teacher.

Meanwhile, to determine a life attitude estimation score at a specific date or during a specific period, 'Move to date' (1) is selected (2303) and then, a calendar is popped up such that a teacher may select the specific date or the specific period. Here, a user may set the specific date or the specific period (2304). For example, if start date input is activated and a specific date is designated in the calendar, the specific date is input as a start date and, if end date input is activated and a specific date is designated in the calendar, the specific date may be input as an end date. In another exemplary embodiment, the start date input is activated and the end date is set using a control key (▼▲) and, the end date input is activated and the end date may be set using the control key (▼▲).

After the specific date or the specific period is set, upon 'Done' selection (2305), each life attitude estimation score of a student of a corresponding class may be given at the set specific date or specific period (2306).

Meanwhile, as in FIG 16, FIG. 18, and FIG. 20, attendance/absence management, grade management, and life attitude management are managed by class and, in another exemplary embodiment, a teacher may also conduct the attendance/ absence management, the grade management, and the life attitude management by student.

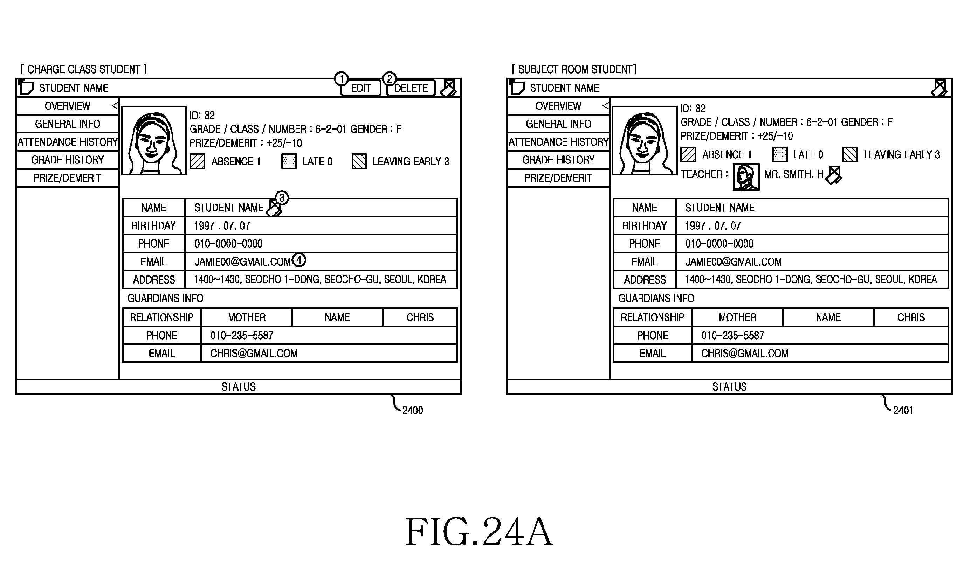

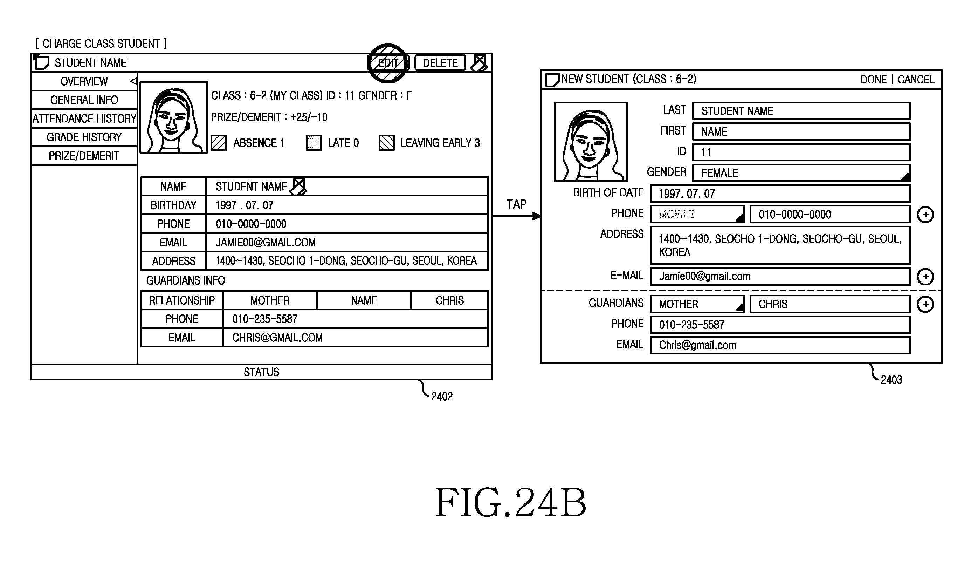

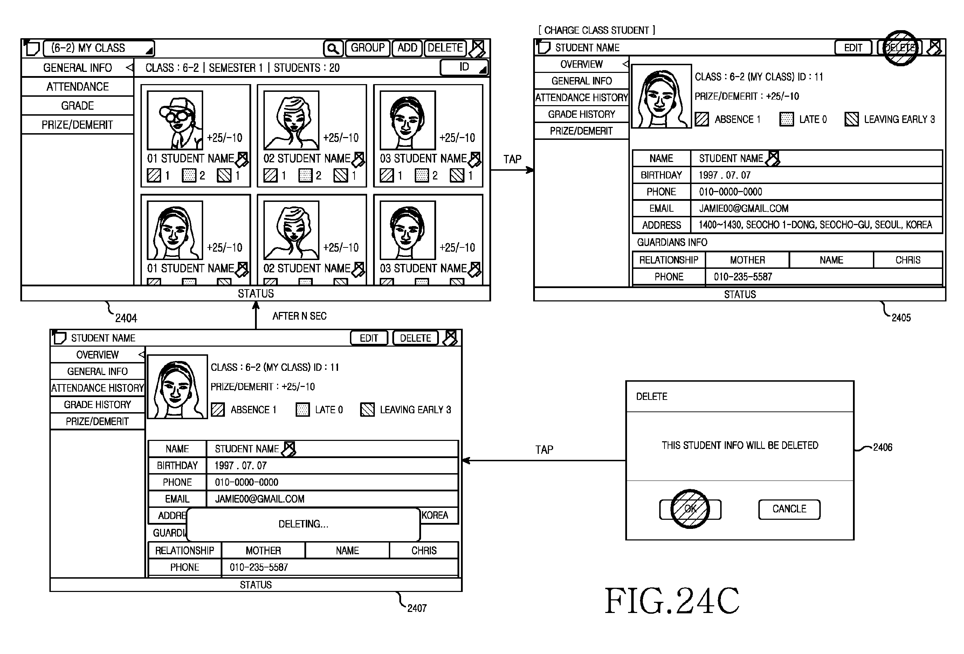

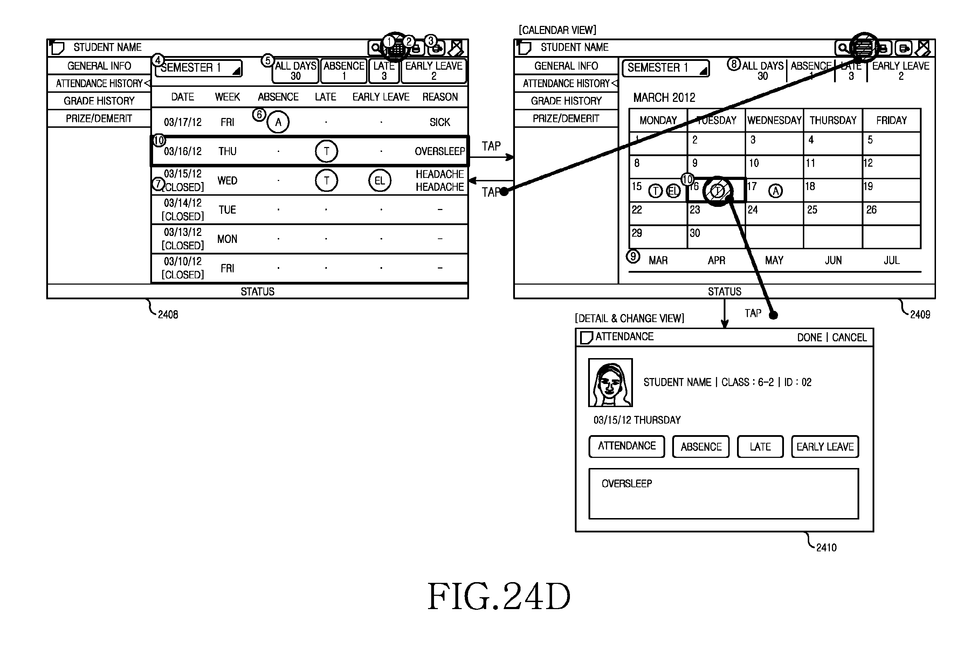

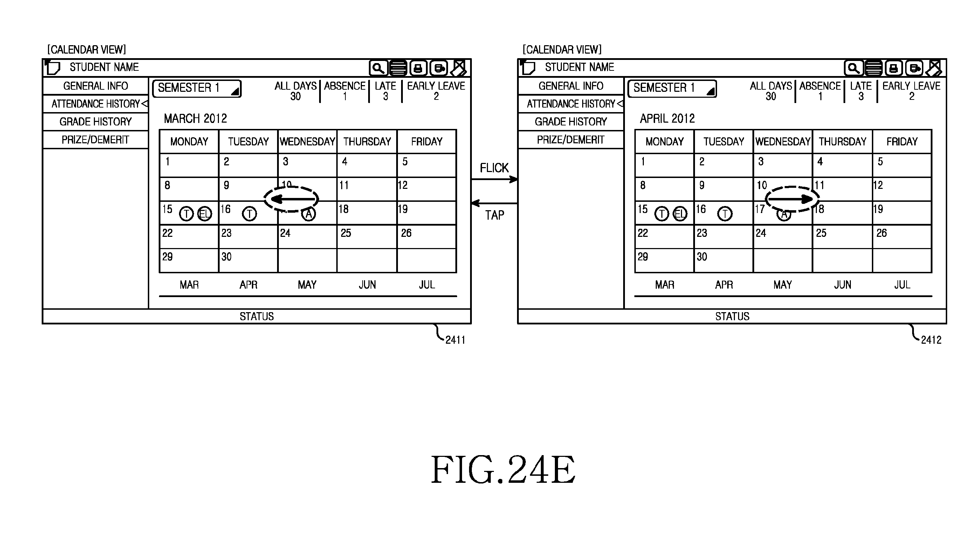

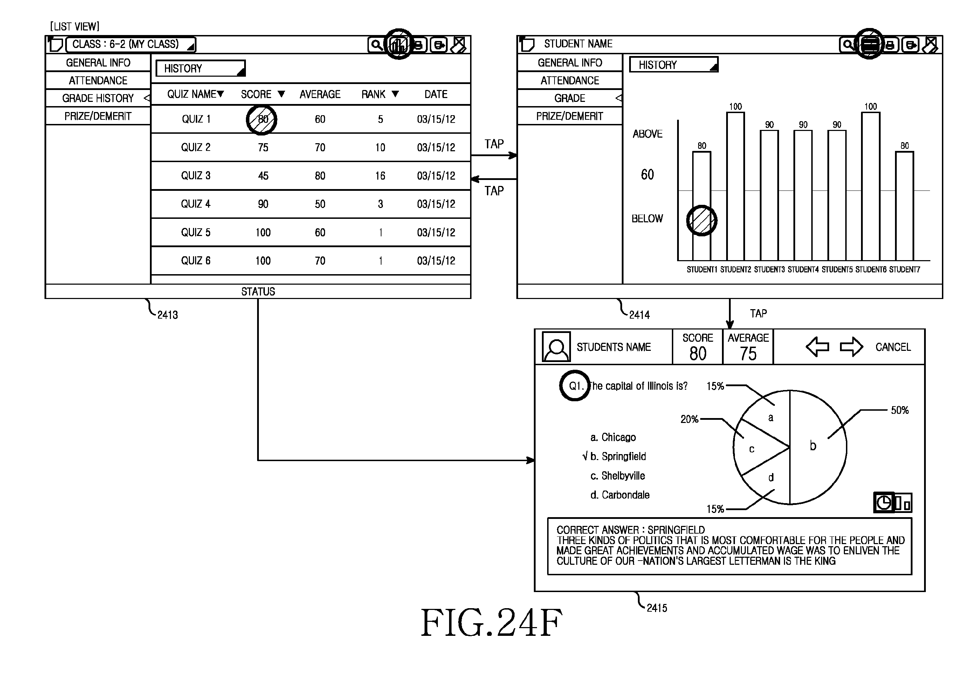

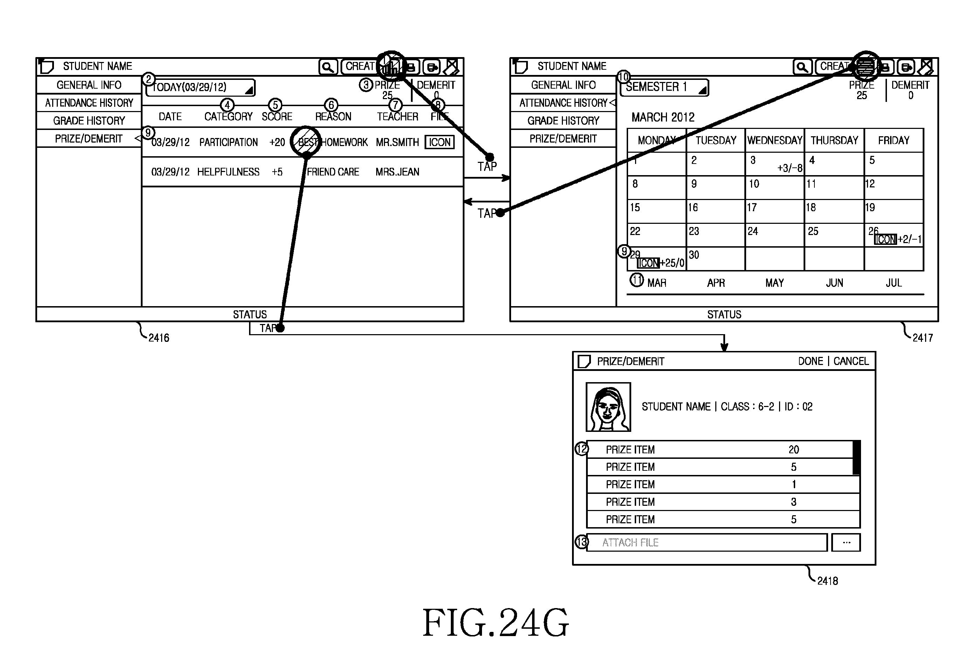

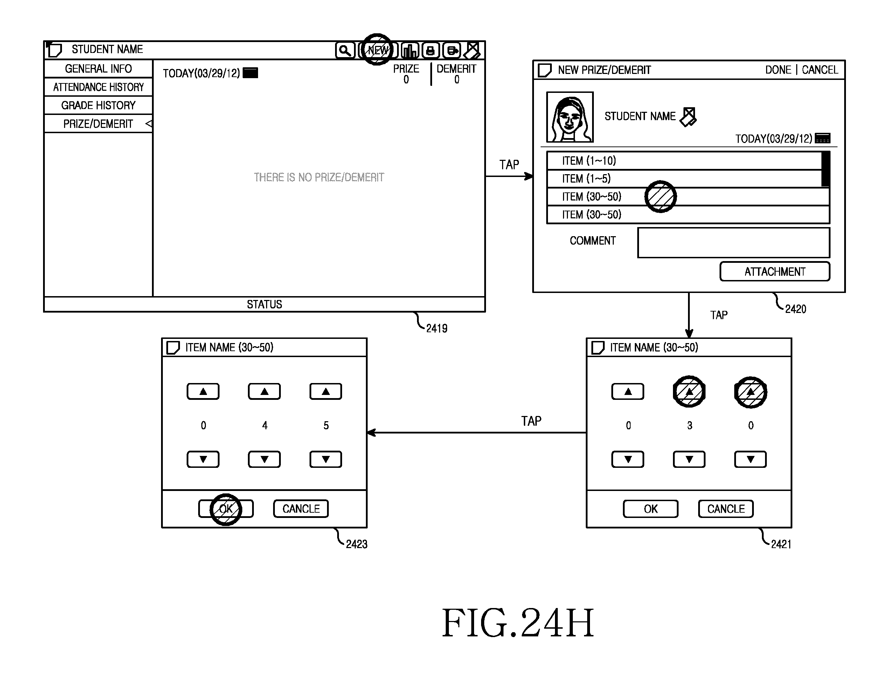

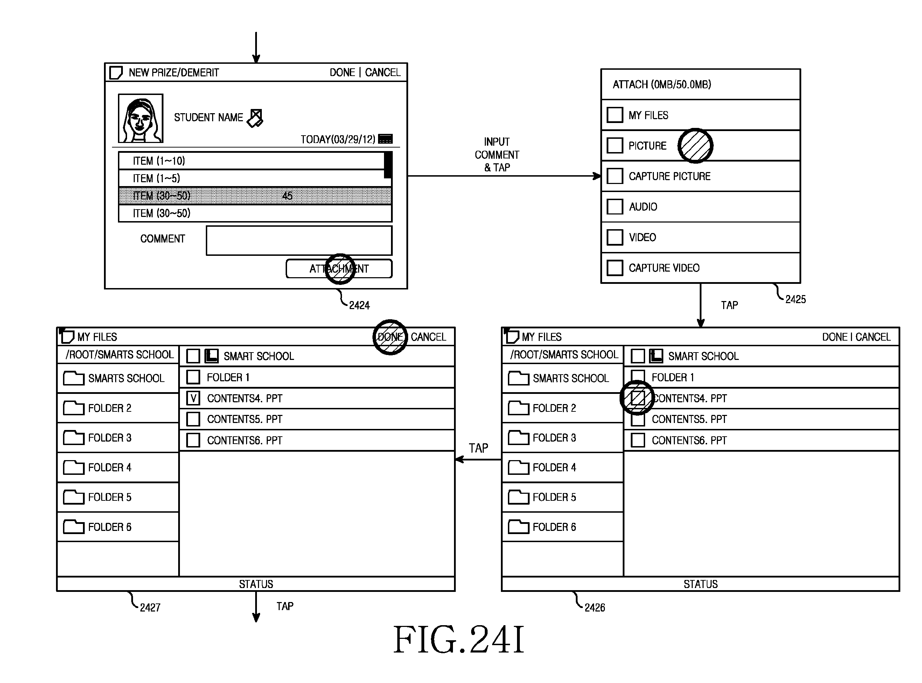

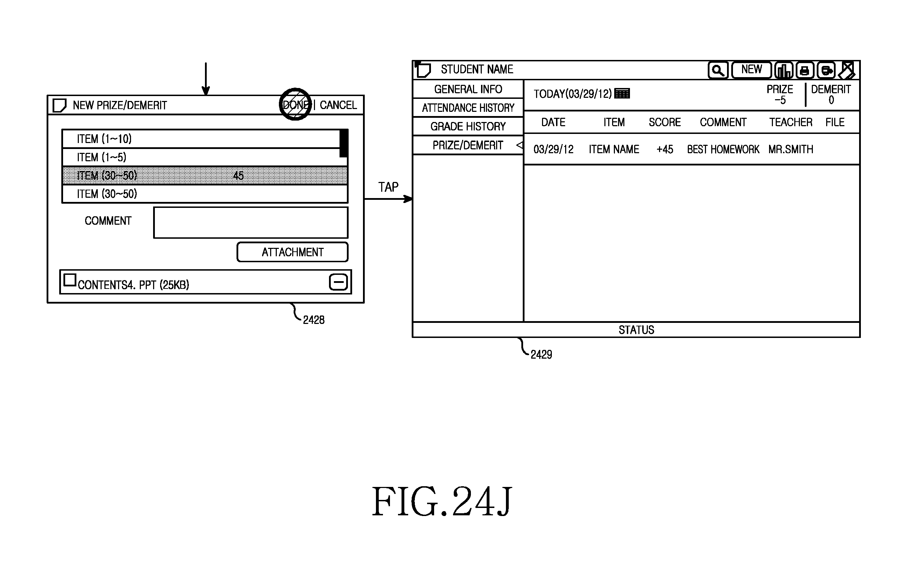

FIGS. 24A to 24J are diagrams illustrating user interfaces for attendance/ absence management of a specific student, grade management, and life attitude management according to an exemplary embodiment of the present invention.

FIG. 24A illustrates a screen when 'General info' about a specific student is selected in 'My students'. That is, as in a screen 2400, detailed information about the specific student may be displayed. Here, 'Edit' (1) is for student information edition. At this time, the student information edition is possible only in a device of a charging teacher. 'Delete' (2) is for student deletion, and 'message' (3) is for making and transmitting an instant message to a corresponding student. When 'Email address' (3) is selected, it is switched to an email making screen while instant email making is possible. Meanwhile, student information displayed may be different depending on a charging teacher or a subject teacher. For example, in a case of the subject teacher, information about a charging teacher or subject teacher of a specific student may be displayed further to information of the specific student (2405).

Here, upon 'Edit' selection in 'General info' of 'My students' (2402), it may enter an edition mode capable of editing the information of the specific student (2403).

In another exemplary embodiment, when a specific student is selected in 'My students / My class / A Student info' (2404), information about the specific student may be viewed (2405). After that, when 'Delete' is selected to delete a specific student from a specific class (2405), a popup window inquiring whether to delete a specific student may be displayed (2406). After that, when 'OK' is selected in the popup window, the specific student may be deleted from the specific class (2407).

In a further exemplary embodiment, as in a screen 2408, the present condition of attendance/absence of one specific student may be inquired in 'My students / My class / A Student info / Attendance history', Here, 'View by' (1) is a button toggling 'List view' or 'Calendar view', and 'Print' (2) is a button outputting the present condition of attendance/absence of a specific student to a printer, and 'Excel export' (3) is a button of converting the present condition of attendance/absence of a specific student into Excel file and outputting, and 'Select Semester' (4) is a selection window for selecting a corresponding semester such as 'Semester 1', 'Semester 2' and the like. In 'Info & Filtering Button of All days / Absence / Late / Early leave', upon determination and selection the number of days attending up to now during the first semester, a corresponding list is filtered and shown. For example, 'All days' shows an attendance/absence status for 30 days, and 'Absence' filters and shows an attendance date, 'Late' filters and shows a late date, and 'Early leaves' filters and shows an early leaving date. 'Status icon' (6) represents an attendance/absence status of 'Absence/Late/Early leave' and the like of a specific date, and 'Closed' (7) means attendance/absence closing, and 'Info' (8) shows only information in 'Calendar view', and 'Select month' (9) shows only a month of one semester, and 'Detail view & Change attendance' (10) pops up and shows a detailed output status for a selected date.

Upon 'View by' (1) selection, as in a screen 2409, the present condition of attendance/absence of a specific student is displayed in a calendar form and, upon again 'View by' (1) selection, as in a screen 2408, the present condition of attendance/absence of the specific student is displayed in a list form.

When the present condition of attendance/absence of a specific student is displayed in a calendar form, when a specific date is selected (2409), detailed attendance/absence information about the specific student at a specific date may be displayed (2410). Meanwhile, as in screens 2011 and 2411, in a screen displaying the present condition of attendance/absence of a specific student in a calendar form, upon user gesture (e.g., scroll or flick operation), for example, left flick operation, an attendance/absence of a specific student of a next month is given (2011) and, upon right flick operation, an attendance/absence status of a specific student of a previous month may be given.

In another exemplary embodiment, as in a screen 2411, a grade score of one specific student may be inquired in 'My students / My class / A Student info / Grade history'. Here, when a graph output toggle button is selected, as in a screen 2412, a grade score of one specific student may be output by quiz with a bar graph. Here, graph output is not limited to the bar graph and various graph forms may be illustrated. Here, when the graph output toggle button is again selected, as in a screen 2411, a grade score of one specific student of a list form may be given. When a quiz submitted by a specific student is selected in a screen 2413 or 2414, that is, when one quiz is selected in a quiz list or a bar corresponding to a specific quiz is selected in a bar graph, as in a screen 2415, information about the specific quiz may be displayed.

For example, a circle graph corresponding to statistics data of specific student's score, average score, quiz question and answer and answers submitted by other students may be provided for a specific quiz. For example, statistics submitting answers of 'a', 'b', 'c' and 'd' for a corresponding quiz question may be shown.

In another exemplary embodiment, as in a screen 2416, a life attitude estimation score of one specific student may be inquired in 'My students / My class / A Student info / Prize/Demerit' and also, only a score estimated by a teacher may be edited. Here, 'View by' (1) is a button toggling 'List view' or 'Graph view', and 'Sort by' (2) is a button selecting/searching by 'Today / Week 1 / 1 month / Semester', and 'Total' (3) shows the total score by selected date. 'Category' (4) is a category for life attitude estimation, and 'Score' (5) is a score estimated to a specific student within a preset score range (e.g., +20/-20), and 'Reason' (6) is the reason of life attitude estimation made by a teacher, and 'Teacher' (7) is teacher identification information giving a life attitude estimation score, and 'File' (8) is a file attached for objective reason. Further, a score given by a corresponding teacher may be marked by separate color (9). 'Semester' (10) is a window for selecting a corresponding semester during 'Semester 1' / 'Semester 2', and 'Select Month' (11) displays a month belonging to one semester, and 'Prize/Demerit items list' (12) is a category defined every school, and defines a life attitude estimation list and a score corresponding to the estimation list, and 'Attach file' (13) may attach a related file.

When a toggle button of 'View by' (1) is selected in a screen 2416, as in a screen 2417, a life attitude estimation score of one specific student of a calendar form is displayed and, inversely, as in a screen 2417, when a toggle button of 'View by' (1) is selected as in a screen 2417, as in a screen 2416, a life attitude estimation score of one specific student of a list form is displayed.

Meanwhile, when specific life attitude estimation of a specific student is selected, as in a screen 2418, a life attitude estimation list and score and an attachment file item are given. At this time, a teacher device may edit a specific life attitude estimation item.

Meanwhile, when 'New' is selected to create a new life attitude estimation item of a specific student in 'My students/ My class/ A Student info/ Prize/ Demerit' (2419), a screen for designating a score range for life attitude estimation is given (2420). After that, when the score range for the life attitude estimation is selected, as in a screen 2421, an estimation score may be adjusted within the life attitude estimation score range. For example, an estimation score may be adjusted within the life attitude estimation score range (e.g. 30 to 40) by using control keys (▼▲). Next, after the life attitude estimation score is determined, upon 'OK' selection (2423), the score determined within the life attitude estimation score range (e.g., 30 to 40) may be applied and displayed (2424). Next, upon 'Attachment' selection, a directory list is displayed (2426) and, upon specific folder selection, a file list of a specific folder may be displayed (2427). After that, when a specific file is selected within a specific folder, a check box becomes a check status and then, upon 'Done' selection, the estimation score (e.g., 45) determined within the life attitude estimation score range (e.g., 30 to 40) and a specific file attached are given (2428) and then, upon 'Done' selection, a life attitude estimation score may be added for a specific student (2429).

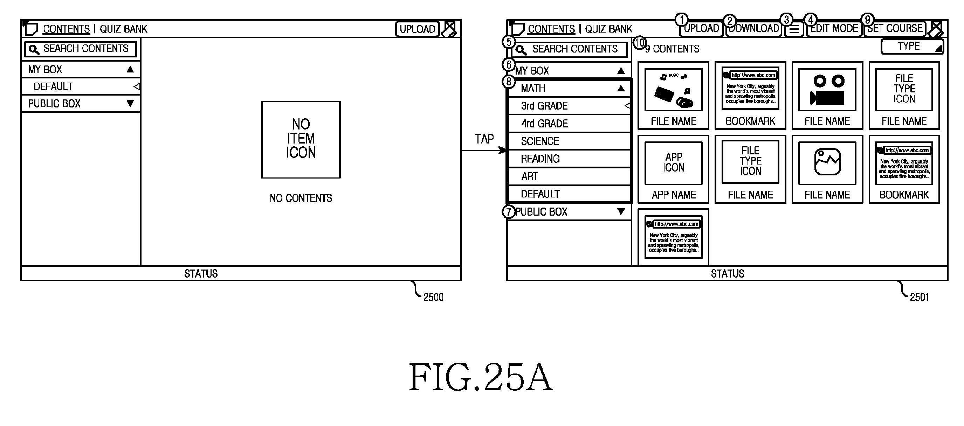

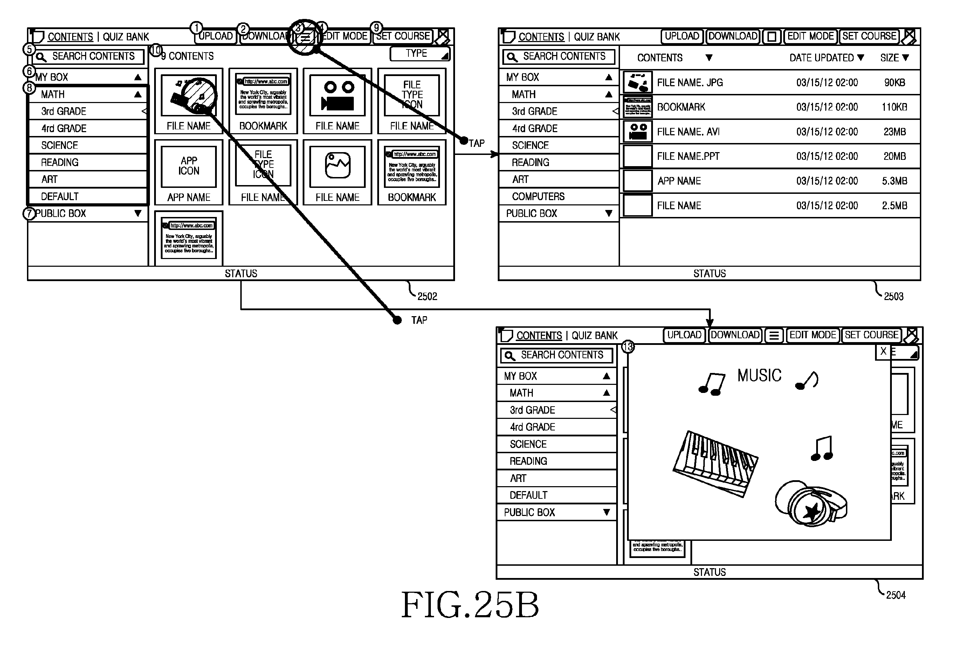

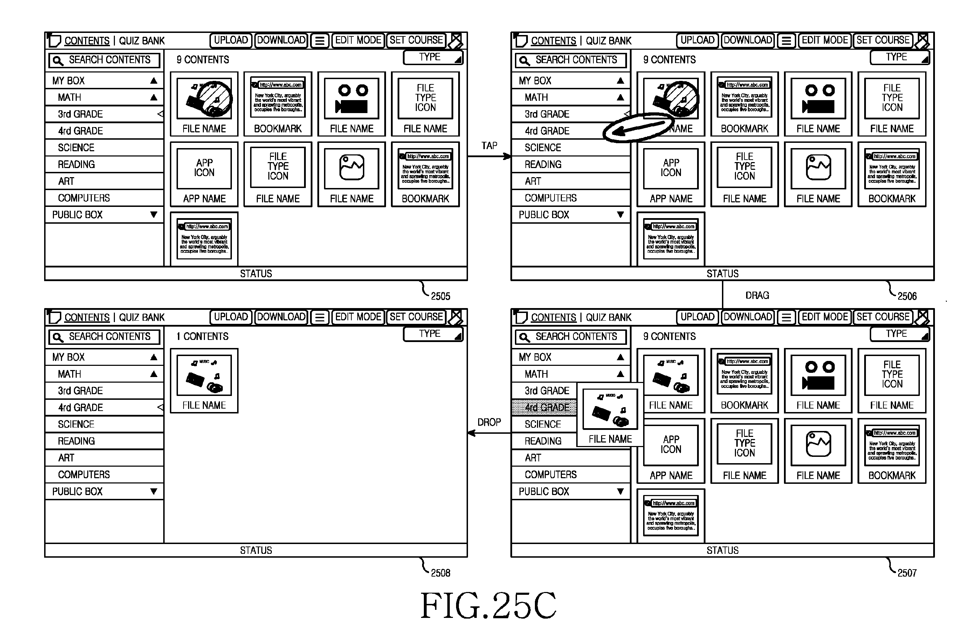

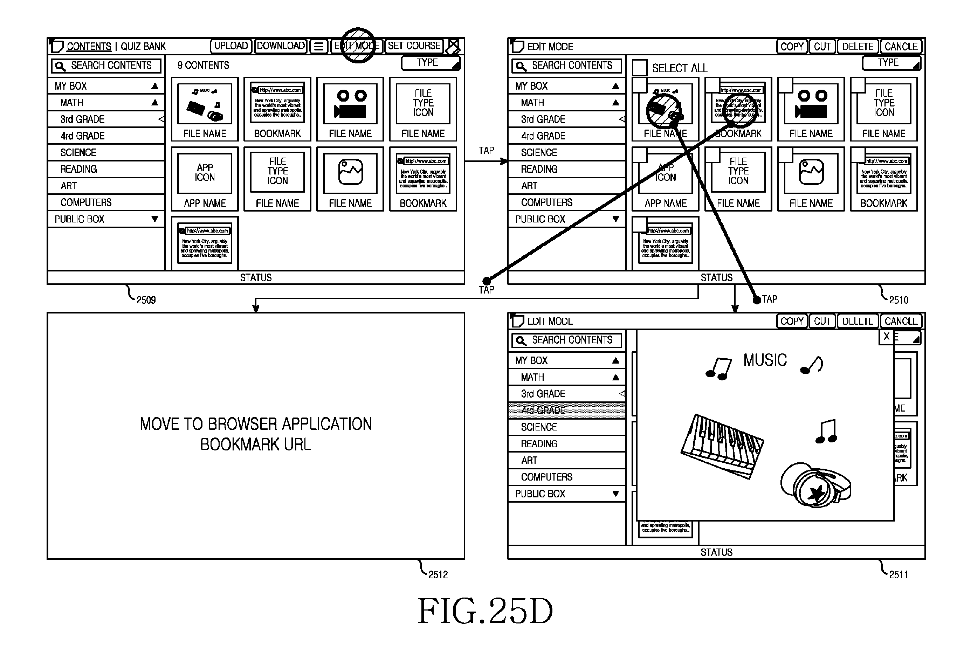

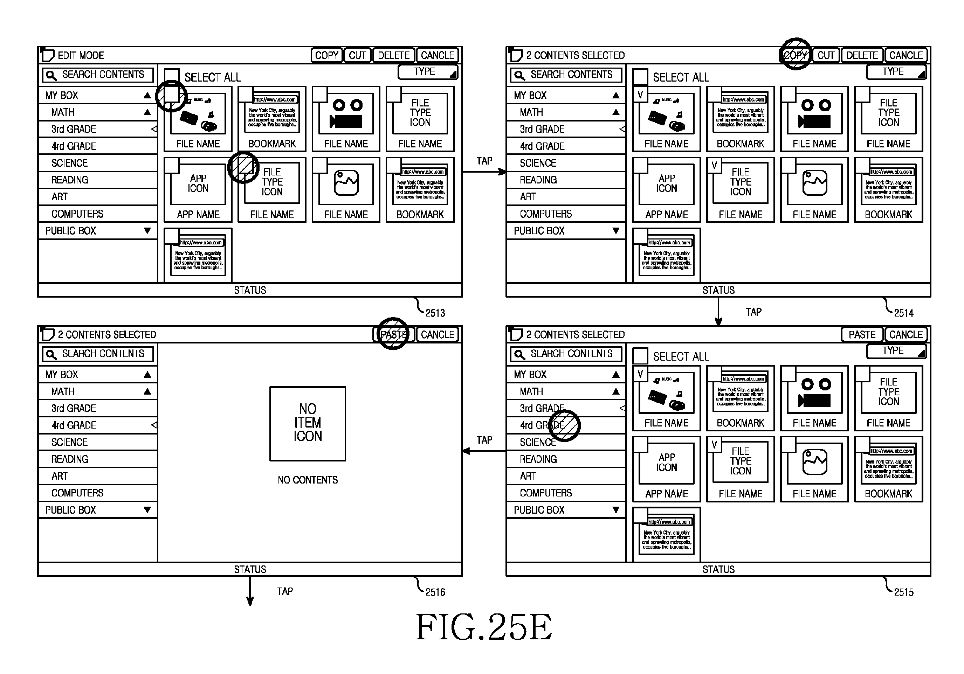

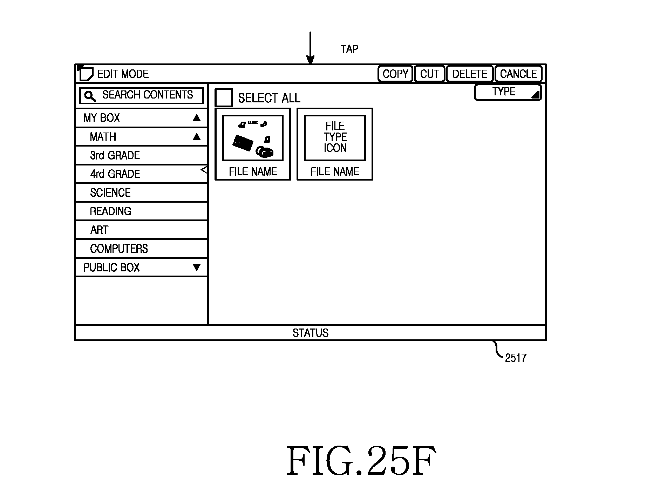

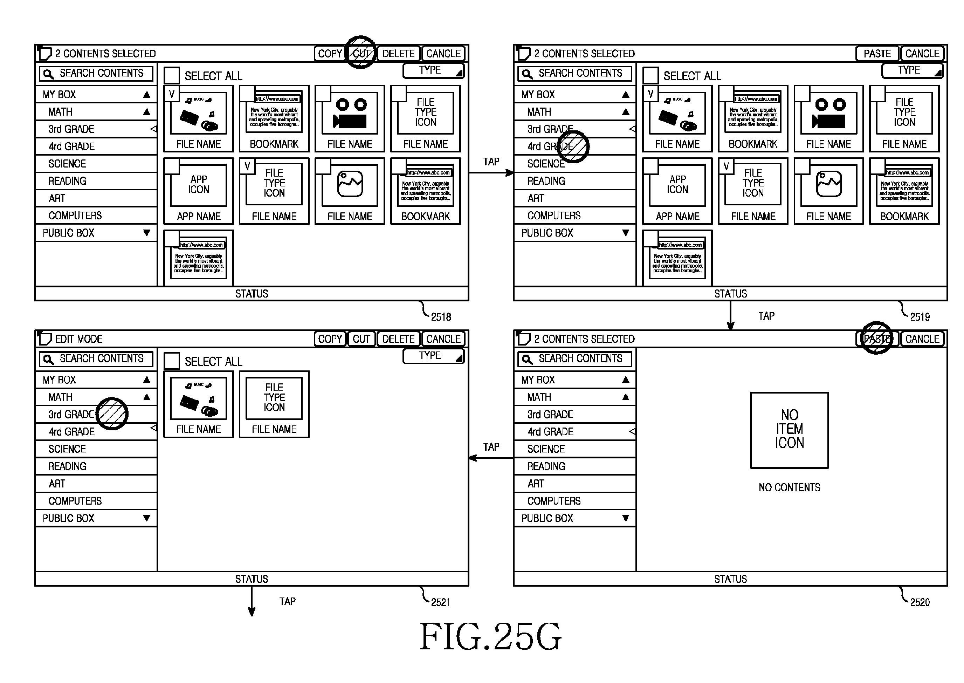

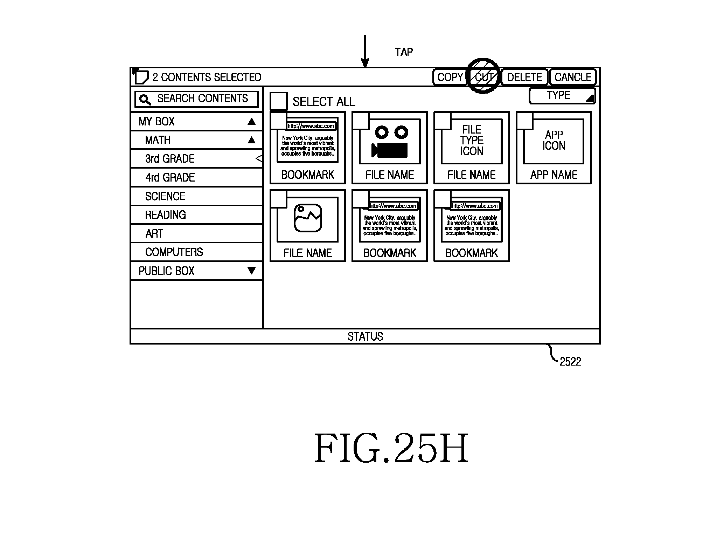

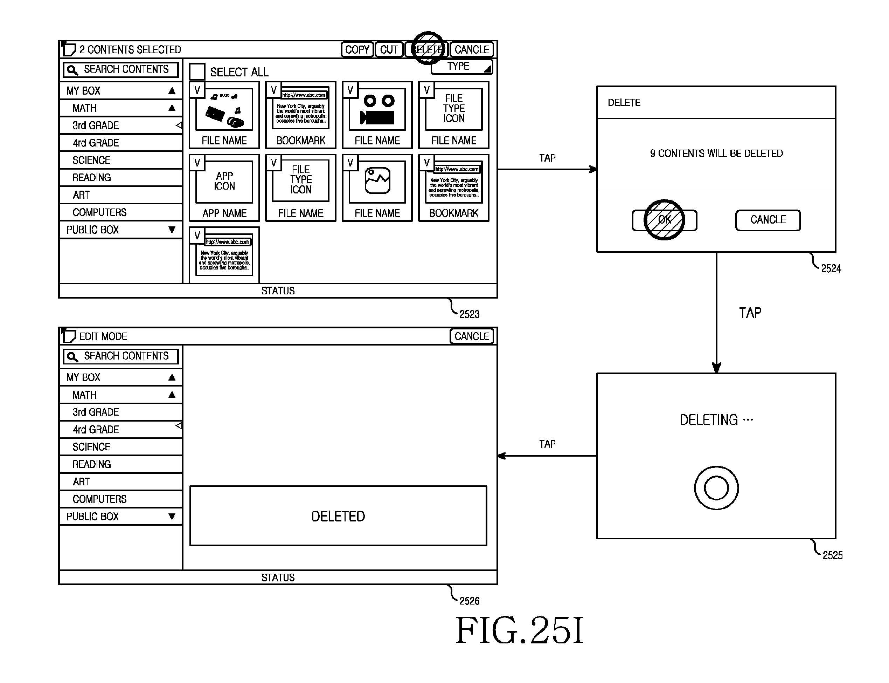

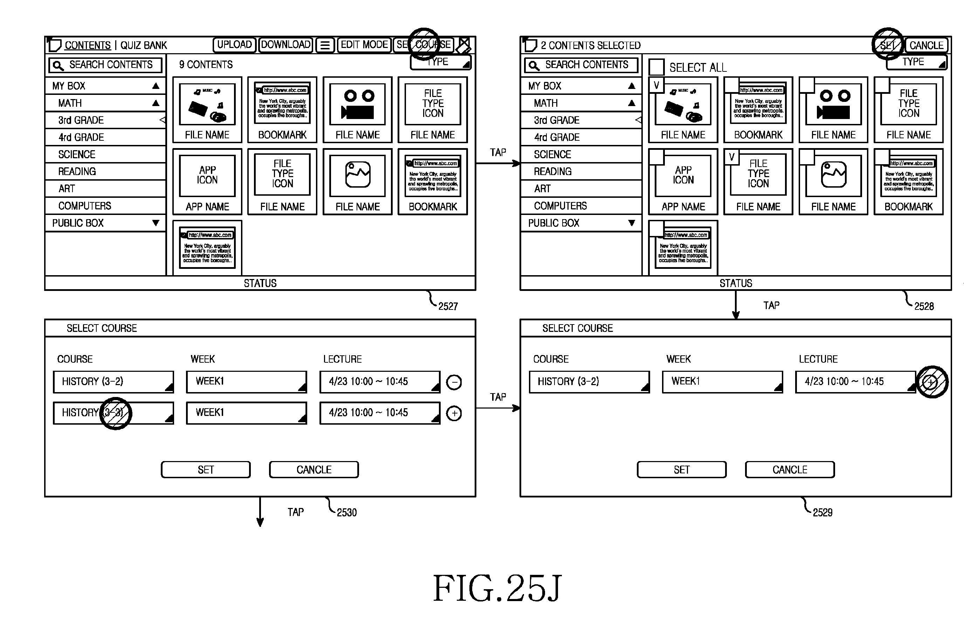

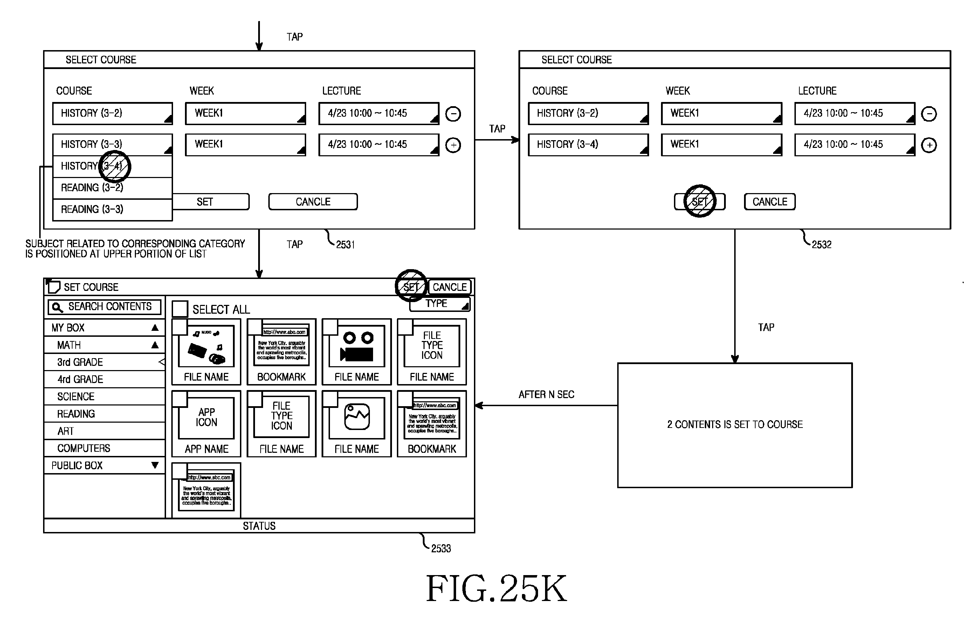

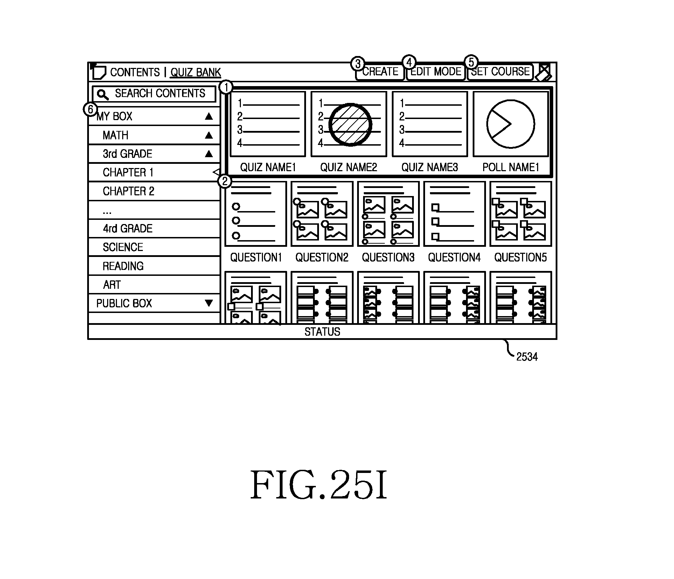

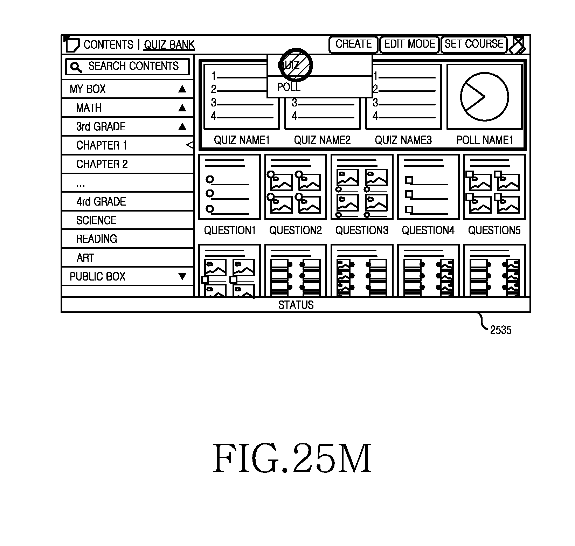

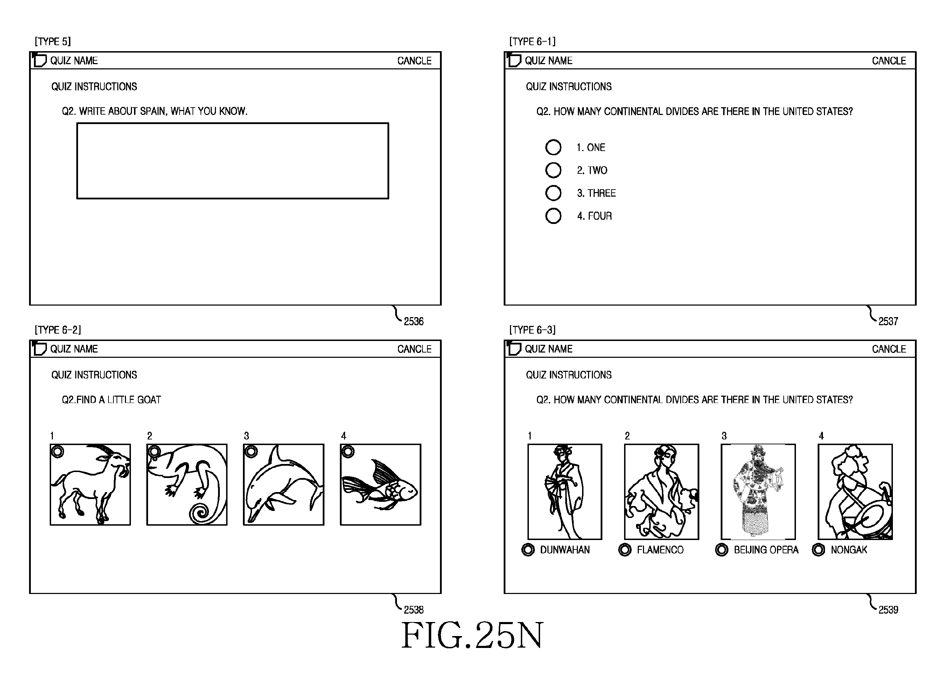

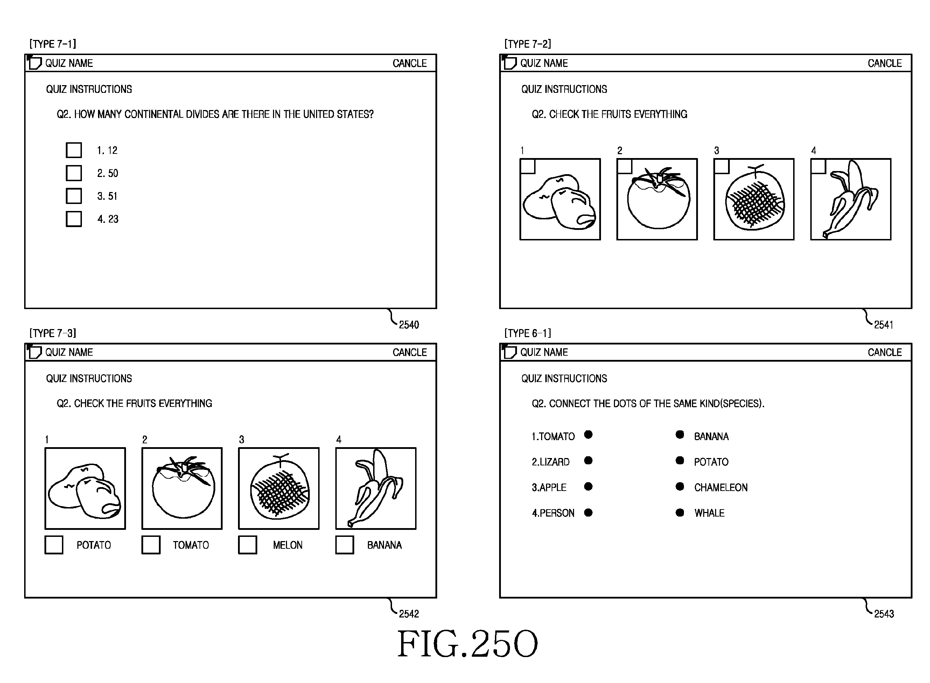

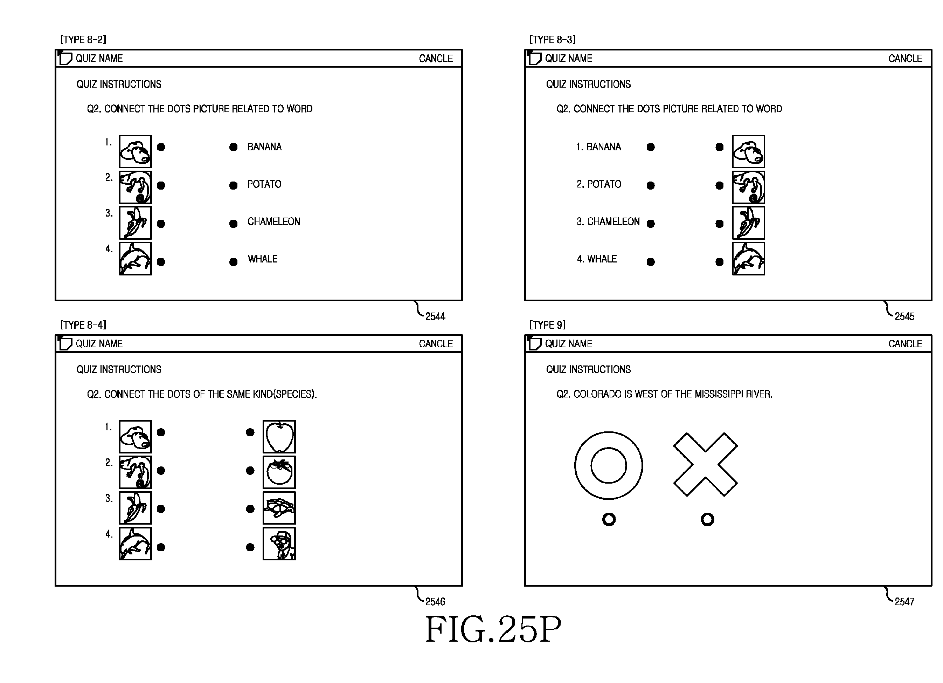

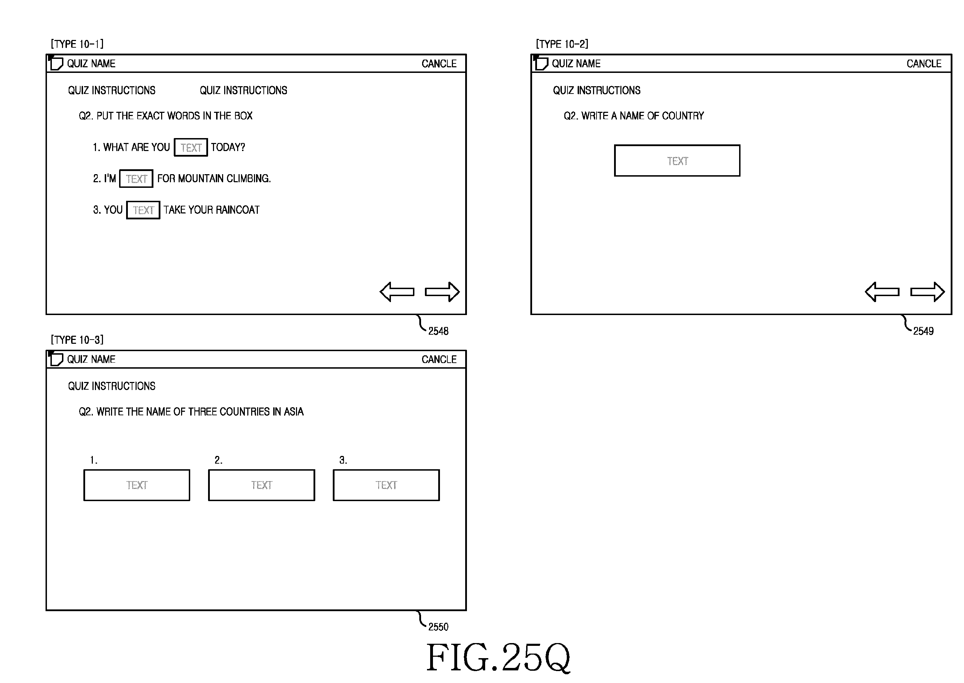

FIGS. 25A to 25Q are diagrams illustrating user interfaces for managing contents library.

FIG. 25A illustrates a screen when 'Contents library' is selected in an initial launcher screen. First, a first screen is a case (2500) where no user contents are registered to 'Contents library, and a second screen is a case (2501) where a plurality of user contents are registered to 'Contents library'. A teacher or student may register class related contents to a database to 'Contents library' by using a corresponding device, for personal management.

Here, corresponding contents may be moved from one category to other category through a user gesture (Drag&Drop). For example, corresponding contents of a 'Math' subject may be moved to an 'Art' subject. Also, even a category may be moved through a user gesture (Drag&Drop). For example, a category of an 'Art' subject may be moved to a location of a 'Science' subject.

'Upload' (1) is a function of adding contents (e.g., a document file, a video file, an audio file and the like) existing in a student or teacher device. An upload file form is not limited and files of various forms may be uploaded. 'Download' (2) is a function of performing multi download by a student or teacher device. 'List view by' (3) toggles a display of a list form. 'Edit' (4) supports 'Copy/Cut/Delete' of registered contents. 'Search' (5) may search contents registered within a database. 'My box' (6) is a space storing user's contents, and may be managed by subject category by a teacher or student. The default is providing 'My box' all the time and may be added/deleted by a user. 'Public Box' (7) is a space storing accessible contents of all teachers or students. 'Public box' may create and manage a separate category. 'Category' (8) may be classified and stored by each subject, by each year. 'Set course' (9) is a function of arranging contents in a corresponding subject. Meanwhile, contents registered to a 'contents' region 10 are viewed, and contents may be viewed in a thumbnail form and, upon selection, corresponding contents may be loaded in a memory and instantly executed. 'Sort by' (11) is for selecting a sorting type (e.g., a name, a file size, a contents upload time and the like).

In a screen (2502) in which a plurality of user contents have been registered to 'Contents library', when 'List view by' (3) is selected, as in a screen 2503, contents are given in a list form. At this time, 'Sort by' (11) may be changed into 'Sort by' (12). Meanwhile, when corresponding contents are selected within a contents region 10, as in a screen 2504, corresponding contents may be executed and be overlaid and displayed on an existing screen (13).

Meanwhile, when corresponding contents of a corresponding subject are moved to a category of other subject, in a screen (2505) in which a plurality of user contents have been registered to 'Contents library', a user touches corresponding contents in a category of a corresponding subject and then, as in a screen 2506, the touch contents are dragged to the category of other subject to be moved. Next, if it reaches a desired location, as in a screen 2507, the touched contents are dropped on a category of a corresponding other subject. For example, 'File name' contents which are in a 'third grade' category are dragged and dropped to a 'fourth grade' category. After that, as in a screen 2508, the 'File name' contents moved from the 'third grade' category may be displayed in the 'fourth grade' category.

To copy/cut/delete corresponding contents of a corresponding subject, 'Edit mode' may be selected in a screen (2509) in which a plurality of user contents have been registered to 'Contents library'. At this time, as in a screen 2510, it enters an edition mode and a 'Copy, Cut, Delete' button may be activated. Here, a plurality of content to be edited may be selected and, when corresponding contents are selected, the selected contents may be executed and be overlaid and displayed (2511, 2512). In another exemplary embodiment, a check box corresponding to each contents exists and thus, by using the check box, contents to be edited may be selected. When contents to be edited are selected through the check box, only the check box remains a check status and the selected contents may be executed.

For example, as in a screen 2513, in an edition mode, contents of a corresponding subject are selected using a check box. At this time, the selected two contents become a check status. Next, as in a screen 2514, 'Copy' is selected to copy two contents and then, if a category of a corresponding subject (e.g., a fourth grade) to paste the copied contents is selected as in a screen 2415, a contents region of a corresponding subject (e.g., 'fourth grade') is given (2416). Here, assume that there is not contents registered to a 'fourth grade' subject. After that, if 'paste' is selected, the copied two contents may be copied to a contents region of a corresponding subject (e.g., fourth grade) (2517).

Similarly, as in a screen 2518, contents of a corresponding subject are selected using a check box in an edition mode and, at this time, 'Cut' is selected to cut the selected two contents and then, as in a screen 2519, a category of a corresponding subject (e.g., fourth grade) to paste the selected contents is selected. If so, a contents region of a corresponding subject (e.g., fourth grade) is given (2520). Here, assume that there are not contents registered to a fourth grade subject. After that, if 'paste' is selected, the selected two contents are given in a contents region of a corresponding subject (e.g., fourth grade) (2521) and, in contrary, in a contents region of a subject (e.g., fourth grade) to which two contents are originally registered, the selected two contents are deleted and only the remnant contents may be given (2522).

Meanwhile, as in a screen 2523, to delete a plurality of contents, in an edition mode, contents of a corresponding subject are selected using a check box and then, 'Delete' may be selected. Here, upon 'select all' selection, all contents registered to corresponding class may be selected.

Upon 'Delete' selection, a window inquiring whether to delete selected contents is displayed (2524) and, upon 'OK' selection, a deletion processor is executed (2525) and the selected contents are deleted, so no registered contents remain in the contents region of a corresponding subject (e.g., fourth grade) (2526).

Meanwhile, contents registered to a corresponding subject may be classified and registered by class hour.

For example, when a plurality of user contents have been registered to 'Contents library' not in an edition mode, 'Set course' is selected to sort contents registered to a corresponding subject by class hour (2527). After that, contents registered to a corresponding course are provided. Here, desired contents are selected through a check box and 'set' may be selected (2528). After that, upon 'set' selection, a window capable of setting at least one or more of a corresponding course (Course), a corresponding week (Week), a class hour (Lecture) and the like is displayed (2529) and further, in a case of adding to other class hour of a corresponding week, the selected contents may be added to correspond a plurality of class hours by using an add button. For example, if the add button is pressed, additional Course, Week, Lecture may be given as in a screen 2530.

Next, 'Course' shows a subject list being in a category, and 'Week' shows 'Week 1' to 'Week n', and 'Lecture' may show 1 class hour to N class hour. A corresponding subject may be selected by a user (2531). After that, items for each of 'Course', 'Week', and 'Lecture' may be selected and 'set' may be selected (2532). Next, the selected at least one contents may be connected with a corresponding week and class hour of a corresponding course (2533).

Meanwhile, 'Contents library' given in an initial launcher screen provides not only class related contents but also a quiz bank. For example, if a Quiz bank Tab of 'Contents library' is selected, quiz and questions may be given (2534). Like contents, Quiz may be distinguished from 'My Box' and 'Public Box' and may be managed and created, and may be included in a corresponding subject. Also, quiz and questions included in a category of a corresponding subject may be moved/copied to a subject of other category by a user gesture (e.g., drag and drop).

Here, 'Quiz items' (1) may be sorted and displayed in a contents region upper end, and 'Question items' (2) may be sorted and displayed in an upper end below a 'Quiz items' region. In another implementation, positions of 'Quiz items' and 'Question items' may be changed or 'Quiz items' and 'Question items' may be mixed and displayed without sorting. 'Create' (3) is a function for Quiz or Poll creation, and 'Edit mode' (4) supports 'Copy', 'Cut', 'Delete' and the like of registered 'Quiz items' or 'Question items'. 'Set course' (5) is a function for assigning 'Quiz items' or 'Question items' to a corresponding subject, and 'Category' (6) may sort and store by each subject, by each year, and by each chapter.

For example, as in a screen 2535, 'Create' (3) is selected to create Quiz or Poll and then, Quiz or Poll may be selected.

Questions being in a quiz bank may be of a subject form as in a screen 2536, or may be of an objective form as in screens 2537 to 2547. Exemplary items of objective form may be provided as a text using a circle check box (2537), a picture (2538), and a combination of a text and a picture (2539), or may be provided in forms of a text using a square check box (2540), a picture (2541), and a combination of a text and a picture (2542). Or, they may be provided in a form (2543) connecting a first text and a second text, a form (2544) connecting a picture and a text, a form (2545) connecting a text and a picture, a form (2546) connecting a picture and a picture, and a form (2547) selecting O or X. Another subjective type may be provided variously in a form (2548) inputting words partially missing in a sentence, or a form (2549) stating one answer, or a form (2550) stating a plurality of answers.

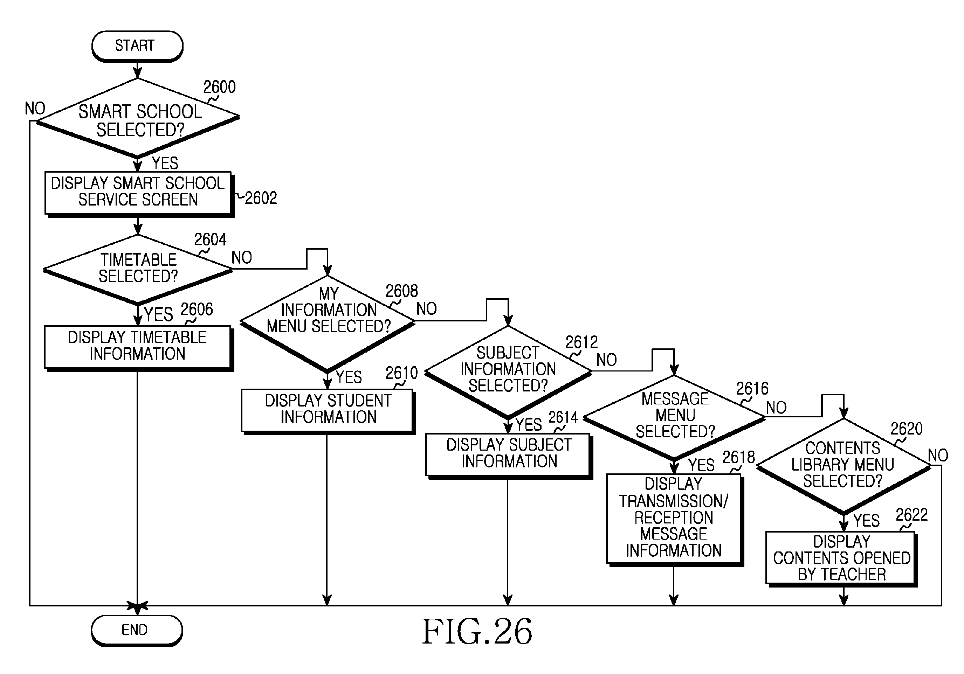

FIG. 26 is a flowchart illustrating an operation for managing a basic interaction screen of a student device according to an exemplary embodiment of the present invention.

Referring to FIG. 26, upon smart school selection in step 2600, a student device displays a smart school service screen in step 2602. For example, the student device may access a Learning Management System (LMS) or an Interactive Management System (IMS) through log-in. After log-in, a main menu of 'start class' (1), 'My students (2), 'Library' (3), 'Apps' (4), etc. may be displayed.

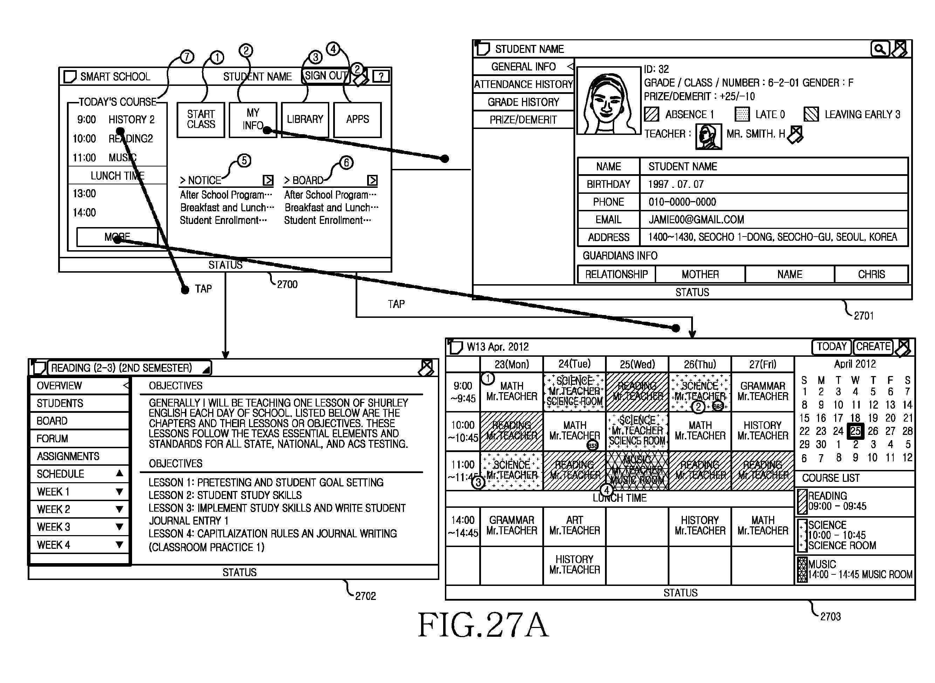

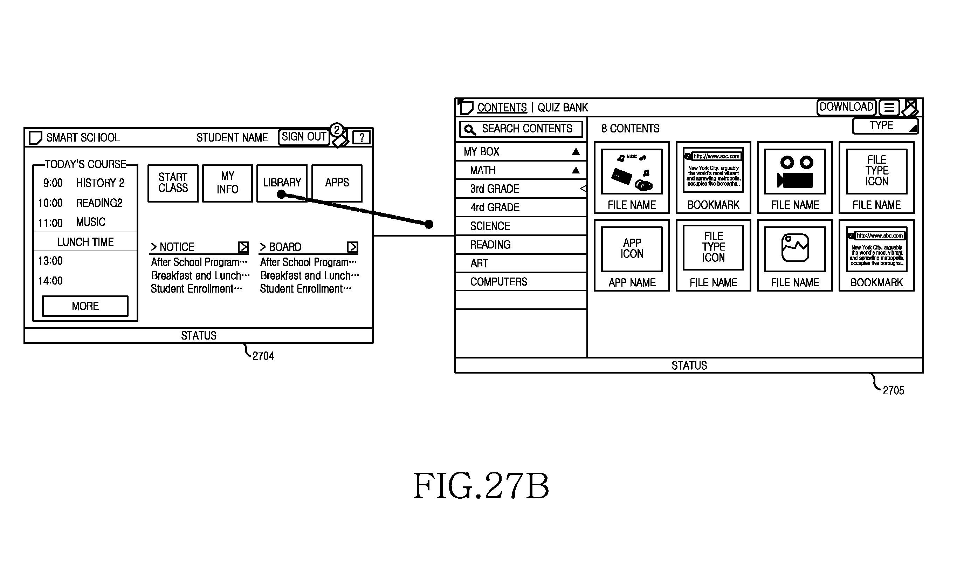

Upon timetable selection in a smart school service screen in step 2604, the student device displays a personal timetable in step 2606. Upon my information menu selection in the smart school service screen in step 2608, the student device displays student information in step 2610. Upon subject information selection in the smart school service screen in step 2612, the student device displays subject information in step 2614. Upon message menu selection in the smart school service screen in step 2616, the student device displays transmission/reception message information in step 2618. Upon contents library menu selection in the smart school service screen in step 2620, the student device displays contents opened by a teacher in step 2622. A detailed description of managing a basic interaction screen of a student is made with reference to FIGS. 27A and 27B below.

FIGS. 27A and 27B are diagrams illustrating user interfaces for managing a basic interaction screen of a student device according to an exemplary embodiment of the present invention.

FIG. 27A illustrates an initial launcher screen after log-in. The initial launcher screen 2700 may display a main menu of information (7) about a class time of a specific student, 'start class' (1), 'My info' (2), 'Library' (3), 'Apps' (4), etc., and at least one or more notice boards according to use purpose ('Notice' (5) and 'Board' (6)) and the like. For example, in 'Notice' and 'Board', students may determine writings uploaded by a teacher and a manager. In 'Board', students may determine writings uploaded by the teacher or the manager. In another exemplary embodiment, in 'Notice', students may not post comments on corresponding postings but, in 'Board', the students may post comments on corresponding postings. Through 'Message' (8), memo forwarding to a corresponding teacher or student is possible.

'start class' (1) may perform various functions related to a course (e.g., opening uploaded class-related contents, report submission, quiz solving, group activity and the like) and, when 'My info' (2) is selected, information about student itself is displayed (2701) and, when a specific subject is selected among class subjects (7), it may enter the specific subject. Upon specific subject entrance, sub menus of 'students/board/forum/Assignments/schedule/week' and the like for a specific subject may be displayed as in a screen 2702. 'students/ board/ forum/ Assignments/ schedule/ week' and the like are similar to a screen of a course or subject created by a teacher of FIG. 5K. That is, 'students/board/forum/Assignments/schedule/week' and the like are similar to functions of 'overview/ students/ board/ forum/ Assignments/ schedule/ week' and the like of FIG. 5K.

When a 'more' button is selected in an initial launcher screen, as in a screen 2703, a student timetable may be displayed. Further, according to one exemplary embodiment, a calendar and 'course list' of a specific date may be provided. When a course is created by a plurality of teachers and a student is registered to the created course, a timetable of student itself may be constituted of a combination of a plurality of registered courses and displayed. Here, upon 'Subject' (1) selection, as in a screen 2702, detailed information of each course may be displayed. When there is a valid assignment of each course, 'Assignment' (2) displays an icon representing that there is an assignment and, when an icon corresponding to a subject is selected, it may move to a screen for assignment edition / assignment submission. The valid assignment is for a case that a current date/time is within assigned start/due time and, when a period arbitrarily assigned by a teacher is ended, it may become an invalid assignment. 'Teacher name' (3) is teacher information by subject, and 'Class room' (4) is classroom information. In an exemplary embodiment, classroom or room information may be displayed only when there is a mobile course.

Meanwhile, when 'Library' (3) is selected in an initial launcher screen of a student (2704), a screen (2705) including contents or quiz/quizzes may be given. 'Library' (3) may provide contents related to a corresponding course textbook uploaded by at least one teacher (e.g., an electronic textbook uploaded by a teacher or students, a quiz question, a test question, other course related materials) (321). According to another exemplary embodiment, new contents corresponding to a corresponding subject may be uploaded by a student.

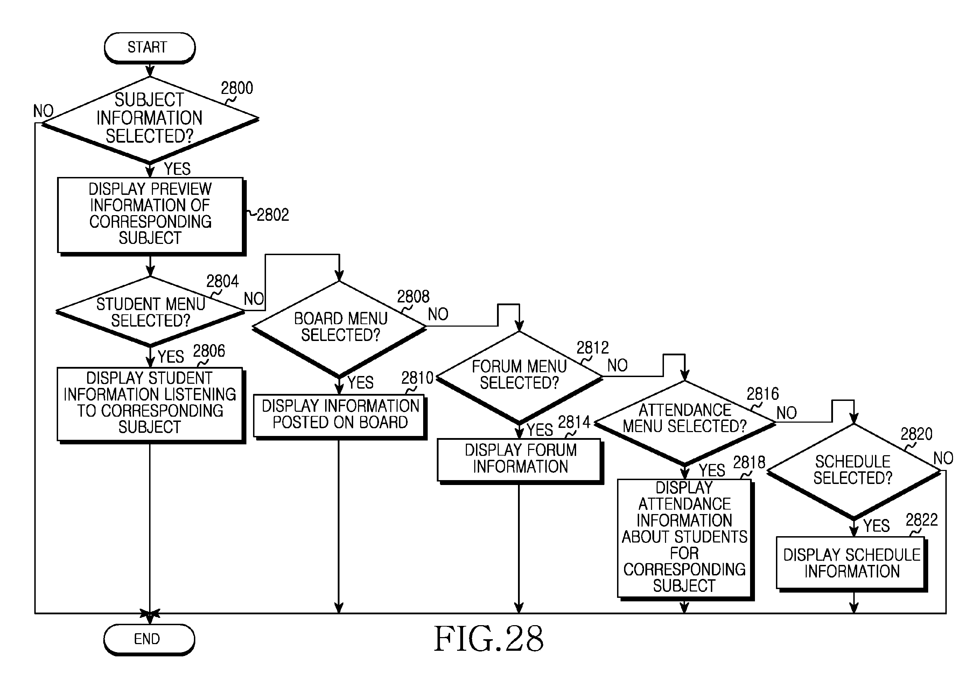

FIG. 28 is a flowchart illustrating an operation for subject management of a student according to an exemplary embodiment of the present invention.

Referring to FIG. 28, upon subject information selection in step 2800, a student device displays information about a corresponding subject in step 2802.

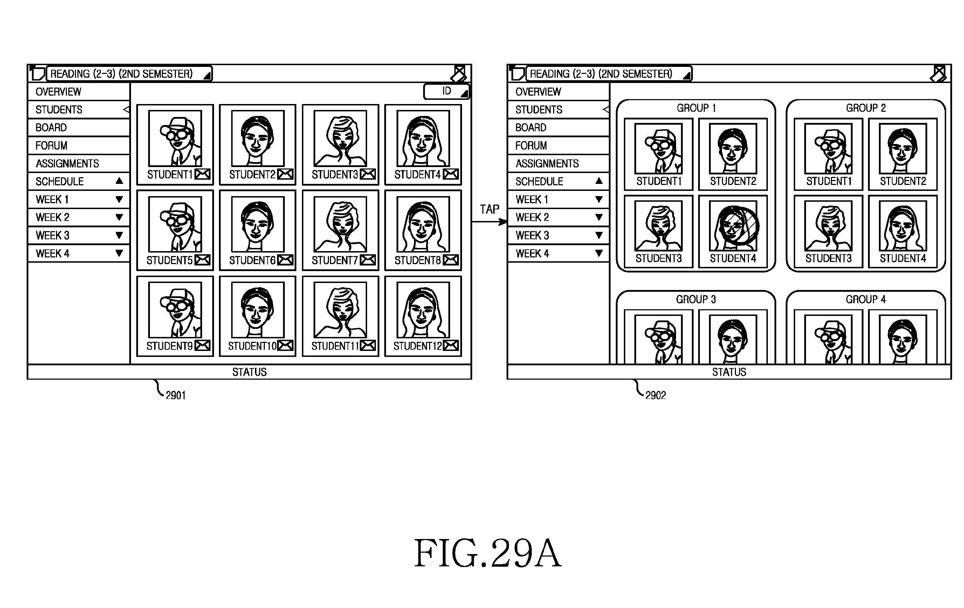

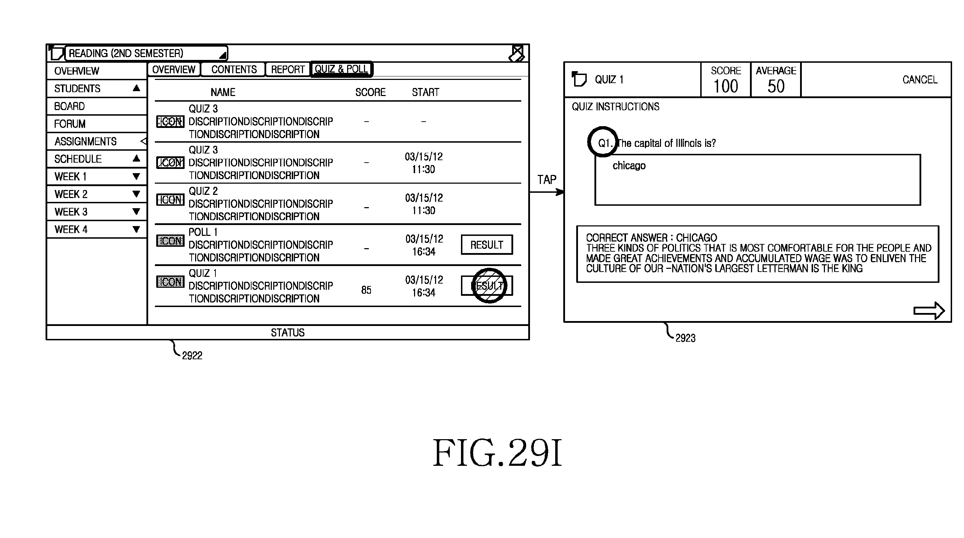

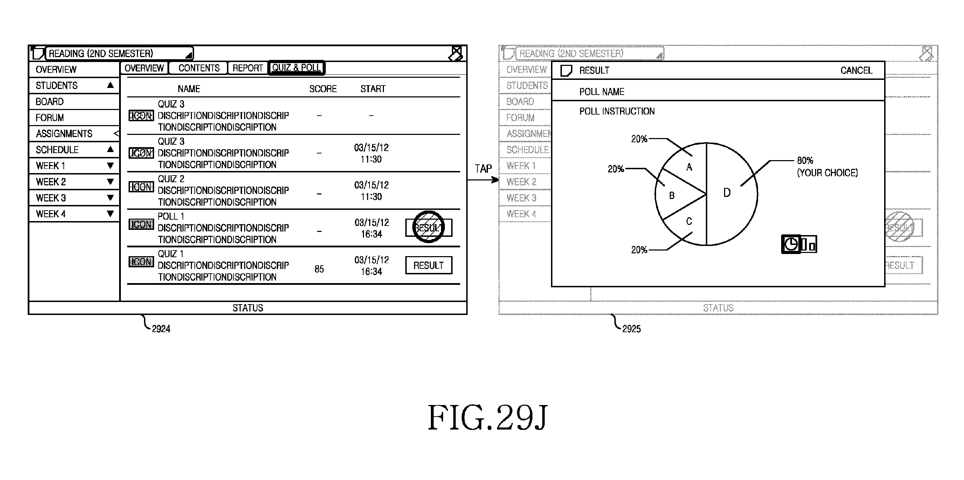

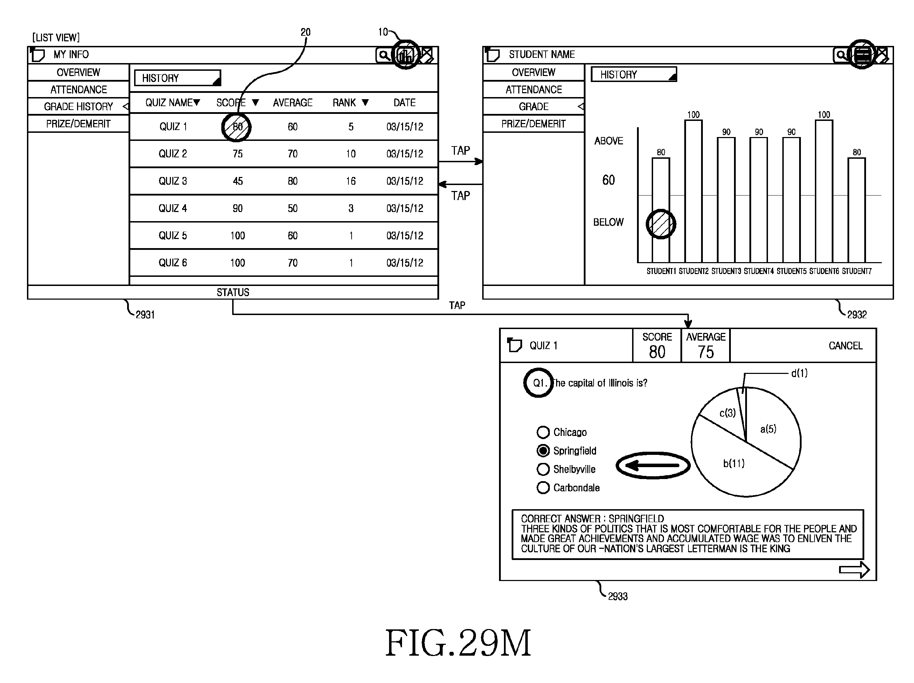

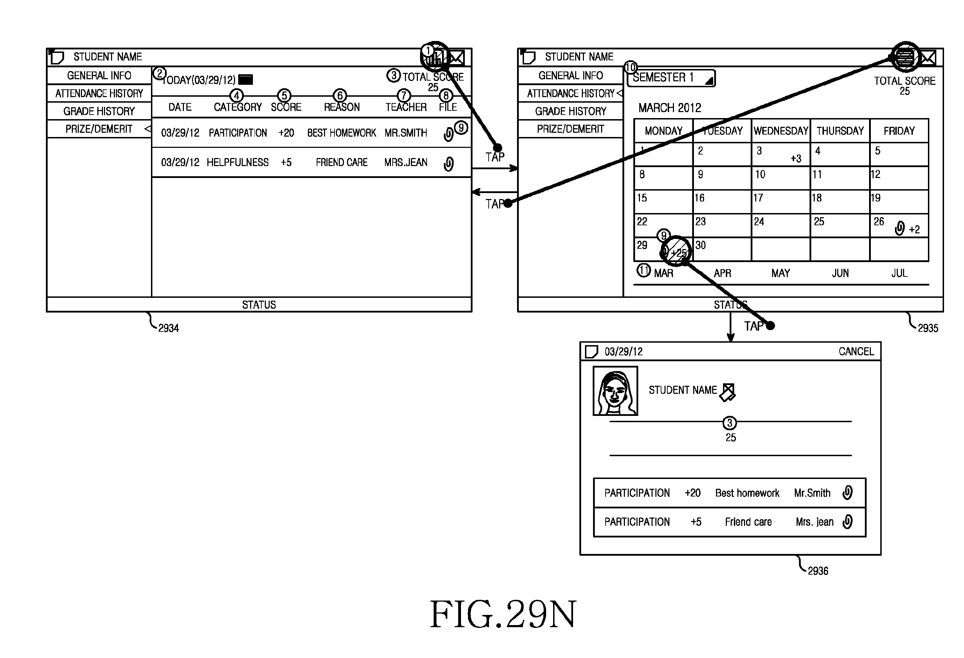

Upon student menu selection in step 2804, the student device displays student information listening to a corresponding subject in step 2806. Upon notice board selection in step 2808, the student device displays information noticed to the notice board in step 2810. Upon forum selection 2812, the student device displays forum information in step 2814. Upon attendance menu selection in step 2816, the student device displays attendance information about students of a corresponding subject in step 2812. Upon schedule selection in step 2820, the student device displays schedule information in step 2822. A detailed description of subject management of a student is made with reference to FIGS. 29A to 29O below.

FIGS. 29A to 29O are diagrams illustrating user interfaces for subject management of a student according to an exemplary embodiment of the present invention.

FIG. 29A is a screen (2901) providing when entering a subject created by a teacher. The screen of FIG. 29A provides sub menus of 'overview/students/board/forum/Assignments/schedule/week'. An 'Overview' tab provides an overview of a corresponding subject made by a teacher, and 'students' provides information about a student registered to a corresponding subject, and 'Board/forum' provides a noticeboard and forum function for a corresponding subject, and 'Assignments' provides assignments assigned by a teacher and also may solve a corresponding assignments and submit a solution. 'Schedule' may distinguish materials or assignments corresponding to a corresponding subject by week and provide.

In 'My course/Students' tab of FIG. 29A, detailed information of other students registered to a corresponding subject is provided. For example, student lists registered to a corresponding subject are displayed (2901). At this time, a corresponding student is selected from a student list and information about the corresponding student may be determined (2902).

In implementation, when students registered to a corresponding course are set as a group, the students may be viewed in a group unit. Message sending to the same class students is possible. In another implementation, several group sets may be determined in a corresponding course, and group set determination is possible. For example, one student may be included in a plurality of groups according to purpose in a corresponding course.

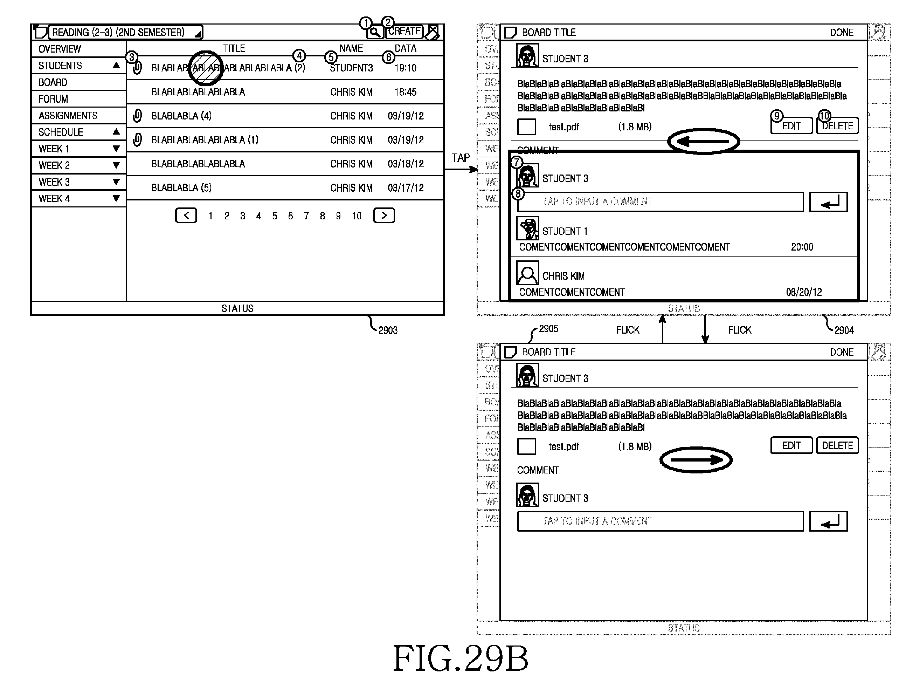

In a 'My course/Board' tab of FIG. 29B, a student belonging to a corresponding course and a teacher may upload and determine writings (2903). 'Search' (1) may search on a basis of a search range, for example, a title of postings, a maker, and content, and 'Create' (2) may add postings, and 'Attachment' (3) may add an attachment file, and 'Comment' (4) may display the number of comments, and 'Name' (5) is a maker name, and 'Date' (6) is making date and time information. For reference, writings made at today date do not display a making date and display only a time. Previous comments display only a making date and do not display a time. A 'Comment' region (7) displays comments on corresponding writings and, when there are not comments, provides only 'Comment input box' (8). An 'Edit/Delete' button is provided only to comments made by the person himself. 'Edit' (9) may edit postings made by the person himself, and 'Delete' (10) may delete postings made by a student himself. When one of a writing list of a notice board of a screen 2903 is selected, writings and comments corresponding to the corresponding writings may be displayed (2904). At this time, a next posting or a previous posting may be determined through a corresponding user gesture (for example, a scroll operation or flick operation).

For example, when a left flick operation is input in posting of 2904, next posting of 2905 is given and, inversely, when a right flick operation is input in the posting of 2905, previous posting of 2904 may be given.

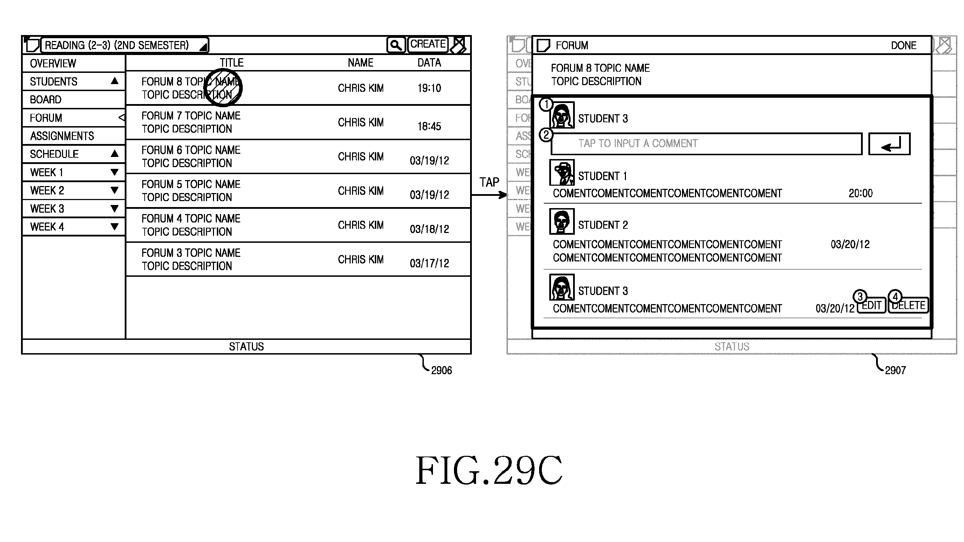

In a 'My course/Forum' tab of FIG. 29C, a forum corresponding to a corresponding course may be created/used (2906). When a specific forum is selected within a forum list, as in a screen 2907, forum writings posted by students for a specific forum are provided in a list form (1), and 'Comment input box' (2) is provided, and comment making on a corresponding forum writing is possible. Also, for forum writings made by the person himself, 'Edit' (3) and 'Delete' (4) buttons may be activated, and forum writing made by the person himself may be edited, and the forum writing made by the person himself may be deleted.

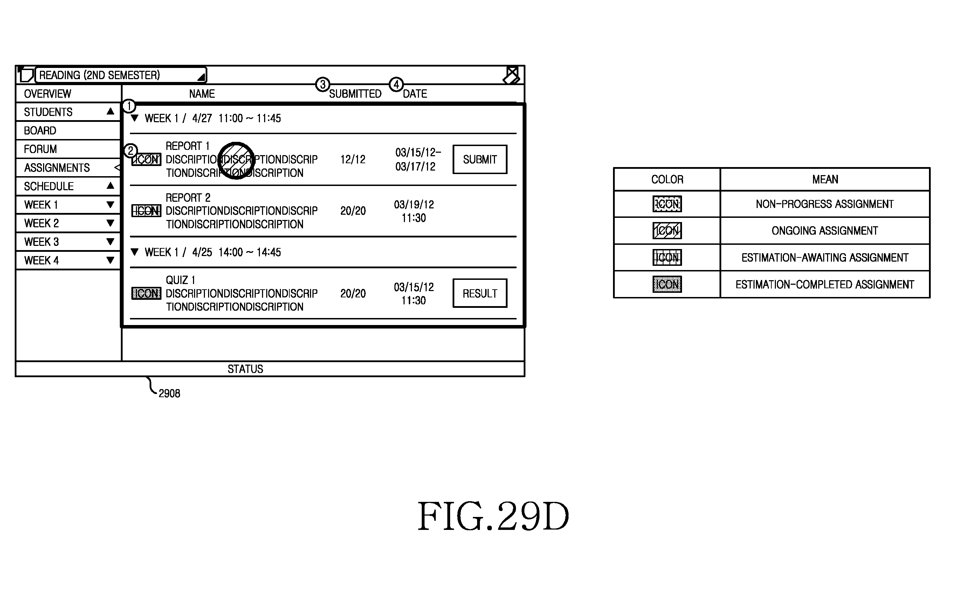

In a 'My course/Assignments' tab of FIG. 29D, an assignment list assigned in a lecture unit by a teacher may be displayed (2908). Upon assignment title selection, a popup dependent on a progress status of an assignment may be given.

For example, when an assignment is in progress, a quiz is automatically initiated during a set period of a teacher and, upon 'submit' button selection, report content determination and report submission may be conducted. It refers to FIGS. 9A to 9M. When an assignment is in estimation, upon selection within a quiz list, corresponding quiz or report content may be determined and, when an assignment is estimation-completed, a score or correct answer for a corresponding assignment (i.e., a quiz, a poll and the like) may be determined through a 'Result' button. In a case of an estimation-completed report, upon 'Result' button selection, a report score and teacher's comment may be determined. An assignment list is assigned in a week unit by course (1), and a status for each assignment is marked with an icon (2). 'submitted' (3) represents how many students have submitted assignments among the total number of persons, and 'Date' (4) provides submission time and date information of an assignment. The assignment status may be distinguished such as a non-progress status, an ongoing status, an in-estimation status, and an estimation-completed status and the like. According to an exemplary embodiment, the assignment status may be distinguished into less items or more items.

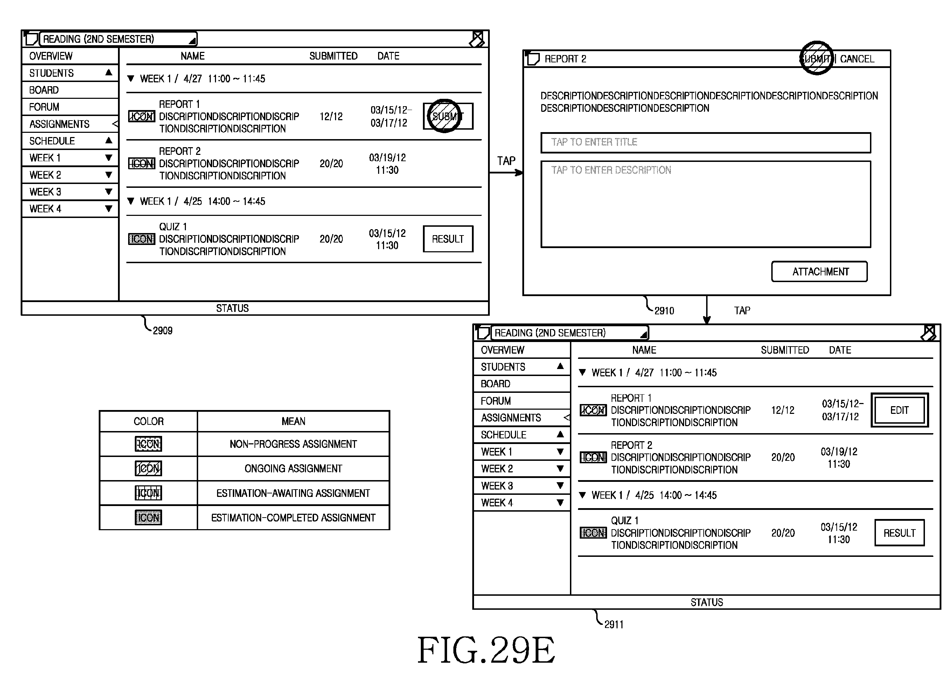

As in a screen 2909 of FIG. 29E, a 'submit' button is given for an ongoing assignment in a 'My course/Assignments' tab, and, upon 'submit' selection, a popup window for adding a report title and a description is displayed (2910). At this time, a report made in a student device may be added as an attachment file. If 'submit' is selected in the screen 2910, a corresponding assignment is submitted and an 'edit' button capable of editing a submitted report is given within an assignment list (2911).

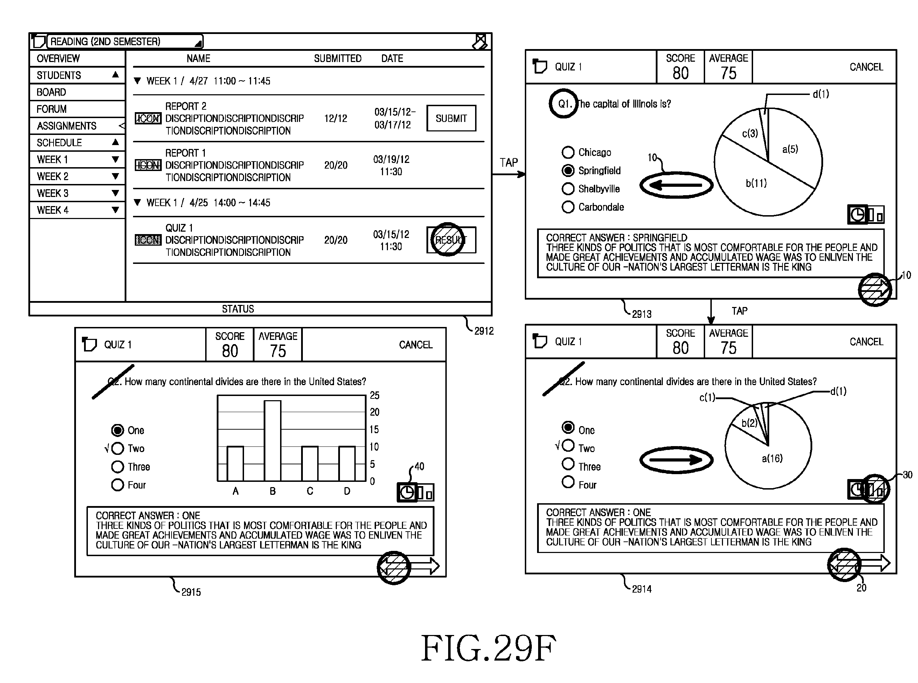

As in a screen 2912 of FIG. 29F, a 'result' button is given for an estimation-completed assignment in a 'My course/Assignments' tab. Upon 'result' selection, a circle graph corresponding to statistics data of student's score, average score, quiz question and answer, and answers submitted by other students may be provided for a selected quiz (2913). For example, statistics submitting answers of 'a', 'b', 'c', and 'd' for a corresponding quiz question may be viewed.

At this time, according to a corresponding user gesture 10 (e.g., a flick operation of left direction, next page turn-over button selection), a circle graph corresponding to statistics data of student's score, average score, quiz question and answer, and answers submitted by other students may be provided for a next quiz question (2914). On contrary, according to a corresponding user gesture 20 (e.g., a flick operation of right direction, previous page turn-over button selection), it may move from the screen 2914 to the screen 2913.

Also, when a bar graph toggle button 30 is selected, a result of the screen 2914 may be displayed with a bar graph instead of a circle graph (2915). On contrary, when a circle graph toggle button 40 is selected, a result of the screen 2915 may be displayed with the circle graph instead of the bar graph (2914).

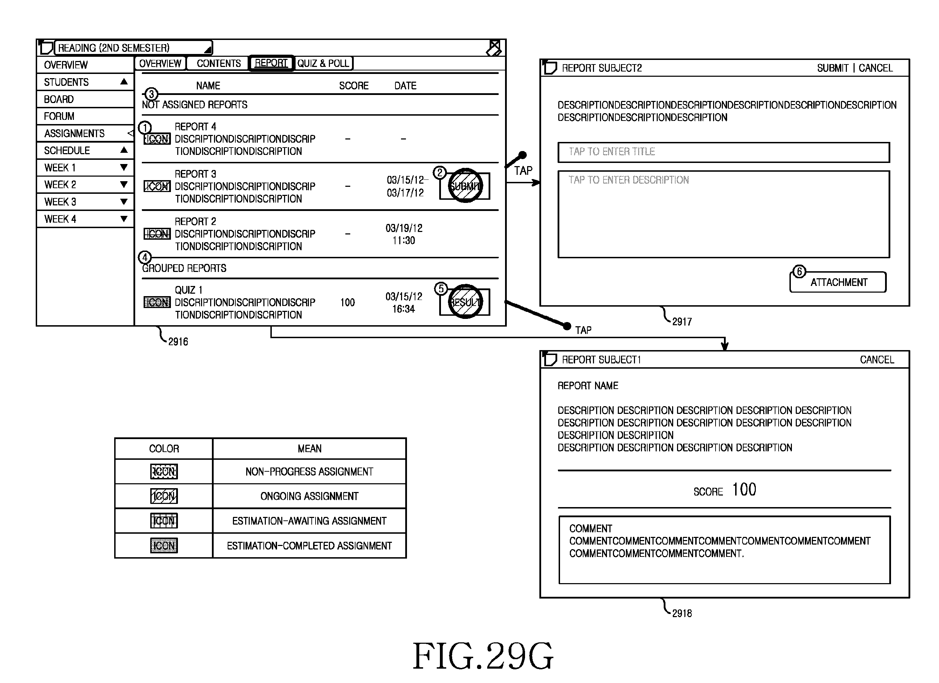

In another exemplary embodiment, FIG. 29G illustrates an example of determining corresponding report submission and report result in a 'My course/Schedule' tab. It is similar to a report submission process in a 'My course/Assignments' tab.

That is, a report list is displayed corresponding to a class hour of a course in the 'My course/Schedule' tab (2916). A report status icon (1) indicates a progress status of a corresponding report, and 'Submit' (2) is a button submitting an ongoing report, and 'Not assigned reports' (3) is a report submission region of an individual student, and 'Grouped reports' (4) is a region submitting a product of group activity, and 'Results' (5) is a button determining an estimation-completed report score and a teacher's comment.

For example, when 'submit' (2) of an ongoing report (report subject 3) is selected, a popup window for adding a report title and a description is displayed (2917). At this time, a report made in a student device may be added (6) as an attachment file. When 'Result' (5) of an estimation-completed report (report subject 1) is selected, a report score and a teacher's comment may be determined (2918).

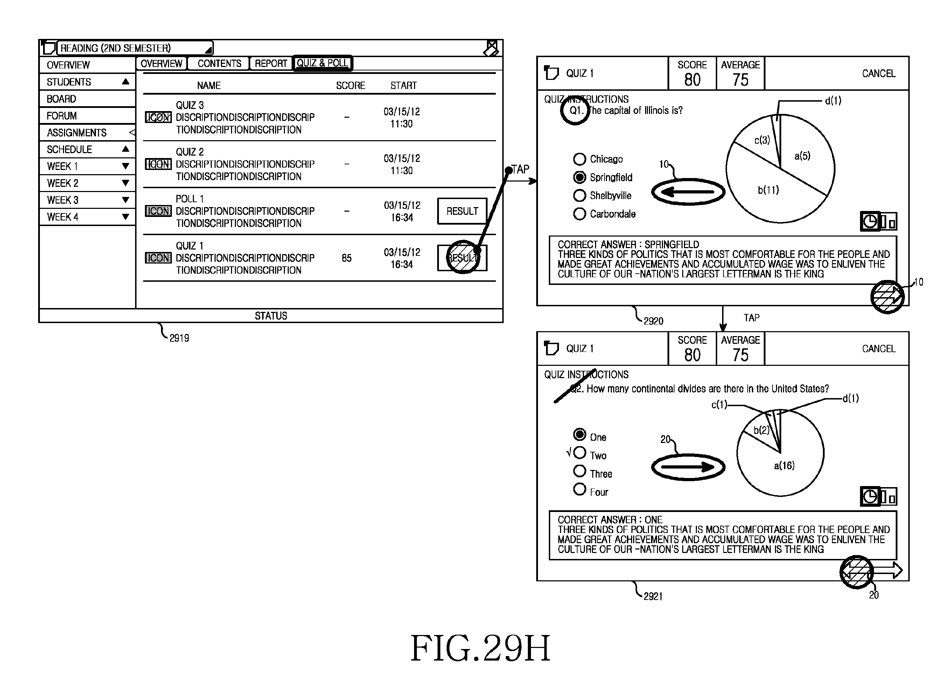

In another exemplary embodiment, FIG. 29H illustrates an example of solving a corresponding quiz or determining a quiz result in a 'My course/Schedule' tab. It is similar to a process of solving a corresponding quiz or determining a quiz result in a 'My course/Assignments' tab.

For example, when a result of an estimation-completed quiz (e.g., Quiz 1) is selected (2919), a circle graph corresponding to statistics data of student's sore, average score, quiz question and answer, and answers submitted by other students may be provided for a selected quiz (2920). For example, statistics submitting answers 'a', 'b', 'c', and 'd' may be shown for a corresponding quiz question.

At this time, according to a corresponding user gesture 10 (e.g., a flick operation of left direction, next page turn-over button selection), a circle graph corresponding to statistics data of student's sore, average score, quiz question and answer, and answers submitted by other students may be provided for a next quiz question (2921). On contrary, according to a corresponding user gesture 20 (e.g., a flick operation of right direction, previous page turn-over button selection), it may move from the screen 2921 to the screen 2920.

For another example, when a result of an estimation-completed quiz (e.g., Quiz 1) is selected (2922), student's score, average score, quiz question and answer may be provided for a selected quiz (2923). For example, when a corresponding quiz question is a subjective form, a graph corresponding statistics data may not be provided.

For further example, when a result of an estimation-completed poll (e.g., Poll 1) is selected (2924), a circle graph or bar graph corresponding to statistics data of answers submitted by students may be provided for a selected poll (2925).

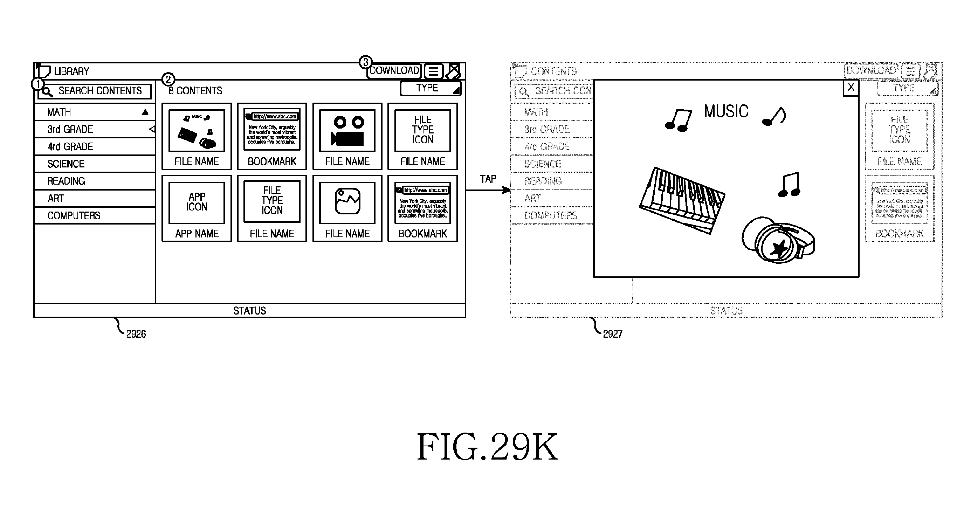

FIG. 29K illustrates an example of executing contents related to a course in 'contents library' of a student.

For example, in contents being in 'contents library', only contents opened by subject by a teacher are provided and may be opened by a student (2926). Contents may be sorted and displayed by subject within a contents display region 2, and contents searched through a search window 1 may be displayed. 'Download' (3) is a function for selecting and downloading all or some of corresponding contents being in the contents display region 2. At this time, when any one of contents being in the contents display region 2 is selected, the selected contents may be executed and may be overlaid on an existing screen and displayed (2927).

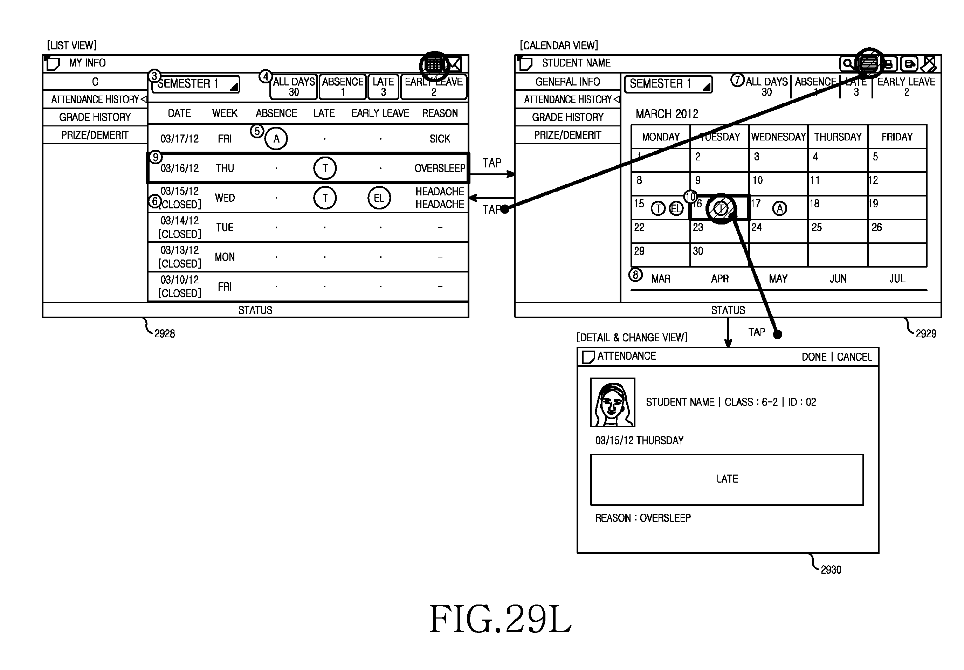

Also, FIG. 29L is a user interface corresponding to 'My info' of a student. 'My info' has a sub menu of 'overview' for determining its own information, 'Attendance history' for determining its own attendance/absence status, 'Grade history' for determining its own score by subject, 'Prize/Demerit' for determining its own life attitude estimation score, and the like.

Specifically, when 'Attendance history' of 'My info' is selected, the present condition of attendance/absence of one specific student may be displayed (2928). 'Select Semester' (3) is a selection window for selecting a corresponding semester, and any one of 'Semester 1 / Semester 2' may be selected. In 'Info & Filtering Button of All days/Absent/Late/Leaver early' (4), upon determination and selection of the number of days attending up to now during a first semester, a corresponding list is filtered and shown. For example, 'All days' shows an attendance/absence status for 30 days, 'Absence' filters and shows an attendance date, 'Late' filters and shows a late date, 'Early leaves' filters and shows an early-leaving date. 'Status icon' (5) may be distinguished into 'Absent/Tardy/Leave early' and the like, and 'Closed' (6) represents a status in which attendance/absence is closed, and 'info' (7) is information shown in 'Calendar view', and 'Select month' (8) shows only a month of one semester, and 'Detail view & Change attendance' (9) is information representing an attendance/absence status of a corresponding date.

Upon toggle button (10) selection, as in a screen 2929, the present condition of attendance/absence of one specific student is displayed in a calendar form and, upon again toggle button (10) selection, as in a screen 2928, the present condition of attendance/absence of a specific student may be displayed in a list form.

When a specific date (e.g., March 16, 2012) is selected in a screen 2929, attendance/absence information of a specific student corresponding to a specific date may be displayed (2930).

When 'Grade history' of 'My info' is selected, the present condition of a score by subject of one specific student may be displayed (2931). Upon graph toggle button 10 selection, the present condition of a score by subject of one specific student is viewed with a graph (2932) and then, upon again graph toggle button 10 selection, the present condition of a score by subject of one specific student may be displayed in a list form (2931).

At this time, when a specific quiz is selected in a screen 2931, a circle graph corresponding to statistics data of student's core, average score, quiz question and answer, and answers submitted by other students may be provided for a specific quiz (2933). For example, statistics submitting answers of 'a', 'b', 'c', and 'd' may be viewed for a corresponding quiz question. According to another implementation, when a bar corresponding to a specific quiz is selected in the screen 2932, a circle graph corresponding to statistics data of student's score, average score, quiz question and answer, and answers submitted by other students may be provided for a specific quiz (2933).

When 'Prize/Demerit' of 'My info' is selected, a life attitude estimation score list of one specific student may be displayed (2934). Here, 'View by' (1) is a button of toggling 'List view' or 'Graph view', and 'Sort by' (2) is for selecting/searching by 'Today / Week 1 / 1 month / semester', and 'Total' (3) shows the whole score by selected date. 'Category' (4) is a category for life attitude estimation, and 'Score' (5) is a score estimated for a specific student within a preset score range (e.g., +20/-20), and 'Reason' (6) is reason for life attitude estimation made by a teacher, and 'Teacher' (7) is teacher identification information giving a life attitude estimation score, and 'File' (8) is a file attached for an objective reason and, further, a score given by a corresponding teacher may be displayed with a separate color (9). 'Semester' (10) is a window for selecting a corresponding semester during 'Semester 1/Semester 2, and 'Select Month' (11) displays a month belonging to one semester, and 'Prize/Demerit items list' (12) is a category defined every school, and defines a life attitude estimation list and a score corresponding to the estimation list, and 'Attach file' (13) may attach a related file.

When a toggle button of 'View by' (1) is selected in the screen 2934, as in a screen 2435, a life attitude estimation score of one specific student of a calendar form is displayed and, on contrary, when a toggle button of 'View by' (1) is selected in the screen 2935, a life attitude estimation score of one specific student of a list form is displayed.

When a life attitude estimation score of a specific student is displayed in a calendar form, when a specific date is selected (2935), a detailed life attitude estimation score for a specific student of a specific date may be displayed (2936).

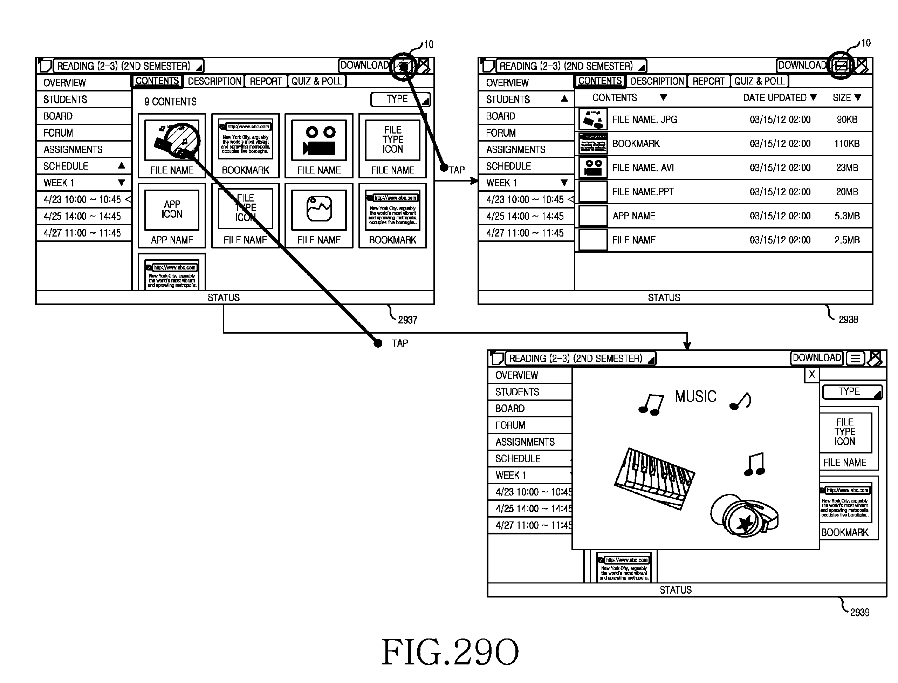

Meanwhile, FIG. 29O illustrates an example of executing class related contents in 'My course/Schedule/Lecture/Contents' tab for a specific subject.

For example, nine contents related to a course of the second class hour (10:00 to 10: 45) of the first week (Week 1) of a reading subject of the second semester are displayed (2937), that is, contents (i.e., course related materials registered by a teacher) may be displayed in a contents region. When a toggle button 10 is selected, as in a screen 2938, contents may be displayed in a list form. On contrary, when a toggle button 10 is selected in a screen 2938, contents may be displayed in a thumbnail form (2937). Next, when one is selected among a contents list, an application corresponding to the selected contents is executed, and contents content may be displayed (2939).

FIG. 2A to FIG. 29 are related to an LMS for course creation/ management, student registration/ management, assignment registration/ management, attendance/ absence management, and education management of grade estimation/ life attitude estimation and the like. An IMS for supporting interactive class between a teacher and a student and between students is described below.

FIGS. 30A to 30U are diagrams illustrating user interfaces for an IMS supporting interactive class according to an exemplary embodiment of the present invention.

FIGS. 30A to 30C illustrate user interfaces for accessing interactive class in a launcher.

For example, a smart school application 10 for education management and class support is executed in a home screen 3000, and an initial launcher screen 3002 may be displayed through account authority or authentication procedure (for example, password, user ID input) (3001). The initial launcher screen 3003 is the same as a launcher screen 500 of FIG. 5A.

Here, when 'start course' (20) is selected in an initial launcher screen 3003, it enters a teacher course progress mode (3003). In the course progress mode, opening of contents related to a course is possible, and note writing is possible, and screen sharing is possible, and quiz solving, answer submission and poll performing and the like are possible. Also, message sending/reception is possible, and student attendance determination is possible, and presenter designation is possible, and group activity and submission of a result of group activity are possible. Also, a teacher may control a screen of a student device and an application in the course progress mode.

In another exemplary embodiment, when a 'back' button 20 is selected in a student course progress mode 3004, it may switch to a student initial launcher screen 3005. At this time, in the initial launcher screen 3004, instead of 'start course', it may change into 'during course' (10) and show that it is during course. On contrary, in the initial launcher screen 3005, when 'during course' (10) is selected, it may return to the student course progress mode 3004.

Meanwhile, in the initial launcher screen 3005, when a 'group' tab 30 is selected, instead of contents list, a student list of a group may be given (3006). Similarly, when a 'back' button 40 is selected in the student course progress mode (3006), it may switch to the student initial launcher screen 3005 and, when the 'during course' (10) is selected in the initial launcher screen 3005, it may return to the student course progress mode 3006.

In another exemplary embodiment, before 'start course' is selected in an initial launcher by a teacher device, when 'join course' (10) is selected in the initial launcher 3007 of a student device, it does not proceed to the course progress mode. At this time, a message that a course has not yet started may be displayed (3008). After that, when 'start course' is selected in an initial launcher by a teacher device, a message that a course has started by a teacher is displayed (3009) and, after a predetermine time, it enters a course progress mode (3010).

FIGS. 30D to 30F are menu structures for a teacher for IMS.

Referring to FIGS. 30D to 30F, a 'Course' menu of a teacher launcher program includes sub menus of 'Contents viewer', 'Contest list', 'Students list', 'Note', 'Whiteboard', 'Quiz&Poll', 'Screen share', 'Message', 'Save contents', 'Close course', 'Setting', 'Help' and the like. The sub menu of 'Contents viewer' includes sub menus of 'Full view', 'Open new file', 'Send contents' and like. The sub menu of 'Students list' includes sub menus of 'Attendance check' and 'Assign as presenter'.

'Students' menu includes a sub menu showing student information in a thumbnail form or a 'Group' sub menu. 'Thumbnail' sub menu includes 'Detail view', 'Auto launch', 'Manage student', 'View by', 'Message', 'Close course', 'Settings', and 'Help'. 'Detail view' includes 'Lock', 'Screen share', and 'Private teaching'. 'Auto launch' includes 'Launch URL', 'Launch app to all', and 'Timer'. 'Manage student' includes 'Manage app list', 'Lock screen', and 'Edit lock sentence'. 'View by' includes 'Thumbnail view' and 'Group view'. 'Group' sub menu includes 'Start/End group', 'New group', and 'Thumbnail' of a group. A detailed description of each manual is made with reference to FIGS. 30G to 30AG.

FIGS. 30G to 30H are screens corresponding to a course progress mode showing when 'start course' is selected in a teacher initial launcher screen. Specifically, FIG. 30G illustrates a case where Course tab/Contents tab are selected in a course progress mode (3011), and FIG. 30H illustrates a case where 'Course' tab / 'Students' tab are selected in the course progress mode (3012).

A screen may be mainly divided and given as a contents list region 16 or a student list region 17 and a contents display region 13. The contents list region 16 and the student list region 17 may be selectively shown by a 'contents' tab and a 'students' tab. For example, upon 'contents' tab (8) selection, the contents list region 16 may be shown and, upon 'students' tab selection, the student list region 17 may be shown. In the contents list region 16, materials suitable to a corresponding course progress are given in a list form. These materials are contents previously registered by course progress by a teacher device in an LMS. In the student list region 17, a student list participating in a course, and status determination is possible. A student list is a student list registered to a course at course opening by the teacher device, and a status may be divided into course in-participating, offline, screen in-sharing, handwriting in-sharing, a screen lock status, a lock input status, a 1:1 remote control status, presentation in-requesting and the like.

Here, 'Title' (1) may include an icon corresponding to a 'back' button, and 'Course' tab/'Students' tab. 'Note' (2) opens a note toolbar and activates a writing function. 'New note' (3) opens a new page such as a whiteboard or a mini-memo and provides a writing function. 'Quiz & Poll' (4) may start a previously registered quiz or poll or create a quiz or poll. 'Screen share' (5) is for entering a mode of sharing content of the contents display region 13. Here, 'Screen share' and 'End share' are toggled. That is, upon 'Screen share' selection, 'End share' is given and, upon 'End share' selection, 'Screen share' is given. 'Message' (6) is a button for transmitting/receiving a message, and 'More menu' (7) more shows a next menu. For example, sub menus may be more given such as 'Save contents' saving a textbook and writing content, 'Close course' ending a course, and 'Help' providing helps. 'Contents list' (Tab) (8) shows contents corresponding to a corresponding course, a report list and the like, and 'Students list' (Tab) (9) shows a student list registered to a corresponding course. 'Open new file' (10) is a button for opening other contents not being in a contents list region, and 'Send contents' (11) is a button for sending a file saved in a local device, and 'Title of contents' (12) is displayed during a predetermined time when contents are opened, and a display region 13 is a region in which contents or whiteboard is opened, and 'Full view on/off toggle' (14) is a view mode switch button for contents, and 'Close button' 15 is a button of closing opened contents.

FIG. 30I illustrates a case where 'Students tab/Thumbnail view' is selected in a course progress mode (3013).

Referring to FIG. 30I, 'Title' (1) includes an icon corresponding to a 'back' button, and 'Course (tab)/Students (tab)', and 'Auto launch' (2) includes 'Launch URL/Launch app/Launch timer', and 'Manage student' (3) includes 'Manage app list/Lock screen/Edit lock sentence/Lock Input', and 'View by' (4) is a button for toggling 'Thumbnail view' or 'Group view', and 'Message' (5) is a button for transmitting/receiving a message, and 'More menu' (6) more shows a next menu. For example, sub menus may be more given such as 'Save contents' storing a textbook and writing content, 'Close course' ending a course, and 'Help' providing helps. 'Thumbnail of student's tab screen' (7) displays a device screen of a corresponding student and student's name and status 9. A status of the student may be divided into course in-participating, offline, screen in-sharing, handwriting in-sharing, a screen lock status, a lock input status, a 1:1 remote control status, presentation in-requesting and the like.

Meanwhile, when a specific student is selected among a student list of a thumbnail form, detailed information on a specific student may be displayed (3014).

Here, 'Student info' (1) displays a photograph of a specific student, a status, a name, and an identifier (ID). The status of the student may be displayed identically with 'Course tab / Students list'. A display region 2 may display a tab screen of the selected specific student, i.e., may display the whole output screen of a device of a specific student. 'Assign as presenter' (3) is a button for giving presentation authority to the selected specific student. A student being in presentation is displayed with 'End presentation', and a student being in presentation request may be displayed with 'Accept request'. 'Lock Screen' (4) is a button for screen lock of the selected specific student, and 'Lock input' (5) is a button for input lock of the selected specific student, and 'Screen share' (6) is a button for sharing the selected specific student screen to all students, and 'Private teaching' (7) is a button for remotely controlling a selected specific student screen, and 'Close button' (8) is a button for closing detailed information of a specific student, and 'Application name' (9) may display a name of an application that is being executed.

In another exemplary embodiment, FIG. 30J illustrates a case where 'Students tab / Group view' is selected in a course progress mode (3015).

Referring to FIG. 30J, 'Title' (1) includes an icon corresponding to a 'back' button and 'Course (tab)/Students (tab)'. 'Start group/End group (toggle)' (2) is a button for starting activity by student group, and student devices are changed into a group activity mode. 'New group/Edit group (toggle)' (3) is a button for creating/editing a new group during a course. 'Auto launch' (4) includes 'Launch URL/Launch app/Launch timer'. 'Manage student' (5) includes 'Manage app list/Lock screen/Edit lock sentence/Lock Input'. 'View by' (6) is a button for toggling 'Thumbnail view' and 'Group view'. 'Message' (7) is a button for transmitting/receiving a message. 'More menu' (8) more shows a next menu. For example, sub menus may be more given such as 'Close course' closing a course, 'setting', and 'Help' providing helps. 'Group name' region 9 displays the whole group name, and 'Name of each group' region 10 may display a name for each group. 'Thumbnail of student's tab screen' (11) displays a device screen of a corresponding student and a student name and status 12. The status of the student may be divided into course in-participating, offline, screen in-sharing, handwriting in-sharing, a screen lock status, a lock input status, a 1:1 remote control status, presentation in-requesting and the like.

FIG. 30K illustrates activating (3017) a detail function of 'Note toolbar' 10 when 'Note toolbar' 10 is executed (3016) in Course tab/Contents tab in a course progress mode.

Detail functions of 'Note toolbar' 10 include 'Move' (1) for moving contents content of a contents display region, 'Pointer' (2) for using a pointer in the contents display region, 'Input text' (3) for text input, 'Pen' (4) for pen input (e.g., handwriting) in the contents display region, 'Eraser' (5) for erasing some contents content in the contents display region, 'Undo' (6) for canceling current work and returning to a previous step, 'Redo' (7) for again executing canceled previous work, 'Close note toolbar' (8) for closing 'Note toolbar' 10, and 'Navigate button' (9) for page turn-over and the like. Because a note function use left/right direction flick function may be redundant with handwriting input, a page turnover button ('Navigate button' (9)) may be separately provided. Further, 'Navigate button' (9) may be dimmed in a situation where page turn-over is impossible in the first page or the last page.

FIG. 30L illustrates that a whiteboard 3019 or a mini note 3020 is activated when 'New note' (10) is executed (3018) in Course tab/Contents tab in a course progress mode.

For example, when 'New note' (10) is selected in Course tab/Contents tab, the whiteboard 20/mini note 30 are provided and, when the whiteboard 20 is selected, as in a screen 3019, the whiteboard 1 is overlaid and created and shown in a contents display region. Here, handwriting and text input are possible in the whiteboard 1. 'Close button' (2) is a button for closing the whiteboard (1) and, when the whiteboard is selected, 'Note toolbar' (3) may be provided in an opened status. Similarly, upon Mini-memo (30) selection, as in a screen 3020, an application performing a general memo function is executed and overlaid and displayed in the content display region.

FIG. 30M illustrates when only a contents display region is displayed (3022, 3023) when 'Full view' (10) is executed (3021) in Course tab/Contents tab in a course progress mode.

For example, when 'Full view' (10) is selected first, as in a screen 3022, only three main functions are provided as buttons in 'Full view mode'. For example, in Full view mode, 'Note' (1), 'Screen share/End share toggle button' (2), and 'Full view on/off toggle button' (3) may be provided. After that, upon 'Full view on/off toggle button' (3) selection, as in a screen 3023, a contents title region disappears and only contents content may be displayed.

According to an exemplary embodiment, in a screen 3023, a contents region is touched or, after N seconds, a contents title region may appear as in a screen 3023.

In another exemplary embodiment, FIG. 30N illustrates that a detail function of 'Note toolbar' is activated (3025) in 'Full view mode' when 'Note toolbar' is executed (3024) in 'Full view mode' of FIG. 30M.

Detail functions of 'Note toolbar' (1) includes 'Move' for moving contents content of a content display region, 'Pointer' for using a pointer in the contents display region, 'Input text' for text input, 'Pen' for pen input (e.g., handwriting) in the contents display region, 'Eraser' for erasing some contents content in the contents display region, 'Undo' for canceling a current work and returning to a previous step, 'Redo' for again executing a canceled previous work, 'Close note toolbar' for closing 'Note toolbar' 10, and 'Navigate button' for page turn-over and the like. Because a note function use left/right direction flick function may be redundant with handwriting input, a page turnover button ('Navigate button' (9)) may be separately provided. Further, 'Navigate button' (2) may be dimmed in a situation where page turn-over is impossible in the first page or the last page. In FIG. 30O, a specific student is selected in 'Students tab/Thumbnail view' or 'Group view' in a course progress mode, and detail information on the specific student may be displayed (3026). Here, when 'screen share' (10) is selected, a device screen of a specific student may be displayed in a teacher device (3027). According to another exemplary embodiment, a screen of a teacher device may be displayed on a device screen of a specific student.

A title region (1) displays information indicating that it is screen sharing or a name of a student who is a screen sharing object ('Screen share/student's name'). 'Note toolbar' (2) provides a function in which a teacher handwrites on a screen of a specific student device that is in screen sharing. Here, 'Note toolbar' (2) may be provided in an opened status. When a 'Share screen' (10) button is selected, it is changed into 'End share' (3). A contents display region 4 shows a screen of a screen sharing student device. That is, upon specific student screen sharing, the whole student device screen is shared.

In FIG. 30P, a specific student is selected in 'Students tab/Thumbnail view' or 'Group view' in a course progress mode, and detail information on the specific student may be displayed (3028). Here, when 'Private teaching' (10) is selected, a device screen of a specific student may be displayed in a teacher device identically with a screen share mode (3029). According to another exemplary embodiment, a teacher device screen may be displayed on a device screen of a specific student.

A title region (1) displays information indicating that it is screen sharing or a name of a student who is a screen sharing object ('Screen share/student's name'), and 'Note toolbar' (2) provides a function in which a teacher handwrites on a screen of a specific student device that is in screen sharing. Here, 'Note toolbar' (2) may be provided in an opened status. When a 'Private teaching (10) button is selected, it is changed into 'End Private teaching' (3). A contents display region 4 shows a screen of a screen sharing student device. That is, upon specific student screen sharing, the whole student device screen is shared.

FIG. 30Q illustrates an example of opening and closing a student list region or a contents list region. For example, a screen 3030 is a status in which the contents list region is closed in Course tab/Contents tab in a course progress mode. Here, when an open button 10 is selected, as in a screen 3031, a contents list region is changed in an opened status. At this time, when a close button 20 is selected again, as in a screen 3030, a contents list region is changed into a closed status. The open button 10 and the close button 20 may be toggled and shown.

FIG. 30R illustrates rotating a device and displaying contents according to a landscape or portrait size (3034) when 'Full view' (10) is executed in Course tab/Contents tab in a course progress mode.

For example, when 'Full view' (10) is selected first, as in a screen 3022, only three main functions are provided as buttons in 'Full view mode'. For example, in 'Full view mode', 'Note' (1), 'Screen share/End share toggle button' (2), and 'Full view on/off toggle button' (3) may be provided. At this time, when contents are displayed according to a landscape direction size as in a screen 3033, a device is rotated and, as in a screen 3034, contents may be displayed according to a landscape direction size.

FIG. 30S illustrates an example of executing a 'save contents' menu among 'more menu'.

For example, when handwriting is performed on contents in a contents display region as in a screen 3035, 'more menu' 10 is selected and a 'save contents' menu is selected. Upon 'save contents' menu selection, at least one of whether to include and save even note content ('With note' (1)) and whether to upload file name (2) and saved contents content to LMS ('Upload to LMS') is determined, and 'save' is selected (3036). Here, when saved contents content is uploaded to LMS, it may be saved in 'My box' lower basic save space, and a file name may be provided in a combination of a contents name and a course name as default, and may be also determined by user input. Upon 'save' selection, it may be just saved in a specific folder in a local save space region (3037).

FIGS. 30T to 30U illustrate an example of executing a 'Close course' menu among more menu. FIG. 30T is for a case where there are no contents being in edition, and FIG. 30U is for a case where there are contents being in edition.

For example, as in a screen 3038 of FIG. 30T, when there are no contents being in edition, 'more menu' (10) is selected and a 'Close course' menu is selected. Upon 'Close course' menu selection, a window inquiring whether to close a course is provided (3039) and then, upon 'OK' selection, it returns to an initial launcher program screen (3040).

If there are contents being in edition as in a screen 3041 of FIG. 30U, a 'more menu' (10) is selected and a 'Close course' menu is selected. Upon 'Close course' menu selection, it is informed that there are now contents being in edition and a window inquiring whether to save is provided (3042). Upon 'Close' 30 selection, it returns to the initial launcher program screen (3044). On contrary, upon 'save contents' (20) selection, as in a screen 3043, at least one of whether to include and save even note content ('With note' (1)) and whether to upload file name (2) and saved contents content to LMS ('Upload to LMS') is determined, and 'save' is selected (3036). Here, when saved contents content is uploaded to LMS, it may be saved in 'My box' lower basic save space, and a file name may be provided in a combination of a contents name and a course name as default, and may be also determined by user input. Upon 'save' selection, it may be just saved in a specific folder in a local save space region

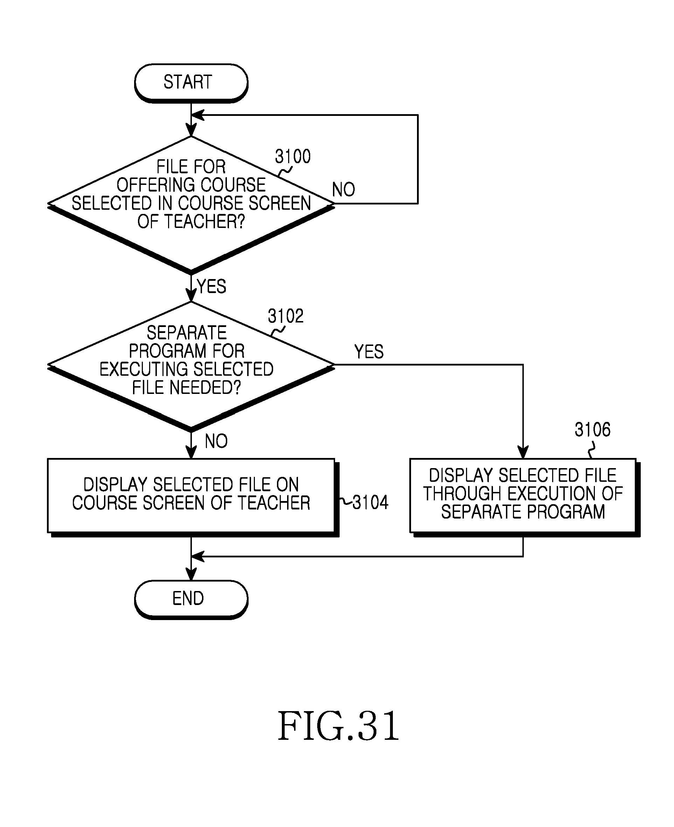

FIG. 31 is a flowchart illustrating an operation for contents execution according to an exemplary embodiment of the present invention.

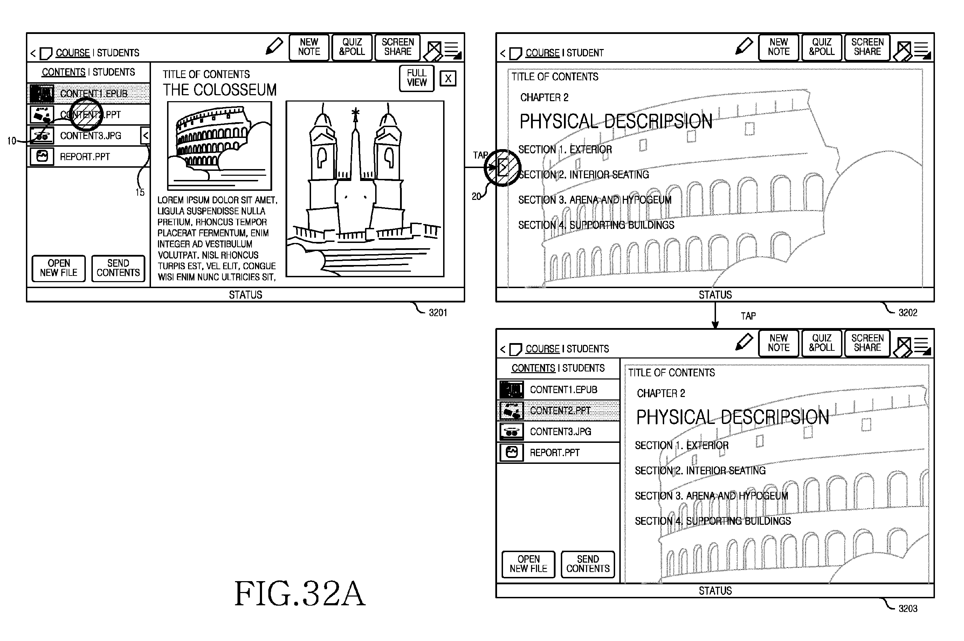

Referring to FIG. 31, when a contents file for performing a course is selected in a course screen in step 3100, in step 1302, a teacher device determines if there is a need for a separate application program for executing a selected contents file. If there is a need for a separate application program for executing a selected contents file, the selected contents file is displayed by executing a separate application program in step 3106. A detailed description of contents execution is made with reference to FIGS.32A to 32E.

FIGS. 32A to 32E are diagrams illustrating user interfaces executing a specific contents file for a course progress.

For example, a screen 3201 of FIG. 32A is a screen corresponding to a course progress mode shown when 'start course' is selected in a teacher initial launcher screen. Particularly, the screen 3201 illustrates a case where Course tab/Contents tab is selected. A contents list region shows contents for a course progress, and a contents display region shows content of default contents (e.g., content1.epub). Contents being in the contents list region are contents previously registered by a teacher device in an LMS. A close button 15 is a button for closing the contents list region. For example, when the close button 15 is selected, the contents list region may be closed as in a screen 3202.

Meanwhile, when specific contents (e.g., content2.ppt) 10 are selected, as in a screen 3202, the selected specific contents may opened and provided to the contents display region. Here, when the open button 20 is selected, as in a screen 3203, the contents list region is opened.

When specific contents (e.g., content2.ppt) are selected, the contents list region is automatically closed while only the contents display region may be shown but, according to another exemplary embodiment, when specific contents (e.g., content2.ppt) are selected, as in a screen 3203, a contents list region and a contents display region appear and the contents list region may be closed using the close button 15.

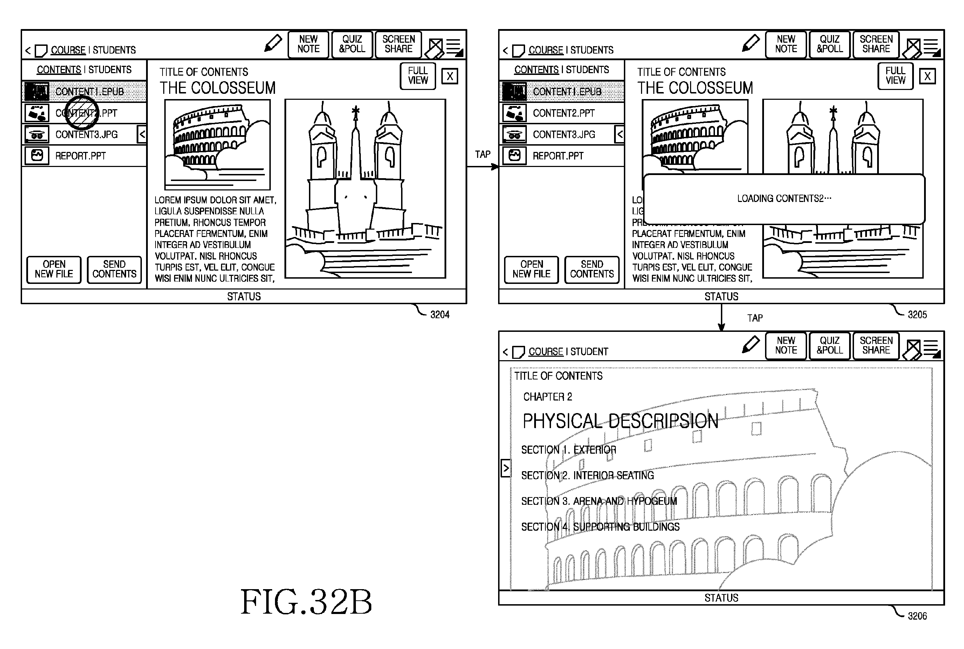

In another exemplary embodiment, in a case of a contents file having a large contents file capacity, as in FIG. 32B, a contents loading popup may be generated.

For example, when large-capacity specific contents are selected as in a screen 3204, a contents loading popup is generated as in a screen 3205 and, after a predetermined time, the selected specific contents may be opened and provided in the contents display region as in a screen 3206.

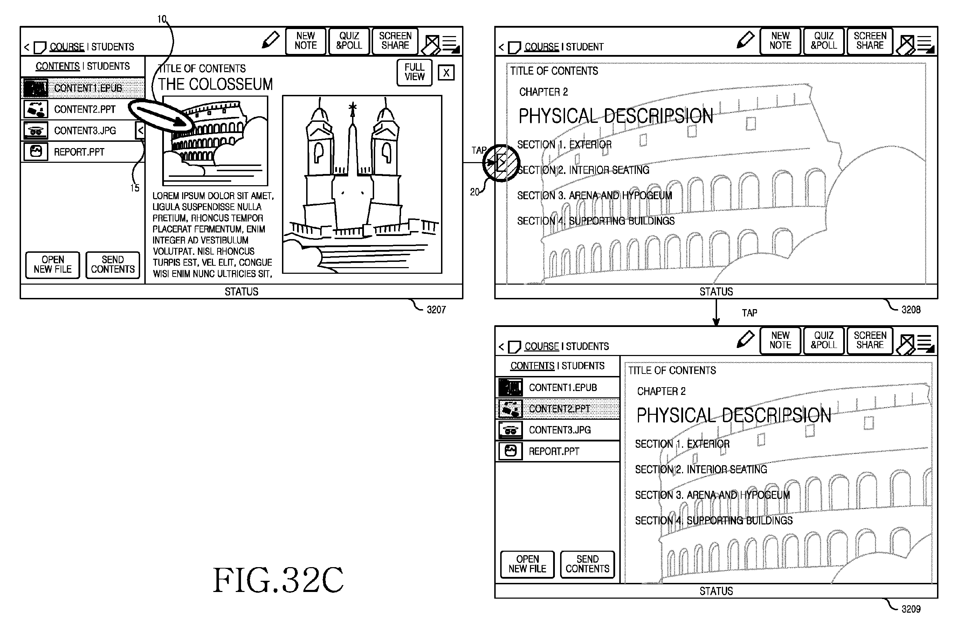

In another exemplary embodiment, a contents file may be executed by dragging and dropping specific contents being in a contents list region to a contents display region as in FIG. 32C.

For example, when specific contents (e.g., content2.ppt) are dragged and dropped to the contents display region (10) as in a screen 3207, the specific contents may be opened and provided to the contents display region as in a screen 3208. When the specific contents (e.g., content2.ppt) are opened, the contents list region is automatically closed while only the contents display region may be shown. Here, when the open button 20 is selected, the contents list region is opened as in a screen 3209.

In another exemplary embodiment, when specific contents (e.g., content2.ppt) are opened, as in a screen 3209, a contents list region and a contents display region appear and the contents list region may be closed using the close button 15.

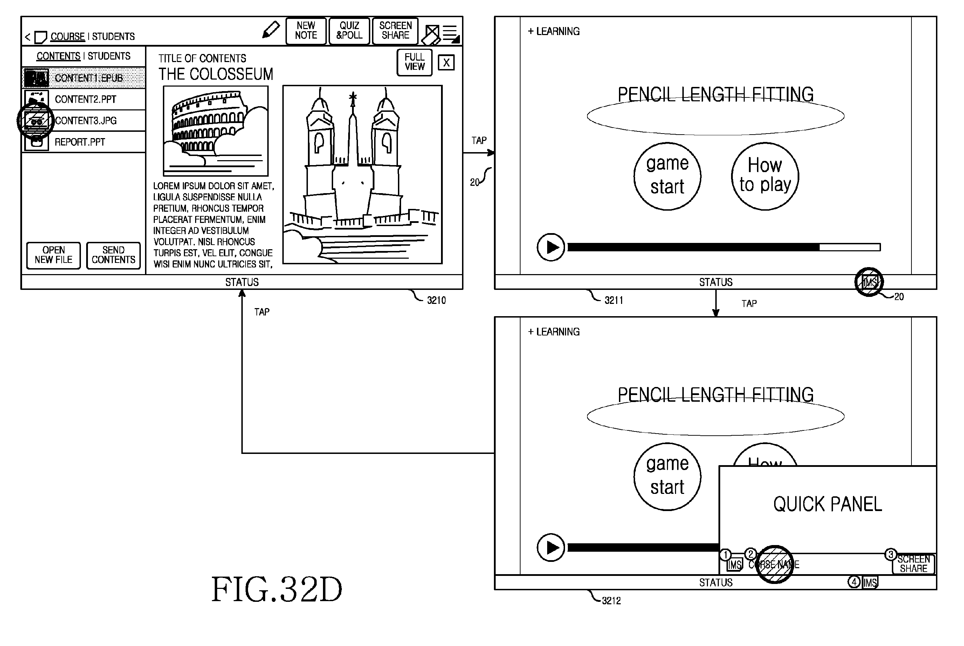

In a further exemplary embodiment, as in FIG. 32D, when a contents file of a format not supported in a viewer is opened, contents may be opened by interworking with a viewer or application corresponding to a corresponding format.

For example, when specific contents (e.g., content3.xxx) 10 of a format not supported in a viewer are selected, as in a screen 3211, contents may be opened by interworking with a viewer or application corresponding to a corresponding format. At this time, when it starts with 'Full view', an IMS icon 20 is provided to 'Status bar' and, when IMS icon 20 is selected, as in a screen 3212, a main function may be shown in 'Quick panel'.

In another exemplary embodiment, when specific contents are opened by automatically interworking with a viewer or application corresponding to a corresponding format, 'Quick panel' may be automatically displayed in 'Full view' mode. In a further exemplary embodiment, when it is not 'Full view' mode, upon contents file selection, contents content and Quick panel may be just split and shown on a screen.

The 'Quick panel' item includes 'App icon' (1), 'Course name' (2) returning to an IMS screen, and a 'Screen share/End share toggle' button (3). For example, upon 'Course name' (2) selection, it returns to a screen 3210.

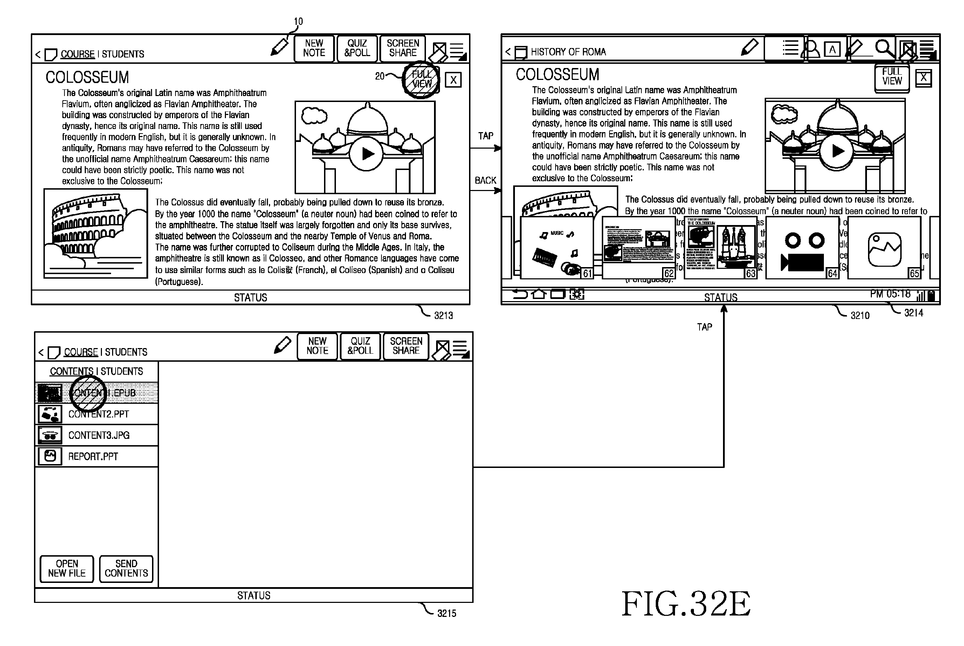

In a yet another exemplary embodiment, a tool providing a handwriting function in a viewer or application itself for viewing contents may be used as in FIG. 32E.

For example, when 'epub viewer library' is not provided in an interworkable form as in a screen 3213, when a specific contents file (e.g., context1.epub) of a contents list region is selected and displayed in a view mode in a contents display region, 'Note toolbar' (10) for handwriting function is basically provided.

Meanwhile when 'Full view' (20) is selected in a screen 3213, as in a screen 3214, contents themselves may include an object select and play function and a pen tool for handwriting such as 'Note toolbar' (10) according to contents kind as in a screen 3214. When a 'Back' button is selected in a screen 3214, it may return to a screen 3213.

In another exemplary embodiment, when 'epub viewer library' is not provided in an interworkable form as in a screen 3215, when a specific contents file (e.g., context1.epub) of a contents list region is selected, specific contents are not displayed in a viewer mode in an IMS contents region and 'Textbook viewer' may be just executed as in a screen 3214.

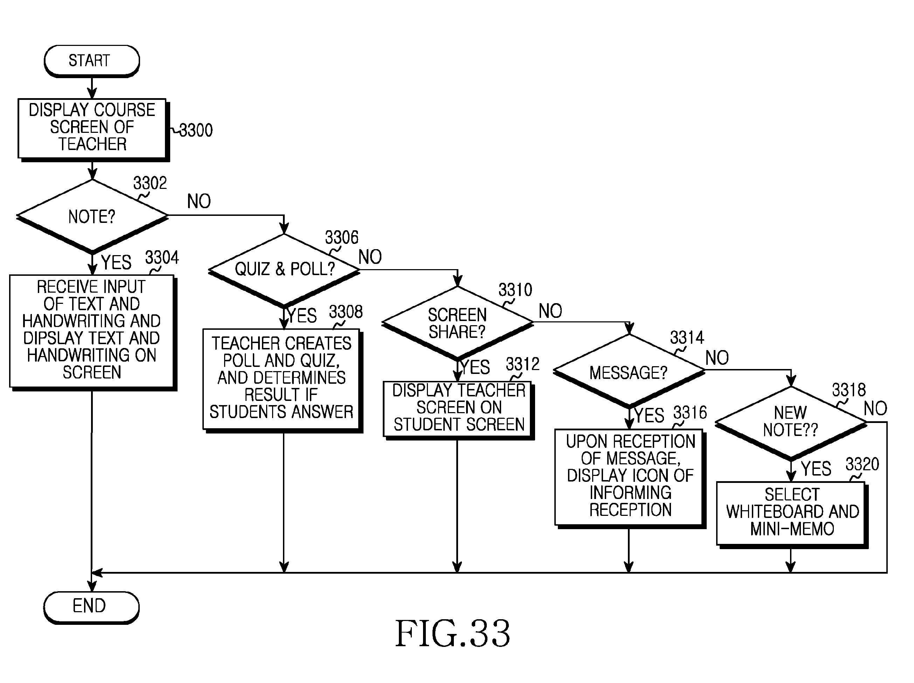

FIG. 33 is a flowchart illustrating an operation for course management of a teacher according to an exemplary embodiment of the present invention.

Referring to FIG. 33, in step 3300, a teacher device displays a course screen of a teacher. For example, the teacher device displays a screen in which Course tab/Contents tab is selected in a course progress mode of FIG. 30G.

Upon 'note' selection (step 3302), the teacher device receives an input of a text and user's handwriting and displays the received text and user's handwriting on a screen (step 3304). Upon 'Quiz&poll' selection (step 3306), the teacher device creates a poll and a quiz and, if students answer, the teacher device determines a result (step 3308). Upon 'screen share' selection (step 3310), the teacher device shares an image output to a teacher's screen and displays on a student's screen (step 3312). That is, the image output to the teacher's screen is forwarded to students' devices and displayed. Or, a screen of a device of a specific student may be shared and provided to the teacher device.

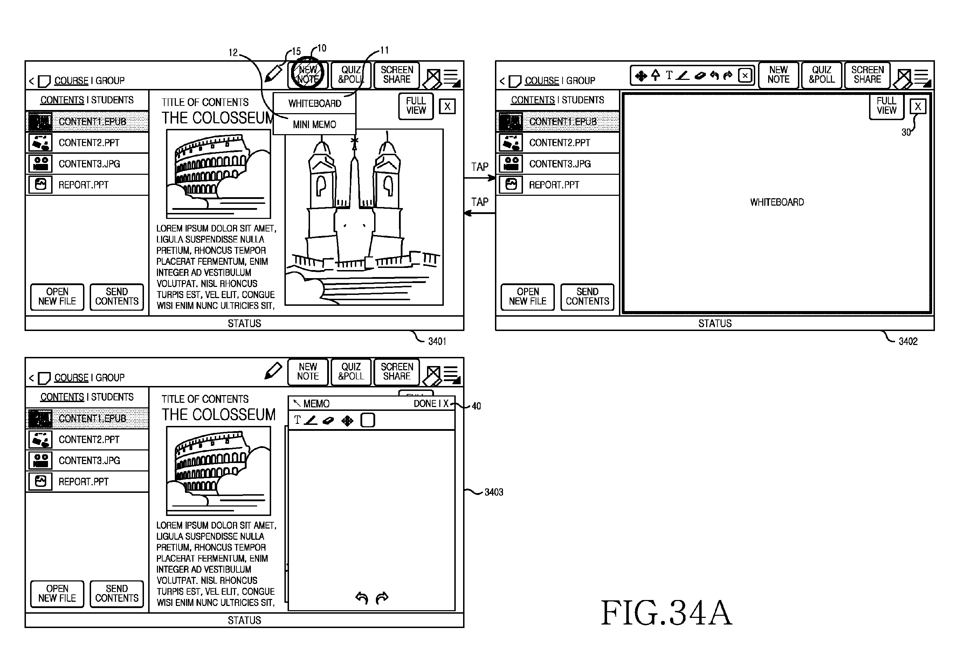

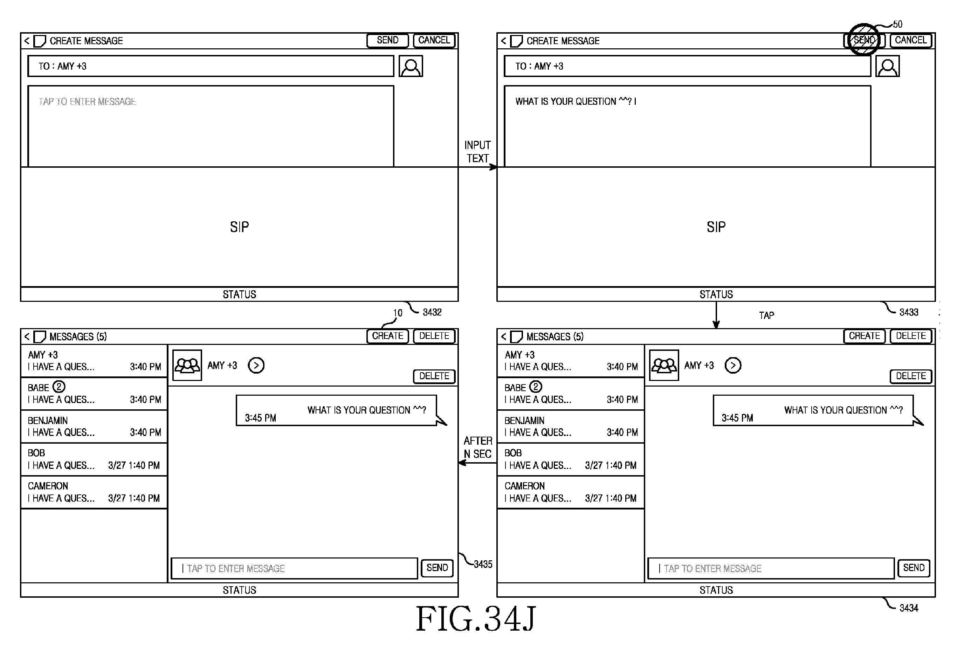

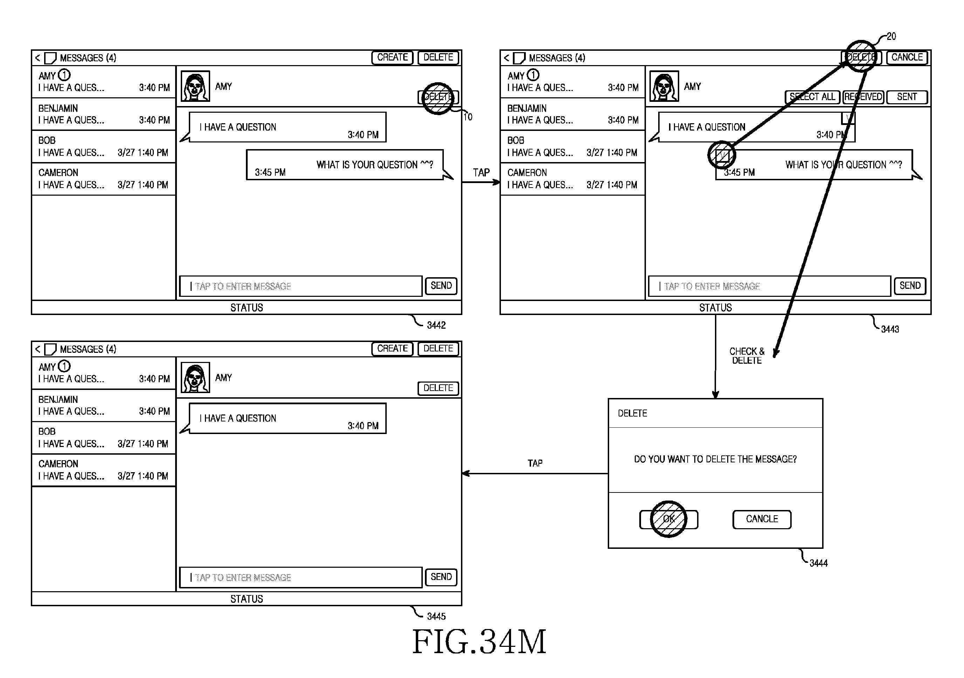

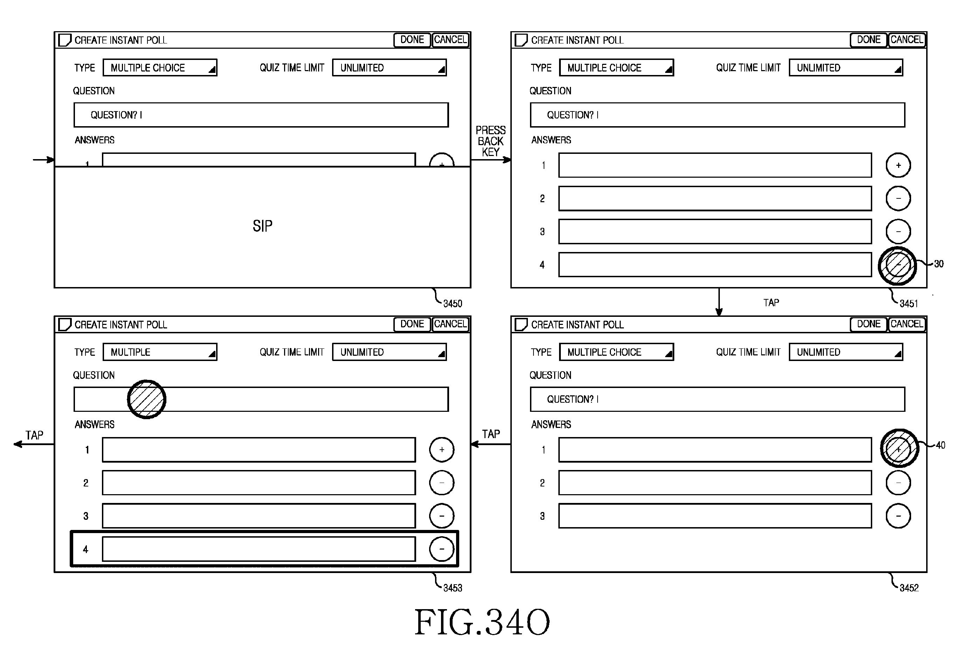

Upon message reception (step 3314), the teacher device displays an icon informing of message reception (step 3316). Upon 'new note' selection (step 3318), the teacher device selects 'whiteboard' or 'mini-memo' (step 3320). A detailed user interface for course management of a teacher is made with reference to FIGS. 34A to 34V below.

FIGS. 34A to 34V are diagrams illustrating user interfaces for course management of a teacher according to an exemplary embodiment of the present invention.

FIG. 34A illustrates a case where Course tab/Contents tab is selected in a course progress mode (3401). Here, upon 'New note' (10) selection, 'Whiteboard' 11 and 'Mini-memo' may be given. After that, when 'whiteboard' 11 is selected, as in a screen 3402, a whiteboard is opened in which handwriting and text input to a contents display region is possible. At this time, 'note toolbar' 15 may be provided in an opened status. Further, when a close button 30 is selected, it may return to the screen 3401.

Similarly, when 'Mini-memo' 12 is selected, as in a screen 3403, a memo is opened in which a simple memo input to the contents display region is possible. At this time, 'note toolbar' 15 may be provided in an opened status. Further, when a close button 40 is selected, a memo is closed.

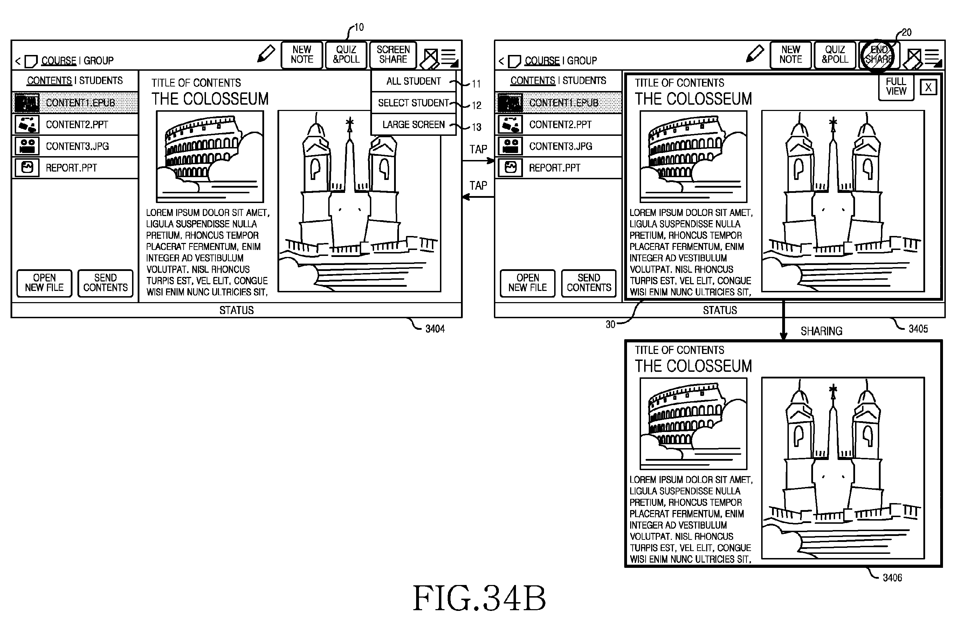

FIG. 34B illustrates a case where Course tab/Contents tab is selected in a course progress mode (3404). Here, 'All Student' (11) for sharing a screen of a teacher device to all students at the time of 'Screen share' (10) selection, 'Select student' (12) for selectively sharing a screen of a teacher device only to some students, and 'Large screen' 13 for outputting a screen of a teacher to other external device may be given. Here, upon 'All Student' (11) selection, as in a screen 3405, a 'Screen share' (10) button is toggled and is changed into 'End share' (20). At this time, the whole screen of the teacher device is shared or a contents view region (i.e., a contents display region) 30 may be shared (3406).

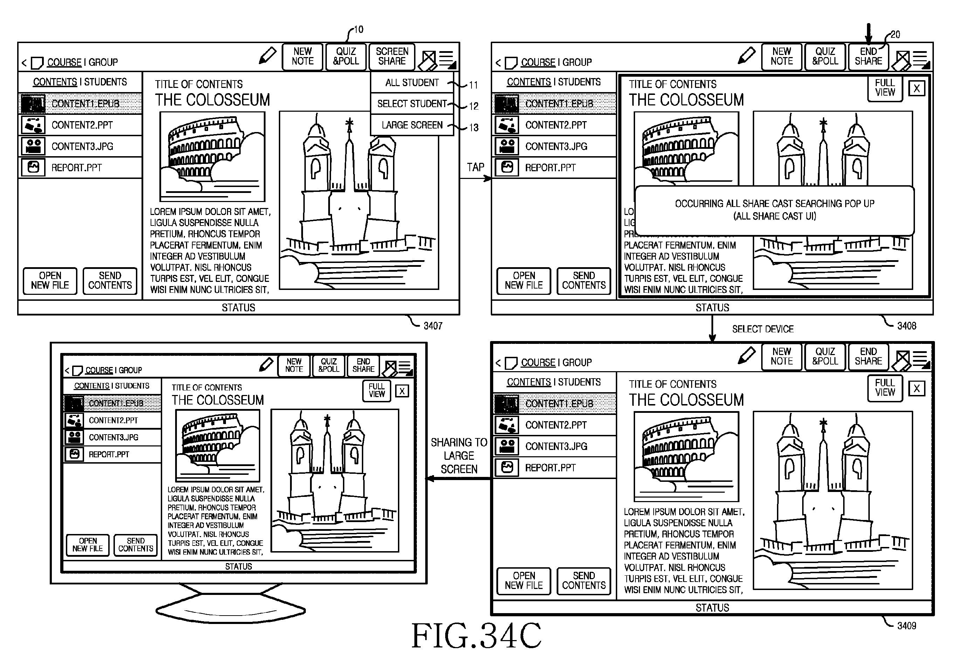

In another exemplary embodiment, FIG. 34C illustrates a case where Course tab/Contents tab is selected in a course progress mode (3407). Here, 'All Student' (11) for sharing a screen of a teacher device to all students at the time of 'Screen share' (10) selection, 'Select student' (12) for selectively sharing a screen of a teacher device only to some students, and 'Large screen' 13 for outputting a screen of a teacher to other external device may be given. Here, upon 'Large screen' (13) selection, as in a screen 3408, a 'Screen share' (10) button is toggled and is changed into 'End share' (20). At this time, the whole screen 3409 of a teacher device may be forwarded to a previously selected external device (e.g., a large TV, a screen and the like) and displayed by the external device (3410).

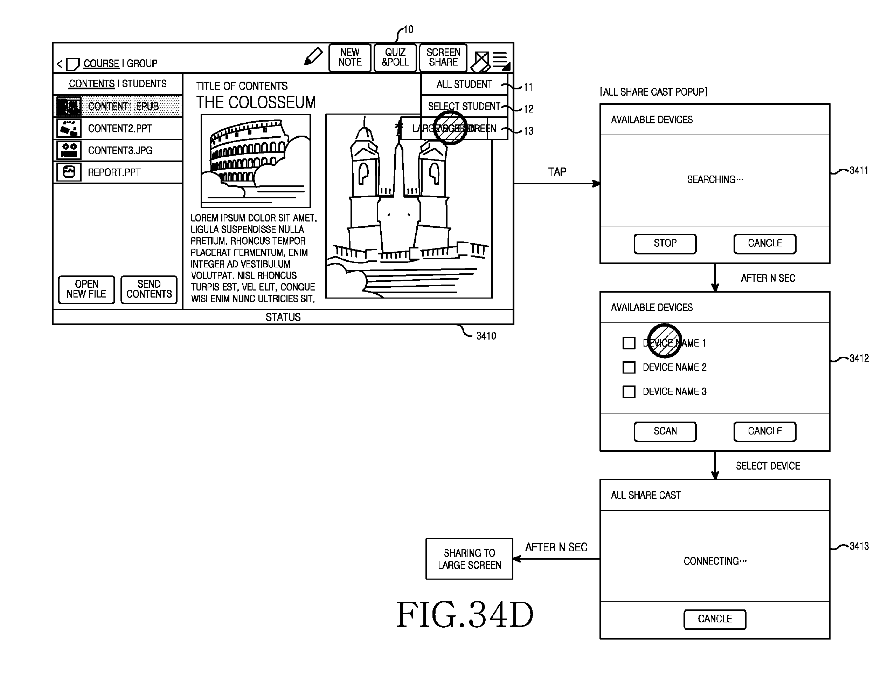

In another exemplary embodiment, FIG. 34D illustrates a case where Course tab/Contents tab is selected in a course progress mode (3410). Here, 'All Student' (11) for sharing a screen of a teacher device to all students at the time of 'Screen share' (10) selection, 'Select student' (12) for selectively sharing a screen of a teacher device only to some students, and 'Large screen' 13 for outputting a screen of a teacher to other external device may be given. Here, when the external device is not previously selected, upon 'Large screen' (13) selection, as in a screen 3411, an available external device search procedure is performed and, after search, a message capable of selecting the searched external devices is given (3412). When at least one of the external devices is selected, the teacher device attempts connection with the at least one external device (3413). After that, the whole screen of the teacher device may be forwarded to the connected at least one external device and displayed by the connected at least one external device.

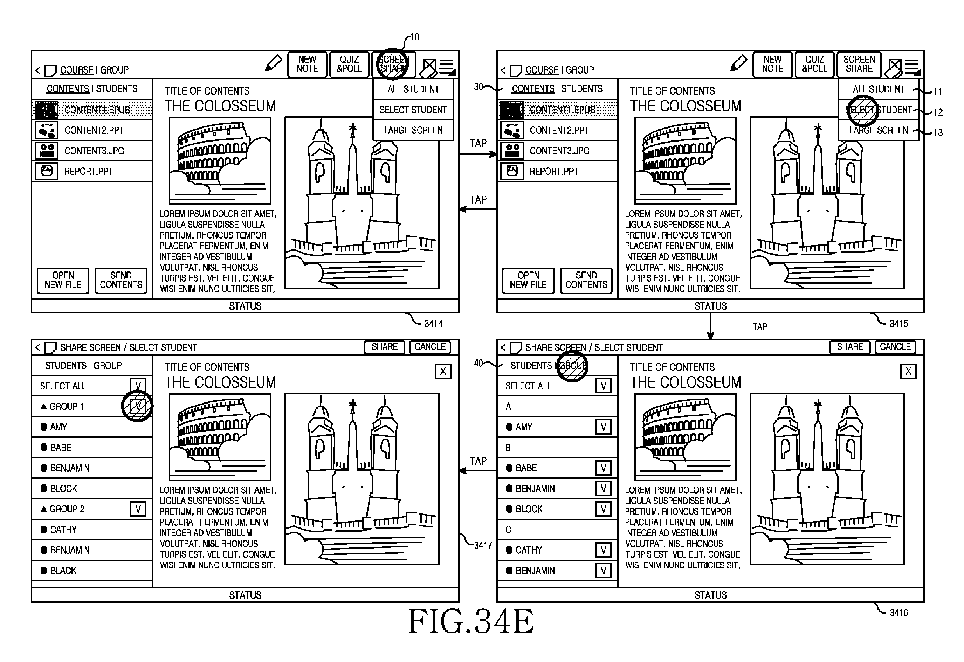

In a further exemplary embodiment, FIG. 34E illustrates a case where Course tab/Contents tab is selected in a course progress mode (3414). Here, 'All Student' (11) for sharing a screen of a teacher device to all students as in a screen 3415 at the time of 'Screen share' (10) selection, 'Select student' (12) for selectively sharing a screen of a teacher device only to some students, and 'Large screen' 13 for outputting a screen of a teacher to other external device may be given. Here, upon 'Select student' (12) selection, as in a screen 3416, a student list including a check box of 'Students tab/Groups tab' (40) may be displayed. As default, 'Students tab' may be selected. 'Students tab' has a check box capable of selecting each of students without group designation, and 'Groups tab' 40 has a check box capable of selecting students by group as in a screen 3417. Here, when 'Select all' is selected, all students of a class or all groups are selected.

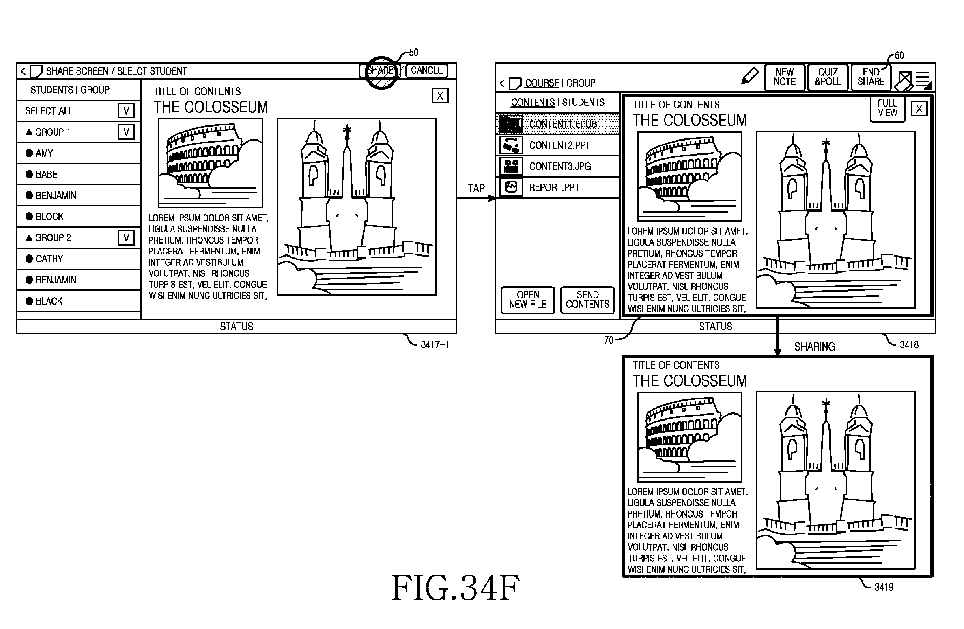

Next, after some or all students are selected as in FIG. 34E, when 'Screen share' (50) is selected as in a screen 3417-1 of FIG. 34F, as in a screen 3418, a 'Screen share' (60) button is toggled and is changed into 'End share' (60). At this time, the whole screen of the teacher device may be shared or a contents view region (i.e., a contents display region) 70 may be shared (3419).

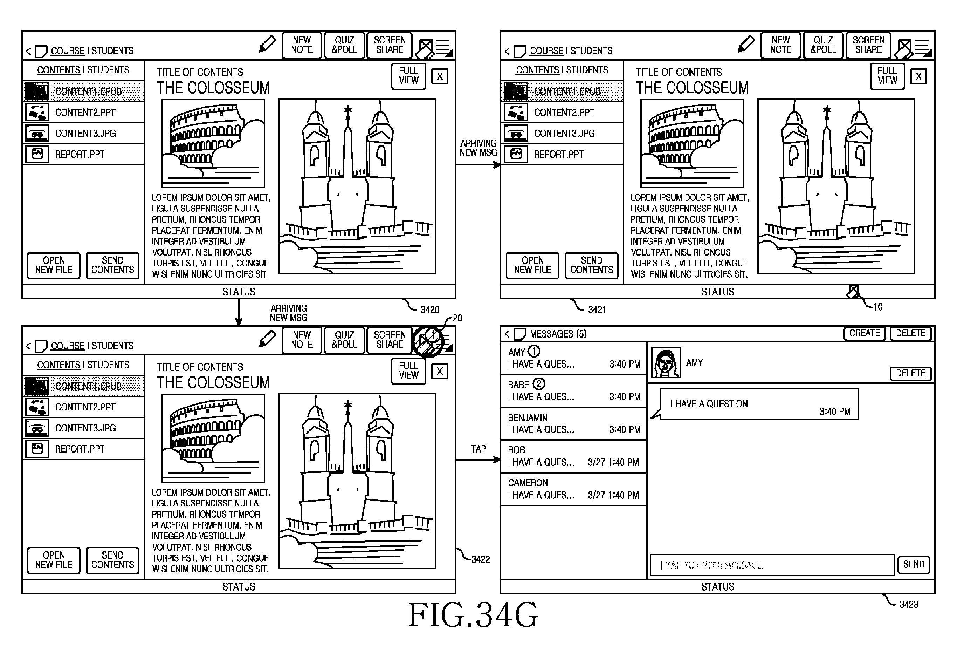

FIGS. 34G to 34M illustrate user interfaces related to message sending/reception.

FIG. 34G illustrates that Course tab/Contents tab is selected in a course progress mode (3420). Here, when a new message arrives, as in a screen 3421, a new message icon 10 may be created in a status region to inform message arrival. At this time, when the new message icon 10 is selected, a message window may be provided as in a screen 3423.

In another exemplary embodiment, when a new message arrives, as in a screen 3422, it may be combined with a message icon 20 of a title region to provide new message arrival information (e.g., the number of received new messages). When a message icon 20 is selected, as in a screen 3423, a message window may be provided.

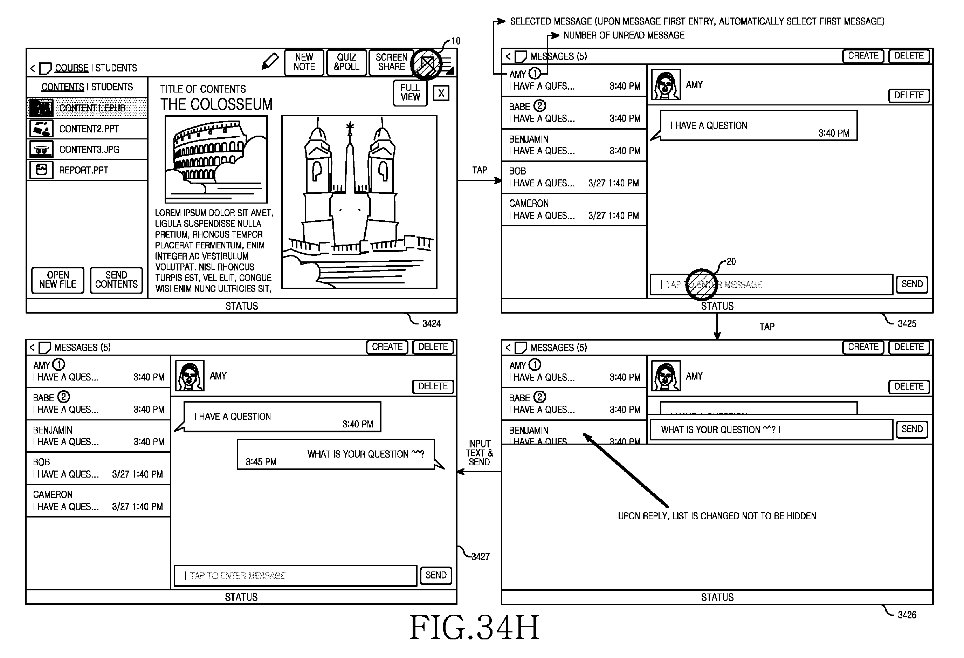

FIG. 34H illustrates a case where Course tab/Contents tab is selected in a course progress mode (3423). Here, as in a screen 3424, when a message icon 10 of a title region is selected, as in a screen 3425, a message window may be provided. In the message window, the latest received first message may be displayed. Messages transmitted/received by corresponding student are grouped by student and the number of unread messages may be displayed by each student.

Next, to transmit a response message to a specific student (e.g. Amy), 'Amy' is selected among a message list and then, a message input window 20 is selected.

After that, as in a screen 3426, a message is input in the message input window 20 and then, may be sent to a specific student by using a 'send' button 30. At this time, as in a screen 3427, the message output window may connect and display a message received from a specific student and messages sent to the specific student, according to order of time.

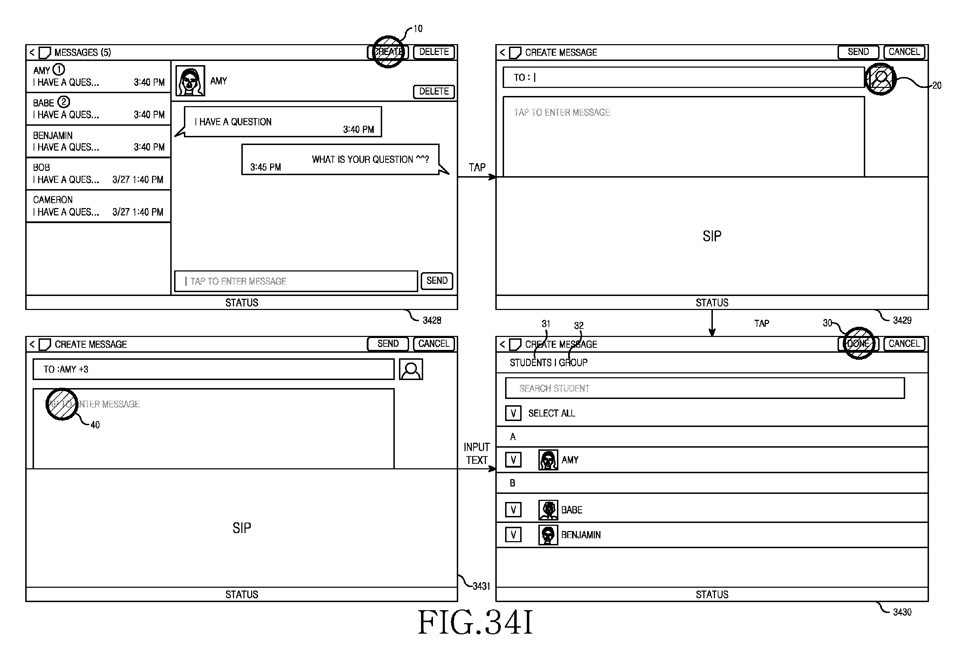

In another exemplary embodiment, as in FIG. 34I to 34J, specific students may be selected and new messages may be sent to the specific students.

For example, as in a screen 3428, in a message window, a 'create' button 10 is selected and, upon selection, as in a screen 3429, a window capable of designating a recipient and a message input are provided. When a recipient button 20 is selected, as in a screen 3430, a student list of 'Students' tab 31 / 'Groups' tab 32 may be displayed. As default, 'Students' tab 31 may be selected. 'Students' tab 31 has a check box capable of selecting for each of students without group designation, and 'Groups' tab 32 has a check box capable of selecting students by group. Here, when 'Select all' is selected, all students of a class or all groups are selected. After that, after some or all students are selected, when 'Done' button 30 is selected, as in a screen 3431, a recipient is designated. Next, as in a screen 3432, a message input window 40 may be touched and a message may be input. After that, a message is input to the message input window 40 as in a screen 3433 and then, a message may be sent to specific students by using a 'send' button 40 (3434). Next, as in a screen 3435, during a predetermined time, it may wait until a response message is received from incoming devices.

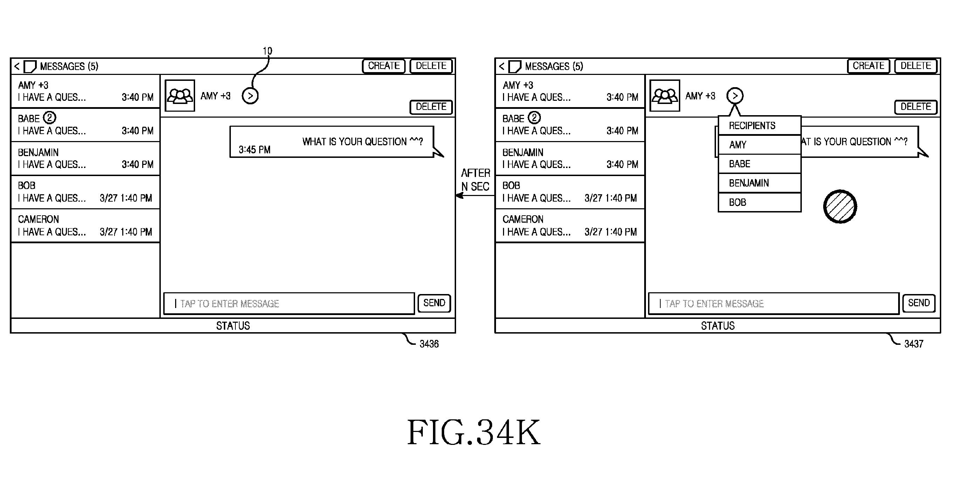

In another exemplary embodiment, FIG. 34K illustrates a user interface determining a recipient. For example, a screen 3436 is a screen in which a teacher sends a message to four students and waits a response message from four students. When a detail view button 10 of a recipient is selected, names of four recipients may be provided as in a screen 3437.

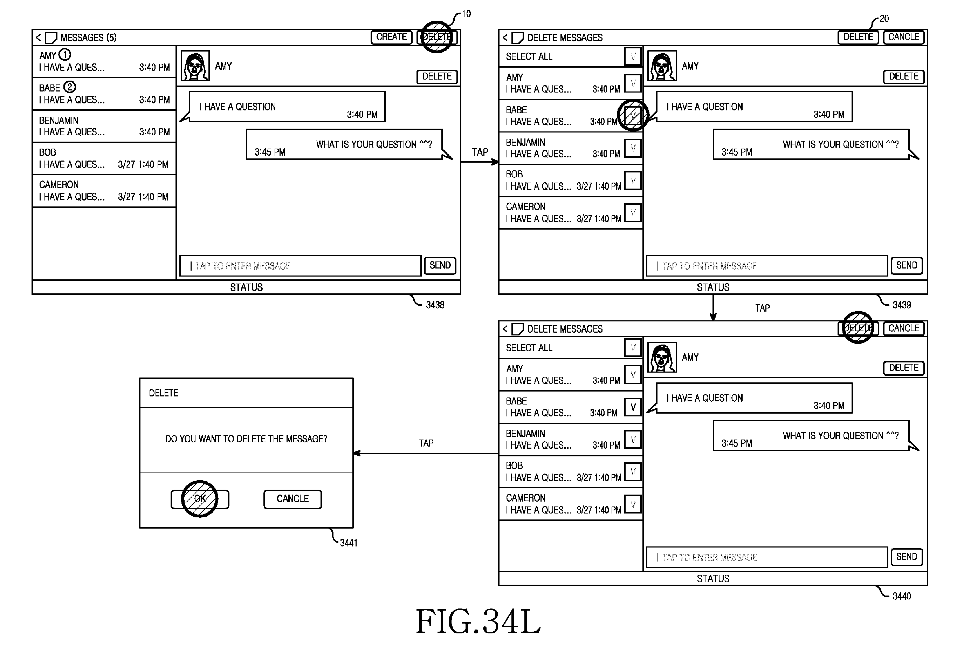

In an exemplary embodiment, FIG. 34L to 34M illustrate user interfaces for message deletion.

For example, as in a screen 3438, a first 'delete' button 10 is selected in a message window and, upon selection, as in a screen 3439, a check box may be provided for an item of each message list being in a message window. The items of the message list are thread messages in which messages transmitted/received by student are grouped. Next, in a message list, at least one item is selected and then, when a 'delete' button 20 is selected (3440), a window inquiring whether to delete a corresponding message may be provided (3441).

In another exemplary embodiment, as in a screen 3442, in a message window providing a specific student (e.g., Amy) and transmission/reception message, a second 'delete' button 10 is selected and, upon selection, as in a screen 3443, a check box may be provided for each of the specific student (e.g., Amy) and the transmission/reception messages. At least one message among the thread messages is selected and then, when a first 'delete' button 20 is selected (3443), a window inquiring whether to delete a corresponding message may be provided (3444). After that, when 'OK' is selected, the selected messages among the thread messages may be deleted (3445).

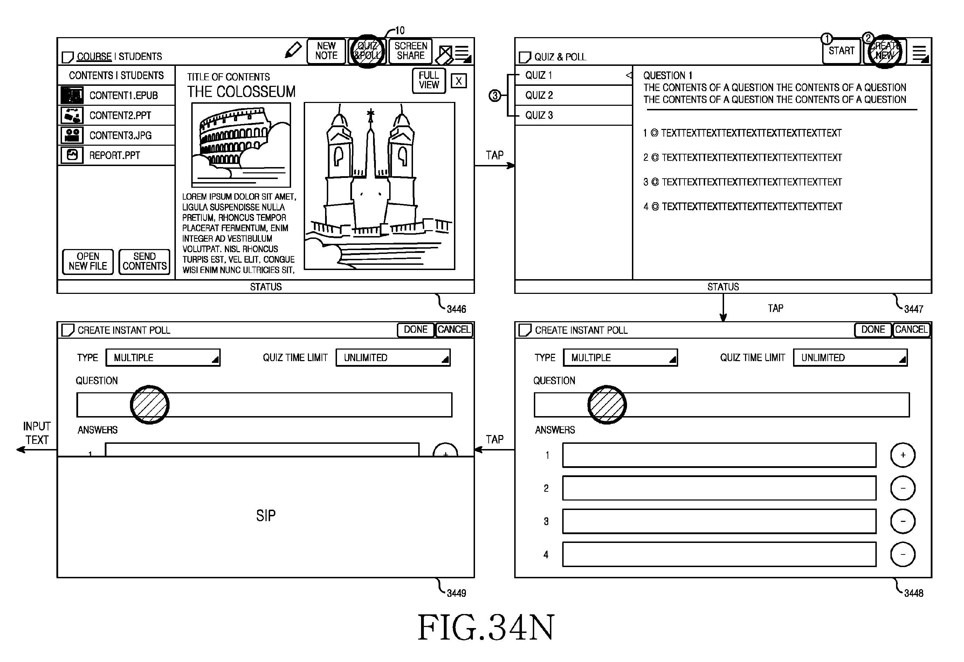

FIGS. 34N to 34S are user interfaces for poll and quiz creation/management.

FIG. 34N illustrates a case where Course tab/Contents tab is selected in a course progress mode (3446). Here, when a 'Quiz&Poll' button 10 of a title region is selected as in a screen 3446, a previously registered quiz list and quiz display window may be provided as in a screen 3447.

Here, in the screen 3447, 'Start' (1) is a button for starting a quiz or poll selected in a quiz list 3, and 'Create new' (2) is a button for creating a new instant poll or quiz in an IMS. The quiz list 3 is a quiz list previously registered by a teacher in an LMS.

Next, when 'Create new' (2) is selected, as in a screen 3448, an input window for determining at least one of a quiz or poll type ('Type'), a time limit ('Quiz time limit'), a question ('Question'), and a viewer example to a question ('Answers') is provided.

After that, a 'Question' field is selected (3449), and a text is input (3450). When a deletion button 30 is selected in a screen 3451, an input window corresponding to a deletion button 30 (i.e., an input window for making an answer view example) may be deleted as in a screen 3452. On contrary, when an addition button 40 is selected, an input window (i.e., an input window for making an answer view example) corresponding to the addition button 40 may be added as in a screen 3454.

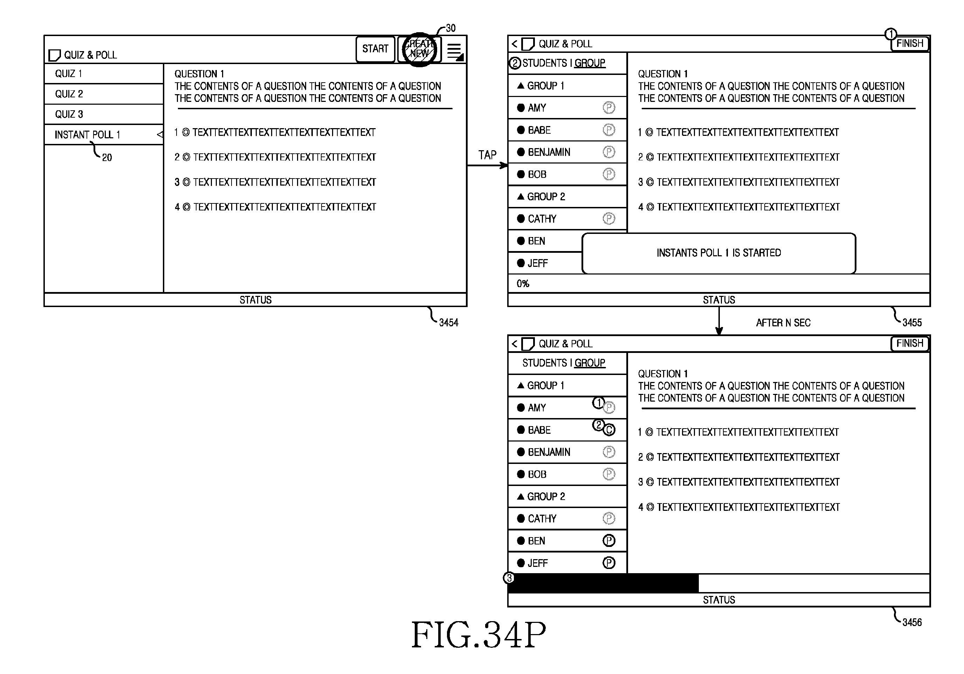

After 'instant poll 1' (20) is added to a quiz list 3 as in FIG. 34P, when 'instant poll 1' 20 is selected and a 'start' button 30 is selected, as in a screen 3455, a student list being participating in a course and content corresponding to 'instant poll 1' may be displayed. At this time, a 'start' button 30 is changed into 'Finish' (1), and the present condition of completion by student may be provided within the student list 2. At this time, the student list may be sorted and displayed without group designation or may be bundled and shown by group.

For example, as in a screen 3456, a student 1 submitting an answer for 'instant poll 1' 20 and a student 2 before submission may be distinguished and given and also, the whole completion situation may be displayed by percentage 3.

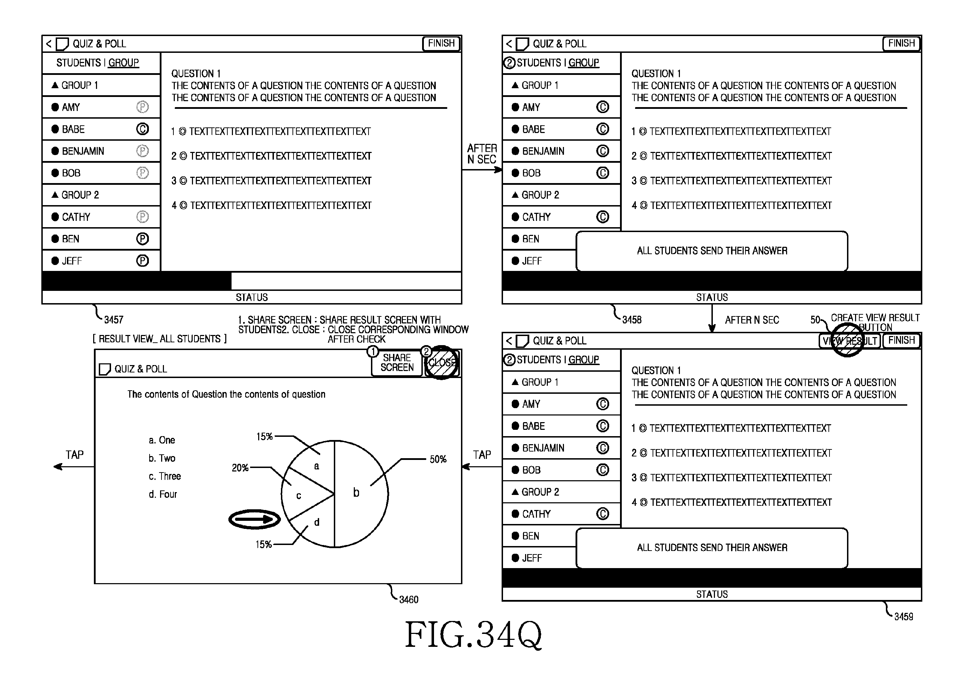

After that, as in FIG. 34Q, a result may be determined for an answer submitted by students.

For example, as in a screen 3457, answer submission for 'instant poll 1' (2) is in progress and then, if students participating in a course all submit answers after a predetermined time, as in a screen 3458, a window submitting all answers from the students participating in the course is provided and then, as in a screen 3459, a 'View result' button 50 capable of determining a result may be created. At this time, when the 'View result' button 50 is selected, as in a screen 3460, a result on 'instant poll 1' (20) may be provided with a graph. For example, a rate selecting 'a', 'b', 'c', and 'd' may be shown with a circle graph. In a screen 3460, a 'shared screen' button 1 for sharing a result screen with students and a 'close' button 2 for closing a result screen may be provided.

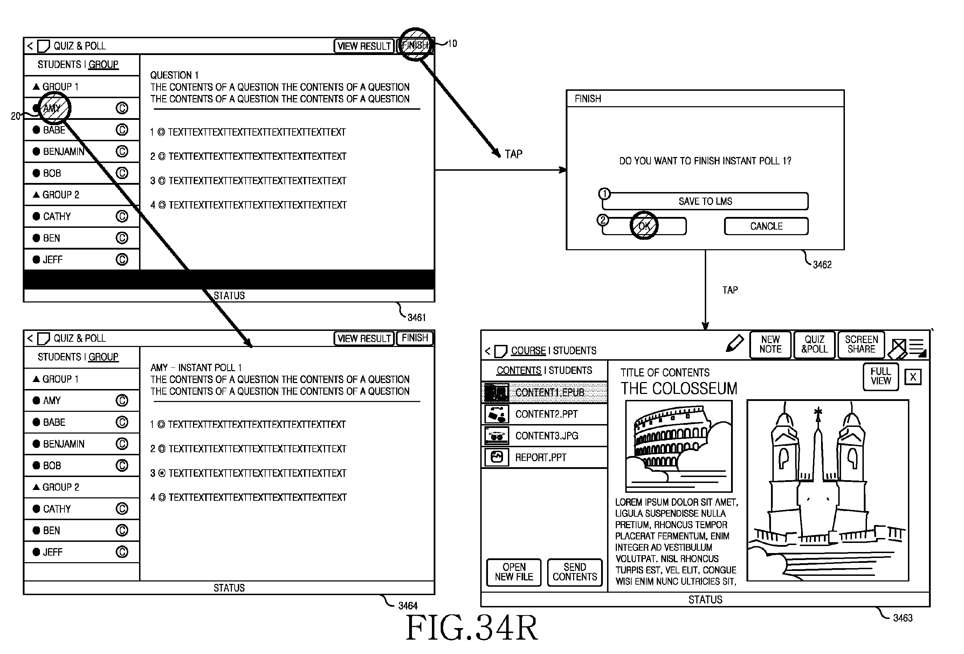

Meanwhile, in FIG. 34R, when answers are all submitted from students participating in a course (3461), when a 'Finish' (10) button is selected, a window inquiring whether to close a corresponding poll is provided (3462). Here, upon 'Save to LMS' (1) button selection, a corresponding poll is saved in a 'Quiz&Poll' list of an LMS and, upon 'OK' (2) button selection, it may move to a main screen of a course progress mode without saving such as a screen 3463 and, upon 'Cancel' (3) button selection, it returns to a previous screen.

Also, when a specific student 20 is selected among a student list in a screen 3461, an answer submitted by a specific student may be provided as in a screen 3464.

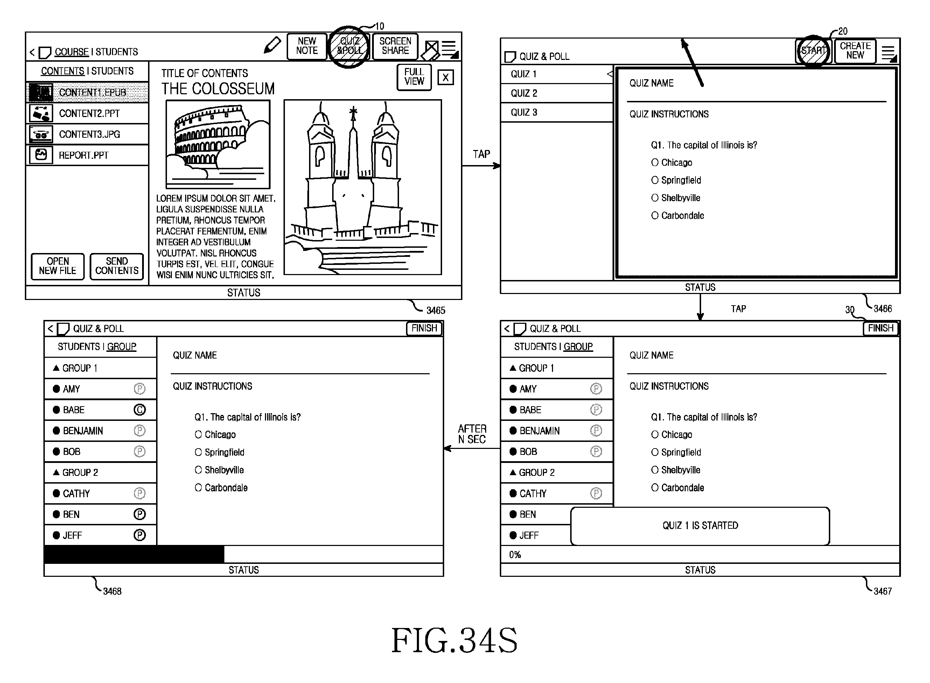

In another exemplary embodiment, a teacher device may receive a quiz list from a previously registered quiz list, i.e., an LMS as in FIG. 34S below.

For example, FIG. 34S illustrates a case where Course tab/Contents tab is selected in a course progress mode (3465). Here, when a 'Quiz&Poll' button 10 of a title region is selected as in a screen 3465, a quiz list previously registered by a teacher device and a specific item among the quiz list may be provided to a quiz display window as in a screen 3466. Next, a specific item is selected among a quiz list previously registered by a teacher device and, when a 'start' button 20 is selected, as in a screen 3467, a student list being participating in a course and content corresponding to the selected quiz (e.g., Quiz 1) may be displayed. Also, the 'start' button 20 is changed into 'Finish' 30, and a message informing of a start of a quiz may be provided.

After that, after a predetermined time, as in a screen 3468, the present condition of quiz completion by student (e.g., quiz submission or non-submission mark or whole progress rate) may be provided within the student list. At this time, the student list may be sorted and given without group designation or may be bundled and given by group. In a screen 3468, students are sorted by group and a quiz completion situation is provided.

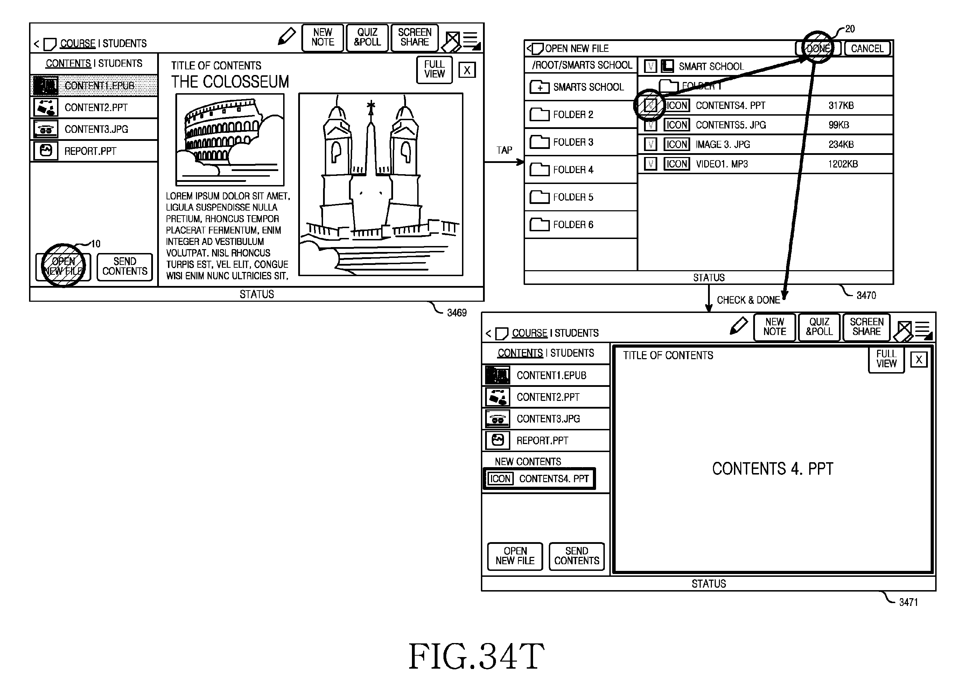

FIG. 34T illustrates a case where Course tab/Contents tab is selected in a course progress mode (3469). Here, when 'Open new file' (10) is selected, as in a screen 3470, a folder list of a local device and files within a specific folder among the folder list may be provided. Here, when some files within a specific folder are selected and 'Done' 20 is selected, as in a screen 3471, selected files within a contents list may be added. Also, the selected file may be automatically opened in a contents viewer or display region.

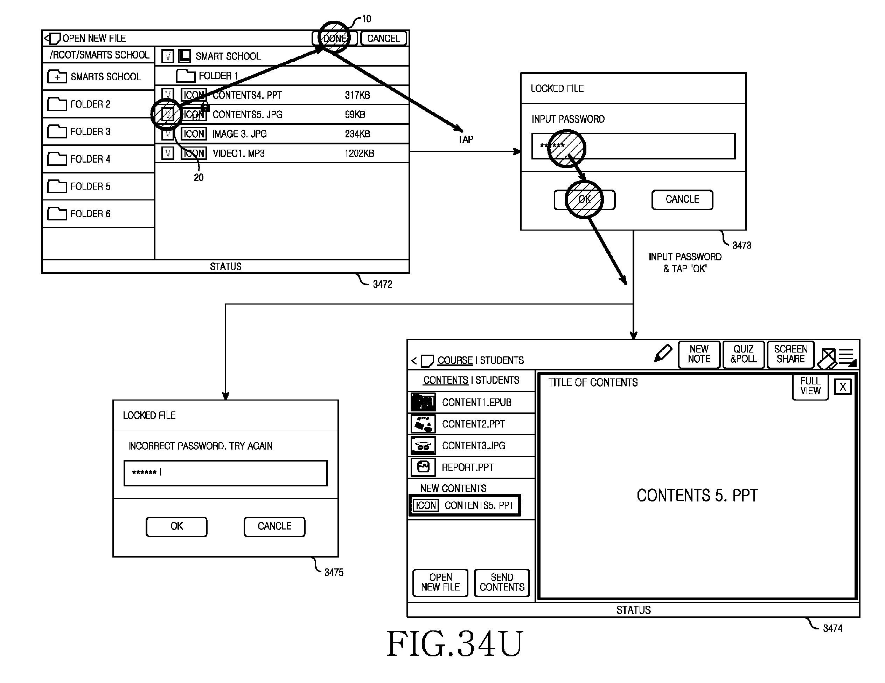

In another exemplary embodiment, FIG. 34U is an example of opening a file by using 'Open new file' 10 when a password is set to a specific file.

Through 'Open new file' (10) of FIG. 34T, as in a screen 3472, a folder list of a local device and files within a specific folder among the folder list may be provided. Here, when a specific file 20 is selected in which a password within a specific folder is set and 'Done' (10) is selected, as in a screen 3473, a window requiring an input of a password for releasing lock setting is provided (3473) and, when a correct password is input and then 'OK' is selected, as in a screen 3474, a selected specific file within a contents list is added and also, the selected specific file may be automatically opened in a contents viewer or display region. On contrary, when an incorrect password is input and then 'OK' is selected, as in a screen 3475, a window again requiring password input may be provided.

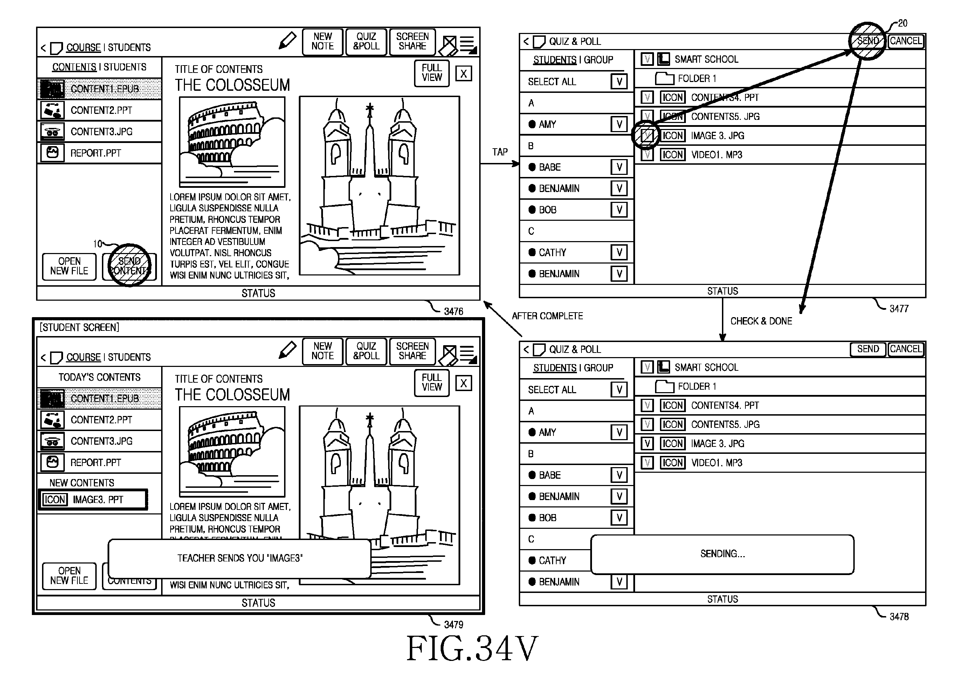

FIG. 34V illustrates a case where Course tab/Contents tab is selected in a course progress mode (3476). Here, when 'Send Contents' (10) is selected as in a screen 3477, a student list for selecting files within a specific folder of a local device and a student to be transmitted may be provided. The student list may be a list made at the time of student registration together with course creation by a teacher device. Here, when some files within a specific folder are selected and a recipient who will receive a file is selected in the student list and a 'Send' button (20) is selected, as in a screen 3478, a message informing that it is in file transmission may be provided. After that, after a predetermined time, as in a screen 3479, a message that a selected file has been completely transmitted to specific students is provided and together with this, a transmitted file may be added within a contents list of 'Students tab/Today's contents of a teacher device.

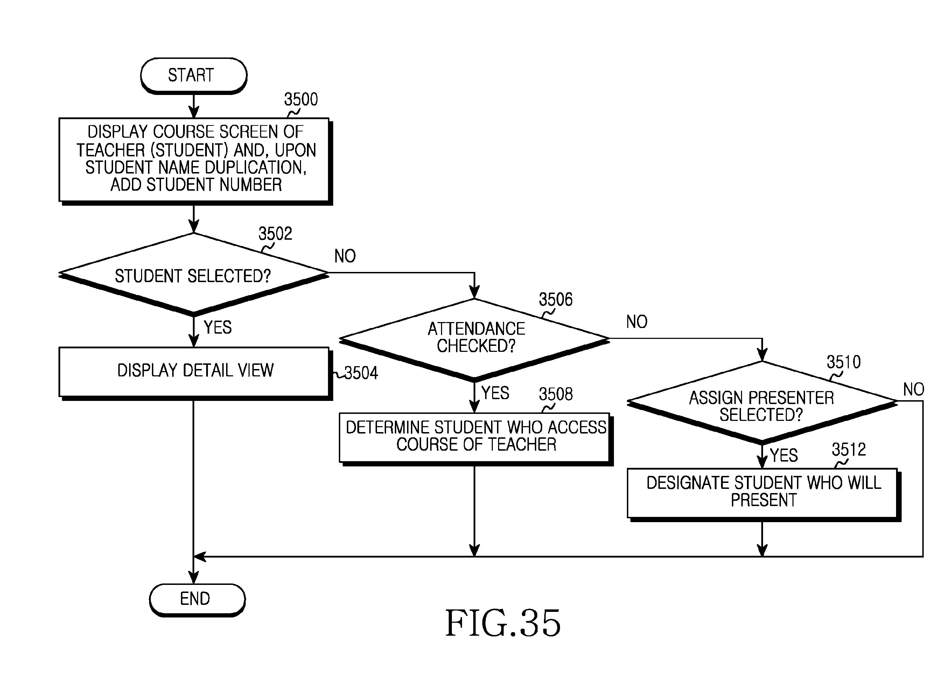

FIG. 35 is a flowchart illustrating an operation for course progress of a teacher according to an exemplary embodiment of the present invention.

Referring to FIG. 33, in step 3500, a teacher device displays a course screen of a teacher and, when a student name is redundant, the teacher device additionally displays a student number.

Upon student selection (step 3502), the teacher device displays a detail view (step 3504). For example, the teacher device displays a selected student name and a textbook screen being now in class at an upper end.

Upon attendance determination selection (step 3506), the teacher device displays the number of students participating in a course of a teacher and the number of students being absent (step 3508).

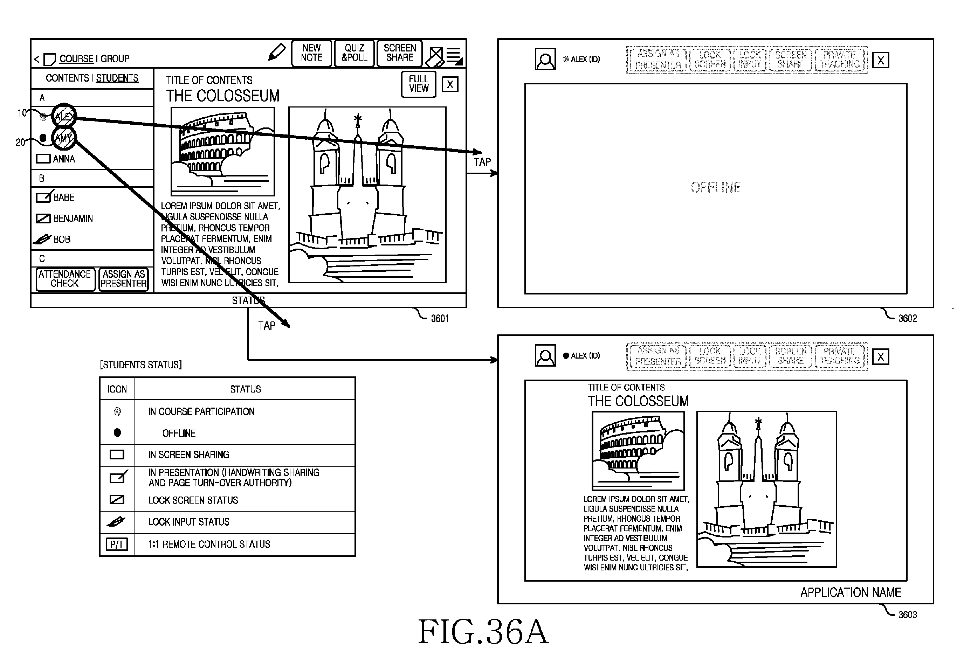

Upon 'assign presenter' selection (step 3510), the teacher device may designate a student who will present for content being now in class (step 3512). A detailed user interface for a course progress of a teacher is made with reference to FIGS. 36A to 36F below.

FIGS. 36A to 36F are diagrams illustrating user interfaces for attendance/absence status determination of students registered to a course in a teacher device, or presenter designation, or a processing scheme for student name redundancy.

For example, FIG. 36A illustrates a case where Course tab/Contents tab is selected in a course progress mode (3601). Here, a student list region and a contents display region may be distinguished at a left side and a right side, respectively. In a student list region, course-participating student list and status determination is possible. The student list is a student list registered to a course when a course is opened by a teacher device. The status may be distinguished into course in-participating, offline, screen in-sharing, handwriting in-sharing, a screen lock status, a lock input status, a 1:1 remote control status, presentation in-requesting and the like.

Here, when a specific student (e.g., Alex) 10 being in an offline status is selected from a student list, as in a screen 3602, only a photograph of a specific student, a status, and a name are displayed, and all functions may be dimmed.

On contrary, when a specific student (e.g., Amy) 20 being in course participation is selected from a student list, as in a screen 3603, detailed information about the specific student may be displayed. For example, a photograph of a specific student, a status, a name, and an identifier (ID) may be displayed. As in a screen 3603, functions of 'Assign as presenter' for giving presentation authority to a selected specific student, 'Lock Screen' for screen lock of a selected specific student, 'Lock input' for input lock of a selected specific student, 'Screen share' for sharing a screen of a selected specific student to all students, and 'Private teaching' for remotely controlling a screen of a selected specific student and the like are supported.

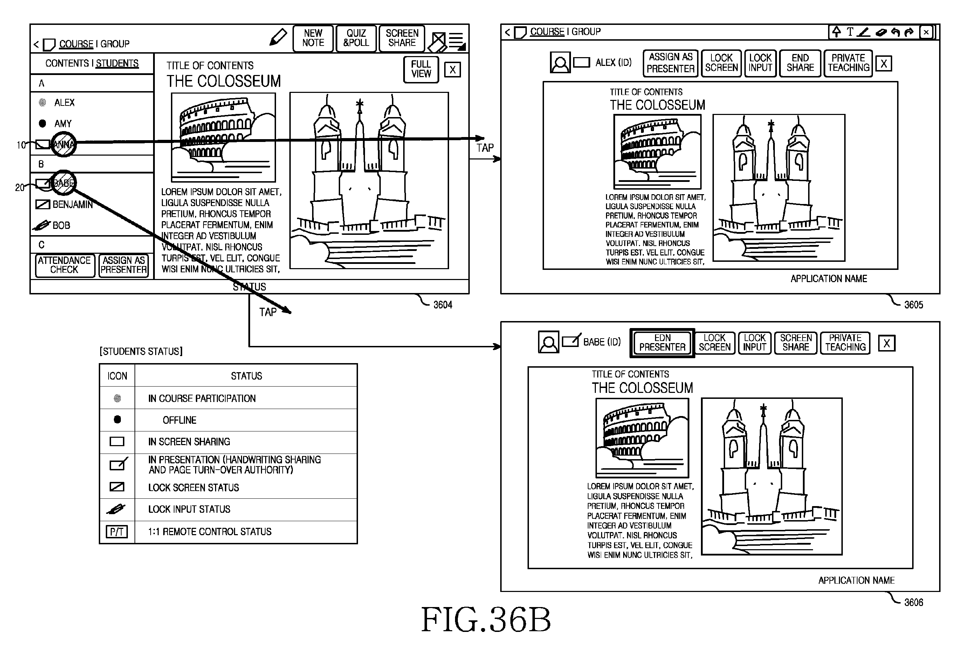

In another exemplary embodiment, FIG. 36B illustrates a case where Course tab/Contents tab is selected in a course progress mode (3604). Here, a student list region and a contents display region may be distinguished at a left side and a right side, respectively. In the student list region, course-participating student list and status determination is possible. The student list is a student list registered to a course when a course is opened by a teacher device. The status may be distinguished into course in-participating, offline, screen in-sharing, handwriting in-sharing, a screen lock status, a lock input status, a 1:1 remote control status, presentation in-requesting and the like.

Here, when a specific student (e.g., Anna) 10 being in a screen sharing status is selected from a student list, as in a screen 3605, only a photograph of a specific student, a status, and a name are displayed. At this time, instead of 'Screen share', it is changed into 'End share'. Besides this, 'Assign as presenter', 'Lock Screen', 'Lock input', 'Private teaching' functions are the same as the screen 3603 of FIG. 36A.

Also, when a specific student (e.g., Babe) (20) that is in handwriting sharing is selected among a student list, as in a screen 3606, detailed information about a specific student may be displayed. At this time, instead of 'Assign as presenter', it is changed into 'End presentation'. Besides this, 'Lock Screen', 'Lock input', 'Screen share', and 'Private teaching' functions are the same as the screen 3603 of FIG. 36A.

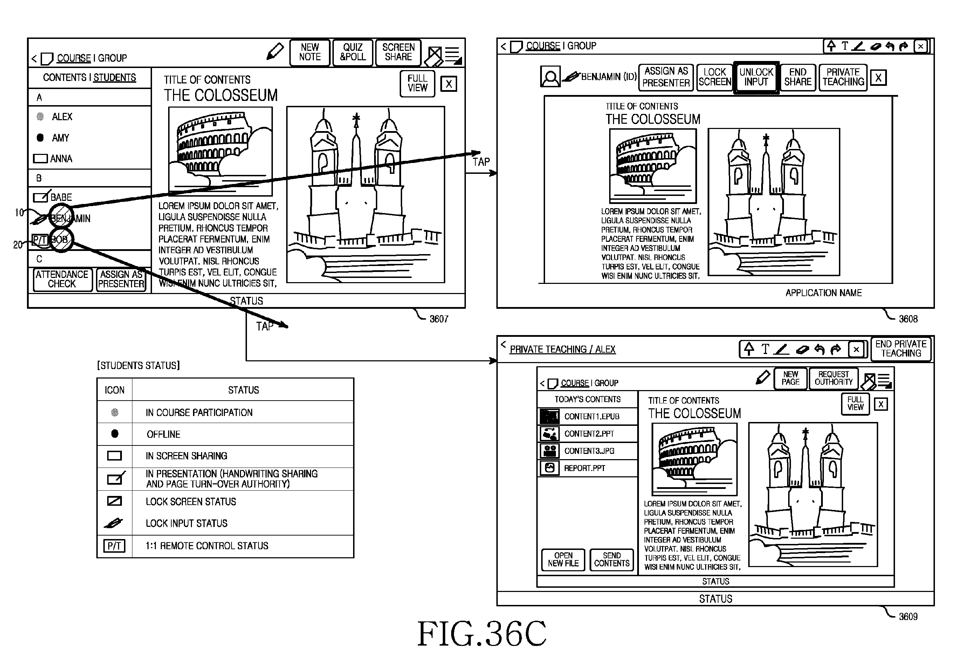

In a further exemplary embodiment, FIG. 36C illustrates a case where Course tab/Contents tab is selected in a course progress mode (3607). Here, a student list region and a contents display region may be distinguished at a left side and a right side, respectively. In the student list region, course-participating student list and status determination is possible. The student list is a student list registered to a course when a course is opened by a teacher device. The status may be distinguished into course in-participating, offline, screen in-sharing, handwriting in-sharing, a screen lock status, a lock input status, a 1:1 remote control status, presentation in-requesting and the like.

Here, when a specific student (e.g., Benjamin) 10 being in a lock input status is selected from a student list, as in a screen 3608, a photograph of a specific student, a status, and a name are displayed. At this time, instead of 'Lock input', it is changed into 'Unlock input'. Besides this, 'Assign as presenter', 'Lock Screen', 'Screen share', 'Private teaching' functions are the same as the screen 3603 of FIG. 36A.

Also, when a specific student (e.g., Bob) (20) that is in a 1:1 remote control status is selected among a student list, as in a screen 3609, a photograph of a specific student, a status, and a name may be displayed. At this time, instead of 'Private teaching', it is changed into 'End private teaching'.

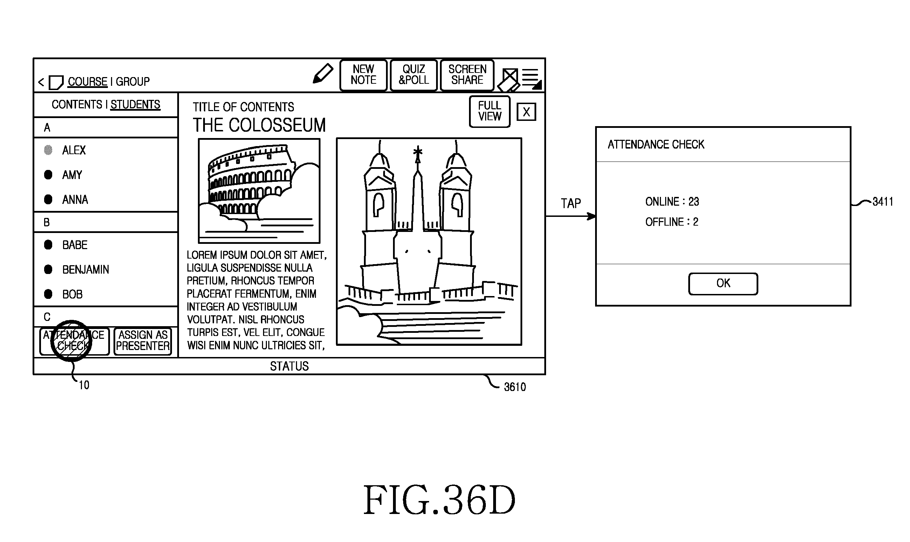

FIG. 36D is a user interface for attendance determination in a teacher device.

For example, FIG. 36D illustrates a case where Course tab/Contents tab is selected in a course progress mode (3610). Here, a student list region and a contents display region may be distinguished at a left side and a right side, respectively. In the student list region, course participating student list and status determination is possible. Here, when 'Attendance check' (10) of the student list region is selected, as in a screen 3611, a message window providing the number of students that are in an online status and the number of students that are in an offline status may be provided. According to another exemplary embodiment, attendance information of course in-participating, screen in-sharing, handwriting in-sharing, a lock screen status, a lock input status, a 1:1 remote control status, presentation in-requesting student status and the like may be more subdivided and given. For reference, because attendance determination detects and automatically executes a 'Sign in' status by course of a student in an LMS, it may be provided as a function of simple present condition detection in an IMS.

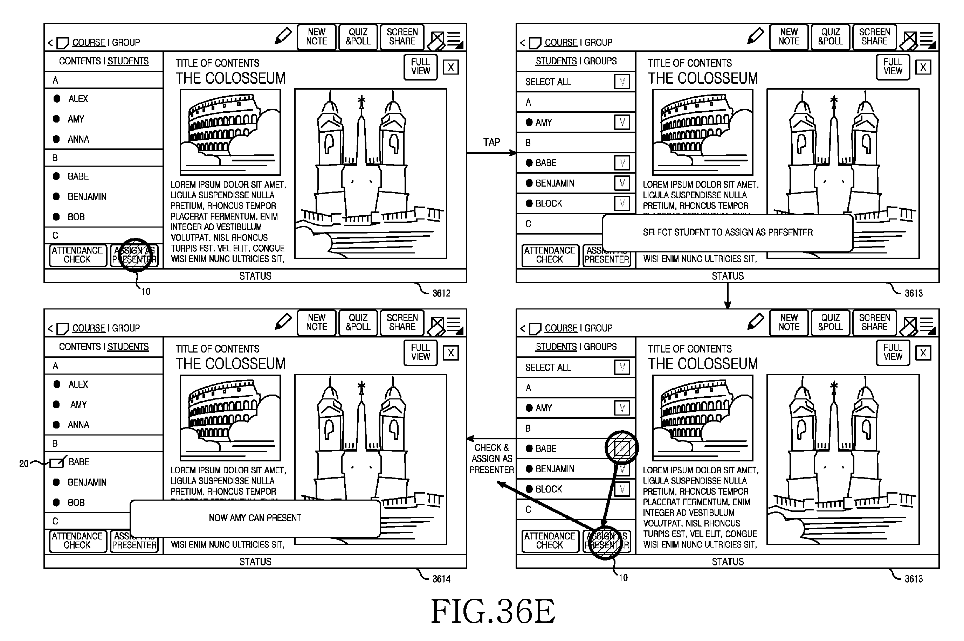

FIG. 36E is a user interface for presenter designation in a teacher device.

For example, FIG. 36E illustrates a case where 'Course tab/Students tab' is selected in a course progress mode (3612). Here, a student list region and a contents display region may be distinguished at a left side and a right side, respectively. In the student list region, course participating student list and status determination is possible. Here, when 'Assign as presenter' (10) of the student list region is selected, as in a screen 3613, it is changed into a mode (e.g., a check box) capable of selecting a presentation student from students being in the student list region and then, in a selection mode, a specific student (e.g., Babe) is selected and, when 'Assign as presenter' is again selected (3614), as in a screen 3615, a status of a specific status (e.g., Babe) may be changed into a status (20) being in handwriting sharing. That is, handwriting content of a specific student may be shared with not only a teacher device but also other student devices during presentation in a device of the specific student.

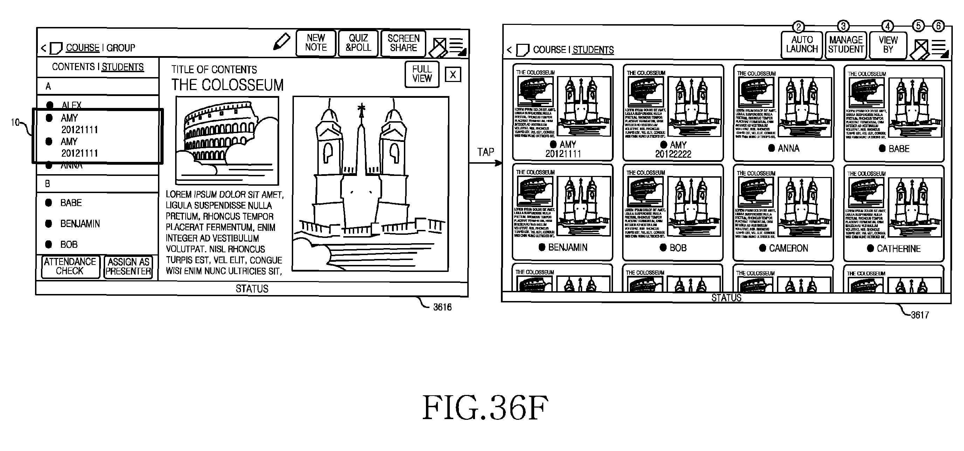

FIG. 36F is a user interface for processing a case where a student name is redundant among a student list in a teacher device.

For example, FIG. 36E illustrates a case where 'Course tab/Students tab' is selected in a course progress mode (3616). Here, a student list region and a contents display region may be distinguished at a left side and a right side, respectively. In the student list region, course participating student list and status determination is possible. At this time, when there are students having the same name in a student list, that is, when there are several students having the same name in a class, a student number or a student ID may be more displayed at a lower end of a student name (10).

Similarly, in another exemplary embodiment, as in a screen 3617, when 'Students' (tab) is selected in a title region, student information may be provided in a thumbnail form and, when there are several students having the same name in a class, a student number or a student ID may be more displayed at a lower end of a student name (20).

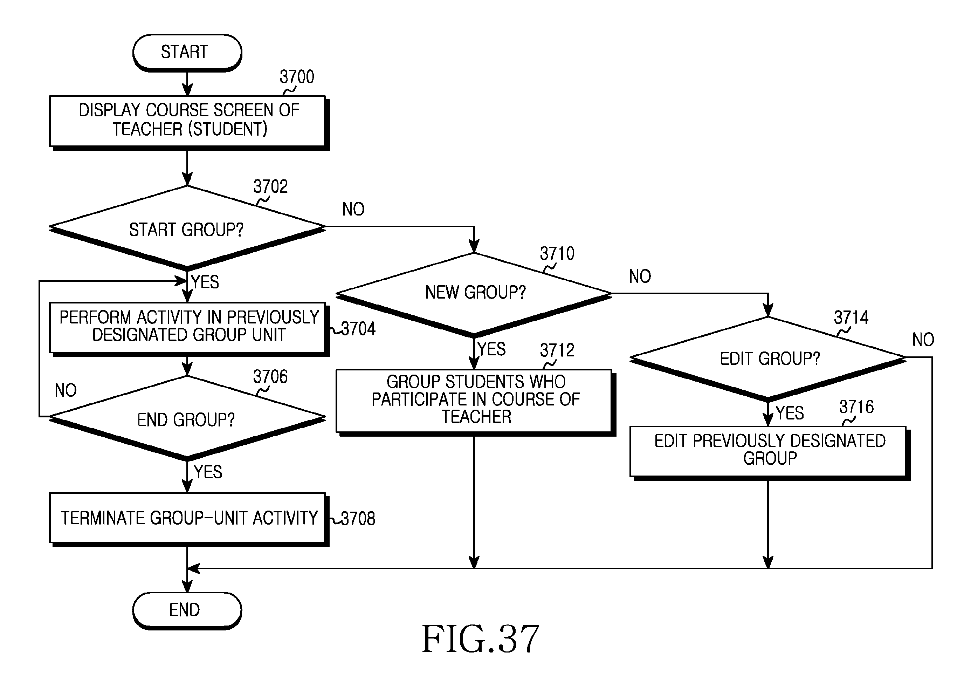

FIG. 37 is a flowchart illustrating an operation for group management of a teacher according to an exemplary embodiment of the present invention.

Referring to FIG. 37, in step 3700, a teacher device displays a teacher course screen and, upon group start (step 3700), the teacher device acts in a predefined group unit (step 3702). If a group is ended (step 3704), the teacher device terminates group unit activity (step 3708).

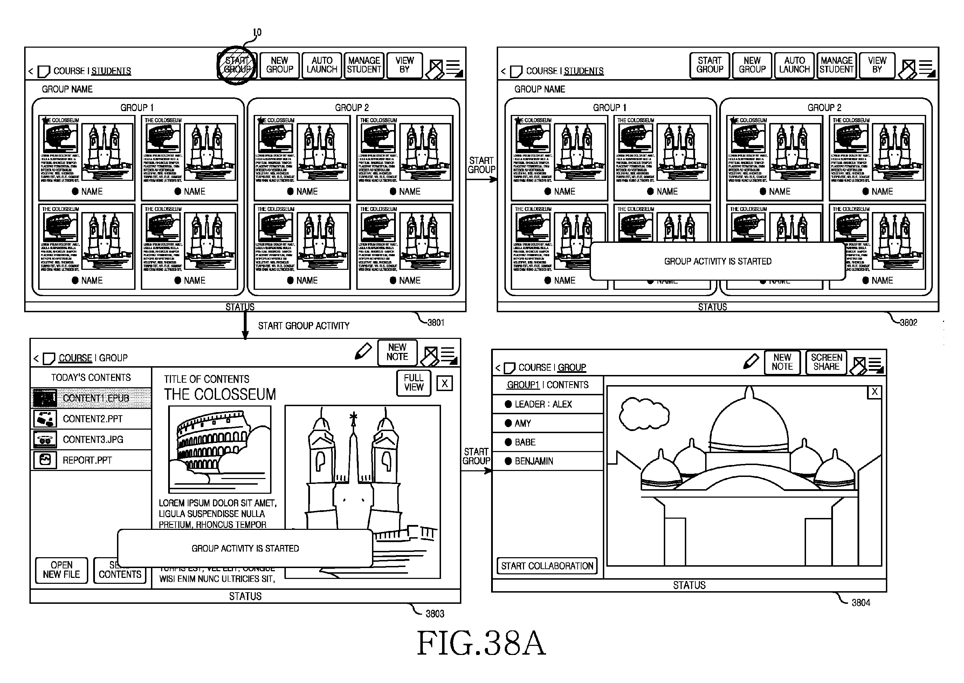

Meanwhile, upon 'New group' selection (step 3710), the teacher device designates students participating in a course of a teacher as a group (step 3712). Upon group edition selection (step 3714), the teacher device edits a previously designated group (step 3716). A detailed user interface for group management is described with reference to FIGS. 38A to 38F below.

FIGS. 38A to 38M are diagrams illustrating user interfaces for group management according to an exemplary embodiment of the present invention.

FIG. 38A illustrates a user interface for group activity start.

For example, a screen 3801 of FIG. 38A is a screen when 'Students tab/Group view' tab is selected in a course progress mode. Here, students may be designated and given by group. Group designation and group leader designation of a group may be implemented in a teacher device. According to an exemplary embodiment, a group may be determined through group selection of students.

Here, when 'start group' (10) is selected in a teacher device, as in a screen 3802, a message of informing that group activity has started may be provided.

Meanwhile, upon group activity start, even in a student device, a message of informing that group activity has started may be provided as in a screen 3803. After that, as in a screen 3805, after a predetermined time, student devices may connect with a group leader device of each group. In other words, upon group activity start, students device bundled to a teacher device at 1:N are bundled to a group leader device of each group at 1:m.

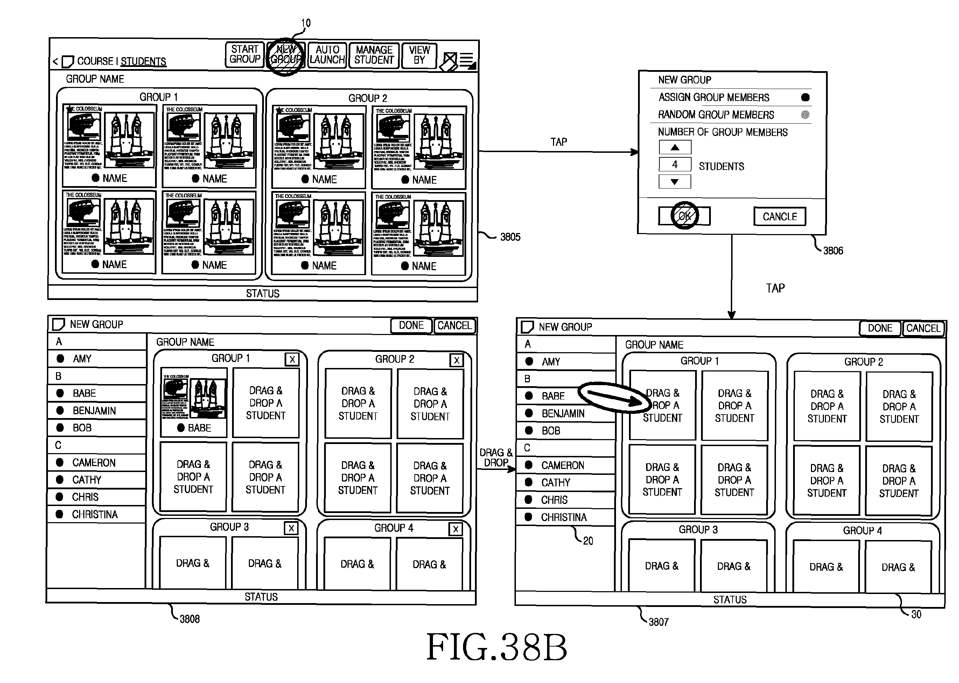

FIGS. 38B to 38C are user interfaces designating a new group during a course progress mode.

For example, a screen 3805 of FIG. 38B is a screen when 'Students tab/Group view tab' is selected in a course progress mode. Here, students may be designated and given by group. Here, when 'New group' (10) is selected to designate a new group, as in a screen 3806, a window inquiring how many students will be included by group is provided. If four students are set by group, '4' is selected and, if 'OK' is selected, a plurality of groups may be divided and displayed (3807). At this time, a student list registered to a corresponding course is displayed in a left region 20, and a plurality of blank group boxes (Group 1 to Group N) may be displayed in a right region 30.

Here, as in a screen 3808, students may be moved in a corresponding group box through a user gesture such as drag and drop. For example, if a student 'Babe' being in a student list is dragged and dropped in a group box of Group 1, the student 'Babe' may be included in Group 1.

Similarly, each student being in a student list is dragged and dropped in a corresponding group box to group a plurality of members.

If all students being in a student list are dragged and dropped to a corresponding group, they may not be displayed in a student list of a left region (3809). At this time, upon group creation, the first student among group members may be automatically designated as a group leader. According to implementation, a teacher may directly designate a color of a star shape indicating that it is a group leader and designate a group leader.

On contrary, if a student being in a group is dragged and dropped to a student list region, the student may be canceled from group registration (3809). For example, if 'Student 1' (Amy) of Group 1 is dragged and dropped to the student list region, 'Student 1' may be canceled from group registration in Group 1. At this time, 'Student 1' (Amy) canceled from registration may be displayed in a student list (3810). At this time, upon 'Done' (40) selection, a change item is reflected and it may move to 'students tab' (3811). Also, when a group leader is registration canceled from a group, other student of lower priority may be automatically changed into a group leader or newly designated by a teacher.

In the above, each student included in a student list is dragged and dropped to designate a group but, in another exemplary embodiment, a group may be designated randomly.

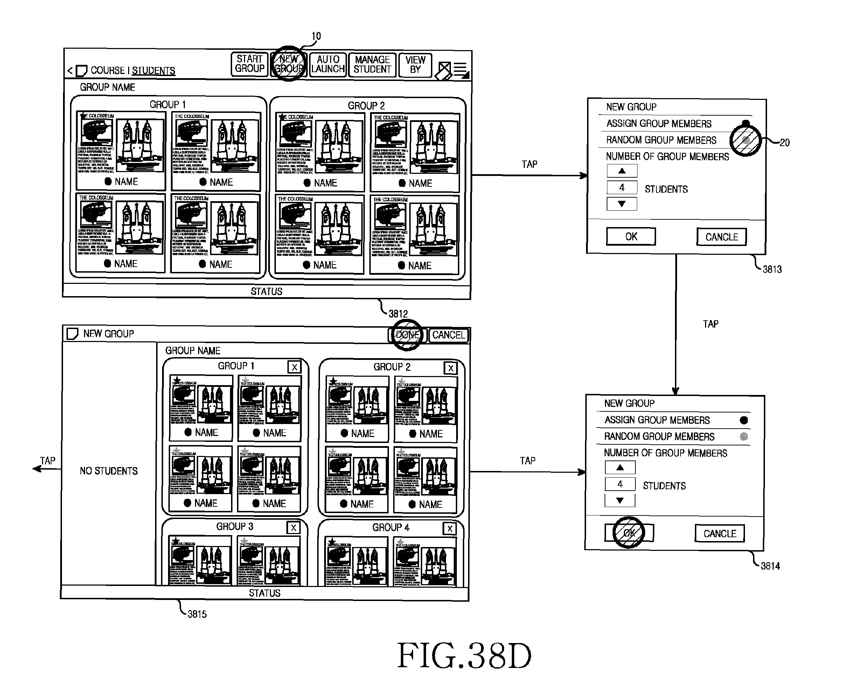

FIGS. 38D to 38E illustrate user interfaces designating a group randomly.

For example, a screen 3812 of FIG. 38D is a screen when 'Students tab/Group view tab' is selected in a course progress mode. Here, students may be designated and given by group. Here, to designate a new group, when 'New group' 10 is selected, as in a screen 3813, a window inquiring how many students are included by group is displayed. Here, after 'Random group member' 20 is selected, four students may be designated by group and 'OK' may be selected (3814). After that, four students being in a student list may be randomly selected by group and a plurality of groups constituting four students may be created and displayed (3815). At this time, upon group creation, the first student among group members may be automatically designated as a group leader. In another exemplary embodiment, a teacher may directly designate a color of a star shape indicating that it is a group leader and designate a group leader. After that, if 'Done' is selected, it may proceed to 'Students tab' of a corresponding course (3816).

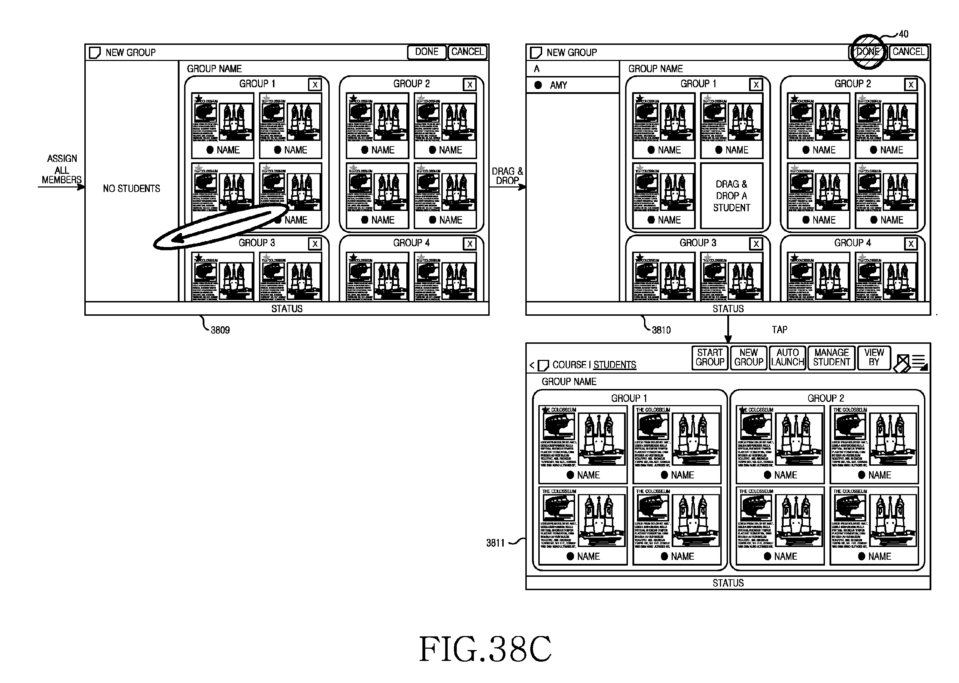

Meanwhile, after group creation, group edition is possible until before 'Done' is selected (e.g., the screen 3809 of FIG. 38C or the screen 3815 of FIG. 38D).

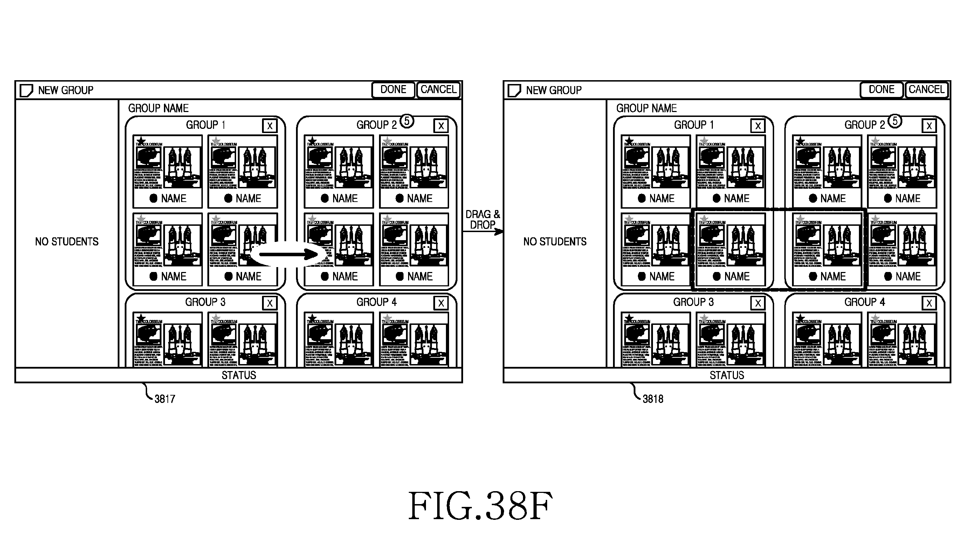

For example, FIG. 38F illustrates a user interface for group edition. As in a screen 3817, after group designation, group edition may start through drag and drop between groups 10. For example, after a student Amy of Group 1 is selected, when the student Amy of Group 1 is dragged and dropped to a student Babe of Group 2, as in a screen 3818, the student Amy of Group 1 and the student Babe of Group 2 may be exchanged and changed in position. That is, Amy of Group 1 is changed into Group 2 and the student Babe of Group 2 may be changed into Group 1.

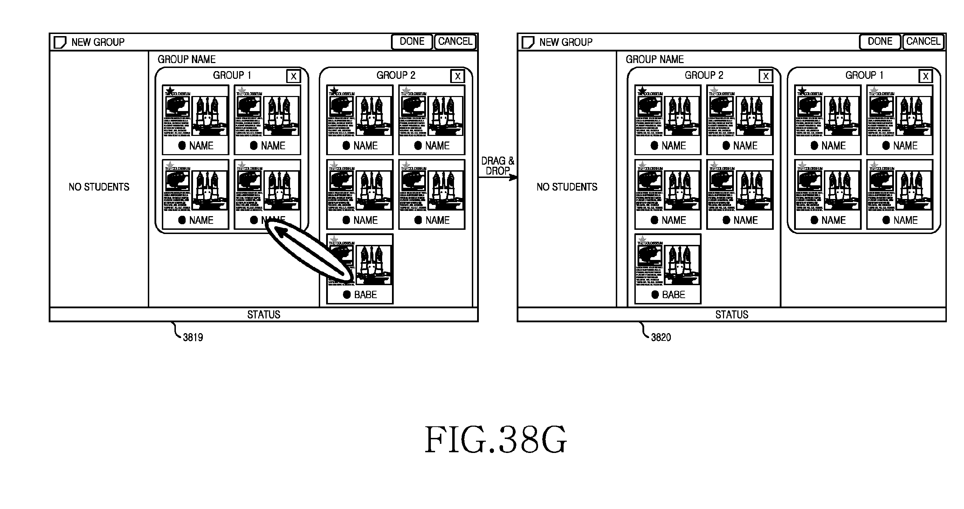

FIGS. 38G to 38I are user interfaces for exception processing when the number of group students becomes identical at the time of group creation.

For example, as in a screen 3819 of FIG. 38G, when 26 students are designated as a group, assume that Group 1 to Group 4 are designated by four students, and Group 5 to Group 6 are designated by five students. At this time, when a specific student (e.g., Babe) is dragged and dropped from Group 5 to Group 1, as in a screen 3820, two members are not exchanged but a specific student (e.g., Babe) of Group 5 may be moved to Group 1. That is, a specific student (e.g., Babe) of Group 5 may be added to Group 1.

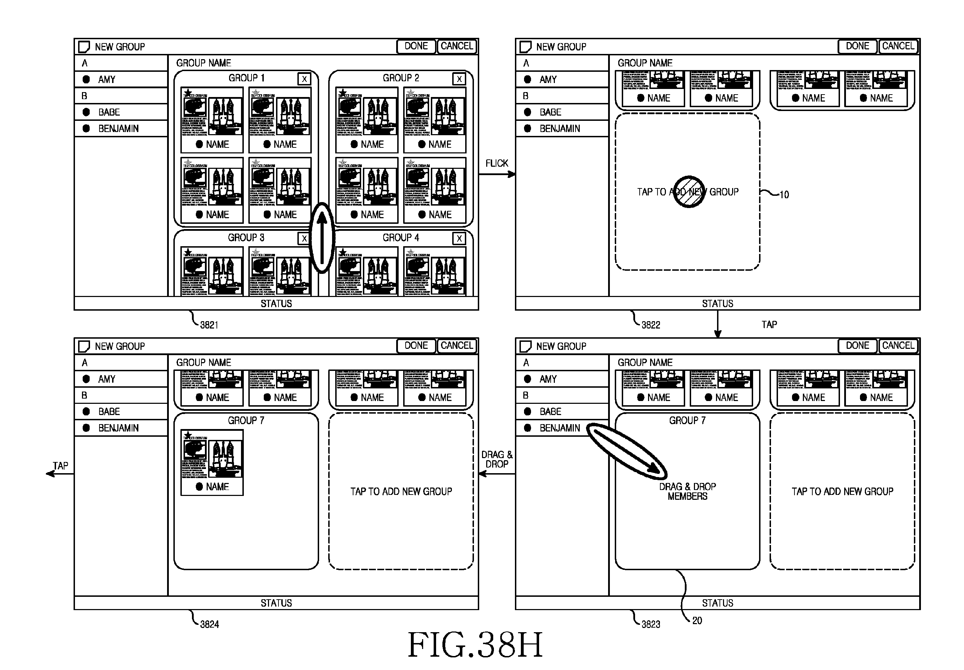

In another exemplary embodiment, when it moves to the last group through a scroll operation or flick operation as in a screen 3821 of FIG. 38H, as in a screen 3822, 'group box (10) for new group addition' is displayed after the last group and, when 'group box (10) for new group addition' is selected, a new group box 20 may be created (3823). At this time, students being in a student list may be dragged and dropped to a new group box 20 to designate a group.

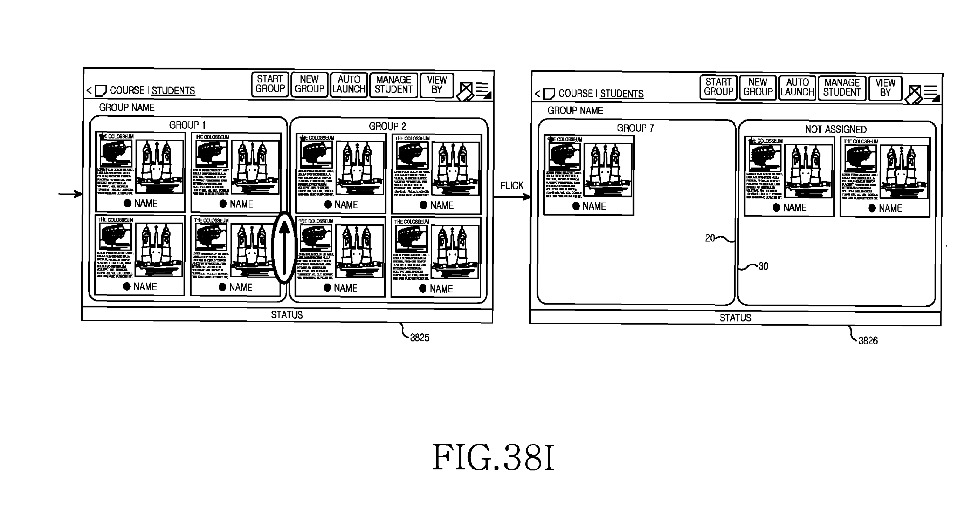

For example, when four students are included by group and six groups are designated, and the remnant students are three, a user adds a new group 'Group 7' and then, drags and drops one student (Benjamin) among the remnant three students to include in Group 7 (3824). After that, if 'Done' is selected, as in a screen 3825 of FIG. 38I, it may proceed to 'Students tab'. At this time, as in a screen 3826, students not designated as a group may be displayed as 'Not assigned' 30.

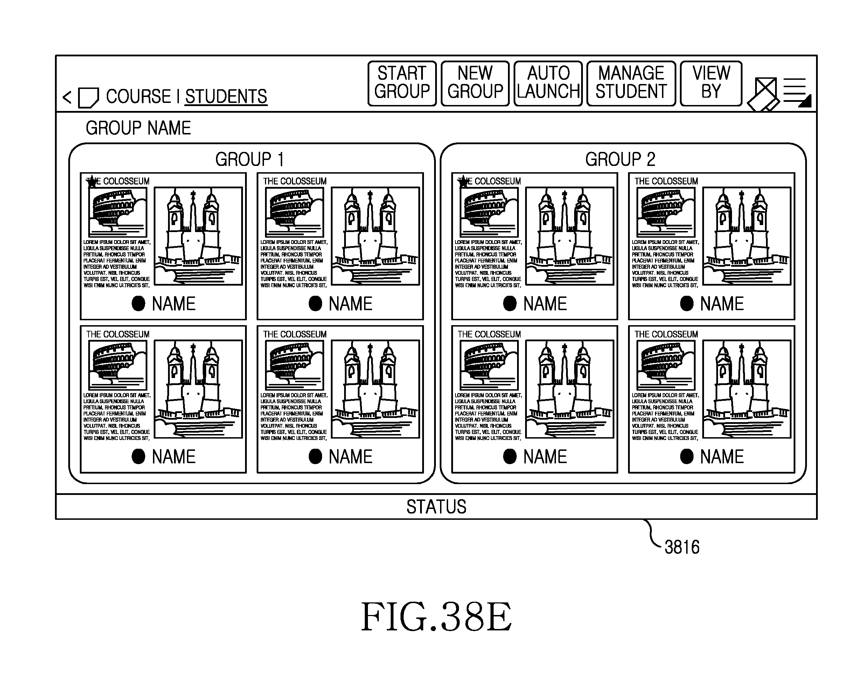

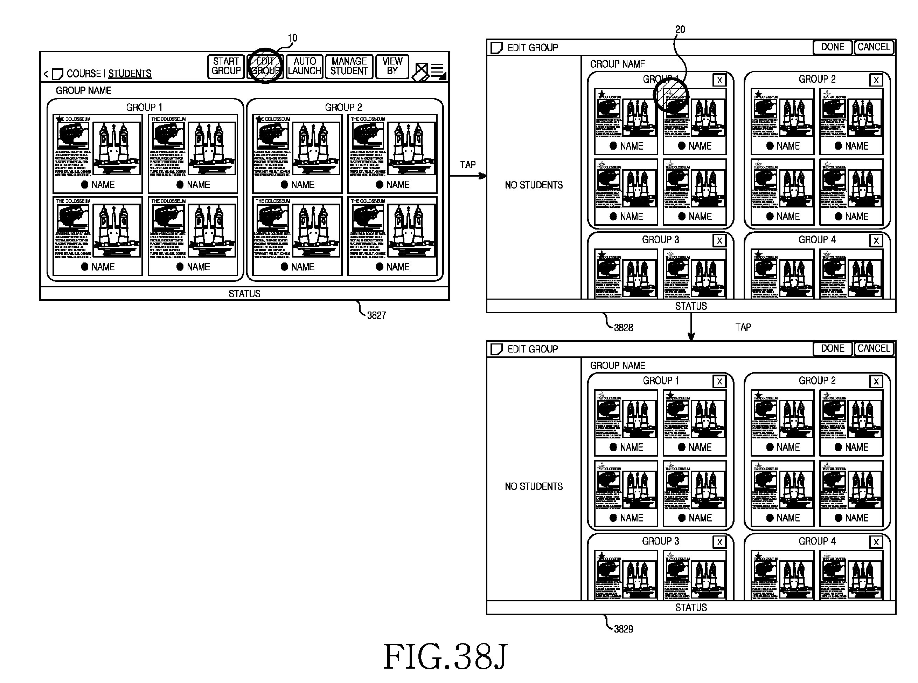

Meanwhile, after group creation, after 'Done' is selected (e.g., the screen 3811 of FIG. 38C or the screen 3816 of FIG. 38E), an 'Edit group' button 10 for group edition may be activated as in a screen 3827 of FIG. 38J.

Here, when 'Edit group' button 10 is selected, as in a screen 3828, it may proceed to a group edition mode (e.g., group leader change, group deletion, student exchange/movement between groups and the like). For example, in the group edition mode, to change a group leader of a group, a corresponding group leader indicator may be selected and changed. That is, in a screen 3828, when 'student 1' is a current group leader in Group 1, when it intends to change 'student 2' as a group leader, an indicator 20 of a star shape form corresponding to 'student 2' of Group 1 is selected. At this time, as in a screen 3829, a start shape color of 'student 2' may change from grey to yellow, and a start shape color of 'student 1' may change into a grey. Grey represents that it is a group member, and yellow represents that it is a group leader, and the indicator colors of the remnant group members excepting the group leader are the same as each other.

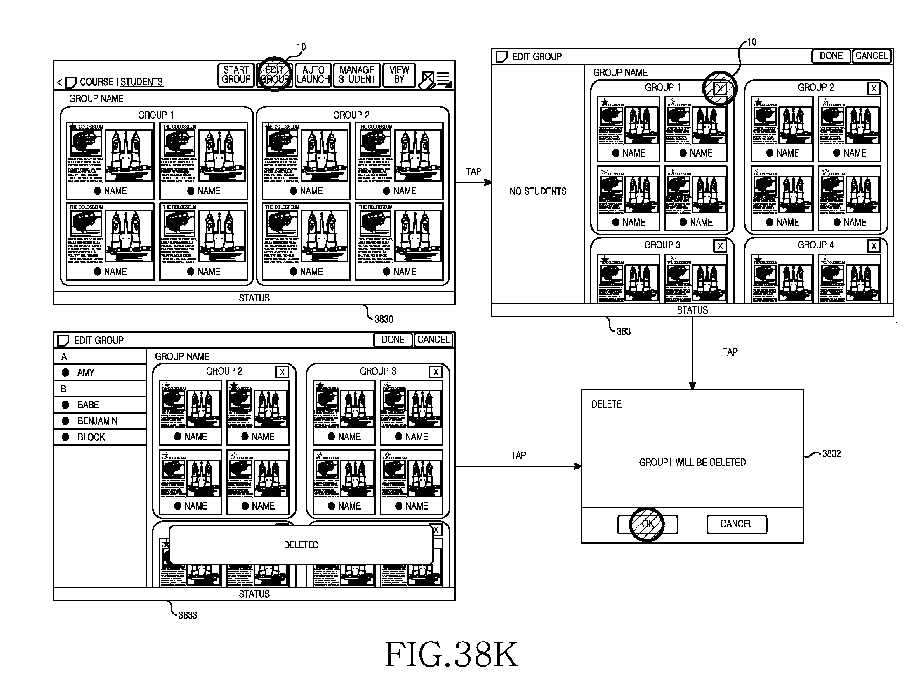

In another exemplary embodiment, when an 'Edit group' button 10 is selected for group deletion as in a screen 3830 of FIG. 38K, it may proceed to a group edition mode (e.g., group leader change, group deletion, student exchange/movement between groups and the like) as in a screen 3831. Here, when deleting a corresponding group, a deletion button 20 of a corresponding group is selected. Upon deletion button 20 selection, a window inquiring whether to delete a group is provided as in a screen 3832. Here, upon 'OK' selection, as in a screen 3833, a window inquiring that a group deletion procedure is in progress is provided.

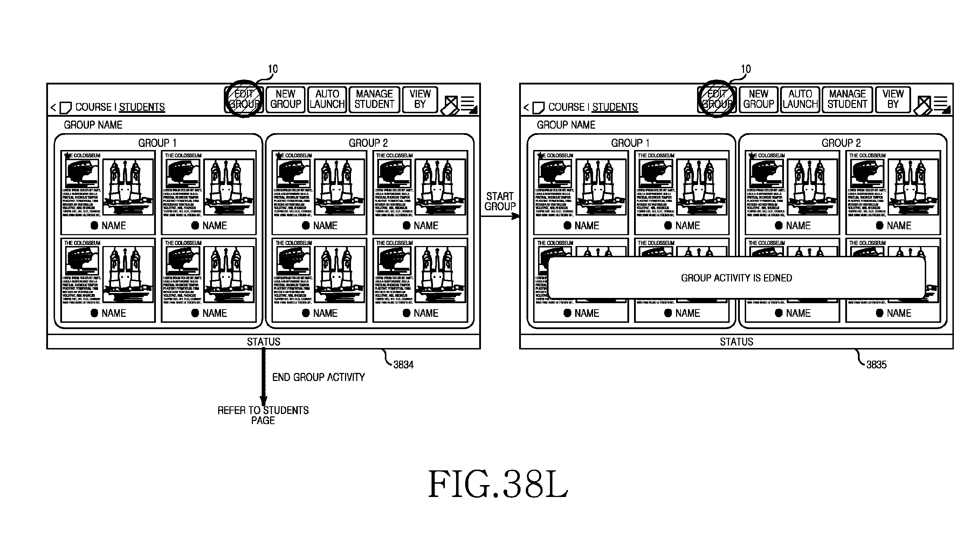

Meanwhile, when 'Start group' is selected in a teacher device for group activity start, 'Start group' is toggled to 'End group' 10 as in a screen 3834 of FIG. 38L. Here, when 'End group' 10 is selected, as in a screen 3835, a message informing that group activity has been ended may be provided. At this time, upon group activity ending, student devices bundled to each group leader device at 1:m are bundled to a teacher device at 1:N.

Meanwhile, when a teacher device attempts group creation/correction and the like during group activity of students, the teacher device may stop group activity and create/correct a group to again initiate group activity.

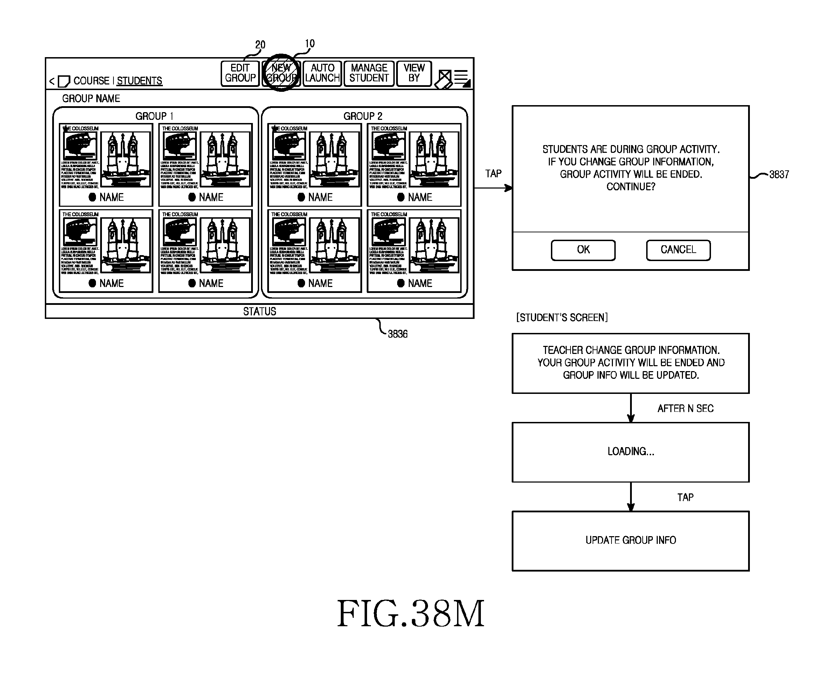

FIG. 38M illustrates a user interface for processing when a teacher device attempts to create/correct a group during group activity of students.

For example, as in a screen 3826, when 'New group' 10 is selected during a group activity (in a state where 'Start group' is toggled to 'End group') and group creation/correction and the like are attempted, as in a screen 3837, a message inquiring whether to stop group activity or whether to continuously proceed with group activity may be provided. Here, upon 'OK' selection, group activity is stopped and group creation or group correction may start. This is the same as selecting 'End group activity' 20 and then selecting a 'New group' 10 button. Meanwhile, when it stops during a group activity progress, a current status or data may be automatically stored in student devices. When group information is corrected after group activity is ended by a teacher device, a message informing that group information has been corrected by the teacher device may be provided to a student device. Or, a message informing that group information is being corrected by the teacher device may be provided in real-time. Also, after a predetermined time, in the student device, 'Group tab' is closed, and a message of informing that group information corrected by the teacher device is being loaded may be more provided. After that, a student list of 'Group tab' of student devices may be reconfigured as corrected group information.

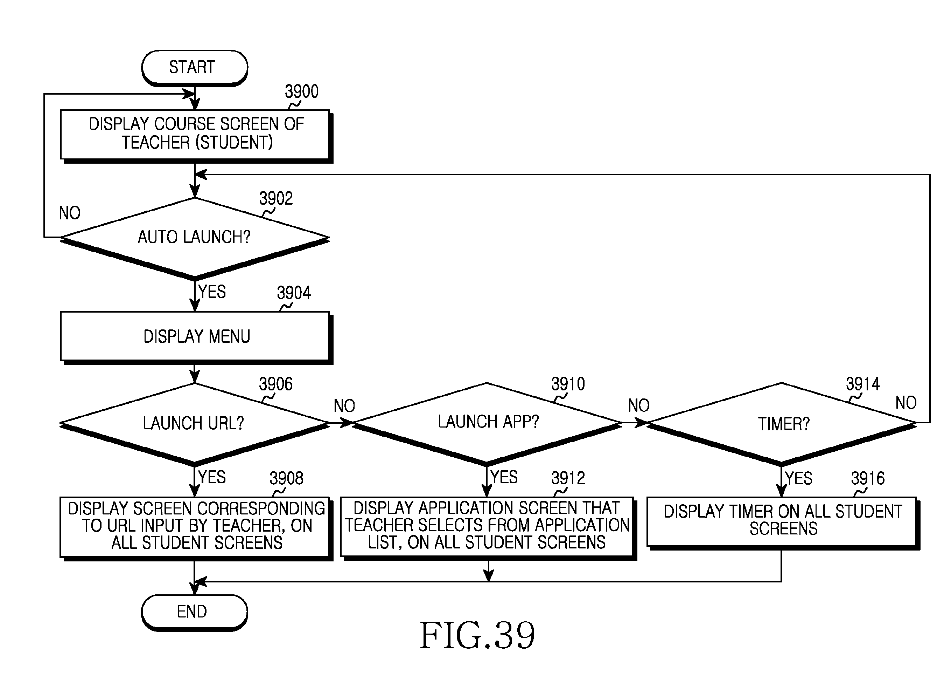

FIG. 39 is a flowchart illustrating an operation for course management of a teacher according to an exemplary embodiment of the present invention.

Referring to FIG. 39, a teacher device displays a course screen of a teacher (step 3900). That is, the teacher device performs a course progress mode.

Upon 'auto launch' (step 3902), the teacher device performs menu display (step 3904).

Upon 'launch URL' selection in a menu display (step 3906), an Internet screen corresponding to a URL input by the teacher device may be displayed on device screens of all or some students (step 3908). That is, if the teacher device provides a corresponding Internet address to all or some student devices, each student device may execute a corresponding web browser and attempt access to a web page address provided from the teacher device.

Upon 'launch APP' in a menu display (step 3910), an application execution screen selected by the teacher device may be displayed on all or some student screens (step 3912). That is, if the teacher device provides corresponding application information to all or some student devices, each student device may execute an application based on application information.

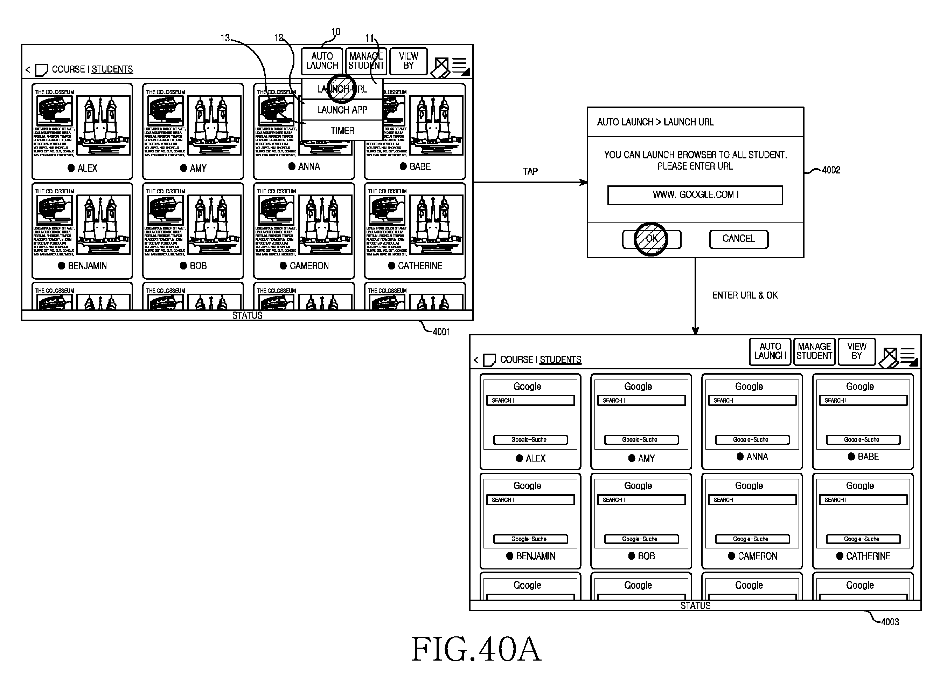

Upon 'timer' in a menu display (step 3914), a timer may be displayed on all or some student device screens (step 3916). That is, the teacher device may set a timer time and drive a timer set to all or some student devices. A detailed user interface for course management is made with reference to FIGS. 40A to 40F below.

FIGS. 40A to 40F are diagrams illustrating user interfaces for course management according to an exemplary embodiment of the present invention.

FIG. 40A is a user interface for accessing student devices to a corresponding URL.

For example, FIG. 40A illustrates a case where 'Students tab/Thumbnail view' is selected in a course progress mode (4001). Here, when 'Launch URL' (11) is selected among 'Auto launch' (10) menus, as in a screen 4002, a URL input window may be provided. Upon 'OK' selection after corresponding URL information input, as in a screen 4003, a status in which all students have accessed a corresponding URL may be shown in a thumbnail form in a teacher device. At this time, corresponding URL information input in the teacher device is forwarded to all students or a screen of the teacher device is shared and thus a screen of the teacher device may be provided to a student device.

Meanwhile, after the student device receives corresponding URL information input in the teacher device, the student device may execute a web browser and attempt corresponding URL access. Or, the student device may receive provision of the shared screen of the teacher device.

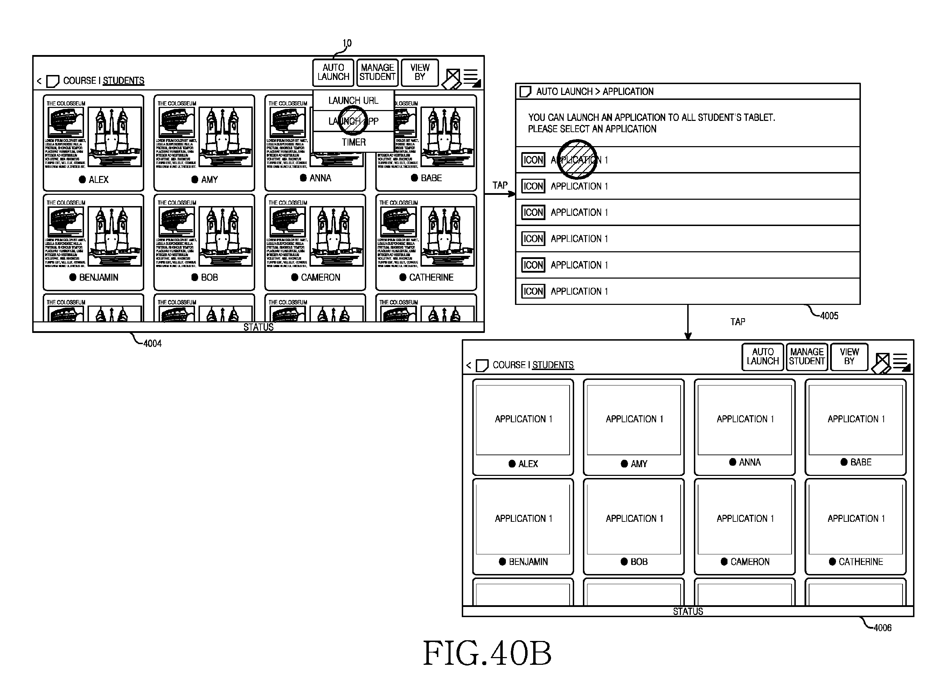

In another exemplary embodiment, FIG. 40B is a user interface for executing a corresponding application for student devices (4004). Here, when 'Launch app' (12) may be selected among 'Auto launch' (10) menus, as in a screen 4005, an application list may be provided. When at least one application is selected among the application list, as in a screen 4006, the selected at least one application may be executed in all students and may be shown in a thumbnail form in a teacher device. At this time, the application information selected in the teacher device is forwarded to all students or a screen of the teacher device is shared and thus an application execution screen of the teacher device may be provided to the student device.

Meanwhile, after the student device receives application information provided from the teacher device, it may execute an application. Or, the student device may receive provision of the shared application execution screen of the teacher device.

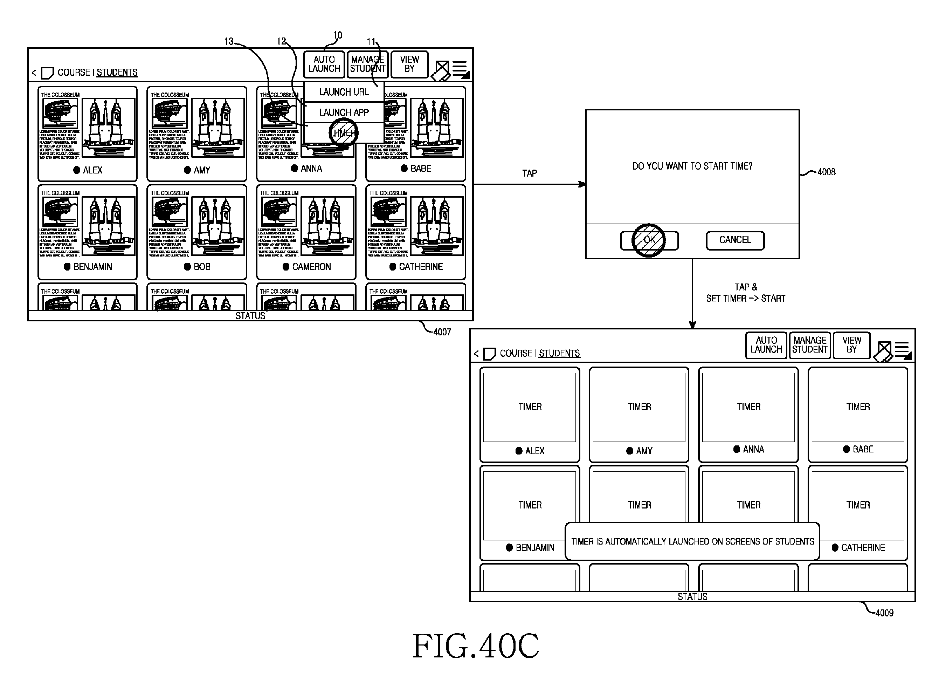

In another exemplary embodiment, FIGS. 40C to 41F are user interfaces for executing a corresponding application for student devices.

For example, FIG. 40C illustrates a case where 'Students tab/Thumbnail view' is selected in a course progress mode (4007). Here, when 'Timer' 13 is selected among 'Auto launch' (10) menus, as in a screen 4008, a message inquiring whether to start a timer may be provided. Here, when 'OK' is selected, as in a screen 4009, the timer starts identically in all students and may be shown in a thumbnail form in the teacher device.

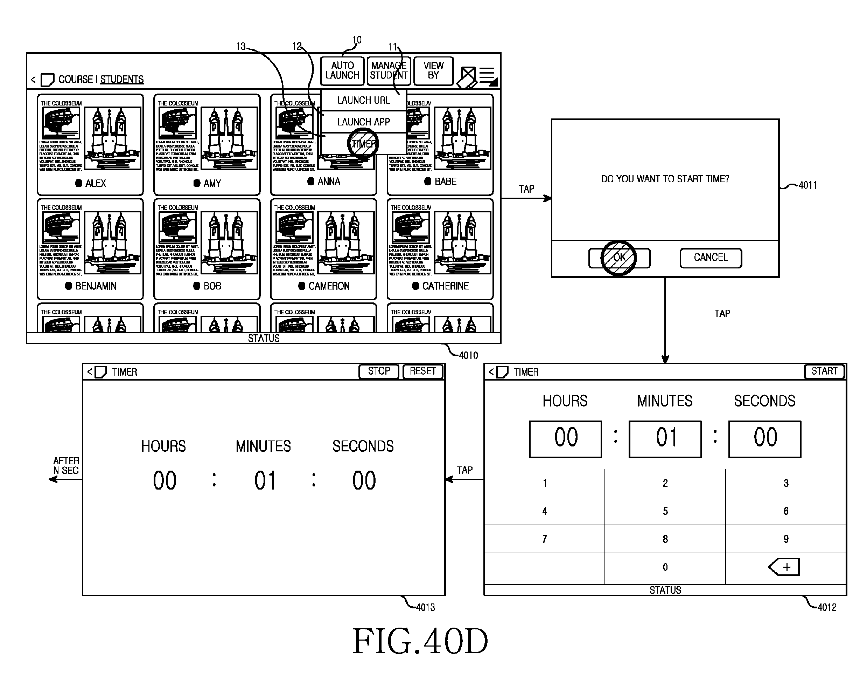

In another exemplary embodiment, FIG. 40D illustrates a case where 'Students tab/Thumbnail view' is selected in a course progress mode (4010). Here, when 'Timer' 13 is selected among 'Auto launch' (10) menus, as in a screen 4011, a message inquiring whether to start a timer may be provided. Here, when 'OK' is selected, as in a screen 4012, a screen capable of setting a timer time may be provided. After a timer time is set, upon 'start' selection, as in a screen 4013, the timer may start. At this time, a button (Stop) stopping the timer and a button (Reset) resetting the timer may be provided.

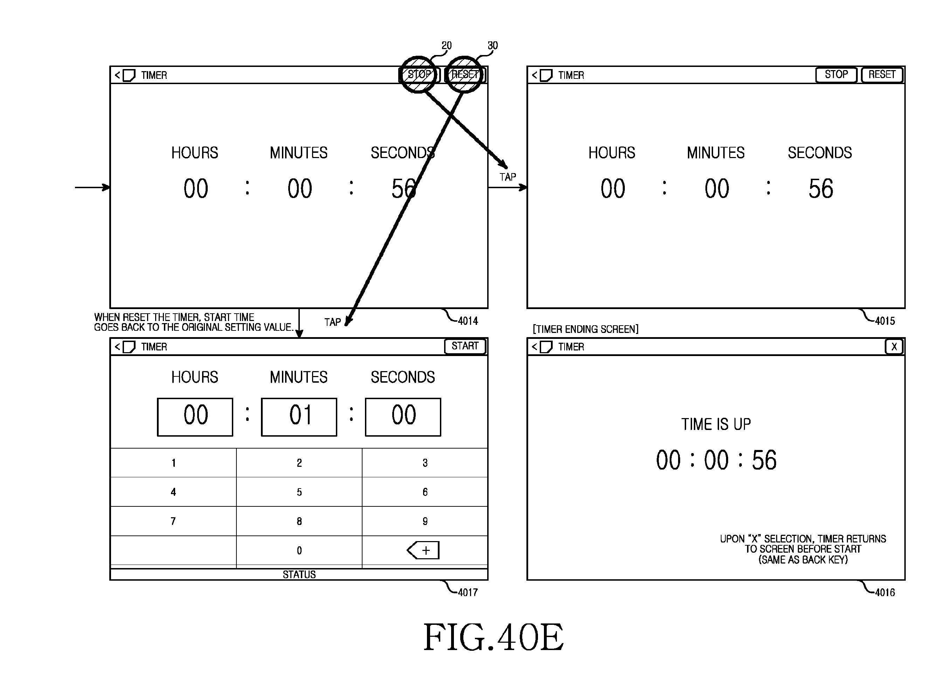

Here, as in a screen 4014 of FIG. 40E, when the 'Stop' button 20 is selected during the timer driving, the timer stops (4015) and, after a predetermined time, a message informing that the timer has ended may be provided (4016). For example, the timer ends before 56 seconds and then, if 56 seconds lapse, a timer end message may be displayed.

On the contrary, when the 'Reset' button 30 is selected in the screen 4014, as in a screen 4017, it may return to a timer time setting mode.

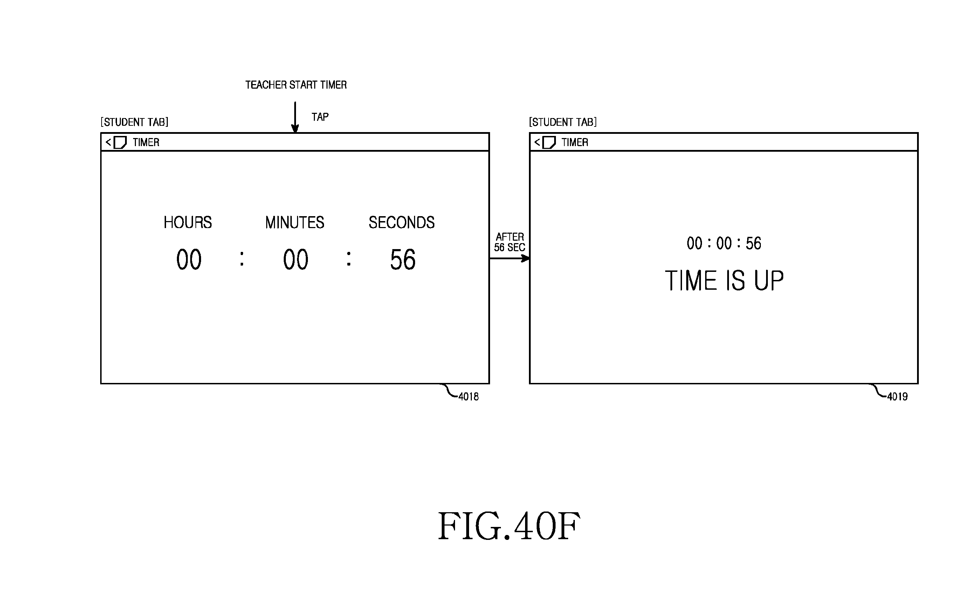

Meanwhile, when the timer starts by the teacher device, as in FIG. 40F, even each student device is synchronized with a timer of a teacher device and thus a timer may be driven.

For example, as in a screen 4018 of FIG. 40F, the student device is synchronized with the timer of the teacher device and the timer starts and, if the timer ends after a predetermined time, as in a screen 4019, a timer end message may be provided.

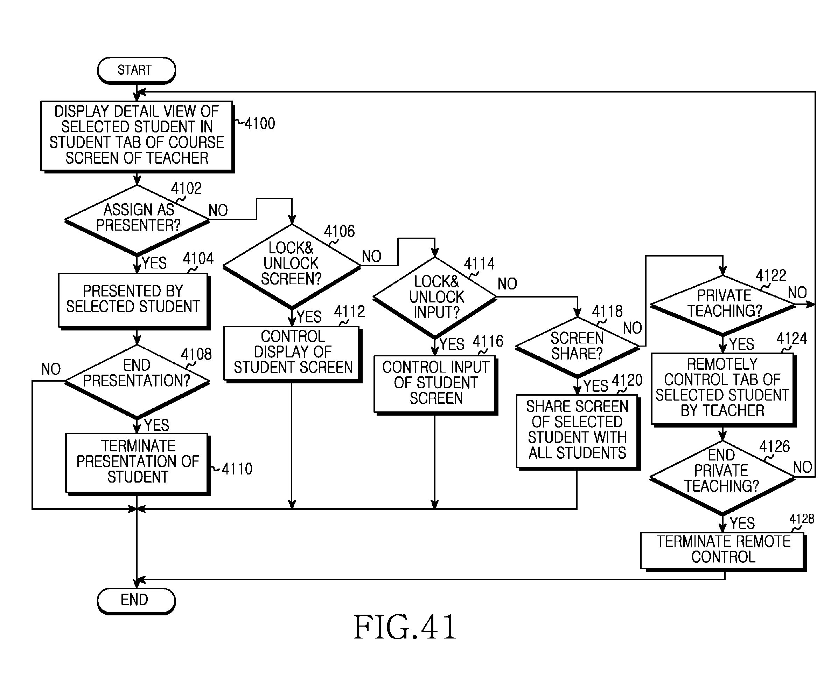

FIG. 41 is a flowchart illustrating an operation of student screen control of a teacher according to an exemplary embodiment of the present invention.

Referring to FIG. 41, in a course progress mode of a teacher device, a detail view of a selected specific student is displayed in 'Students tab/Thumbnail view' (step 4100).

Upon 'assign as presenter' selection in the detail view (step 4102), a selected student performs presentation (step 4104). Upon presentation ending (step 4108), student's presentation is ended (step 4110).

Upon 'lock&unlock screen' selection in the detail view (step 4106), a student screen display is controlled (step 4112).

Upon 'lock&unlock input' selection in the detail view (step 4114), a student screen input is controlled (step 4116).

Upon 'screen share' selection in the detail view (step 4118), a screen of the selected student is shared for all students (step 4120).

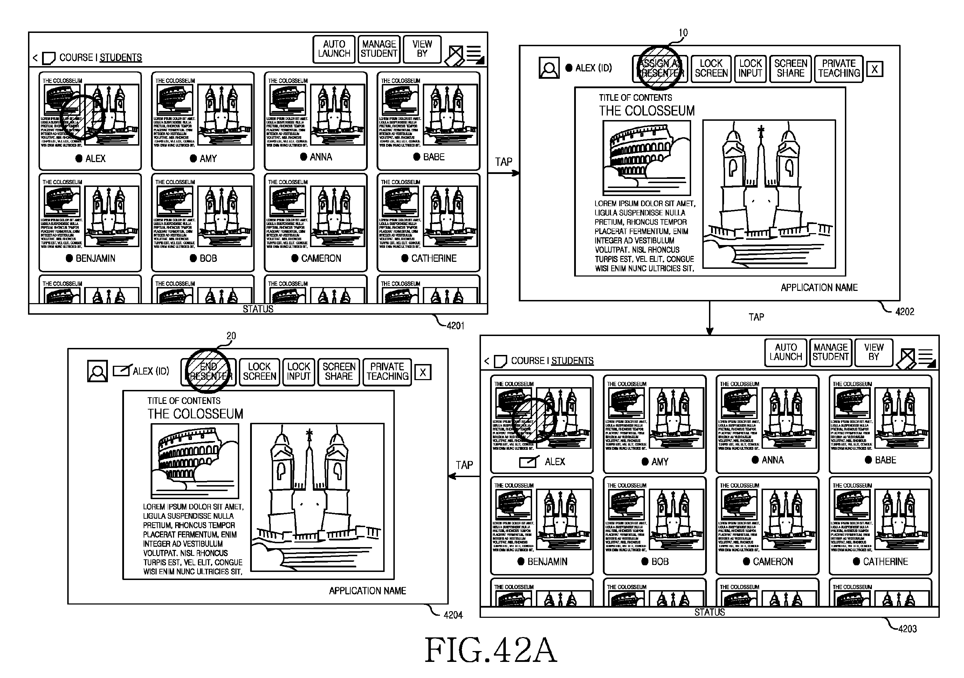

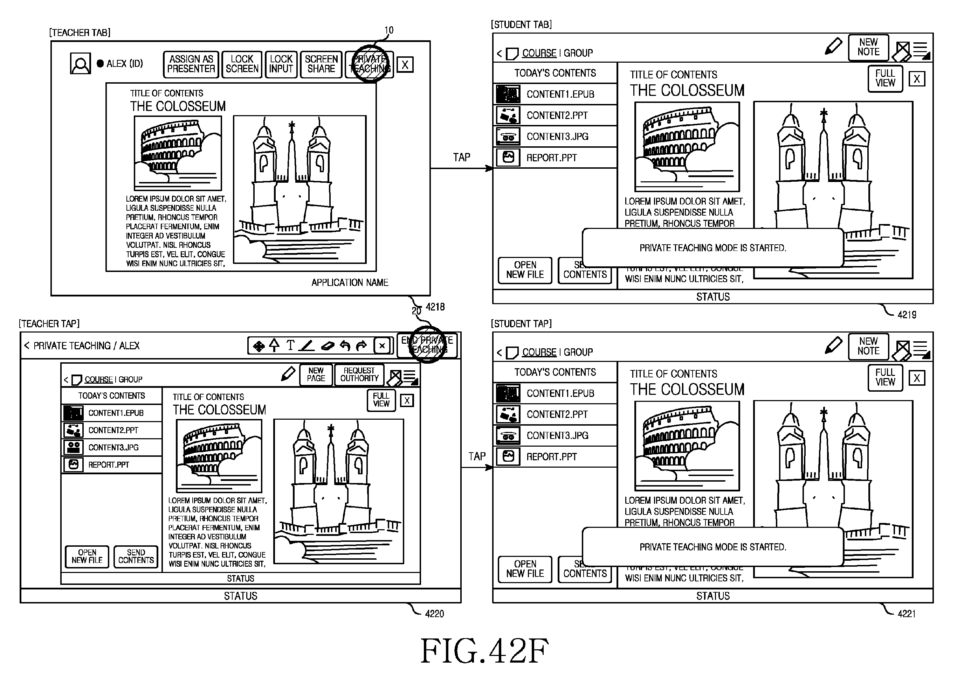

Upon 'private teaching' selection in the detail view (step 4122), a teacher remotely controls the selected student device (step 4124). Upon 'private teaching' ending (step 4126), the teacher ends remote control (step 4128).A detailed user interface controlling a student device in a teacher device is made with reference to FIGS. 42A to 42F below.

FIG. 42A illustrates a case where 'Students tab/Thumbnail view' is selected in a course progress mode (4201). Here, when a specific student (e.g., Alex) is selected among a student list of a thumbnail form, as in a screen 4202, detailed information about a specific student may be provided. For example, a photograph of a specific student, a status, a name, and an identifier (ID) are displayed and also, a device screen of a specific student may be provided. Here, when 'Assign as presenter' 10 is selected, as in a screen 4203, it proceeds to a selection mode and a specific student (e.g., Alex) may be selected. When a specific student (e.g., Alex) is selected in a screen 4203, as in a screen 4204, a device screen of a specific student is provided together with detailed information about the specific student. The screen 4202 and the screen 4204 are the same as each other but, in the screen 4204, 'Assign as presenter' 10 is toggled to 'End presentation' 20. Here, upon 'End presentation' 20 selection, it returns to the screen 4201.

In another exemplary embodiment, when 'Assign as presenter' 10 is selected in the screen 4204, it may just proceed to the screen 4204.

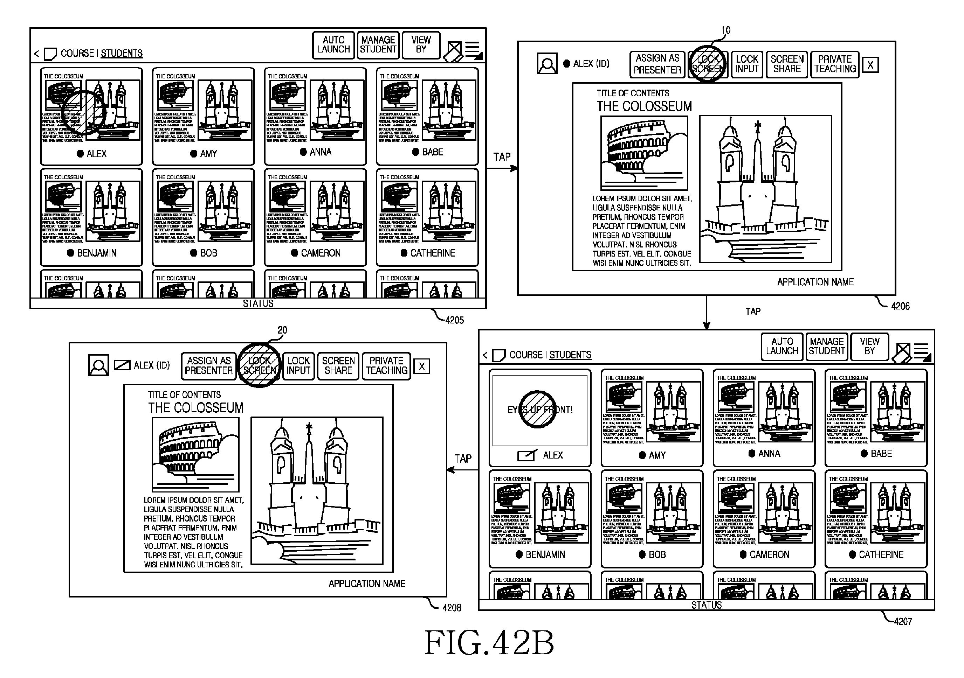

FIG. 42B illustrates a case where 'Students tab/Thumbnail view' is selected in a course progress mode (4205). Here, when a specific student (e.g., Alex) is selected among a student list of a thumbnail form, as in a screen 4206, detailed information about a specific student may be provided. For example, a photograph of a specific student, a status, a name, and an identifier (ID) are displayed and also, a device screen of a specific student may be provided. Here, when 'Lock screen 10 is selected, as in a screen 4207, it proceeds to a selection mode and a specific student (e.g., Alex) may be selected. When the specific student (e.g., Alex) is selected in the screen 4207, as in a screen 4208, a device of the specific student becomes a screen lock state, and detailed information about the specific student is provided. The screen 4206 and the screen 4208 are the same as each other but, in the screen 4208, 'Lock screen' 10 is toggled to 'Unlock screen' 20. Here, upon 'Unlock screen' 20 selection, it returns to a screen 4205.

In another exemplary embodiment, when 'Lock screen' 10 is selected in the screen 4206, it may just proceed to the screen 4208.

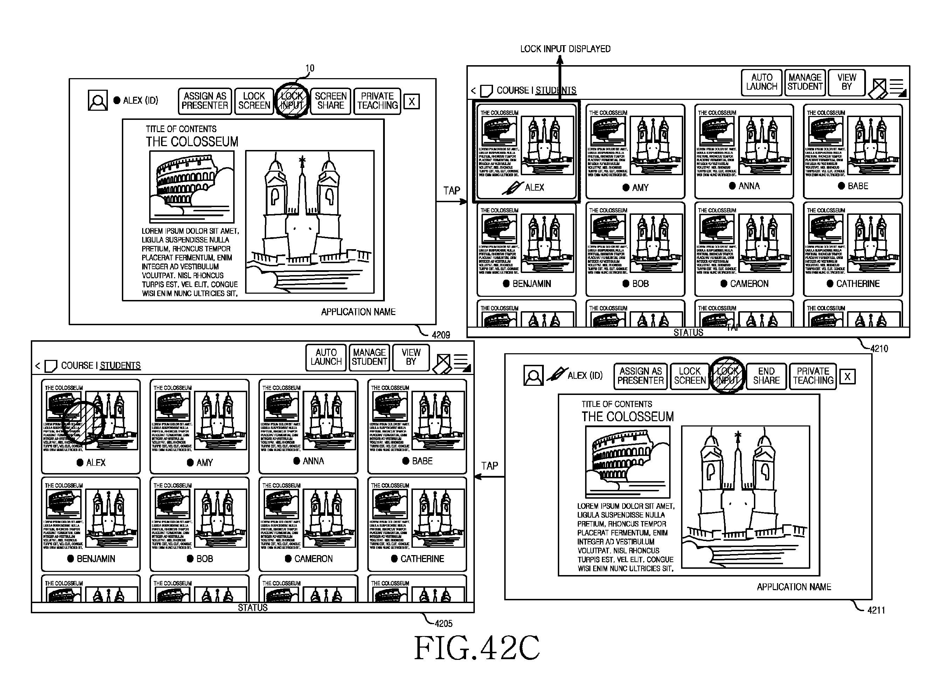

FIG. 42C is a user interface for input lock setting of a specific student device in a course progress mode.

Similarly, when a specific student (e.g., Alex) is selected in 'Students tab/Thumbnail view', as in a screen 4209, detailed information about a specific student may be provided. Here, when 'Lock input' 10 is selected, as in a screen 4210, it proceeds to a selection mode and the specific student (e.g., Alex) may be selected. When the specific student (e.g., Alex) is selected in the screen 4210, as in a screen 4211, a device of a specific student becomes an input lock status, and detailed information about the specific student is provided. The screen 4209 and the screen 4211 are the same as each other but, in the screen 4211, 'Lock input' 10 is toggled to 'Unlock input' 20. Here, upon 'Unlock input' 20 selection, as in a screen 4212, a student list of a thumbnail form may be provided in 'Students tab/Thumbnail view'.

In another exemplary embodiment, when 'Lock input' 10 is selected in the screen 4209, it may just proceed to the screen 4211.

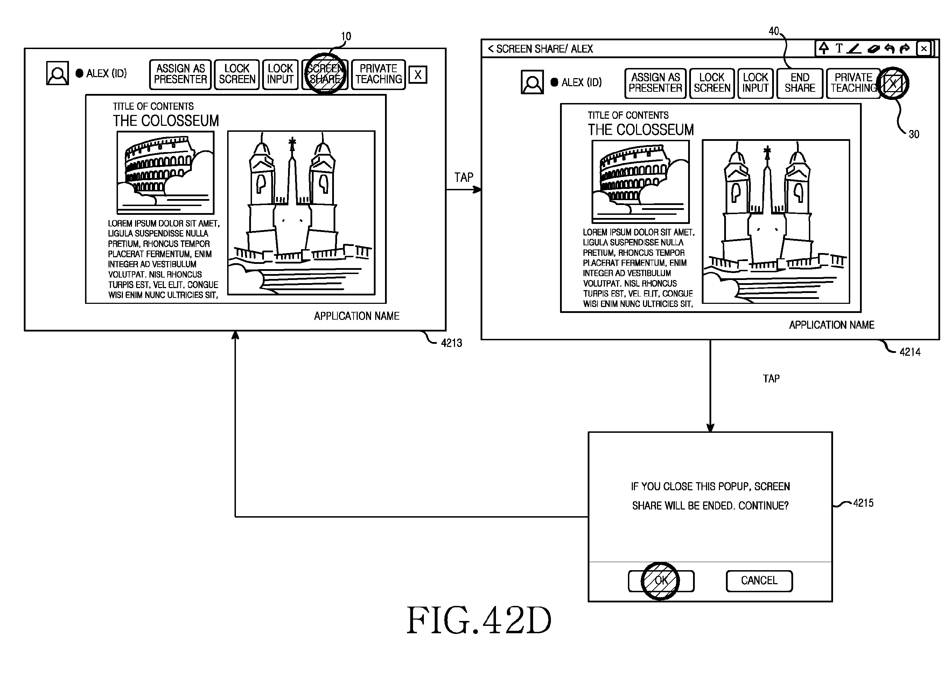

FIG. 42D is a user interface for screen sharing setting of a specific student device in a course progress mode.

Similarly, when a specific student (e.g., Alex) is selected in 'Students tab/Thumbnail view', as in a screen 4213, detailed information about the specific student may be provided. Here, when 'Screen share' 10 is selected, as in a screen 4214, 'Screen share' 10 is toggled to 'End share' 20.

At this time, in the screen share mode, a screen of a specific student (e.g., Alex) may be shared with a teacher device or all student devices including the teacher device.

Here, when an end button 30 is selected, as in a screen 4251, a message inquiring whether to end screen sharing is provided. Upon ending, it returns to the screen 4213. The result of the ending button 30 selection or the 'End share' 20 button selection is the same.

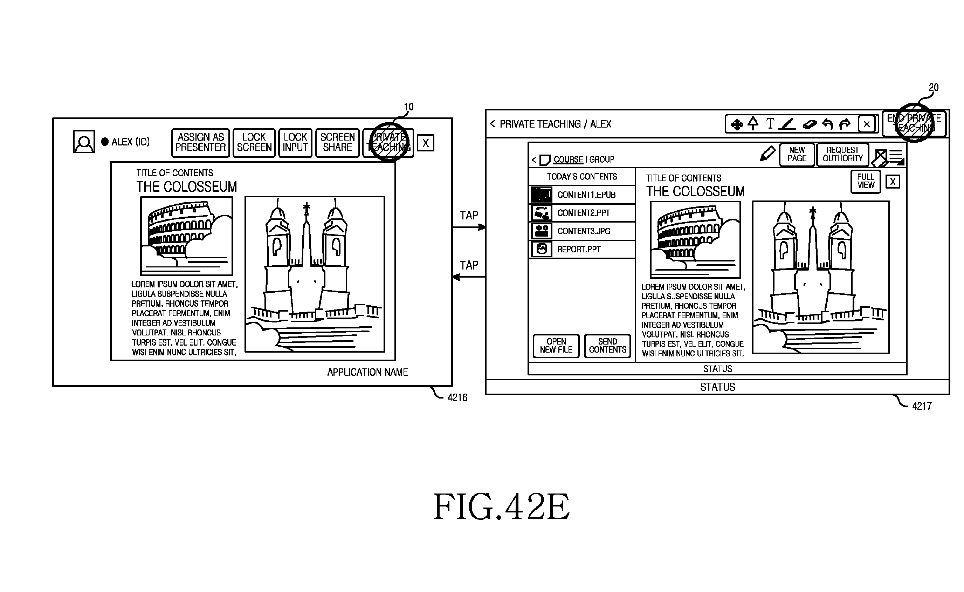

FIG. 42E is a user interface for 1:1 remote controlling a specific student device in a course progress mode.

Similarly, when a specific student (e.g., Alex) is selected in 'Students tab/Thumbnail view', as in a screen 4216, detailed information about the specific student may be provided. Here, when 'Private teaching' 10 is selected, as in a screen 4217, 'Private teaching' 10 is toggled to 'End Private teaching' 20. Also, at this time, it enters a mode for remotely controlling a device of a specific student. That is, the whole device screen of a specific student is displayed in a teacher device and a device of the specific student is remotely controlled.

At this time, in a screen share mode, a screen of a specific student (e.g., Alex) may be shared with a teacher device or all student devices including the teacher device.

Here, when an ending button 30 is selected, as in a screen 4251, a message of inquiring whether to end screen sharing is provided. Upon ending, it returns to a screen 4213. The result of the ending button 30 selection or the 'End share' 20 button selection is the same.

Meanwhile, when a specific student (e.g., Alex) is selected in 'Students tab/Thumbnail view', as in a screen 4218, detailed information about the specific student may be provided. Here, when 'Private teaching' 10 is selected in a teacher device, a device of a specific student may provide a message of informing that the 'Private teaching' mode has started as in a screen 4219.

Also, when 'End private teaching' 20 is selected in the teacher device as in a screen 4220, a device of a specific student may provide a message of informing that 'Private teaching' mode has ended as in a screen 4221.

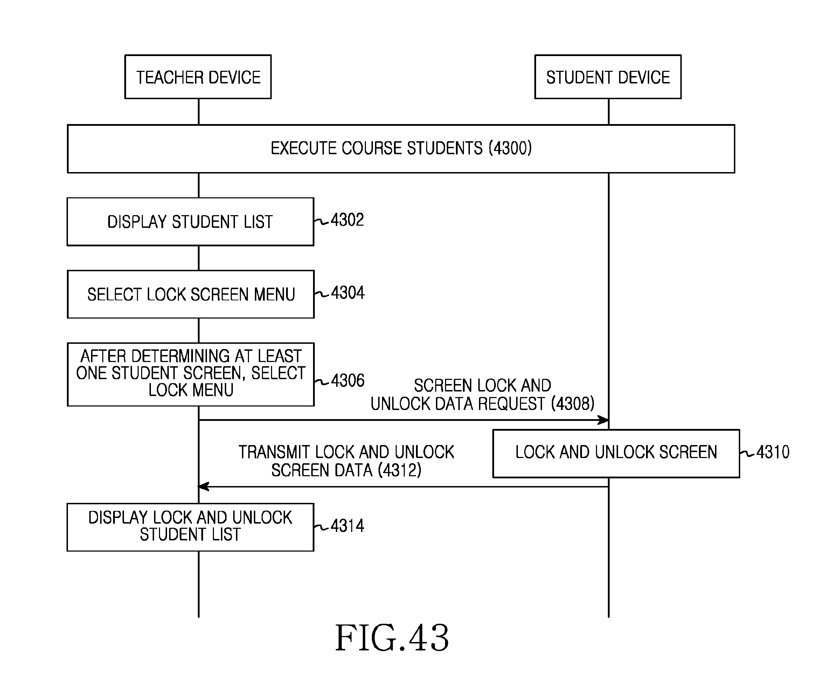

FIG. 43 is a flowchart illustrating an operation for locking and unlocking a student device according to an exemplary embodiment of the present invention.

Referring to FIG. 43, a teacher device selects a 'students' menu in a launcher screen (step 4300).

In step 4302, the teacher device displays a student list in a thumbnail form in the 'students' menu and, in step 4304, selects a 'lock screen' menu. After determining at least one student, the teacher device selects a lock menu (step 4306. Next, the teacher device displays a locked and unlocked student list (step 4314).

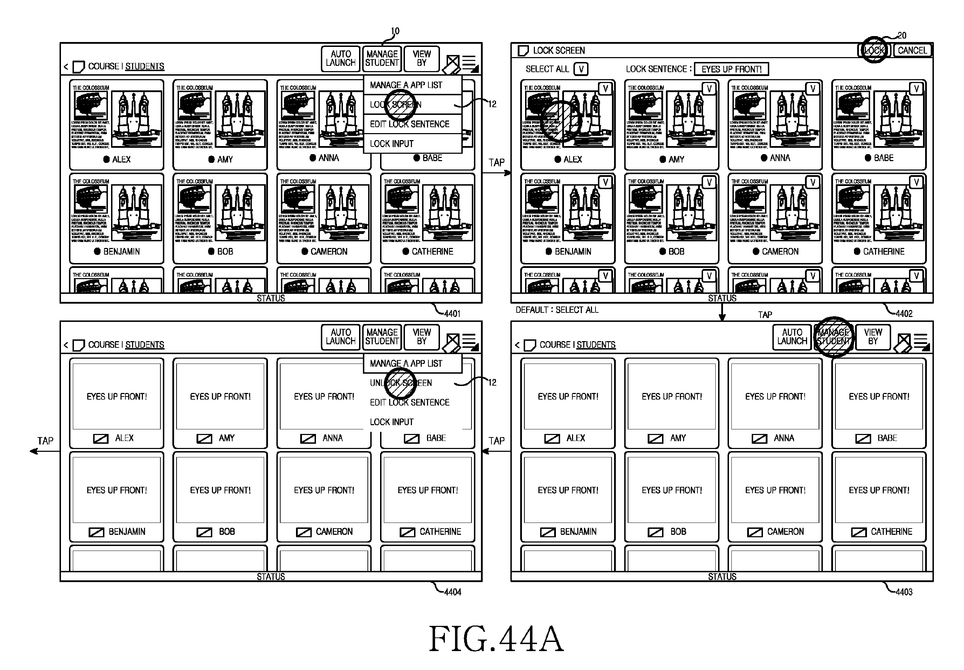

Meanwhile, when lock and unlock is selected by the teacher device, a control signal corresponding to locking and unlocking is transmitted to a student device (step 4308), and the student device maintains a lock or unlock status according to the control signal (step 4310) and transmits a locking or unlocking screen to the teacher device (step 4312). The teacher device displays a locking and unlocking student list by using the information received in step 4312 (step 4314). A detailed user interface for locking and unlocking of the student device is described with reference to FIGS. 44A to 44K below.

FIGS. 44A to 44K are diagrams illustrating detailed user interfaces for locking and unlocking of a student device according to an exemplary embodiment of the present invention.

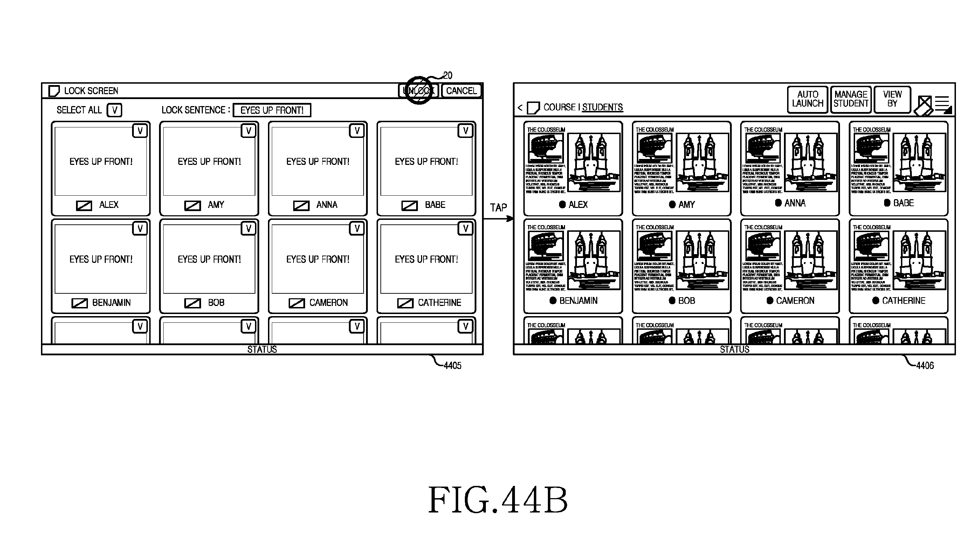

FIG. 44A illustrates a case where 'Students tab/Thumbnail view' is selected in a course progress mode (4401). Here, when a 'Lock screen' 12 sub menu of 'Manage student' 10 is selected, as in a screen 4402, it may enter a mode (e.g., a check box) capable of selecting at least one specific student from a student list of a thumbnail form. Here, upon 'select all' selection, all students of the student list are selected. After that, when a 'Lock' button 20 is selected after all students are selected, as in a screen 4403, all students are changed into a lock screen status, and the teacher device may display a lock screen status of a student device. Meanwhile, to release lock screen statuses of some student devices among them, as in a screen 4404 of FIG. 44B, 'Unlock screen' 12 of 'Manage student' 10 may be selected. Here, when 'Unlock screen' 12 is selected, as in a screen 4405, it may enter a mode (e.g., a check box) capable of selecting at least one specific student from a student list of a thumbnail form. Here, upon 'select all' selection, all students of a student list are selected. After that, when an 'Unlock' button 20 is selected after all students are selected, as in a screen 4406, lock screens of all students are released, and the teacher device may display the lock release status of the student device.

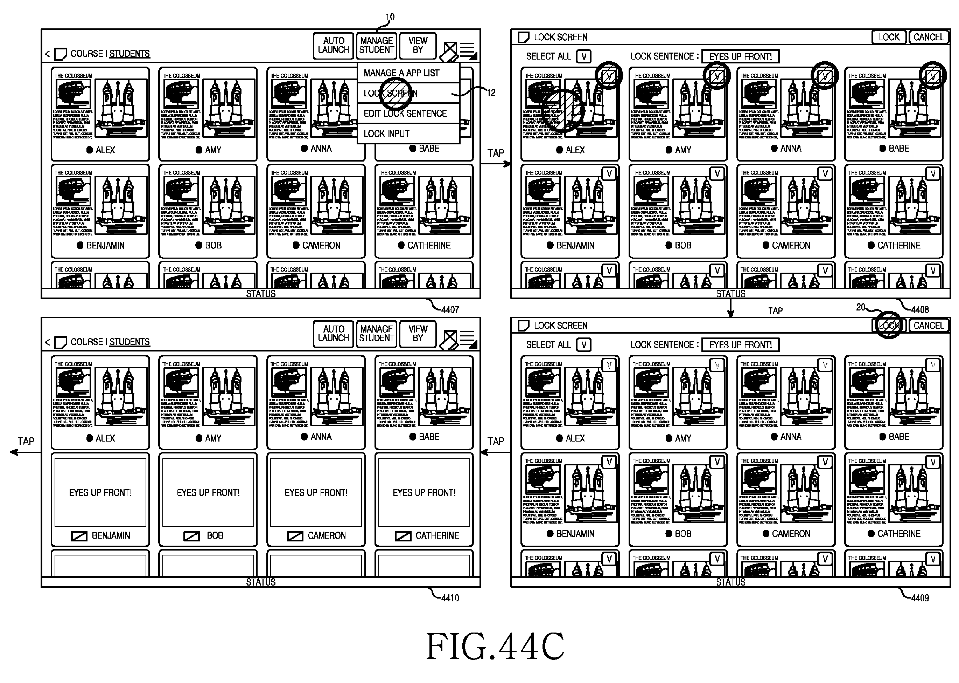

In another exemplary embodiment, as in FIGS. 44C to 44D, a lock screen may be applied to some student devices, not all student devices.

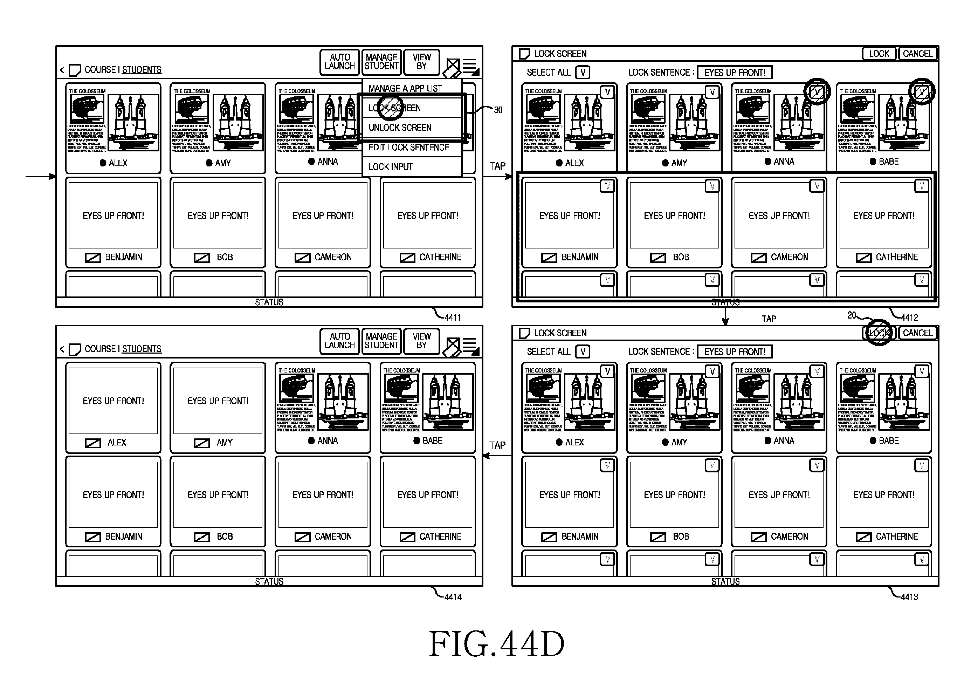

For example, FIG. 44C illustrates a case where 'Students tab/Thumbnail view' is selected in a course progress mode (4407). Here, when a 'Lock screen 12 sub menu of 'Manage student' 10 is selected, as in a screen 4408, it may enter a mode (e.g., a check box) capable of selecting at least one specific student from a student list of a thumbnail form. Here, a check box corresponding to each student may be checked and, when a 'Lock' button 20 is selected after some students are selected (4409), as in a screen 4410, the remnant students excepting some students are changed into a lock screen status, and the teacher device may display lock screen statuses of some student devices and the remnant student devices. Meanwhile, for the sake of lock screen setting or lock screen release of some student devices among them, as in a screen 4411 of FIG. 44D, 'Manage student' 10 may be selected. At this time, because students of lock screen statuses and students not in lock screen statuses are distinguished, 'Lock screen' and 'Unlock screen' are all given in 'Manage student' 10. That is, 'Lock screen' is to set a lock screen, not a lock screen status for students, and 'Unlock screen' is to release a lock screen that is a lock screen status for students.

Here, when 'Lock screen' is selected, as in a screen 4412, check boxes of students not screen locked are activated and thus, students to apply a lock screen may be selected. On contrary, check boxes of students being in lock screen statuses are inactivated and thus, check may be impossible.

Next, when check boxes of some students not screen locked are selected and then a 'Lock' button 30 is selected as in a screen 4413, the remnant some students (e.g., Alex, Amy) excepting the selected some students (e.g., Anna, Babe) may be changed into lock screen statuses as in a screen 414.

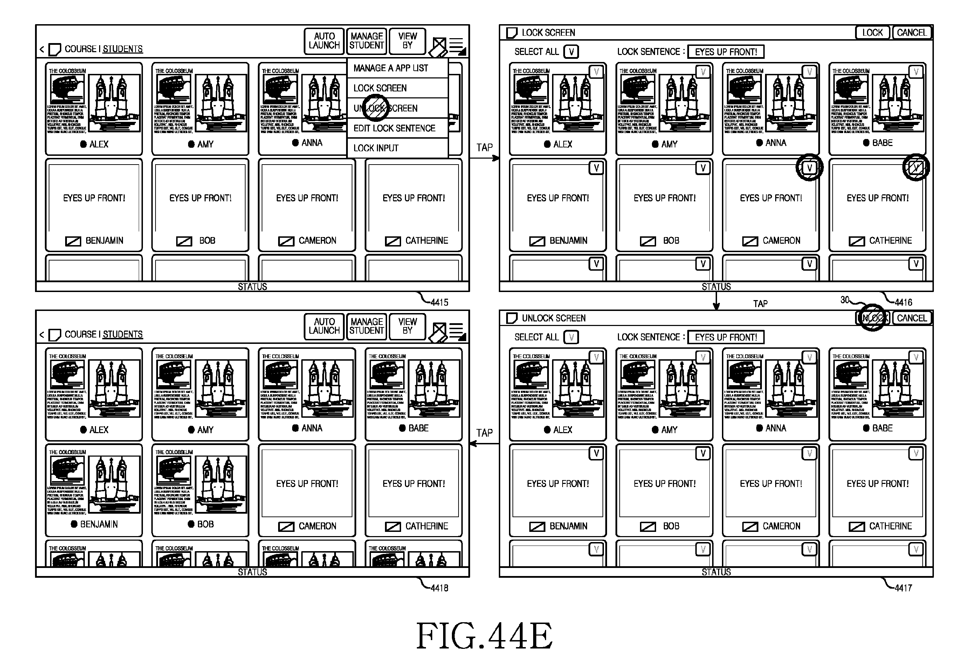

Similarly, when only some students of the whole student list are not in lock screen setting and the remnant students are in lock screen statuses as in a screen 4415 of FIG. 44E, when 'Unlock screen' is selected, as in a screen 4416, check boxes of students that are in lock screen statuses are activated and thus, students who will release a lock screen may be selected. On contrary, check boxes of students of no lock screen setting are inactivated and check may be impossible.

Next, when check boxes of some students that are in lock screen statuses are selected and then an 'Unlock' button 30 is selected as in a screen 4417, as in a screen 4418, the remnant students being in lock screen statuses excepting the selected some students (e.g., Cameron, Catherine) being in lock screen statuses may be released from lock screen as in a screen 4418.

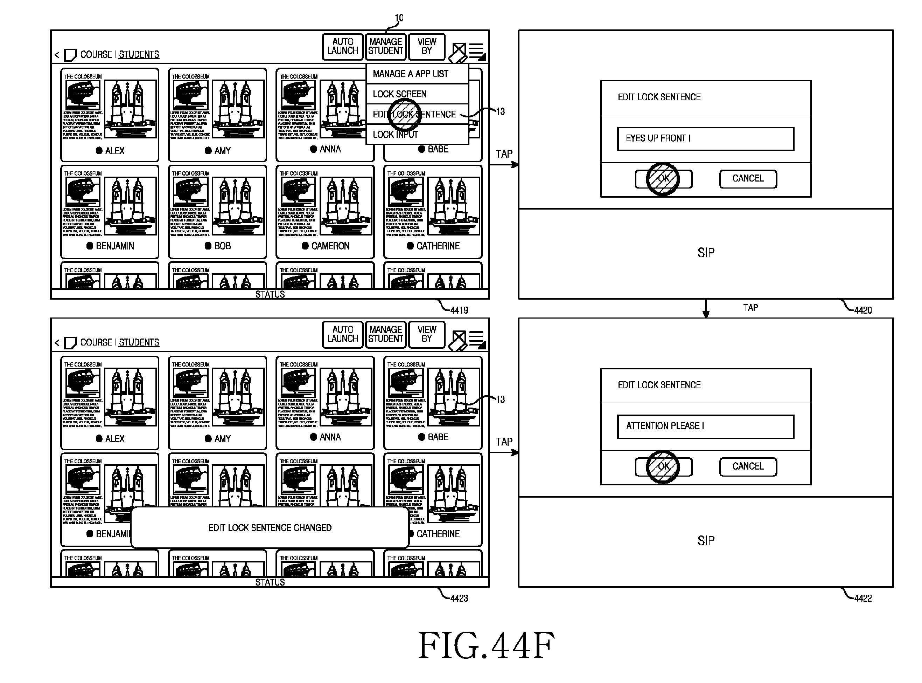

FIG. 44F is a user interface of determining a message displayed on a student device screen when a lock screen is executed in a student device.

For example, when a sub menu of 'Edit lock sentence' 13 of 'Manage student' 10 is selected in 'Students tab/Thumbnail view' of a course progress mode as in a screen 4419 of FIG. 44F, a message input window may be provided as in a screen 4420. After that, after 'OK' button selection after message input as in a screen 4422, the teacher device may provide a message of informing that lock sentence has been edited as in a screen 4423. On contrary, although not illustrated, a student device being in a lock screen status may display a sentence that is lock set by the teacher device.

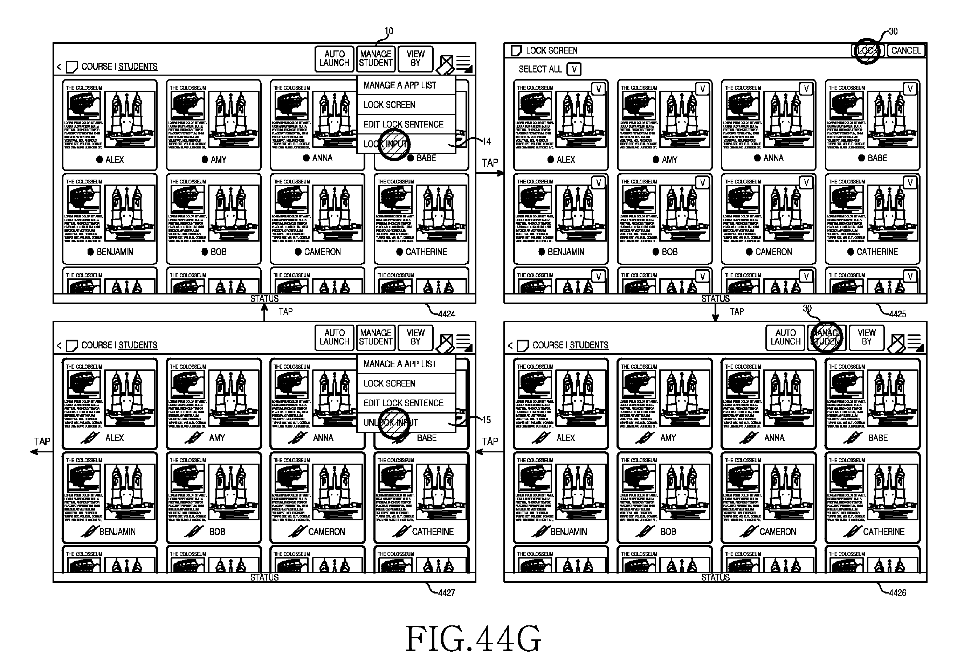

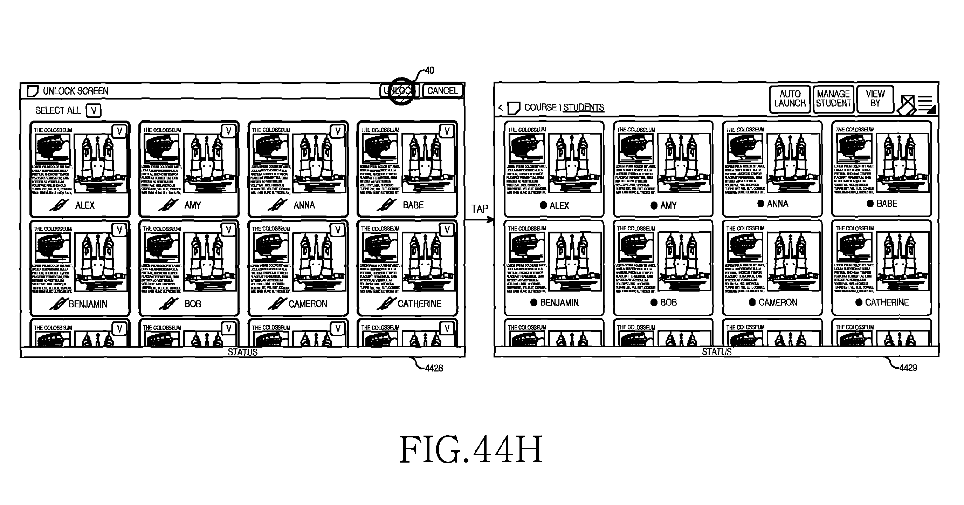

FIG. 44G illustrates a case where 'Students tab/Thumbnail view' is selected in a course progress mode (4424). Here, when a sub menu of 'Lock input' 12 of 'Manage student' 10 is selected, as in a screen 4425, it may enter a mode (e.g., a check box) capable of selecting at least one specific student from a student list of a thumbnail form. Here, upon 'select all' selection, all students of a student list are selected. After that, when a 'Lock' button 20 is selected after all students are selected, as in a screen 4426, all students are changed into a lock input status and the teacher device may display a lock input status of a student device. Meanwhile, to release lock screen statuses of some student devices among them, as in a screen 4427, 'Unlock input' 15 of 'Manage student' 10 may be selected. Here, when 'Unlock input' 15 is selected, as in a screen 4428 of FIG. 44H, it may enter a mode (e.g., a check box) capable of selecting at least one specific student from a student list of a thumbnail form. Here, upon 'select all' selection, all students of a student list are selected. After that, when an 'Unlock' button 40 is selected after all students are selected, as in a screen 4429, lock screens of all students are released, and the teacher device may display lock input release of the student device.

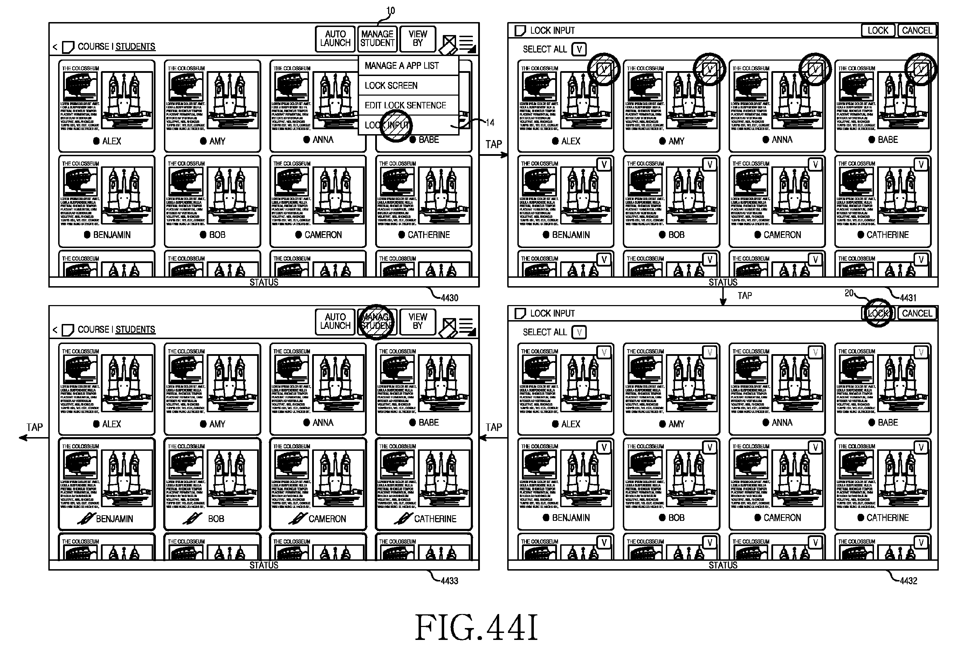

In another exemplary embodiment, as in FIGS. 44I to 44K, lock input may be applied for some student devices, not all student devices.

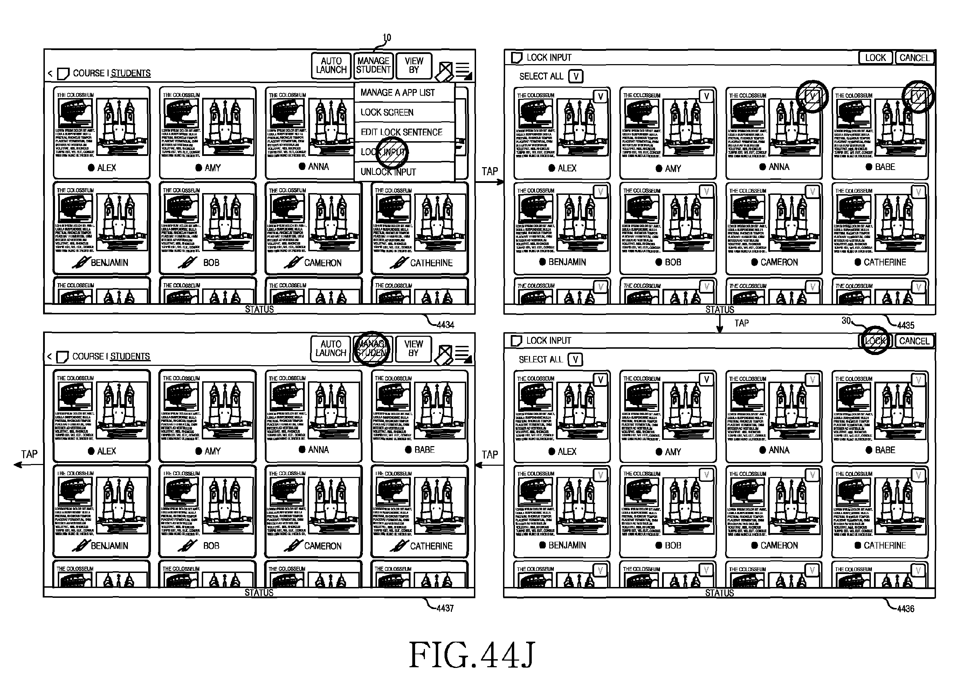

For example, FIG. 44I illustrates a case where 'Students tab/Thumbnail view' is selected in a course progress mode (4430). Here, when a 'Lock screen' (14) sub menu of 'Manage student' 10 is selected, as in a screen 4431, it may enter a mode (e.g., a check box) capable of selecting at least one specific student from a student list of a thumbnail form. Here, a check box corresponding to each student may be checked and, when a 'Lock' button 20 is selected after some students are selected (4432), as in a screen 4433, the remnant students excepting some students are changed into a lock input status, and the teacher device may display lock input statuses of some student devices and the remnant student devices. Meanwhile, for lock input setting or lock input release of some student devices among them, as in a screen 4434 of FIG. 44J, 'Manage student' 10 may be selected. At this time, because students being in lock input statuses and students not being in the lock input statuses are distinguished, 'Lock input' and 'Unlock input' are all given in 'Manage student' 10. That is, 'Lock input' is for setting a lock input for students not being in the lock screen statuses, and 'Unlock input' is for releasing a lock input for students being in the lock input statuses.

Here, when 'Lock input' is selected, as in a screen 4435, check boxes of students not being the lock input are activated and thus students who will apply the lock input may be selected. On contrary, check boxes of students being in the lock input statuses are inactivated and thus, check may be impossible.

After that, when check boxes of some students not being the lock input are selected and then 'Lock' button 30 is selected as in a screen 4436, the remnant some students (e.g., Alex, Amy) excepting the selected some students (e.g., Anna, Babe) may be changed into lock input statues as in a screen 4437.

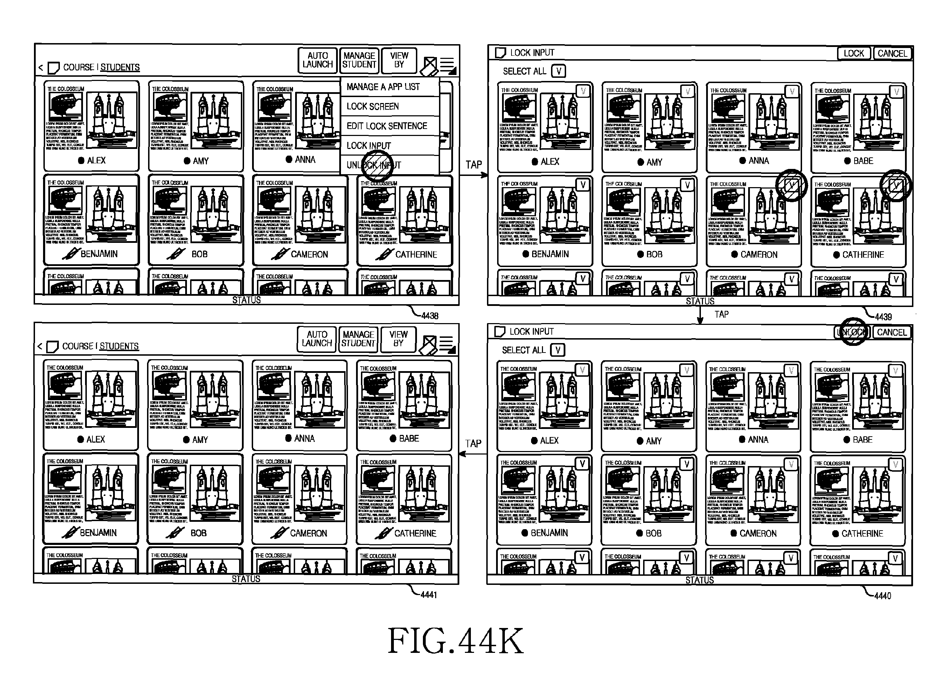

Similarly, when only some students among the whole student list are not lock input set and the remnant students are in the lock input status as in a screen 4438 of FIG. 44K, when 'Unlock input' is selected, as in a screen 4439, check boxes of students being in the lock input statuses are activated and students who will release a lock input may be selected. On contrary, check boxes of students not lock input setting are inactivated and thus, check may be impossible.

After that, when check boxes of some students being in the lock input statuses are selected and then an 'Unlock' button 30 is selected as in a screen 4440, as in a screen 4418, the remnant students being in the lock screen statuses excepting the selected some students being in the lock input statuses may be released from lock input.

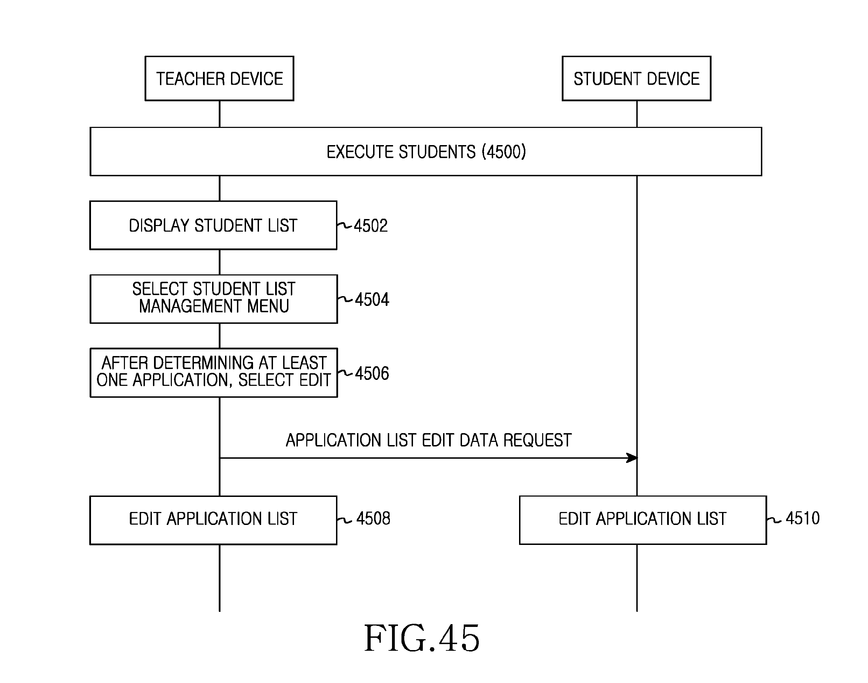

FIG. 45 is a flowchart illustrating an operation for application list management according to an exemplary embodiment of the present invention.

Referring to FIG. 45, a teacher device selects a 'students' menu in a launcher screen (step 4500).

In step 4502, the teacher device displays a student list in a thumbnail form in a 'students' menu and, in step 4504, the teacher device selects a sub menu of 'Manage app list'. The application list is a list of applications available by a student device in the teacher device or applications limited to student devices.

Next, after determining at least one application, in step 4506, the teacher device selects a correction menu. In step 4508, the teacher device displays a corrected application list.

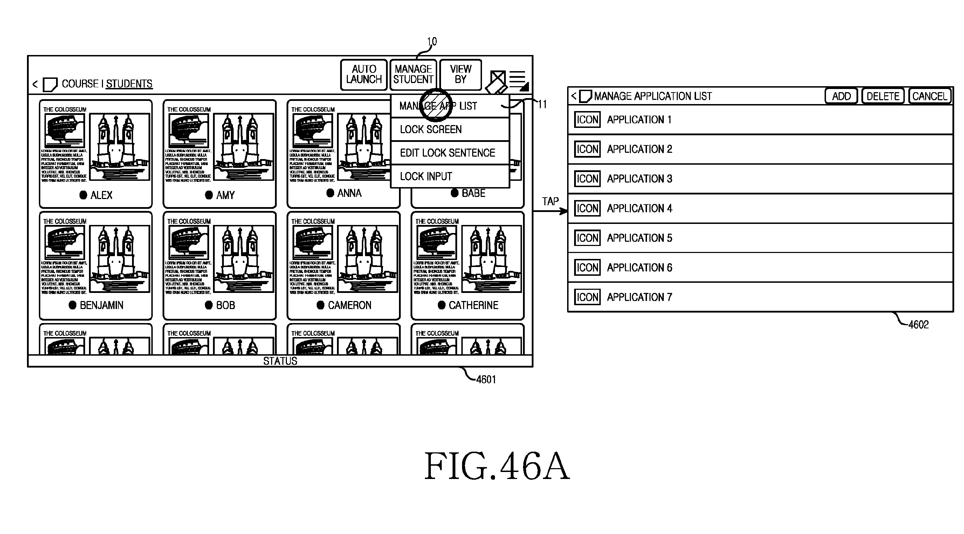

Meanwhile, a control signal corresponding to application list correction of the teacher device is forwarded to the student device and thus, even the student device displays the corrected application list (step 4510). The student device may limit application use according to the application list provided in the teacher device. A detailed user interface for application list management is described with reference to FIGS. 46A to 46E below.

FIGS. 46A to 46E are diagrams illustrating user interfaces for application list management according to an exemplary embodiment of the present invention.

FIG. 46A illustrates a case where 'Students tab/Thumbnail view' is selected in a course progress mode (4601). Here, when a 'Manage app list 11 sub menu of 'Manage student' 10 is selected, as in a screen 4602, an application list may be provided. The application list is applications allowable in the teacher device. Applications other than the application list are locked and thus may not be executed and used in student devices until permission of the teacher device. In another exemplary embodiment, the application list is applications limited in use in the student device, and applications other than the application list may be executed and used in the student devices without permission of the teacher device.

Also, in a screen 4602, items within the application list may be added or deleted.

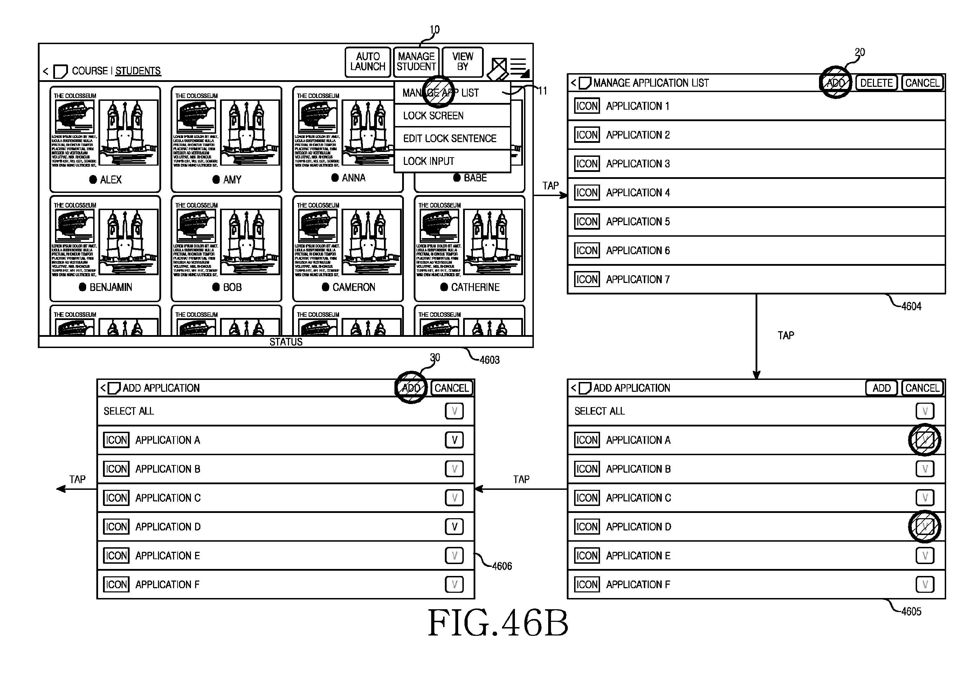

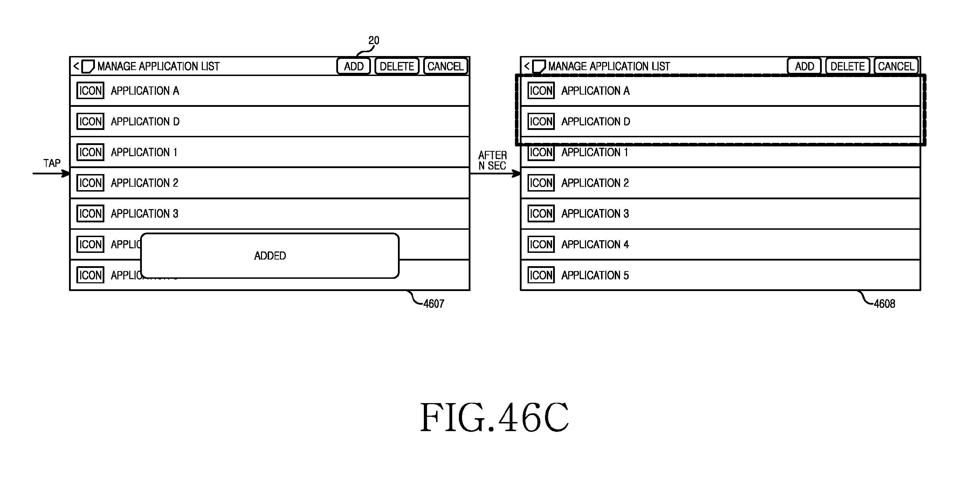

For example, FIG. 46B illustrates a case where 'Students tab/Thumbnail view' is selected in a course progress mode (4603). Here, when a 'Manage app list' (11) sub menu of 'Manage student' 10 is selected, as in a screen 4604, an application list may be provided. At this time, an 'Add' button for adding an item within an application list and a 'Delete' button for deleting an item within the application list may be provided. When the 'Add' button 20 is selected, as in a screen 4605, applications to be added are provided. Here, at least one application may be selected by a teacher. After that, when at least one application is selected and then the 'Add' button 30 is again selected (4606), as in a screen 4607 of FIG. 46C, a message of informing that an item is added to an application list is provided. After a predetermined time, as in a screen 4608 of FIG. 46C, selected other applications are added to an existing application list.

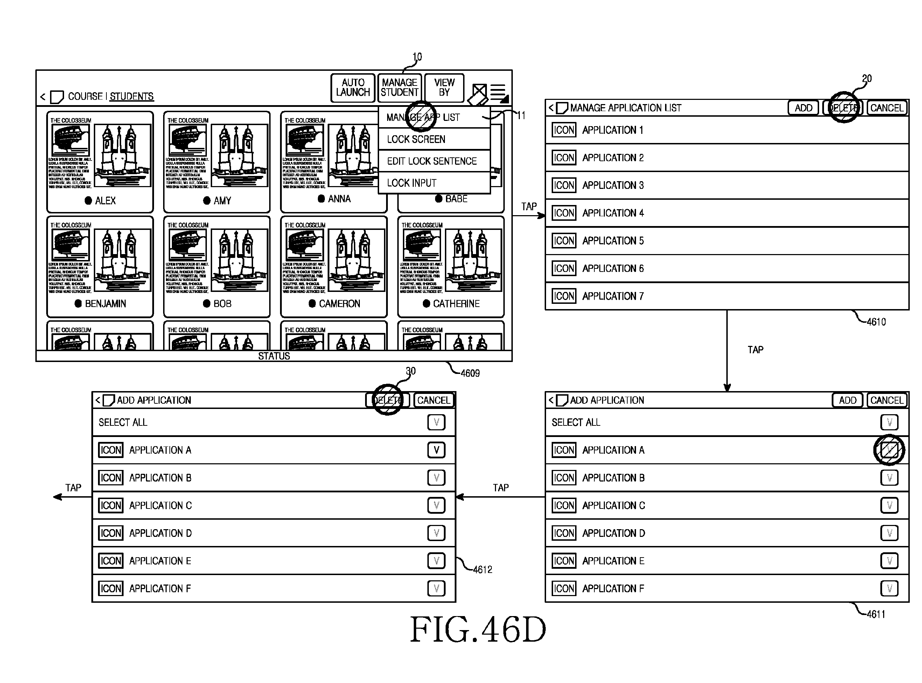

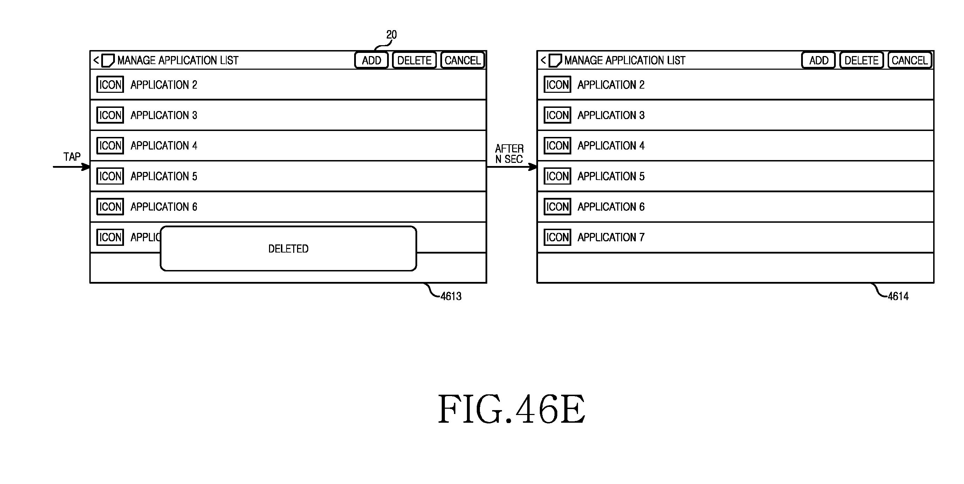

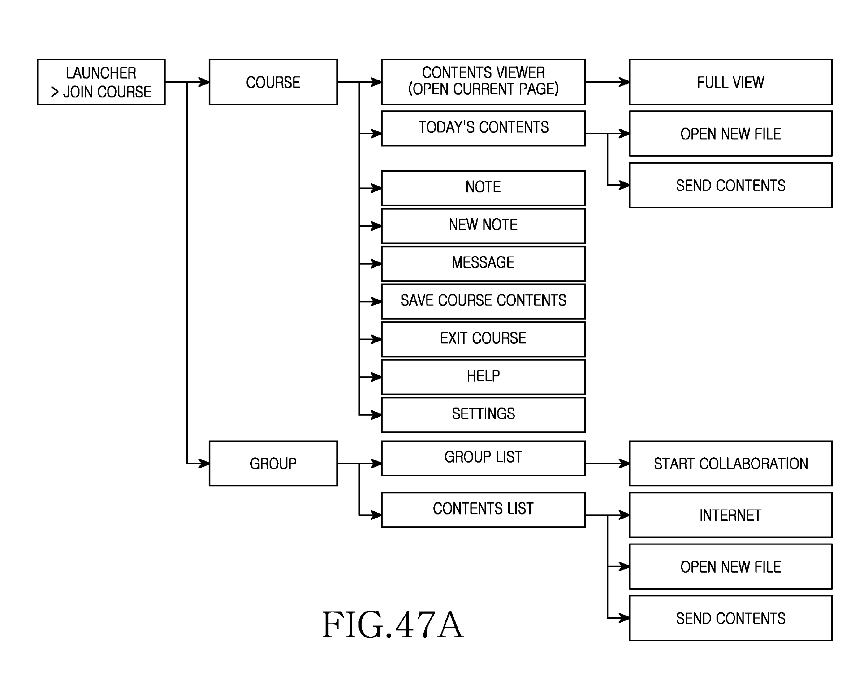

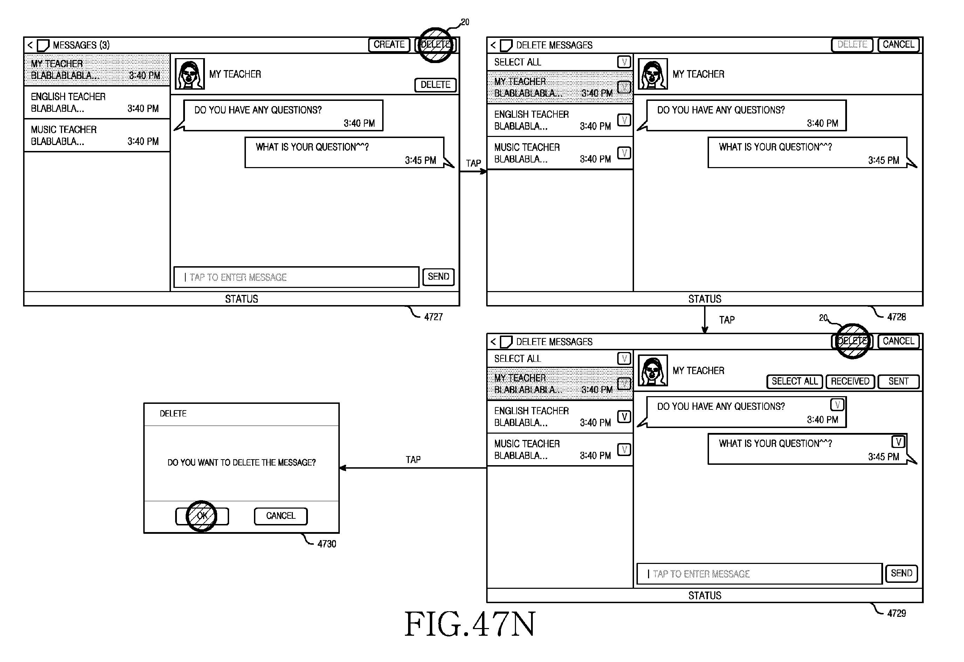

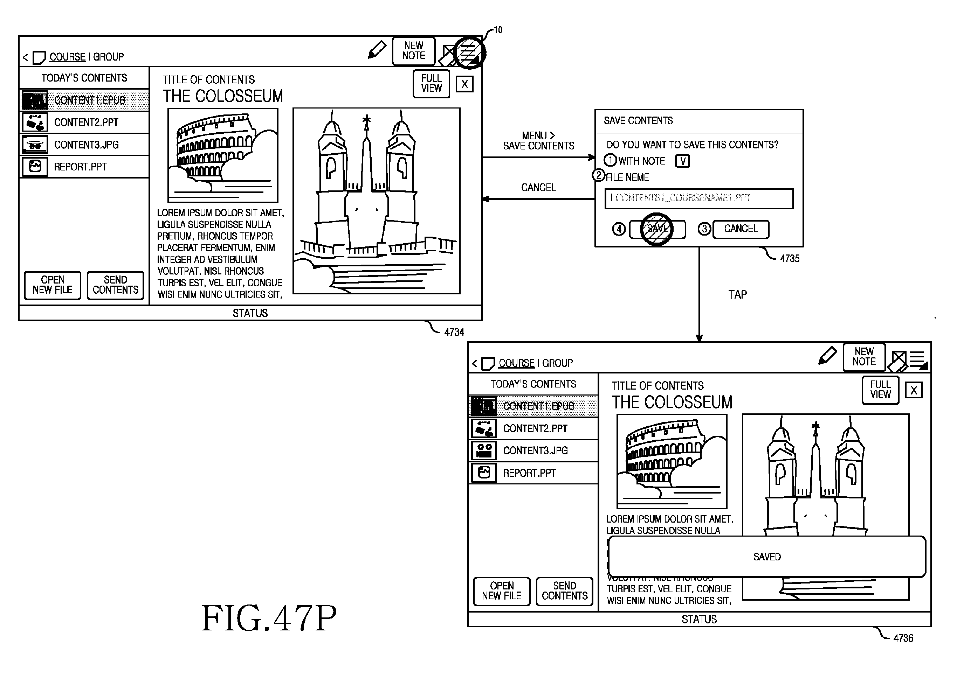

Meanwhile, FIG. 46D illustrates a case where 'Students tab/Thumbnail view' is selected in a course progress mode (4609). Here, when a 'Manage app list (11) sub menu of 'Manage student' 10 is selected, as in a screen 4610, an application list may be provided. At this time, an 'Add' button for deleting an item within an application list and a 'Delete' button for deleting an item within the application list may be provided. When the 'Delete' button 20 is selected, as in a screen 4611, it enters a mode (e.g., a check box) capable of selecting specific applications within the application list. Here, at least one application may be selected by a teacher. After that, when at least one application is selected and then the 'Delete' button is again selected (4612), as in a screen 4613 of FIG. 46E, a message of informing that an item is deleted from an application list is provided. After a predetermined time, as in a screen 4614 of FIG. 46E, selected applications are deleted from an existing application list. FIGS. 30A to 46E describe an IMS for a teacher, and FIGS. 47A to 55F describe an IMS for a student.

FIGS. 47A to 47Q is a diagram illustrating a menu structure for a student according to an exemplary embodiment of the present invention.

FIGS. 47A to 47B are menu structures for a student in an IMS.

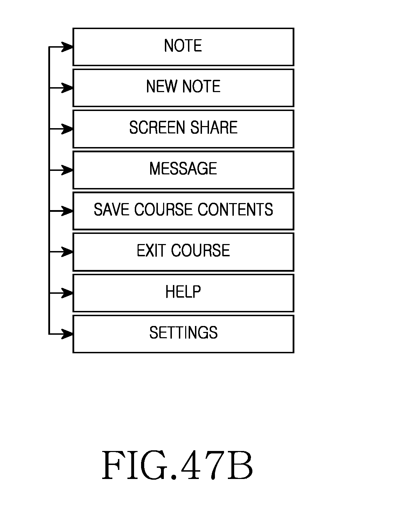

Referring to FIGS. 47A and 47B, a 'Course' menu of a student launcher program includes sub menus of 'Contents viewer', 'Today's contents', 'Note', 'New note', 'Message', 'Save course contents', 'Exit course', 'Settings', 'Help' and the like. The sub menu of 'Contents viewer' includes sub menus of 'Full view', 'Open new file', 'Send contents' and the like. The sub menu of 'Today's contents' includes sub menus of 'Open new file', and 'Send contents'. A 'Group' menu of the student launcher program includes 'Group list', 'contents list', 'Note', 'New note', 'Screen share', 'Message', 'Save course contents', 'Exit course', 'Help', and 'Settings'. 'Group list' includes 'Start collaboration'. 'contents list' includes 'Internet', 'Open new file', and 'Send contents'.

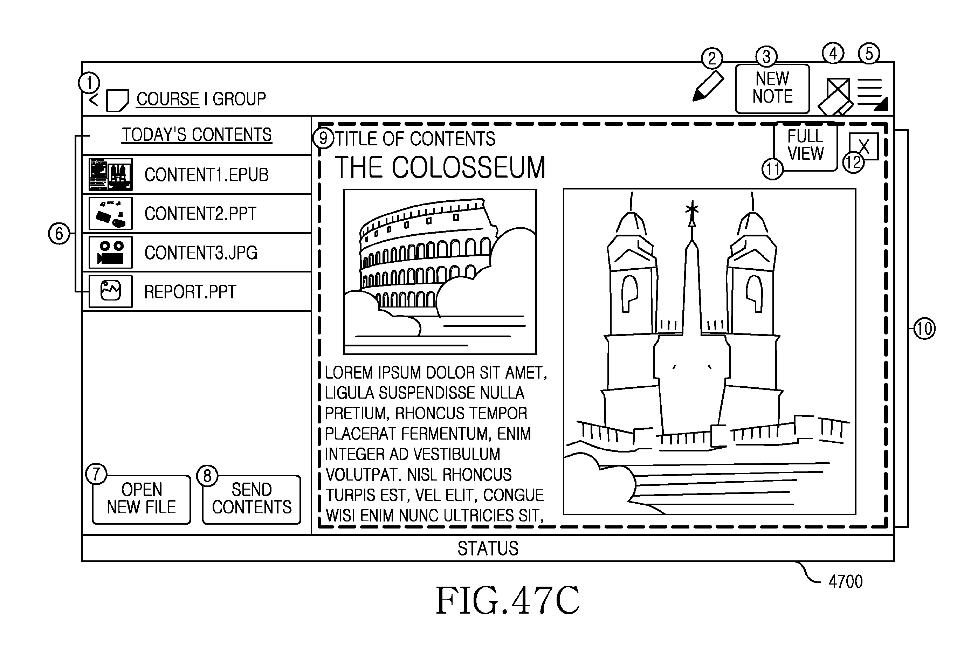

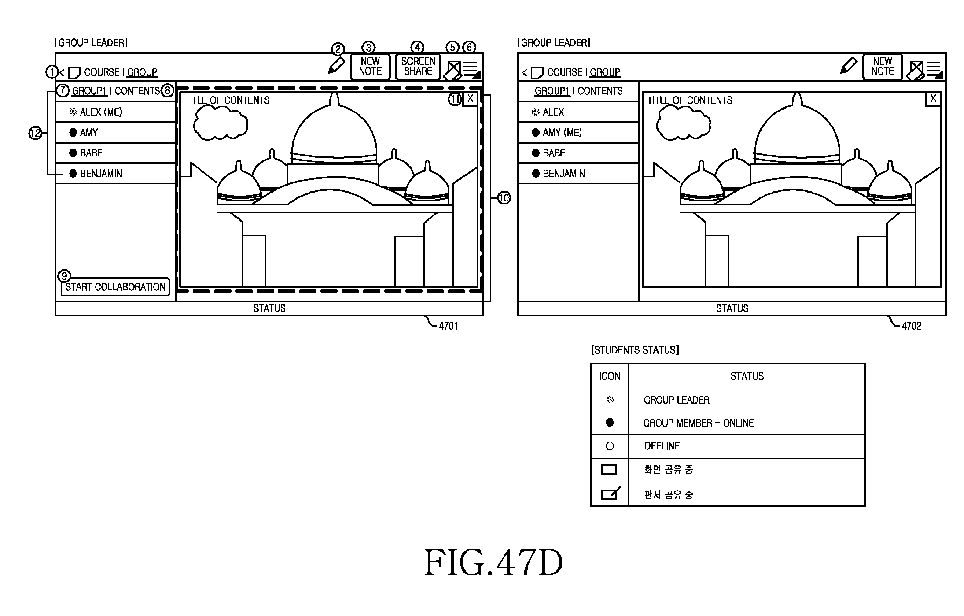

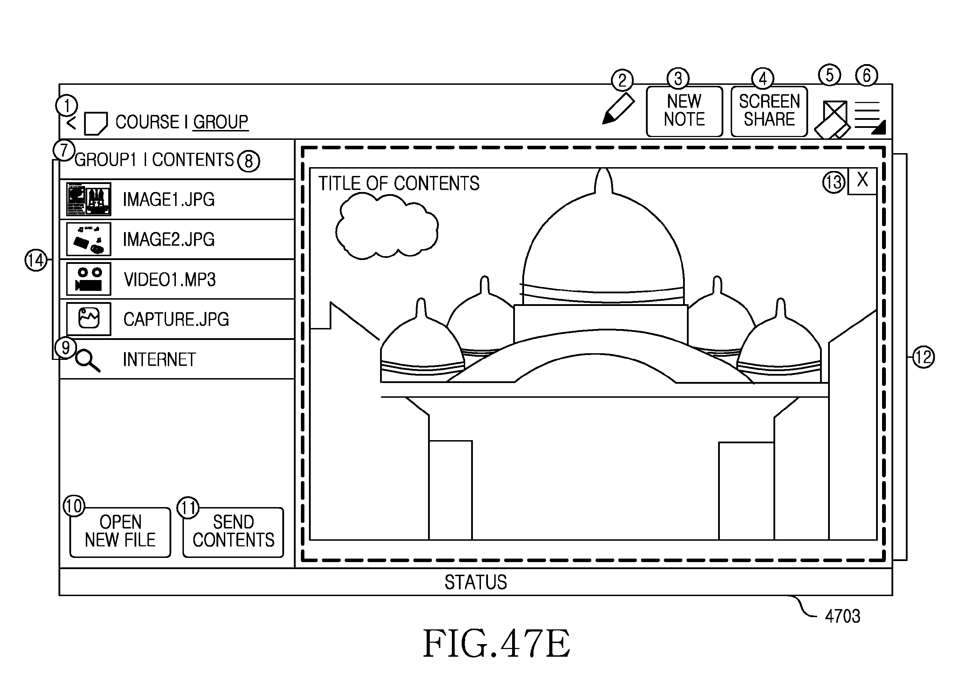

FIGS. 47C to 47E are screens corresponding to a course progress mode shown when 'join course' is selected in a student initial launcher screen. Specifically, FIG. 47C illustrates a case where 'Course tab' is selected in a course progress mod (4700), and FIG. 47D illustrates a case where 'Group tab' is selected in a course progress mode (4701). A screen 4702 of FIG. 47D illustrates a case where 'Group tab/Group 1' is selected in a course progress mode, and a screen 4703 of FIG. 47E illustrates a case where 'Group tab/contents tab' is selected in the course progress mode.

Referring to the screen 4700 of FIG. 47C, a screen may be mainly distinguished into a content list region 6 and a contents display region 10. In the contents list region 6, materials suitable to a corresponding course progress are given in a list form. These materials are contents previously registered by course progress by a teacher device in an LMS.

Here, 'Title' 1 may include an icon corresponding to a 'back' button, and 'Course tab/Group tab'. 'Note' 2 opens a note toolbar and activates a writing function. 'New note' 3 opens a new page such as a whiteboard or mini-memo and provides a writing function. 'Message' 4 is a button for transmitting/receiving a message, and 'More menu' 5 more shows a next menu. For example, sub menus may be more given such as 'Save contents' saving a textbook and writing content, 'Close course' ending a course, and 'Help' providing helps. 'Open new file' 7 is a button for opening other contents not being in the contents list region, and 'Send contents' 8 is a button for sending a file saved in a local device, and 'Title of contents' 9 is displayed for a predetermined time when contents are opened, and the contents display region 10 is a region where contents or whiteboard is displayed, and 'Full view on/off toggle' 11 is a view mode switching button for contents, and 'Close button' 12 is a button closing opened contents.

Next, referring to the screen 4701 of FIG. 47D, the screen may be distinguished into a group member list region 12 given when 'ground tab' 7 is selected and a contents display region 10. The group member list region 12 shows group members determined by a teacher device.

Here, 'Title' 1 may include an icon corresponding to a 'back' button, and 'Course tab/Group tab'. 'Note' 2 opens a note toolbar and activates a writing function. 'New note' 3 opens a new page such as a whiteboard or mini-memo and provides a writing function. 'Screen share' 4 is a function of sharing a screen to group members, and 'Message' 5 is a button for transmitting/receiving a message, and 'More menu' 6 more shows a next menu. For example, sub menus may be more given such as 'Save contents' saving a textbook and writing content, 'Close course' ending a course, and 'Help' providing helps. 'Group tab' 7 provides a group member list, and 'Contents tab' 8 provides a contents list related to group activity, and 'Start collaboration' 9 is a button for starting collaboration upon group activity, and 'contents display region' 10 is a region where contents or whiteboard is displayed, and 'Close button' 11 is a button closing opened contents.

According to an exemplary embodiment, 'Screen share' 4 or 'Start collaboration' 9 may be provided only to a group leader of a group. The screen 4701 of FIG. 47D is a course progress mode of a group leader of a group, and the screen 4702 of FIG. 47D is a course progress mode of a group member of the group.

Meanwhile, a student name and a student status (group leader, an online of a group member, an offline, screen sharing, handwriting sharing and the like) may be provided within a group member list.

Next, the screen 4703 of FIG. 47E may be distinguished into a contents list region given when 'contents tab' 8 is selected and a contents display region 12. The contents list region 14 may store an image and a video that a student finds during a course, and may display materials previously downloaded to its own device by a student, files opened through 'Open new file', and contents sent by a teacher to students during a course.

Here, 'Title' 1 may include an icon corresponding to a 'back' button, and 'Course tab/Group tab'. 'Note' 2 opens a note toolbar and activates a writing function. 'New note' 3 opens a new page such as a whiteboard or mini-memo and provides a writing function. 'Screen share' 4 is a function of sharing a screen to group members, and 'Message' 5 is a button for transmitting/receiving a message, and 'More menu' 6 more shows a next menu. For example, sub menus may be more given such as 'Save contents' saving a textbook and writing content, 'Close course' ending a course, and 'Help' providing helps. 'Group tab' 7 provides a group member list, and 'Contents tab' 8 provides a contents list used for group activity. 'Internet' 9 provides a search shortcut function, and 'Open new file' 10 is a button for opening other contents not being in a contents list region, and 'Send contents' 11 is a button of sending a file stored in a local device, and 'Title of contents' 9 is displayed for a predetermined time when contents are opened, and 'contents display region' 12 is a region in which contents or whiteboard is displayed, and 'Close button' 13 is a button closing opened contents.

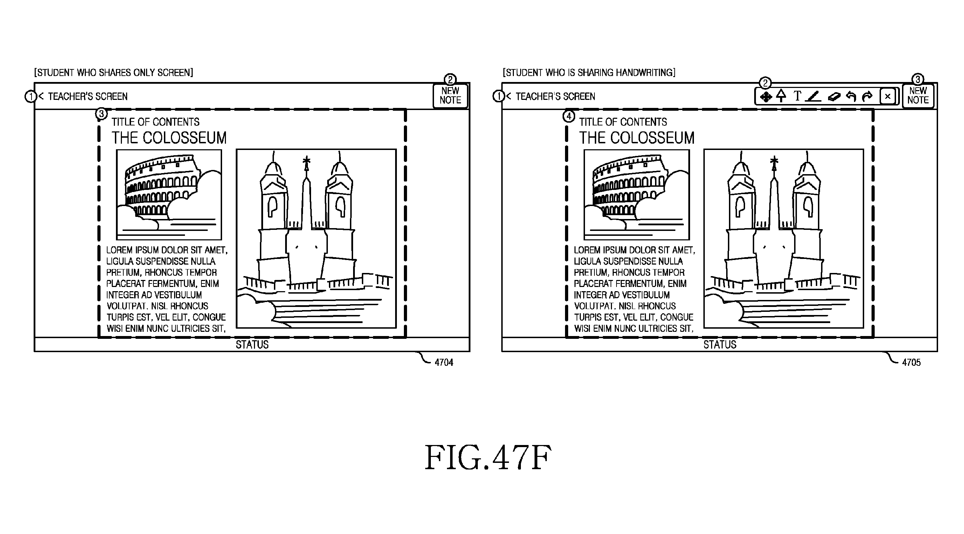

FIG. 47F is a user interface for screen share mode in a student device.

For example, when a teacher device or a screen of a specific student is shared, a student device receiving screen sharing enters a screen share mode.

As in a screen 4704, the student device may share only the teacher device or the screen of the specific student. 'Title' 1 provides information about the teacher device when the screen of the teacher device is shared, and 'New note' 2 is a button for providing a writing function, and the contents display region 3 may display sharing contents.

In another exemplary embodiment, the student device may receive sharing even handwriting together with the teacher device or the screen of the specific student. For example, when handwriting is performed through the teacher device, even handwriting may be shared and shown in the student device. 'Title' 1 provides information about the teacher device when the screen of the teacher device is shared, and 'Note toolbar' 2 is an instruction group for handwriting function, and 'New note' 3 is a button for providing a handwriting function, and the contents display region 4 may display sharing contents.

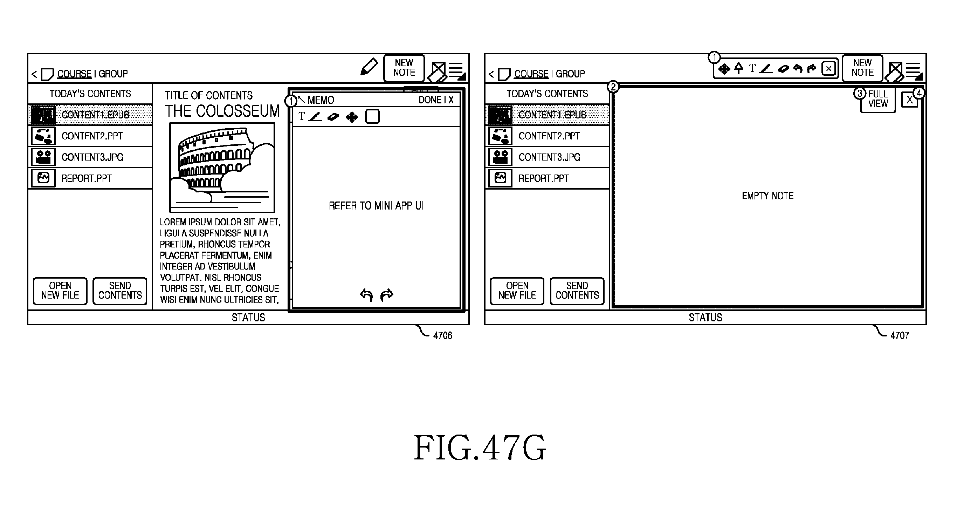

In FIG. 47G, a screen 4706 is an example in which a mini-memo 1 starts and is overlaid and given in the contents display region, and a screen 4707 is an example in which 'full note' starts and is overlaid in the contents display region. 'Full note' may provide 'Note toolbar' 1, 'new note' 2, 'Full view on/off toggle' button 3, and 'Close button' 4 for closing an opened note.

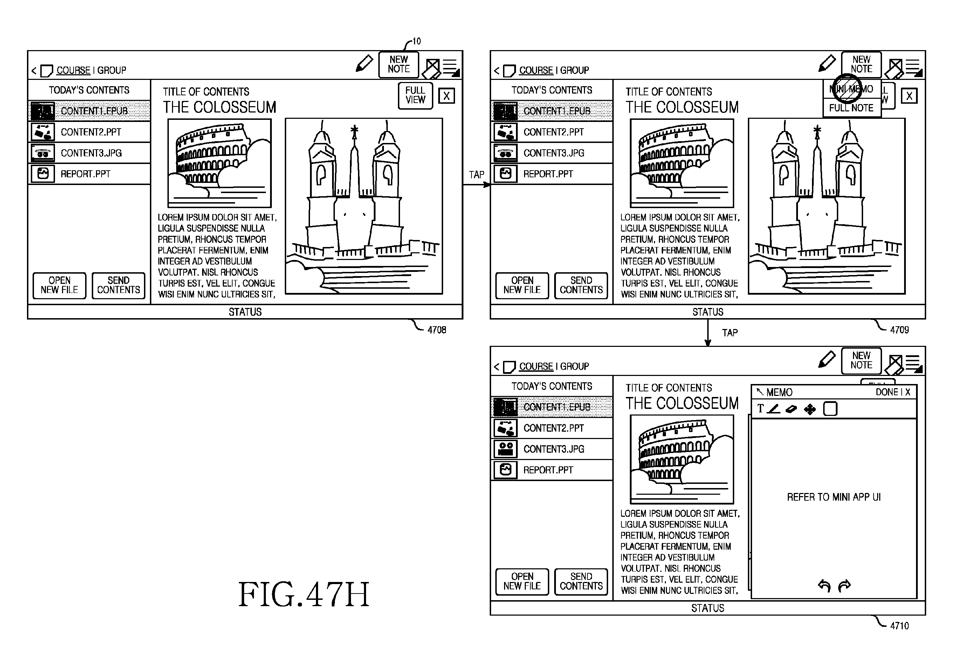

FIG. 47H illustrates a user interface opening a mini-memo.

For example, in a student course progress mode, upon 'New note' 10 selection (4708), 'Mini-memo' and 'Full note' sub menus are provided (4709). Here, when a mini-memo is selected, as in a screen 4710, it may be overlaid in a contents region and start.

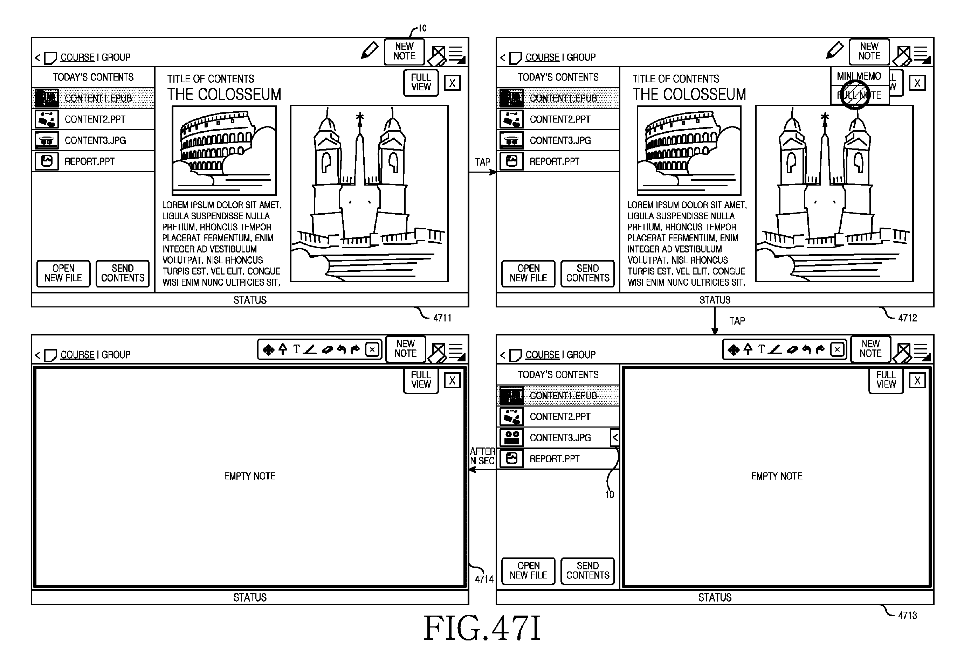

FIG. 47I illustrates a user interface opening 'full note'.

For example, in a student course progress mode, upon 'New note' 10 selection (4711), 'Mini-memo' and 'Full note' sub menus are provided (4712). Here, when 'full note' is selected, as in a screen 4713, 'full note' may be overlaid in a contents region and start.

Here, when a hide button 20 is selected, as in a screen 4713, a contents list region is hidden, and 'full screen' may be used for a blank note screen.

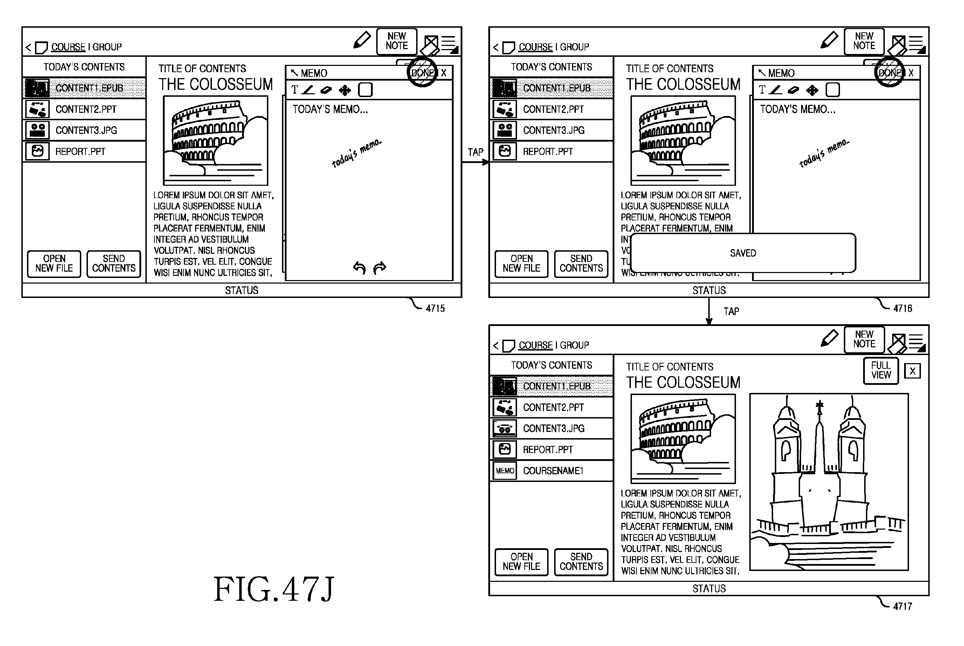

FIG. 47J illustrates a user interface storing a mini-memo.

For example, as in a screen 4715, a memo is made using 'mini-memo' and then, when 'Done' is selected, a message of informing that it is saving is provided as in a screen 4716. After a predetermined time, a memo is saved in a previous save region and, as in a screen 4717, 'mini-memo' is ended. Saved memo may be registered to 'Today's contents list'. However, a memo save region is not limited to a specific folder.

FIG. 47J illustrates a user interface storing mini-memo.

For example, as in a screen 4715, a memo is made using 'mini-memo and then, upon 'Done' selection, as in a screen 4716, a message of informing it is saving is provided and, after a predetermined time, a memo is saved in a previous save region and, as in a screen 4717, 'mini-memo' is ended. Saved memo may be registered to 'Today's contents list'. However, a memo save region is not limited to a specific folder.

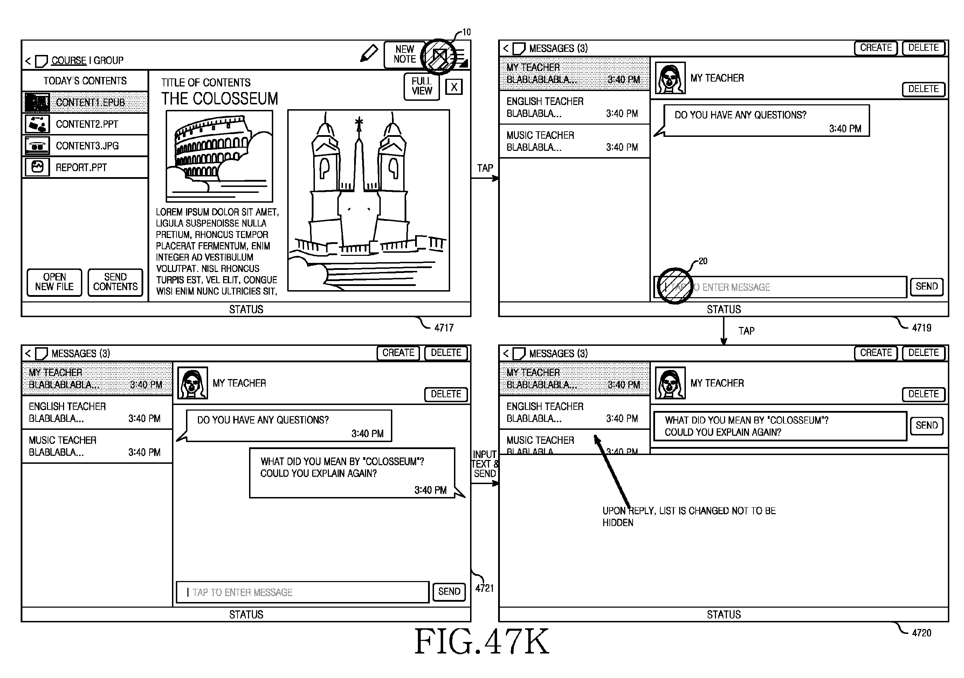

In FIG. 47K, in a student course progress mode, when a message icon 10 of a title region is selected as in a screen 4718 in 'Course tab', a message window may be provided as in a screen 4719. The message window may display the latest received first message. Messages transmitted/received by corresponding student are grouped by student and the number of unread messages may be displayed by each student.

Next, to send a response message to a specific teacher (e.g., 'My teacher'), 'My teacher' is selected among a message list and then, a message input window 20 is selected. Next, as in a screen 4720, a message is input to the message input window 20 and then, a message may respond to the specific teacher by using a 'send' button 30. At this time, as in a screen 4721, in a message output window, a message received from the specific teacher and messages sent to the specific teacher may be connected according to time order and displayed.

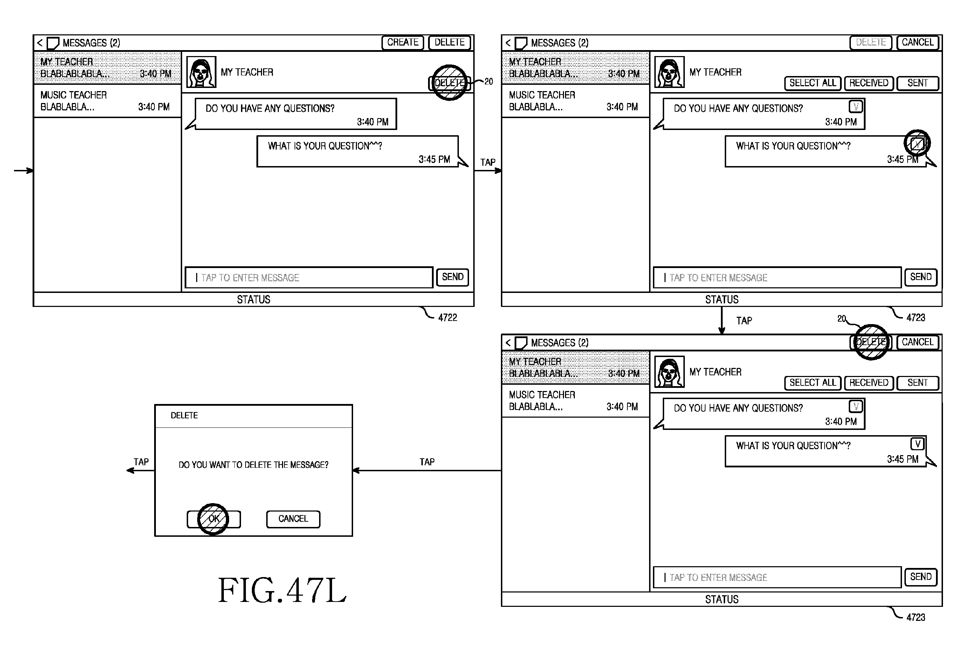

In an exemplary embodiment, FIG. 47L to 47N illustrate user interfaces for message deletion.

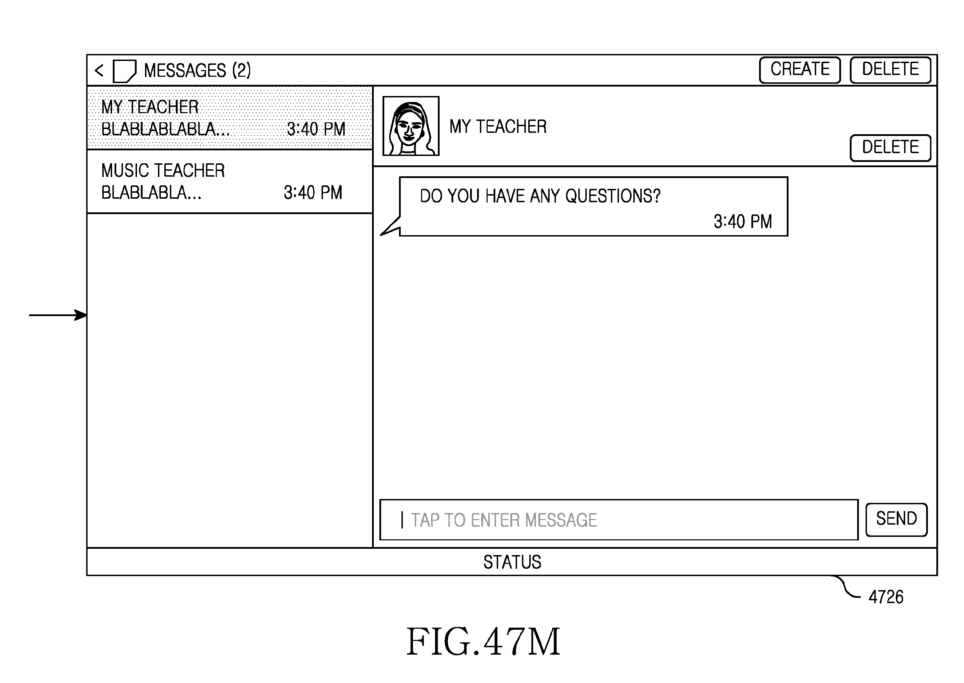

For example, as in a screen 4722, a first 'delete' button 10 is selected in a message window and, upon selection, as in a screen 4723, a check box may be provided for an item of each message list being in the message window. Items of the message list are thread messages in which messages transmitted/received by teacher are grouped. Then, when at least one item is selected in the message list and then a 'delete' button 20 is selected (4724), a window inquiring whether to delete a corresponding message may be provided (4725). After that, when 'OK' is selected, as in a screen 4726 of FIG. 47M, selected messages may be deleted and provided among the thread message.

In another exemplary embodiment, as in a screen 4727, in a message window providing messages transmitted/received with a specific student (e.g. Amy), a second 'delete' button 10 is selected and, upon selection, as in a screen 4728, a check box may be provided for each message transmitted/received with a specific teacher (e.g., English teacher). When at least one message is selected among thread messages and then a first 'delete' button 20 is selected (4729), a window inquiring whether to delete a corresponding message may be provided (4730). After that, when 'OK' is selected, the selected message is deleted among the thread messages.

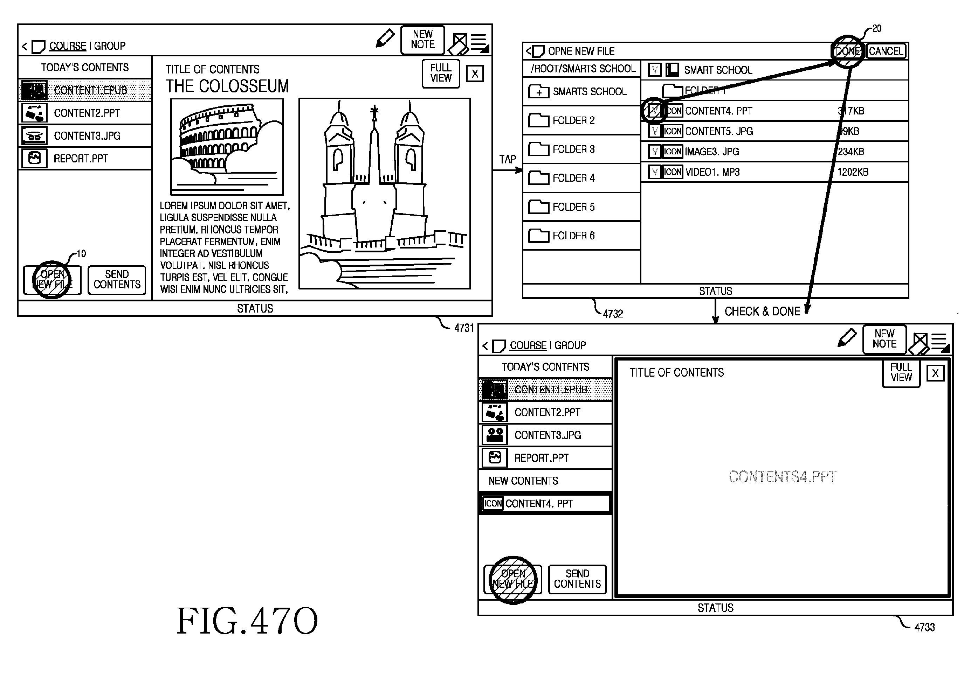

FIG. 47O illustrates a case where 'Course tab' is selected in a student course progress mode (4731). Here, when 'Open new file' 10 is selected, as in a screen 4732, a folder list of a local device and files within a specific folder among the folder list may be provided. Here, when some files within the specific folder are selected and 'Done' 20 is selected, as in a screen 4733, selected files within a contents list may be added. Also, the selected file may be automatically opened in a contents viewer or display region.

FIG. 40P illustrates an example of 'save contents' menu execution among 'more menu'.

For example, as in a screen 4734, 'more menu' 10 is selected and 'save contents' menu is selected. Upon 'save contents' menu selection, at least one of whether to include and save even note content ('With note' 1) and a file name 2 is determined and 'save' is selected (4735). For reference, upon 'save' selection, as in a screen 4736, a message of informing that contents are being currently saved may be provided. Upon 'Cancel' selection, it may move to a previous screen 4734.

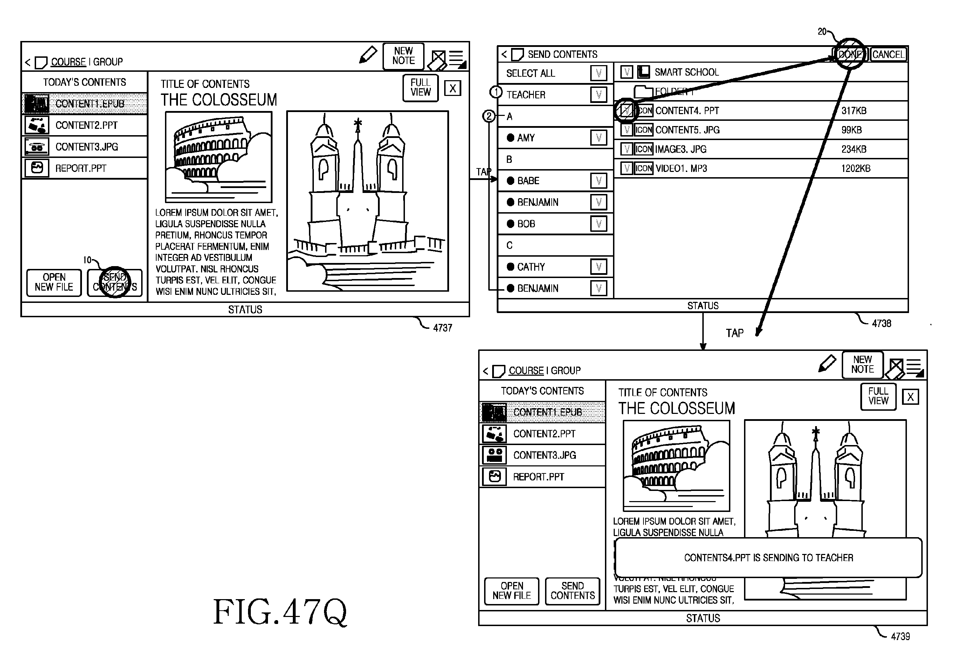

FIG. 47Q illustrates a case where 'Course tab' is selected in a student course progress mode (4737). Here, when 'Send Contents' 10 is selected, as in a screen 4738, a specific teacher or a student list for selecting files within a specific folder of a local device and a student to be transmitted may be provided. The student list may be a list made upon student registration together with course creation by the teacher device. Here, when some files within a specific folder are selected and a recipient who will receive a file in a student list is selected and a 'Send' button 20 is selected, as in a screen 4739, a message of informing that it is in file transmission may be provided.

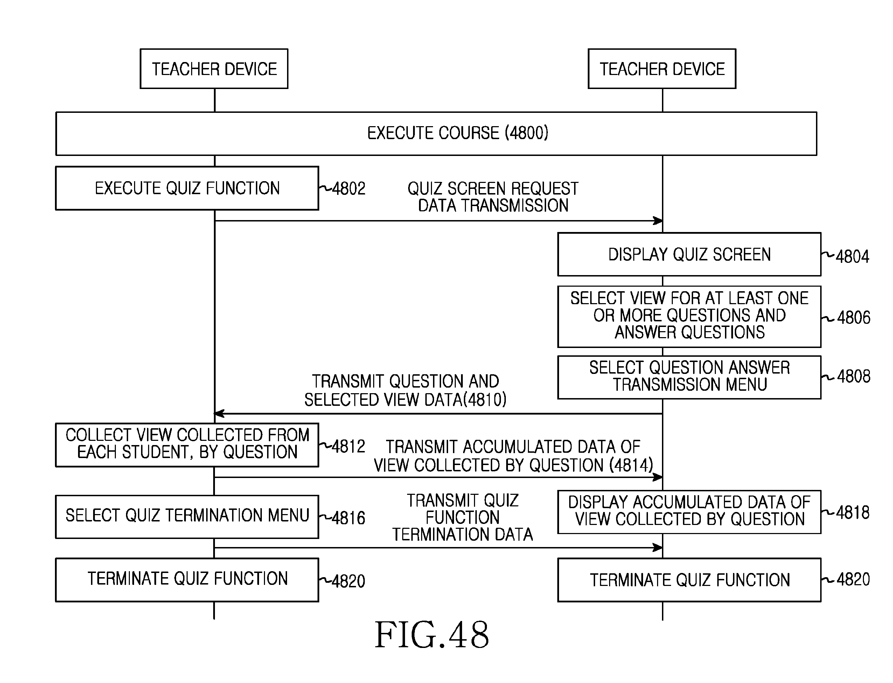

FIG. 48 is a flowchart illustrating an operation for quiz screen control according to an exemplary embodiment of the present invention.

Referring to FIG. 48, a teacher device selects a 'Course' menu in a launcher screen (step 4800).

After that, in step 4802, the teacher device executes a quiz function in the 'Course' menu. At this time, a control signal corresponding to the quiz function is transmitted to a student device.

Next, in step 4804, the student device displays a quiz screen and, in step 4806, the student device selects a viewer for at least one or more questions and performs question solving. The student device selects a question solving transmission menu (step 4808) and transmits a question solving result to the teacher device (step 4810).

After that, in step 4812, the teacher device collects collected information by question from each corresponding student and, in step 4814, transmits accumulation data of viewer collected by question, to the student device. At this time, the student device displays the accumulation data of the viewer collected by question in step 4818.

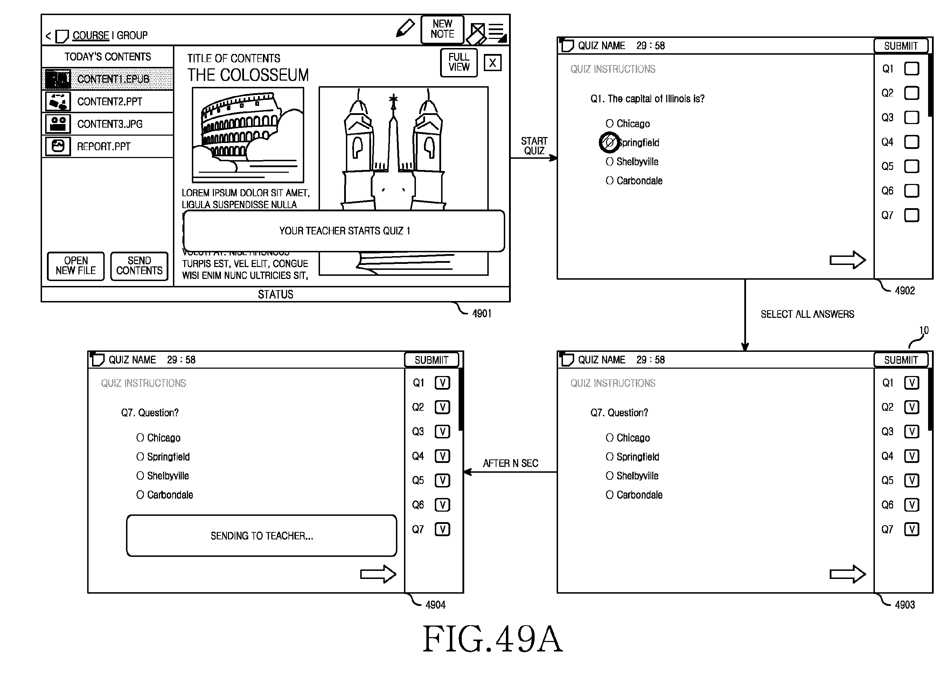

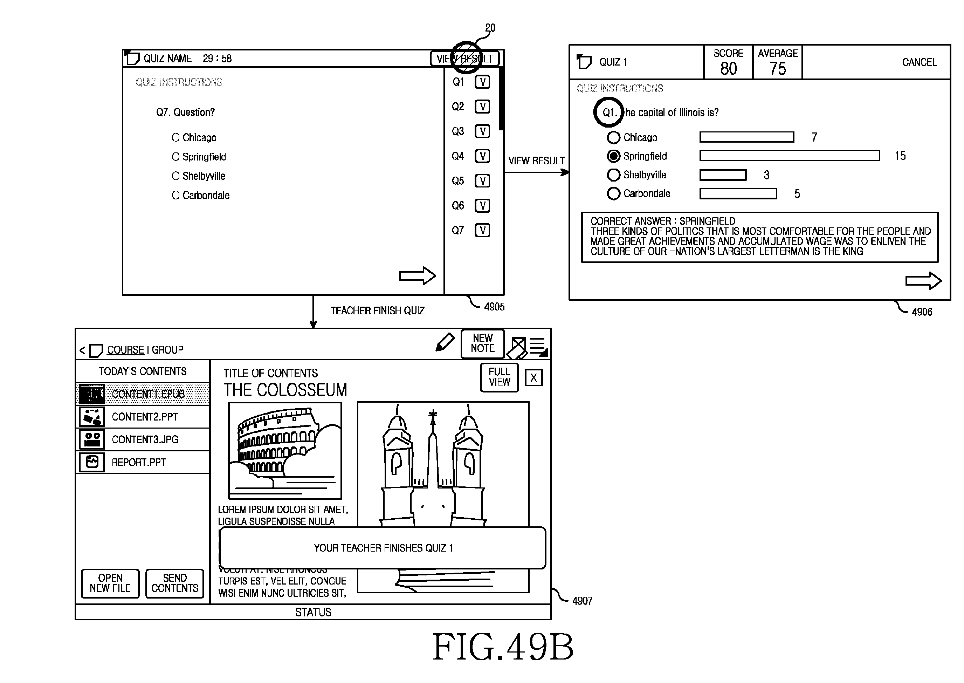

In step 4816, the teacher device selects a quiz ending menu and, in step 4820, ends the quiz function. If a control signal corresponding to the quiz ending menu of the teacher device is transmitted to the student device, even the student device ends the quiz function (step 4820). A detailed user interface for quiz screen control in the student device is described with reference to FIGS. 49A and 49B below.

FIGS. 49A and 49B are diagrams illustrating user interfaces for quiz screen control in a student device according to an exemplary embodiment of the present invention.

As in a screen 4901 of FIG. 49A, when a quiz starts by the teacher device, the student device provides a message of informing that the quiz has started. At this time, the student device may access a server and display a specific quiz started by the teacher device, on a screen (4902). When an answer to a quiz is all selected and a 'submit' 10 button is selected as in a screen 4903, after a predetermined time, a message representing that an answer to a quiz is being submitted to the teacher device may be provided (4904). After the answer to the quiz question is submitted in the student device, as in a screen 4905 of FIG. 49B, 'submit' 10 may be toggled to 'view result'. Here, when 'view result' 20 is selected, as in a screen 4906, a result on a quiz may be provided to the student device. For example, at least one of student's own score, average score, photograph, and a statistics graph of a viewer may be displayed.

Meanwhile, when a quiz is ended by the teacher device in a screen 4905, the student device may provide a message of informing that the quiz has ended by the teacher device.

FIG. 50 is a flowchart illustrating an operation for performing a group work according to an exemplary embodiment of the present invention.

Referring to FIG. 50, in step 5000, a teacher device selects a 'students' menu in a launcher screen and, in step 5002, selects a 'Group' sub menu.

A control signal corresponding to the 'Group' sub menu is transmitted to the student device and thus a group screen may be displayed (step 5006). Here, a screen in which group member lists are opened and group members are connected to a group leader student device is displayed.

Next, in step 5004, the group leader device uploads an image to perform a work. A screen output to the group leader device is shared and a screen is displayed even to other student devices within a group (step 5008). At this time, a split image is assigned to each student within a group, and a student within a group performs a work assigned to him/her to input data (step 5010). After that, student devices within a group select a data transmission menu and forward input data to the teacher device. In other words, if a group leader splits as many images as the number of group members in his/her own terminal and assigns respective group members, respective group members edit only an image split/assigned by the group leader and transmits the image to a group member and a teacher.

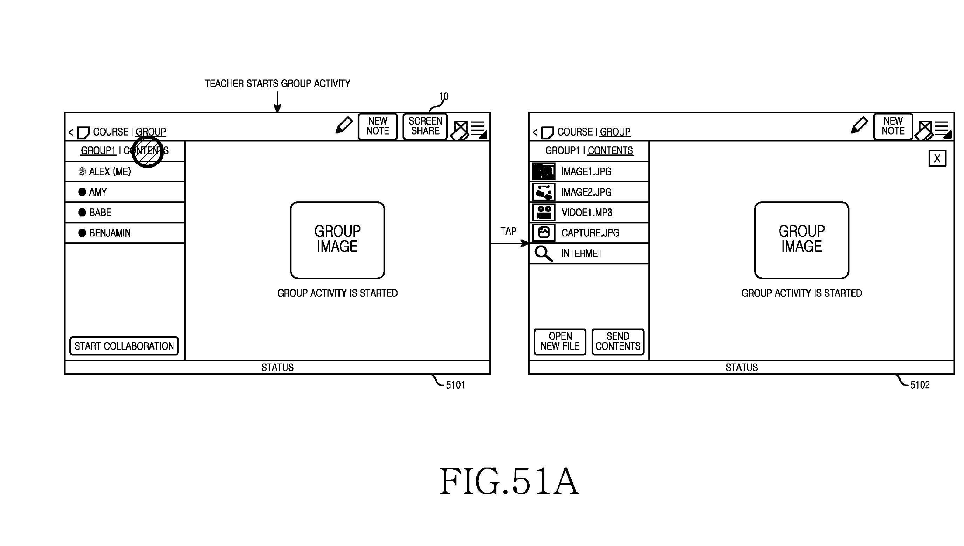

After that, the group leader device collects input data (step 5014), and displays collected integration data (step 5016). Meanwhile, the group leader device transmits the collected integration data to a group other student device, and the group other student device displays the received integration data. A detailed user interface for performing a group work is described with reference to FIGS. 51A to 51O below.

FIGS. 51A to 51O are diagrams illustrating user interfaces for performing a group work according to an exemplary embodiment of the present invention.

First, when group activity starts by a teacher device, as in a screen 5101, a message of informing that group activity has started may be provided to a student device. Upon group activity start, a group member list is opened (i.e., 'Group tab' is selected), and student devices corresponding to group members are connected to a device corresponding to a group leader. When a 'Screen share' button 10 is selected by a group leader device of a group, a contents display region of a group leader device may be shared with a device of each group member. If it is not a screen share mode, contents may be opened and displayed in a contents region.

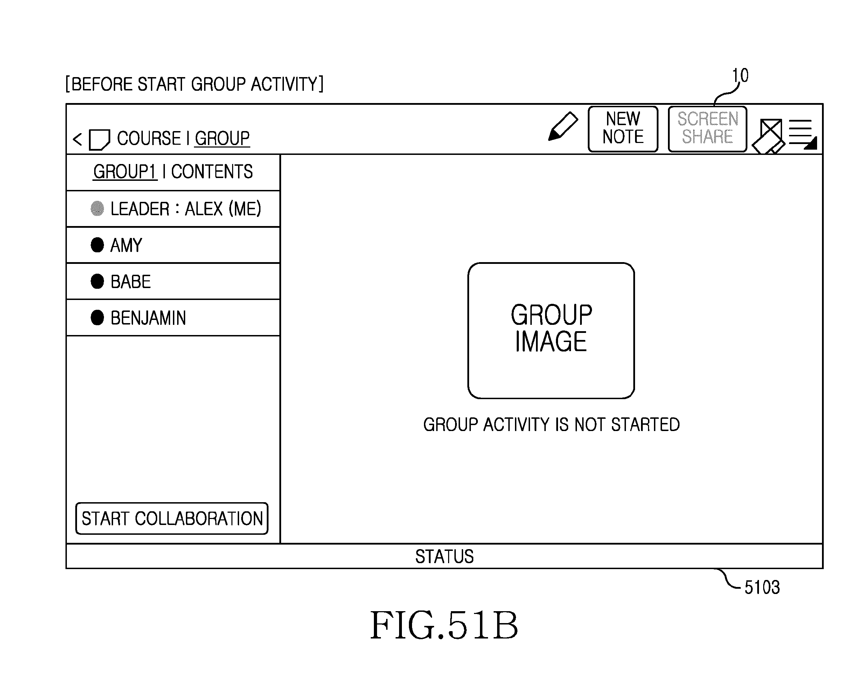

When 'contents tab' is selected in a screen 5101, as in a screen 5102, instead of a group member list, a contents list may be provided. A contents list is an image or video searched and stored during a course by a student, or materials (may be opened through 'Open new file') downloaded previously by a student device and contents transmitted to student devices during a course by the teacher device. Further, an Internet search shortcut button may be provided in a contents list region. FIG. 51B illustrates a student device screen before group activity start. As in a screen 5103, before 'Start group activity' button is selected by a teacher device, basic group member information may be determined in 'Group tab' of a student device, and guide wording that group activity has not yet started may be displayed in a contents display region. In a case of a device of a group leader, 'Screen share button' 10 may be inactivated.

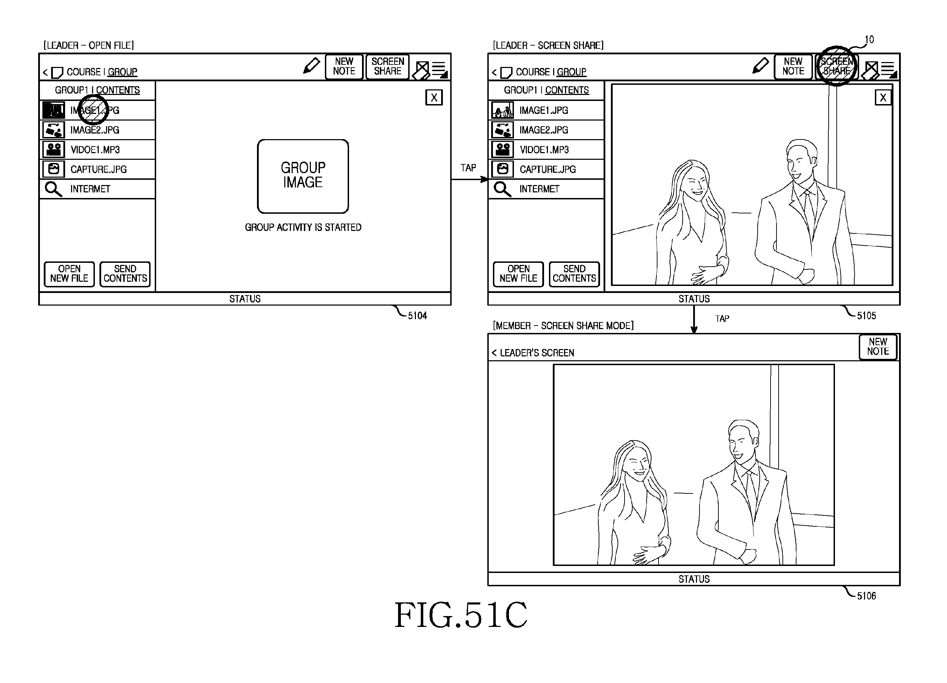

FIG. 51C illustrates screen sharing by a device of a group leader.

For example, upon group activity start, when one of a contents list is selected in 'Group tab/contents tab' (5104), selected contents are opened and displayed in a contents display region (5105). After that, upon 'Screen share' button (10) selection, a contents display region of a group leader deice is shared with group member devices. That is, as in a screen 5106, the contents display region of the group leader device is given the group member devices.

When group members enter a screen share mode, only a group leader device has a writing authority and, during group activity, all group members have a writing authority or a group leader may give authority to one group member.

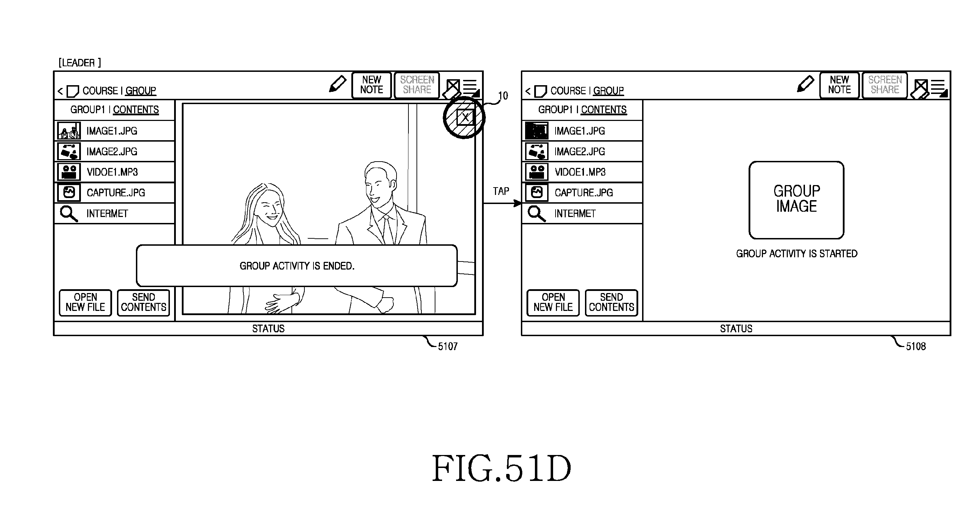

FIG. 51D illustrates a user interface for group activity ending in a student device.

For example, when group activity is ended by a teacher device during group activity, as in a screen 5107, a student device receives a control signal from the teacher device and provides a message of informing that group activity has ended. At this time, when a content close button 10 is selected, contents are closed as in a screen 5108.

Although group activity is ended by the teacher device, a student's screen itself remains as it is and, in a case of a group leader, a 'Screen share' button 20 is inactivated. If it is screen sharing with group member devices, a screen share status may be released. Also, in a case where there is a file being working, it may be automatically stored at an ending time point. A link connected centering a group leader device may be again connected centering a teacher device.

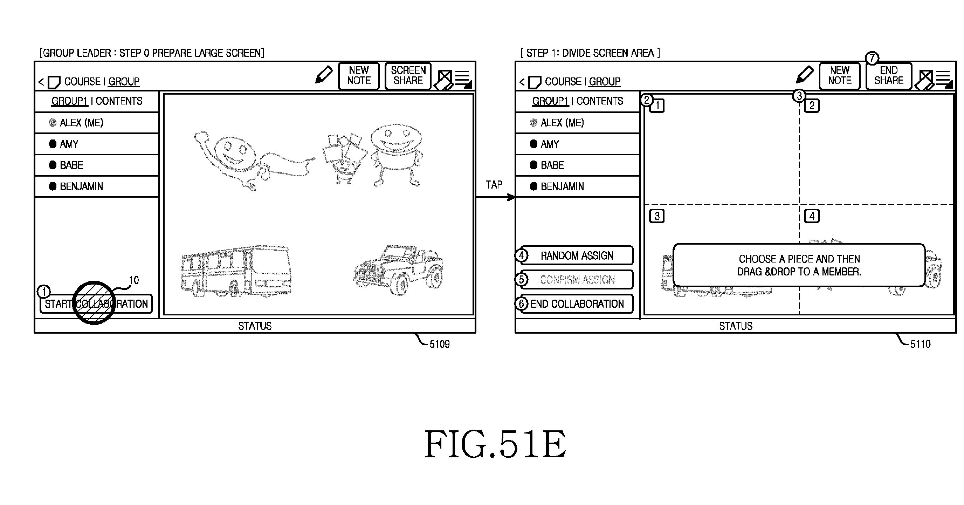

FIGS. 51E to 51O illustrate user interfaces splitting one image and performing collaboration.

For example, a screen 5107 of FIG. 51E is a case where specific contents are opened in a group leader device. At this time, when a 'start collaboration' button 1 is selected in the group leader device, as in a screen 5110, a contents region is split at N/1. In another exemplary embodiment, in a state where a blank screen is split, a rough sketch may be made and assigned.

'Start collaboration' 1 is a button for collaboration activity start and, when 'Start collaboration' 1 is selected, collaboration is split as many as the number of members and is given on a screen. 'Number of image' 2 is a number assigned to each split image, and 'Divided lines' 3 represents a split line, and 'Random assign' 4 is for randomly assigning each split image to members, that is, split collaboration is randomly assigned to respective members, and 'Confirm assign' 5 is activated if collaboration is primarily assigned to all members and, upon selection, an assigned image is forwarded to each member. 'End collaboration' 6 is given at the time of 'Start collaboration' 1 selection and is a button ending collaboration activity. Upon 'Start collaboration' (1) selection, a screen of a group leader device is shared with group member devices and accordingly, 'Start share' is changed into 'End share' 7.

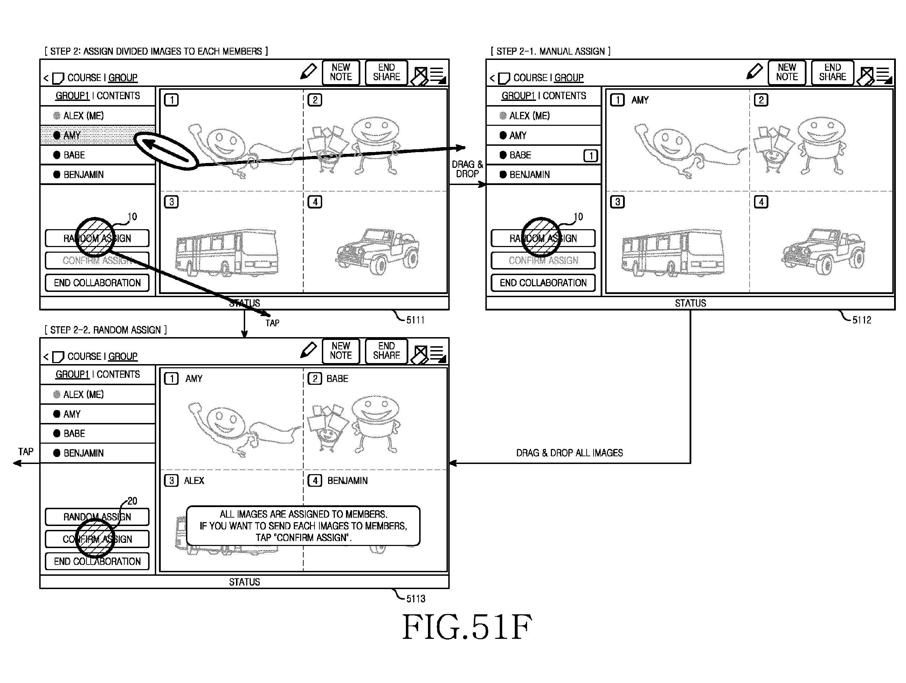

FIG. 51F illustrates a user interface assigning split collaboration to respective members.

For example, as in a screen 5111, when a contents region is split at N/1, when a specific image among split images is dragged and dropped to a specific member among a group member list, for example, when an image 1 is dragged and dropped to Amy, as in a screen 5112, the image 1 is assigned to Amy. In another exemplary embodiment, on contrary, by dragging a specific member and dropping to a split specific image, collaboration may be assigned.

In another exemplary embodiment, when 'Random assign' button is selected in a screen 5111, as in a screen 5113, each image may be randomly assigned to members. For example, image 1 is assigned to Amy, and image 2 is assigned to Babe, and image 3 is assigned to Alex, and image 4 is assigned to Benjamin. If all collaboration is assigned, a 'confirm assign' button 20 is activated.

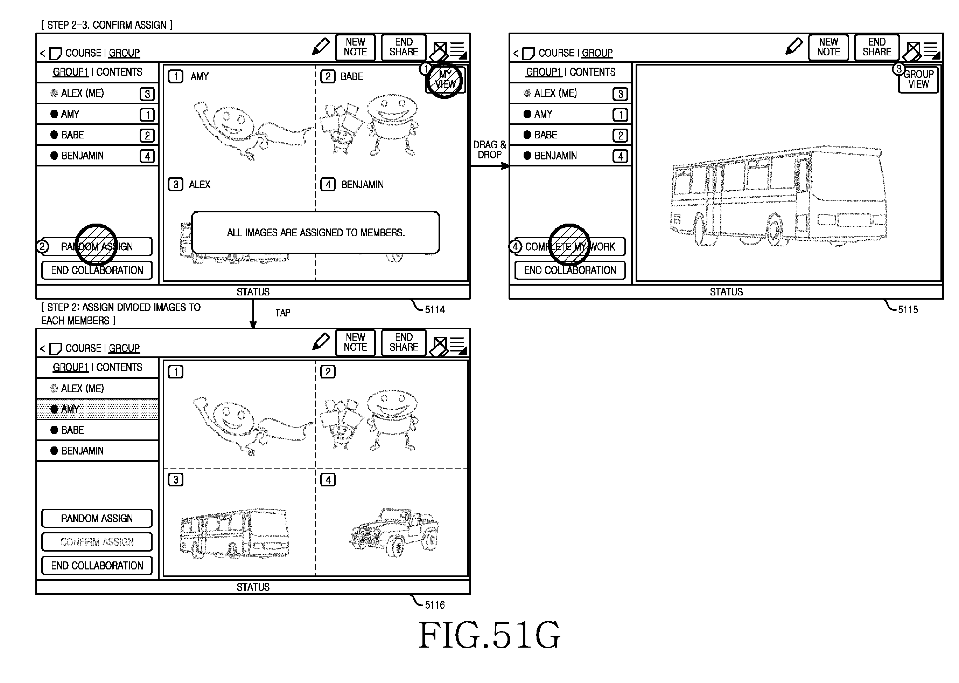

Next, when all collaboration is assigned and 'confirm assign' button 20 is selected, as in a screen 5114 of FIG. 51G, collaboration (e.g., split image) may be transmitted to respective members. At this time, if 'assign' is finished, a group leader device and each group member device may start a personal work with an assigned image. If an image is assigned to a group leader device, a 'My view' (1)/ 'Group view' (3) toggle button and a 'Reassign images' button 1 may be created. Here, when a 'My view' button 1 is selected, as in a screen 5115, a work (e.g., image) assigned to a group leader device itself is provided. At this time, the 'My view' (1) button is changed into 'Group view' (3) and, upon 'Group view' button (3) selection, it again returns to the screen 5114.

When the 'Reassign images' button (1) is selected, as in a screen 5116, it proceeds to a previous step capable of assigning collaboration to group members.

Meanwhile, in the screen 5115, if a self work is completed, a group leader and each group member device may select 'Complete may work' (4).

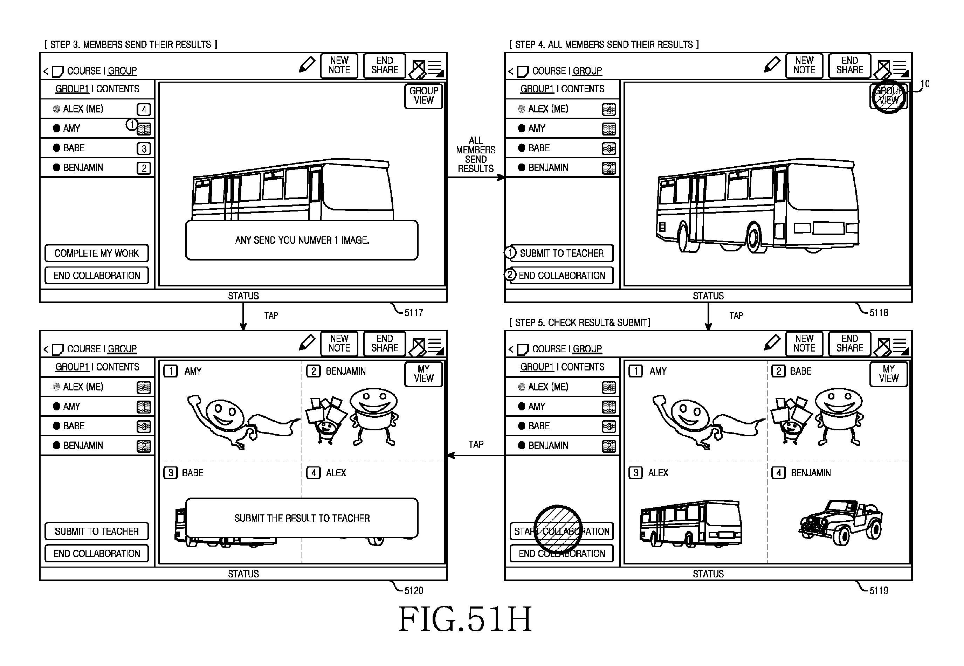

When any one of group member devices completes a work and 'Complete my work' button (4) is selected, as in a screen 5117 of FIG. 51H, a status of a submitting member within a group member list is changed. For example, after Amy completes a work, if pressing the 'Complete my work' button (4), it is changed into a submission status (1). At this time, a screen of a group leader may maintain a status being in self work, or work content submitted by a group member may be displayed.

Next, if works of all group members are completed, as in a screen 5118, statuses of group members are changed into a submission status. At this time, in all group member submission statuses, 'Submit to teacher' 1 for collecting content worked by all group members and submitting to a teacher device and 'End collaboration' 2 for ending corresponding collaboration may be provided.

Meanwhile, when 'Group view' button 10 is selected in a screen 5118, as in a screen 5119, a completed split collaboration is gathered and given in one screen.

Here, in a group leader device, after a result is determined, when a 'Submit to teacher' button 1 is selected, as in a screen 5121, a procedure of transmitting a group activity result to a teacher device is performed.

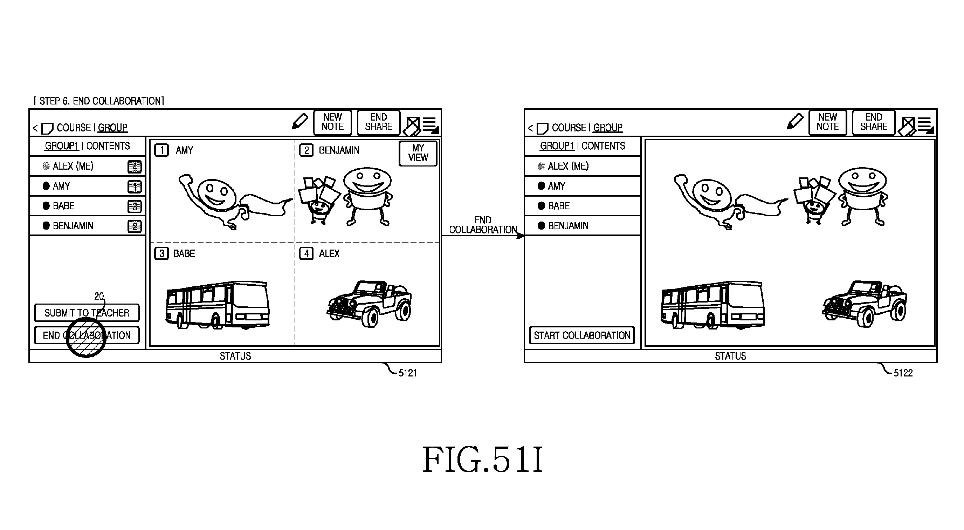

Meanwhile, when works of all group members are completed and split collaboration is gathered and given in one screen as in a screen 5121 of FIG. 51I, when 'End collaboration' 2 is selected, as in a screen 5122, it may switch to a collaboration previous status. At this time, in a screen, the last viewed collaboration result is displayed and its result may be automatically stored.

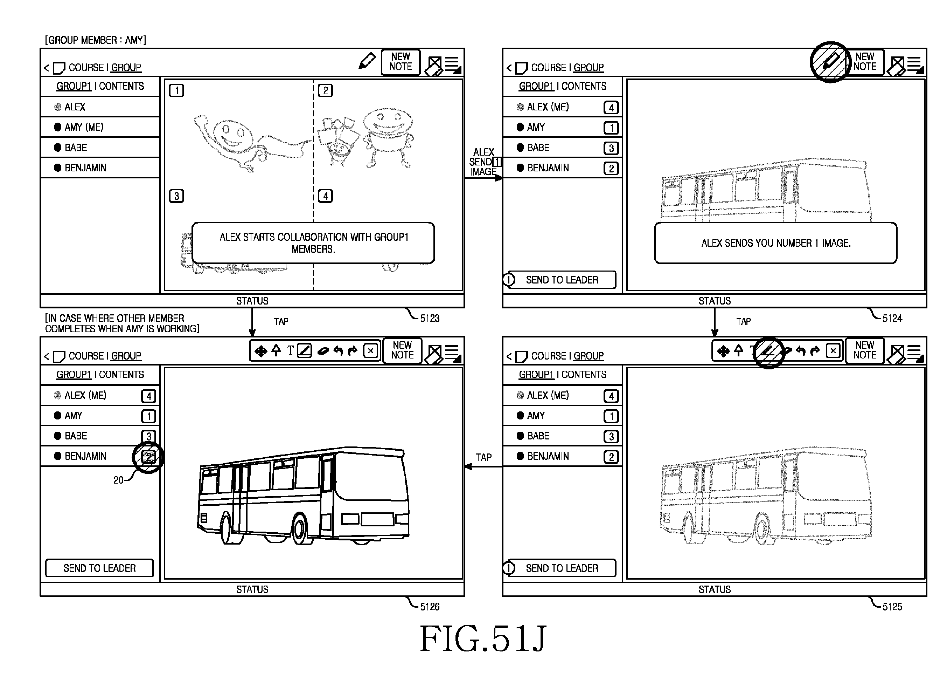

FIGS. 51D to 51I are user interfaces performing collaboration in a group leader device, and FIGS. 51J to 51K are user interfaces performing collaboration in a group member device.

For example, upon collaboration start, as in a screen 5123 of FIG. 51J, each group member device may share a screen of a group leader. After that, when split collaboration (e.g., split image) is assigned by the group leader device, as in a screen 5124, an image assigned to itself by the group leader deice is provided. At this time, a 'Send to leader' button 1 for transmitting to a group leader at the time of work completion may be created.

After that, as in a screen 5125, a toolbar (e.g., note toolbar) for work is selected and, after a corresponding tool is selected, as in a screen 5126, it may proceed to a work by using the selected tool.

At this time, when other group member device (e.g., Benjamin) completes a work and submits to a group leader device, it is changed into a completion status (20). At this time, the group member device may determine work completion content (e.g., a completed image) of other group member device.

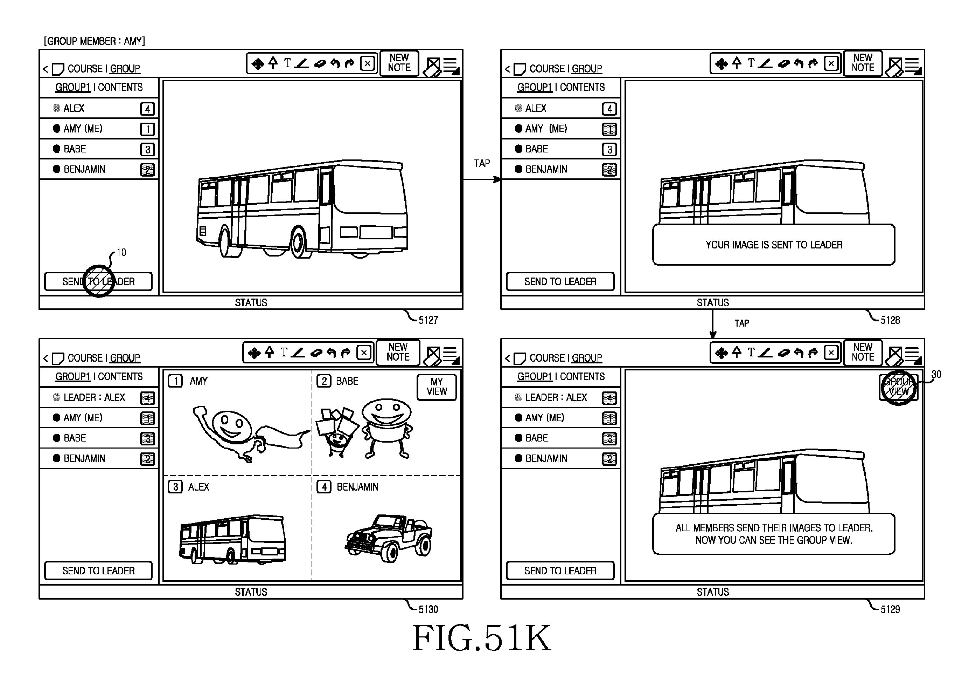

Next, as in a screen 5127 of FIG. 51K, if an assigned work is completed, a group member device may submit completed work content (e.g., a completed image) to a group leader device. That is, the assigned work is completed and a 'Send to leader' button 10 is selected, as in a screen 5128, a procedure is performed in which completed work content is submitted to a group leader device.

After that, after completed collaboration is transmitted to the group leader device in all group member devices, as in a screen 5129, all members become a submission status and, if all collaboration content are gathered in the group leader device, a 'Group view' button 30 is created.

At this time, when the 'Group view' button 30 is selected, even in a group member device, as in a screen 5130, all collaboration result determination collected in the group leader device is possible.

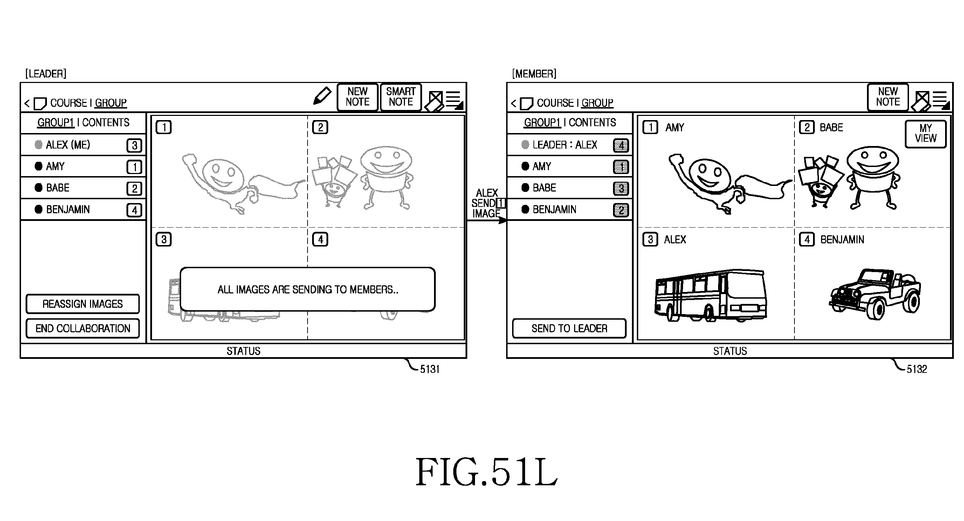

FIG. 51L describes an operation of 'Group view/My view' dependent on a group leader device and a group member device.

A screen 5131 is a case in which a corresponding split work (e.g., split image) is assigned to each group member device in a group leader device, and a screen 5132 is a case in which, after the whole collaboration content is gather to a group leader device, the whole collaboration result gathered to the group leader device is harmonized in the group member device.

If collaboration is assigned to not only self but also the group member device in the group leader device, a 'Group view' button is created and, upon 'My view' selection, an image assigned to self is viewed and, upon 'Group view' selection, the whole image is viewed. At this time, a screen may be shared to members. In a 'Group view' status of when only some members submit an image, a position region of a submitting member may be viewed as a completed image, and a position region of a non-submitting member may be viewed as an initial image or blank.

In the group member device, when all members submit assignments, 'Group view/My view' is created and, in a 'My view' status, an image assigned to self is viewed and, it is possible to submit an assignment and again correct and transmit to the group leader device. In the 'Group view' status, the whole image may be viewed. That is, a screen of the group leader device is shared.

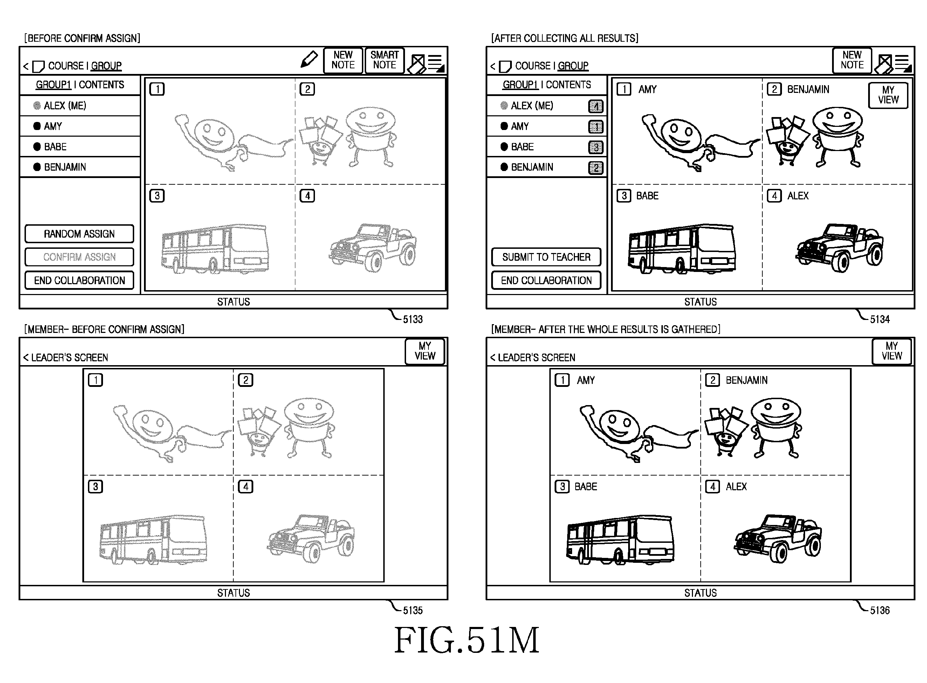

FIG. 51M is a user interface for a screen share mode upon collaboration.

A screen 5133 of FIG. 51M is a screen of a group leader device before collaboration is assigned in the group leader device, and a screen 5134 is a screen of the group leader device after the whole result is gathered in the group leader device.

A screen 5135 is a screen of a group member device in which a screen of a group leader device is shared before collaboration is assigned in the group leader deice, and a screen 5136 is a screen of a group member device in which a screen of a group leader device is shared after the whole result is gathered in the group leader device.

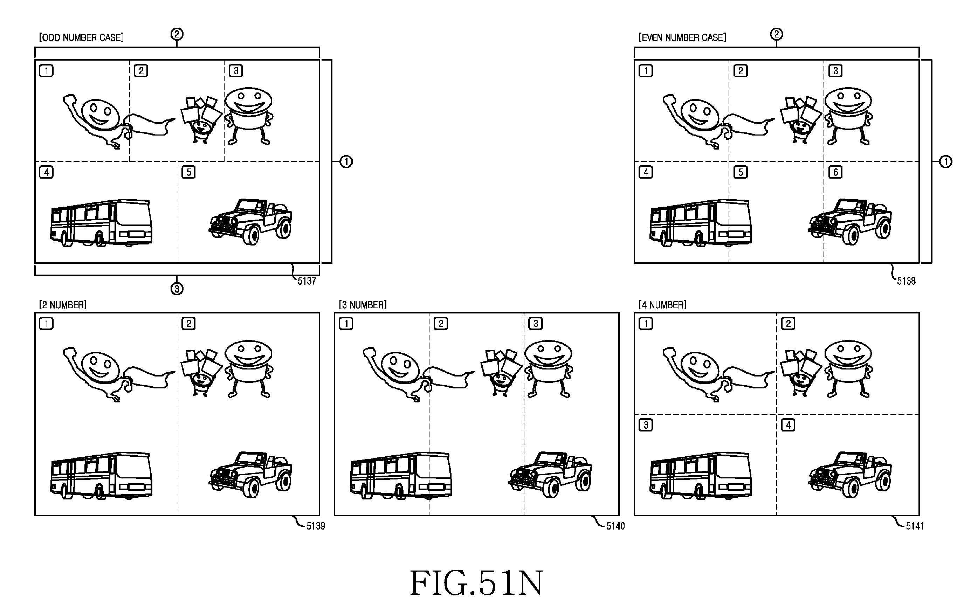

FIGS. 51N to 51O illustrate an example of screen split for collaboration.

A screen 5137 of FIG. 51N represents an example of screen split when a member is odd number. At this time, a portrait width 1 is bisected, and is split in its rate into three at an upper end and two at a lower end. An upper landscape width 2 may be divided equally into (N+1)/2 and a lower landscape width 3 may be divided equally into (N-1)/2. 'N' is a group member number.

A screen 5138 of FIG. 51N illustrates an example of screen split when a member is even number. At this time, a portrait width may be divided equally into two parts, and a landscape width 2 may be divided equally into N/2. 'N' is a group member number.

A screen 5139 represents screen split for two members, and a screen 5140 represents screen split for three members, and a screen 5141 represents screen split for four members.

A screen 5139 represents screen split for two members, and a screen 5140 represents screen split for three members, and a screen 5141 represents screen split for four members.

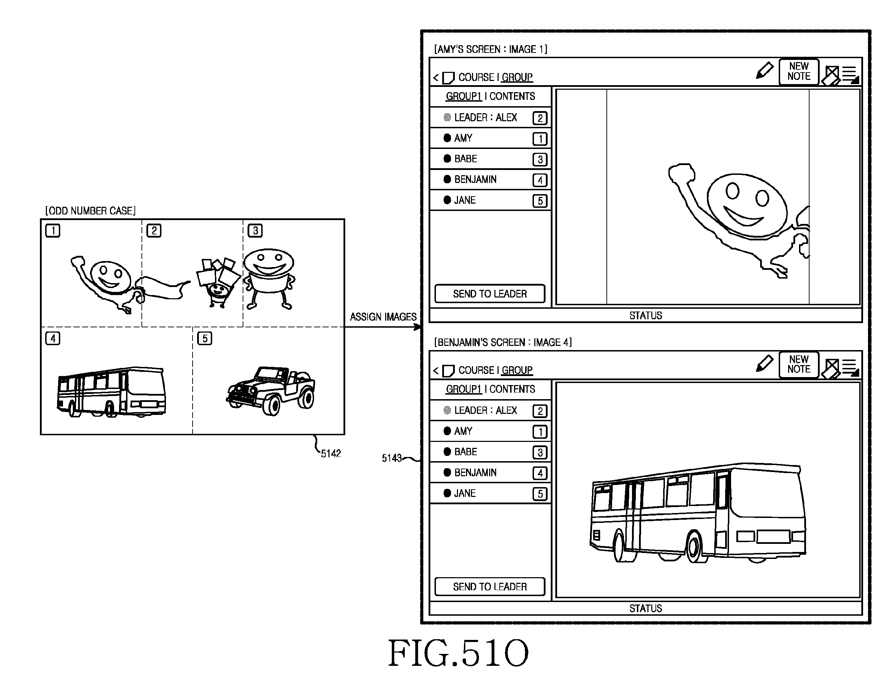

FIG. 51O illustrates an example showing split image according to a resolution.

For example, when a screen is divided and assigned to each group member device of five odd members as in a screen 5142, when a split image resolution is different, a margin may be generated in each group member device screen as in a screen 5143.

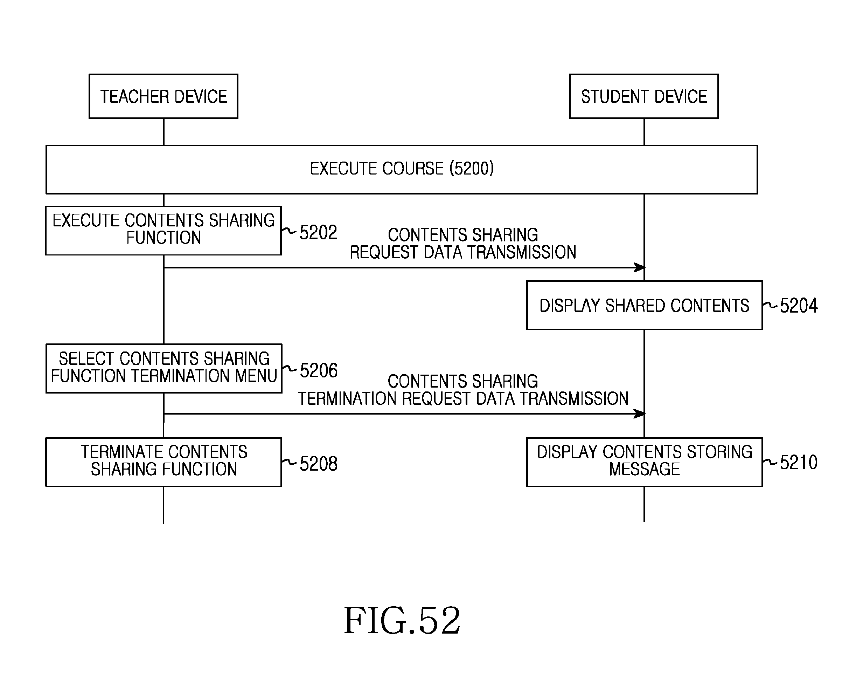

FIG. 52 is a flowchart illustrating an operation for contents sharing according to an exemplary embodiment of the present invention.

Referring to FIG. 52, in step 5200, a teacher device selects a 'course' menu in a launcher screen and, in step 5202, the teacher device selects a 'screen share' sub menu.

At this time, if a control signal corresponding to the 'screen share' sub menu is transmitted to a student device, the student device displays contents output to a screen of the teacher device, on its own screen (step 5204). That is, upon 'Screen share' selection, a contents region of the teacher device is shared, and a teacher may use all functions, and a student may enter 'Screen share mode' and use only some functions.

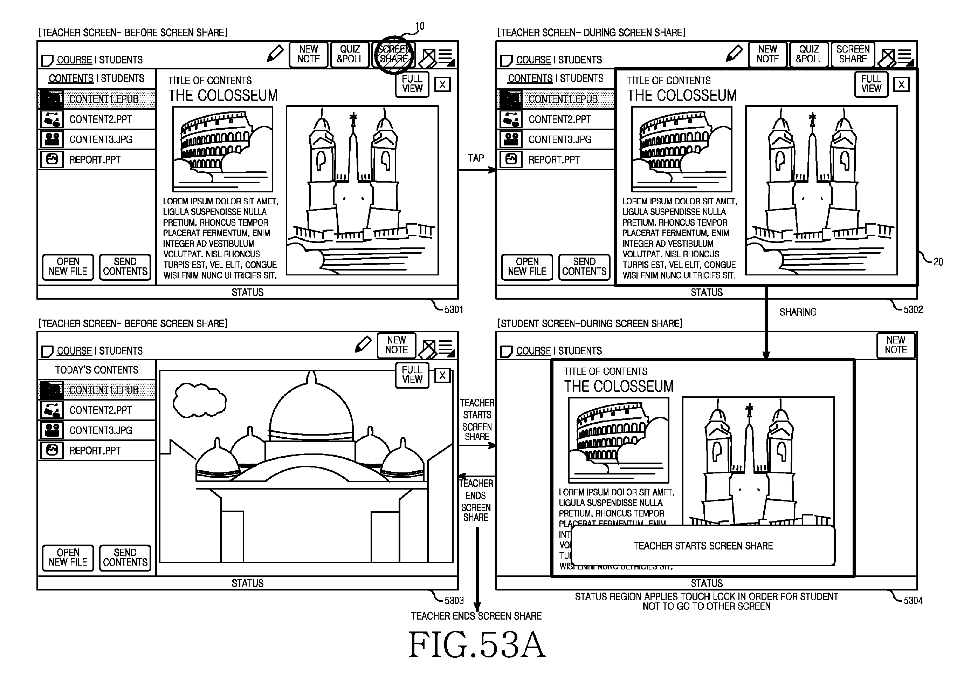

Next, when the teacher device ends a 'screen share' function in step 5206, in step 5208, the teacher device ends a contents sharing function. Meanwhile, if a control signal corresponding to 'screen share' function ending is transmitted to the student device, in step 5210, the student device displays a contents save message. A detailed user interface for screen sharing is described with reference to FIGS. 53A to 53E below.

FIGS. 53A to 53E are diagrams illustrating user interfaces for screen sharing according to an exemplary embodiment of the present invention.

A screen 5301 of FIG. 53A is a screen of a teacher device in which specific contents before screen sharing in the teacher device is displayed in a display region. At this time, when a 'Screen share' button 10 is selected, as in a screen 5302, a contents display region 20 of the teacher device is shared with the student device. Upon screen sharing, the teacher device may use all functions.

A screen 5303 of FIG. 53A is a screen of a student device in which specific contents before screen sharing in a teacher device are displayed in a display region. At this time, when a 'Screen share' button 10 is selected in the teacher device, as in a screen 5304, the student device may display a contents display region 20 of the teacher device.

When it enters 'Screen share mode' by the teacher device, the student deice may use only some functions. In other words, some functions may be limited such that the student device does not switch to other screen, and only minimum functions may be used.

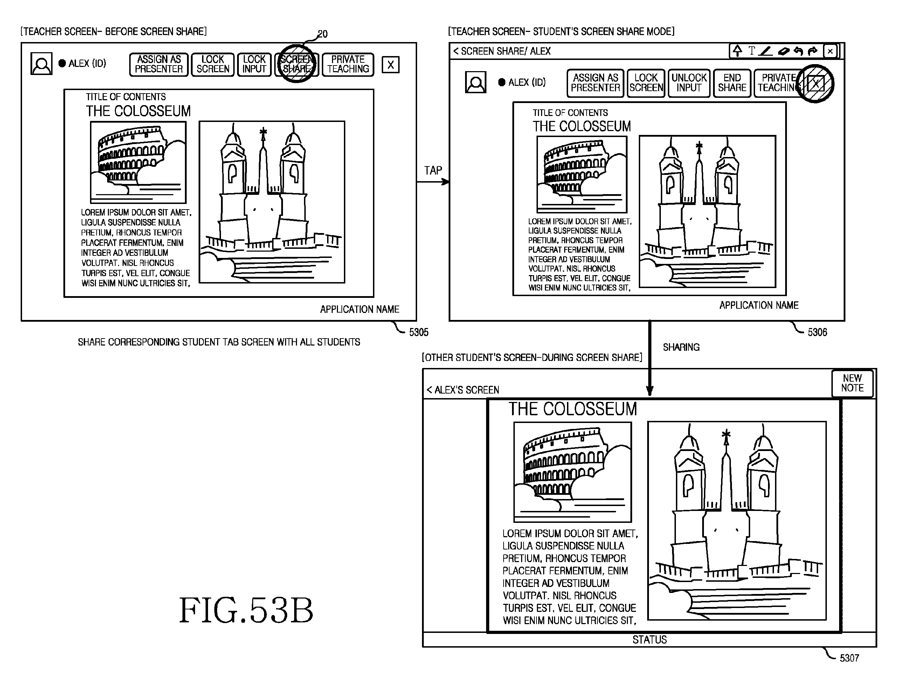

In another exemplary embodiment, a screen 5305 of FIG. 53B is a screen of a teacher device displaying information and screen of a specific student before screen sharing in the teacher deice. At this time, when 'Screen share' button 30 is selected, as in a screen 5306, a screen 40 of a specific student device is shared with other student devices by a teacher device. A screen 5307 is other student device screen in which a screen 40 of a specific student device is shared with other student device and is displayed.

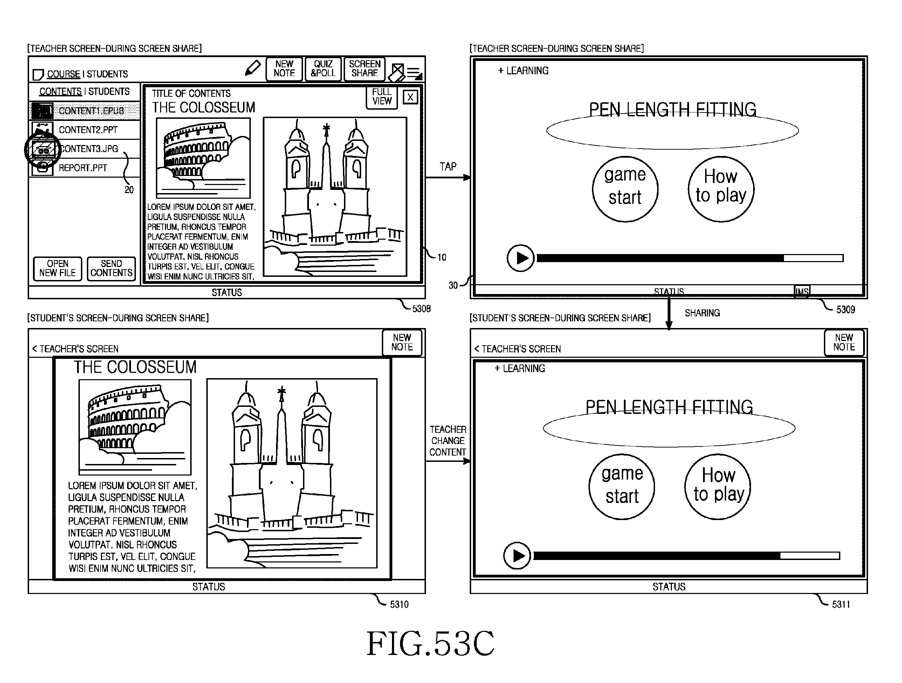

A screen 5308 of FIG. 53C is a screen of a teacher device in which contents display region 10 of a teacher device is sharing with student devices. At this time, when contents (e.g., content3.jpg) 20 opened through an external application are selected, a teacher device screen may display (30) contents through an external application as in a screen 5309.

A screen 5311 of FIG. 53C is a screen of a student device in which a contents display region 10 of a teacher device is sharing. At this time, when contents (e.g., content3.jpg) 20 opened through an external application are selected, as in a screen 5311, a student device shares the whole screen 30 of contents opened through an external application, not a contents display region 10 of a teacher device.

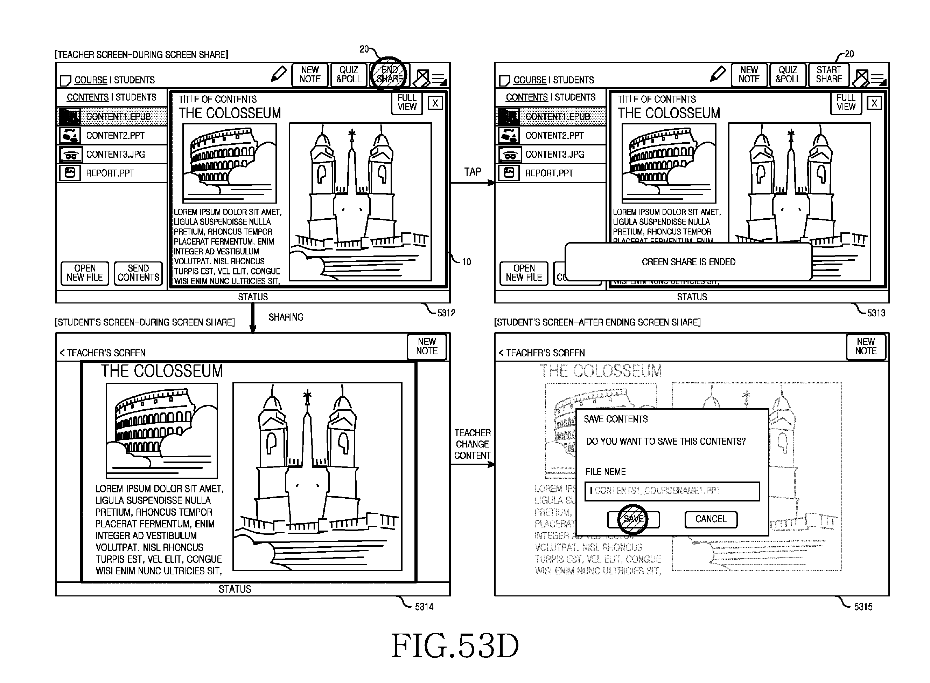

A screen 5312 of FIG. 53D is a screen of a teacher device in which a contents display region 10 of a teacher device is sharing with student devices. At this time, when an 'End share' button 20 is selected in the teacher device, as in a screen 5313, the teacher device ends screen sharing and the 'End share' button 20 is toggled to a 'Start share' button 30.

A screen 5314 of FIG. 53D is a screen of a student device in which a contents display region 10 of the teacher device is sharing. At this time, when an 'End share' button 20 is selected by the teacher device, as in a screen 5315, a popup inquiring whether to save data shared with the student device may be provided. For example, shared contents and note content may be saved together.

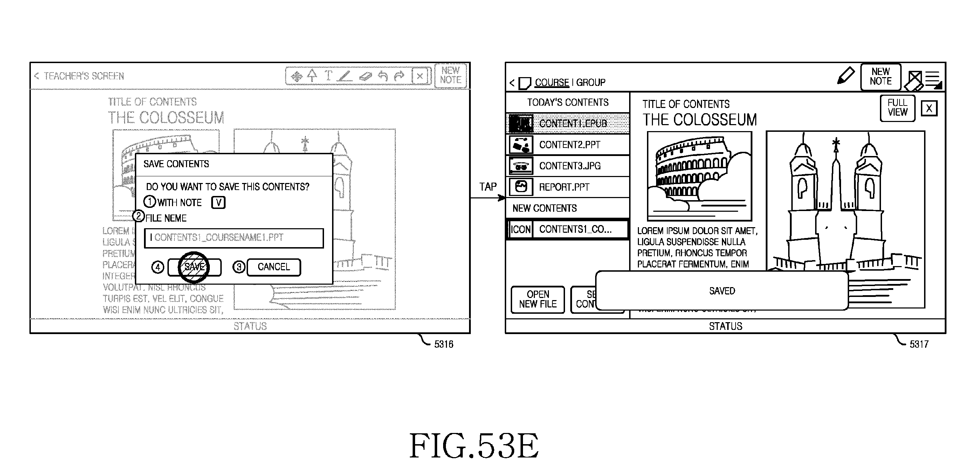

A screen 5316 of FIG. 53E is a screen of a student device in which a contents display region of a teacher device is sharing and also handwriting of the teacher device is sharing. At this time, when screen sharing is ended by the teacher device, a popup window checking whether to include and save even note content (With note) 1 and inquiring a file name 2 to be saved may be provided. Here, when 'save' 3 is selected, shared contents and note content are saved in a specific folder and also, may be saved as a 'New contents' list 10 at a 'Today's contents' lower position. Shared contents and handwriting may be saved as one image layer.

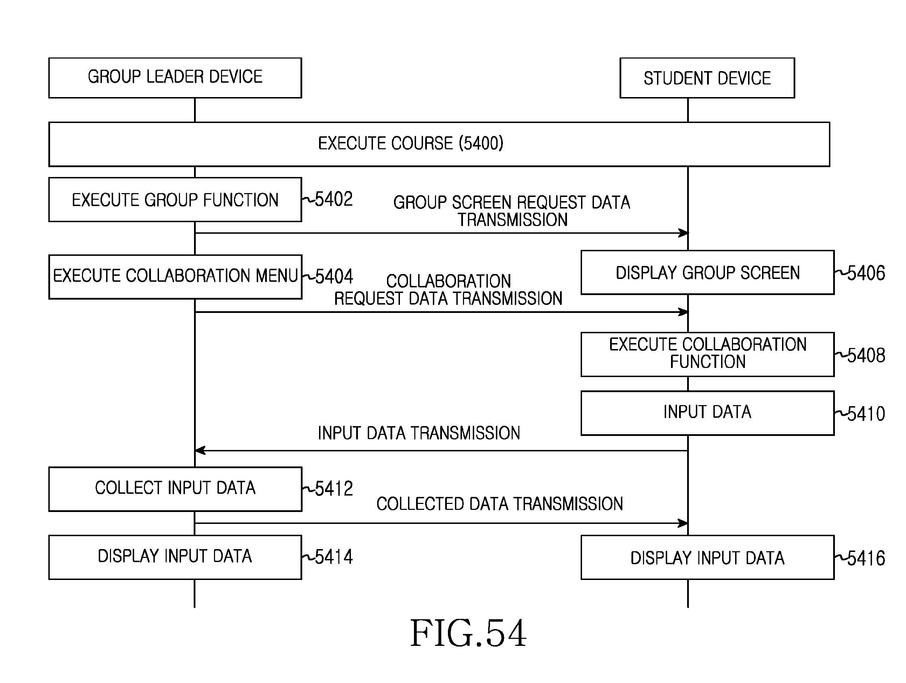

FIG. 54 is a flowchart illustrating an operation for collaboration according to an exemplary embodiment of the present invention.

Referring to FIG. 54, in step 5400, a teacher device selects a 'students' menu in a launcher screen and, in step 5402, the teacher device selects a 'Group' sub menu.

A control signal corresponding to group activity start is forwarded to a student device and, in step 5406, displays a group screen.

Meanwhile, when performing collaboration menu execution in step 5404, a control signal corresponding to the collaboration menu execution is transmitted to the student device, and the student device performs a collaboration function in step 5408.

Next, in step 5410, the student device performs data input and transmits input data to the teacher device.

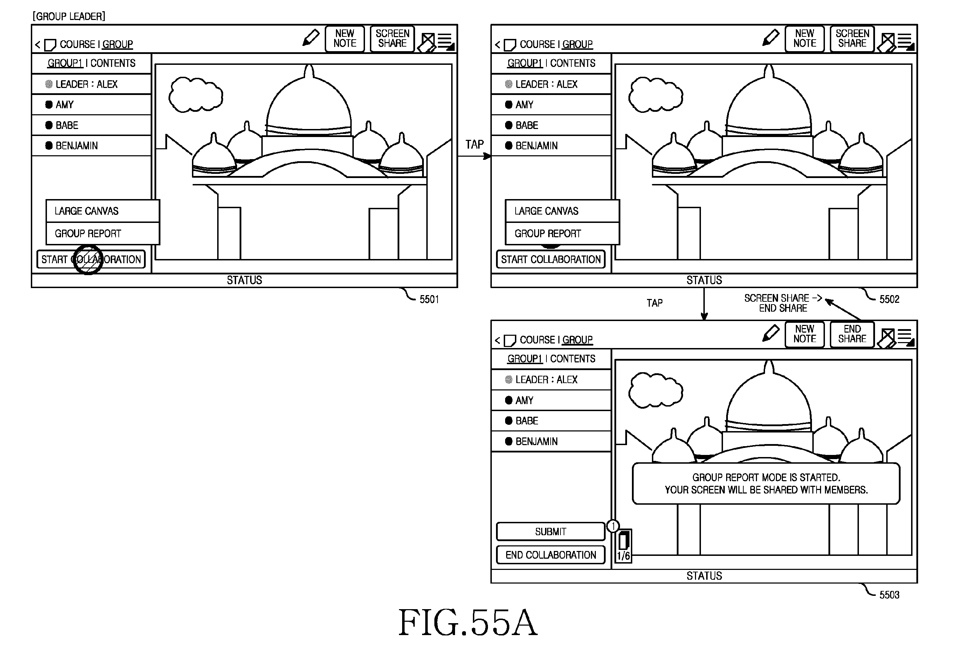

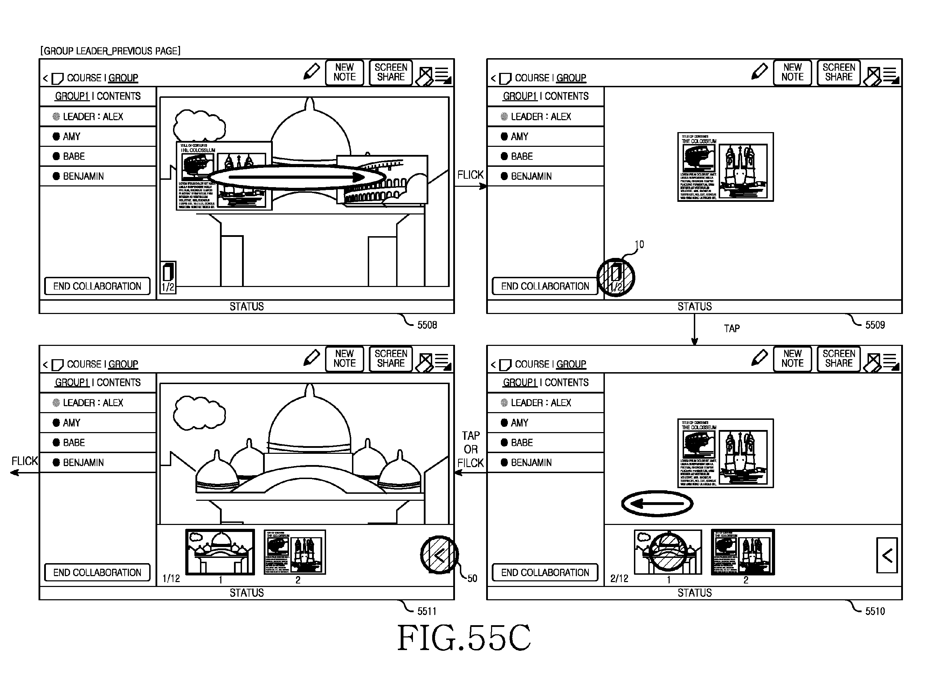

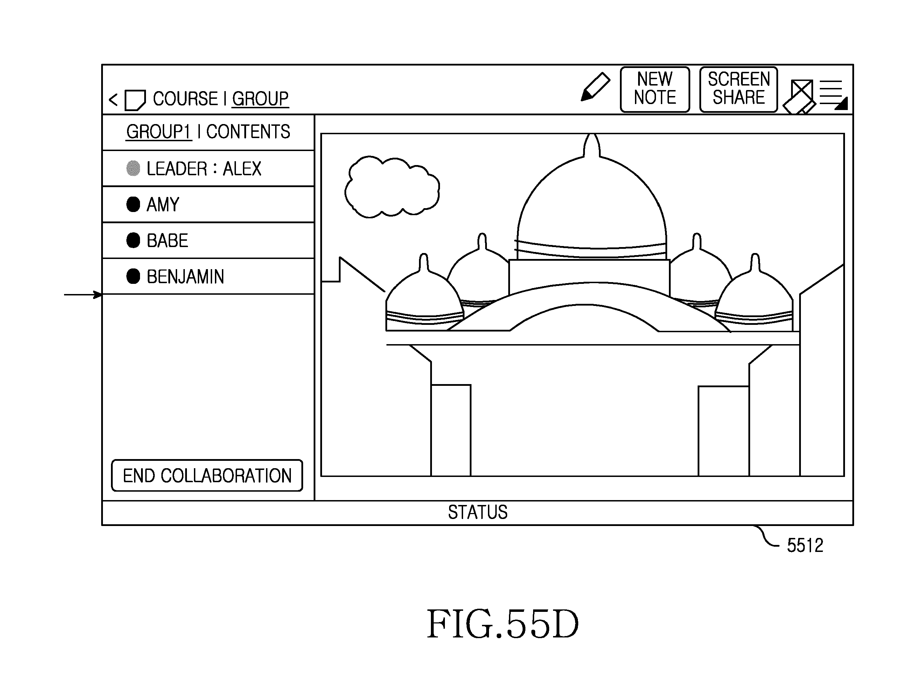

After that, in step 5412, the teacher device collects input data and displays data input to its own screen. Meanwhile, in step 5416, the teacher device transmits collected data to the student device and displays input data even in the student device. A detailed user interface for collaboration is described with reference to FIG. 55A to 55J below.

FIGS. 55A to 55F are diagrams illustrating user interfaces for collaboration according to an exemplary embodiment of the present invention.

A screen 5501 of FIG. 55A illustrates a screen of a group leader device when group activity starts by a teacher device. At this time, upon 'Start collaboration' start, as in a screen 5502, a collaboration kind (e.g., 'Large canvas', 'Group report') list is provided and, upon 'Group report' selection, as in a screen 5503, a 'Group report' start procedure is performed. At this time, in 'Group report mode', a screen of a group leader device is used as a group report screen, and the screen of the group leader device is automatically shared with a group member device. Each group member has all presentation authority, and may send contents to the group leader device. Further, a page setting button 1 may be provided.

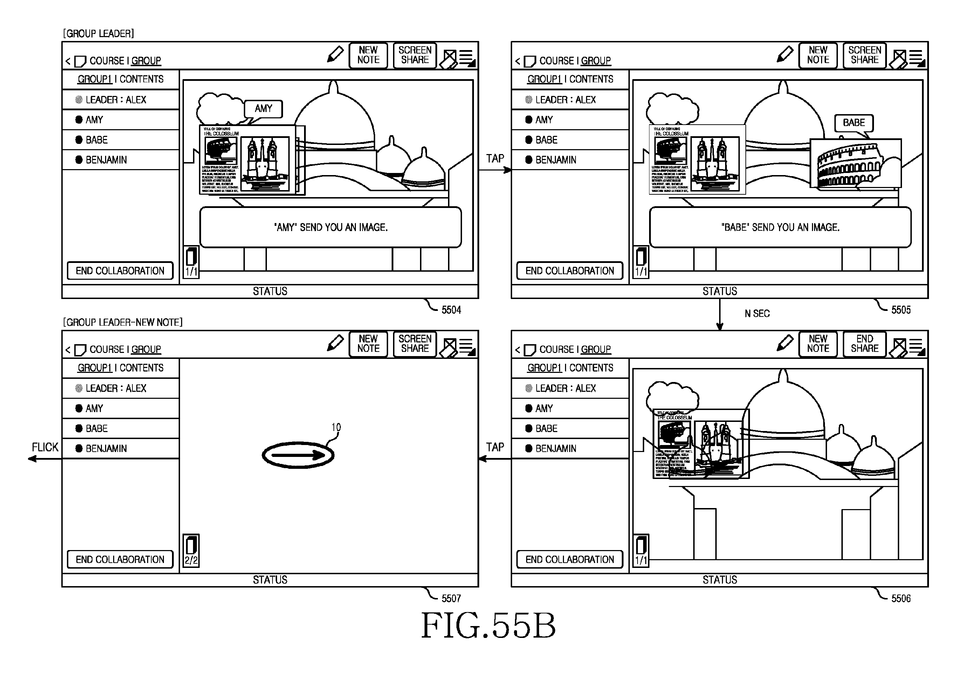

For example, a screen 5504 of FIG. 55B is a screen of a group leader device receiving a first image from a first group member (Amy) device, and a screen 5505 is a screen of a group leader device receiving a second image from a second group member (Babe) device.

Next, to make a report by using materials provided by group members, a group leader device may select 'New Note' 10 as in a screen 5506.

When 'New Note' 10 is selected, a new note may be added to an existing screen as in a screen 5507.

When a flick operation of right direction 10 is input, a screen 5508 is provided. A screen 5508 is the same as a screen 5506. That is, a flick operation of right direction 10, which is a gesture returning to a previous screen, is not limited to a flick operation and may return to a previous page by various inputs.

In a screen 5508, a first image received from a first group member (Amy) is dragged and, as in a screen 5509, is dropped and moved to a screen of a new note.

Next, upon button selection 10, a screen of a new note may be set to a page 2 as in a screen 5510. Here, each page information may be provided in a slide form at a lower end of a screen. In the screen 5510, upon flick operation of left direction 30 or touch 20 of a page 1 at a lower slide, it may be moved to the page 1 as in a screen 5511. Here, upon slide close button 50 selection, a slide being in a lower end is closed as in a screen 5511.

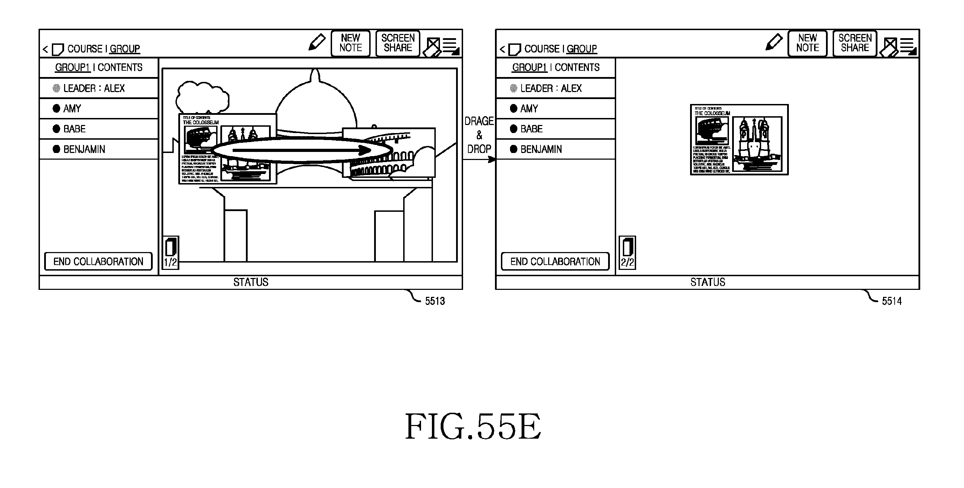

FIG. 55E illustrates a user interface for screen switching in a group report mode.

A screen 5513 of FIG. 55E is a screen of a group leader device receiving report materials (e.g., image) from group member devices, and a screen 5514 is a screen of a group leader device in which report materials sent by the group member device are moved from a first screen to a second screen. That is, when report materials are moved to a next screen, screen switching may be performed through drag and drop.

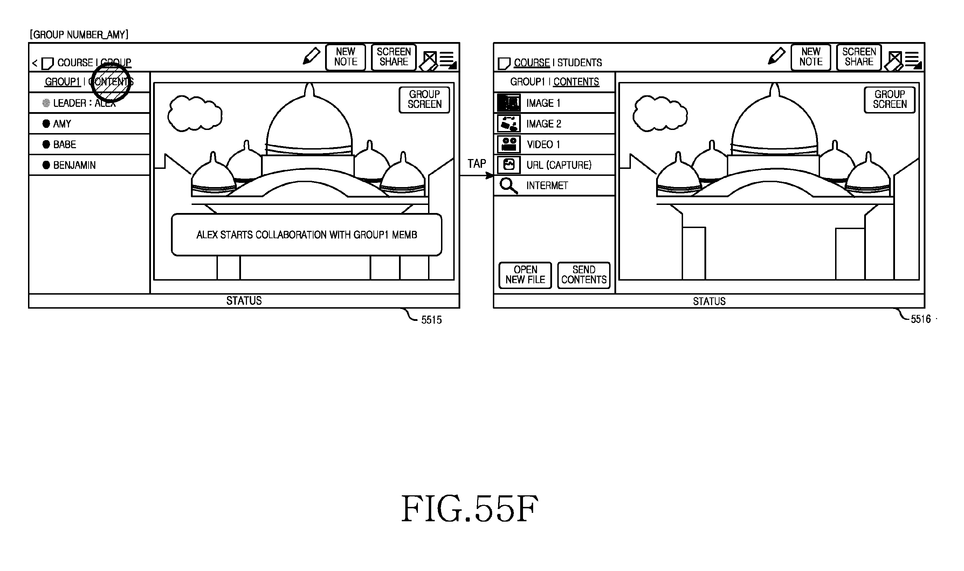

A screen 5515 of FIG. 55F is a screen of a group member device in which a group report mode starts by a group leader device. In the group report mode, a screen of the group leader device is used as a group report screen, and group member devices have each presentation authority, and may transmit contents to the group leader device. For example, contents kind may be an image, a video, a text, handwriting, mini note and the like. 'My screen/Group screen' (toggle) button may be added.

For example, when 'contents tab' is selected to transmit contents in a group member device, as in a screen 5516, contents are displayed in a contents list region of a group member. Here, all or some contents may be selected and transmitted to a group leader device.

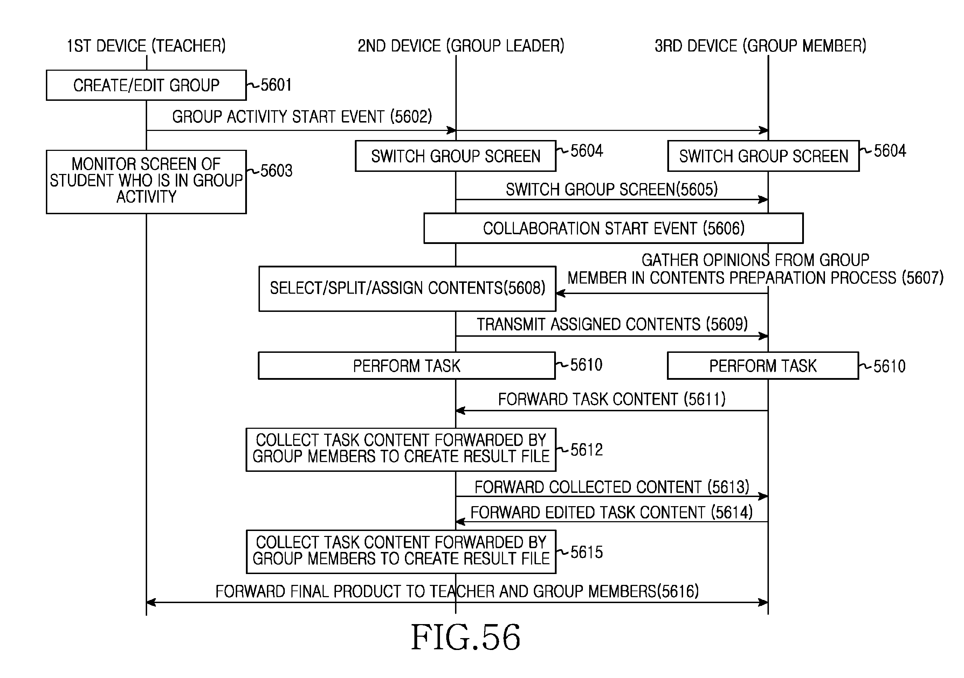

FIG. 56 is a flowchart illustrating a procedure for group activity according to an exemplary embodiment of the present invention.

Referring to FIG. 56, a first device of a teacher (a teacher device) creates a new group containing a plurality of students or, when there is an existing created group, the teacher device edits the group (i.e., adds or deletes a group student) (step 5601). Specifically, the teacher device is arranged to display a suitable graphical user interface as described above for generating or editing a group. FIG. 56 illustrates group creation and group editing.

Next, the teacher device transmits an event instructing a group activity start to student devices of a group leader of the group (a group leader device) and at least one group member (one or more group member devices) (step 5602). FIG. 56 illustrates one group leader device and one group member device, but, according to other embodiments there may be a plurality of group leader devices and a plurality of group member devices.

After that, the teacher device starts screen monitoring for student devices (i.e., the group leader device and the group member device) who are in the group activity (that is, they are in the group). In other words, the teacher device selects a student device from among a plurality of student devices (the at least one group leader device and the at least one group member device) and monitors a screen of the selected student device (step 5603). According to another embodiment, the teacher device may split a screen into a plurality of regions and monitor (that is, display on the teacher device) a plurality of student devices concurrently.

Meanwhile, when receiving an event instructing a group activity start, the group leader device and the group member device switch into a group screen (step 5604). At this time, the student devices transition from a first group unit in which the student devices are connected to the teacher device to a second group unit in which each group member device is connected to the group leader device. A screen of the group leader device provides an authority capable of instructing a collaboration start (upon input from the student acting as group leader) together with a list of group member devices (which include the group leader device itself - the group leader device is also a group member device). The screen of the group leader device is shared and displayed on a screen of the group member device (step 5605). However, the screen of the group member device does not provide the authority capable of instructing the collaboration start. The group activity start refers to FIGS. 38A to 38M.

According to another implementation, all students within a group or at least two or more students within the group may have an authority capable of instructing a collaboration start.

Next, the group leader device transmits an event for starting collaboration to the group member device (step 5606). At this time, the group member devices may transmit the opinions of the associated students in a process in which the group leader prepares contents for collaboration (step 5607). Opinion collection may be conducted through message or memo transmission or a notice board.

Meanwhile, the group leader device collects opinions from the group member devices, selects and splits contents for collaboration, and assigns the split contents (work items) to the group member devices (step 5608). The contents for collaboration may be an image or an assignment and the like.

Next, the group leader device transmits the contents assigned to the group member, to the group member device (step 5609).

After that, the group leader device and the group member device provide a display for the associated students to perform a corresponding work item using the assigned contents (step 5610). For example, when the assigned contents are part of the whole image, the group leader device and the group member device perform work for or upon the image. If the assigned contents are part of the whole assignment, the group leader device and the group member device are arranged to allow the associated students to perform work corresponding to the assignment.

Next, the group member device forwards work content for the assigned contents to the group leader device (step 5611). According to other embodiments, the group member device may forward the work-conducted contents to the group leader device.

After that, the group leader device collects the group leader's own work content and group members' work content and creates a result file or product (step 5612), and forwards the result file or product to the third device (step 5613). This result file or product may also be sent to the teacher device.

Next, when there are correction matters for the result file or product, the group member device forwards the corrected work content to the group leader device (step 5614). At this time, the correction matters may be correction matters for its own assigned contents or may be correction matters for contents assigned to other group members. According to implementation, the corrected work content may be forwarded from the group member device to the group leader device, but a comment on the correction matters is forwarded from the group member device to the group leader device and corrected in the group leader device.

After that, the group leader device collects the work content forwarded from the group member device and updates the result file (step 5615).

Next, the group leader device forwards the final product or the final result file to at least one or more of the teacher device and the group member device.

After that, the procedure of the present exemplary embodiment is terminated.

An exemplary embodiment of group activity refers to FIGS. 51A to 51O and FIGS. 55A to 55F.

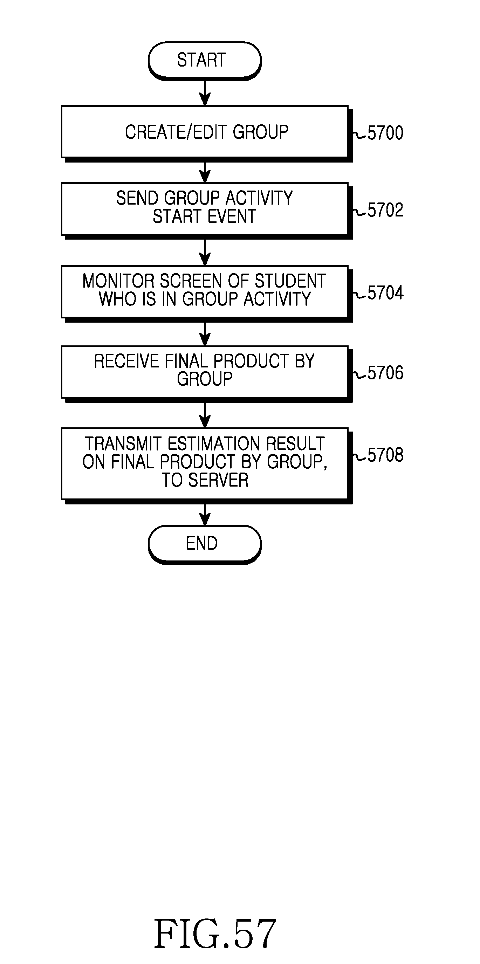

FIG. 57 is a flowchart illustrating an operation of a teacher device for group activity according to an exemplary embodiment of the present invention.

Referring to FIG. 57, in step 5700, a teacher device constructs a plurality of students as a new group or, when there is an existing created group, the teacher device edits the group (i.e., adds or deletes a group student).

Next, in step 5702, the teacher device transmits an event instructing a group activity start to a group leader device of the group and group member devices thereof.

After that, in step 5704, the teacher device starts screen monitoring for student devices (i.e., the group leader device of the group and the group member devices thereof) who are in group activity. In other words, the teacher device selects one student device among a plurality of student devices and monitors a screen of the selected student device. According to another embodiment, the teacher device may split a screen into a plurality of regions and monitor a plurality of student devices concurrently.

Next, in step 5706, the teacher device receives a final product or a final result file from a group leader device.

After that, in step 5708, the teacher device transmits an estimation result on the final product submitted by the group leader, to a server.

Next, the teacher device terminates the procedure of the present exemplary embodiment.

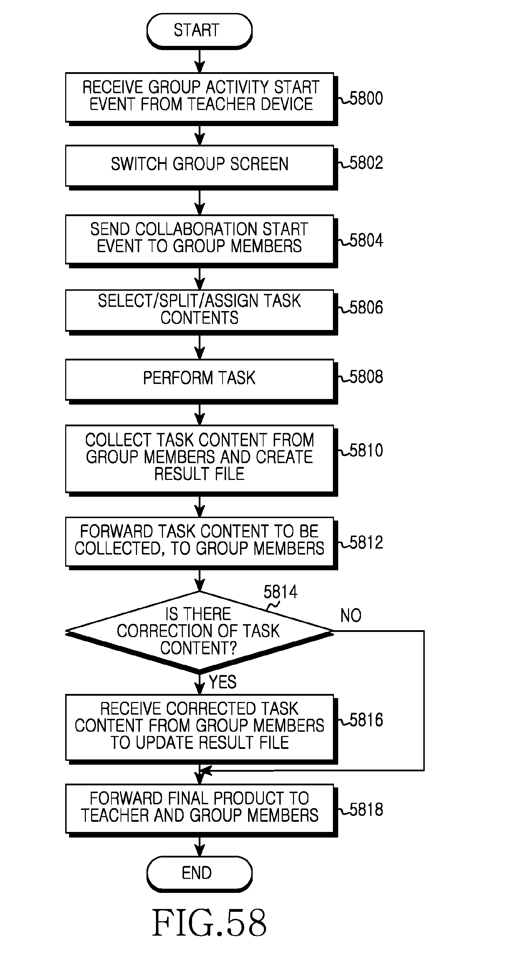

FIG. 58 is a flowchart illustrating an operation of a group leader device for group activity according to an exemplary embodiment of the present invention.

Referring to FIG. 58, in step 5800, a group leader device receives an event instructing a group activity start from a teacher device.

Next, in step 5802, when receiving an event instructing a group activity start, the group leader device switches into a group screen. At this time, the student devices transition from a first group unit in which they are connected to the teacher device to a second group unit in which the group member devices are connected to the group leader device. A screen of the group leader device provides an authority capable of instructing a collaboration start together with a list of group members including itself, and the screen of the group leader device is shared and displayed on a screen of the group member device. However, the screen of the group member device does not provide the authority capable of instructing the collaboration start. The group activity start refers to FIGS. 38A to 38M. According to another implementation, all students within a group or at least two or more students within the group may have an authority capable of instructing a collaboration start.

Next, in step 5804, the group leader device transmits an event for starting collaboration to the group member device. At this time, the group members may transmit their own opinions in a process in which the group leader prepares contents for collaboration. Opinion collection may be conducted through message or memo transmission or a notice board.

After that, in step 5806, the group leader device collects opinions of the group members, selects and splits contents for collaboration, and assigns the split contents to the group members. The contents for collaboration may be an image or an assignment and the like.

Next, in step 5808, the group leader device performs a corresponding work by using the assigned contents. For example, when the assigned contents are part of the whole image, the group leader device performs work for the image. If the assigned contents are part of the whole assignment, the group leader device performs a work corresponding to the assignment.

After that, in step 5810, the group leader device collects its own work content and group members' work contents and creates a result file or product and, in step 5812, forwards the result file or product to the group member device.

Next, when there are correction matters for the result file or product in step 5814, in step 5816, the group member device receives the corrected work content from a group member device and updates a result file.

After that, in step 5818, the group leader device forwards the final product or the final result file to at least one or more of the teacher device and the group member device.

Next, the group leader device terminates the procedure of the present exemplary embodiment.

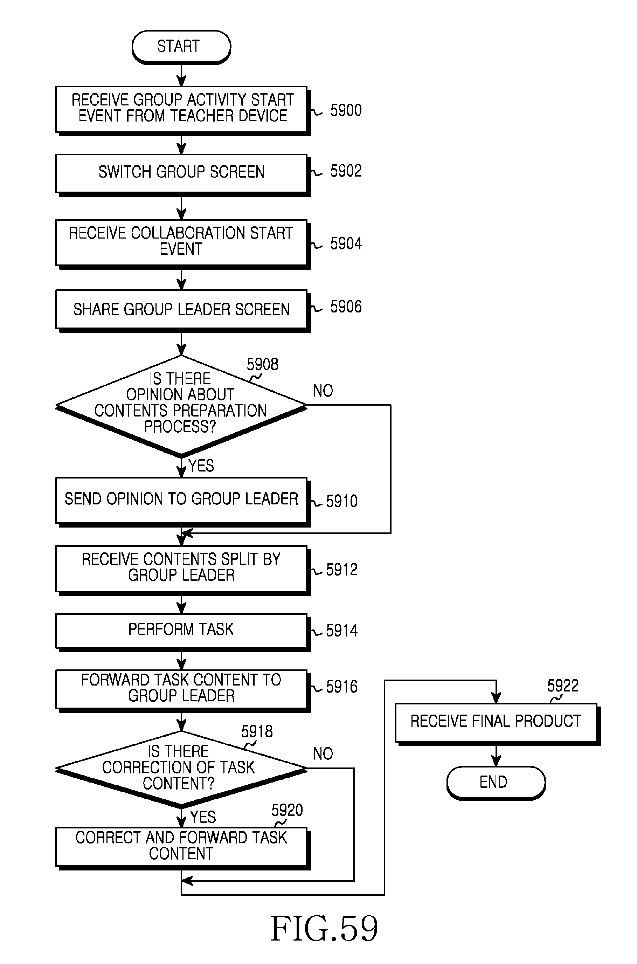

FIG. 59 is a flowchart illustrating an operation of a group member device for group activity according to an exemplary embodiment of the present invention.

Referring to FIG. 59, in step 5900, a group member device receives an event instructing a group activity start from a teacher device.

Next, in step 5902, when receiving an event instructing a group activity start, the group member device switches into a group screen. At this time, the student devices transition from a first group unit in which they are connected to the teacher device to a second group unit in which the group member devices are connected to the group leader device. A screen of the group leader device provides an authority capable of instructing a collaboration start together with a list of group members including itself, and the screen of the group leader device is shared and displayed on a screen of the group member device. However, the screen of the group member device does not provide the authority capable of instructing the collaboration start. The group activity start refers to FIGS. 38A to 38M.

According to another implementation, all students within a group or at least two or more students within the group may have an authority capable of instructing a collaboration start.

Next, in step 5904, the group member device receives an event for starting collaboration from the group leader device.

After that, in step 5906, the group member device shares the screen of the group leader device.

Next, when the group member device has its own opinion in a process in which a group leader prepares contents for collaboration in step 5908, the group member device proceeds to step 5910 and transmits opinions to a group leader device. Opinion collection may be conducted through message or memo transmission or a notice board.

After that, in step 5912, the group member device receives the contents for collaboration from the group leader device. The contents for collaboration may be an image or an assignment and the like.

Next, in step 5914, the group member device performs a corresponding work by using the assigned contents. For example, when the assigned contents are part of the whole image, the group member device performs work for the image. If the assigned contents are part of the whole assignment, the group member device performs a work corresponding to the assignment.

After that, in step 5916, the group member device forwards work content of the assigned contents to the group leader device.

Next, when there are correction matters on the result file or product in step 5918, the group member device proceeds to step 5920 and corrects the work content and forwards to the group leader device.

After that, the group member device receives the final product or the final result file from the group leader device.

Next, the group member device terminates the procedure of the present exemplary embodiment.

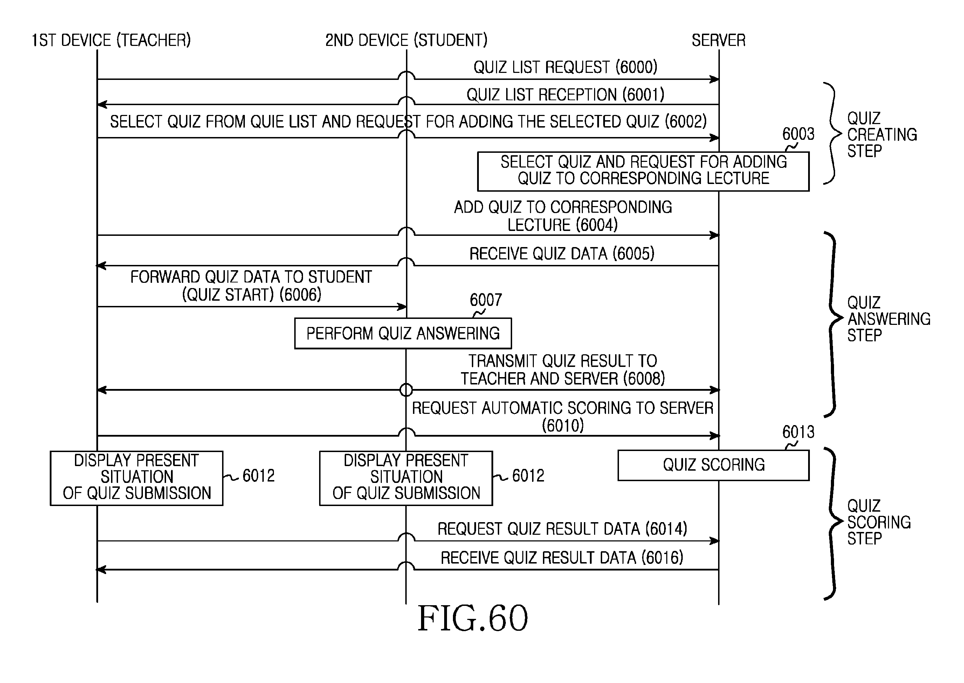

FIG. 60 is a flowchart illustrating a procedure for processing a quiz question according to an exemplary embodiment of the present invention.

Referring to FIG. 60, a teacher device sends a request for a quiz list to a server (step 6000), and receives a quiz list from the server (step 6002).

Next, the teacher device selects a quiz from the quiz list and sends a request for adding the selected quiz to a corresponding lecture, to the server (step 6002).

After that, the server adds the quiz selected by the first device, to the corresponding lecture (step 6003).

Next, the teacher device sends a request for quiz data of the corresponding lecture to the server at a corresponding lecture time (step 6004). At this time, the server provides the quiz data to the teacher device in response to the quiz data request of the corresponding lecture received from the teacher device (step 6005).

After that, the teacher device forwards the quiz data provided from the server, to a student device (or a plurality of student devices) who are attending the lecture (step 6006).

Next, the student device solves a quiz with reference to the quiz data received from the teacher device (step 6007).

After that, the student device transmits a quiz solving result to at least one of the teacher device and the server (step 6008).

Next, the teacher device sends a request for automatic scoring for the quiz solved by the student, to the server (step 6010). Then, the server performs quiz scoring according to the automatic scoring request of the teacher device (step 6013). According to another implementation, a teacher device may directly score a student's quiz result and provide the scoring result to the server together with correction content from the teacher.

After that, the teacher device and the student device display the present condition of quiz submission (step 6012). For example, the teacher device and the student device display whether students are submitting quiz data, or whether it is before estimation after quiz data submission, or whether it is estimation completion.

Next, the student device sends a request for the quiz result data of the student to the server (step 6014). Then, the server provides the quiz result data to the teacher device (step 6016).

After that, the procedure of the present exemplary embodiment is terminated.

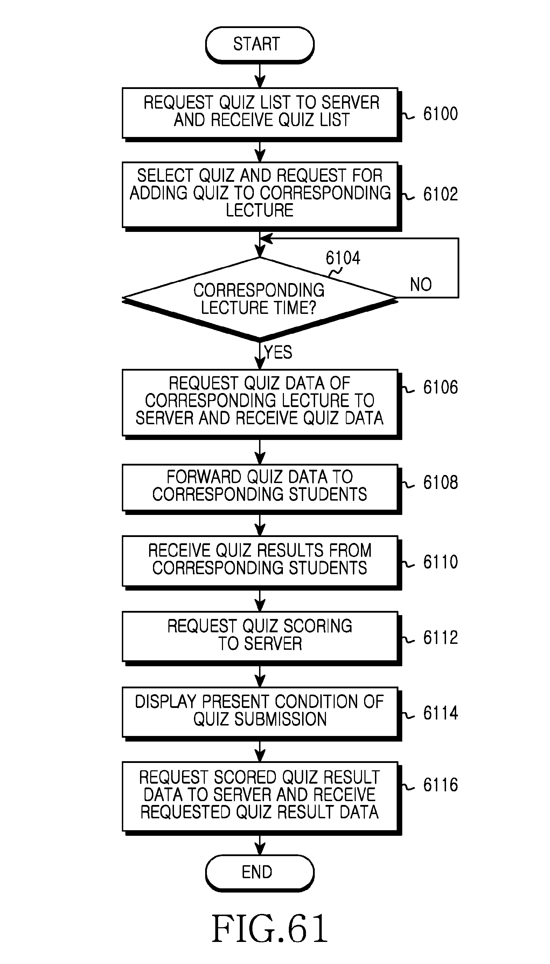

FIG. 61 is a flowchart illustrating an operation of a teacher device for processing a quiz question according to an exemplary embodiment of the present invention.

Referring to FIG. 61, in step 6100, a teacher device sends a request for a quiz list to a server and receives the quiz list from the server.

Next, in step 6102, the teacher device selects a quiz from the quiz list and sends a request for adding the selected quiz to a corresponding lecture, to the server.

After that, when it is a corresponding lecture time in step 6104, the teacher device proceeds to step 6106 and sends a request for quiz data of the corresponding lecture to the server and receives the quiz data from the server.

Next, in step 6108, the teacher device forwards the quiz data provided from the server, to a student device.

After that, in step 6110, the teacher device receives a quiz solving result from the student device.

Next, in step 6112, the teacher device sends a request for automatic scoring for the quiz solved by the student, to the server. According to another implementation, a teacher may device directly score a quiz result of the student and provide the scoring result to the server.

Next, in step 6114, the teacher device displays the present condition of quiz submission. For example, the teacher device displays whether students are submitting quiz data, or whether it is before estimation after quiz data submission, or whether it is estimation completion.

After that, in step 6116, the teacher device sends a request for a student's quiz result data to the server and receives the quiz result data from the server.

Next, the teacher device terminates the procedure of the present exemplary embodiment.

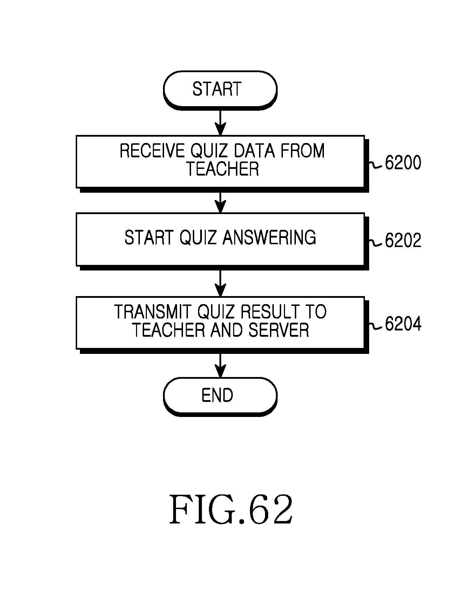

FIG. 62 is a flowchart illustrating an operation of a student device for processing a quiz question according to an exemplary embodiment of the present invention.

Referring to FIG. 62, in step 6200, a student device receives quiz data from a teacher device.

Next, in step 6202, the student solves a quiz with reference to the received quiz data.

After that, in step 6204, the student device transmits a quiz solving result to at least one of the teacher device and a server.

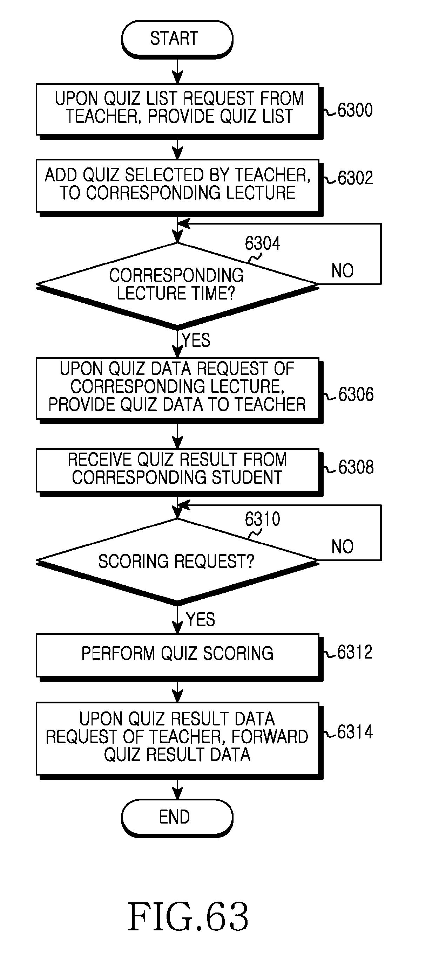

FIG. 63 is a flowchart illustrating an operation of a server for processing a quiz question according to an exemplary embodiment of the present invention.

Referring to FIG. 63, in step 6300, when receiving a quiz list request from a teacher device, the server provides a quiz list to the teacher device.

Next, in step 6302, the server adds a quiz selected by a teacher to a corresponding lecture according to a request of the teacher device.

After that, in step 6304, the server determines if it is a corresponding lecture time and, in step 6306, the server provides quiz data to the teacher device in response to the quiz data request of the corresponding lecture received from the teacher.

Next, in step 6308, the server receives a quiz solving result from the student device.

After that, when receiving a request for automatic scoring for the quiz solved by a student from the teacher device in step 6310, the server proceeds to step 6312 and performs quiz scoring according to the automatic scoring request. In another implementation, a teacher device may directly score a student's quiz result and provide the scoring result to the server.

Next, in step 6314, upon receipt of a quiz result data request from the teacher device, the server forwards quiz result data to the teacher device.

After that, the server terminates the procedure of the present exemplary embodiment.

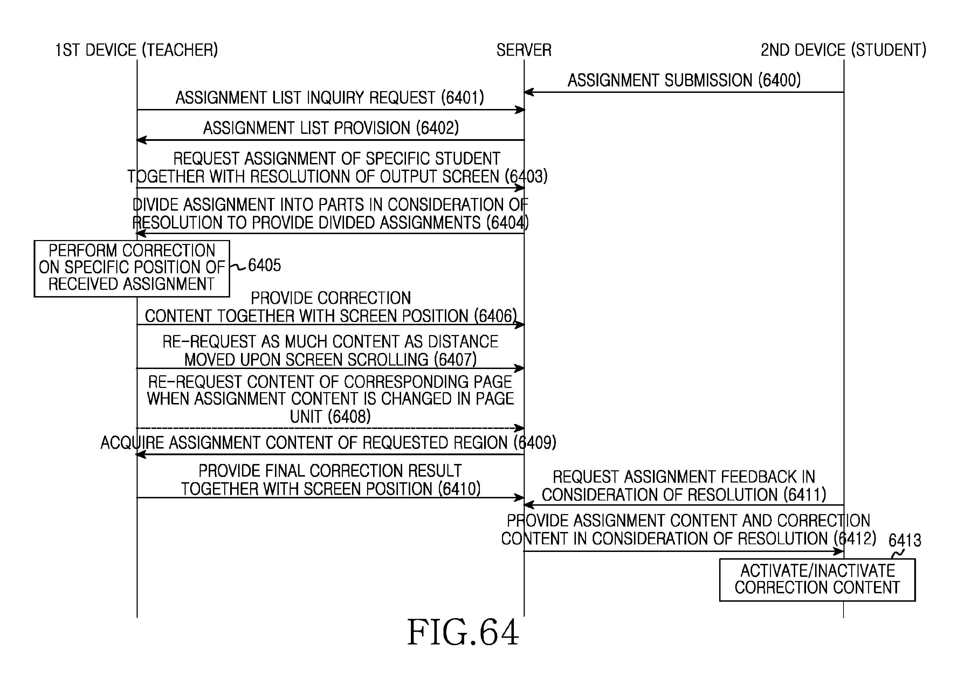

FIG. 64 is a flowchart illustrating a procedure for assignment processing according to an exemplary embodiment of the present invention.

Referring to FIG. 64, a student device submits a corresponding assignment to a server (step 6400).

Meanwhile, a teacher device sends a request for an assignment submission list to the server (step 6401), and receives an assignment submission list from the server (step 6402).

After that, the teacher device sends a request for an assignment of a specific student together with an assignment output screen resolution from the assignment submission list, to the server (step 6403). By providing the screen resolution, the teacher device may accurately determine a position of correction made by a teacher on an assignment. That is, because assignment content output to the screen may be different depending on the screen resolution, the teacher device provides a resolution of a screen to be output. According to implementation, if the teacher device does not provide separate resolution information to the server, the server provides an assignment of a student on a basis of a default resolution.

Next, the server divides an assignment into parts in consideration of the resolution of the first device and provides the divided assignment (step 6404). That is, the server provides only assignment content displayable on the screen according to the resolution of the first device.

After that, the teacher device adds correction content input through a user finger or a stylus pen, to a specific position of the transmitted assignment (step 6405).

Next, the teacher device provides correction content and a position in which the correction content is displayed on the screen, to the server (step 6406).

Meanwhile, when the teacher device searches assignment content through screen scrolling, the teacher device re-requests as much content as a distance moving through scroll (step 6407). In another implementation, when the teacher device changes the assignment content in a page unit instead of screen scrolling, the teacher device transmits the assignment content corresponding to the corresponding page, to the server (step 6408).

In implementation, when the teacher device receives the whole assignment content from the server and displays the assignment content, the teacher device may not re-request the assignment content to the server.

Next, the teacher device receives the re-requested assignment content from the server (step 6409), and provides final correction content and a position in which the correction content is displayed on the screen, to the server (step 6410). The server adds correction content to an assignment for management in consideration of the position of the correction content.

According to another implementation, assignment content and correction content displayed on the assignment content may be managed as one image file.

Meanwhile, after assignment submission, the student device sends a request for assignment feedback in consideration of a resolution of the student device (step 6411). In other words, the student device requests assignment feedback together with its own resolution information.

Next, the server provides an assignment including correction content to the student device, in consideration of the resolution of the student device (step 6412). According to implementation, when the student device does not provide its own resolution information to the server, the server provides the assignment including the correction content, to the second device according to a default resolution.

According to a further implementation, the student device may receive an assignment including correction content from the server irrespective of a resolution and then, display the correction content and the assignment content according to its own resolution.

After that, the student device activates or inactivates the correction content displayed on the assignment (step 6413).

Next, the student device terminates the procedure of the present exemplary embodiment.

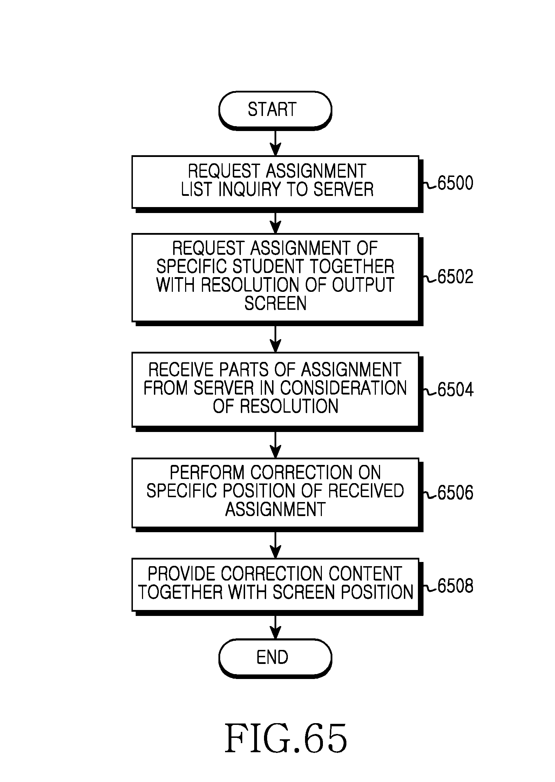

FIG. 65 is a flowchart illustrating an operation of a teacher device for assignment processing according to an exemplary embodiment of the present invention.

Referring to FIG. 65, in step 6500, a teacher device sends a request for an assignment submission list to a server, and receives the assignment submission list from the server.

After that, in step 6502, the teacher device sends a request for an assignment of a specific student together with an assignment output screen resolution from the assignment submission list, to the server. The teacher device provides the screen resolution, whereby the server may accurately determine a position of correction made by a teacher on an assignment. That is, because assignment content output to a screen may be different depending on the screen resolution, the teacher device provides a resolution of a screen to be output. According to implementation, if the teacher device does not provide separate resolution information to the server, the server provides an assignment of a student on a basis of a default resolution.

Next, in step 6504, the teacher device partially receives an assignment from the server in consideration of its own resolution. That is, the server provides only assignment content displayable on the screen according to the resolution of the teacher device.

After that, in step 6506, the teacher device adds correction content input through a user finger or a stylus pen, to a specific position of the transmitted assignment.

Next, in step 6508, the teacher device provides correction content and a position in which the correction content is displayed on the screen, to the server.

After that, the teacher device terminates the procedure of the present exemplary embodiment.

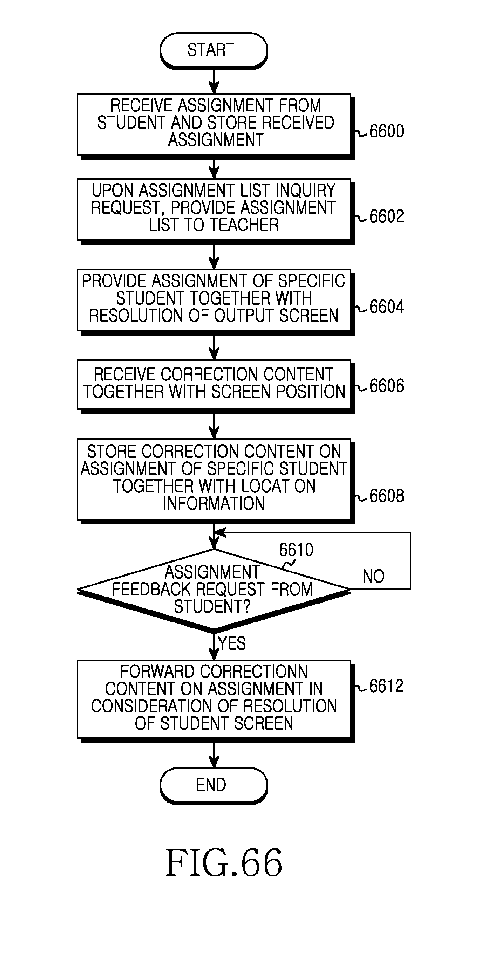

FIG. 66 is a flowchart illustrating an operation of a server for assignment processing according to an exemplary embodiment of the present invention.

Referring to FIG. 66, in step 6600, the server receives a corresponding assignment from a student device and stores the received assignment.

After that, in step 6602, when receiving an assignment submission list request from a teacher device, the server provides an assignment submission list to the teacher device.

Next, in step 6604, upon receiving a request for an assignment of a specific student together with an assignment output screen resolution from the assignment submission list, the server divides an assignment into parts in consideration of a resolution of the teacher device and provides the divided assignments. That is, the server provides only assignment content displayable on a screen according to a resolution of the teacher device.

After that, in step 6606, the server receives correction content and a position in which the correction content is displayed on the screen.

Next, in step 6608, the server stores correction content for an assignment of a specific student together with location information.

After that, when there is an assignment feedback request from a student in step 6610, in step 6612, the server provides an assignment including correction content to a student device in consideration of a resolution of the student device. According to implementation, when the student device does not provide its own resolution information to the server, the server provides the assignment including the correction content to the second device according to a default resolution.

According to another implementation, the second device may receive the assignment including the correction content from the server irrespective of a resolution and then, display correction content and assignment content according to its own resolution.

Next, the server terminates the procedure of the present exemplary embodiment.

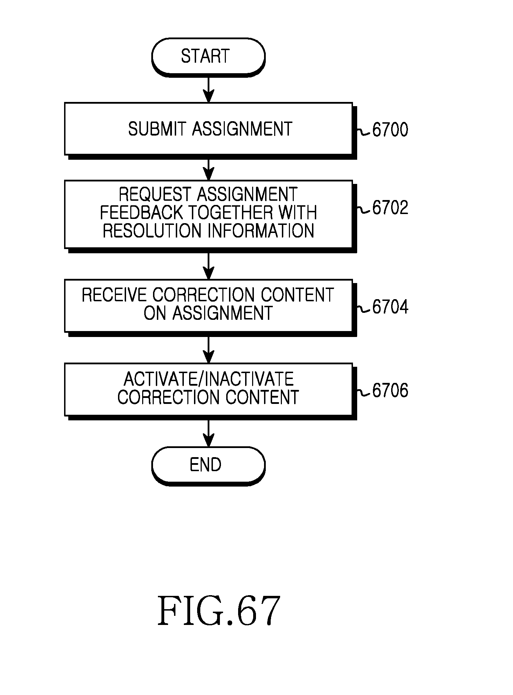

FIG. 67 is a flowchart illustrating an operation of a student device for assignment processing according to an exemplary embodiment of the present invention.

Referring to FIG. 67, in step 6700, a student device submits a corresponding assignment to a server.

After submitting the assignment, in step 6702, the student device receives an assignment including correction content in consideration of a resolution from the server. According to implementation, when the student device does not provide its own resolution information to the server, the server provides an assignment including correction content to the student device.

According to another implementation, the student device may receive an assignment including correction content from the server irrespective of a resolution and then, display correction content and assignment content according to its own resolution.

Next, in step 6706, the student device may activate or inactivate the correction content displayed on the assignment.

After that, the student device terminates the procedure of the present exemplary embodiment.

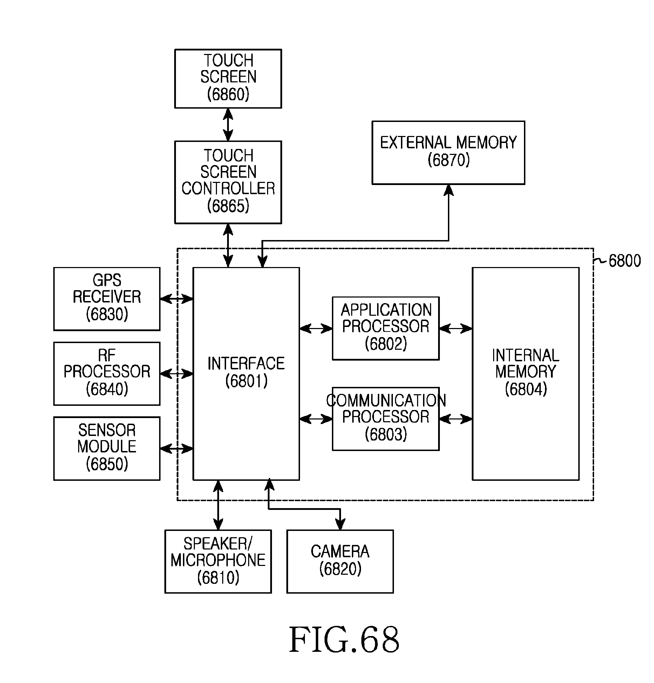

FIG. 68 is a block diagram illustrating a construction of an electronic device according to an exemplary embodiment of the present invention. The electronic device, upon suitable programing, may comprise a teacher device or a student device (and specifically, a group leader device or a group member device).

Referring to FIG. 68, the electronic device may be a portable electronic device, and may be a device such as a portable terminal, a mobile phone, a mobile pad, a media player, a tablet computer, a handheld computer, or a Personal Digital Assistant (PDA). Also, the electronic device may be any portable electronic device including a device combining two or more functions among these devices.

The electronic device includes a controller 6800, a speaker/microphone 6810, a camera 6820, a Global Positioning System (GPS) receiver 6830, a Radio Frequency (RF) processor 6840, a sensor module 6850, a touch screen 6860, a touch screen controller 6865, and an external memory 6870.

The controller 6800 may include an interface 6801, one or more processors 6802 and 6803, and an internal memory 6804. According to cases, the whole controller 6800 is also called a processor. The interface 6801, the application processor 6802, the communication processor 6803, and the internal memory 6804 may be separate constituent elements or may be integrated in one or more integrated circuits.

The application processor 6802 executes various software programs and performs various functions for the electronic device, and the communication processor 6803 also performs processing and control for voice communication and data communication. Also, in addition to this general function, the processors 6802 and 6803 play even a role of executing a specific software module (i.e., an instruction set) stored in the external memory 6870 or the internal memory 6804 and performing specific various functions corresponding to the software module. That is, the processors 6802 and 6803 interwork with the software modules stored in the external memory 6870 or the internal memory 6804 and carry out a method of an exemplary embodiment of the present invention. In an exemplary embodiment of the present invention, the application processor 6802 performs the processes described in FIG. 2 to FIG. 67.

The interface 6801 connects to the touch screen controller 6865 of the electronic device and the external memory 6870.

The sensor module 6850 is coupled to the interface 6801 and enables various functions. For instance, a motion sensor and an optical sensor may be coupled to the interface 6801, and sense a motion of the electronic device and sense a light from the exterior, respectively. In addition to this, other sensors such as a global positioning system, a temperature sensor, a biological sensor or the like may be coupled to the interface 6801 and perform related functions.

The camera 6820 may be coupled to the sensor module 6850 through the interface 6801 and perform a camera function such as photograph and video clip recording.

The RF processor 6840 performs a communication function. For example, under the control of the communication processor 6803, the RF processor 6840 converts an RF signal into a baseband signal and provides the baseband signal to the communication processor 6003 or converts a baseband signal from the communication processor 6803 into an RF signal and transmits the RF signal. Here, the communication processor 6803 processes a baseband signal in various communication schemes. For example, the communication scheme may include, although not limited to, a Global System for Mobile Communication (GSM) communication scheme, an Enhanced Data GSM Environment (EDGE) communication scheme, a Code Division Multiple Access (CDMA) communication scheme, a Wireless-Code Division Multiple Access (W-CDMA) communication scheme, a Long Term Evolution (LTE) communication scheme, an Orthogonal Frequency Division Multiple Access (OFDMA) communication scheme, a Wireless Fidelity (Wi-Fi) communication scheme, a Wireless interoperability for Microwave Access (WiMAX) communication scheme, a Bluetooth communication scheme or/and the like.

The speaker/microphone 6810 may take charge of input and output of an audio stream such as voice recognition, voice replication, digital recording, and telephony function. That is, the speaker/microphone 6810 converts a voice signal into an electrical signal or converts an electrical signal into a voice signal. Although not illustrated, a detachable earphone, headphone or headset may be connected to the electronic device through an external port.

The touch screen controller 6865 may be coupled to the touch screen 6860. The touch screen 6860 and the touch screen controller 6865 may detect a touch and a motion or interruption of them, by using, although not limited to, not merely capacitive, resistive, infrared and surface acoustic wave technologies for determining one or more touch points with the touch screen 6860 but also any multi-touch sensing technology including other proximity sensor arrays or other elements.

The touch screen 6860 provides an input output interface between the electronic device and a user. That is, the touch screen 6860 forwards a user's touch input to the electronic device. Also, the touch screen 6860 is a medium for showing an output of the electronic device to the user. That is, the touch screen 6860 shows a visual output to the user. This visual output may be presented in a form of a text, a graphic, a video, and a combination thereof.

In the present exemplary embodiment, when the electronic device outputs an application screen for interactive class support and education management, it may be done through a screen. This screen may be also a touch screen processing a touch input.

The touch screen 6860 may use various displays. For example, the touch screen 6860 may use, although not limited to, a Liquid Crystal Display (LCD), a Light Emitting Diode (LED), a Light emitting Polymer Display (LPD), an Organic Light Emitting Diode (OLED), an Active Matrix Organic Light Emitting Diode (AMOLED), or a Flexible LED (FLED).

The GPS receiver 6830 converts signals received from three artificial satellites into information of a location, a speed, an hour and the like. For instance, distances between the artificial satellites and the GPS receiver 6830 are determined through a multiplication of the speed of light and signal arrival times, and accurate locations and distances of the artificial satellites are obtained, and a location of the electronic device is measured in accordance with the known triangulation principle.

The external memory 6870 or the internal memory 6804 may include one or more high-speed random access memories and/or non-volatile memories such as magnetic disk storage devices, and one or more optical storage devices and/or flash memories (for example, NAND, NOR).

The external memory 6870 or the internal memory 6804 stores software. A software constituent element includes an Operating System (OS) software module, a communication software module, a graphic software module, a user interface software module, a Moving Picture Experts Group (MPEG) module, a camera software module, one or more application software modules and the like. Also, the module, a software constituent element, may be expressed as a set of instructions. Therefore, the module is also expressed as an instruction set. The module is also expressed as program. The module is also expressed as a program.

The OS software includes various software constituent elements controlling general system operation. This control of the general system operation means, for example, memory management and control, storage hardware (device) control and management, power control and management and the like. The OS software performs even a function of making smooth communication between various hardware (devices) and software constituent elements (modules).

The communication software module enables communication with other electronic devices, such as a personal computer, a server and/or a portable terminal and the like, through the RF processor 6840. And, the communication software module is constructed in a protocol structure corresponding to a corresponding communication scheme.

The graphic software module includes various software constituent elements for providing and displaying a graphic on the touch screen 6860. The term 'graphic' is used as meaning including a text, a web page, an icon, a digital image, a video, an animation and the like.

The user interface software module includes various software constituent elements associated with a user interface. The user interface software module includes information about how a state of the user interface is changed or in which conditions the change of the state of the user interface is carried out, and the like.

The camera software module includes a camera related software constituent element enabling camera related processes and functions. The application module includes a browser, an electronic mail (e-mail), an instant message, word processing, keyboard emulation, an address book, a touch list, a widget, Digital Right Management (DRM), voice recognition, voice reproduction, a position determining function, a location based service and the like. The memories 6870 and 6804 may include additional modules (i.e., instructions) besides the modules mentioned above. Or, the memories 6870 and 6804 may not use some modules (i.e., instructions) according to need.

In relation to the exemplary embodiments of the present invention, the application module includes an instruction of performing interactive class support and education management. An instruction according to an exemplary embodiment of the present invention includes an instruction for performing processes of FIGS. 2 to 29.

Also, various functions of the electronic device according to the exemplary embodiments of the present invention mentioned above or to be mentioned below may be executed by hardware including one or more processing and/or Application Specific Integrated Circuits (ASICs), and/or software, and/or a combination of them.

It will be appreciated that embodiments of the present invention can be realized in the form of hardware, software or a combination of hardware and software. Any such software may be stored in the form of volatile or non-volatile storage, for example a storage device like a ROM, whether erasable or rewritable or not, or in the form of memory, for example RAM, memory chips, device or integrated circuits or on an optically or magnetically readable medium, for example a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the invention has been shown and described with reference to certain preferred embodiments thereof, it will be understood by those skilled in the art that various changes in form and details may be made therein without departing from the scope of the invention as defined by the appended claims.

## Claims

1. A method of operating a teacher device for a group activity in an environment in which a plurality of student devices is connected to the teacher device to form a first group unit, the method comprising:
transmitting, by the teacher device, an instruction event indicating a group activity start to a first student device comprising a group leader device and at least one student device comprising a group member device, the group leader device and the at least one group member device comprising a group; and
receiving, by the teacher device, a product of a group activity from the group leader device.

2. The method of claim 1, wherein, when the instruction event indicating the group activity start is transmitted further indicates that student devices are to transition from the environment in which the plurality of student devices is connected to the teacher device to form the first group unit to an environment in which each group member device is connected to the group leader device to form a second group unit.

3. The method of claim 1 or claim 2, further comprising displaying, by the teacher device, a screen of a student device within the group.

4. The method of any one of the preceding claims, further comprising transmitting, from the teacher device to a server, the product of group activity or a result of an estimation performed upon the product of the group activity.

5. The method of any one of the preceding claims, further comprising the teacher device creating the group.

6. The method of claim 5, wherein creating the group comprises:
identifying a student list comprising a plurality of students associated with student devices;
creating a plurality of groups; and
receiving a user selection of students from the student list and allocating the selected students to the created plurality of groups such that the associated student devices are grouped.

7. The method of claim 5, wherein the creating of the group comprises:
identifying a student list comprising a plurality of students associated with student devices;
creating a plurality of groups; and
randomly allocating students from the student list to the created plurality of groups such that the associated student devices are grouped.

8. A method of operating a student device comprising a group leader device for a group activity in an environment in which a plurality of student devices is connected to a teacher device to form a first group unit, the method comprising:
receiving, by the group leader device, a first instruction event indicating a group activity start from the teacher device;
switching to a group screen displaying information related to the group activity start;
transmitting to at least one student device comprising a group member device a second instruction event indicating a collaboration start;
receiving a user selection of work items for the group activity;
assigning the selected work items based on the number of group member devices;
transmitting the assigned work item to each group member device;
receiving work content from each group member device;
forming a product of the group activity from the received work content; and
forwarding the product of the group activity to the teacher device.

9. The method of claim 8, wherein, when the second instruction event is transmitted, the method further comprises sharing a screen of the group leader device with the at least one group member device.

10. The method of claim 8 or claim 9, wherein forming a product of the group activity comprises:
forming collected work content from the received work content;
forwarding the collected work content to the at least one group member device;
receiving edited work content from at least one group member device;
updating the collected work content using the revised work content; and
creating the product of the group activity from the updated collected work content.

11. The method of any one of claims 8 to 10, further comprising displaying work content received from at least one group member device.

12. A method of operating a student device comprising a group member device for a group activity in an environment in which a plurality of student devices is connected to a teacher device to form a first group unit, the method comprising:
receiving, by the group member device, a first instruction event indicating a group activity start from the teacher device;
switching to a group screen displaying information related to the group activity start;
receiving, by the group member device from a student device comprising a group leader device, a second instruction event indicating a collaboration start;
receiving, by the group member device, an assigned work item from the group leader device; and
transmitting, by the group member device, work content to the group leader device.

13. The method of claim 12, further comprising:
receiving, by the group member device from the group leader device, collected work content;
editing the collected work content;
transmitting edited work content to the group leader device; and
receiving a final product of the group activity from the group leader device.

14. The method of claim 12 or claim 13, further comprising displaying received collected work content.

15. An electronic device, comprising:
a touch screen display arranged to display a plurality of user interface objects;
one or more processors; and
memory storing one or more programs, wherein the one or more programs are configured, when executed by the electronic device, to cause:
the electronic device to form a teacher device and to perform the method of any of claims 1 to 7;
the electronic device to form a group leader device and to perform the method of any of claims 8 to 11; or
the electronic device to form a group member device and to perform the method of any of claims 12 to 14.
